(19)

**Europäisches Patentamt**
**European Patent Office**
**Office européen des brevets**

(11) **EP 4 231 544 A1**

(12) **EUROPEAN PATENT APPLICATION**
published in accordance with Art. 153(4) EPC

(43) Date of publication:
**23.08.2023 Bulletin 2023/34**

(21) Application number: **21879785.0**

(22) Date of filing: **08.09.2021**

(51) International Patent Classification (IPC):
*H04B 7/08* (2006.01)       *H04B 7/06* (2006.01)
*H04W 16/14* (2009.01)      *H04W 16/28* (2009.01)
*H04W 72/04* (2023.01)

(52) Cooperative Patent Classification (CPC):
**H04B 7/06; H04B 7/08; H04W 16/14; H04W 16/28; H04W 72/04**

(86) International application number:
**PCT/JP2021/032933**

(87) International publication number:
**WO 2022/080043 (21.04.2022 Gazette 2022/16)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **15.10.2020   JP 2020174026**
**16.12.2020   JP 2020208433**
**08.02.2021   JP 2021018384**
**17.03.2021   JP 2021043825**

(71) Applicant: **Panasonic Intellectual Property Corporation of America**
**Torrance, CA 90504 (US)**

(72) Inventors:
• **MURAKAMI, Yutaka**
**Osaka-shi**
**Osaka 540-6207 (JP)**
• **OUCHI, Mikihiro**
**Osaka-shi**
**Osaka 540-6207 (JP)**

(74) Representative: **Grünecker Patent- und Rechtsanwälte**
**PartG mbB**
**Leopoldstraße 4**
**80802 München (DE)**

(54) **WIRELESS APPARATUS AND WIRELESS METHOD**

(57)    Provided is a wireless apparatus that can coexist with a wireless communication system, in which a communicatable distance is made longer, by beam forming. This wireless apparatus comprises: a reception circuit that receives a signal using a first directivity; and a control circuit that controls transmission or stand-by of a transmission signal on the basis of reception of the signal. The reception section of the signal is set shorter than the reception section of a signal received using a second directivity.

FIG. 55

EP 4 231 544 A1

## Description

Technical Field

The present disclosure relates to a radio apparatus and a radio method.

Background Art

An exemplary system using a frequency equal to or higher than 52.6 GHz is a communication system using a 60 GHz band.

A scheme disclosed in Patent Literature 1 is one of a communication method for extending a communication distance. FIG. 136 illustrates an exemplary communication state of radio communication devices disclosed in Patent Literature 1.

For example, radio communication device 001 transmits a sector sweep signal. After that, radio communication device 051 transmits a sector sweep signal. Then, radio communication device 051 transmits a signal including feedback information on the sector sweep to radio communication device 001.

Following this procedure, radio communication device 001 determines a method of "transmit beamforming and/or receive beamforming", and radio communication device 051 also determines a method of "transmit beamforming and/or receive beamforming". This extends the communication distance between radio communication device 001 and radio communication device 051.

Citation List

Patent Literature

PTL 1
Japanese Unexamined Patent Application Publication (Translation of PCT Application) No. 2018-518855

Summary of Invention

In some cases, radio systems using different radio communication schemes, such as 5th Generation (5G) (cellular system) and Institute of Electrical and Electronics Engineers (IEEE) 802.11ad/ay, share "a licensed band and/or an unlicensed band", for example. Although the communication distance can be extended by beamforming according to PTL 1, challenges remain in developing a mechanism that allows this communication system and "apparatuses using other radio communication standards" to coexist.

One non-limiting and exemplary embodiment of the present disclosure facilitates providing a technique regarding a radio communication system that enables coexistence with a radio communication system capable of extending a communication distance by beamforming.

A radio apparatus according to an embodiment of the present disclosure includes: reception circuitry, which, in operation, performs reception of a signal using a first directivity; and control circuitry, which, in operation, controls transmission and standby of a transmission signal based on the reception of the signal, wherein, a reception period for the signal is configured to be shorter than a reception period for a signal received using a second directivity.

A radio apparatus according to an embodiment of the present disclosure includes: reception circuitry, which, in operation, performs reception of a signal using a first directivity; and control circuitry, which, in operation, controls transmission and standby of a transmission signal based on the reception of the signal, wherein, a reception period for the signal is configured to be longer than a reception period for a signal received using a second directivity.

A radio apparatus according to an embodiment of the present disclosure includes: reception circuitry, which, in operation, performs reception of a signal using a first directivity and a second directivity; and control circuitry, which, in operation, controls transmission and standby of a transmission signal based on the reception of the signal, wherein, a reception period for the signal received using the first directivity is configured to be shorter than a reception period for the signal received using the second directivity.

A radio method according to an embodiment of the present disclosure includes: performing reception of a signal using a first directivity; and controlling transmission and standby of a transmission signal based on the reception of the signal, wherein, a reception period for the signal is configured to be shorter than a reception period for a signal received using a second directivity.

A radio method according to an embodiment of the present disclosure includes: performing reception of a signal using a first directivity; and controlling transmission and standby of a transmission signal based on the reception of the signal, wherein, a reception period for the signal is configured to be longer than a reception period for a signal received using a second directivity.

A radio method according to an embodiment of the present disclosure includes: performing reception of a signal using a first directivity and a second directivity; and controlling transmission and standby of a transmission signal based on the reception of the signal, wherein, a reception period for the signal received using the first directivity is configured to be shorter than a reception period for the signal received using the second directivity.

It should be noted that general or specific embodiments may be implemented as a system, an apparatus, a method, an integrated circuit, a computer program, a storage medium, or any selective combination thereof.

According to a non-limiting and exemplary embodiment of the present disclosure, it is possible for a radio apparatus to coexist with a radio communication system capable of extending a communication distance by beamforming.

Additional benefits and advantages of the disclosed embodiments will become apparent from the specification and drawings. The benefits and/or advantages may be individually obtained by the various embodiments and features of the specification and drawings, which need not all be provided in order to obtain one or more of such benefits and/or advantages.

Brief Description of Drawings

FIG. 1A illustrates an exemplary configuration of a communication apparatus in Embodiment 1;

FIG. 1B illustrates an exemplary configuration of the communication apparatus different from the configuration in FIG. 1A in Embodiment 1;

FIG. 1C illustrates an exemplary configuration of the communication apparatus different from the configurations in FIGS. 1A and 1B in Embodiment 1;

FIG. 2 illustrates an exemplary configuration of an i-th transmitter;

FIG. 3 illustrates an exemplary configuration of transmission panel antenna i in FIGS. 1A, 1B, and 1C;

FIG. 4 illustrates an exemplary configuration of reception panel antenna i in FIGS. 1A, 1B, and 1C;

FIG. 5 illustrates an exemplary configuration of a transmission apparatus in a case of using an OFDM scheme;

FIG. 6 illustrates an exemplary configuration of a reception apparatus in a case of using an OFDM scheme;

FIG. 7 illustrates an exemplary configuration of the reception apparatus in a case of using a single-carrier scheme based on DFT;

FIG. 8 illustrates an exemplary configuration of the reception apparatus in a case of using a single-carrier scheme based on time domain;

FIG. 9 illustrates an exemplary communication state in Embodiment 1;

FIG. 10 illustrates an exemplary modulation signal transmitted by base station #1 in FIG. 9;

FIG. 11 illustrates exemplary sector sweep reference signals in FIG. 10 transmitted by base station #1 in FIG. 9 with the configuration in FIG. 1A, 1B, or 1C;

FIG. 12 illustrates an exemplary configuration of a "sector sweep reference signal in transmission panel antenna i for frequency $b_p$" in FIG. 11;

FIG. 13 illustrates an exemplary operation in the time period from time t1 to t2, which is a terminal response period;

FIG. 14 illustrates exemplary occupation by terminals in terminal "sector sweep reference signal" transmission periods illustrated in FIG. 13;

FIG. 15A illustrates an exemplary configuration of a terminal #i "sector sweep reference signal";

FIG. 15B illustrates an exemplary configuration of a "sector sweep reference signal in terminal #i transmission panel antenna xi" in FIG. 15A;

FIG. 16A illustrates an exemplary configuration of a feedback signal that is present in the time period from t2 to t3 in FIG. 10 and transmitted by base station #1;

FIG. 16B illustrates exemplary specific feedback signal assignment for the feedback signal illustrated in FIG. 16A;

FIG. 17A illustrates an exemplary configuration of a data-symbol-included frame that is present in the time period from t4 to t5 in FIG. 10 and transmitted by base station #1;

FIG. 17B illustrates exemplary specific modulation signal (slot) assignment for the data-symbol-included frame illustrated in FIG. 17A;

FIG. 18 illustrates an exemplary state where base station #1 and "terminal #1 to terminal #6" communicate with each other;

FIG. 19 illustrates an exemplary modulation signal transmission state of base station #1 and an exemplary modulation signal transmission state of a terminal such as "terminal #1 to terminal #6" after the state in FIG. 18;

FIG. 20A illustrates an exemplary configuration of a "data-symbol-included frame" transmitted by terminal #1;

FIG. 20B illustrates an exemplary configuration of a "data-symbol-included frame" transmitted by terminal #2;

FIG. 20C illustrates an exemplary configuration of a "data-symbol-included frame" transmitted by terminal #3;

FIG. 20D illustrates an exemplary configuration of a "data-symbol-included frame" transmitted by terminal #4;

FIG. 20E illustrates an exemplary configuration of a "data-symbol-included frame" transmitted by terminal #5;

FIG. 20F illustrates an exemplary configuration of a "data-symbol-included frame" transmitted by terminal #6;

FIG. 21A illustrates exemplary occupation by terminals different from that in FIG. 14 in terminal "sector sweep reference signal" transmission periods illustrated in FIG. 13;

FIG. 21B illustrates exemplary occupation by terminals different from that in FIG. 14 in terminal "sector sweep reference signal" transmission periods illustrated in FIG. 13;

FIG. 22A illustrates an exemplary terminal #3 sector sweep reference signal;

FIG. 22B illustrates another exemplary terminal #3 sector sweep reference signal;

FIG. 23 illustrates an exemplary operation in the time period from time t1 to t2, which is the terminal response period;

FIG. 24 illustrates exemplary occupation by terminals in terminal "sector sweep reference signal" transmission periods illustrated in FIG. 23;

FIG. 25 illustrates an exemplary configuration of a "data-symbol-included frame" transmitted by terminals such as terminal #1 to terminal #6;

FIG. 26 illustrates exemplary occupation by terminals different from that in FIG. 24 in terminal "sector sweep reference signal" transmission periods illustrated in FIG. 23;

FIG. 27 illustrates an exemplary configuration of a terminal response period in the time period from time t1 to t2;

FIG. 28A illustrates an exemplary configuration, in time and frequency, of a terminal "sector sweep reference signal";

FIG. 28B illustrates exemplary occupation by terminals in the terminal "sector sweep reference signal";

FIG. 29A illustrates an exemplary configuration of a feedback signal that is present in the time period from t2 to t3 and transmitted by base station #1;

FIG. 29B illustrates exemplary specific feedback signal assignment for the feedback signal;

FIG. 30A illustrates an exemplary configuration of a data-symbol-included frame that is present in the time period from t4 to t5 and transmitted by base station #1;

FIG. 30B illustrates exemplary specific modulation signal (slot) assignment for the data-symbol-included frame;

FIG. 31A illustrates an exemplary configuration of a "data-symbol-included frame" transmitted by terminal #1;

FIG. 31B illustrates an exemplary configuration of a "data-symbol-included frame" transmitted by terminal #2;

FIG. 31C illustrates an exemplary configuration of a "data-symbol-included frame" transmitted by terminal #3;

FIG. 31D illustrates an exemplary configuration of a "data-symbol-included frame" transmitted by terminal #4;

FIG. 31E illustrates an exemplary configuration of a "data-symbol-included frame" transmitted by terminal #5;

FIG. 31F illustrates an exemplary configuration of a "data-symbol-included frame" transmitted by terminal #6;

FIG. 32A illustrates exemplary occupation by terminals in the terminal "sector sweep reference signal";

FIG. 32B illustrates exemplary occupation by terminals in the terminal "sector sweep reference signal";

FIG. 33 illustrates an exemplary communication state according to Embodiment 5;

FIG. 34 illustrates exemplary sector sweep reference signals in FIG. 10 transmitted by base station #1 labeled 901_1 in FIG. 33;

FIG. 35 illustrates an exemplary configuration of "sector sweep reference signal 3401_i in transmission panel antenna i" in FIG. 34;

FIG. 36 illustrates exemplary occupation of the terminal "sector sweep reference signals" by terminals;

FIG. 37 illustrates an exemplary configuration of "sector sweep reference signal 3401_xi in transmission panel antenna xi" in FIG. 34;

FIG. 38 illustrates an exemplary configuration of the feedback signal that is present in the time period from t2 to t3 and transmitted by base station #1;

FIG. 39 illustrates an exemplary configuration of the data-symbol-included frame that is present in the time period from t4 to t5 and transmitted by base station #1;

FIG. 40 illustrates an exemplary configuration of the data-symbol-included frame;

FIG. 41 illustrates exemplary occupation of the terminal "sector sweep reference signals" by terminals;

FIG. 42 illustrates exemplary occupation of the terminal "sector sweep reference signals" by terminals;

FIG. 43 illustrates an exemplary configuration for the sector sweep reference signals;

FIG. 44 illustrates an exemplary configuration of "sector sweep reference signal 4301_p in frequency ♭p" in FIG. 43;

FIG. 45 illustrates an exemplary configuration of the sector sweep reference signal;

FIG. 46 illustrates an exemplary configuration of the sector sweep reference signal;

FIG. 47 illustrates an exemplary radio system according to Embodiment 7;

FIG. 48 describes exemplary sector sweep in a radio system specified in the first standard;

FIG. 49 describes an exemplary operation of sector sweep using BTI;

FIG. 50 describes an exemplary operation of sector sweep using DTI;

FIG. 51 describes exemplary interference between sector sweep in the first standard and an NR signal;

FIG. 52 describes exemplary interference between sector sweep in the first standard and an NR signal;

FIG. 53 illustrates an exemplary configuration of gNB and NR-UE;

FIG. 54 illustrates another exemplary configuration of the gNB and NR-UE;

FIG. 55 is a flowchart describing an exemplary operation of the gNB in omnidirectional LBT;

FIG. 56 illustrates an exemplary signal reception period in the omni-directional LBT;

FIG. 57 is a flowchart describing an exemplary operation of the gNB in directional LBT;

FIG. 58 is a flowchart describing an exemplary operation of the gNB in the directional LBT;

FIG. 59A illustrates exemplary signal reception periods in the directional LBT;

FIG. 59B illustrates exemplary signal reception periods in the directional LBT;

FIG. 59C illustrates exemplary signal reception periods in the directional LBT;

FIG. 59D illustrates exemplary signal reception periods in the directional LBT;

FIG. 60 is a flowchart describing an exemplary operation of the gNB in the omnidirectional LBT and directional LBT;

FIG. 61 is a flowchart describing another exemplary operation of the gNB in the omnidirectional LBT and directional LBT;

FIG. 62A illustrates an exemplary operation of the gNB according to Embodiment 8;

FIG. 62B illustrates an exemplary operation of the gNB according to Embodiment 8;

FIG. 63 illustrates an exemplary operation of beamforming;

FIG. 64 illustrates an exemplary operation of beamforming according to Embodiment 9;

FIG. 65 illustrates an exemplary operation of the gNB according to Embodiment 9;

FIG. 66 illustrates exemplary transmission states of the gNB and NR-UE;

FIG. 67 illustrates exemplary transmission states of the gNB and NR-UE;

FIG. 68 illustrates an exemplary placement of a reception period (listen period);

FIG. 69 illustrates exemplary transmission states of the gNB and NR-UE;

FIG. 70 illustrates exemplary transmission states of the gNB and NR-UE;

FIG. 71 illustrates an exemplary operation of the gNB;

FIG. 72 illustrates an exemplary placement of the reception period (listen period);

FIG. 73 illustrates exemplary transmission states of the gNB and NR-UE;

FIG. 74 illustrates exemplary transmission states of the gNB and NR-UE;

FIG. 75 is a flowchart describing an exemplary operation of the gNB and NR-UE in the directional LBT;

FIG. 76 is a flowchart describing an exemplary operation of the gNB and NR-UE in the third LBT;

FIG. 77A is a flowchart describing an exemplary operation of the gNB and NR-UE in the third LBT;

FIG. 77B is a flowchart describing an exemplary operation of the gNB and NR-UE in the third LBT;

FIG. 78 is a flowchart describing an exemplary operation after starting communication with a communication counterpart;

FIG. 79 illustrates an exemplary system in Embodiment 14;

FIG. 80 illustrates exemplary processing of the gNB and NR-UE;

FIG. 81 illustrates exemplary processing of the gNB and NR-UE;

FIG. 82 is a diagram for explaining exemplary dummy signals;

FIG. 83A illustrates an exemplary state of the system in Embodiment 15;

FIG. 83B illustrates an exemplary state of the system in Embodiment 15;

FIG. 83C illustrates an exemplary state of the system in Embodiment 15;

FIG. 84 is a flowchart of a variation of LBT;

FIG. 85 illustrates an exemplary configuration of the gNB;

FIG. 86 illustrates an exemplary system in Embodiment 17;

FIG. 87A illustrates an exemplary system in Embodiment 17;

FIG. 87B illustrates an exemplary system in Embodiment 17;

FIG. 88A illustrates an exemplary state of the gNB and NR-UE;

FIG. 88B illustrates an exemplary state of the gNB and NR-UE;

FIG. 89 illustrates an exemplary state of the gNB and NR-UE;

FIG. 90 illustrates exemplary frequency allocation in Embodiment 19;

FIG. 91A illustrates an exemplary state of the gNB and NR-UE;

FIG. 91B illustrates an exemplary state of the gNB and NR-UE;

FIG. 92A illustrates an exemplary state of the gNB and NR-UE;

FIG. 92B illustrates an exemplary state of the gNB and NR-UE;

FIG. 93A illustrates an exemplary state of the gNB and NR-UE;

FIG. 93B illustrates an exemplary state of the gNB and NR-UE;

FIG. 94A illustrates an exemplary state of the gNB and NR-UE;

FIG. 94B illustrates an exemplary state of the gNB and NR-UE;

FIG. 95A illustrates an exemplary state of the gNB and NR-UE;

FIG. 95B illustrates an exemplary state of the gNB and NR-UE;

FIG. 96A illustrates an exemplary state of the gNB and NR-UE;

FIG. 96B illustrates an exemplary state of the gNB and NR-UE;

FIG. 97 illustrates an exemplary system:

FIG. 98 illustrates exemplary LBT implementation periods;

FIG. 99 illustrates exemplary direction detection periods;

FIG. 100 illustrates exemplary frequency allocation in Embodiment 20;

FIG. 101 illustrates an example whether to perform LBT;

FIG. 102A illustrates an exemplary state of the gNB and NR-UE;

FIG. 102B illustrates an exemplary state of the gNB and NR-UE;

FIG. 103A illustrates an exemplary state of the gNB and NR-UE;

FIG. 103B illustrates an exemplary state of the gNB and NR-UE;

FIG. 104A illustrates an exemplary state of the gNB and NR-UE;

FIG. 104B illustrates an exemplary state of the gNB and NR-UE;

FIG. 105 illustrates an example whether to perform direction detection;

FIG. 106A illustrates an exemplary state of the gNB and NR-UE;

FIG. 106B illustrates an exemplary state of the gNB and NR-UE;

FIG. 107A illustrates an exemplary state of the gNB and NR-UE;

FIG. 107B illustrates an exemplary state of the gNB and NR-UE;

FIG. 108 illustrates an example whether to perform LBT;

FIG. 109 illustrates an example whether to perform direction detection;

FIG. 110 illustrates exemplary frequency allocation in Embodiment 21;

FIG. 111 illustrates an exemplary state of the gNB and NR-UE;

FIG. 112 illustrates exemplary frequency allocation;

FIG. 113 illustrates an exemplary state of the gNB and NR-UE;

FIG. 114A illustrates an exemplary state of the gNB and AP;

FIG. 114B illustrates an exemplary state of the gNB and AP;

FIG. 114C illustrates an exemplary state of the gNB;

FIG. 114D illustrates an exemplary state of the gNB;

FIG. 115A illustrates an exemplary state of the gNB and AP;

FIG. 115B illustrates an exemplary state of the gNB and AP;

FIG. 115C illustrates an exemplary state of the gNB;

FIG. 115D illustrates an exemplary state of the gNB;

FIG. 116 illustrates an exemplary frame configuration;

FIG. 117A illustrates an exemplary state of the gNB and AP;

FIG. 117B illustrates an exemplary state of the gNB and AP;

FIG. 117C illustrates an exemplary state of the gNB;

FIG. 117D illustrates an exemplary state of the gNB;

FIG. 118A illustrates an exemplary state of the gNB and AP;

FIG. 118B illustrates an exemplary state of the gNB and AP;

FIG. 118C illustrates an exemplary state of the gNB;

FIG. 118D illustrates an exemplary state of the gNB;

FIG. 119 illustrates an exemplary frame configuration;

FIG. 120 illustrate a state of an unlicensed band of 60 GHz;

FIG. 121 illustrates exemplary channel configurations in the USA, Japan, and China in a case where the channel frequency bandwidth of the NR system is 270 MHz;

FIG. 122 illustrates exemplary channel configurations in the USA, Japan, and China in a case where the channel frequency bandwidth of the NR system is 540 MHz;

FIG. 123 illustrates exemplary channel configurations in the USA, Japan, and China in a case where the channel frequency bandwidth of the NR system is 1080 MHz (1.08 GHz);

FIG. 124 illustrates exemplary channel configurations in the USA, Japan, and China in a case where the channel frequency bandwidth of the NR system is 2160 MHz (2.16 GHz);

FIG. 125 illustrates an exemplary relationship between the bandwidth of a channel illustrated in FIGS. 121 to 124 and 128 to 131 and the transmission bandwidth;

FIG. 126 illustrates an exemplary relationship between the bandwidth of a channel illustrated in FIGS. 121 to 124 and 128 to 131 and the transmission bandwidth, which is different from the example in FIG. 125;

FIG. 127 illustrates an exemplary state of channel raster;

FIG. 128 illustrates exemplary channel configurations in the USA, Japan, and China in a case where the channel frequency bandwidth of the NR system is 240 MHz;

FIG. 129 illustrates exemplary channel configurations in the USA, Japan, and China in a case where the channel frequency bandwidth of the NR system is mainly 480 MHz;

FIG. 130 illustrates exemplary channel configurations in the USA, Japan, and China in a case where the channel frequency bandwidth of the NR system is mainly 960 MHz;

FIG. 131 illustrates exemplary channel configurations in the USA, Japan, and China in a case where the channel frequency bandwidth of the NR system is mainly 2160 MHz (2.16 GHz);

FIG. 132A illustrates an exemplary configuration of UE capability information and gNB capability information;

FIG. 132B illustrates an exemplary configuration of UE capability information and gNB capability information;

FIG. 133 illustrates an exemplary configuration of control information included in a modulation signal transmitted by the gNB;

FIG. 134A illustrates an exemplary configuration of UE capability information and gNB capability information;

FIG. 134B illustrates an exemplary configuration of UE capability information and gNB capability information;

FIG. 135 illustrates an exemplary configuration of control information included in a modulation signal transmitted by the gNB; and

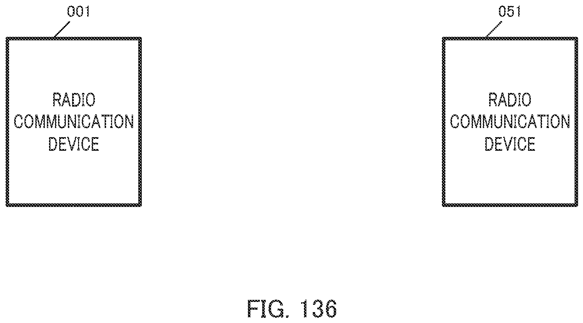

FIG. 136 illustrates an exemplary communication state of radio communication devices according to a conventional technique.

Description of Embodiments

Hereinafter, embodiments of the present disclosure will be described in detail with reference to the accompanying drawings. First, communication methods using sector sweep will be described in Embodiments 1 to 5, and then sensing methods when sector sweep-based communication is in use will be described.

(Embodiment 1)

In Embodiment 1, a description will be given of a communication system, a communication apparatus, and a communication method using sector sweep.

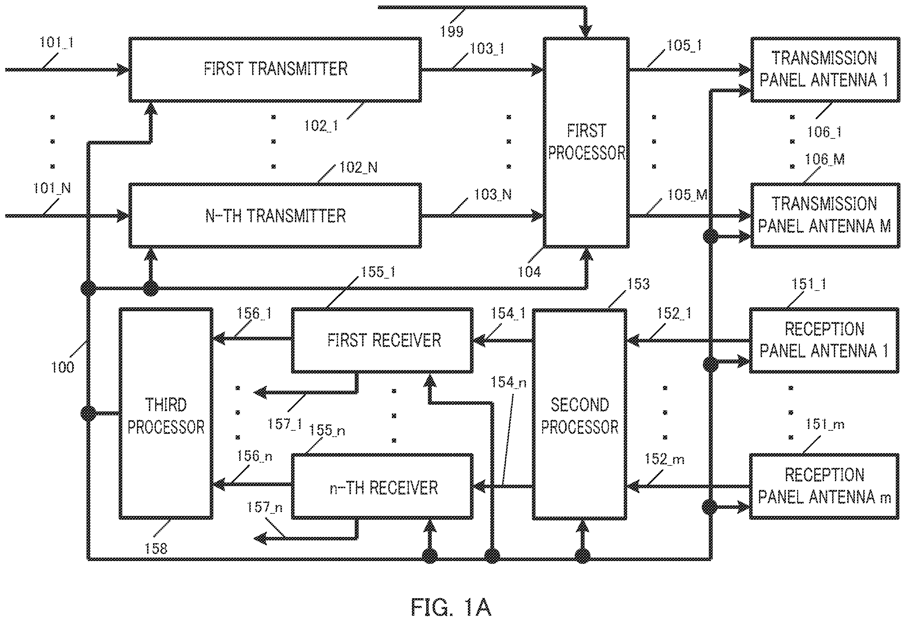

FIG. 1A illustrates an exemplary configuration of a communication apparatus, such as a base station, an access point, a terminal, and a repeater, in Embodiment 1.

The communication apparatus in FIG. 1A includes N transmitters, which are "first transmitter 102_1 to N-th transmitter102_N". Note that N is an integer equal to or greater than 1 or an integer equal to or greater than 2.

The communication apparatus in FIG. 1A also includes M transmission panel antennas, which are "transmission panel antenna 1 labeled 106_1 to transmission panel antenna M labeled 106_M", for transmission. Note that M is an integer equal to or greater than 1 or an integer equal to or greater than 2.

The communication apparatus in FIG. 1A includes n receivers, which are "first receiver 155_1 to n-th receiver 155_n". Note that n is an integer equal to or greater than 1 or an integer equal to or greater than 2.

The communication apparatus in FIG. 1A includes m reception panel antennas, which are "reception panel antenna 1 labeled 151_1 to reception panel antenna m labeled 151_m", for reception. Note that m is an integer equal to or greater than 1 or an integer equal to or greater than 2.

The i-th transmitter 102_i takes control signal 100 and i-th data 101_i as input, performs processing such as error correction coding and mapping based on a modulation scheme, and outputs i-th modulation signal 103_i. Note that i is an integer from 1 to N (both inclusive).

Note that i-th data 101_i may be configured to include data of one or more users. In this case, an error correction code, a modulation scheme, and a transmission method may be configured for each user.

First processor 104 takes i-th modulation signal 103_i (i is an integer from 1 to N (both inclusive)), control signal 100, and reference signal 199 as input and outputs j-th transmission signal 105_j (j is an integer from 1 to M (both inclusive)) based on frame configuration information included in control signal 100. Note that some of i-th modulation signals 103_i may include no signal, and some of j-th transmission signals 105_j may include no signal.

Then, j-th transmission signal 105j is outputted as a radio wave from transmission panel antenna j labeled 106_j. Note that transmission panel antenna j labeled 106_j may perform beamforming and change the transmission directivity taking control signal 100 as input. In addition, transmission panel antenna j labeled 106_j may be switched by control signal 100 in transmitting a modulation signal to a communication counterpart. This will be described later.

Reception panel antenna i labeled 151_i receives i-th received signal 152_i. Note that reception panel antenna i labeled 151_i may perform beamforming and change the reception directivity taking control signal 100 as input. This will be described later.

Second processor 153 performs processing such as frequency conversion taking i-th received signal 152_i and control signal 100 as input, and outputs j-th signal-processing-subjected signal (i.e., j-th signal that has been subjected to signal processing) 154_j. Note that some of i-th received signals 152_i may include no signal, and some of j-th signal-processing-subjected signals 154_j may include no signal.

Then, j-th receiver 155_j takes j-th signal-processing-subjected signal 154_j and control signal 100 as input, performs processing such as demodulation and error correction decoding on j-th signal-processing-subjected signal 154_j based on control signal 100, and outputs j-th control data 156_j and j-th data 157_j.

Note that j-th control data 156_j may be configured to include control data of one or more users, and j-th data 157_j may be configured to include data of one or more users.

Third processor 158 takes j-th control data 156_j as input, generates control signal 100 based on information obtained from the communication counterpart, and outputs generated control signal 100.

Incidentally, first processor 104 of the communication apparatus in FIG. 1A may perform processing for transmit beamforming (transmission directivity control), for example, precoding processing. Meanwhile, second processor 153 may perform processing for reception directivity control. As another example, first processor 104 may perform processing of outputting first modulation signal 103_1 as first transmission signal 105_1, second modulation signal 103_2 as second transmission signal 105_2, and third modulation signal 103_3 as third transmission signal 105_3, for example. Alternatively, first processor 104 may perform processing of outputting second modulation signal 103_2 as first transmission signal 105_1. In addition, second processor 153 may perform processing of outputting first received signal 152_1 as first signal-processing-subjected signal 154_1, second received signal 152_2 as second signal-processing-subjected signal 154_2, and third received signal 152_3 as third signal-processing-subjected signal 154_3. Alternatively, the second processor 153 may perform processing of outputting first received signal 152_1 as second signal-processing-subjected signal 154_2.

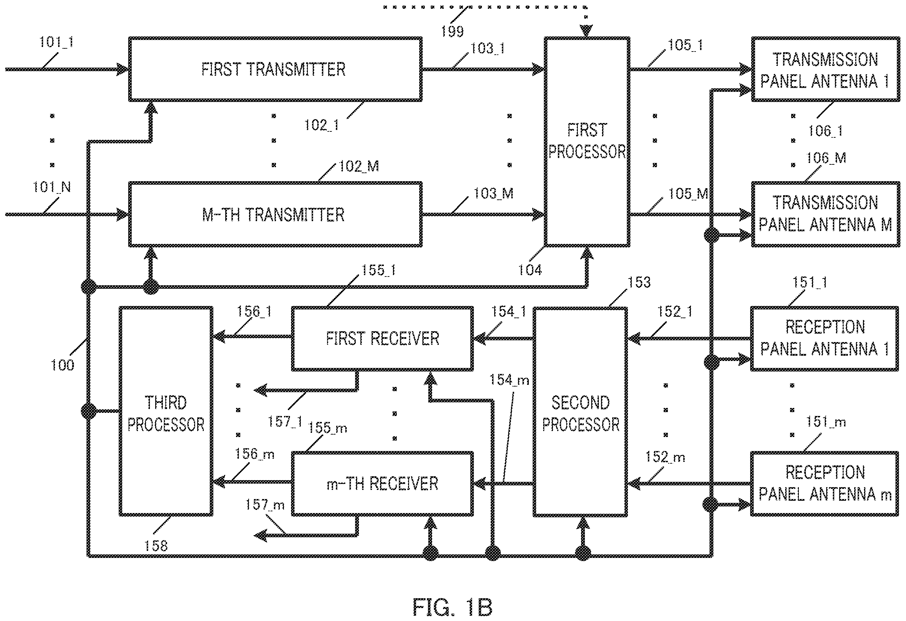

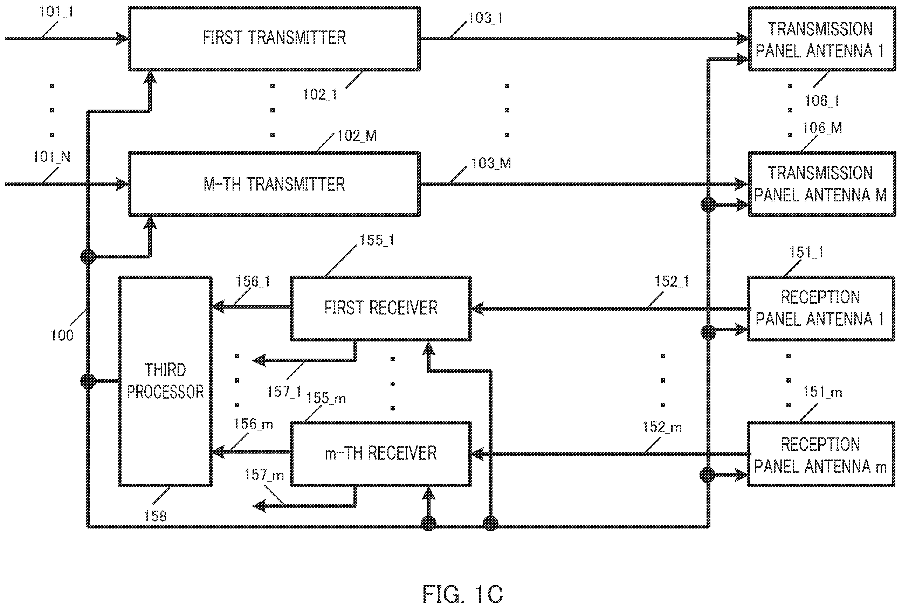

The configuration in FIG. 1A may include a processor not illustrated in FIG. 1A. For example, an interleaver for sorting symbols and/or data, a padder for padding, and the like may be included in the communication apparatus. Moreover, the communication apparatus in FIG. 1A (also in FIG. 1B and FIG. 1C) may perform transmission and/or reception corresponding to multiple input multiple output (MIMO) transmission for transmitting a plurality of modulation signals (a plurality of streams), using a plurality of antennas. Further, the communication apparatus in FIG. 1A (also in FIG. 1B and FIG. 1C) may perform transmission corresponding to multi-user MIMO transmission for transmitting, using a first frequency (band), modulation signals to a plurality of terminals in a first time period at least.

FIG. 1B illustrates an exemplary configuration of the communication apparatus in Embodiment 1, such as a base station, an access point, a terminal, a repeater, etc., different from the configuration in FIG. 1A. In FIG. 1B, the components that operate in the same manner as in FIG. 1A are denoted by the same reference signs, and detailed descriptions thereof will be omitted.

The configuration in FIG. 1B is characterized in that the number of transmitters and the number of transmission panel antennas are the same. In this case, first processor 104 may perform processing for transmit beamforming (transmission directivity control), for example, precoding processing. First processor 104 may output y-th modulation signal 103_y as x-th transmission signal 105_x. Note that x is an integer from 1 to M (both inclusive), and y is an integer from 1 to M (both inclusive).

In addition, the number of receivers and the number of reception panel antennas are the same. In this case, second processor 153 may perform processing for the reception directivity control. Second processor 153 may output y-th received signal 152_y as x-th signal-processing-subjected signal 154_x. Note that x is an integer from 1 to m (both inclusive), and y is an integer from 1 to m (both inclusive).

FIG. 1C illustrates an exemplary configuration of the communication apparatus in Embodiment 1, such as a base station, an access point, a terminal, a repeater, etc., different from the configurations in FIGS. 1A and 1B. In FIG. 1C, the components that operate in the same manner as in FIG. 1A are denoted by the same reference signs, and detailed descriptions thereof will be omitted.

The configuration in FIG. 1C is characterized in that the number of transmitters and the number of transmission panel antennas are the same and the first processor is not present. In addition, the number of receivers and the number of reception panel antennas are the same and the second processor is not present.

Note that FIGS. 1A, 1B, and 1C illustrate exemplary configurations of the communication apparatus, such as a base station, an access point, a terminal, a repeater, etc., and the configuration of the communication apparatus is not limited to these examples.

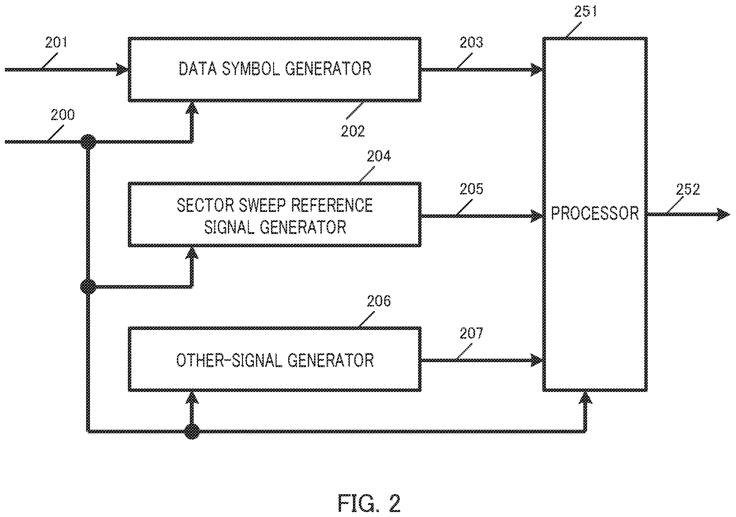

FIG. 2 illustrates an exemplary configuration of i-th transmitter 102_i. Note that i is "an integer from 1 to N (both inclusive)" or "an integer from 1 to M (both inclusive)".

Data symbol generator 202 takes data 201 and control signal 200 as input, performs error correction coding, mapping, signal processing for transmission, etc. on the basis of information on an error correction coding method, information on a modulation scheme, information on a transmission method, information on a frame configuration method, etc. included in control signal 200, and outputs data symbol modulation signal 203. Note that data 201 corresponds to i-th data 101_i, and control signal 200 corresponds to control signal 100. Thus, data 201 may include data of one or more users.

Sector sweep reference signal (i.e., reference signal for sector sweep) generator 204 takes control signal 200 as input, generates sector sweep reference signal 205 based on the frame configuration information included in control signal 200, and outputs the generated signal. Note that specific configuration methods and transmission methods for sector sweep reference signal 205 will be described later in detail.

Other-signal generator 206 takes control signal 200 as input, generates other signals 207 based on the control signal, and outputs the generated signals.

Processor 251 takes data symbol modulation signal 203, sector sweep reference signal 205, other signals 207, and control signal 200 as input, generates frame configuration-based modulation signal (i.e., modulation signal in accordance with frame configuration) 252 based on the frame configuration information included in control signal 200, and outputs the generated signal. Note that frame configuration-based modulation signal 252 corresponds to i-th modulation signal 103_i, and specific examples of the frame configuration will be described later in detail.

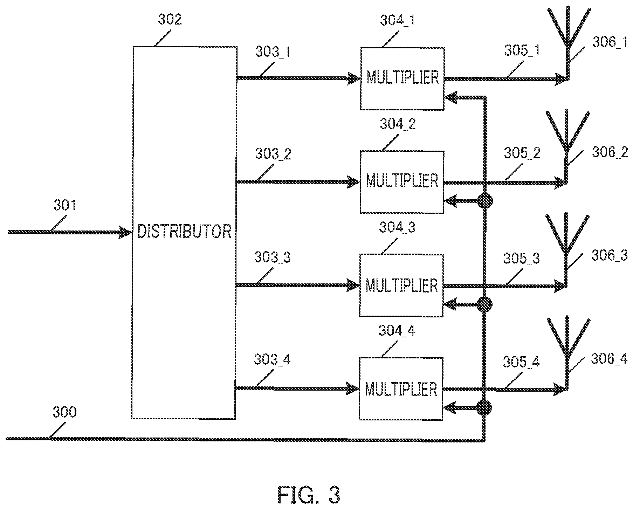

FIG. 3 illustrates an exemplary configuration of transmission panel antenna i labeled 106_i in FIGS. 1A, 1B, and 1C. Note that i is "an integer from 1 to M (both inclusive)". Distributor 302 takes transmission signal 301 as input, performs distribution, and outputs first transmission signal 303_1, second transmission signal 303_2, third transmission signal 303_3, and fourth transmission signal 303_4. Note that transmission signal 301 corresponds to "i-th transmission signal 105_i in FIGS. 1A and 1B" or "i-th modulation signal 103_i in FIG. 1C".

Multiplier 304_1 takes first transmission signal 303_1 and control signal 300 as input, multiplies first transmission signal 303_1 by a multiplication coefficient based on control signal 300, generates and outputs coefficient-multiplication-subjected first transmission signal (i.e., first transmission signal that has been subjected to the coefficient multiplication) 305_1. Then, coefficient-multiplication-subjected first transmission signal 305_1 is outputted from antenna 306_1 as a radio wave. Note that control signal 300 corresponds to control signal 100.

A specific description follows. First transmission signal 303_1 is represented by tx1(t). Note that t represents time. When the multiplication coefficient is w1, coefficient-multiplication-subjected first transmission signal 305_1 can be expressed as tx1(t) × w1. Note that tx1(t) can be represented by a complex number, and thus, it may be a real number. Likewise, w1 can be represented by a complex number, and thus, it may be a real number.

Multiplier 304_2 takes second transmission signal 303_2 and control signal 300 as input, multiplies second transmission signal 303_2 by a multiplication coefficient based on control signal 300, generates and outputs coefficient-multiplication-subjected second transmission signal 305_2. Then, coefficient-multiplication-subjected second transmission signal 305_2 is outputted from antenna 306_2 as a radio wave.

A specific description follows. Second transmission signal 303_2 is represented by tx2(t). Note that t represents time. When the multiplication coefficient is w2, coefficient-multiplication-subjected second transmission signal 305_2 can be expressed as tx2(t) × w2. Note that tx2(t) can be represented by a complex number, and thus, it may be a real number. Likewise, w2 can be represented by a complex number, and thus, it may be a real number.

Multiplier 304_3 takes third transmission signal 303_3 and control signal 300 as input, multiplies third transmission signal 303_3 by a multiplication coefficient based on control signal 300, generates and outputs coefficient-multiplication-subjected third transmission signal 305_3. Then, coefficient-multiplication-subjected third transmission signal 305_3 is outputted from antenna 306_3 as a radio wave.

A specific description follows. Third transmission signal 303_3 is represented by tx3(t). Note that t represents time. When the multiplication coefficient is w3, coefficient-multiplication-subjected third transmission signal 305_3 can be expressed as tx3(t) × w3. Note that tx3(t) can be represented by a complex number, and thus, it may be a real number. Likewise, w3 can be represented by a complex number, and thus, it may be a real number.

Multiplier 304_4 takes fourth transmission signal 303_4 and control signal 300 as input, multiplies fourth transmission signal 303_4 by a multiplication coefficient based on control signal 300, generates and outputs coefficient-multiplication-subjected fourth transmission signal 305_4. Then, coefficient-multiplication-subjected fourth transmission signal 305_4 is outputted from antenna 306_4 as a radio wave.

A specific description follows. Fourth transmission signal 303_4 is represented by tx4(t). Note that t represents time. When the multiplication coefficient is w4, coefficient-multiplication-subjected fourth transmission signal 305_4 can be expressed as tx4(t) × w4. Note that tx4(t) can be represented by a complex number, and thus, it may be a real number. Likewise, w4 can be represented by a complex number, and thus, it may be a real number.

Note that "an absolute value of w1, an absolute value of w2, an absolute value of w3, and an absolute value of w4 may be equal to each other". This corresponds to a case where a phase change has been performed. It is needless to say that the absolute value of w1, the absolute value of w2, the absolute value of w3, and the absolute value of w4 need not be equal to each other.

The respective values of w1, w2, w3, and w4 may be switched for each frame, each slot, each mini-slot, each multiple-symbols, or each symbol. The switch timings of the respective values of w1, w2, w3, and w4 are not limited to the above examples.

Further, FIG. 3 illustrates an example of the transmission panel antenna composed of four antennas (and four multipliers), but the number of antennas is not limited to four and the transmission panel antenna only needs to be composed of two or more antennas.

Note that transmission panel antenna i labeled 106_i in FIGS. 1A, 1B, and 1C may perform directivity control by changing the characteristics of the antenna itself, and in this case, transmission panel antenna i labeled 106_i may be composed of one or more antennas.

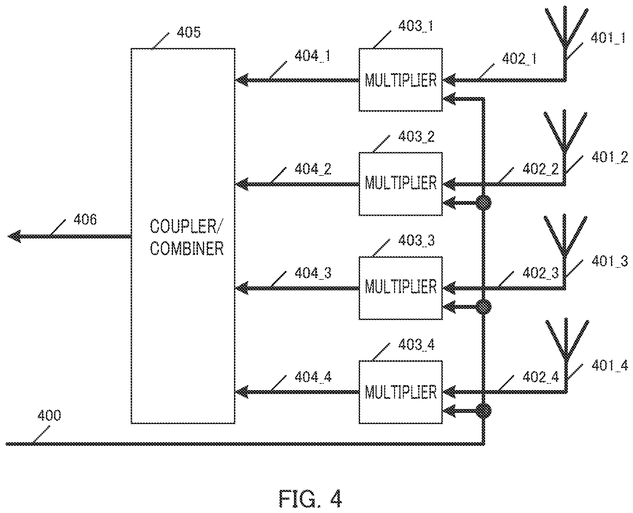

FIG. 4 illustrates an exemplary configuration of reception panel antenna i labeled 151_i in FIGS. 1A, 1B, and 1C. Note that i is "an integer from 1 to m (both inclusive)".

Multiplier 403_1 takes first received signal 402_1 received at antenna 401_1 and control signal 400 as input, multiplies first received signal 402_1 by a multiplication coefficient based on control signal 400, and outputs coefficient-multiplication-subjected first received signal 404_1.

A specific description follows. First received signal 402_1 is represented by rx1(t). Note that t represents time. When the multiplication coefficient is d1, coefficient-multiplication-subjected first received signal 404_1 can be expressed as rx1(t) × d1. Note that rx1(t) can be represented by a complex number, and thus, it may be a real number. Likewise, d1 can be represented by a complex number, and thus, it may be a real number.

Multiplier 403_2 takes second received signal 402_2 received at antenna 401_2 and control signal 400 as input, multiplies second received signal 402_2 by a multiplication coefficient based on control signal 400, and outputs coefficient-multiplication-subjected second received signal 404_2.

A specific description follows. Second received signal 402_2 is represented by rx2(t). Note that t represents time. When the multiplication coefficient is d2, coefficient-multiplication-subjected second received signal 404_2 can be expressed as rx2(t) × d2. Note that rx2(t) can be represented by a complex number, and thus, it may be a real number. Likewise, d2 can be represented by a complex number, and thus, it may be a real number.

Multiplier 403_3 takes third received signal 402_3 received at antenna 401_3 and control signal 400 as input, multiplies third received signal 402_3 by a multiplication coefficient based on control signal 400, and outputs coefficient-multiplication-subjected third received signal 404_3.

A specific description follows. Third received signal 402_3 is represented by rx3(t). Note that t represents time. When the multiplication coefficient is d3, coefficient-multiplication-subjected third received signal 404_3 can be expressed as rx3(t) × d3. Note that rx3(t) can be represented by a complex number, and thus, it may be a real number. Likewise, d3 can be represented by a complex number, and thus, it may be a real number.

Multiplier 403_4 takes fourth received signal 402_4 received at antenna 401_4 and control signal 400 as input, multiplies fourth received signal 402_4 by a multiplication coefficient based on control signal 400, and outputs coefficient-multiplication-subjected fourth received signal 404_4.

A specific description follows. Fourth received signal 402_4 is represented by rx4(t). Note that t represents time. When the multiplication coefficient is d4, coefficient-multiplication-subjected fourth received signal 404_4 can be expressed as rx4(t) × d4. Note that rx4(t) can be represented by a complex number, and thus, it may be a real number. Likewise, d4 can be represented by a complex number, and thus, it may be a real number.

Coupler/combiner 405 takes coefficient-multiplication-subjected first received signal 404_1, coefficient-multiplication-subjected second received signal 404_2, coefficient-multiplication-subjected third received signal 404_3, and coefficient-multiplication-subjected fourth received signal 404_4 as input, combines coefficient-multiplication-subjected first received signal 404_1, coefficient-multiplication-subjected second received signal 404_2, coefficient-multiplication-subjected third received signal 404_3, and coefficient-multiplication-subjected fourth received signal 404_4, and outputs modulation signal 406. Note that modulation signal 406 is expressed as rx1(t) × d1 + rx2(t) × d2 + rx3(t) × d3 + rx4(t) × d4.

Note that control signal 400 corresponds to control signal 100, and modulation signal 406 corresponds to i-th received signal 152_i.

In addition, "an absolute value of d1, an absolute value of d2, an absolute value of d3, and an absolute value of d4 may be equal to each other". This corresponds to a case where a phase change has been performed. It is needless to say that the absolute value of d1, the absolute value of d2, the absolute value of d3, and the absolute value of d4 need not be equal to each other.

The respective values of d1, d2, d3, and d4 may be switched for each frame, each slot, each mini-slot, each multiple-symbols, or each symbol. The switch timings of the respective values of d1, d2, d3, and d4 are not limited to the above examples.

Further, FIG. 4 illustrates an example of the reception panel antenna composed of four antennas (and four multipliers), but the number of antennas is not limited to four and the reception panel antenna only needs to be composed of two or more antennas.

Note that reception panel antenna i labeled 151_i in FIGS. 1A, 1B, and 1C may perform directivity control by changing the characteristics of the antenna itself, and in this case, reception panel antenna i labeled 151_i may be composed of one or more antennas.

In the present embodiment, in a case where the communication apparatus in FIGS. 1A, 1B, and 1C is a base station or g Node B (gNB), for example, it supports multi-carrier transmission such as orthogonal frequency division multiplexing (OFDM). The base station or gNB in FIGS. 1A, 1B, and 1C may also support orthogonal frequency division multiple access (OFDMA).

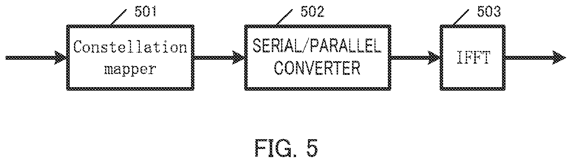

FIG. 5 illustrates an exemplary configuration of a transmission apparatus in a case of using an OFDM scheme. As illustrated in FIG. 5, the transmission apparatus is composed of, for example, constellation mapper 501, serial/parallel converter 502, and inverse fast Fourier transform (IFFT) 503.

Constellation mapper 501, for example, takes data as input, performs mapping based on the configured modulation scheme, and outputs the modulation signal.

Serial/parallel converter 502 converts serial signals into parallel signals. Note that serial/parallel converter 502 need not be present when parallel signals are already obtained.

IFFT 503 performs IFFT processing on an input signal, and outputs the modulation signal based on the OFDM scheme. Note that IFFT 503 may be an inverse Fourier transformer performing inverse Fourier transform.

The transmission apparatus in a case of using the OFDM scheme may include another processor (e.g., error correction coder, interleaver, etc.), and the configuration is not limited to that in FIG. 5.

In the present embodiment, in a case where the communication apparatus in FIGS. 1A, 1B, and 1C is a base station or gNB, for example, it may support multi-carrier reception such as in the OFDM scheme or may support single-carrier reception such as in a single-carrier scheme based on discrete Fourier transform (DFT), for example. The following description is about an exemplary configuration of a reception part in a single-carrier scheme.

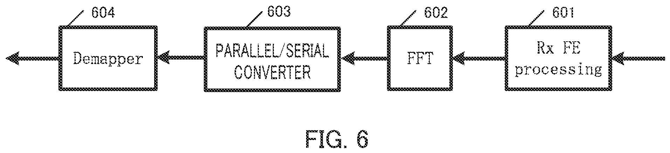

FIG. 6 illustrates an exemplary configuration of a reception apparatus in a case of using the OFDM scheme. As illustrated in FIG. 6, the reception apparatus in a case of using the OFDM scheme is composed of receiver (Rx) front end (FE) processing 601, fast Fourier transform 602, parallel/serial converter 603, and demapper 604.

Rx FE processing 601 performs processing of a reception front end.

FFT 602 performs FFT processing on the input signal.

Parallel/serial converter 603 converts parallel signals into serial signals. Note that parallel/serial converter 603 need not be present when serial signals are already obtained.

Demapper 604 performs demodulation processing based on the transmission method and modulation scheme.

Note that the reception apparatus may include another processor (e.g., deinterleaver, decoder for error correction coding, etc.), and the configuration is not limited to that in FIG. 6.

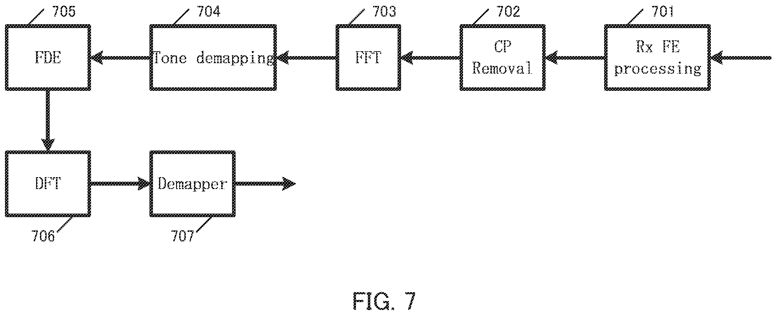

FIG. 7 illustrates an exemplary configuration of the reception apparatus in a case of using a single-carrier scheme based on DFT. As illustrated in FIG. 7, the reception apparatus is composed of receiver (Rx) FE processing 701, CP removal 702, fast Fourier transform 703, tone demapping 704, frequency domain equalization (FDE) 705, DFT 706, and demapper 707. Note that the reception apparatus may include a processor other than the above.

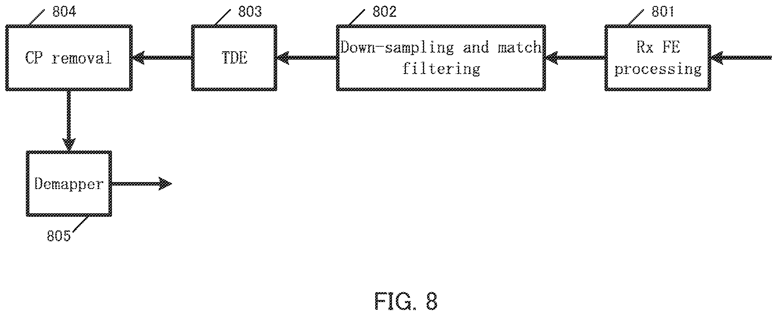

FIG. 8 illustrates an exemplary configuration of the reception apparatus in a case of using a single-carrier scheme based on time domain. As illustrated in FIG. 8, the reception apparatus is composed of receiver (Rx) FE processing 801, down-sampling and match filtering 802, time domain equalization (TDE) 803, CP removal 804, and demapper 805. Note that the reception apparatus may include a processor other than the above.

Although exemplary reception methods in single-carrier schemes and exemplary configurations of the reception apparatus have been described above, the reception method in a single-carrier scheme and the reception apparatus are not limited to these. For example, examples of the single-carrier scheme include "discrete Fourier transform (DFT)-spread orthogonal frequency division multiplexing (OFDM)" (DFT-S OFDM), "trajectory constrained DFT-spread OFDM", "constrained DFT-spread OFDM" (constrained DFT-S OFDM), "OFDM based single carrier (SC)", "single carrier (SC)-frequency division multiple access (FDMA)", "guard interval DFT-spread OFDM", a time-domain implementation single carrier scheme (e.g., single carrier (SC)-QAM), and the like.

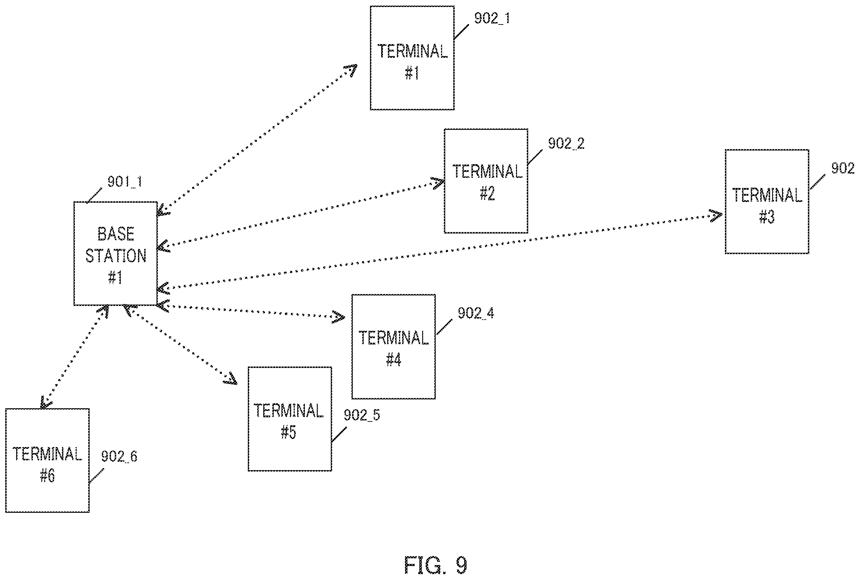

FIG. 9 illustrates an exemplary communication state in Embodiment 1. As illustrated in FIG. 9, a case to be discussed is where base station #1 labeled 901_1 communicates with terminal #1 labeled 902_1, terminal #2 labeled 902_2, terminal #3 labeled 902_3, terminal #4 labeled 902_4, terminal #5 labeled 902_5, and terminal #6 labeled 902_6. A relationship between a base station and terminals, however, is not limited to this example, and the base station may communicate with one or more terminals, for example.

Note that the following description is about an exemplary case where the base station transmits modulation signals to the terminals using the OFDMA scheme.

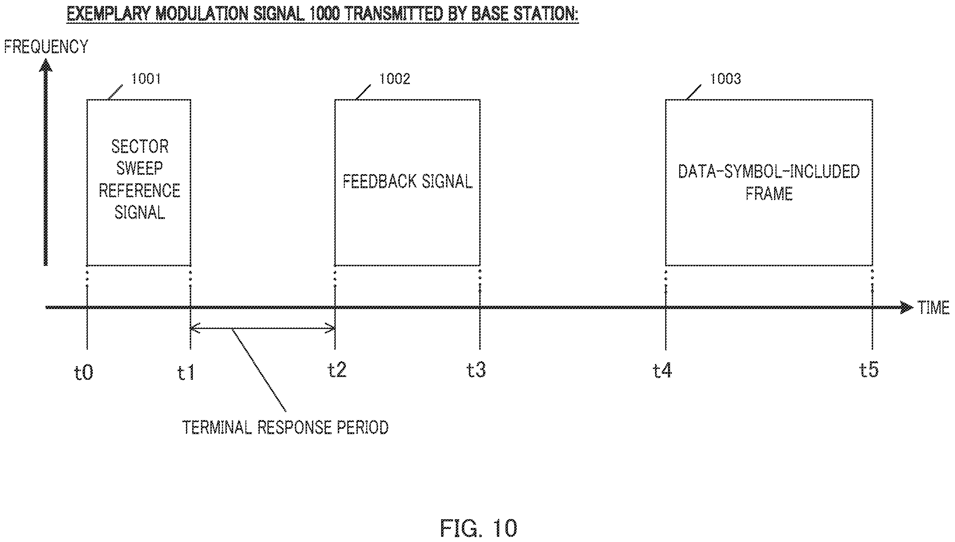

FIG. 10 illustrates an example of modulation signal 1000 transmitted by base station #1 labeled 901_1 in FIG. 9. In FIG. 10, the horizontal axis represents time and the vertical axis represents frequency. In the time period from time t0 to t1, sector sweep (sector-sweep level) reference signal 1001 is present. Note that sector sweep reference signal 1001 will be described later.

The time period from time t1 to t2 is a terminal response period. Note that the terminal response will be described later.

In the time period from time t2 to t3, feedback signal 1002 is present. Note that feedback signal 1002 will be described later.

In the time period from time t4 to t5, data-symbol-included frame 1003 is present. Note that data-symbol-included frame 1003 will be described later.

The reference signal for sector sweep is referred to as sector sweep reference signal 1001 in FIG. 10, but the name is not limited thereto and may be a reference signal, a reference symbol, a training signal, a training symbol, or the like. The signal denoted by reference sign 1002 is referred to as feedback signal 1002, but the name is not limited thereto and may be a feedback symbol, a terminal-addressed signal, a terminal-addressed symbol, a control signal, a control symbol, or the like. In addition, the frame including a data symbol is referred to as data-symbol-included frame 1003, but the name is not limited thereto and may be a slot/mini-slot/unit-included frame, or the like.

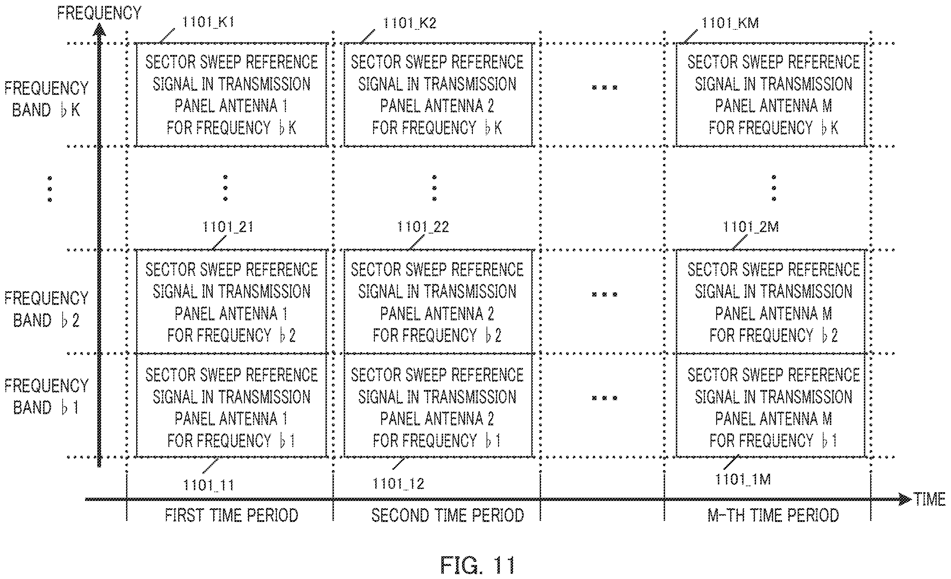

FIG. 11 illustrates examples of sector sweep reference signal 1001 in FIG. 10 transmitted by base station #1 labeled 901_1 in FIG. 9 with the configuration in FIG. 1A, 1B, or 1C, for example. Note that the horizontal axis represents time and the vertical axis represents frequency in FIG. 11. In the example of FIG. 11, the frequency is divided into frequency band $b1$, frequency band $b2$, ..., frequency band $bK$ as illustrated in FIG. 11 for base station #1 labeled 901_1 to transmit modulation signals based on OFDMA. Note that K is an integer equal to or greater than 1 or an integer equal to or greater than 2. Note that, in a case of using OFDM(A), for example, a single frequency band includes one or more (sub)carriers or includes two or more (sub)carriers. This may apply to the other drawings and embodiments.

In frequency band $b1$, for example, sector sweep reference signal 1101_11 in transmission panel antenna 1 for frequency $b1$ is present in the first time period, sector sweep reference signal 1101_12 in transmission panel antenna 2 for frequency $b1$ is present in the second time period, ..., sector sweep reference signal 1101_1M in transmission panel antenna M for frequency $b1$ is present in the M-th time period.

That is, in frequency band bi, sector sweep reference signal 1101_i1 in transmission panel antenna 1 for frequency $bi$ is present in the first time period, sector sweep reference signal 1101_i2 in transmission panel antenna 2 for frequency $b_i$ is present in the second time period, ..., sector sweep reference signal 1101_iM in transmission panel antenna M for frequency $b_i$ is present in the M-th time period. Note that i is an integer from 1 to K (both inclusive).

Note that sector sweep reference signal 1101_ij in transmission panel antenna j for frequency $b_i$ is transmitted from transmission panel antenna j labeled 106_j of base station #1 labeled 901_1 with the configuration in FIG. 1A, 1B, or 1C. In this case, j is an integer from 1 to M (both inclusive).

One feature is that "sector sweep reference signals are transmitted from the same transmission panel antenna in the i-th time period regardless of the frequency band in FIG. 11". At this time, the same beamforming parameter is used in a first period of time regardless of the frequency band. Note that the beamforming will be described later.

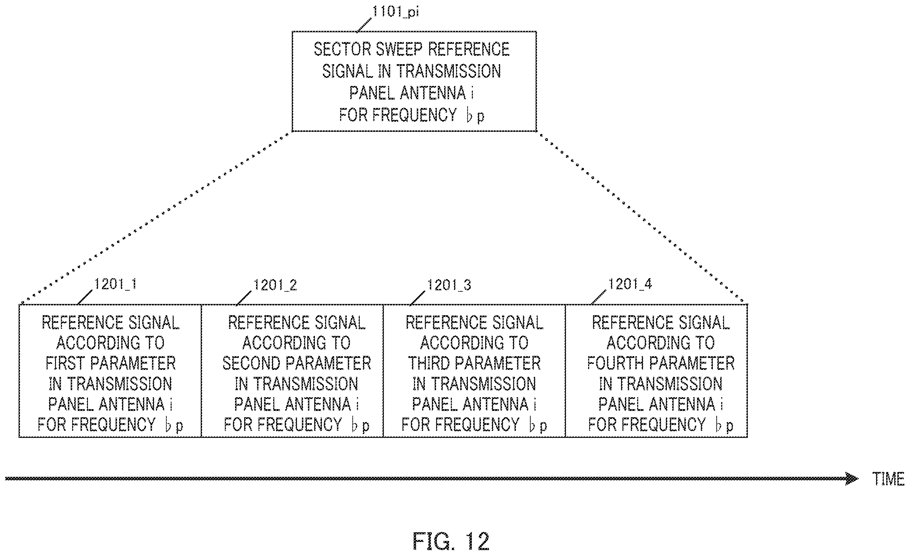

FIG. 12 illustrates an exemplary configuration of "sector sweep reference signal 1101_pi in transmission panel antenna i for frequency $b_p$" in FIG. 11. Note that the horizontal axis represents time in FIG. 12. Note that p is an integer from 1 to K (both inclusive) and i is an integer from 1 to M (both inclusive).

For example, base station #1 labeled 901_1 with the configuration in FIG. 1A, 1B, or 1C includes the configuration in FIG. 3 as transmission panel antenna i labeled 106_i.

A description will be given of "reference signal 1201_1 according to first parameter in transmission panel antenna i for frequency bp".

When base station #1 labeled 901_1 transmits "reference signal 1201_1 according to first parameter in transmission panel antenna i for frequency $b_p$" illustrated in FIG. 12, base station #1 labeled 901_1 sets the multiplication coefficient in multiplier 304_1 in transmission panel antenna i labeled 106_i as w1(i, 1). When first transmission signal 303_1 of "reference signal 1201_1 according to first parameter in transmission panel antenna i for frequency $b_p$" is tx1ref1(t), multiplier 304_1 obtains tx1ref1(t) $\times$ w1(i, 1). Then, base station #1 labeled 901_1 transmits tx1ref1(t) $\times$ w1(i, 1) from antenna 306_1 in FIG. 3. Note that t represents time.

When base station #1 labeled 901_1 transmits "reference signal 1201_1 according to first parameter in transmission panel antenna i for frequency $b_p$" illustrated in FIG. 12, base station #1 labeled 901_1 sets the multiplication coefficient in multiplier 304_2 in transmission panel antenna i labeled 106_i as w2(i, 1). When second transmission signal 303_2 of "reference signal 1201_1 according to first parameter in transmission panel antenna i for frequency $b_p$" is tx2ref1(t), multiplier 304_2 obtains tx2ref1(t) $\times$ w2(i, 1). Then, base station #1 labeled 901_1 transmits tx2ref1(t) $\times$ w2(i, 1) from antenna 306_2 in FIG. 3.

When base station #1 labeled 901_1 transmits "reference signal 1201_1 according to first parameter in transmission panel antenna i for frequency $b_p$" illustrated in FIG. 12, base station #1 labeled 901_1 sets the multiplication coefficient in multiplier 304_3 in transmission panel antenna i labeled 106_i as w3(i, 1). When third transmission signal 303_3 of "reference signal 1201_1 according to first parameter in transmission panel antenna i for frequency $b_p$" is tx3ref1(t), multiplier 304_3 obtains tx3ref1(t) $\times$ w3(i, 1). Then, base station #1 labeled 901_1 transmits tx3ref1(t) $\times$ w3(i, 1) from antenna 306_3 in FIG. 3.

When base station #1 labeled 901_1 transmits "reference signal 1201_1 according to first parameter in transmission panel antenna i for frequency $b_p$" illustrated in FIG. 12, base station #1 labeled 901_1 sets the multiplication coefficient in multiplier 304_4 in transmission panel antenna i labeled 106_i as w4(i, 1). When fourth transmission signal 303_4 of "reference signal 1201_1 according to first parameter in transmission panel antenna i for frequency $b_p$" is tx4ref1(t), multiplier 304_4 obtains tx4ref1(t) $\times$ w4(i, 1). Then, base station #1 labeled 901_1 transmits tx4ref1(t) $\times$ w4(i, 1) from antenna 306_4 in FIG. 3.

A description will be given of "reference signal 1201_j according to j-th parameter in transmission panel antenna i for frequency $b_p$".

When base station #1 labeled 901_1 transmits "reference signal 1201_j according to j-th parameter in transmission panel antenna i for frequency p" illustrated in FIG. 12, base station #1 labeled 901_1 sets the multiplication coefficient in multiplier 304_1 in transmission panel antenna i labeled 106_i as w1(i, j). When first transmission signal 303_1 of "reference signal 1201_j according to j-th parameter in transmission panel antenna i for frequency $b_p$" is tx1refj(t), multiplier 304_1 obtains tx1refj(t) $\times$ w1(i, j). Then, base station #1 labeled 901_1 transmits tx1refj(t) $\times$ w1(i,j) from antenna 306_1 in FIG. 3. Note that t represents time.

When base station #1 labeled 901_1 transmits "reference signal 1201_j according to j-th parameter in transmission panel antenna i for frequency $b_p$" illustrated in FIG. 12, base station #1 labeled 901_1 sets the multiplication coefficient in multiplier 304_2 in transmission panel antenna i labeled 106_i as w2(i, j). When second transmission signal 303_2 of "reference signal 1201_j according to j-th parameter in transmission panel antenna i for frequency $b_p$" is tx2refj(t), multiplier 304_2 obtains tx2refj(t) $\times$ w2(i, j). Then, base station #1 labeled 901_1 transmits tx2refj(t) $\times$ w2(i, j) from antenna 306_2 in FIG. 3.

When base station #1 labeled 901_1 transmits "reference signal 1201_j according to j-th parameter in transmission panel antenna i for frequency $b_p$" illustrated in FIG. 12, base station #1 labeled 901_1 sets the multiplication coefficient in multiplier 304_3 in transmission panel antenna i labeled 106_i as w3(i, j). When third transmission signal 303_3 of "reference signal 1201_j according to j-th parameter in transmission panel antenna i for frequency ♭p" is tx3refj(t), multiplier 304_3 obtains tx3refj(t) × w3(i, j). Then, base station #1 labeled 901_1 transmits tx3refj(t) × w3(i, j) from antenna 306_3 in FIG. 3.

When base station #1 labeled 901_1 transmits "reference signal 1201_j according to j-th parameter in transmission panel antenna i for frequency ♭p" illustrated in FIG. 12, base station #1 labeled 901_1 sets the multiplication coefficient in multiplier 304_4 in transmission panel antenna i labeled 106_i as w4(i, j). When fourth transmission signal 303_4 of "reference signal 1201_j according to j-th parameter in transmission panel antenna i for frequency ♭p" is tx4refj(t), multiplier 304_4 obtains tx4refj(t) × w4(i, j). Then, base station #1 labeled 901_1 transmits tx4refj(t) × w4(i, j) from antenna 306_4 in FIG. 3.

Note that j is an integer from 1 to 4 (both inclusive) in the case of FIG. 12. The number Z of parameter changes is four in FIG. 12, but the number Z of parameter changes is not limited to four. The same can be implemented as long as Z is an integer equal to or greater than 1 or an integer equal to or greater than 2. At this time, j is an integer from 1 to Z (both inclusive).

As illustrated in FIGS. 11 and 12, when base station #1 labeled 901_1 transmits "sector sweep reference signal 1101_i in transmission panel antenna i for frequency ♭p", "reference signal 1201_j according to j-th parameter in transmission panel antenna i for frequency ♭p" includes, for example, the following information:

· Identification number (ID) of the transmission panel antenna, which corresponds to i here, for example;

· Identification number (ID) of the parameter used for beamforming (directivity control), which corresponds to j here, for example; and

· The number of time divisions in which sector sweep reference signals can be transmitted when the terminals transmit the sector sweep reference signals, which will be described later.

Note that "reference signal 1201_j according to j-th parameter in transmission panel antenna i for frequency ♭p" may include other information. Examples of the information will be described in the other embodiments, for example, in Embodiment 6 or later.

The following information may also be included in "reference signal 1201_j according to j-th parameter in transmission panel antenna i for frequency ♭p";

· Information on the frequency band and/or frequency ♭p (information of the number of frequency divisions may also be included), which will be described later.

Transmission of the "identification number (ID) of the transmission panel antenna for frequency ♭p" and the "identification number (ID) of the parameter used for beamforming (directivity control)" by base station #1 labeled 901_1 allows the terminals to recognize the "identification number (ID) of the transmission panel antenna" and the "identification number (ID) of the parameter used for beamforming (directivity control)" that have allowed successful reception; accordingly, base station #1 labeled 901_1 and the terminals can perform appropriate control. This produces the effect of enhancing data reception quality.

Note that "the number of time divisions in which sector sweep reference signals can be transmitted when the terminals transmit the sector sweep reference signals" may be changeable according to the frame and/or time, for example. This produces the effect of enhancing data transmission efficiency of a communication system.

Further, transmission of the "information on the frequency band and/or frequency ♭p" by base station #1 labeled 901_1 allows the terminals to obtain the information and transmit "information relative to a frequency that the terminals desire the base station to use for transmission". This allows the base station to perform appropriate control and produces the effect of enhancing data reception quality.

Next, a description will be given of an operation in the time period from time t1 to t2 in FIG. 10, which is the terminal response period. Note that, in Embodiment 1, the description is based on a case where the terminals use OFDM and frequency (bands) used by the base station and frequency (bands) used by the terminals partially overlap each other.

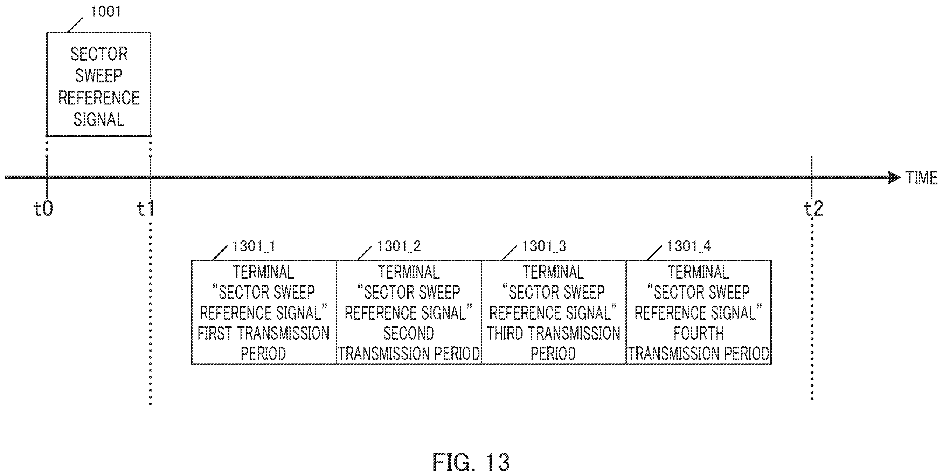

FIG. 13 illustrates an exemplary operation in the time period from time t1 to t2, which is the terminal response period. Note that the horizontal axis represents time in FIG. 13. Terminals such as terminal #1 labeled 902_1, terminal #2 labeled 902_2, terminal #3 labeled 902_3, terminal #4 labeled 902_4, terminal #5 labeled 902_5, and terminal #6 labeled 902_6 in FIG. 9 transmit sector sweep reference signals in the time period from time t1 to t2, which is the terminal response period.

As illustrated in FIGS. 10 and 13, for example, base station #1 labeled 901_1 transmits sector sweep reference signals in the time period from time t0 to t1. After that, the terminal response period, which is the time period from time t1 to t2, includes terminal "sector sweep reference signal" first transmission period (i.e., first transmission period for terminals to transmit sector sweep reference signals) 1301_1, terminal "sector sweep reference signal" second transmission period 1301_2, terminal "sector sweep reference signal" third transmission period 1301_3, and terminal "sector sweep reference signal" fourth transmission period 1301_4, as illustrated in FIG. 13.

Thus, in the case of FIG. 13, "the number of time divisions in which sector sweep reference signals can be transmitted when the terminals transmit the sector sweep reference signals" is set to four by base station #1 labeled 901_1.

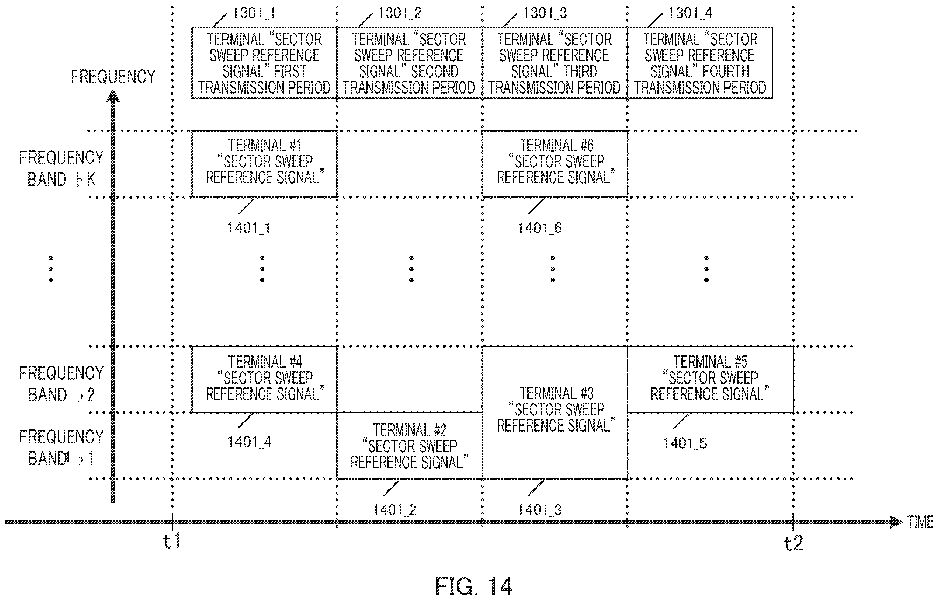

FIG. 14 illustrates exemplary occupation by the terminals in terminal "sector sweep reference signal" first transmission period 1301_1, terminal "sector sweep reference signal" second transmission period 1301_2, terminal "sector sweep reference signal" third transmission period 1301_3, and terminal "sector sweep reference signal" fourth transmission period 1301_4 illustrated in FIG. 13. Note that the horizontal axis represents time and the vertical axis represents frequency in FIG. 14.

Terminal #1 labeled 902_1 in FIG. 9 receives sector sweep reference signal 1001 transmitted by base station #1 labeled 901_1 and estimates the "frequency band, transmission panel antenna, and parameter number" with high reception quality from transmission panel antennas of base station #1 labeled 901_1. Note that this estimation can be performed by obtaining sector sweep reference signal 1001, and the "identification number (ID) of the transmission panel antenna" and the "identification number (ID) of the parameter used for beamforming (directivity control)" that are included in sector sweep reference signal 1001. In addition, the "information on the frequency band and/or frequency $_\flat p$" included in sector sweep reference signal 1001 may be used for this estimation.

Terminal #1 labeled 902_1 estimates, for example, "transmission panel antenna a1 and parameter b1" as the "transmission panel antenna and parameter" with high reception quality. Terminal #1 labeled 902_1 also estimates frequency band $_\flat K$ as the "frequency domain" with high reception quality.

In addition, while estimating the "transmission panel antenna and parameter" with high reception quality, terminal #1 labeled 902_1 simultaneously obtains information of "the number of time divisions in which sector sweep reference signals can be transmitted when the terminals transmit the sector sweep reference signals". In the case of FIG. 14, terminal #1 labeled 902_1 obtains information indicating that "the number of time divisions in which sector sweep reference signals can be transmitted when the terminals transmit the sector sweep reference signals" is four.

In this case, terminal #1 labeled 902_1 obtains, for example, any one of the values "0", "1", "2", and "3" using a random number. For example, terminal #1 labeled 902_1 obtains "0" using a random number. In this case, since "0" + 1 = 1, terminal #1 labeled 902_1 transmits terminal #1 "sector sweep reference signal" 1401_1 using "terminal "sector sweep reference signal" first (= "0" + 1) transmission period 1301_1" in FIG. 14. Here, the transmission period for the sector sweep reference signal is configured using a random number, but the transmission period for the sector sweep reference signal may be configured using, instead of a random number, a random number of an integer or a natural number, an irregular integer or natural number, a regular integer or natural number, an integer or a natural number held uniquely by the terminal, for example. Hence, the configuration of the transmission period for the sector sweep reference signal is not limited to the above example, and the transmission period for the sector sweep reference signal is configured for each terminal, for example. This is also applicable to the following similar descriptions.

Note that terminal #1 "sector sweep reference signal" 1401_1 includes information of the "transmission panel antenna and parameter" with high reception quality obtained by terminal #1 labeled 902_1, that is, information of "transmission panel antenna a1 and parameter b1". Terminal #1 "sector sweep reference signal" 1401_1 may also include information of the "frequency domain", for example, information of "frequency band $_\flat K$". This will be described later.

Likewise, terminal #2 labeled 902_2 in FIG. 9 receives sector sweep reference signal 1001 transmitted by base station #1 labeled 901_1 and estimates the "frequency band, transmission panel antenna, and parameter number" with high reception quality from transmission panel antennas of base station #1 labeled 901_1. Note that this estimation can be performed by obtaining sector sweep reference signal 1001, and the "identification number (ID) of the transmission panel antenna" and the "identification number (ID) of the parameter used for beamforming (directivity control)" that are included in sector sweep reference signal 1001. In addition, the "information on the frequency band and/or frequency $_\flat p$" included in sector sweep reference signal 1001 may be used for this estimation.

Terminal #2 labeled 902_2 estimates, for example, "transmission panel antenna a2 and parameter b2" as the "transmission panel antenna and parameter" with high reception quality. Terminal #2 labeled 902_2 also estimates frequency band $_\flat 1$ as the "frequency domain" with high reception quality.

In addition, while estimating the "transmission panel antenna and parameter" with high reception quality, terminal #2 labeled 902_2 simultaneously obtains information of "the number of time divisions in which sector sweep reference signals can be transmitted when the terminals transmit the sector sweep reference signals". In the case of FIG. 14, terminal #2 labeled 902_2 obtains information indicating that "the number of time divisions in which sector sweep reference signals can be transmitted when the terminals transmit the sector sweep reference signals" is four.

In this case, terminal #2 labeled 902_2 obtains, for example, any one of the values "0", "1", "2", and "3" using a random number. For example, terminal #2 labeled 902_2 obtains "1" using a random number. In this case, since "1" + 1 = 2, terminal #2 labeled 902_2 transmits terminal #2 "sector sweep reference signal" 1401_2 using "terminal "sector sweep reference signal" second (= "1" + 1) transmission period 1301_2" in FIG. 14.

Note that terminal #2 "sector sweep reference signal 1401_2" includes information of the "transmission panel antenna and parameter" with high reception quality obtained by terminal #2 labeled 902_2, that is, information of "transmission panel antenna a2 and parameter b2". Terminal #2 "sector sweep reference signal" 1401_2 may also include information of the "frequency domain", for example, information of "frequency band $\flat$1". This will be described later.

Thus, terminal #i labeled 902_i receives sector sweep reference signal 1001 transmitted by base station #1 labeled 901_1 and estimates the "frequency band, transmission panel antenna, and parameter number" with high reception quality from transmission panel antennas of base station #1 labeled 901_1. Note that this estimation can be performed by obtaining sector sweep reference signal 1001, and the "identification number (ID) of the transmission panel antenna" and the "identification number (ID) of the parameter used for beamforming (directivity control)" that are included in sector sweep reference signal 1001. Note that i is an integer equal to or greater than 1, for example. In addition, the "information on the frequency band and/or frequency $\flat$p" included in sector sweep reference signal 1001 may be used for this estimation.

Terminal #i labeled 902_i estimates, for example, "transmission panel antenna ai and parameter bi" as the "transmission panel antenna and parameter" with high reception quality. Terminal #i labeled 902_i also estimates frequency band bzi as the "frequency domain" with high reception quality.

In addition, while estimating the "transmission panel antenna and parameter" with high reception quality, terminal #i labeled 902_i simultaneously obtains information of "the number of time divisions in which sector sweep reference signals can be transmitted when the terminals transmit the sector sweep reference signals". In the case of FIG. 14, terminal #i labeled 902_i obtains information indicating that "the number of time divisions in which sector sweep reference signals can be transmitted when the terminals transmit the sector sweep reference signals" is four.

In this case, terminal #i labeled 902_i obtains, for example, any one of the values "0", "1", "2", and "3" using a random number. For example, terminal #i labeled 902_i obtains "yi" using a random number. Note that yi is any one of the values "0", "1", "2", and "3". In this case, terminal #i labeled 902_i transmits terminal #i "sector sweep reference signal" 1401_i using terminal "sector sweep reference signal" ("yi" + 1)-th transmission period 1301_("yi" + 1) in FIG. 14.

Note that terminal #i "sector sweep reference signal" 1401_i includes information of the "transmission panel antenna and parameter" with high reception quality obtained by terminal #i labeled 902_i, that is, information of "transmission panel antenna ai and parameter bi". Terminal #i "sector sweep reference signal" 1401_i may also include information of the "frequency domain", for example, information of "frequency band $\flat$p". This will be described later.

Note that terminal #i "sector sweep reference signal" 1401_i may be assigned to a plurality of frequency bands as illustrated in FIG. 14. For example, terminal #3 "sector sweep reference signal" 1401_3 is assigned to frequency band $\flat$1 and frequency band $\flat$2. As another example, terminal #i "sector sweep reference signal" 1401_i may be assigned to frequency bands discretely. For example, terminal #i "sector sweep reference signal" 1401_i may be assigned to frequency band $\flat$1 and frequency band $\flat$K. (As a result, terminal #i "sector sweep reference signal" 1401_i is assigned to one or more frequency bands.)

In the manner described above, a collision of the sector sweep reference signals transmitted by the respective terminals can be reduced. This produces the effect that the base station can receive more sector sweep reference signals and can communicate with more terminals.

A description will be given of a configuration of terminal #i "sector sweep reference signal" 1401_i transmitted by terminal #i labeled 902_i described with reference to FIG. 14. To simplify the description, terminal #i labeled 902_i has the configuration in FIG. 1A, 1B, or 1C, and terminal #i labeled 902_i with the configuration in FIG. 1A, 1B, or 1C includes the configuration in FIG. 3 as transmission panel antenna xi labeled 106_xi. Note that the configuration of terminal #i labeled 902_i is not limited to the configuration in FIG. 1A, 1B, or 1C, and the configuration of transmission panel antenna xi labeled 106_xi included in terminal #i labeled 902_i with the configuration in FIG. 1A, 1B, or 1C is not limited to the configuration in FIG. 3.

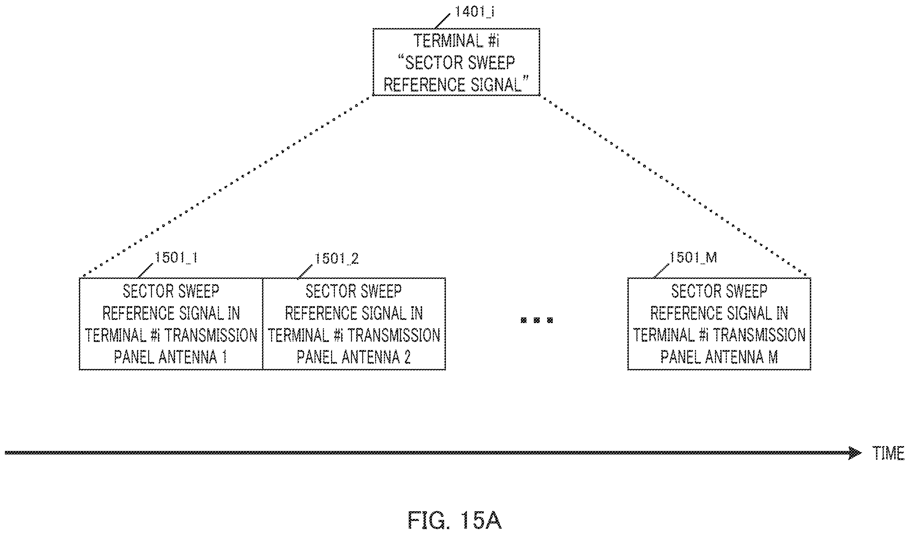

Terminal #i labeled 902_i transmits terminal #i "sector sweep reference signal" 1401_i as illustrated in FIG. 14. FIG. 15A illustrates an exemplary configuration of terminal #i "sector sweep reference signal" 1401_i. Note that the horizontal axis represents time in FIG. 15A.

As illustrated in FIG. 15A, terminal #i "sector sweep reference signal" 1401_i of terminal #i labeled 902_i is composed of "sector sweep reference signal 1501_1 in terminal #i transmission panel antenna 1, sector sweep reference signal 1501_2 in terminal #i transmission panel antenna 2, ..., sector sweep reference signal 1501_M in terminal #i transmission panel antenna M".

For example, terminal #i labeled 902_i with the configuration in FIG. 1A, 1B, or 1C transmits "sector sweep reference signal 1501_1 in terminal #i transmission panel antenna 1" using transmission panel antenna 1 labeled 106_1.

That is, terminal #i labeled 902_i with the configuration in FIG. 1A, 1B, or 1C transmits "sector sweep reference signal 1501_k in terminal #i transmission panel antenna k" using transmission panel antenna k labeled 106_k. Note that k is an integer from 1 to M (both inclusive).

Note that the number of transmission panel antennas included in terminal #i labeled 902_i is M in FIG. 15A, but the number of transmission panel antennas is not limited to this and may be N, where N is an integer equal to or greater than 1.

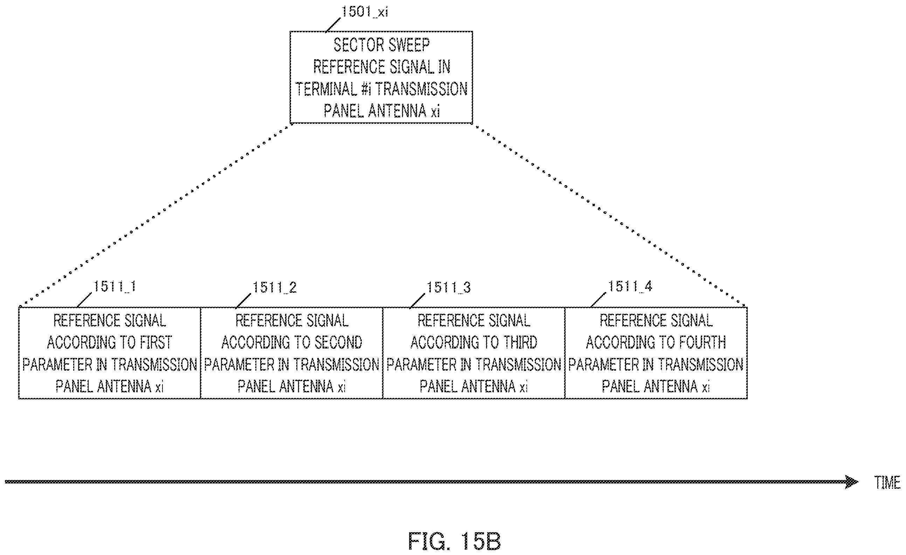

FIG. 15B illustrates an exemplary configuration of "sector sweep reference signal 1501_xi in terminal #i transmission panel antenna xi" in FIG. 15A. Note that the horizontal axis represents time in FIG. 15.

As illustrated in FIG. 15B, "sector sweep reference signal 1501_xi in terminal #i transmission panel antenna xi" is composed of, for example, "reference signal 1511_1 according to first parameter in transmission panel antenna xi", "reference signal 1511_2 according to second parameter in transmission panel antenna xi", "reference signal 1511_3 according to third parameter in transmission panel antenna xi", and "reference signal 1511_4 according to fourth parameter in transmission panel antenna xi".

For example, terminal #i labeled 902_i with the configuration in FIG. 1A, 1B, or 1C includes the configuration in FIG. 3 as transmission panel antenna xi labeled 106_xi.

A description will be given of "reference signal 1511_1 according to first parameter in transmission panel antenna xi".

When terminal #i labeled 902_i transmits "reference signal 1511_1 according to first parameter in transmission panel antenna xi" illustrated in FIG. 15B, terminal #i labeled 902_i sets the multiplication coefficient in multiplier 304_1 in transmission panel antenna xi labeled 106_xi as $w1(xi, 1)$. When first transmission signal 303_1 of "reference signal 1511_1 according to first parameter in transmission panel antenna xi" is $tx1ref1(t)$, multiplier 304_1 obtains $tx1ref1(t) \times w1(xi, 1)$. Then, terminal #i labeled 902_i transmits $tx1ref1(t) \times w1(xi, 1)$ from antenna 306_1 in FIG. 3. Note that t represents time.

When terminal #i labeled 902_i transmits "reference signal 1511_1 according to first parameter in transmission panel antenna xi" illustrated in FIG. 15B, terminal #i labeled 902_i sets the multiplication coefficient in multiplier 304_2 in transmission panel antenna xi labeled 106_xi as $w2(xi, 1)$. When second transmission signal 303_2 of "reference signal 1511_1 according to first parameter in transmission panel antenna xi" is $tx2ref1(t)$, multiplier 304_2 obtains $tx2ref1(t) \times w2(xi, 1)$. Then, terminal #i labeled 902_i transmits $tx2ref1(t) \times w2(xi, 1)$ from antenna 306_2 in FIG. 3.

When terminal #i labeled 902_i transmits "reference signal 1511_1 according to first parameter in transmission panel antenna xi" illustrated in FIG. 15B, terminal #i labeled 902_i sets the multiplication coefficient in multiplier 304_3 in transmission panel antenna xi labeled 106_xi as $w3(xi, 1)$. When third transmission signal 303_3 of "reference signal 1511_1 according to first parameter in transmission panel antenna xi" is $tx3ref1(t)$, multiplier 304_3 obtains $tx3ref1(t) \times w3(xi, 1)$. Then, terminal #i labeled 902_i transmits $tx3ref1(t) \times w3(xi, 1)$ from antenna 306_3 in FIG. 3.

When terminal #i labeled 902_i transmits "reference signal 1511_1 according to first parameter in transmission panel antenna xi" illustrated in FIG. 15B, terminal #i labeled 902_i sets the multiplication coefficient in multiplier 304_4 in transmission panel antenna xi labeled 106_xi as $w4(xi, 1)$. When fourth transmission signal 303_4 of "reference signal 1511_1 according to first parameter in transmission panel antenna xi" is $tx4ref1(t)$, multiplier 304_4 obtains $tx4ref1(t) \times w4(xi, 1)$. Then, terminal #i labeled 902_i transmits $tx4ref1(t) \times w4(xi, 1)$ from antenna 306_4 in FIG. 3.

A description will be given of "reference signal 1511_j according to j-th parameter in transmission panel antenna xi".

When terminal #i labeled 902_i transmits "reference signal 1511_J according to j-th parameter in transmission panel antenna xi" illustrated in FIG. 15B, terminal #i labeled 902_i sets the multiplication coefficient in multiplier 304_1 in transmission panel antenna xi labeled 106_xi as $w1(xi, j)$. When first transmission signal 303_1 of "reference signal 1511_j according to j-th parameter in transmission panel antenna xi" is $tx1refj(t)$, multiplier 304_1 obtains $tx1refj(t) \times w1(xi, j)$. Then, terminal #i labeled 902_i transmits $tx1refj(t) \times w1(xi, j)$ from antenna 306_1 in FIG. 3. Note that t represents time.

When terminal #i labeled 902_i transmits "reference signal 1511_j according to j-th parameter in transmission panel antenna xi" illustrated in FIG. 15B, terminal #i labeled 902_i sets the multiplication coefficient in multiplier 304_2 in transmission panel antenna xi labeled 106_xi as $w2(xi, j)$. When second transmission signal 303_2 of "reference signal 1511_j according to j-th parameter in transmission panel antenna xi" is $tx2refj(t)$, multiplier 304_2 obtains $tx2refj(t) \times w2(xi, j)$. Then, terminal #i labeled 902_i transmits $tx2refj(t) \times w2(xi, j)$ from antenna 306_2 in FIG. 3.

When terminal #i labeled 902_i transmits "reference signal 1511_J according to j-th parameter in transmission panel antenna xi" illustrated in FIG. 15B, terminal #i labeled 902_i sets the multiplication coefficient in multiplier 304_3 in transmission panel antenna xi labeled 106_xi as $w3(xi, j)$. When third transmission signal 303_3 of "reference signal 1511_j according to j-th parameter in transmission panel antenna xi" is $tx3refj(t)$, multiplier 304_3 obtains $tx3refj(t) \times w3(xi, j)$. Then, terminal #i labeled 902_i transmits $tx3refj(t) \times w3(xi, j)$ from antenna 306_3 in FIG. 3.

When terminal #i labeled 902_i transmits "reference signal 1511_j according to j-th parameter in transmission panel antenna xi" illustrated in FIG. 15B, terminal #i labeled 902_i sets the multiplication coefficient in multiplier 304_4 in transmission panel antenna xi labeled 106_xi as $w4(xi, j)$. When fourth transmission signal 303_4 of "reference signal 1511_j according to j-th parameter in transmission panel antenna xi" is tx4refj(t), multiplier 304_4 obtains tx4refj(t) × w4(xi, j). Then, terminal #i labeled 902_i transmits tx4refj(t) × w4(xi, j) from antenna 306_4 in FIG. 3.

Note that j is an integer from 1 to 4 (both inclusive) in the case of FIG. 15B. The number Z of parameter changes is four in FIG. 15B, but the number Z of parameter changes is not limited to four. The same can be implemented as long as Z is an integer equal to or greater than 1 or an integer equal to or greater than 2. At this time, j is an integer from 1 to Z (both inclusive).

As illustrated in FIGS. 14, 15A, and 15B, when terminal #i labeled 902_i transmits "sector sweep reference signal 1501_xi in terminal #i transmission panel antenna xi", "reference signal 1511_j according to j-th parameter in transmission panel antenna xi" includes, for example, the following information:

· Information of the "transmission panel antenna and parameter" of base station #1 labeled 901_1 with high reception quality, as described above.

Thus, terminal #i labeled 902_i transmits the "information of the "transmission panel antenna and parameter" of base station #1 labeled 901_1 with high reception quality" in "sector sweep reference signal 1501_1 in terminal #i transmission panel antenna 1", "sector sweep reference signal 1501_2 in terminal #i transmission panel antenna 2", ..., "sector sweep reference signal 1501_M in terminal #i transmission panel antenna M" in FIG. 15A.

Note that "reference signal 1511J according to j-th parameter in transmission panel antenna xi" may include other information. Examples of the information will be described in the other embodiments, for example, in Embodiment 6 or later.

In addition, terminal #i labeled 902_i transmits the "information of the "transmission panel antenna and parameter" of base station #1 labeled 901_1 with high reception quality" in "reference signal 1511_1 according to first parameter in transmission panel antenna xi", "reference signal 1511_2 according to second parameter in transmission panel antenna xi", "reference signal 1511_3 according to third parameter in transmission panel antenna xi", and "reference signal 1511_4 according to fourth parameter in transmission panel antenna xi" in FIG. 15B in ""sector sweep reference signal 1501_1 in terminal #i transmission panel antenna 1", "sector sweep reference signal 1501_2 in terminal #i transmission panel antenna 2", ..., "sector sweep reference signal 1501_M in terminal #i transmission panel antenna M" in FIG. 15A".

In this case, base station #1 labeled 901_1 is more likely to receive, even with an omnidirectional antenna for example, any of ""sector sweep reference signal 1501_1 in terminal #i transmission panel antenna 1", "sector sweep reference signal 1501_2 in terminal #i transmission panel antenna 2", ..., "sector sweep reference signal 1501_M in terminal #i transmission panel antenna M" in FIG. 15A" transmitted by terminal #i labeled 902_i. This is because terminal #i labeled 902_i performs transmit beamforming (directivity control). This produces the effect that base station #1 labeled 901_1 is more likely to receive the "information of the "transmission panel antenna and parameter" of base station #1 labeled 901_1 with high reception quality" transmitted by terminal #i labeled 902_i. Accordingly, base station #1 labeled 901_1 can transmit a modulation signal to terminal #i labeled 902_i based on the "information of the "transmission panel antenna and parameter" of base station #1 labeled 901_1 with high reception quality", and terminal #i labeled 902_i can receive the modulation signal with high reception quality.

In a case where a plurality of terminals transmit the sector sweep reference signals as in FIG. 14, base station #1 labeled 901_1 can obtain the "information of the "transmission panel antenna and parameter" of base station #1 labeled 901_1 with high reception quality" from the plurality of terminals. This produces the effect that base station #1 labeled 901_1 can transmit modulation signals to the plurality of terminals based on the "information of the "transmission panel antenna and parameter" of base station #1 labeled 901_1 with high reception quality" from the plurality of terminals, and that the plurality of terminals can receive the modulation signals with high reception quality.

As illustrated in FIGS. 14, 15A, and 15B, when terminal #i labeled 902_i transmits "sector sweep reference signal 1501_xi in terminal #i transmission panel antenna xi", "reference signal 1511_j according to j-th parameter in transmission panel antenna xi" includes, for example, the following information:

· Identification number (ID) of the transmission panel antenna, which corresponds to xi here, for example; and

· Identification number (ID) of the parameter used for beamforming (directivity control), which corresponds to j here, for example.

Transmission of the "identification number (ID) of the transmission panel antenna" and the "identification number (ID) of the parameter used for beamforming (directivity control)" by terminal #i labeled 902_i allows base station #1 labeled 901_1 to recognize the "identification number (ID) of the transmission panel antenna" and the "identification number (ID) of the parameter used for beamforming (directivity control)" that have allowed successful reception; accordingly, terminal #i labeled 902_i and base station #1 labeled 901_1 can perform appropriate control. This produces the effect of enhancing data reception quality.

Note that "reference signal 1511J according to j-th parameter in transmission panel antenna xi" may include other information. Examples of the information will be described in the other embodiments, for example, in Embodiment 6 or later.

Further, as illustrated in FIGS. 14, 15A, and 15B, when terminal #i labeled 902_i transmits "sector sweep reference signal 1501_xi in terminal #i transmission panel antenna xi", "reference signal 1511_j according to j-th parameter in transmission panel antenna xi" includes, for example, the following information:

· "Information on the frequency band and/or frequency $\flat p$" that has been used for transmission by terminal #i labeled 902_i or that terminal #i labeled 902_i desires base station #1 labeled 901_1 to use.

Transmission of the "information on the frequency band and/or frequency $\flat p$" by terminal #i labeled 902_i allows base station #1 labeled 901_1 to recognize the "information on the frequency band and/or frequency $\flat p$"; accordingly, terminal #i labeled 902_i and base station #1 labeled 901_1 can perform appropriate control. This produces the effect of enhancing data reception quality.

In a case where base station #1 labeled 901_1 and terminal #i labeled 902_i perform communication using the same frequency band, however, they can recognize the "information on the frequency band and/or frequency $\flat p$" by detecting modulation signals transmitted from each other without the transmission of the "information on the frequency band and/or frequency $\flat p$".

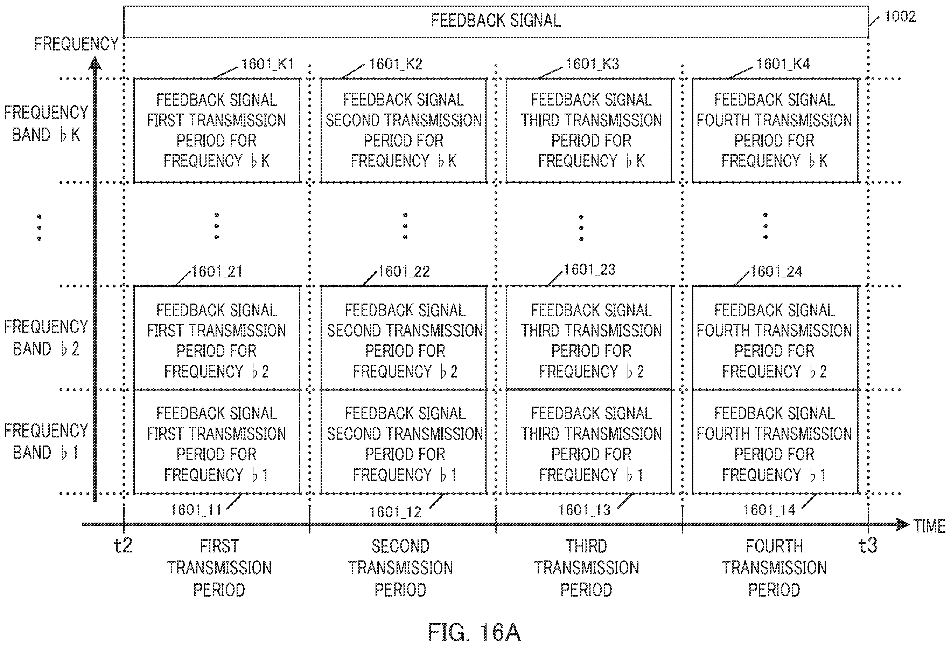

FIG. 16A illustrates an exemplary configuration of feedback signal 1002 that is present in the time period from t2 to t3 in FIG. 10 and transmitted by base station #1 labeled 901_1. Note that the horizontal axis represents time and the vertical axis represents frequency in FIG. 16A. In this example, since "the number of time divisions in which sector sweep reference signals can be transmitted when the terminals transmit the sector sweep reference signals" is four, there are a first transmission period, a second transmission period, a third transmission period, and a fourth transmission period for feedback signal 1002 as illustrated in FIG. 16A. Note that, in a case where "the number of time divisions in which sector sweep reference signals can be transmitted when the terminals transmit the sector sweep reference signals" is S2, for example, S2 transmission periods may be configured to be present for feedback signal 1002, where $\Omega$ is an integer equal to or greater than 1 or an integer equal to or greater than 2.

In addition, there are frequency band $\flat 1$, frequency band $\flat 2$, ..., frequency band $\flat K$ for feedback signal 1002 in FIG. 16A.

Thus, the first transmission period includes feedback signal first transmission period 1601_11 for frequency $\flat 1$, feedback signal first transmission period 1601_21 for frequency $\flat 2$, ..., feedback signal first transmission period 1601_K1 for frequency $\flat K$. Likewise, the second transmission period includes feedback signal second transmission period 1601_12 for frequency $\flat 1$, feedback signal second transmission period 1601_22 for frequency $\flat 2$, ..., feedback signal second transmission period 1601_K2 for frequency $\flat K$. The third transmission period includes feedback signal third transmission period 1601_13 for frequency $\flat 1$, feedback signal third transmission period 1601_23 for frequency $\flat 2$, ..., feedback signal third transmission period 1601_K3 for frequency $\flat K$. The fourth transmission period includes feedback signal fourth transmission period 1601_14 for frequency $\flat 1$, feedback signal fourth transmission period 1601_24 for frequency $\flat 2$, ..., feedback signal fourth transmission period 1601_K4 for frequency $\flat K$.

One feature is that "feedback signals are transmitted from the same transmission panel antenna in the i-th time period regardless of the frequency band in FIG. 16A".

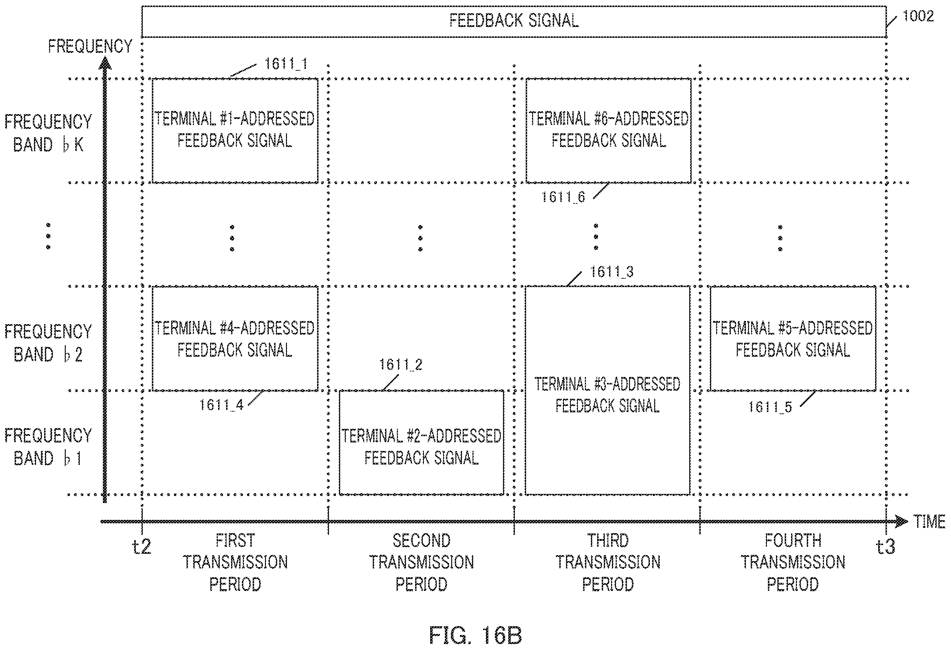

FIG. 16B illustrates exemplary specific feedback signal assignment for feedback signal 1002 illustrated in FIG. 16A.

As in FIG. 14, for example, terminal #1 labeled 902_1 transmits terminal #1 "sector sweep reference signal" 1401_1, terminal #2 labeled 902_2 transmits terminal #2 "sector sweep reference signal" 1401_2, terminal #3 labeled 902_3 transmits terminal #3 "sector sweep reference signal" 1401_3, terminal #4 labeled 902_4 transmits terminal #4 "sector sweep reference signal" 1401_4, terminal #5 labeled 902_5 transmits terminal #5 "sector sweep reference signal" 1401_5, and terminal #6 labeled 902_6 transmits terminal #6 "sector sweep reference signal" 1401_6.

Since terminal #1 "sector sweep reference signal" 1401_1 is present in frequency band $\flat K$ as in FIG. 14, terminal #1-addressed feedback signal (i.e., feedback signal addressed to terminal #1) 1611_1 is present in frequency band $\flat K$ in FIG. 16B.

Since terminal #2 "sector sweep reference signal" 1401_2 is present in frequency band $\flat 1$ as in FIG. 14, terminal #2-addressed feedback signal 1611_2 is present in frequency band $\flat 1$ in FIG. 16B.

Since terminal #3 "sector sweep reference signal" 1401_3 is present in frequency bands $\flat 1$ and $\flat 2$ as in FIG. 14, terminal #3-addressed feedback signal 1611_3 is present in frequency bands $\flat 1$ and $\flat 2$ in FIG. 16B.

Since terminal #4 "sector sweep reference signal" 1401_4 is present in frequency band $\flat 2$ as in FIG. 14, terminal #4-addressed feedback signal 1611_4 is present in frequency band $\flat 2$ in FIG. 16B.

Since terminal #5 "sector sweep reference signal" 1401_5 is present in frequency band $\flat 2$ as in FIG. 14, terminal #5-addressed feedback signal 1611_5 is present in frequency band $\flat 2$ in FIG. 16B.

Since terminal #6 "sector sweep reference signal" 1401_6 is present in frequency band ♭K as in FIG. 14, terminal #6-addressed feedback signal 1611_6 is present in frequency band ♭K in FIG. 16B.

In this manner, obtaining terminal #i-addressed feedback signal 1611_i allows terminal #i labeled 902_i to know that communication with base station #1 labeled 901_1 is available and to know the frequency band to be used. Note that FIG. 16B is merely an example. In a case where there is no terminal #1-addressed feedback signal 1611_1 as feedback signal 1002, for example, terminal #1 labeled 902_1 recognizes that the communication with base station #1 labeled 901_1 has not been established.

At this time, terminal #i-addressed feedback signal 1611_i includes, for example, information indicating that communication with terminal #i labeled 902_i is available (or indicating that data-symbol-included frame 1003 in FIG. 10 includes a symbol addressed to terminal #i labeled 902_i).

Further, base station #1 labeled 901_1 selects a frequency (band) and a transmission panel antenna and sets a parameter of beamforming based on the ""frequency (band) information" and information of the "transmission panel antenna and parameter" of base station #1 labeled 901_1 with high reception quality" transmitted by terminal #i labeled 902_i, and base station #1 labeled 901_1 then transmits terminal #i-addressed feedback signal 1611_i.

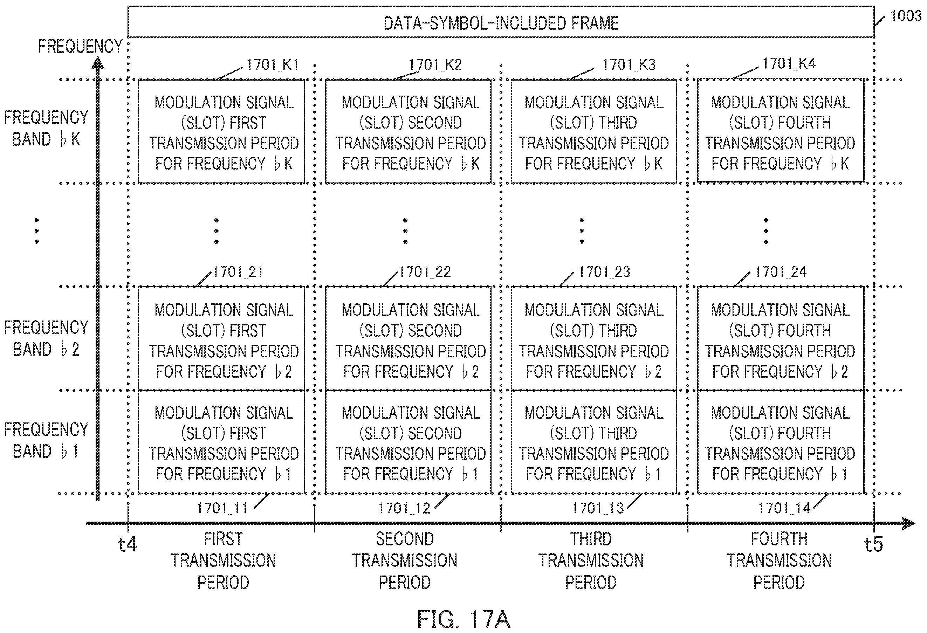

FIG. 17A illustrates an exemplary configuration of data-symbol-included frame 1003 that is present in the time period from t4 to t5 in FIG. 10 and transmitted by base station #1 labeled 901_1. Note that the horizontal axis represents time and the vertical axis represents frequency in FIG. 17A. In this example, since "the number of time divisions in which sector sweep reference signals can be transmitted when the terminals transmit the sector sweep reference signals" is four, there are a first transmission period, a second transmission period, a third transmission period, and a fourth transmission period for data-symbol-included frame 1003 as illustrated in FIG. 17A. Note that, in a case where "the number of time divisions in which sector sweep reference signals can be transmitted when the terminals transmit the sector sweep reference signals" is S2, for example, S2 transmission periods may be configured to be present for data-symbol-included frame 1003, where Ω is an integer equal to or greater than 1 or an integer equal to or greater than 2.

In addition, there are frequency band ♭1, frequency band ♭2, ..., frequency band ♭K for data-symbol-included frame 1003 in FIG. 17A.

Thus, the first transmission period includes modulation signal (slot) first transmission period 1701_11 for frequency ♭1, modulation signal (slot) first transmission period 1701_21 for frequency ♭2, ..., modulation signal (slot) first transmission period 1701_K1 for frequency ♭K. Likewise, the second transmission period includes modulation signal (slot) second transmission period 1701_12 for frequency ♭1, modulation signal (slot) second transmission period 1701_22 for frequency ♭2, ..., modulation signal (slot) second transmission period 1701_K2 for frequency ♭K. The third transmission period includes modulation signal (slot) third transmission period 1701_13 for frequency ♭1, modulation signal (slot) third transmission period 1701_23 for frequency ♭2, ..., modulation signal (slot) third transmission period 1701_K3 for frequency ♭K. The fourth transmission period includes modulation signal (slot) fourth transmission period 1701_14 for frequency ♭1, modulation signal (slot) fourth transmission period 1701_24 for frequency ♭2, ..., modulation signal (slot) fourth transmission period 1701_K4 for frequency ♭K.

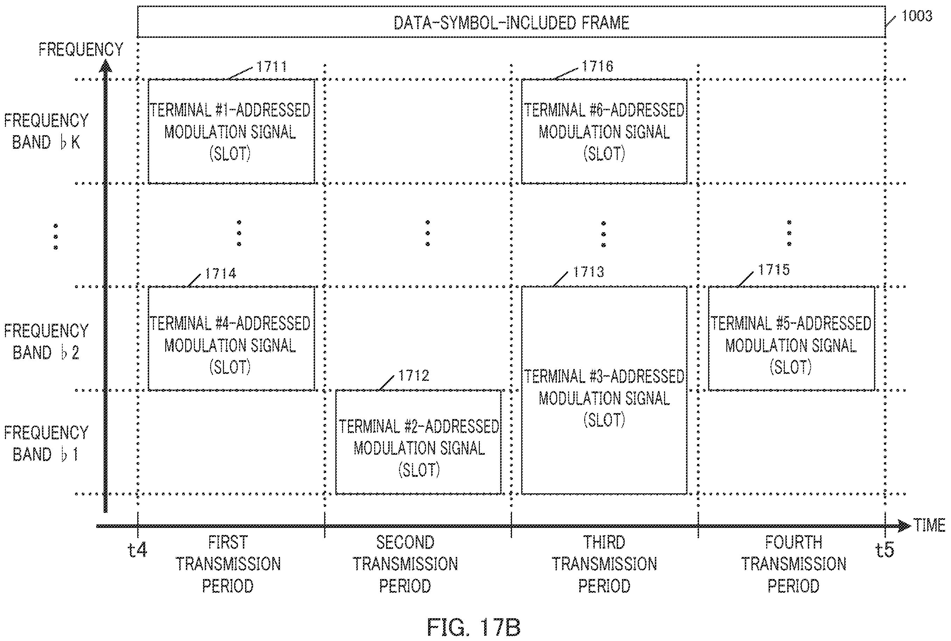

FIG. 17B illustrates exemplary specific modulation signal (slot) assignment for data-symbol-included frame 1003 illustrated in FIG. 17A.

As in FIG. 14, for example, terminal #1 labeled 902_1 transmits terminal #1 "sector sweep reference signal" 1401_1, terminal #2 labeled 902_2 transmits terminal #2 "sector sweep reference signal" 1401_2, terminal #3 labeled 902_3 transmits terminal #3 "sector sweep reference signal" 1401_3, terminal #4 labeled 902_4 transmits terminal #4 "sector sweep reference signal" 1401_4, terminal #5 labeled 902_5 transmits terminal #5 "sector sweep reference signal" 1401_5, and terminal #6 labeled 902_6 transmits terminal #6 "sector sweep reference signal" 1401_6.

Since terminal #1 "sector sweep reference signal" 1401_1 is present in frequency band ♭K as in FIG. 14, terminal #1-addressed modulation signal (slot) (i.e., modulation signal (slot) addressed to terminal #1) 1711 is present in frequency band ♭K in FIG. 17B.

Since terminal #2 "sector sweep reference signal" 1401_2 is present in frequency band ♭1 as in FIG. 14, terminal #2-addressed modulation signal (slot) 1712 is present in frequency band ♭1 in FIG. 17B.

Since terminal #3 "sector sweep reference signal" 1401_3 is present in frequency bands ♭1 and ♭2 as in FIG. 14, terminal #3-addressed modulation signal (slot) 1713 is present in frequency bands ♭1 and ♭2 in FIG. 17B.

Since terminal #4 "sector sweep reference signal" 1401_4 is present in frequency band ♭2 as in FIG. 14, terminal #4-addressed modulation signal (slot) 1714 is present in frequency band ♭2 in FIG. 17B.

Since terminal #5 "sector sweep reference signal" 1401_5 is present in frequency band ♭2 as in FIG. 14, terminal #5-addressed modulation signal (slot) 1715 is present in frequency band ♭2 in FIG. 17B.

Since terminal #6 "sector sweep reference signal" 1401_6 is present in frequency band ♭K as in FIG. 14, terminal #6-addressed modulation signal (slot) 1716 is present in frequency band ♭K in FIG. 17B.

At this time, terminal #i-addressed modulation signal (slot) 171i includes, for example, a data symbol (data and/or information) addressed to terminal #i labeled 902_i.

In this manner, terminal #i-addressed modulation signal (slot) 171i allows terminal #i labeled 902_i to know that communication with base station #1 labeled 901_1 is available and to know the frequency band to be used. Note that FIG. 17B is merely an example. In a case where there is no terminal #1-addressed modulation signal (slot) 1711 as data-symbol-included frame 1003, for example, terminal #1 labeled 902_1 recognizes that the communication with base station #1 labeled 901_1 has not been established.

Further, base station #1 labeled 901_1 selects a frequency (band) and a transmission panel antenna and sets a parameter of beamforming based on the ""frequency (band) information" and information of the "transmission panel antenna and parameter" of base station #1 labeled 901_1 with high reception quality" transmitted by terminal #i labeled 902_i, and base station #1 labeled 901_1 then transmits terminal #i-addressed modulation signal (slot) 171i.

Note that, in FIGS. 16A and 16B, base station #1 labeled 901_1 may estimate the "frequency (band)" and the "transmission panel antenna and parameter" of terminal #i labeled 902_1 with high reception quality in receiving "terminal #i "sector sweep reference signal" 1401_i transmitted by terminal #i labeled 902_i", and the estimated information may be included in terminal #i-addressed feedback signal 1611_i.

Terminal #i labeled 902_i selects a frequency (band) and a transmission panel antenna and determines a beamforming method based on the information of "frequency (band)" and "transmission panel antenna and parameter" of terminal #i labeled 902_i with high reception quality obtained from base station #1 labeled 901_1, and terminal #i labeled 902_i then transmits a symbol, a frame, and/or a modulation signal to base station #1 labeled 901_1. This produces the effect of enhancing data reception quality in base station #1 labeled 901_1.

Incidentally, in the time period from t3 to t4 in FIG. 10, terminal #i labeled 902_i may transmit, to base station #1 labeled 901_1, a modulation signal including information indicating successful reception of a signal from base station #1 labeled 901_1, such as acknowledgement (ACK).

Note that, terminal #i-addressed modulation signal (slot) 171i in FIG. 17B may include, in addition to the data symbol, a "reference signal such as a demodulation reference signal (DMRS), phase tracking reference signal (PTRS), or sounding reference signal (SRS)", a pilot symbol, a pilot signal, a preamble, and a symbol including control information, for example. Examples of the symbol including the control information may include information of a destination terminal (ID for identifying the terminal), a transmission method of the modulation signal, information of the modulation scheme, information of the error correction coding scheme (code length, code rate, etc.), information of the modulation and coding scheme (MCS), and the like.

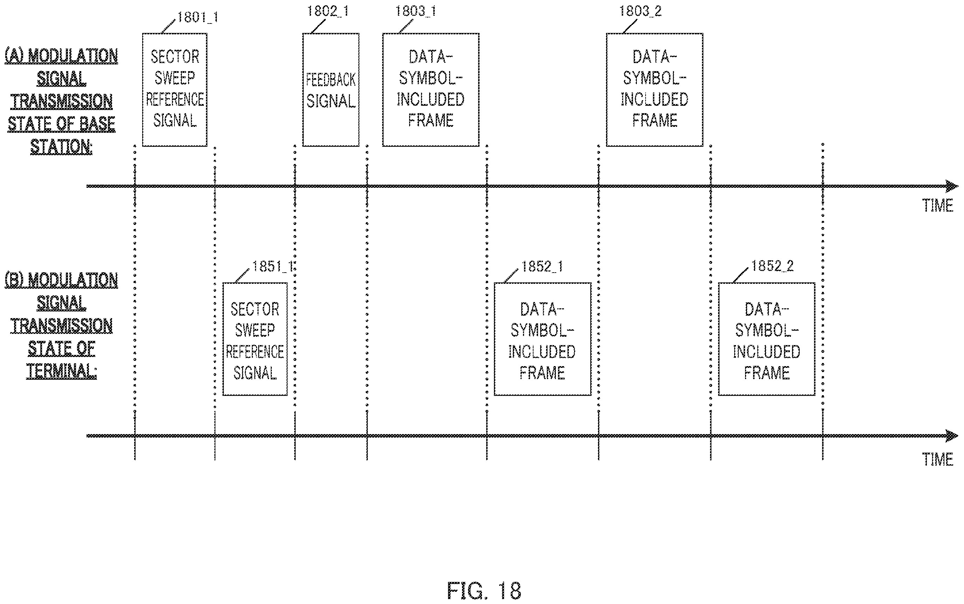

FIG. 18 illustrates an exemplary state where base station #1 labeled 901_1 and "terminal #1 labeled 902_1, terminal #2 labeled 902_2, terminal #3 labeled 902_3, terminal #4 labeled 902_4, terminal #5 labeled 902_5, and terminal #6 labeled 902_6" communicate with each other as illustrated in FIG. 9. (A) of FIG. 18 illustrates an exemplary modulation signal transmission state of base station #1 labeled 901_1, and (B) of FIG. 18 illustrates an exemplary modulation signal transmission state of "terminal #1 labeled 902_1, terminal #2 labeled 902_2, terminal #3 labeled 902_3, terminal #4 labeled 902_4, terminal #5 labeled 902_5, and terminal #6 labeled 902_6". Note that the horizontal axes represent time in (A) and (B) of FIG. 18.

First, base station #1 labeled 901_1 transmits sector sweep reference signal 1801_1. Note that this has already been described with reference to FIG. 10, and the description thereof will be thus omitted.

Then, a terminal such as "terminal #1 labeled 902_1, terminal #2 labeled 902_2, terminal #3 labeled 902_3, terminal #4 labeled 902_4, terminal #5 labeled 902_5, and terminal #6 labeled 902_6" transmits sector sweep reference signal 1851_1. Note that this has already been described with reference to, for example, FIGS. 13, 14, 15A, 15B, etc., and the description thereof will be thus omitted.

Base station #1 labeled 901_1 transmits feedback signal 1802_1. Note that this has already been described with reference to FIGS. 16A and 16B, and the description thereof will be thus omitted.

After that, base station #1 labeled 901_1 transmits "data-symbol-included frame 1803_1". Note that this has already been described with reference to FIGS. 17A and 17B, and the description thereof will be thus omitted. (Hence, "data-symbol-included frame 1803_1" is considered to be a frame for downlink, for example).

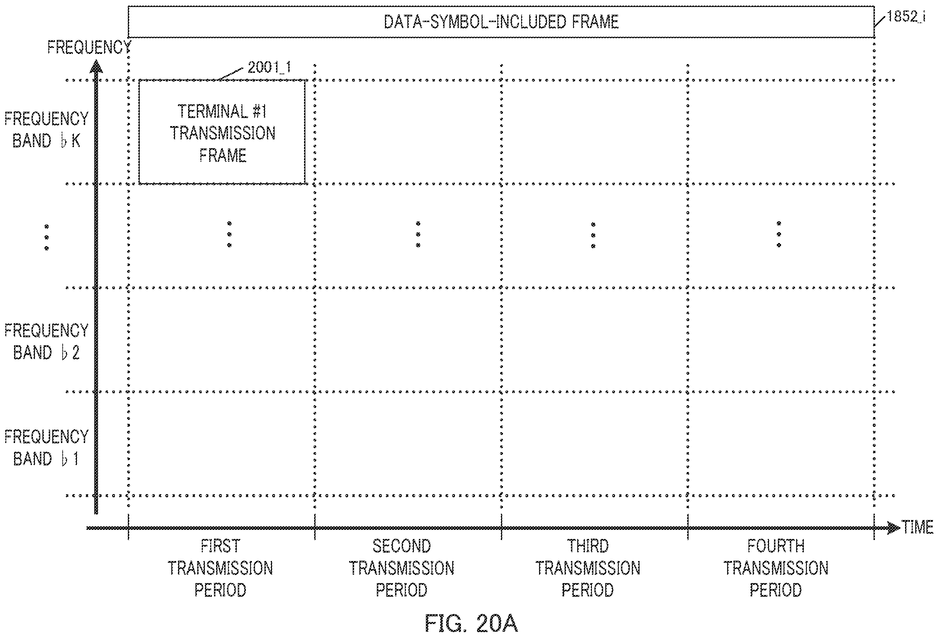

Then, the terminal such as "terminal #1 labeled 902_1, terminal #2 labeled 902_2, terminal #3 labeled 902_3, terminal #4 labeled 902_4, terminal #5 labeled 902_5, and terminal #6 labeled 902_6" transmits "data-symbol-included frame 1852_1". Note that a configuration of the frame will be described later with reference to FIGS. 20A to 20F. (Hence, "data-symbol-included frame 1852_1" is considered to be a frame for uplink, for example).

Next, base station #1 labeled 901_1 transmits "data-symbol-included frame 1803_2". Note that a configuration method of "data-symbol-included frame 1803_2" is as described with reference to FIGS. 17A and 17B.

Then, the terminal such as "terminal #1 labeled 902_1, terminal #2 labeled 902_2, terminal #3 labeled 902_3, terminal #4 labeled 902_4, terminal #5 labeled 902_5, and terminal #6 labeled 902_6" transmits "data-symbol-included frame 1852_2". Note that a configuration of the frame will be described later with reference to FIGS. 20A to 20F.

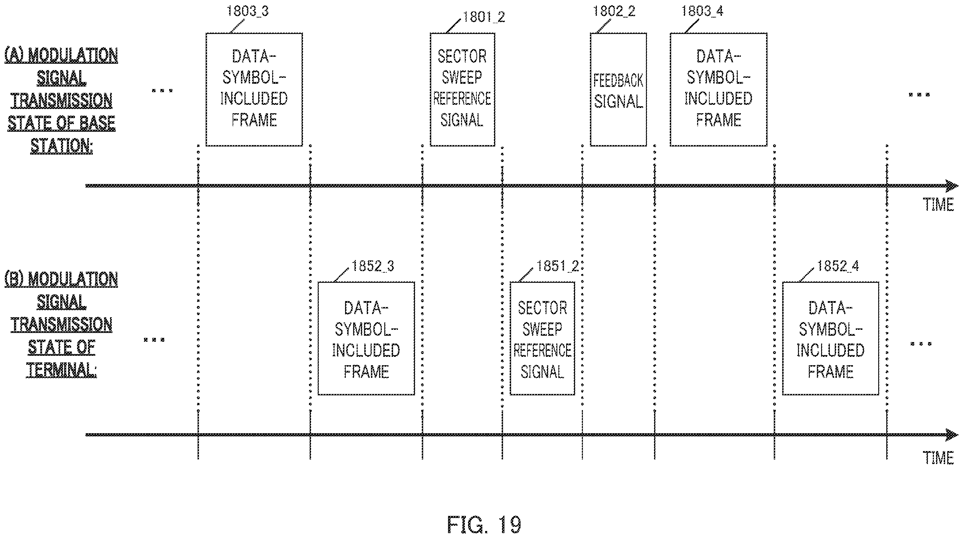

FIG. 19 illustrates an exemplary modulation signal transmission state of base station #1 labeled 901_1 and an exemplary modulation signal transmission state of the terminal such as "terminal #1 labeled 902_1, terminal #2 labeled 902_2, terminal #3 labeled 902_3, terminal #4 labeled 902_4, terminal #5 labeled 902_5, and terminal #6 labeled 902_6" after the state in FIG. 18.

(A) of FIG. 19 illustrates an exemplary modulation signal transmission state of base station #1 labeled 901_1, and it is a temporal continuation from the modulation signal transmission state of base station #1 labeled 901_1 in (A) of FIG. 18.

(B) of FIG. 19 illustrates an exemplary modulation signal transmission state of the terminal such as "terminal #1 labeled 902_1, terminal #2 labeled 902_2, terminal #3 labeled 902_3, terminal #4 labeled 902_4, terminal #5 labeled 902_5, and terminal #6 labeled 902_6", and it is a temporal continuation from the modulation signal transmission state of the terminal such as "terminal #1 labeled 902_1, terminal #2 labeled 902_2, terminal #3 labeled 902_3, terminal #4 labeled 902_4, terminal #5 labeled 902_5, and terminal #6 labeled 902_6" in (B) of FIG. 18.

Note that the horizontal axes represent time in (A) and (B) of FIG. 19.

After the states in (A) and (B) of FIG. 18, base station #1 labeled 901_1 transmits "data-symbol-included frame 1803_3". Note that a configuration method of "data-symbol-included frame 1803_3" is as described with reference to FIGS. 17A and 17B.

The terminal such as "terminal #1 labeled 902_1, terminal #2 labeled 902_2, terminal #3 labeled 902_3, terminal #4 labeled 902_4, terminal #5 labeled 902_5, and terminal #6 labeled 902_6" transmits "data-symbol-included frame 1852_3". Note that a configuration of the frame will be described later with reference to FIGS. 20A to 20F.

Next, base station #1 labeled 901_1 transmits sector sweep reference signal 1801_2. Note that this has already been described with reference to FIG. 10, and the description thereof will be thus omitted.

Then, the terminal such as "terminal #1 labeled 902_1, terminal #2 labeled 902_2, terminal #3 labeled 902_3, terminal #4 labeled 902_4, terminal #5 labeled 902_5, and terminal #6 labeled 902_6" transmits sector sweep reference signal 1851_2. Note that this has already been described with reference to, for example, FIGS. 13, 14, 15A, 15B, etc., and the description thereof will be thus omitted.

Base station #1 labeled 901_1 transmits feedback signal 1802_2. Note that this has already been described with reference to FIGS. 16A and 16B, and the description thereof will be thus omitted.

After that, base station #1 labeled 901_1 transmits "data-symbol-included frame 1803_4". Note that this has already been described with reference to FIGS. 17A and 17B, and the description thereof will be thus omitted.

Then, the terminal such as "terminal #1 labeled 902_1, terminal #2 labeled 902_2, terminal #3 labeled 902_3, terminal #4 labeled 902_4, terminal #5 labeled 902_5, and terminal #6 labeled 902_6" transmits "data-symbol-included frame 1852_4". Note that a configuration of the frame will be described later with reference to FIGS. 20A to 20F.

As described above, base station #1 labeled 901_1 and the terminal transmit the sector sweep reference signals before the "transmission of the "data-symbol-included frames" by base station #1 labeled 901_1 and/or the transmission of the "data-symbol-included frames" by the terminal such as "terminal #1 labeled 902_1, terminal #2 labeled 902_2, terminal #3 labeled 902_3, terminal #4 labeled 902_4, terminal #5 labeled 902_5, and terminal #6 labeled 902_6″″", and again transmit the sector sweep reference signals after the "transmission of the "data-symbol-included frames" by base station #1 labeled 901_1 and/or the transmission of the "data-symbol-included frames" by the terminal such as "terminal #1 labeled 902_1, terminal #2 labeled 902_2, terminal #3 labeled 902_3, terminal #4 labeled 902_4, terminal #5 labeled 902_5, and terminal #6 labeled 902_6″″" Base station #1 labeled 901_1 and the terminal then each configure a frequency (band), select a transmission panel antenna to be used, and configure transmit beamforming. This produces the effect that the base station and/or the terminal achieve high data reception quality.

Next, a description will be given of an exemplary configuration of "data-symbol-included frame 1852_i" transmitted by the terminal such as "terminal #1 labeled 902_1, terminal #2 labeled 902_2, terminal #3 labeled 902_3, terminal #4 labeled 902_4, terminal #5 labeled 902_5, and terminal #6 labeled 902_6" with reference to FIGS. 20A to 20F. Note that i is an integer equal to or greater than 1, for example, and the horizontal axis represents time in FIGS. 20A to 20F.

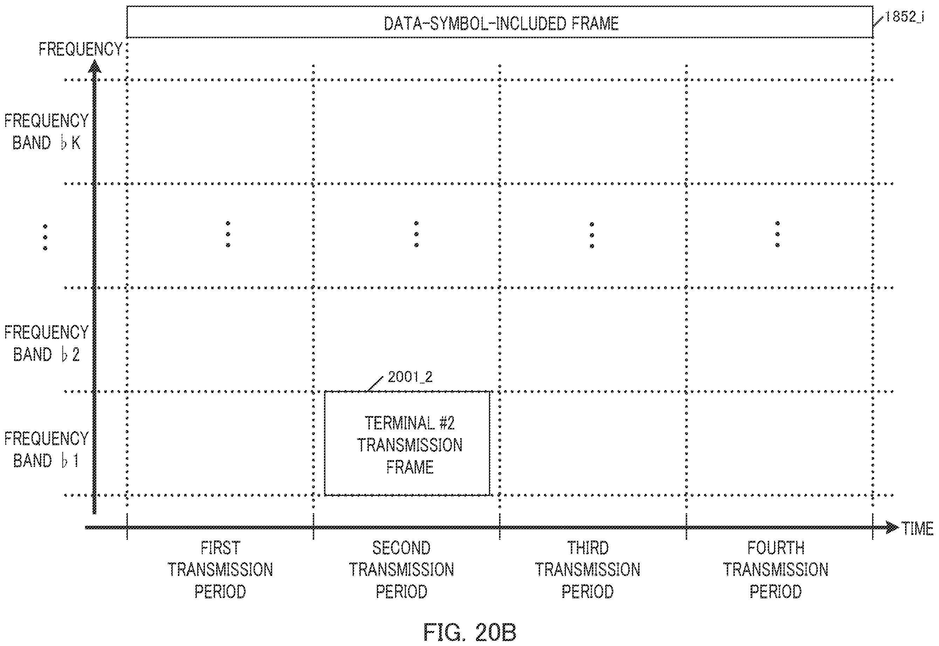

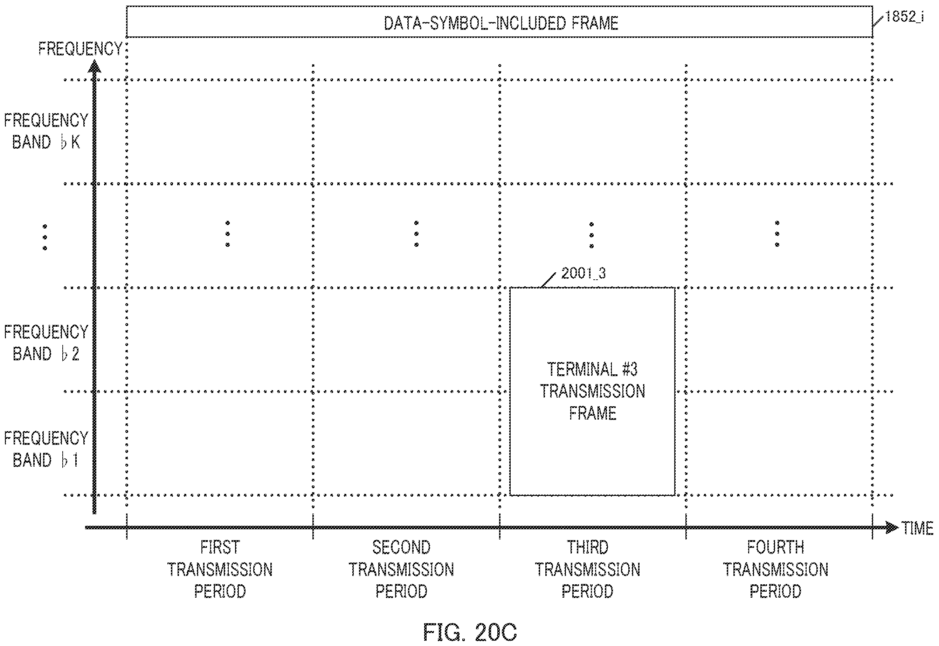

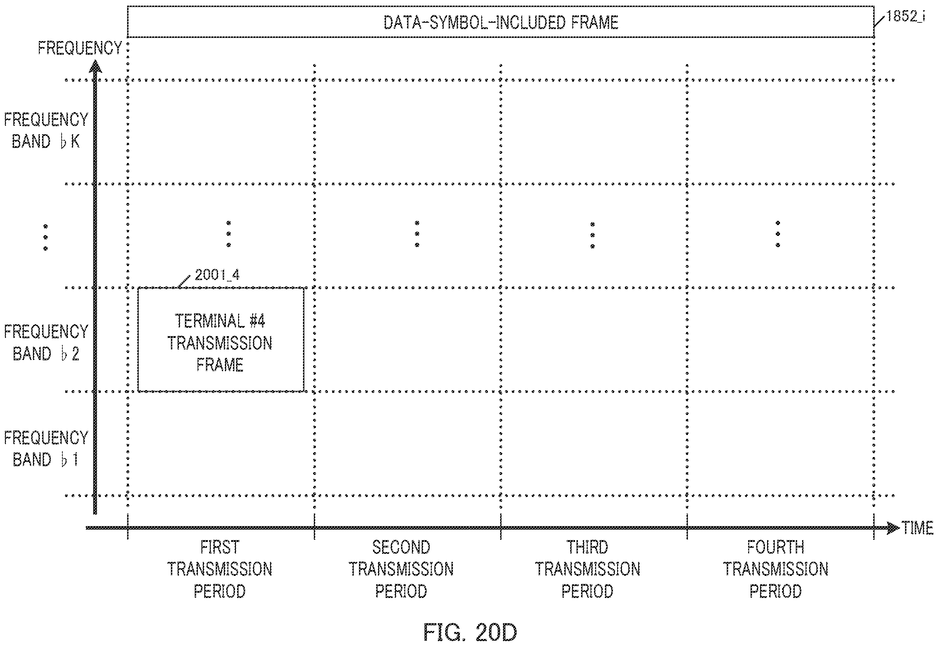

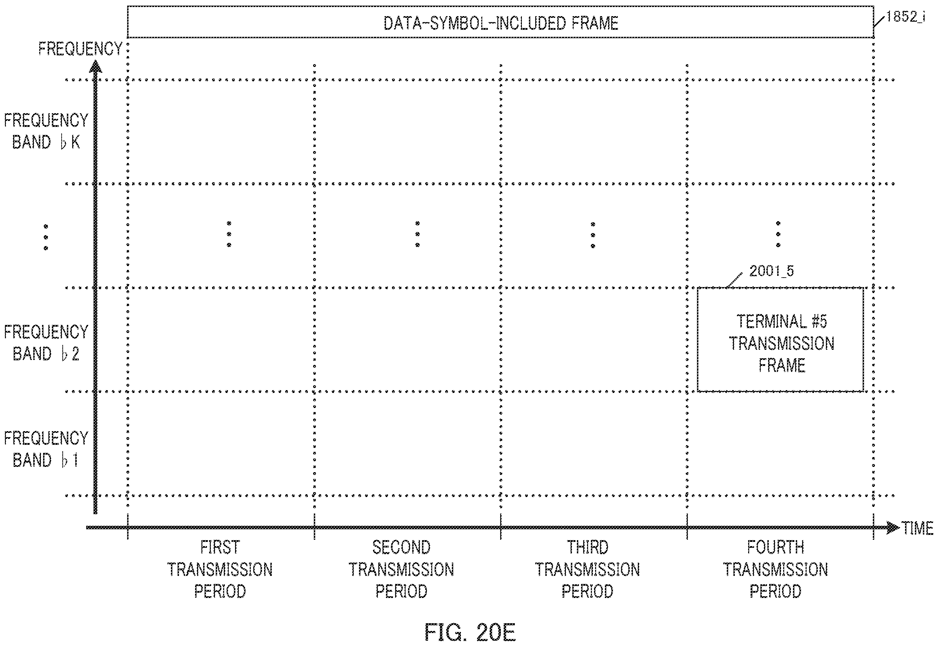

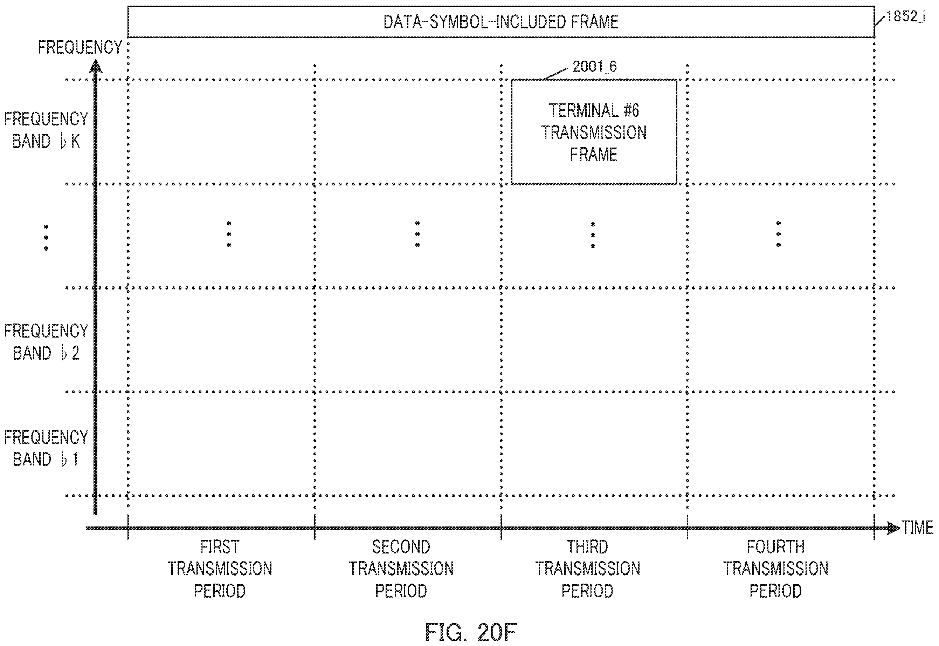

As illustrated in FIGS. 20A, 20B, 20C, 20D, 20E, and 20F, "data-symbol-included frame 1852_i" is composed of a first transmission period, a second transmission period, a third transmission period, and a fourth transmission period. In addition, there are frequency band ♭1, frequency band ♭2, ..., frequency band ♭K for "data-symbol-included frame 1852_i".

As illustrated in FIG. 20A, terminal #1 labeled 902_1 transmits terminal #1 transmission frame (including a data symbol) 2001_1 using frequency band ♭K and the first transmission period, for example.

"Terminal #1 labeled 902_1 transmits terminal #1 transmission frame (including a data symbol) 2001_1 using frequency band ♭K" because "base station #1 labeled 901_1 transmits a modulation signal (slot) addressed to terminal #1 labeled 902_1 using frequency band ♭K" as illustrated in FIG. 17B.

As illustrated in FIG. 20B, terminal #2 labeled 902_2 transmits terminal #2 transmission frame (including a data symbol) 2001_2 using frequency band $b1$ and the second transmission period, for example.

"Terminal #2 labeled 902_2 transmits terminal #2 transmission frame (including a data symbol) 2001_2 using frequency band $b1$" because "base station #1 labeled 901_1 transmits a modulation signal (slot) addressed to terminal #2 labeled 902_2 using frequency band $b1$" as illustrated in FIG. 17B.

As illustrated in FIG. 20C, terminal #3 labeled 902_3 transmits terminal #3 transmission frame (including a data symbol) 2001_3 using frequency bands $b1$ and $b2$ and the third transmission period, for example.

"Terminal #3 labeled 902_3 transmits terminal #3 transmission frame (including a data symbol) 2001_3 using frequency bands $b1$ and $b2$" because "base station #1 labeled 901_1 transmits a modulation signal (slot) addressed to terminal #3 labeled 902_3 using frequency bands $b1$ and $b2$" as illustrated in FIG. 17B.

As illustrated in FIG. 20D, terminal #4 labeled 902_4 transmits terminal #4 transmission frame (including a data symbol) 2001_4 using frequency band $b2$ and the first transmission period, for example.

"Terminal #4 labeled 902_4 transmits terminal #4 transmission frame (including a data symbol) 2001_4 using frequency band $b2$" because "base station #1 labeled 901_1 transmits a modulation signal (slot) addressed to terminal #4 labeled 902_4 using frequency band $b2$" as illustrated in FIG. 17B.

As illustrated in FIG. 20E, terminal #5 labeled 902_5 transmits terminal #5 transmission frame (including a data symbol) 2001_5 using frequency band $b2$ and the fourth transmission period, for example.

"Terminal #5 labeled 902_5 transmits terminal #5 transmission frame (including a data symbol) 2001_5 using frequency band $b2$" because "base station #1 labeled 901_1 transmits a modulation signal (slot) addressed to terminal #5 labeled 902_5 using frequency band $b2$" as illustrated in FIG. 17B.

As illustrated in FIG. 20F, terminal #6 labeled 902_6 transmits terminal #6 transmission frame (including a data symbol) 2001_6 using frequency band $bK$ and the third transmission period, for example.

"Terminal #6 labeled 902_6 transmits terminal #6 transmission frame (including a data symbol) 2001_6 using frequency band $bK$" because "base station #1 labeled 901_1 transmits a modulation signal (slot) addressed to terminal #6 labeled 902_6 using frequency band $bK$" as illustrated in FIG. 17B.

As described above, "data-symbol-included frame 1852_i" transmitted by the terminal such as "terminal #1 labeled 902_1, terminal #2 labeled 902_2, terminal #3 labeled 902_3, terminal #4 labeled 902_4, terminal #5 labeled 902_5, and terminal #6 labeled 902_6" is subjected to, for example, OFDMA and/or time division and transmitted by each terminal, and base station #1 labeled 901_1 receives the frame transmitted by the terminal, thereby preventing interference and achieving high data reception quality.

Note that terminal #1 transmission frame 2001_1, terminal #2 transmission frame 2001_2, terminal #3 transmission frame 2001_3, terminal #4 transmission frame 2001_4, terminal #5 transmission frame 2001_5, and terminal #6 transmission frame 2001_6 in FIGS. 20A, 20B, 20C, 20D, 20E, and 20F may include, in addition to the data symbol, a "reference signal such as DMRS, PTRS, or SRS", a pilot symbol, a pilot signal, a preamble, and a symbol including control information, for example.

In FIGS. 20A, 20B, 20C, 20D, 20E, and 20F, a description has been given of a case where the terminals perform OFDMA and/or time division on the frames to be transmitted, but the terminals may perform spatial division on the frames to be transmitted using multi user-multiple-input multiple-output (MU-MIMO).

FIG. 14 illustrates exemplary occupation by terminals in "terminal "sector sweep reference signal" first transmission period 1301_1, terminal "sector sweep reference signal" second transmission period 1301_2, terminal "sector sweep reference signal" third transmission period 1301_3, and terminal "sector sweep reference signal" fourth transmission period 1301_4" illustrated in FIG. 13.

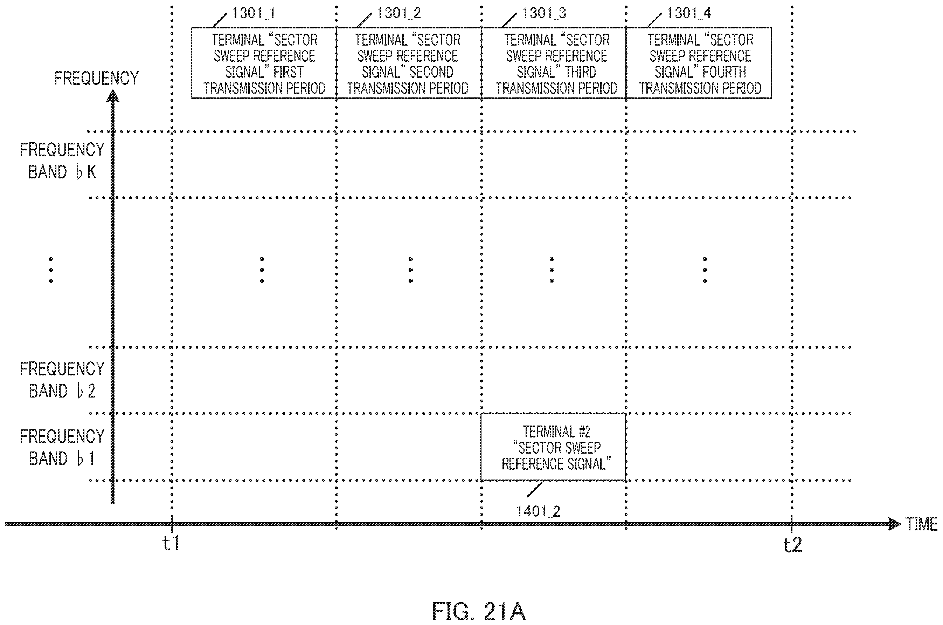

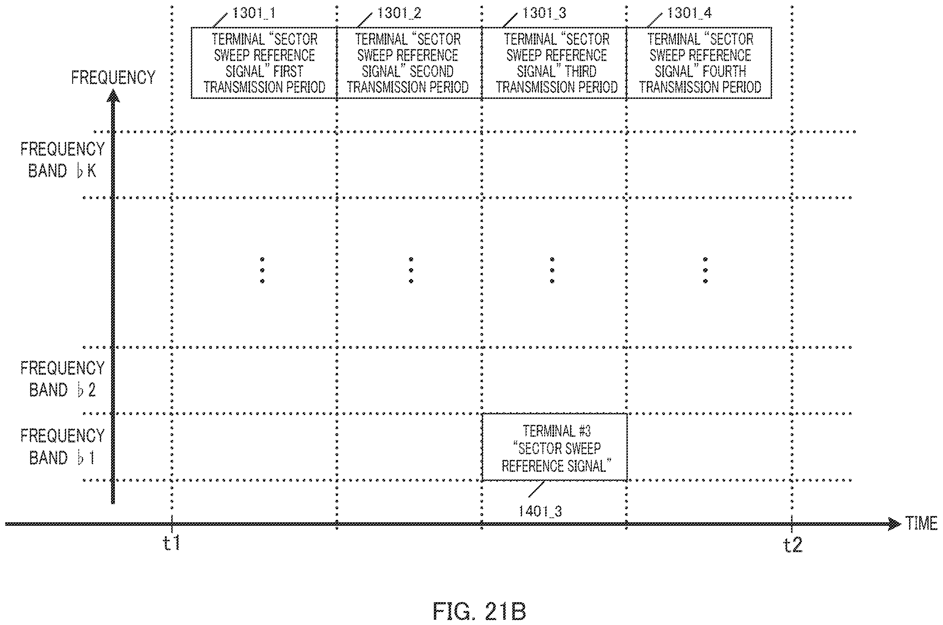

In FIGS. 21A and 21B, a description will be given of exemplary occupation by terminals different from that in FIG. 14 in "terminal "sector sweep reference signal" first transmission period 1301_1, terminal "sector sweep reference signal" second transmission period 1301_2, terminal "sector sweep reference signal" third transmission period 1301_3, and terminal "sector sweep reference signal" fourth transmission period 1301_4" illustrated in FIG. 13.

In FIGS. 21A and 21B, the components that operate in the same manner as in FIGS. 13 and 14 are denoted by the same reference signs, and the descriptions thereof will be omitted since they have already been described. In the following, the difference from the description in FIG. 14 will be described.

Terminal #2 labeled 902_2 in FIG. 9 receives sector sweep reference signal 1001 transmitted by base station #1 labeled 901_1, obtains the "frequency (band)", "identification number (ID) of the transmission panel antenna", and "identification number (ID) of the parameter used for beamforming (directivity control)" with high reception quality, and then can communicate with base station #1 labeled 901_1.

Terminal #2 labeled 902_2, for example, estimates frequency band $b1$ as the "frequency (band)" with high reception quality and estimates "transmission panel antenna a2 and parameter b2" as the "transmission panel antenna and parameter".

In addition, while estimating the "transmission panel antenna and parameter" with high reception quality, terminal #2 labeled 902_2 simultaneously obtains information of the "the number of time divisions in which sector sweep reference signals can be transmitted when the terminals transmit the sector sweep reference signals". In the case of FIG. 21A, terminal #2 labeled 902_2 obtains information indicating that "the number of time divisions in which sector sweep reference signals can be transmitted when the terminals transmit the sector sweep reference signals" is four.

In this case, terminal #2 labeled 902_2 obtains, for example, any one of the values "0", "1", "2", and "3" using a random number. For example, terminal #2 labeled 902_2 obtains "2" using a random number. In this case, since "2" + 1 = 3, terminal #2 labeled 902_2 transmits terminal #2 "sector sweep reference signal" 1401_2 using frequency band $b1$ and "terminal "sector sweep reference signal" third transmission period 1301_3" as in FIG. 21A.

Note that terminal #2 "sector sweep reference signal" 1401_2 includes information of the "transmission panel antenna and parameter" with high reception quality obtained by terminal #2 labeled 902_2, that is, information of "transmission panel antenna a2 and parameter b2".

Terminal #3 labeled 902_3 in FIG. 9 receives sector sweep reference signal 1001 transmitted by base station #1 labeled 901_1, obtains the "frequency (band)", "identification number (ID) of the transmission panel antenna", and "identification number (ID) of the parameter used for beamforming (directivity control)" with high reception quality, and then can communicate with base station #1 labeled 901_1.

Terminal #3 labeled 902_3, for example, estimates frequency band $b1$ as the "frequency (band)" with high reception quality and estimates "transmission panel antenna a3 and parameter b3" as the "transmission panel antenna and parameter".

In addition, while estimating the "transmission panel antenna and parameter" with high reception quality, terminal #3 labeled 902_3 simultaneously obtains information of the "the number of time divisions in which sector sweep reference signals can be transmitted when the terminals transmit the sector sweep reference signals". In the case of FIG. 21B, terminal #3 labeled 902_3 obtains information indicating that "the number of time divisions in which sector sweep reference signals can be transmitted when the terminals transmit the sector sweep reference signals" is four.

In this case, terminal #3 labeled 902_3 obtains, for example, any one of the values "0", "1", "2", and "3" using a random number. For example, terminal #3 labeled 902_3 obtains "2" using a random number. In this case, since "2" + 1 = 3, terminal #3 labeled 902_3 transmits terminal #3 "sector sweep reference signal" 1401_3 using frequency band $b1$ and "terminal "sector sweep reference signal" third transmission period 1301_3" as in FIG. 21B.

Note that terminal #3 "sector sweep reference signal" 1401_3 includes information of the "transmission panel antenna and parameter" with high reception quality obtained by terminal #3 labeled 902_3, that is, information of "transmission panel antenna a3 and parameter b3".

At this time, as illustrated in FIGS. 21A and 21B, the time period for "terminal #2 "sector sweep reference signal" 1401_2 transmitted by terminal #2 labeled 902_2" and the time period for "terminal #3 "sector sweep reference signal" 1401_3 transmitted by terminal #3 labeled 902_3" overlap each other.

Thus, base station #1 labeled 901_1 possibly simultaneously receives terminal #2 "sector sweep reference signal" 1401_2 and terminal #3 "sector sweep reference signal" 1401_3.

In this case, the following is two possible cases.

<Case 1>

Both "terminal #2 "sector sweep reference signal" 1401_2 transmitted by terminal #2 labeled 902_2" and "terminal #3 "sector sweep reference signal" 1401_3 transmitted by terminal #3 labeled 902_3" have the configuration in FIGS. 15A and 15B.

Here, the ""transmission panel antenna and parameter for beamforming of terminal #2 labeled 902_2" with high reception quality in receiving terminal #2 "sector sweep reference signal" 1401_2 transmitted by terminal #2 labeled 902_2" by base station #1 labeled 901_1 are different from the ""transmission panel antenna and parameter for beamforming of terminal #3 labeled 902_3" with high reception quality in receiving terminal #3 "sector sweep reference signal" 1401_3 transmitted by terminal #3 labeled 902_3" by base station #1 labeled 901_1. Accordingly, base station #1 labeled 901_1 obtains information included in "terminal #2 "sector sweep reference signal" 1401_2 transmitted by terminal #2 labeled 902_2" and information included in "terminal #3 "sector sweep reference signal" 1401_3 transmitted by terminal #3 labeled 902_3".

In this case, in FIG. 16A for example, "feedback signal second transmission period 1601_12 for frequency $b1$ is for a signal addressed to terminal #2 labeled 902_2" and "feedback signal third transmission period 1601_13 for frequency $b1$ is for a signal addressed to terminal #3 labeled 902_3".

In addition, in FIG. 17A for example, "modulation signal (slot) second transmission period 1701_12 for frequency $b1$ is for a signal addressed to terminal #2 labeled 902_2" and "modulation signal (slot) third transmission period 1701_13 for frequency $b1$ is for a signal addressed to terminal #3 labeled 902_3".

In this manner, base station #1 labeled 901_1 can communicate with terminal #2 labeled 902_2 and terminal #3 labeled 902_3.

<Case 2>

Both "terminal #2 "sector sweep reference signal" 1401_2 transmitted by terminal #2 labeled 902_2" and "terminal #3 "sector sweep reference signal" 1401_3 transmitted by terminal #3 labeled 902_3" have the configuration in FIGS. 15A and 15B.

Here, the ""transmission panel antenna and parameter for beamforming of terminal #2 labeled 902_2" with high reception quality in receiving terminal #2 "sector sweep reference signal" 1401_2 transmitted by terminal #2 labeled 902_2" by base station #1 labeled 901_1 interfere with the ""transmission panel antenna and parameter for beamforming of terminal #3 labeled 902_3" with high reception quality in receiving terminal #3 "sector sweep reference signal" 1401_3 transmitted by terminal #3 labeled 902_3" by base station #1 labeled 901_1.

<Case 2-1>

In some cases, base station #1 labeled 901_1 obtains either information included in "terminal #2 "sector sweep reference signal" 1401_2 transmitted by terminal #2 labeled 902_2" or information included in "terminal #3 "sector sweep reference signal" 1401_3 transmitted by terminal #3 labeled 902_3".

For example, base station #1 labeled 901_1 obtains the information included in "terminal #2 "sector sweep reference signal" 1401_2 transmitted by terminal #2 labeled 902_2".

In this case, in FIG. 16A for example, "feedback signal second transmission period 1601_12 for frequency $_b1$ is for a signal addressed to terminal #2 labeled 902_2".

In addition, in FIG. 17A for example, "modulation signal (slot) second transmission period 1701_12 for frequency $_b1$ is for a signal addressed to terminal #2 labeled 902_2".

In this manner, base station #1 labeled 901_1 can communicate with (terminal #1 labeled 902_1 and) terminal #2 labeled 902_2.

An operation of terminal #3 labeled 902_3 will be described.

It is assumed that sector sweep reference signal 1851_1 in FIG. 18 has the states in FIGS. 21A and 21B. That is, data-symbol-included frames 1803_1, 1803_2, and 1803_3 in FIG. 18 have no frame (slot) addressed to terminal #3 labeled 902_3.

In this case, terminal #3 labeled 902_3 in FIG. 9 receives sector sweep reference signal 1801_2 in FIG. 19 transmitted by base station #1 labeled 901_1, obtains the "frequency (band)", "identification number (ID) of the transmission panel antenna", and "identification number (ID) of the parameter used for beamforming (directivity control)" with high reception quality, and then can communicate with base station #1 labeled 901_1.

Terminal #3 labeled 902_3, for example, estimates frequency band $_b1$ as the "frequency (band)" with high reception quality and estimates "transmission panel antenna a3 and parameter b3" as the "transmission panel antenna and parameter".

In addition, while performing such estimation, terminal #3 labeled 902_3 simultaneously obtains information of the "the number of time divisions in which sector sweep reference signals can be transmitted when the terminals transmit the sector sweep reference signals". Terminal #3 labeled 902_3 obtains information indicating that "the number of time divisions in which sector sweep reference signals can be transmitted when the terminals transmit the sector sweep reference signals" is four.

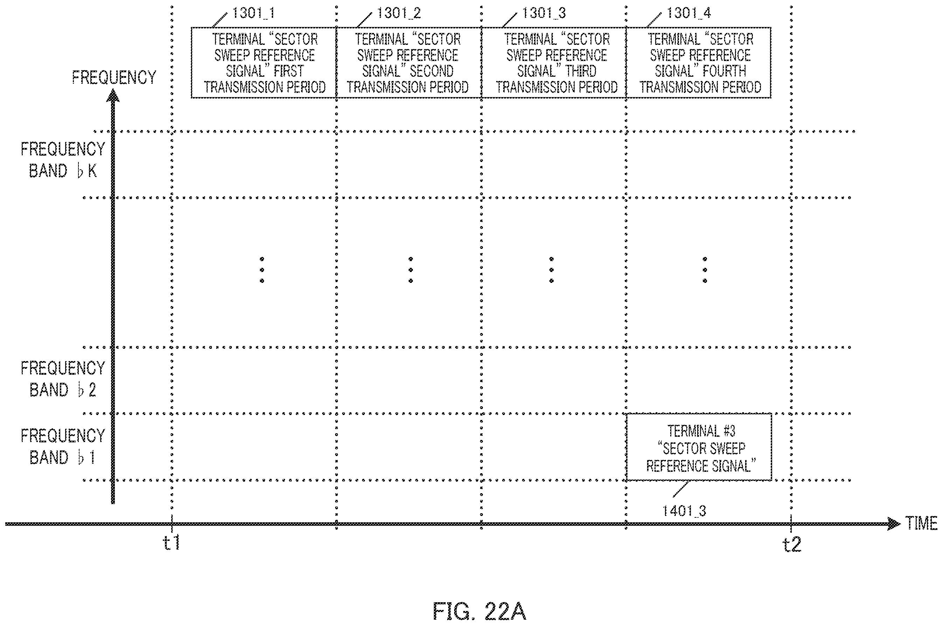

In this case, terminal #3 labeled 902_3 obtains, for example, any one of the values "0", "1", "2", and "3" using a random number. For example, terminal #3 labeled 902_3 obtains "3" by generating a random number using seeds different from the previous. In this case, since "3" + 1 = 4, terminal #3 labeled 902_3 transmits terminal #3 "sector sweep reference signal" 1401_3 using frequency band $_b1$ and terminal "sector sweep reference signal" fourth transmission period 1301_4 as in FIG. 22A.

Note that terminal #3 "sector sweep reference signal" 1401_3 includes information of the "transmission panel antenna and parameter" with high reception quality obtained by terminal #3 labeled 902_3, that is, information of "transmission panel antenna a3 and parameter b3".

In this case, as illustrated in FIG. 22A, base station #1 labeled 901_1 receives "terminal #3 "sector sweep reference signal" 1401_3 transmitted by terminal #3 labeled 902_3". Then, the predetermined procedure described above is performed, and base station #1 labeled 901_1 and terminal #3 labeled 902_3 communicate with each other.

As another example, terminal #3 labeled 902_3 estimates frequency band $_bK$ as the "frequency (band)" with high reception quality and estimates "transmission panel antenna a3 and parameter b3" as the "transmission panel antenna and parameter", for example.

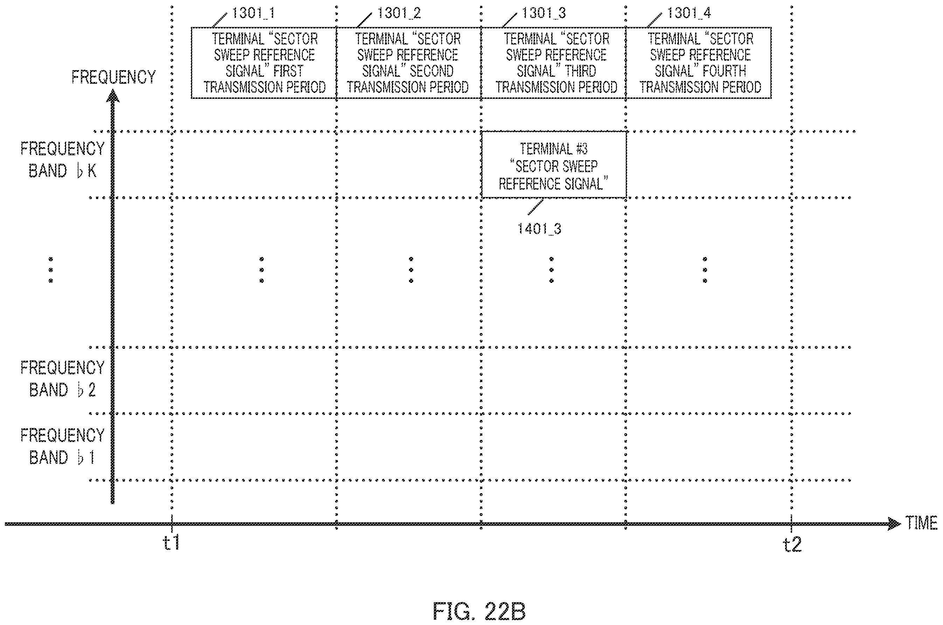

In this case, as in FIG. 22B, base station #1 labeled 901_1 receives "terminal #3 "sector sweep reference signal" 1401_3 transmitted by terminal #3 labeled 902_3". Then, the predetermined procedure described above is performed, and base station #1 labeled 901_1 and terminal #3 labeled 902_3 communicate with each other. This is possible because "terminal #3 "sector sweep reference signal" 1401_3 can avoid interference with terminal #2 "sector sweep reference signal" 1401_2 transmitted by terminal #2 labeled 902_2 in FIG. 21A".

<Case 2-2>

In some cases, base station #1 labeled 901_1 obtains neither information included in "terminal #2 "sector sweep reference signal" 1401_2 transmitted by terminal #2 labeled 902_2" nor information included in "terminal #3 "sector sweep reference signal" 1401_3 transmitted by terminal #3 labeled 902_3".

It is assumed that sector sweep reference signal 1851_1 in FIG. 18 has the states in FIGS. 21A and 21B, and base station #1 labeled 901_1 obtains neither information included in "terminal #2 "sector sweep reference signal" 1401_2 transmitted by terminal #2 labeled 902_2" nor information included in "terminal #3 "sector sweep reference signal" 1401_3 transmitted by terminal #3 labeled 902_3". In this case, data-symbol-included frames 1803_1, 1803_2, and 1803_3 in FIG. 18 have neither a frame (slot) addressed to terminal #2 labeled 902_2 nor a frame (slot) addressed to terminal #3 labeled 902_3.

In this case, terminal #2 labeled 902_2 in FIG. 9 receives sector sweep reference signal 1801_2 in FIG. 19 transmitted by base station #1 labeled 901_1, obtains the "frequency (band)", "identification number (ID) of the transmission panel antenna", and "identification number (ID) of the parameter used for beamforming (directivity control)" with high reception quality, and then can communicate with base station #1 labeled 901_1.

Terminal #2 labeled 902_2, for example, estimates frequency band $b1$ as the "frequency (band)" with high reception quality and estimates "transmission panel antenna a2 and parameter b2" as the "transmission panel antenna and parameter".

In addition, while performing such estimation, terminal #2 labeled 902_2 simultaneously obtains information of the "the number of time divisions in which sector sweep reference signals can be transmitted when the terminals transmit the sector sweep reference signals". Terminal #2 labeled 902_2 obtains information indicating that "the number of time divisions in which sector sweep reference signals can be transmitted when the terminals transmit the sector sweep reference signals" is four.

In this case, terminal #2 labeled 902_2 obtains, for example, any one of the values "0", "1", "2", and "3" using a random number. For example, terminal #2 labeled 902_2 obtains "2" by generating a random number using seeds different from the previous. In this case, since "2" + 1 = 3, terminal #2 labeled 902_2 transmits terminal #2 "sector sweep reference signal" 1401_2 using frequency band $b1$ and "terminal "sector sweep reference signal" third transmission period 1301_3" as in FIG. 21A.

Note that terminal #2 "sector sweep reference signal" 1401_2 includes information of the "transmission panel antenna and parameter" with high reception quality obtained by terminal #2 labeled 902_2, that is, information of "transmission panel antenna a2 and parameter b3".

In this case, as illustrated in FIG. 21A, base station #1 labeled 901_1 receives "terminal #2 "sector sweep reference signal" 1401_2 transmitted by terminal #2 labeled 902_2". Then, the predetermined procedure described above is performed, and base station #1 labeled 901_1 and terminal #2 labeled 902_2 communicate with each other.

Likewise, terminal #3 labeled 902_3 in FIG. 9 receives sector sweep reference signal 1801_2 in FIG. 19 transmitted by base station #1 labeled 901_1, obtains the "frequency (band)", "identification number (ID) of the transmission panel antenna", and "identification number (ID) of the parameter used for beamforming (directivity control)" with high reception quality, and then can communicate with base station #1 labeled 901_1.

Terminal #3 labeled 902_3, for example, estimates frequency band $b1$ as the "frequency (band)" with high reception quality and estimates "transmission panel antenna a3 and parameter b3" as the "transmission panel antenna and parameter".

In addition, while performing such estimation, terminal #3 labeled 902_3 simultaneously obtains information of the "the number of time divisions in which sector sweep reference signals can be transmitted when the terminals transmit the sector sweep reference signals". Terminal #3 labeled 902_3 obtains information indicating that "the number of time divisions in which sector sweep reference signals can be transmitted when the terminals transmit the sector sweep reference signals" is four.

In this case, terminal #3 labeled 902_3 obtains, for example, any one of the values "0", "1", "2", and "3" using a random number. For example, terminal #3 labeled 902_3 obtains "3" by generating a random number using seeds different from the previous. In this case, since "3" + 1 = 4, terminal #3 labeled 902_3 transmits terminal #3 "sector sweep reference signal" 1401_3 using frequency band $b1$ and terminal "sector sweep reference signal" fourth transmission period 1301_4 as in FIG. 22A.

Note that terminal #3 "sector sweep reference signal" 1401_3 includes information of the "transmission panel antenna and parameter" with high reception quality obtained by terminal #3 labeled 902_3, that is, information of "transmission panel antenna a3 and parameter b3".

In this case, as illustrated in FIG. 22A, base station #1 labeled 901_1 receives "terminal #3 "sector sweep reference signal" 1401_3 transmitted by terminal #3 labeled 902_3". Then, the predetermined procedure described above is performed, and base station #1 labeled 901_1 and terminal #3 labeled 902_3 communicate with each other.

As another example, terminal #3 labeled 902_3 estimates frequency band $bK$ as the "frequency (band)" with high reception quality and estimates "transmission panel antenna a3 and parameter b3" as the "transmission panel antenna and parameter", for example.

In this case, as in FIG. 22B, base station #1 labeled 901_1 receives "terminal #3 "sector sweep reference signal" 1401_3 transmitted by terminal #3 labeled 902_3". Then, the predetermined procedure described above is performed, and base station #1 labeled 901_1 and terminal #3 labeled 902_3 communicate with each other. This is possible because "terminal #3 "sector sweep reference signal" 1401_3 can avoid interference with terminal #2 "sector sweep reference signal" 1401_2 transmitted by terminal #2 labeled 902_2 in FIG. 21A".

In the manner described above, a collision of the sector sweep reference signals transmitted by the respective terminals can be further reduced. This produces the effect that the base station can receive more sector sweep reference signals and can communicate with more terminals.

As described above in Embodiment 1, the effect of improving communication capacity in a system composed of a base station and terminals can be obtained by the terminals transmitting sector sweep reference signals so as to cause less collision. Note that the configurations of the terminals and the base station are not limited to the configurations in FIGS. 1A, 1B, and 1C. In addition, the configurations of a transmission panel antenna and a reception panel antenna are not limited to the configurations in FIGS. 3 and 4, and may be any antenna configurations as long as one or more or a plurality of transmission directivities and reception directivities can be generated, for example. Further, signals, frames, etc. are illustrated in FIGS. 10, 11, 12, 13, 14, 15A, 15B, 16A, 16B, 17A, 17B, 18, 19, 20A, 20B, 20C, 20D, 20E, 20F, 21A, 21B, 22A, and 22B, but the names thereof are not limited to those in the drawings and the important part is the functions of the signals to be transmitted.

Further, the present embodiment has provided a description of a case where a terminal transmits a modulation signal in a multi-carrier scheme such as OFDM, for example, but the scheme is not limited to this. For example, a terminal may transmit a signal in a single-carrier scheme when transmitting a signal of a frame in FIGS. 14, 20A, 20B, 20C, 20D, 20E, 20F, 21A, 21B, 22A, 22B, etc.

In FIG. 14, for example, terminal #1 labeled 902_1 may transmit terminal #1 "sector sweep reference signal" 1401_1 in frequency band ♭K in a single-carrier scheme. Further, in FIG. 20A, terminal #1 labeled 902_1 may transmit "terminal #1 transmission frame" 2001_1 in frequency band ♭K in a single-carrier scheme. Note that other terminals may also transmit a signal in a single-carrier scheme.

(Embodiment 2)

In Embodiment 2, a description will be given of a communication system, communication apparatus, and communication method using sector sweep in a case where a terminal performs transmission in a single-carrier scheme as a variation of Embodiment 1. Note that the drawings used in Embodiment 1 are sometimes used in the following description of Embodiment 2.

FIGS. 1A, 1B, and 1C illustrate exemplary configurations of, for example, a base station, an access point, a terminal, and a repeater according to Embodiment 2, and the description of the detailed operations will be omitted since they have already been described with reference to FIGS. 2, 3, 4, 5, 6, 7, and 8. For FIGS. 2, 3, 4, 5, 6, 7, and 8, the description of the detailed operations will also be omitted since they have already been described.

FIG. 9 illustrates an exemplary communication state in the present embodiment. As illustrated in FIG. 9, a case to be discussed is where base station #1 labeled 901_1 communicates with terminal #1 labeled 902_1, terminal #2 labeled 902_2, terminal #3 labeled 902_3, terminal #4 labeled 902_4, terminal #5 labeled 902_5, and terminal #6 labeled 902_6. A relationship between a base station and terminals, however, is not limited to this example, and the base station may communicate with one or more terminals, for example.

Note that the following description is about an exemplary case where the base station transmits modulation signals to the terminals using the OFDMA scheme and the terminals transmit modulation signals to the base station using a single-carrier scheme.

FIG. 10 illustrates an example of modulation signal 1000 transmitted by base station #1 labeled 901_1 in FIG. 9. In FIG. 10, the horizontal axis represents time and the vertical axis represents frequency. In the time period from time t0 to t1, sector sweep (sector-sweep level) reference signal 1001 is present. Note that sector sweep reference signal 1001 will be described later.

The time period from time t1 to t2 is a terminal response period. Note that the terminal response will be described later.

In the time period from time t2 to t3, feedback signal 1002 is present. Note that feedback signal 1002 will be described later.

In the time period from time t4 to t5, data-symbol-included frame 1003 is present. Note that data-symbol-included frame 1003 will be described later.

The reference signal for sector sweep is referred to as sector sweep reference signal 1001 in FIG. 10, but the name is not limited thereto and may be a reference signal, a reference symbol, a training signal, a training symbol, or the like. The signal denoted by reference sign 1002 is referred to as feedback signal 1002, but the name is not limited thereto and may be a feedback symbol, a terminal-addressed signal, a terminal-addressed symbol, a control signal, a control symbol, or the like. In addition, the frame including a data symbol is referred to as data-symbol-included frame 1003, but the name is not limited thereto and may be a slot/mini-slot/unit-included frame, or the like.

FIG. 11 illustrates examples of sector sweep reference signal 1001 in FIG. 10 transmitted by base station #1 labeled 901_1 in FIG. 9 with the configuration in FIG. 1A, 1B, or 1C, for example. Note that the horizontal axis represents time and the vertical axis represents frequency in FIG. 11. In the example of FIG. 11, the frequency is divided into frequency band $b1$, frequency band $b2$, ..., frequency band $bK$ as illustrated in FIG. 11 for base station #1 labeled 901_1 to transmit modulation signals based on OFDMA. Note that K is an integer equal to or greater than 1 or an integer equal to or greater than 2.

In frequency band $b1$, for example, sector sweep reference signal 1101_11 in transmission panel antenna 1 for frequency $b1$ is present in the first time period, sector sweep reference signal 1101_12 in transmission panel antenna 2 for frequency $b1$ is present in the second time period, ..., sector sweep reference signal 1101_1M in transmission panel antenna M for frequency $b1$ is present in the M-th time period.

That is, in frequency band bi, sector sweep reference signal 1101_il in transmission panel antenna 1 for frequency $bi$ is present in the first time period, sector sweep reference signal 1101_i2 in transmission panel antenna 2 for frequency $bi$ is present in the second time period, ..., sector sweep reference signal 1101_iM in transmission panel antenna M for frequency $bi$ is present in the M-th time period. Note that i is an integer from 1 to K (both inclusive).

Note that sector sweep reference signal 1101_ij in transmission panel antenna j for frequency $bi$ is transmitted from transmission panel antenna j labeled 106_j of base station #1 labeled 901_1 with the configuration in FIG. 1A, 1B, or 1C. In this case, j is an integer from 1 to M (both inclusive).

One feature is that "sector sweep reference signals are transmitted from the same transmission panel antenna in the i-th time period regardless of the frequency band in FIG. 11". At this time, the same beamforming parameter is used in a first period of time regardless of the frequency band. Note that the beamforming will be described later.

FIG. 12 illustrates an exemplary configuration of "sector sweep reference signal 1101_pi in transmission panel antenna i for frequency $bp$" in FIG. 11. Note that the horizontal axis represents time in FIG. 12. Note that p is an integer from 1 to K (both inclusive) and i is an integer from 1 to M (both inclusive).

A description will be omitted regarding a specific example of a transmission method for "sector sweep reference signal 1101_pi in transmission panel antenna i for frequency $bp$" that is composed as in FIGS. 11 and 12 and transmitted by base station #1 labeled 901_1 with the configuration in FIG. 1A, 1B, or 1C, since it has already been described.

As illustrated in FIGS. 11 and 12, when base station #1 labeled 901_1 transmits "sector sweep reference signal 1101_i in transmission panel antenna i for frequency $bp$", "reference signal 1201_j according to j-th parameter in transmission panel antenna i for frequency $bp$" includes, for example, the following information:

· Identification number (ID) of the transmission panel antenna, which corresponds to i here, for example;

· Identification number (ID) of the parameter used for beamforming (directivity control), which corresponds to j here, for example; and

· The number of time divisions in which sector sweep reference signals can be transmitted when the terminals transmit the sector sweep reference signals, which will be described later.

Note that "reference signal 1201_j according to j-th parameter in transmission panel antenna i for frequency $bp$" may include other information. Examples of the information will be described in the other embodiments, for example, in Embodiment 6 or later.

The following information may also be included in "reference signal 1201_j according to j-th parameter in transmission panel antenna i for frequency $bp$";

· Information on the frequency band and/or frequency $bp$ (information of the number of frequency divisions may also be included), which will be described later.

Transmission of the "identification number (ID) of the transmission panel antenna for frequency $bp$" and the "identification number (ID) of the parameter used for beamforming (directivity control)" by base station #1 labeled 901_1 allows the terminals to recognize the "identification number (ID) of the transmission panel antenna" and the "identification number (ID) of the parameter used for beamforming (directivity control)" that have allowed successful reception; accordingly, base station #1 labeled 901_1 and the terminals can perform appropriate control. This produces the effect of enhancing data reception quality.

Note that "the number of time divisions in which sector sweep reference signals can be transmitted when the terminals transmit the sector sweep reference signals" may be changeable according to the frame and/or time, for example. This produces the effect of enhancing data transmission efficiency of a communication system.

Further, transmission of the "information on the frequency band and/or frequency $bp$" by base station #1 labeled 901_1 allows the terminals to obtain the information and transmit "information relative to a frequency that the terminals desire the base station to use for transmission". This allows the base station to perform appropriate control and produces the effect of enhancing data reception quality.

Next, a description will be given of an operation in the time period from time t1 to t2 in FIG. 10, which is the terminal response period. Note that, in Embodiment 2, the description is based on a case where the terminals transmit signals using a single-carrier scheme and frequency (bands) used by the base station and frequency (bands) used by the terminals partially overlap each other.

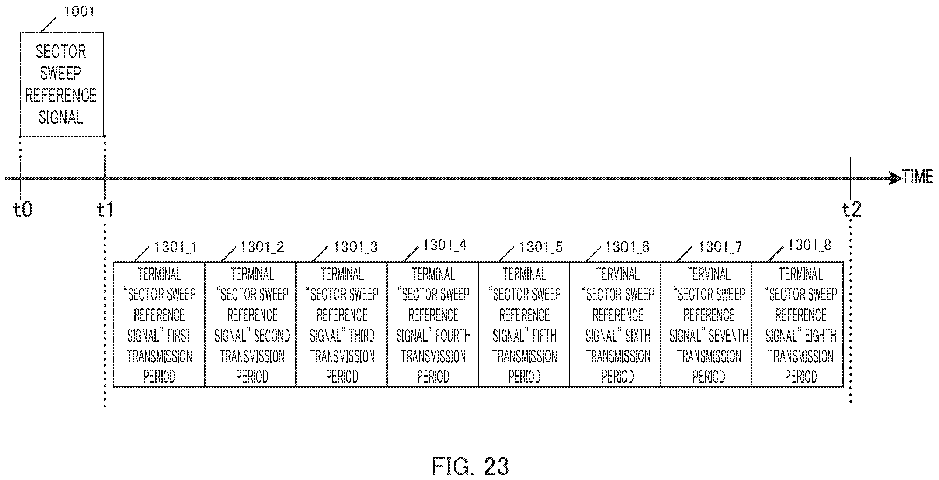

FIG. 23 illustrates an exemplary operation in the time period from time t1 to t2, which is the terminal response period. Note that the horizontal axis represents time in FIG. 23. Terminals such as terminal #1 labeled 902_1, terminal #2 labeled 902_2, terminal #3 labeled 902_3, terminal #4 labeled 902_4, terminal #5 labeled 902_5, and terminal #6 labeled 902_6 in FIG. 9 transmit sector sweep reference signals in the time period from time t1 to t2, which is the terminal response period. Note that, in FIG. 23, the components that operate in the same manner as in FIGS. 10 and 13 are denoted by the same reference signs.

As illustrated in FIGS. 10 and 23, for example, base station #1 labeled 901_1 transmits sector sweep reference signals in the time period from time t0 to t1. After that, the terminal response period, which is the time period from time t1 to t2, includes terminal "sector sweep reference signal" first transmission period 1301_1, terminal "sector sweep reference signal" second transmission period 1301_2, terminal "sector sweep reference signal" third transmission period 1301_3, terminal "sector sweep reference signal" fourth transmission period 1301_4, terminal "sector sweep reference signal" fifth transmission period 1301_5, terminal "sector sweep reference signal" sixth transmission period 1301_6, terminal "sector sweep reference signal" seventh transmission period 1301_7, and terminal "sector sweep reference signal" eighth transmission period 1301_8, as illustrated in FIG. 13.

Thus, in the case of FIG. 23, "the number of time divisions in which sector sweep reference signals can be transmitted when the terminals transmit the sector sweep reference signals" is set to eight by base station #1 labeled 901_1.

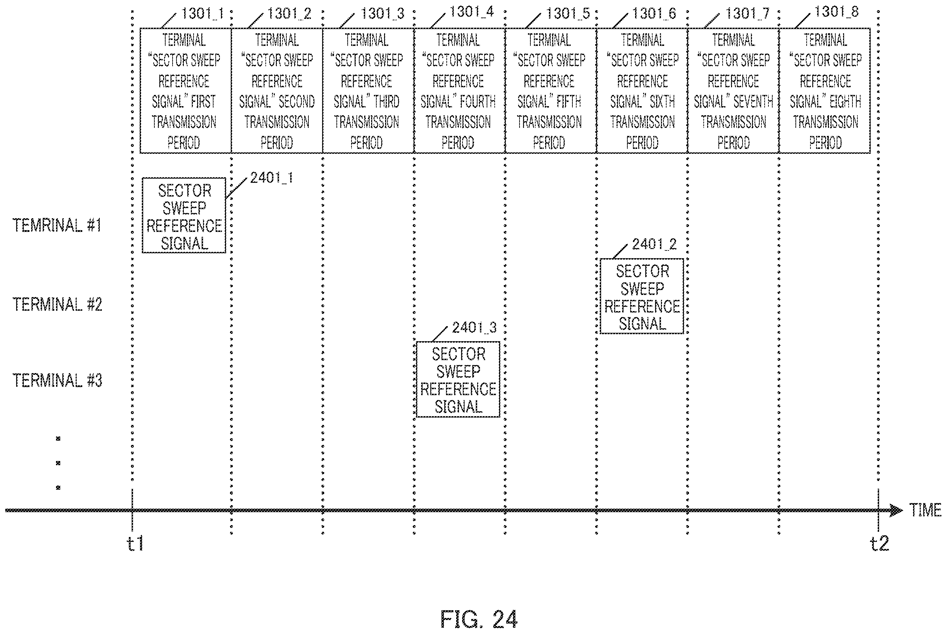

FIG. 24 illustrates exemplary occupation by the terminals in terminal "sector sweep reference signal" first transmission period 1301_1, terminal "sector sweep reference signal" second transmission period 1301_2, terminal "sector sweep reference signal" third transmission period 1301_3, and terminal "sector sweep reference signal" fourth transmission period 1301_4, terminal "sector sweep reference signal" fifth transmission period 1301_5, terminal "sector sweep reference signal" sixth transmission period 1301_6, terminal "sector sweep reference signal" seventh transmission period 1301_7, and terminal "sector sweep reference signal" eighth transmission period 1301_8 illustrated in FIG. 23. Note that the horizontal axis represents time in FIG. 24.

Terminal #1 labeled 902_1 in FIG. 9 receives sector sweep reference signal 1001 transmitted by base station #1 labeled 901_1 and estimates the "frequency band, transmission panel antenna, and parameter number" with high reception quality from transmission panel antennas of base station #1 labeled 901_1. Note that this estimation can be performed by obtaining sector sweep reference signal 1001, and the "identification number (ID) of the transmission panel antenna" and the "identification number (ID) of the parameter used for beamforming (directivity control)" that are included in sector sweep reference signal 1001. In addition, the "information on the frequency band and/or frequency $_bp$" included in sector sweep reference signal 1001 may be used for this estimation.

Terminal #1 labeled 902_1 estimates, for example, "transmission panel antenna a1 and parameter b1" as the "transmission panel antenna and parameter" with high reception quality. Terminal #1 labeled 902_1 also estimates frequency band $_bK$ as the "frequency domain" with high reception quality.

In addition, while estimating the "transmission panel antenna and parameter" with high reception quality, terminal #1 labeled 902_1 simultaneously obtains information of "the number of time divisions in which sector sweep reference signals can be transmitted when the terminals transmit the sector sweep reference signals". In the case of FIG. 24, terminal #1 labeled 902_1 obtains information indicating that "the number of time divisions in which sector sweep reference signals can be transmitted when the terminals transmit the sector sweep reference signals" is eight.

In this case, terminal #1 labeled 902_1 obtains, for example, any one of the values "0", "1", "2", "3", "4", "5", "6", and "7" using a random number. For example, terminal #1 labeled 902_1 obtains "0" using a random number. In this case, since "0" + 1 = 1, terminal #1 labeled 902_1 transmits terminal #1 "sector sweep reference signal" 2401_1 using "terminal "sector sweep reference signal" first (= "0" + 1) transmission period 1301_1" in FIG. 24. Here, the transmission period for the sector sweep reference signal is configured using a random number, but the transmission period for the sector sweep reference signal may be configured using, instead of a random number, a random number of an integer or a natural number, an irregular integer or natural number, a regular integer or natural number, an integer or a natural number held uniquely by the terminal, for example. Hence, the configuration of the transmission period for the sector sweep reference signal is not limited to the above example, and the transmission period for the sector sweep reference signal is configured for each terminal, for example. This is also applicable to the following similar descriptions.

Note that terminal #1 "sector sweep reference signal" 2401_1 includes information of the "transmission panel antenna and parameter" with high reception quality obtained by terminal #1 labeled 902_1, that is, information of "transmission panel antenna a1 and parameter b1". Terminal #1 "sector sweep reference signal" 2401_1 also includes information of the "frequency domain", for example, information of "frequency band $_bK$". This will be described later.

Likewise, terminal #2 labeled 902_2 in FIG. 9 receives sector sweep reference signal 1001 transmitted by base station #1 labeled 901_1 and estimates the "frequency band, transmission panel antenna, and parameter number" with high reception quality from transmission panel antennas of base station #1 labeled 901_1. Note that this estimation can be performed by obtaining sector sweep reference signal 1001, and the "identification number (ID) of the transmission panel antenna" and the "identification number (ID) of the parameter used for beamforming (directivity control)" that are included in sector sweep reference signal 1001. In addition, the "information on the frequency band and/or frequency $b_p$" included in sector sweep reference signal 1001 may be used for this estimation.

Terminal #2 labeled 902_2 estimates, for example, "transmission panel antenna a2 and parameter b2" as the "transmission panel antenna and parameter" with high reception quality. Terminal #2 labeled 902_2 also estimates frequency band $b_1$ as the "frequency domain" with high reception quality.

In addition, while estimating the "transmission panel antenna and parameter" with high reception quality, terminal #2 labeled 902_2 simultaneously obtains information of "the number of time divisions in which sector sweep reference signals can be transmitted when the terminals transmit the sector sweep reference signals". In the case of FIG. 24, terminal #2 labeled 902_2 obtains information indicating that "the number of time divisions in which sector sweep reference signals can be transmitted when the terminals transmit the sector sweep reference signals" is eight.

In this case, terminal #2 labeled 902_2 obtains, for example, any one of the values "0", "1", "2", "3", "4", "5", "6", and "7" using a random number. For example, terminal #2 labeled 902_2 obtains "5" using a random number. In this case, since "5" + 1 = 6, terminal #2 labeled 902_2 transmits terminal #2 "sector sweep reference signal" 2401_2 using "terminal "sector sweep reference signal" sixth (= "5" + 1) transmission period 1301_6" in FIG. 24.

Note that terminal #2 "sector sweep reference signal" 1401_2 includes information of the "transmission panel antenna and parameter" with high reception quality obtained by terminal #2 labeled 902_2, that is, information of "transmission panel antenna a2 and parameter b2". Terminal #2 "sector sweep reference signal" 2401_2 also includes information of the "frequency domain", for example, information of "frequency band $b_1$". This will be described later.

Thus, terminal #i labeled 902_i receives sector sweep reference signal 1001 transmitted by base station #1 labeled 901_1 and estimates the "frequency band, transmission panel antenna, and parameter number" with high reception quality from transmission panel antennas of base station #1 labeled 901_1. Note that this estimation can be performed by obtaining sector sweep reference signal 1001, and the "identification number (ID) of the transmission panel antenna" and the "identification number (ID) of the parameter used for beamforming (directivity control)" that are included in sector sweep reference signal 1001. Note that i is an integer equal to or greater than 1, for example. In addition, the "information on the frequency band and/or frequency $b_p$" included in sector sweep reference signal 1001 may be used for this estimation.

Terminal #i labeled 902_i estimates, for example, "transmission panel antenna ai and parameter bi" as the "transmission panel antenna and parameter" with high reception quality. Terminal #i labeled 902_i also estimates frequency band bzi as the "frequency domain" with high reception quality.

In addition, while estimating the "transmission panel antenna and parameter" with high reception quality, terminal #i labeled 902_i simultaneously obtains information of "the number of time divisions in which sector sweep reference signals can be transmitted when the terminals transmit the sector sweep reference signals". In the case of FIG. 24, terminal #i labeled 902_i obtains information indicating that "the number of time divisions in which sector sweep reference signals can be transmitted when the terminals transmit the sector sweep reference signals" is eight.

In this case, terminal #i labeled 902_i obtains, for example, any one of the values "0", "1", "2", "3", "4", "5", "6", and "7" using a random number. For example, terminal #i labeled 902_i obtains "yi" using a random number. Note that yi is any one of the values "0", "1", "2", "3", "4", "5", "6", and "7". In this case, terminal #i labeled 902_i transmits terminal #i "sector sweep reference signal" 2401_i using terminal "sector sweep reference signal" ("yi" + 1)-th transmission period 1301_("yi" + 1) in FIG. 24.

Note that terminal #i "sector sweep reference signal" 2401_i includes information of the "transmission panel antenna and parameter" with high reception quality obtained by terminal #i labeled 902_i, that is, information of "transmission panel antenna ai and parameter bi". Terminal #i "sector sweep reference signal" 2401_i also includes information of the "frequency domain", for example, information of "frequency band $b_p$". This will be described later.

Note that, in FIG. 24, it may be considered that terminal #i "sector sweep reference signals" 2401_i use a first frequency (band) regardless of i as a first method. In this case, terminal #i "sector sweep reference signals" 2401_i are subjected to time division (time division multiple access (TDMA)). This is because the terminals transmit modulation signals using a single-carrier scheme.

As a second method, terminal #i "sector sweep reference signals" 2401_i do not necessarily use the same frequency (band).

Both the first and second methods produce the effect of "reducing interference between terminal #i "sector sweep reference signals" 2401_i".

For example, in a case where base station #1 labeled 901_1 transmits modulation signals using "frequency band $\flat$1 to frequency band $\flat$K" as described in Embodiment 1, a method can be considered in which terminal #i labeled 902_i transmits a modulation signal in a single-carrier scheme using "frequency band $\flat$1 to frequency band

As another method, in a case where base station #1 labeled 901_1 transmits modulation signals using "frequency band $\flat$1 to frequency band $\flat$K" as described in Embodiment 1, a method can be considered in which terminal #i labeled 902_i transmits a modulation signal in a single-carrier scheme using some of "frequency band $\flat$1 to frequency band bK".

Further, a method can be considered in which base station #1 labeled 901_1 transmits modulation signals using "frequency band $\flat$1 to frequency band $\flat$K" as described in Embodiment 1 and terminal #i labeled 902_i transmits a modulation signal using a frequency (band) other than "frequency band $\flat$1 to frequency band

In the manner described above, a collision of the sector sweep reference signals transmitted by the respective terminals can be reduced. This produces the effect that the base station can receive more sector sweep reference signals and can communicate with more terminals.

A description will be given of a configuration of terminal #i "sector sweep reference signal" 2401_i transmitted by terminal #i labeled 902_i described with reference to FIG. 24. To simplify the description, terminal #i labeled 902_i has the configuration in FIG. 1A, 1B, or 1C, and terminal #i labeled 902_i with the configuration in FIG. 1A, 1B, or 1C includes the configuration in FIG. 3 as transmission panel antenna xi labeled 106_xi. Note that the configuration of terminal #i labeled 902_i is not limited to the configuration in FIG. 1A, 1B, or 1C, and the configuration of transmission panel antenna xi labeled 106_xi included in terminal #i labeled 902_i with the configuration in FIG. 1A, 1B, or 1C is not limited to the configuration in FIG. 3.

Note that the difference from Embodiment 1 is that terminal #i labeled 902_i transmits a modulation signal in a single-carrier scheme, and the specific configuration has already been described in Embodiment 1.

Terminal #i labeled 902_i transmits terminal #i "sector sweep reference signal" 2401_i as illustrated in FIG. 24. FIG. 15A illustrates an exemplary configuration of terminal #i "sector sweep reference signal" 2401_i. Note that the horizontal axis represents time in FIG. 15A. "Terminal #i "sector sweep reference signal" 1401_i" in FIG. 15A corresponds to an exemplary "sector sweep reference signal" 2401_i in FIG. 24.

As illustrated in FIG. 15A, terminal #i "sector sweep reference signal" 2401_i of terminal #i labeled 902_i is composed of "sector sweep reference signal 1501_1 in terminal #i transmission panel antenna 1, sector sweep reference signal 1501_2 in terminal #i transmission panel antenna 2, ..., sector sweep reference signal 1501_M in terminal #i transmission panel antenna M".

For example, terminal #i labeled 902_i with the configuration in FIG. 1A, 1B, or 1C transmits "sector sweep reference signal 1501_1 in terminal #i transmission panel antenna 1" using transmission panel antenna 1 labeled 106_1.

That is, terminal #i labeled 902_i with the configuration in FIG. 1A, 1B, or 1C transmits "sector sweep reference signal 1501_k in terminal #i transmission panel antenna k" using transmission panel antenna k labeled 106_k. Note that k is an integer from 1 to M (both inclusive).

Note that the number of transmission panel antennas included in terminal #i labeled 902_i is M in FIG. 15A, but the number of transmission panel antennas is not limited to this and may be N, where N is an integer equal to or greater than 1.

FIG. 15B illustrates an exemplary configuration of "sector sweep reference signal 1501_xi in terminal #i transmission panel antenna xi" in FIG. 15A. Note that the horizontal axis represents time in FIG. 15.

As illustrated in FIG. 15B, "sector sweep reference signal 1501_xi in terminal #i transmission panel antenna xi" is composed of, for example, "reference signal 1511_1 according to first parameter in transmission panel antenna xi", "reference signal 1511_2 according to second parameter in transmission panel antenna xi", "reference signal 1511_3 according to third parameter in transmission panel antenna xi", and "reference signal 1511_4 according to fourth parameter in transmission panel antenna xi".

For example, terminal #i labeled 902_i with the configuration in FIG. 1A, 1B, or 1C includes the configuration in FIG. 3 as transmission panel antenna xi labeled 106_xi.

A description will be given of "reference signal 1511_1 according to first parameter in transmission panel antenna xi".

When terminal #i labeled 902_i transmits "reference signal 1511_1 according to first parameter in transmission panel antenna xi" illustrated in FIG. 15B, terminal #i labeled 902_i sets the multiplication coefficient in multiplier 304_1 in transmission panel antenna xi labeled 106_xi as w1(xi, 1). When first transmission signal 303_1 of "reference signal 1511_1 according to first parameter in transmission panel antenna xi" is tx1ref1(t), multiplier 304_1 obtains tx1ref1(t) $\times$ w1(xi, 1). Then, terminal #i labeled 902_i transmits tx1ref1(t) $\times$ w1(xi, 1) from antenna 306_1 in FIG. 3. Note that t represents time.

When terminal #i labeled 902_i transmits "reference signal 1511_1 according to first parameter in transmission panel antenna xi" illustrated in FIG. 15B, terminal #i labeled 902_i sets the multiplication coefficient in multiplier 304_2 in transmission panel antenna xi labeled 106_xi as w2(xi, 1). When second transmission signal 303_2 of "reference signal 1511_1 according to first parameter in transmission panel antenna xi" is tx2ref1(t), multiplier 304_2 obtains tx2ref1(t) × w2(xi, 1). Then, terminal #i labeled 902_i transmits tx2ref1(t) × w2(xi, 1) from antenna 306_2 in FIG. 3.

When terminal #i labeled 902_i transmits "reference signal 1511_1 according to first parameter in transmission panel antenna xi" illustrated in FIG. 15B, terminal #i labeled 902_i sets the multiplication coefficient in multiplier 304_3 in transmission panel antenna xi labeled 106_xi as w3(xi, 1). When third transmission signal 303_3 of "reference signal 1511_1 according to first parameter in transmission panel antenna xi" is tx3ref1(t), multiplier 304_3 obtains tx3ref1(t) × w3(xi, 1). Then, terminal #i labeled 902_i transmits tx3ref1(t) × w3(xi, 1) from antenna 306_3 in FIG. 3.

When terminal #i labeled 902_i transmits "reference signal 1511_1 according to first parameter in transmission panel antenna xi" illustrated in FIG. 15B, terminal #i labeled 902_i sets the multiplication coefficient in multiplier 304_4 in transmission panel antenna xi labeled 106_xi as w4(xi, 1). When fourth transmission signal 303_4 of "reference signal 1511_1 according to first parameter in transmission panel antenna xi" is tx4ref1(t), multiplier 304_4 obtains tx4ref1(t) × w4(xi, 1). Then, terminal #i labeled 902_i transmits tx4ref1(t) × w4(xi, 1) from antenna 306_4 in FIG. 3.

A description will be given of "reference signal 1511J according to j-th parameter in transmission panel antenna xi".

When terminal #i labeled 902_i transmits "reference signal 1511 J according to j-th parameter in transmission panel antenna xi" illustrated in FIG. 15B, terminal #i labeled 902_i sets the multiplication coefficient in multiplier 304_1 in transmission panel antenna xi labeled 106_xi as w1(xi, j). When first transmission signal 303_1 of "reference signal 1511_j according to j-th parameter in transmission panel antenna xi" is tx1ref$_j$(t), multiplier 304_1 obtains tx1refj(t) × w1(xi, j). Then, terminal #i labeled 902_i transmits tx1refj(t) × w1(xi, j) from antenna 306_1 in FIG. 3. Note that t represents time.

When terminal #i labeled 902_i transmits "reference signal 1511_j according to j-th parameter in transmission panel antenna xi" illustrated in FIG. 15B, terminal #i labeled 902_i sets the multiplication coefficient in multiplier 304_2 in transmission panel antenna xi labeled 106_xi as w2(xi, j). When second transmission signal 303_2 of "reference signal 1511_j according to j-th parameter in transmission panel antenna xi" is tx2refj(t), multiplier 304_2 obtains tx2refj(t) × w2(xi, j). Then, terminal #i labeled 902_i transmits tx2refj(t) × w2(xi, j) from antenna 306_2 in FIG. 3.

When terminal #i labeled 902_i transmits "reference signal 1511_j according to j-th parameter in transmission panel antenna xi" illustrated in FIG. 15B, terminal #i labeled 902_i sets the multiplication coefficient in multiplier 304_3 in transmission panel antenna xi labeled 106_xi as w3(xi, j). When third transmission signal 303_3 of "reference signal 1511_j according to j-th parameter in transmission panel antenna xi" is tx3refj(t), multiplier 304_3 obtains tx3refj(t) × w3(xi, j). Then, terminal #i labeled 902_i transmits tx3refj(t) × w3(xi, j) from antenna 306_3 in FIG. 3.

When terminal #i labeled 902_i transmits "reference signal 1511_j according to j-th parameter in transmission panel antenna xi" illustrated in FIG. 15B, terminal #i labeled 902_i sets the multiplication coefficient in multiplier 304_4 in transmission panel antenna xi labeled 106_xi as w4(xi, j). When fourth transmission signal 303_4 of "reference signal 1511_j according to j-th parameter in transmission panel antenna xi" is tx4refj(t), multiplier 304_4 obtains tx4refj(t) × w4(xi, j). Then, terminal #i labeled 902_i transmits tx4refj(t) × w4(xi, j) from antenna 306_4 in FIG. 3.

Note that j is an integer from 1 to 4 (both inclusive) in the case of FIG. 15B. The number Z of parameter changes is four in FIG. 15B, but the number Z of parameter changes is not limited to four. The same can be implemented as long as Z is an integer equal to or greater than 1 or an integer equal to or greater than 2. At this time, j is an integer from 1 to Z (both inclusive).

As illustrated in FIGS. 24, 15A, and 15B, when terminal #i labeled 902_i transmits "sector sweep reference signal 1501_xi in terminal #i transmission panel antenna xi", "reference signal 1511_j according to j-th parameter in transmission panel antenna xi" includes, for example, the following information:

· Information of the "transmission panel antenna and parameter" of base station #1 labeled 901_1 with high reception quality, as described above.

Thus, terminal #i labeled 902_i transmits the "information of the "transmission panel antenna and parameter" of base station #1 labeled 901_1 with high reception quality" in "sector sweep reference signal 1501_1 in terminal #i transmission panel antenna 1", "sector sweep reference signal 1501_2 in terminal #i transmission panel antenna 2", ..., "sector sweep reference signal 1501_M in terminal #i transmission panel antenna M" in FIG. 15A.

Note that "reference signal 1511J according to j-th parameter in transmission panel antenna xi" may include other information. Examples of the information will be described in the other embodiments, for example, in Embodiment 6 or later.

In addition, terminal #i labeled 902_i transmits the "information of the "transmission panel antenna and parameter" of base station #1 labeled 901_1 with high reception quality" in "reference signal 1511_1 according to first parameter in transmission panel antenna xi", "reference signal 1511_2 according to second parameter in transmission panel antenna xi", "reference signal 1511_3 according to third parameter in transmission panel antenna xi", and "reference signal 1511_4 according to fourth parameter in transmission panel antenna xi" in FIG. 15B in ""sector sweep reference signal 1501_1 in terminal #i transmission panel antenna 1", "sector sweep reference signal 1501_2 in terminal #i transmission panel antenna 2", ..., "sector sweep reference signal 1501_M in terminal #i transmission panel antenna M" in FIG. 15A".

In this case, base station #1 labeled 901_1 is more likely to receive, even with an omnidirectional antenna for example, any of ""sector sweep reference signal 1501_1 in terminal #i transmission panel antenna 1", "sector sweep reference signal 1501_2 in terminal #i transmission panel antenna 2", ..., "sector sweep reference signal 1501_M in terminal #i transmission panel antenna M" in FIG. 15A" transmitted by terminal #i labeled 902_i. This is because terminal #i labeled 902_i performs transmit beamforming (directivity control). This produces the effect that base station #1 labeled 901_1 is more likely to receive the "information of the "transmission panel antenna and parameter" of base station #1 labeled 901_1 with high reception quality" transmitted by terminal #i labeled 902_i. Accordingly, base station #1 labeled 901_1 can transmit a modulation signal to terminal #i labeled 902_i based on the "information of the "transmission panel antenna and parameter" of base station #1 labeled 901_1 with high reception quality", and terminal #i labeled 902_i can receive the modulation signal with high reception quality.

In a case where a plurality of terminals transmit the sector sweep reference signals as in FIG. 24, base station #1 labeled 901_1 can obtain the "information of the "transmission panel antenna and parameter" of base station #1 labeled 901_1 with high reception quality" from the plurality of terminals. This produces the effect that base station #1 labeled 901_1 can transmit modulation signals to the plurality of terminals based on the "information of the "transmission panel antenna and parameter" of base station #1 labeled 901_1 with high reception quality" from the plurality of terminals, and that the plurality of terminals can receive the modulation signals with high reception quality.

As illustrated in FIGS. 24, 15A, and 15B, when terminal #i labeled 902_i transmits "sector sweep reference signal 1501_xi in terminal #i transmission panel antenna xi", "reference signal 1511_j according to j-th parameter in transmission panel antenna xi" includes, for example, the following information:

· Identification number (ID) of the transmission panel antenna, which corresponds to xi here, for example; and

· Identification number (ID) of the parameter used for beamforming (directivity control), which corresponds to j here, for example.

Transmission of the "identification number (ID) of the transmission panel antenna" and the "identification number (ID) of the parameter used for beamforming (directivity control)" by terminal #i labeled 902_i allows base station #1 labeled 901_1 to recognize the "identification number (ID) of the transmission panel antenna" and the "identification number (ID) of the parameter used for beamforming (directivity control)" that have allowed successful reception; accordingly, terminal #i labeled 902_i and base station #1 labeled 901_1 can perform appropriate control. This produces the effect of enhancing data reception quality.

Note that "reference signal 1511J according to j-th parameter in transmission panel antenna xi" may include other information. Examples of the information will be described in the other embodiments, for example, in Embodiment 6 or later.

Further, as illustrated in FIGS. 24, 15A, and 15B, when terminal #i labeled 902_i transmits "sector sweep reference signal 1501_xi in terminal #i transmission panel antenna xi", "reference signal 1511_j according to j-th parameter in transmission panel antenna xi" includes, for example, the following information:

· "Information on the frequency band and/or frequency $\flat$p" that has been used for transmission by terminal #i labeled 902_i or that terminal #i labeled 902_i desires base station #1 labeled 901_1 to use.

Transmission of the "information on the frequency band and/or frequency $\flat$p" by terminal #i labeled 902_i allows base station #1 labeled 901_1 to recognize the "information on the frequency band and/or frequency $\flat$p"; accordingly, terminal #i labeled 902_i and base station #1 labeled 901_1 can perform appropriate control. This produces the effect of enhancing data reception quality.

FIG. 16A illustrates an exemplary configuration of feedback signal 1002 that is present in the time period from t2 to t3 in FIG. 10 and transmitted by base station #1 labeled 901_1. Note that the horizontal axis represents time and the vertical axis represents frequency in FIG. 16A. In this example, there are a first transmission period, a second transmission period, a third transmission period, and a fourth transmission period for feedback signal 1002 as illustrated in FIG. 16A. Note that S2 transmission periods may be configured to be present for feedback signal 1002, where $\Omega$ is an integer equal to or greater than 1 or an integer equal to or greater than 2.

In addition, there are frequency band $\flat$1, frequency band $\flat$2, ..., frequency band $\flat$K for feedback signal 1002 in FIG. 16A.

Thus, the first transmission period includes feedback signal first transmission period 1601_11 for frequency $\flat$1, feedback signal first transmission period 1601_21 for frequency $\flat$2, ..., feedback signal first transmission period 1601_K1 for frequency $\flat$K. Likewise, the second transmission period includes feedback signal second transmission period 1601_12 for frequency $\flat$1,

feedback signal second transmission period 1601_22 for frequency ♭2, ..., feedback signal second transmission period 1601_K2 for frequency ♭K. The third transmission period includes feedback signal third transmission period 1601_13 for frequency ♭1, feedback signal third transmission period 1601_23 for frequency ♭2, ..., feedback signal third transmission period 1601_K3 for frequency ♭K. The fourth transmission period includes feedback signal fourth transmission period 1601_14 for frequency ♭1, feedback signal fourth transmission period 1601_24 for frequency ♭2, ..., feedback signal fourth transmission period 1601_K4 for frequency ♭K.

One feature is that "feedback signals are transmitted from the same transmission panel antenna in the i-th time period regardless of the frequency band in FIG. 16A".

FIG. 16B illustrates exemplary specific feedback signal assignment for feedback signal 1002 illustrated in FIG. 16A.

As in FIG. 24, for example, terminal #1 labeled 902_1 transmits terminal #1 "sector sweep reference signal" 2401_1, terminal #2 labeled 902_2 transmits terminal #2 "sector sweep reference signal" 2401_2, terminal #3 labeled 902_3 transmits terminal #3 "sector sweep reference signal" 2401_3, and other terminals also transmit sector sweep reference signals.

Additionally, terminal #1 "sector sweep reference signal" 2401_1 includes information indicating that "frequency band ♭K has high reception quality". Thus, base station #1 labeled 901_1 transmits terminal #1-addressed feedback signal 1611_1 using frequency band ♭K as in FIG. 16B.

Terminal #2 "sector sweep reference signal" 2401_2 includes information indicating that "frequency band ♭1 has high reception quality". Thus, base station #1 labeled 901_1 transmits terminal #2-addressed feedback signal 1611_2 using frequency band ♭1 as in FIG. 16B.

Terminal #3 "sector sweep reference signal" 2401_3 includes information indicating that "frequency band ♭1 and frequency band ♭2 have high reception quality". Thus, base station #1 labeled 901_1 transmits terminal #3-addressed feedback signal 1611_3 using frequency bands ♭1 and ♭2 as in FIG. 16B.

Terminal #4 "sector sweep reference signal" (not illustrated in FIG. 24) includes information indicating that "frequency band 2 has high reception quality". Thus, base station #1 labeled 901_1 transmits terminal #4-addressed feedback signal 1611_4 using frequency band ♭2 as in FIG. 16B.

Terminal #5 "sector sweep reference signal" (not illustrated in FIG. 24) includes information indicating that "frequency band ♭2 has high reception quality". Thus, base station #1 labeled 901_1 transmits terminal #5-addressed feedback signal 1611_5 using frequency band ♭2 as in FIG. 16B.

Terminal #6 "sector sweep reference signal" (not illustrated in FIG. 24) includes information indicating that "frequency band ♭K has high reception quality". Thus, base station #1 labeled 901_1 transmits terminal #6-addressed feedback signal 1611_6 using frequency band ♭K as in FIG. 16B.

In this manner, obtaining terminal #i-addressed feedback signal 1611_i allows terminal #i labeled 902_i to know that communication with base station #1 labeled 901_1 is available and to know the frequency band to be used. Note that FIG. 16B is merely an example. In a case where there is no terminal #1-addressed feedback signal 1611_1 as feedback signal 1002, for example, terminal #1 labeled 902_1 recognizes that the communication with base station #1 labeled 901_1 has not been established.

At this time, terminal #i-addressed feedback signal 1611_i includes, for example, information indicating that communication with terminal #i labeled 902_i is available (or indicating that data-symbol-included frame 1003 in FIG. 10 includes a symbol addressed to terminal #i labeled 902_i).

Further, base station #1 labeled 901_1 selects a frequency (band) and a transmission panel antenna and sets a parameter of beamforming based on the ""frequency (band) information" and information of the "transmission panel antenna and parameter" of base station #1 labeled 901_1 with high reception quality" transmitted by terminal #i labeled 902_i, and base station #1 labeled 901_1 then transmits terminal #i-addressed feedback signal 1611_i.

FIG. 17A illustrates an exemplary configuration of data-symbol-included frame 1003 that is present in the time period from t4 to t5 in FIG. 10 and transmitted by base station #1 labeled 901_1. Note that the horizontal axis represents time and the vertical axis represents frequency in FIG. 17A. In this example, there are a first transmission period, a second transmission period, a third transmission period, and a fourth transmission period for data-symbol-included frame 1003 as illustrated in FIG. 17A. Note that S2 transmission periods may be configured to be present for data-symbol-included frame 1003, where Ω is an integer equal to or greater than 1 or an integer equal to or greater than 2.

In addition, there are frequency band ♭1, frequency band ♭2, ..., frequency band ♭K for data-symbol-included frame 1003 in FIG. 17A.

Thus, the first transmission period includes modulation signal (slot) first transmission period 1701_11 for frequency ♭1, modulation signal (slot) first transmission period 1701_21 for frequency ♭2, ..., modulation signal (slot) first transmission period 1701_K1 for frequency ♭K. Likewise, the second transmission period includes modulation signal (slot) second transmission period 1701_12 for frequency ♭1, modulation signal (slot) second transmission period 1701_22 for frequency ♭2, ..., modulation signal (slot) second transmission period 1701_K2 for frequency ♭K. The third transmission period includes modulation signal (slot) third transmission period 1701_13 for frequency ♭1, modulation signal (slot) third transmission period 1701_23 for frequency ♭2, ..., modulation signal (slot) third transmission period 1701_K3 for frequency ♭K. The fourth transmission period includes modulation signal (slot) fourth transmission period 1701_14 for frequency ♭1, modulation signal (slot) fourth transmission period 1701_24 for frequency ♭2, ..., modulation signal (slot) fourth transmission period 1701_K4 for frequency ♭K.

FIG. 17B illustrates exemplary specific modulation signal (slot) assignment for data-symbol-included frame 1003 illustrated in FIG. 17A.

As in the example of FIG. 24, for example, terminal #1 labeled 902_1 transmits terminal #1 "sector sweep reference signal" 2401_1, terminal #2 labeled 902_2 transmits terminal #2 "sector sweep reference signal" 2401_2, terminal #3 labeled 902_3 transmits terminal #3 "sector sweep reference signal" 2401_3, terminal #4 labeled 902_4 transmits terminal #4 "sector sweep reference signal" (not illustrated in FIG. 24), terminal #5 labeled 902_5 transmits terminal #5 "sector sweep reference signal" (not illustrated in FIG. 24), and terminal #6 labeled 902_6 transmits terminal #6 "sector sweep reference signal" (not illustrated in FIG. 24).

Additionally, terminal #1 "sector sweep reference signal" 2401_1 includes information indicating that "frequency band ♭K has high reception quality". Thus, base station #1 labeled 901_1 transmits terminal #1-addressed modulation signal (slot) 1711 using frequency band ♭K as in FIG. 17B.

Terminal #2 "sector sweep reference signal" 2401_2 includes information indicating that "frequency band ♭1 has high reception quality". Thus, base station #1 labeled 901_1 transmits terminal #2-addressed modulation signal (slot) 1712 using frequency band ♭1 as in FIG. 17B.

Terminal #3 "sector sweep reference signal" 2401_3 includes information indicating that "frequency band ♭1 and frequency band ♭2 have high reception quality". Thus, base station #1 labeled 901_1 transmits terminal #3-addressed modulation signal (slot) 1713 using frequency bands ♭1 and ♭2 as in FIG. 17B.

Terminal #4 "sector sweep reference signal" (not illustrated in FIG. 24) includes information indicating that "frequency band ♭2 has high reception quality". Thus, base station #1 labeled 901_1 transmits terminal #4-addressed modulation signal (slot) 1714 using frequency band ♭2 as in FIG. 17B.

Terminal #5 "sector sweep reference signal" (not illustrated in FIG. 24) includes information indicating that "frequency band ♭2 has high reception quality".

Thus, base station #1 labeled 901_1 transmits terminal #5-addressed modulation signal (slot) 1715 using frequency band ♭2 as in FIG. 17B.

Terminal #6 "sector sweep reference signal" (not illustrated in FIG. 24) includes information indicating that "frequency band ♭K has high reception quality". Thus, base station #1 labeled 901_1 transmits terminal #6-addressed modulation signal (slot) 1716 using frequency band ♭K as in FIG. 17B.

At this time, terminal #i-addressed modulation signal (slot) 171i includes, for example, a data symbol (data and/or information) addressed to terminal #i labeled 902_i.

In this manner, terminal #i-addressed modulation signal (slot) 171i allows terminal #i labeled 902_i to know that communication with base station #1 labeled 901_1 is available and to know the frequency band to be used. Note that FIG. 17B is merely an example. In a case where there is no terminal #1-addressed modulation signal (slot) 1711 as data-symbol-included frame 1003, for example, terminal #1 labeled 902_1 recognizes that the communication with base station #1 labeled 901_1 has not been established.

Base station #1 labeled 901_1 selects a frequency (band) and a transmission panel antenna and sets a parameter of beamforming based on the ""frequency (band) information" and information of the "transmission panel antenna and parameter" of base station #1 labeled 901_1 with high reception quality" transmitted by terminal #i labeled 902_i, and base station #1 labeled 901_1 then transmits terminal #i-addressed modulation signal (slot) 171i.

Note that, in FIGS. 16A and 16B, base station #1 labeled 901_1 may estimate the "frequency (band)" and the "transmission panel antenna and parameter" of terminal #i labeled 902_1 with high reception quality in receiving "terminal #i "sector sweep reference signal" 2401_i transmitted by terminal #i labeled 902_i", and the estimated information may be included in terminal #i-addressed feedback signal 1611_i.

Terminal #i labeled 902_i selects a frequency (band) and a transmission panel antenna and determines a beamforming method based on the information of "frequency (band)" and "transmission panel antenna and parameter" of terminal #i labeled 902_i with high reception quality obtained from base station #1 labeled 901_1, and terminal #i labeled 902_i then transmits a symbol, a frame, and/or a modulation signal to base station #1 labeled 901_1. This produces the effect of enhancing data reception quality in base station #1 labeled 901_1.

Incidentally, in the time period from t3 to t4 in FIG. 10, terminal #i labeled 902_i may transmit, to base station #1 labeled 901_1, a modulation signal including information indicating successful reception of a signal from base station #1 labeled 901_1, such as acknowledgement (ACK).

Note that, terminal #i-addressed modulation signal (slot) 171i in FIG. 17B may include, in addition to the data symbol, a "reference signal such as a demodulation reference signal (DMRS), phase tracking reference signal (PTRS), or sounding reference signal (SRS)", a pilot symbol, a pilot signal, a preamble, and a symbol including control information, for example. Examples of the symbol including the control information may include information of a destination terminal (ID for identifying the terminal), a transmission method of the modulation signal, information of the modulation scheme, information of the error correction coding scheme (code length, code rate, etc.), information of the modulation and coding scheme (MCS), and the like.

FIG. 18 illustrates an exemplary state where base station #1 labeled 901_1 and "terminal #1 labeled 902_1, terminal #2 labeled 902_2, terminal #3 labeled 902_3, terminal #4 labeled 902_4, terminal #5 labeled 902_5, and terminal #6 labeled 902_6" communicate with each other as illustrated in FIG. 9. (A) of FIG. 18 illustrates an exemplary modulation signal transmission state of base station #1 labeled 901_1, and (B) of FIG. 18 illustrates an exemplary modulation signal transmission state of "terminal #1 labeled 902_1, terminal #2 labeled 902_2, terminal #3 labeled 902_3, terminal #4 labeled 902_4, terminal #5 labeled 902_5, and terminal #6 labeled 902_6". Note that the horizontal axes represent time in (A) and (B) of FIG. 18.

First, base station #1 labeled 901_1 transmits sector sweep reference signal 1801_1. Note that this has already been described with reference to FIG. 10, and the description thereof will be thus omitted.

Then, a terminal such as "terminal #1 labeled 902_1, terminal #2 labeled 902_2, terminal #3 labeled 902_3, terminal #4 labeled 902_4, terminal #5 labeled 902_5, and terminal #6 labeled 902_6" transmits sector sweep reference signal 1851_1. Note that this has already been described with reference to, for example, FIGS. 23, 24, 15A, 15B, etc., and the description thereof will be thus omitted.

Base station #1 labeled 901_1 transmits feedback signal 1802_1. Note that this has already been described with reference to FIGS. 16A and 16B, and the description thereof will be thus omitted.

After that, base station #1 labeled 901_1 transmits "data-symbol-included frame 1803_1". Note that this has already been described with reference to FIGS. 17A and 17B, and the description thereof will be thus omitted. (Hence, "data-symbol-included frame 1803_1" is considered to be a frame for downlink, for example).

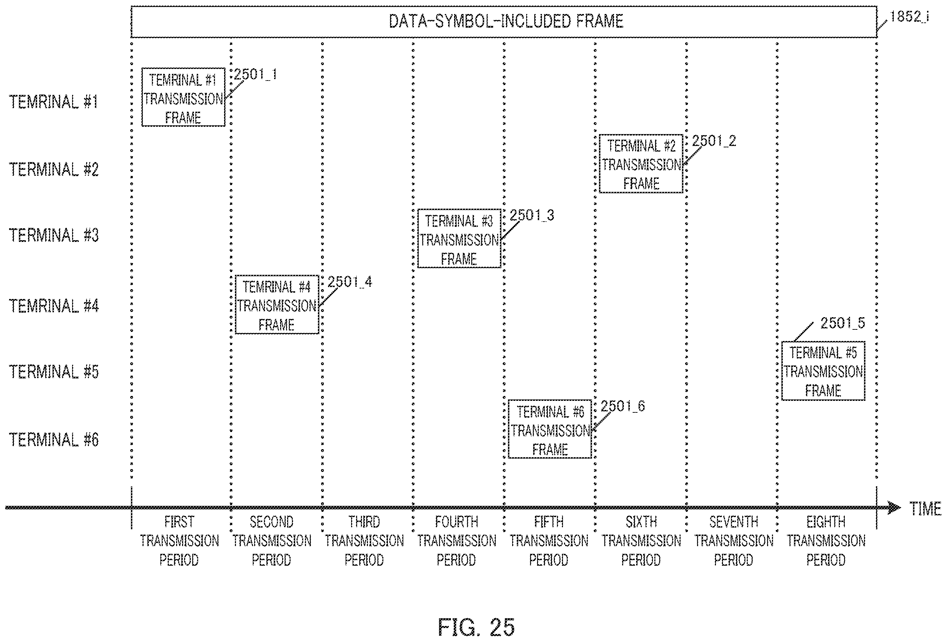

Then, the terminal such as "terminal #1 labeled 902_1, terminal #2 labeled 902_2, terminal #3 labeled 902_3, terminal #4 labeled 902_4, terminal #5 labeled 902_5, and terminal #6 labeled 902_6" transmits "data-symbol-included frame 1852_1". Note that a configuration of the frame will be described later with reference to FIG. 25. (Hence, "data-symbol-included frame 1852_1" is considered to be a frame for uplink, for example).

Next, base station #1 labeled 901_1 transmits "data-symbol-included frame 1803_2". Note that a configuration method of "data-symbol-included frame 1803_2" is as described with reference to FIGS. 17A and 17B.

Then, the terminal such as "terminal #1 labeled 902_1, terminal #2 labeled 902_2, terminal #3 labeled 902_3, terminal #4 labeled 902_4, terminal #5 labeled 902_5, and terminal #6 labeled 902_6" transmits "data-symbol-included frame 1852_2". Note that a configuration of the frame will be described later with reference to FIG. 25.

FIG. 19 illustrates an exemplary modulation signal transmission state of base station #1 labeled 901_1 and an exemplary modulation signal transmission state of the terminal such as "terminal #1 labeled 902_1, terminal #2 labeled 902_2, terminal #3 labeled 902_3, terminal #4 labeled 902_4, terminal #5 labeled 902_5, and terminal #6 labeled 902_6" after the state in FIG. 18.

(A) of FIG. 19 illustrates an exemplary modulation signal transmission state of base station #1 labeled 901_1, and it is a temporal continuation from the modulation signal transmission state of base station #1 labeled 901_1 in (A) of FIG. 18.

(B) of FIG. 19 illustrates an exemplary modulation signal transmission state of the terminal such as "terminal #1 labeled 902_1, terminal #2 labeled 902_2, terminal #3 labeled 902_3, terminal #4 labeled 902_4, terminal #5 labeled 902_5, and terminal #6 labeled 902_6", and it is a temporal continuation from the modulation signal transmission state of the terminal such as "terminal #1 labeled 902_1, terminal #2 labeled 902_2, terminal #3 labeled 902_3, terminal #4 labeled 902_4, terminal #5 labeled 902_5, and terminal #6 labeled 902_6" in (B) of FIG. 18.

Note that the horizontal axes represent time in (A) and (B) of FIG. 19.

After the states in (A) and (B) of FIG. 18, base station #1 labeled 901_1 transmits "data-symbol-included frame 1803_3". Note that a configuration method of "data-symbol-included frame 1803_3" is as described with reference to FIGS. 17A and 17B.

The terminal such as "terminal #1 labeled 902_1, terminal #2 labeled 902_2, terminal #3 labeled 902_3, terminal #4 labeled 902_4, terminal #5 labeled 902_5, and terminal #6 labeled 902_6" transmits "data-symbol-included frame 1852_3". Note that a configuration of the frame will be described later with reference to FIG. 25.

Next, base station #1 labeled 901_1 transmits sector sweep reference signal 1801_2. Note that this has already been described with reference to FIG. 10, and the description thereof will be thus omitted.

Then, the terminal such as "terminal #1 labeled 902_1, terminal #2 labeled 902_2, terminal #3 labeled 902_3, terminal #4 labeled 902_4, terminal #5 labeled 902_5, and terminal #6 labeled 902_6" transmits sector sweep reference signal 1851_2. Note that this has already been described with reference to, for example, FIGS. 23, 24, 15A, 15B, etc., and the description thereof will be thus omitted.

Base station #1 labeled 901_1 transmits feedback signal 1802_2. Note that this has already been described with reference to FIGS. 16A and 16B, and the description thereof will be thus omitted.

After that, base station #1 labeled 901_1 transmits "data-symbol-included frame 1803_4". Note that this has already been described with reference to FIGS. 17A and 17B, and the description thereof will be thus omitted.

Then, the terminal such as "terminal #1 labeled 902_1, terminal #2 labeled 902_2, terminal #3 labeled 902_3, terminal #4 labeled 902_4, terminal #5 labeled 902_5, and terminal #6 labeled 902_6" transmits "data-symbol-included frame 1852_4". Note that a configuration of the frame will be described later with reference to FIG. 25.

As described above, base station #1 labeled 901_1 and the terminal transmit the sector sweep reference signals before the "transmission of the "data-symbol-included frames" by base station #1 labeled 901_1 and/or the transmission of the "data-symbol-included frames" by the terminal such as "terminal #1 labeled 902_1, terminal #2 labeled 902_2, terminal #3 labeled 902_3, terminal #4 labeled 902_4, terminal #5 labeled 902_5, and terminal #6 labeled 902_6"", and again transmit the sector sweep reference signals after the "transmission of the "data-symbol-included frames" by base station #1 labeled 901_1 and/or the transmission of the "data-symbol-included frames" by the terminal such as "terminal #1 labeled 902_1, terminal #2 labeled 902_2, terminal #3 labeled 902_3, terminal #4 labeled 902_4, terminal #5 labeled 902_5, and terminal #6 labeled 902_6"" Base station #1 labeled 901_1 and the terminal then each configure a frequency (band), select a transmission panel antenna to be used, and configure transmit beamforming. This produces the effect that the base station and/or the terminal achieve high data reception quality.

Next, a description will be given of an exemplary configuration of "data-symbol-included frame 1852_i" transmitted by the terminal such as "terminal #1 labeled 902_1, terminal #2 labeled 902_2, terminal #3 labeled 902_3, terminal #4 labeled 902_4, terminal #5 labeled 902_5, and terminal #6 labeled 902_6" with reference to FIG. 25. Note that i is an integer equal to or greater than 1, for example, and the horizontal axis represents time in FIG. 25.

As illustrated in FIG. 25, "data-symbol-included frame 1852_i" is composed of a first transmission period, a second transmission period, a third transmission period, a fourth transmission period, a fifth transmission period, a sixth transmission period, a seventh transmission period, and an eighth transmission period.

As illustrated in FIG. 25, for example, terminal #1 labeled 902_1 transmits terminal #1 transmission frame (including a data symbol) 2501_1 using the first transmission period.

Terminal #2 labeled 902_2 transmits terminal #2 transmission frame (including a data symbol) 2501_2 using the sixth transmission period.

Terminal #3 labeled 902_3 transmits terminal #3 transmission frame (including a data symbol) 2501_3 using the fourth transmission period.

Terminal #4 labeled 902_4 transmits terminal #4 transmission frame (including a data symbol) 2501_4 using the second transmission period.

Terminal #5 labeled 902_5 transmits terminal #5 transmission frame (including a data symbol) 2501_5 using the eighth transmission period.

Terminal #6 labeled 902_6 transmits terminal #6 transmission frame (including a data symbol) 2501_6 using the fifth transmission period.

Note that the terminal such as "terminal #1 labeled 902_1, terminal #2 labeled 902_2, terminal #3 labeled 902_3, terminal #4 labeled 902_4, terminal #5 labeled 902_5, and terminal #6 labeled 902_6" uses a single-carrier transmission scheme. In addition, a plurality of terminals may use the same frequency (band).

As described above, "data-symbol-included frame 1852_i" transmitted by the terminal such as "terminal #1 labeled 902_1, terminal #2 labeled 902_2, terminal #3 labeled 902_3, terminal #4 labeled 902_4, terminal #5 labeled 902_5, and terminal #6 labeled 902_6" is subjected to, for example, time division and transmitted by each terminal, and base station #1 labeled 901_1 receives the frame transmitted by the terminal, thereby preventing interference and achieving high data reception quality.

Note that terminal #1 transmission frame 2501_1, terminal #2 transmission frame 2501_2, terminal #3 transmission frame 2501_3, terminal #4 transmission frame 2501_4, terminal #5 transmission frame 2501_5, and terminal #6 transmission frame 2501_6 in FIG. 25 may include, in addition to the data symbol, a "reference signal such as DMRS, PTRS, or SRS", a pilot symbol, a pilot signal, a preamble, and a symbol including control information, for example.

In FIG. 25, a description has been given of a case where the terminals perform time division on the frames to be transmitted, but the terminals may perform spatial division on the frames to be transmitted using multi user-multiple-input multiple-output (MU-MIMO).

FIG. 24 illustrates exemplary occupation by the terminals in "terminal "sector sweep reference signal" first transmission period 1301_1, terminal "sector sweep reference signal" second transmission period 1301_2, terminal "sector sweep reference signal" third transmission period 1301_3, and terminal "sector sweep reference signal" fourth transmission period 1301_4, terminal "sector sweep reference signal" fifth transmission period 1301_5, terminal "sector sweep reference signal" sixth transmission period 1301_6, terminal "sector sweep reference signal" seventh transmission period 1301_7, and terminal "sector sweep reference signal" eighth transmission period 1301_8" illustrated in FIG. 23.

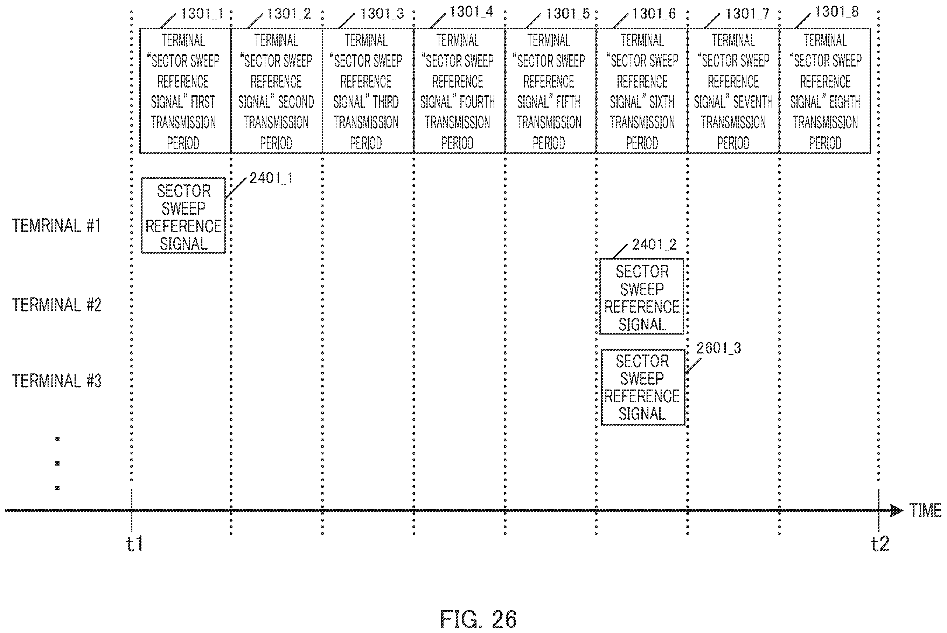

In FIG. 26, a description will be given of exemplary occupation by terminals different from that in FIG. 24 in "terminal "sector sweep reference signal" first transmission period 1301_1, terminal "sector sweep reference signal" second transmission period 1301_2, terminal "sector sweep reference signal" third transmission period 1301_3, and terminal "sector sweep reference signal" fourth transmission period 1301_4, terminal "sector sweep reference signal" fifth transmission period 1301_5, terminal "sector sweep reference signal" sixth transmission period 1301_6, terminal "sector sweep reference signal" seventh transmission period 1301_7, and terminal "sector sweep reference signal" eighth transmission period 1301_8" illustrated in FIG. 23.

In FIG. 26, the components that operate in the same manner as in FIGS. 23 and 24 are denoted by the same reference signs, and the descriptions thereof will be omitted since they have already been described. In the following, the difference from the description in FIG. 24 will be described.

Terminal #2 labeled 902_2 in FIG. 9 receives sector sweep reference signal 1001 transmitted by base station #1 labeled 901_1, obtains the "frequency (band)", "identification number (ID) of the transmission panel antenna", and "identification number (ID) of the parameter used for beamforming (directivity control)" with high reception quality, and then can communicate with base station #1 labeled 901_1.

Terminal #2 labeled 902_2, for example, estimates frequency band $b_1$ as the "frequency (band)" with high reception quality and estimates "transmission panel antenna a2 and parameter b2" as the "transmission panel antenna and parameter".

In addition, while estimating the "transmission panel antenna and parameter" with high reception quality, terminal #2 labeled 902_2 simultaneously obtains information of the "the number of time divisions in which sector sweep reference signals can be transmitted when the terminals transmit the sector sweep reference signals". In the case of FIG. 26, terminal #2 labeled 902_2 obtains information indicating that "the number of time divisions in which sector sweep reference signals can be transmitted when the terminals transmit the sector sweep reference signals" is eight.

In this case, terminal #2 labeled 902_2 obtains, for example, any one of the values "0", "1", "2", "3", "4", "5", "6", and "7" using a random number. For example, terminal #2 labeled 902_2 obtains "5" using a random number. In this case, since "5" + 1 = 6, terminal #2 labeled 902_2 transmits terminal #2 "sector sweep reference signal" 2401_2 using "terminal "sector sweep reference signal" sixth transmission period 1301_6" as in FIG. 26.

Note that terminal #2 "sector sweep reference signal" 2401_2 includes information of the "transmission panel antenna and parameter" with high reception quality obtained by terminal #2 labeled 902_2, that is, information of "transmission panel antenna a2 and parameter b2".

Terminal #3 labeled 902_3 in FIG. 9 receives sector sweep reference signal 1001 transmitted by base station #1 labeled 901_1, obtains the "identification number (ID) of the transmission panel antenna" and "identification number (ID) of the parameter used for beamforming (directivity control)" with high reception quality, and then can communicate with base station #1 labeled 901_1.

Terminal #3 labeled 902_3, for example, estimates frequency band $b_1$ as the "frequency (band)" with high reception quality and estimates "transmission panel antenna a3 and parameter b3" as the "transmission panel antenna and parameter" with high reception quality.

In addition, while estimating the "frequency (band)" and "transmission panel antenna and parameter" with high reception quality, terminal #3 labeled 902_3 simultaneously obtains information of the "the number of time divisions in which sector sweep reference signals can be transmitted when the terminals transmit the sector sweep reference signals". In the case of FIG. 26, terminal #3 labeled 902_3 obtains information indicating that "the number of time divisions in which sector sweep reference signals can be transmitted when the terminals transmit the sector sweep reference signals" is eight.

In this case, terminal #3 labeled 902_3 obtains, for example, any one of the values "0", "1", "2", "3", "4", "5", "6", and "7" using a random number. For example, terminal #3 labeled 902_3 obtains "5" using a random number. In this case, since "5" + 1 = 6, terminal #3 labeled 902_3 transmits terminal #3 "sector sweep reference signal" 2601_3 using "terminal "sector sweep reference signal" sixth transmission period 1301_6" as in FIG. 26.

Note that terminal #3 "sector sweep reference signal" 2601_3 includes information of the "transmission panel antenna and parameter" with high reception quality obtained by terminal #3 labeled 902_3, that is, information of "transmission panel antenna a3 and parameter b3".

At this time, as illustrated in FIG. 26, the time period for "terminal #2 "sector sweep reference signal" 2401_2 transmitted by terminal #2 labeled 902_2" and the time period for "terminal #3 "sector sweep reference signal" 2601_3 transmitted by terminal #3 labeled 902_3" overlap each other.

Thus, base station #1 labeled 901_1 possibly simultaneously receives terminal #2 "sector sweep reference signal" 2401_2 and terminal #3 "sector sweep reference signal" 2601_3.

In this case, the following is two possible cases.

<Case 1>

Both "terminal #2 "sector sweep reference signal" 2401_2 transmitted by terminal #2 labeled 902_2" and "terminal #3 "sector sweep reference signal" 2601_3 transmitted by terminal #3 labeled 902_3" have the configuration in FIGS. 15A and 15B.

Here, the ""transmission panel antenna and parameter for beamforming of terminal #2 labeled 902_2" with high reception quality in receiving terminal #2 "sector sweep reference signal" 2401_2 transmitted by terminal #2 labeled 902_2" by base station #1 labeled 901_1 are different from the ""transmission panel antenna and parameter for beamforming of terminal #3 labeled 902_3" with high reception quality in receiving terminal #3 "sector sweep reference signal" 2601_3 transmitted by terminal #3 labeled 902_3" by base station #1 labeled 901_1. Accordingly, base station #1 labeled 901_1 obtains information included in "terminal #2 "sector sweep reference signal" 2401_2 transmitted by terminal #2 labeled 902_2" and information included in "terminal #3 "sector sweep reference signal" 2601_3 transmitted by terminal #3 labeled 902_3".

In this case, in FIG. 16A for example, "feedback signal second transmission period 1601_12 for frequency $b1$ is for a signal addressed to terminal #2 labeled 902_2" and "feedback signal third transmission period 1601_13 for frequency $b1$ is for a signal addressed to terminal #3 labeled 902_3".

In addition, in FIG. 17A for example, "modulation signal (slot) second transmission period 1701_12 for frequency $b1$ is for a signal addressed to terminal #2 labeled 902_2" and "modulation signal (slot) third transmission period 1701_13 for frequency $b1$ is for a signal addressed to terminal #3 labeled 902_3".

In this manner, base station #1 labeled 901_1 can communicate with terminal #2 labeled 902_2 and terminal #3 labeled 902_3.

<Case 2>

Both "terminal #2 "sector sweep reference signal" 2401_2 transmitted by terminal #2 labeled 902_2" and "terminal #3 "sector sweep reference signal" 2601_3 transmitted by terminal #3 labeled 902_3" have the configuration in FIGS. 15A and 15B.

Here, the ""transmission panel antenna and parameter for beamforming of terminal #2 labeled 902_2" with high reception quality in receiving terminal #2 "sector sweep reference signal" 2401_2 transmitted by terminal #2 labeled 902_2" by base station #1 labeled 901_1 interfere with the ""transmission panel antenna and parameter for beamforming of terminal #3 labeled 902_3" with high reception quality in receiving terminal #3 "sector sweep reference signal" 2601_3 transmitted by terminal #3 labeled 902_3" by base station #1 labeled 901_1.

<Case 2-1>

In some cases, base station #1 labeled 901_1 obtains either information included in "terminal #2 "sector sweep reference signal" 2401_2 transmitted by terminal #2 labeled 902_2" or information included in "terminal #3 "sector sweep reference signal" 2601_3 transmitted by terminal #3 labeled 902_3".

For example, base station #1 labeled 901_1 obtains the information included in "terminal #2 "sector sweep reference signal" 2401_2 transmitted by terminal #2 labeled 902_2".

In this case, in FIG. 16A for example, "feedback signal second transmission period 1601_13 for frequency $b1$ is for a signal addressed to terminal #2 labeled 902_2".

In addition, in FIG. 17A for example, "modulation signal (slot) second transmission period 1701_13 for frequency $b1$ is for a signal addressed to terminal #2 labeled 902_2".

In this manner, base station #1 labeled 901_1 can communicate with (terminal #1 labeled 902_1 and) terminal #2 labeled 902_2.

An operation of terminal #3 labeled 902_3 will be described.

It is assumed that sector sweep reference signal 1851_1 in FIG. 18 has the states in FIG. 26. That is, data-symbol-included frames 1803_1, 1803_2, and 1803_3in FIG. 18 have no frame (slot) addressed to terminal #3 labeled 902_3.

In this case, terminal #3 labeled 902_3 in FIG. 9 receives sector sweep reference signal 1801_2 in FIG. 19 transmitted by base station #1 labeled 901_1, obtains the "frequency (band)", "identification number (ID) of the transmission panel antenna", and "identification number (ID) of the parameter used for beamforming (directivity control)" with high reception quality, and then can communicate with base station #1 labeled 901_1.

Terminal #3 labeled 902_3, for example, estimates frequency band $b1$ as the "frequency (band)" with high reception quality and estimates "transmission panel antenna a3 and parameter b3" as the "transmission panel antenna and parameter".

In addition, while performing such estimation, terminal #3 labeled 902_3 simultaneously obtains information of the "the number of time divisions in which sector sweep reference signals can be transmitted when the terminals transmit the sector sweep reference signals". Terminal #3 labeled 902_3 obtains information indicating that "the number of time divisions in which sector sweep reference signals can be transmitted when the terminals transmit the sector sweep reference signals" is eight.

In this case, terminal #3 labeled 902_3 obtains, for example, any one of the values "0", "1", "2", "3", "4", "5", "6",and "7" using a random number. For example, terminal #3 labeled 902_3 obtains "3" by generating a random number using seeds different from the previous. In this case, since "3" + 1 = 4, terminal #3 labeled 902_3 transmits terminal #3 "sector sweep reference signal" 2401_3 using "terminal "sector sweep reference signal" fourth transmission period 1301_4" as in FIG. 24.

Note that terminal #3 "sector sweep reference signal" 2401_3 includes information of the "transmission panel antenna and parameter" with high reception quality obtained by terminal #3 labeled 902_3, that is, information of "transmission panel antenna a3 and parameter b3".

In this case, as illustrated in FIG. 24, base station #1 labeled 901_1 receives "terminal #3 "sector sweep reference signal" 2401_3 transmitted by terminal #3 labeled 902_3". Then, the predetermined procedure described above is performed, and base station #1 labeled 901_1 and terminal #3 labeled 902_3 communicate with each other.

<Case 2-2>

In some cases, base station #1 labeled 901_1 obtains neither information included in "terminal #2 "sector sweep reference signal" 2401_2 transmitted by terminal #2 labeled 902_2" nor information included in "terminal #3 "sector sweep reference signal" 2601_3 transmitted by terminal #3 labeled 902_3".

It is assumed that sector sweep reference signal 1851_1 in FIG. 18 has the states in FIG. 26, and base station #1 labeled 901_1 obtains neither information included in "terminal #2 "sector sweep reference signal" 2401_2 transmitted by terminal #2 labeled 902_2" nor information included in "terminal #3 "sector sweep reference signal" 2601_3 transmitted by terminal #3 labeled 902_3". In this case, data-symbol-included frames 1803_1, 1803_2, and 1803_3 in FIG. 18 have neither a frame (slot) addressed to terminal #2 labeled 902_2 nor a frame (slot) addressed to terminal #3 labeled 902_3.

In this case, terminal #2 labeled 902_2 in FIG. 9 receives sector sweep reference signal 1801_2 in FIG. 19 transmitted by base station #1 labeled 901_1, obtains the "frequency (band)", "identification number (ID) of the transmission panel antenna", and "identification number (ID) of the parameter used for beamforming (directivity control)" with high reception quality, and then can communicate with base station #1 labeled 901_1.

Terminal #2 labeled 902_2, for example, estimates frequency band $b$1 as the "frequency (band)" with high reception quality and estimates "transmission panel antenna a2 and parameter b2" as the "transmission panel antenna and parameter".

In addition, while performing such estimation, terminal #2 labeled 902_2 simultaneously obtains information of the "the number of time divisions in which sector sweep reference signals can be transmitted when the terminals transmit the sector sweep reference signals". Terminal #2 labeled 902_2 obtains information indicating that "the number of time divisions in which sector sweep reference signals can be transmitted when the terminals transmit the sector sweep reference signals" is eight.

In this case, terminal #2 labeled 902_2 obtains, for example, any one of the values "0", "1", "2", "3", "4", "5", "6",and "7" using a random number. For example, terminal #2 labeled 902_2 obtains "5" by generating a random number using seeds different from the previous. In this case, since "5" + 1 = 6, terminal #2 labeled 902_2 transmits terminal #2 "sector sweep reference signal" 2401_2 using "terminal "sector sweep reference signal" sixth transmission period 1301_6" as in FIG. 24.

Note that terminal #2 "sector sweep reference signal" 2401_2 includes information of the "transmission panel antenna and parameter" with high reception quality obtained by terminal #2 labeled 902_2, that is, information of "transmission panel antenna a2 and parameter b3".

In this case, as illustrated in FIG. 24, base station #1 labeled 901_1 receives "terminal #2 "sector sweep reference signal" 2401_2 transmitted by terminal #2 labeled 902_2". Then, the predetermined procedure described above is performed, and base station #1 labeled 901_1 and terminal #2 labeled 902_2 communicate with each other.

Likewise, terminal #3 labeled 902_3 in FIG. 9 receives sector sweep reference signal 1801_2 in FIG. 19 transmitted by base station #1 labeled 901_1, obtains the "frequency (band)", "identification number (ID) of the transmission panel antenna", and "identification number (ID) of the parameter used for beamforming (directivity control)" with high reception quality, and then can communicate with base station #1 labeled 901_1.

Terminal #3 labeled 902_3, for example, estimates frequency band $b$1 as the "frequency (band)" with high reception quality and estimates "transmission panel antenna a3 and parameter b3" as the "transmission panel antenna and parameter".

In addition, while performing such estimation, terminal #3 labeled 902_3 simultaneously obtains information of the "the number of time divisions in which sector sweep reference signals can be transmitted when the terminals transmit the sector sweep reference signals". Terminal #3 labeled 902_3 obtains information indicating that "the number of time divisions in which sector sweep reference signals can be transmitted when the terminals transmit the sector sweep reference signals" is eight.

In this case, terminal #3 labeled 902_3 obtains, for example, any one of the values "0", "1", "2", "3", "4", "5", "6",and "7" using a random number. For example, terminal #3 labeled 902_3 obtains "3" by generating a random number using seeds different from the previous. In this case, since "3" + 1 = 4, terminal #3 labeled 902_3 transmits terminal #3 "sector sweep reference signal" 2401_3 using "terminal "sector sweep reference signal" fourth transmission period 1301_4" as in FIG. 24.

Note that terminal #3 "sector sweep reference signal" 2401_3 includes information of the "transmission panel antenna and parameter" with high reception quality obtained by terminal #3 labeled 902_3, that is, information of "transmission panel antenna a3 and parameter b3".

In this case, as illustrated in FIG. 24, base station #1 labeled 901_1 receives "terminal #3 "sector sweep reference signal" 2401_3 transmitted by terminal #3 labeled 902_3". Then, the predetermined procedure described above is performed, and base station #1 labeled 901_1 and terminal #3 labeled 902_3 communicate with each other.

In the manner described above, a collision of the sector sweep reference signals transmitted by the respective terminals can be further reduced. This produces the effect that the base station can receive more sector sweep reference signals and can communicate with more terminals.

As described above in Embodiment 2, the effect of improving communication capacity in a system composed of a base station and terminals can be obtained by the terminals transmitting sector sweep reference signals so as to cause less collision. Note that the configurations of the terminals and the base station are not limited to the configurations in FIGS. 1A, 1B, and 1C. In addition, the configurations of a transmission panel antenna and a reception panel antenna are not limited to the configurations in FIGS. 3 and 4, and may be any antenna configurations as long as one or more or a plurality of transmission directivities and reception directivities can be generated, for example. Further, signals, frames, etc. are illustrated in FIGS. 10, 11, 12, 23, 24, 15A, 15B, 16A, 16B, 17A, 17B, 18, 19, 24, 25, and 26, but the names thereof are not limited to those in the drawings and the important part is the functions of the signals to be transmitted.

(Embodiment 3)

In Embodiment 3, a description will be given of a communication system, communication apparatus, and communication method using sector sweep in a case where a terminal performs transmission in a single-carrier scheme as a variation of Embodiment 1. Note that the drawings used in Embodiment 1 are sometimes used in the following description of Embodiment 2.

FIGS. 1A, 1B, and 1C illustrate exemplary configurations of, for example, a base station, an access point, a terminal, and a repeater according to Embodiment 3, and the description of the detailed operations will be omitted since they have already been described with reference to FIGS. 2, 3, 4, 5, 6, 7, and 8. For FIGS. 2, 3, 4, 5, 6, 7, and 8, the description of the detailed operations will also be omitted since they have already been described.

FIG. 9 illustrates an exemplary communication state in Embodiment 3. As illustrated in FIG. 9, a case to be discussed is where base station #1 labeled 901_1 communicates with terminal #1 labeled 902_1, terminal #2 labeled 902_2, terminal #3 labeled 902_3, terminal #4 labeled 902_4, terminal #5 labeled 902_5, and terminal #6 labeled 902_6. A relationship between a base station and terminals, however, is not limited to this example, and the base station may communicate with one or more terminals, for example.

Note that the following description is about an exemplary case where the base station transmits modulation signals to the terminals using the OFDMA scheme and the terminals transmit modulation signals to the base station using a multi-carrier scheme such as the OFDM scheme.

FIG. 10 illustrates an example of modulation signal 1000 transmitted by base station #1 labeled 901_1 in FIG. 9. In FIG. 10, the horizontal axis represents time and the vertical axis represents frequency. In the time period from time t0 to t1, sector sweep (sector-sweep level) reference signal 1001 is present. Note that sector sweep reference signal 1001 will be described later.

The time period from time t1 to t2 is a terminal response period. Note that the terminal response will be described later.

In the time period from time t2 to t3, feedback signal 1002 is present. Note that feedback signal 1002 will be described later.

In the time period from time t4 to t5, data-symbol-included frame 1003 is present. Note that data-symbol-included frame 1003 will be described later.

The reference signal for sector sweep is referred to as sector sweep reference signal 1001 in FIG. 10, but the name is not limited thereto and may be a reference signal, a reference symbol, a training signal, a training symbol, or the like. The signal denoted by reference sign 1002 is referred to as feedback signal 1002, but the name is not limited thereto and may be a feedback symbol, a terminal-addressed signal, a terminal-addressed symbol, a control signal, a control symbol, or the like. In addition, the frame including a data symbol is referred to as data-symbol-included frame 1003, but the name is not limited thereto and may be a slot/mini-slot/unit-included frame, or the like.

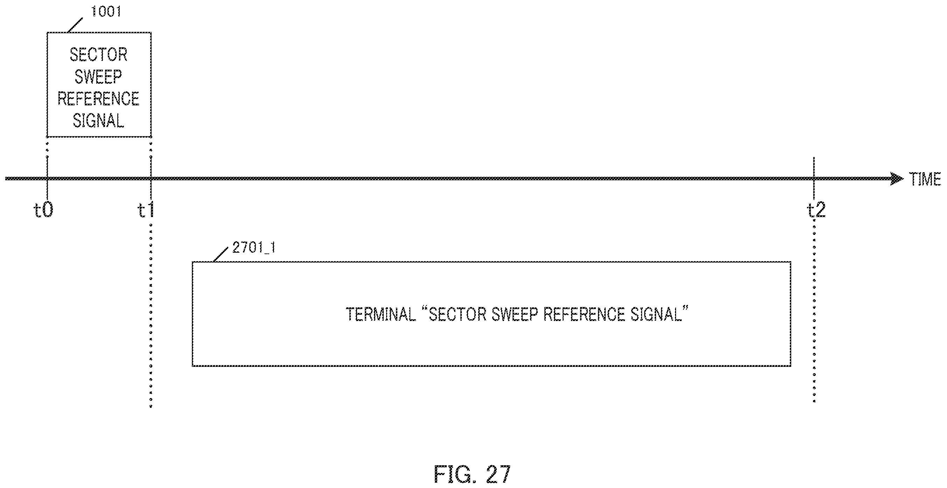

FIG. 27 illustrates an exemplary configuration of the time period from time t1 to t2 in FIG. 10, which is the terminal response period, and the horizontal axis represents time. Sector sweep reference signal 1001 transmitted by the base station is present in the time period from time t0 to t1.

Subsequently, a terminal "sector sweep reference signal" is present in the time period from time t1 to t2.

FIG. 11 illustrates examples of sector sweep reference signal 1001 in FIG. 10 transmitted by base station #1 labeled 901_1 in FIG. 9 with the configuration in FIG. 1A, 1B, or 1C, for example. Note that the horizontal axis represents time and the vertical axis represents frequency in FIG. 11. In the example of FIG. 11, the frequency is divided into frequency band ♭1, frequency band ♭2, ..., frequency band ♭K as illustrated in FIG. 11 for base station #1 labeled 901_1 to transmit modulation signals based on OFDMA. Note that K is an integer equal to or greater than 1 or an integer equal to or greater than 2.

In frequency band $b1$, for example, sector sweep reference signal 1101_11 in transmission panel antenna 1 for frequency $b1$ is present in the first time period, sector sweep reference signal 1101_12 in transmission panel antenna 2 for frequency $b1$ is present in the second time period, ..., sector sweep reference signal 1101_1M in transmission panel antenna M for frequency $b1$ is present in the M-th time period.

That is, in frequency band bi, sector sweep reference signal 1101_i1 in transmission panel antenna 1 for frequency bi is present in the first time period, sector sweep reference signal 1101_i2 in transmission panel antenna 2 for frequency bi is present in the second time period, ..., sector sweep reference signal 1101_iM in transmission panel antenna M for frequency bi is present in the M-th time period. Note that i is an integer from 1 to K (both inclusive).

Note that sector sweep reference signal 1101_ij in transmission panel antenna j for frequency bi is transmitted from transmission panel antenna j labeled 106_j of base station #1 labeled 901_1 with the configuration in FIG. 1A, 1B, or 1C. In this case, j is an integer from 1 to M (both inclusive).

One feature is that "sector sweep reference signals are transmitted from the same transmission panel antenna in the i-th time period regardless of the frequency band in FIG. 11". At this time, the same beamforming parameter is used in a first period of time regardless of the frequency band. Note that the beamforming will be described later.

FIG. 12 illustrates an exemplary configuration of "sector sweep reference signal 1101_pi in transmission panel antenna i for frequency $bp$" in FIG. 11. Note that the horizontal axis represents time in FIG. 12. Note that p is an integer from 1 to K (both inclusive) and i is an integer from 1 to M (both inclusive).

A description will be omitted on a specific example of a method of transmitting "sector sweep reference signal 1101_pi in transmission panel antenna i for frequency $bp$", which is configured as in FIGS. 11 and 12 and transmitted by base station #1 labeled 901_1 with the configuration in FIG. 1A, 1B, or 1C, since it has already been described.

As illustrated in FIGS. 11 and 12, when base station #1 labeled 901_1 transmits "sector sweep reference signal 1101_i in transmission panel antenna i for frequency $bp$", "reference signal 1201_j according to j-th parameter in transmission panel antenna i for frequency $bp$" includes, for example, the following information.

· Identification number (ID) of the transmission panel antenna, which corresponds to i here, for example;

· Identification number (ID) of the parameter used for beamforming (directivity control), which corresponds to j here, for example; and

· The number of frequency divisions in which sector sweep reference signals can be transmitted when the terminals transmit the sector sweep reference signals, which will be described later.

Note that, in a case where "the number of frequency divisions in which sector sweep reference signals can be transmitted" is determined in advance, information of the number of frequency divisions in which sector sweep reference signals can be transmitted need not be included in "reference signal 1201_j according to j-th parameter in transmission panel antenna i for frequency $bp$".

Note that "reference signal 1201_j according to j-th parameter in transmission panel antenna i for frequency $bp$" may include other information. Examples of the information will be described in the other embodiments, for example, in Embodiment 6 or later.

The following information may also be included in "reference signal 1201_j according to j-th parameter in transmission panel antenna i for frequency $bp$".

· Information on the frequency band and/or frequency $bp$ (information of the number of frequency divisions may also be included), which will be described later.

Transmission of the "identification number (ID) of the transmission panel antenna for frequency $bp$" and the "identification number (ID) of the parameter used for beamforming (directivity control)" by base station #1 labeled 901_1 allows the terminals to recognize the "identification number (ID) of the transmission panel antenna" and the "identification number (ID) of the parameter used for beamforming (directivity control)" that have allowed successful reception; accordingly, base station #1 labeled 901_1 and the terminals can perform appropriate control. This produces the effect of enhancing data reception quality.

Note that "the number of frequency divisions in which sector sweep reference signals can be transmitted when the terminals transmit the sector sweep reference signals" may be changeable according to the frame and/or time, for example. This produces the effect of enhancing data transmission efficiency of a communication system.

Further, transmission of the "information on the frequency band and/or frequency $bp$" by base station #1 labeled 901_1 allows the terminals to obtain the information and transmit "information relative to a frequency that the terminals desire the base station to use for transmission". This allows the base station to perform appropriate control and produces the effect of enhancing data reception quality.

Next, a description will be given of an operation in the time period from time t1 to t2 in FIG. 10, which is the terminal response period. Note that, in this Embodiment 6, the description is based on a case where the terminals use a multi-carrier scheme such as the OFDM scheme and frequency (bands) used by the base station and frequency (bands) used by the terminals partially overlap each other, by way of example.

FIG. 27 illustrates an exemplary operation in the time period from time t1 to t2, which is the terminal response period. Note that the horizontal axis represents time in FIG. 27. Terminals such as terminal #1 labeled 902_1, terminal #2 labeled 902_2, terminal #3 labeled 902_3, terminal #4 labeled 902_4, terminal #5 labeled 902_5, and terminal #6 labeled 902_6 in FIG. 9 transmit sector sweep reference signals in the time period from time t1 to t2, which is the terminal response period. Note that, in FIG. 27, the components that operate in the same manner as in FIG. 10 are denoted by the same reference signs.

As illustrated in FIGS. 10 and 27, for example, base station #1 labeled 901_1 transmits sector sweep reference signals in the time period from time t0 to t1. After that, the terminal response period, which is the time period from time t1 to t2, includes terminal "sector sweep reference signal" 2701_1 as illustrated in FIG. 13.

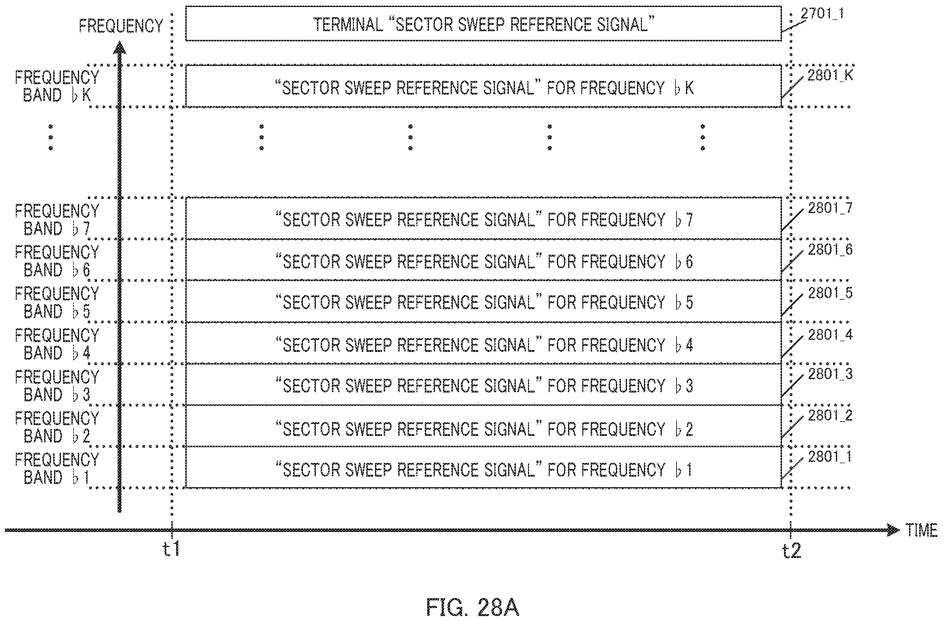

FIG. 28A illustrates an exemplary configuration, in time and frequency, of terminal "sector sweep reference signal" 2701_1 illustrated in FIG. 27. Note that the horizontal axis represents time and the vertical axis represents frequency in FIG. 28A.

As illustrated in FIG. 28A, "terminal "sector sweep reference signal" 2701_1 includes areas for "sector sweep reference signal" 2801_1 for frequency $b1$, "sector sweep reference signal" 2801_2 for frequency $b2$, "sector sweep reference signal" 2801_3 for frequency $b3$, "sector sweep reference signal" 2801_4 for frequency $b4$, "sector sweep reference signal" 2801_5 for frequency $b5$, "sector sweep reference signal" 2801_6 for frequency $b6$, "sector sweep reference signal" 2801_7 for frequency $b7$, ..., "sector sweep reference signal" 2801_K for frequency bK".

Thus, in the case of FIG. 28A, "the number of frequency divisions in which sector sweep reference signals can be transmitted when the terminals transmit the sector sweep reference signals" is set to K by base station #1 labeled 901_1.

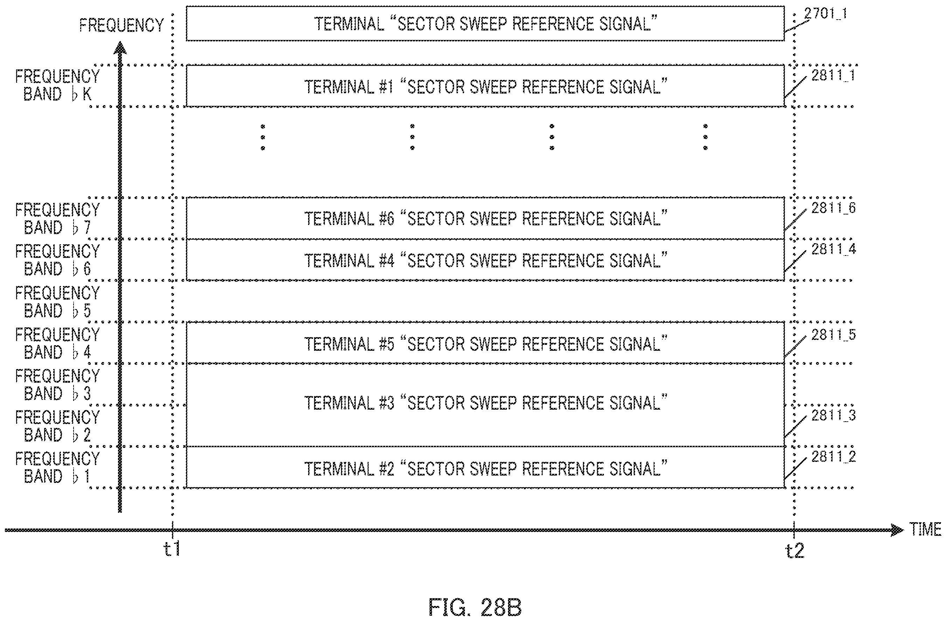

FIG. 28B illustrates exemplary occupation by the terminals in the areas for "sector sweep reference signal" 2801_1 for frequency $b1$, "sector sweep reference signal" 2801_2 for frequency $b2$, "sector sweep reference signal" 2801_3 for frequency $b3$, "sector sweep reference signal" 2801_4 for frequency $b4$, "sector sweep reference signal" 2801_5 for frequency $b5$, "sector sweep reference signal" 2801_6 for frequency $b6$, "sector sweep reference signal" 2801_7 for frequency $b7$, ..., "sector sweep reference signal" 2801_K for frequency $bK$" included in terminal "sector sweep reference signal" 2701_1 illustrated in FIG. 27A. Note that the horizontal axis represents time and the vertical axis represents frequency in FIG. 28A.

Terminal #1 labeled 902_1 in FIG. 9 receives sector sweep reference signal 1001 transmitted by base station #1 labeled 901_1 and estimates the "frequency band, transmission panel antenna, and parameter number" with high reception quality from transmission panel antennas of base station #1 labeled 901_1. Note that this estimation can be performed by obtaining sector sweep reference signal 1001, and the "identification number (ID) of the transmission panel antenna" and the "identification number (ID) of the parameter used for beamforming (directivity control)" that are included in sector sweep reference signal 1001. In addition, the "information on the frequency band and/or frequency $bp$" included in sector sweep reference signal 1001 may be used for this estimation.

Terminal #1 labeled 902_1 estimates, for example, "transmission panel antenna a1 and parameter b1" as the "transmission panel antenna and parameter" with high reception quality. Terminal #1 labeled 902_1 also estimates frequency band $bK$ as the "frequency domain" with high reception quality. Terminal #1 labeled 902_1 may further estimate the frequency domain with second highest reception quality, the frequency domain with third highest reception quality, and so forth. Note that the frequency domain with highest reception quality will be discussed here to simplify the description.

While estimating the "transmission panel antenna and parameter" with high reception quality, terminal #1 labeled 902_1 may simultaneously obtain information of "the number of frequency divisions in which sector sweep reference signals can be transmitted when the terminals transmit the sector sweep reference signals". In the case of FIG. 28B, terminal #1 labeled 902_1 may obtain information indicating that "the number of frequency divisions in which sector sweep reference signals can be transmitted when the terminals transmit the sector sweep reference signals" is K.

Then, terminal #1 labeled 902_1, for example, transmits terminal #1 "sector sweep reference signal" 2811_1 using frequency band $bK$ based on the above result. Although the description here is based on an example where terminal #1 labeled 902_1 uses "frequency band $bK$" that is estimated to have the highest reception quality, a frequency band other than the frequency band estimated to have the highest reception quality may be used.

Note that terminal #1 "sector sweep reference signal" 2811_1 includes information of the "transmission panel antenna and parameter" with high reception quality obtained by terminal #1 labeled 902_1, that is, information of "transmission panel antenna a1 and parameter b1". Terminal #1 "sector sweep reference signal" 2811_1 also includes information of the "frequency domain", for example, information of "frequency band $bK$". This will be described later.

Likewise, terminal #2 labeled 902_2 in FIG. 9 receives sector sweep reference signal 1001 transmitted by base station #1 labeled 901_1 and estimates the "frequency band, transmission panel antenna, and parameter number" with high reception quality from transmission panel antennas of base station #1 labeled 901_1. Note that this estimation can be performed by obtaining sector sweep reference signal 1001, and the "identification number (ID) of the transmission panel antenna" and the "identification number (ID) of the parameter used for beamforming (directivity control)" that are included in sector sweep reference signal 1001. In addition, the "information on the frequency band and/or frequency $b_p$" included in sector sweep reference signal 1001 may be used for this estimation.

Terminal #2 labeled 902_2 estimates, for example, "transmission panel antenna a2 and parameter b2" as the "transmission panel antenna and parameter" with high reception quality. Terminal #2 labeled 902_2 also estimates frequency band $b_1$ as the "frequency domain" with high reception quality. Terminal #2 labeled 902_2 may further estimate the frequency domain with second highest reception quality, the frequency domain with third highest reception quality, and so forth. Note that the frequency domain with highest reception quality will be discussed here to simplify the description.

While estimating the "transmission panel antenna and parameter" with high reception quality, terminal #2 labeled 902_2 may simultaneously obtain information of "the number of frequency divisions in which sector sweep reference signals can be transmitted when the terminals transmit the sector sweep reference signals". In the case of FIG. 28B, terminal #2 labeled 902_2 may obtain information indicating that "the number of frequency divisions in which sector sweep reference signals can be transmitted when the terminals transmit the sector sweep reference signals" is K.

Then, terminal #2 labeled 902_2, for example, transmits terminal #2 "sector sweep reference signal" 2811_2 using frequency band b 1 based on the above result. Although the description here is based on an example where terminal #2 labeled 902_2 uses "frequency band $b_1$" that is estimated to have the highest reception quality, a frequency band other than the frequency band estimated to have the highest reception quality may be used.

Note that terminal #2 "sector sweep reference signal" 2811_2 includes information of the "transmission panel antenna and parameter" with high reception quality obtained by terminal #2 labeled 902_2, that is, information of "transmission panel antenna a2 and parameter b2". Terminal #2 "sector sweep reference signal" 2811_2 also includes information of the "frequency domain", for example, information of "frequency band $b_1$". This will be described later.

Thus, terminal #i labeled 902_i receives sector sweep reference signal 1001 transmitted by base station #1 labeled 901_1 and estimates the "frequency band, transmission panel antenna, and parameter number" with high reception quality from transmission panel antennas of base station #1 labeled 901_1. Note that this estimation can be performed by obtaining sector sweep reference signal 1001, and the "identification number (ID) of the transmission panel antenna" and the "identification number (ID) of the parameter used for beamforming (directivity control)" that are included in sector sweep reference signal 1001. Note that i is an integer equal to or greater than 1, for example. In addition, the "information on the frequency band and/or frequency $b_p$" included in sector sweep reference signal 1001 may be used for this estimation.

Terminal #i labeled 902_i estimates, for example, "transmission panel antenna ai and parameter bi" as the "transmission panel antenna and parameter" with high reception quality. Terminal #i labeled 902_i also estimates frequency band bzi as the "frequency domain" with high reception quality. Note that a plurality of frequency domains can be specified. Terminal #i labeled 902_i may further estimate the frequency domain with second highest reception quality, the frequency domain with third highest reception quality, and so forth. Note that the frequency domain with highest reception quality will be discussed here to simplify the description.

While estimating the "transmission panel antenna and parameter" with high reception quality, terminal #i labeled 902_i may simultaneously obtain information of "the number of frequency divisions in which sector sweep reference signals can be transmitted when the terminals transmit the sector sweep reference signals". In the case of FIG. 24, terminal #i labeled 902_i may obtain information indicating that "the number of frequency divisions in which sector sweep reference signals can be transmitted when the terminals transmit the sector sweep reference signals" is K.

Then, terminal #i labeled 902_i, for example, transmits terminal #i "sector sweep reference signal" 2811_i using frequency band bzi based on the above result. Although the description here is based on an example where terminal #i labeled 902_i uses "frequency band $b_{zi}$" that is estimated to have the highest reception quality, a frequency band other than the frequency band estimated to have the highest reception quality may be used.

Note that terminal #i "sector sweep reference signal" 2811_i includes information of the "transmission panel antenna and parameter" with high reception quality obtained by terminal #i labeled 902_i, that is, information of "transmission panel antenna ai and parameter bi". Terminal #i "sector sweep reference signal" 2811_i also includes information of the "frequency domain", for example, information of "frequency band bzi". This will be described later.

Note that, in FIG. 27, when the frequency (band) used for sector sweep reference signal 1001 transmitted by base station #1 labeled 901_1 is the same as the frequency (band) used for terminal "sector sweep reference signal" 2701_1 transmitted by terminal #i, terminal #i "sector sweep reference signal" 2811_i need not but may include the information of the "frequency domain". In this case, base station #1 labeled 901_1 can recognize the "frequency domain" by referring to the frequency domain where terminal #i "sector sweep reference signal" 2811_i is present.

Meanwhile, in FIG. 27, when the frequency (band) used for sector sweep reference signal 1001 transmitted by base station #1 labeled 901_1 is different from the frequency (band) used for terminal "sector sweep reference signal" 2701_1 transmitted by terminal #i, including the information of the "frequency domain" in terminal #i "sector sweep reference signal" 2811_i produces the effect of accurately transmitting the information of the "frequency domain" to base station #1 labeled 901_1.

A description will be given of a configuration of terminal #i "sector sweep reference signal" 2811_i transmitted by terminal #i labeled 902_i described with reference to FIG. 28B. To simplify the description, terminal #i labeled 902_i has the configuration in FIG. 1A, 1B, or 1C, and terminal #i labeled 902_i with the configuration in FIG. 1A, 1B, or 1C includes the configuration in FIG. 3 as transmission panel antenna xi labeled 106_xi. Note that the configuration of terminal #i labeled 902_i is not limited to the configuration in FIG. 1A, 1B, or 1C, and the configuration of transmission panel antenna xi labeled 106_xi included in terminal #i labeled 902_i with the configuration in FIG. 1A, 1B, or 1C is not limited to the configuration in FIG. 3.

Terminal #i labeled 902_i transmits terminal #i "sector sweep reference signal" 2811_i as illustrated in FIG. 28B. FIG. 15A illustrates an exemplary configuration of terminal #i "sector sweep reference signal" 2811_i. Note that the horizontal axis represents time in FIG. 15A. "Terminal #i "sector sweep reference signal" 1401_i" in FIG. 15A corresponds to an example of "sector sweep reference signal" 2811_i in FIG. 28B.

As illustrated in FIG. 15A, "sector sweep reference signal" 2811_i of terminal #i labeled 902_i is composed of "sector sweep reference signal 1501_1 in terminal #i transmission panel antenna 1, sector sweep reference signal 1501_2 in terminal #i transmission panel antenna 2, ..., sector sweep reference signal 1501_M in terminal #i transmission panel antenna M".

For example, terminal #i labeled 902_i with the configuration in FIG. 1A, 1B, or 1C transmits "sector sweep reference signal 1501_1 in terminal #i transmission panel antenna 1" using transmission panel antenna 1 labeled 106_1.

That is, terminal #i labeled 902_i with the configuration in FIG. 1A, 1B, or 1C transmits "sector sweep reference signal 1501_k in terminal #i transmission panel antenna k" using transmission panel antenna k labeled 106_k. Note that k is an integer from 1 to M (both inclusive).

Note that the number of transmission panel antennas included in terminal #i labeled 902_i is M in FIG. 15A, but the number of transmission panel antennas is not limited to this and may be N, where N is an integer equal to or greater than 1.

The details have also been described in other embodiments.

FIG. 15B illustrates an exemplary configuration of "sector sweep reference signal 1501_xi in terminal #i transmission panel antenna xi" in FIG. 15A. Note that the horizontal axis represents time in FIG. 15.

As illustrated in FIG. 15B, "sector sweep reference signal 1501_xi in terminal #i transmission panel antenna xi" is composed of, for example, "reference signal 1511_1 according to first parameter in transmission panel antenna xi", "reference signal 1511_2 according to second parameter in transmission panel antenna xi", "reference signal 1511_3 according to third parameter in transmission panel antenna xi", and "reference signal 1511_4 according to fourth parameter in transmission panel antenna xi".

For example, terminal #i labeled 902_i with the configuration in FIG. 1A, 1B, or 1C includes the configuration in FIG. 3 as transmission panel antenna xi labeled 106_xi.

A description will be given of "reference signal 1511_1 according to first parameter in transmission panel antenna xi".

When terminal #i labeled 902_i transmits "reference signal 1511_1 according to first parameter in transmission panel antenna xi" illustrated in FIG. 15B, terminal #i labeled 902_i sets the multiplication coefficient in multiplier 304_1 in transmission panel antenna xi labeled 106_xi as w1(xi, 1). When first transmission signal 303_1 of "reference signal 1511_1 according to first parameter in transmission panel antenna xi" is tx1ref1(t), multiplier 304_1 obtains tx1ref1(t) × w1(xi, 1). Then, terminal #i labeled 902_i transmits tx1ref1(t) × w1(xi, 1) from antenna 306_1 in FIG. 3. Note that t represents time.

When terminal #i labeled 902_i transmits "reference signal 1511_1 according to first parameter in transmission panel antenna xi" illustrated in FIG. 15B, terminal #i labeled 902_i sets the multiplication coefficient in multiplier 304_2 in transmission panel antenna xi labeled 106_xi as w2(xi, 1). When second transmission signal 303_2 of "reference signal 1511_1 according to first parameter in transmission panel antenna xi" is tx2ref1(t), multiplier 304_2 obtains tx2ref1(t) × w2(xi, 1). Then, terminal #i labeled 902_i transmits tx2ref1(t) × w2(xi, 1) from antenna 306_2 in FIG. 3.

When terminal #i labeled 902_i transmits "reference signal 1511_1 according to first parameter in transmission panel antenna xi" illustrated in FIG. 15B, terminal #i labeled 902_i sets the multiplication coefficient in multiplier 304_3 in transmission panel antenna xi labeled 106_xi as w3(xi, 1). When third transmission signal 303_3 of "reference signal 1511_1 according to first parameter in transmission panel antenna xi" is tx3ref1(t), multiplier 304_3 obtains tx3ref1(t) × w3(xi, 1). Then, terminal #i labeled 902_i transmits tx3ref1(t) × w3(xi, 1) from antenna 306_3 in FIG. 3.

When terminal #i labeled 902_i transmits "reference signal 1511_1 according to first parameter in transmission panel antenna xi" illustrated in FIG. 15B, terminal #i labeled 902_i sets the multiplication coefficient in multiplier 304_4 in transmission panel antenna xi labeled 106_xi as w4(xi, 1). When fourth transmission signal 303_4 of "reference signal 1511_1 according to first parameter in transmission panel antenna xi" is tx4ref1(t), multiplier 304_4 obtains tx4ref1(t) × w4(xi, 1). Then, terminal #i labeled 902_i transmits tx4ref1(t) × w4(xi, 1) from antenna 306_4 in FIG. 3.

A description will be given of "reference signal 1511J according to j-th parameter in transmission panel antenna xi".

When terminal #i labeled 902_i transmits "reference signal 1511_j according to j-th parameter in transmission panel antenna xi" illustrated in FIG. 15B, terminal #i labeled 902_i sets the multiplication coefficient in multiplier 304_1 in transmission panel antenna xi labeled 106_xi as w1(xi, j). When first transmission signal 303_1 of "reference signal 1511_j according to j-th parameter in transmission panel antenna xi" is $tx1ref_j(t)$, multiplier 304_1 obtains tx1refj(t) × w1(xi, j). Then, terminal #i labeled 902_i transmits tx1refj(t) × w1(xi, j) from antenna 306_1 in FIG. 3. Note that t represents time.

When terminal #i labeled 902_i transmits "reference signal 1511J according to j-th parameter in transmission panel antenna xi" illustrated in FIG. 15B, terminal #i labeled 902_i sets the multiplication coefficient in multiplier 304_2 in transmission panel antenna xi labeled 106_xi as w2(xi, j). When second transmission signal 303_2 of "reference signal 1511_j according to j-th parameter in transmission panel antenna xi" is tx2refj(t), multiplier 304_2 obtains tx2refj(t) × w2(xi, j). Then, terminal #i labeled 902_i transmits tx2refj(t) × w2(xi, j) from antenna 306_2 in FIG. 3.

When terminal #i labeled 902_i transmits "reference signal 1511_j according to j-th parameter in transmission panel antenna xi" illustrated in FIG. 15B, terminal #i labeled 902_i sets the multiplication coefficient in multiplier 304_3 in transmission panel antenna xi labeled 106_xi as w3(xi, j). When third transmission signal 303_3 of "reference signal 1511_j according to j-th parameter in transmission panel antenna xi" is tx3refj(t), multiplier 304_3 obtains tx3refj(t) × w3(xi, j). Then, terminal #i labeled 902_i transmits tx3refj(t) × w3(xi, j) from antenna 306_3 in FIG. 3.

When terminal #i labeled 902_i transmits "reference signal 1511J according to j-th parameter in transmission panel antenna xi" illustrated in FIG. 15B, terminal #i labeled 902_i sets the multiplication coefficient in multiplier 304_4 in transmission panel antenna xi labeled 106_xi as w4(xi, j). When fourth transmission signal 303_4 of "reference signal 1511_j according to j-th parameter in transmission panel antenna xi" is tx4refj(t), multiplier 304_4 obtains tx4refj(t) × w4(xi, j). Then, terminal #i labeled 902_i transmits tx4refj(t) × w4(xi, j) from antenna 306_4 in FIG. 3.

Note that j is an integer from 1 to 4 (both inclusive) in the case of FIG. 15B. The number Z of parameter changes is four in FIG. 15B, but the number Z of parameter changes is not limited to four. The same can be implemented as long as Z is an integer equal to or greater than 1 or an integer equal to or greater than 2. At this time, j is an integer from 1 to Z (both inclusive).

As illustrated in FIGS. 28B, 15A, and 15B, when terminal #i labeled 902_i transmits "sector sweep reference signal 1501_xi in terminal #i transmission panel antenna xi", "reference signal 1511_j according to j-th parameter in transmission panel antenna xi" includes, for example, the following information.

· Information of the "transmission panel antenna and parameter" of base station #1 labeled 901_1 with high reception quality, as described above.

Thus, terminal #i labeled 902_i transmits the "information of the "transmission panel antenna and parameter" of base station #1 labeled 901_1 with high reception quality" in "sector sweep reference signal 1501_1 in terminal #i transmission panel antenna 1", "sector sweep reference signal 1501_2 in terminal #i transmission panel antenna 2", ..., "sector sweep reference signal 1501_M in terminal #i transmission panel antenna M" in FIG. 15A.

In addition, terminal #i labeled 902_i transmits the "information of the "transmission panel antenna and parameter" of base station #1 labeled 901_1 with high reception quality" in "reference signal 1511_1 according to first parameter in transmission panel antenna xi", "reference signal 1511_2 according to second parameter in transmission panel antenna xi", "reference signal 1511_3 according to third parameter in transmission panel antenna xi", and "reference signal 1511_4 according to fourth parameter in transmission panel antenna xi" in FIG. 15B in ""sector sweep reference signal 1501_1 in terminal #i transmission panel antenna 1", "sector sweep reference signal 1501_2 in terminal #i transmission panel antenna 2", ..., "sector sweep reference signal 1501_M in terminal #i transmission panel antenna M" in FIG. 15A".

In this case, base station #1 labeled 901_1 is more likely to receive, even with an omnidirectional antenna for example, any of ""sector sweep reference signal 1501_1 in terminal #i transmission panel antenna 1", "sector sweep reference signal 1501_2 in terminal #i transmission panel antenna 2", ..., "sector sweep reference signal 1501_M in terminal #i transmission panel antenna M" in FIG. 15A" transmitted by terminal #i labeled 902_i. This is because terminal #i labeled 902_i performs transmit beamforming (directivity control). This produces the effect that base station #1 labeled 901_1 is more likely to receive the "information of the "transmission panel antenna and parameter" of base station #1 labeled 901_1 with high reception quality" transmitted by terminal #i labeled 902_i. Accordingly, base station #1 labeled 901_1 can transmit a modulation signal to terminal #i labeled 902_i based on the "information of the "transmission panel antenna and parameter" of base station #1 labeled 901_1 with high reception quality", and terminal #i labeled 902_i can receive the modulation signal with high reception quality.

In a case where a plurality of terminals transmit the sector sweep reference signals as in FIG. 28B, base station #1 labeled 901_1 can obtain the "information of the "transmission panel antenna and parameter" of base station #1 labeled 901_1 with high reception quality" from the plurality of terminals. This produces the effect that base station #1 labeled 901_1 can transmit modulation signals to the plurality of terminals based on the "information of the "transmission panel antenna and parameter" of base station #1 labeled 901_1 with high reception quality" from the plurality of terminals, and that the plurality of terminals can receive the modulation signals with high reception quality.

As illustrated in FIGS. 28B, 15A, and 15B, when terminal #i labeled 902_i transmits "sector sweep reference signal 1501_xi in terminal #i transmission panel antenna xi", "reference signal 1511_j according to j-th parameter in transmission panel antenna xi" includes, for example, the following information.

  ·Identification number (ID) of the transmission panel antenna, which corresponds to xi here, for example; and

  · Identification number (ID) of the parameter used for beamforming (directivity control), which corresponds to j here, for example.

Transmission of the "identification number (ID) of the transmission panel antenna" and the "identification number (ID) of the parameter used for beamforming (directivity control)" by terminal #i labeled 902_i allows base station #1 labeled 901_1 to recognize the "identification number (ID) of the transmission panel antenna" and the "identification number (ID) of the parameter used for beamforming (directivity control)" that have allowed successful reception; accordingly, terminal #i labeled 902_i and base station #1 labeled 901_1 can perform appropriate control. This produces the effect of enhancing data reception quality.

Note that "reference signal 1511J according to j-th parameter in transmission panel antenna xi" may include other information. Examples of the information will be described in the other embodiments, for example, in Embodiment 6 or later.

Further, as illustrated in FIGS. 28B, 15A, and 15B, when terminal #i labeled 902_i transmits "sector sweep reference signal 1501_xi in terminal #i transmission panel antenna xi", "reference signal 1511_j according to j-th parameter in transmission panel antenna xi" includes, for example, the following information.

  · "Information on the frequency band and/or frequency ♭p" that has been used for transmission by terminal #i labeled 902_i or that terminal #i labeled 902_i desires base station #1 labeled 901_1 to use.

Transmission of the "information on the frequency band and/or frequency ♭p" by terminal #i labeled 902_i allows base station #1 labeled 901_1 to recognize the "information on the frequency band and/or frequency ♭p"; accordingly, terminal #i labeled 902_i and base station #1 labeled 901_1 can perform appropriate control. This produces the effect of enhancing data reception quality.

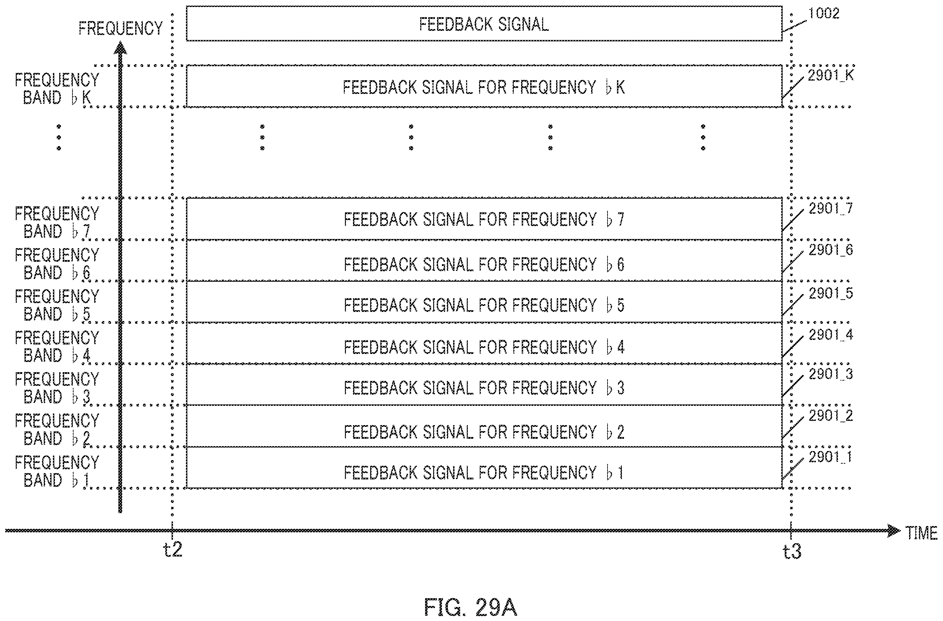

FIG. 29A illustrates an exemplary configuration of feedback signal 1002 that is present in the time period from t2 to t3 in FIG. 10 and transmitted by base station #1 labeled 901_1. Note that the horizontal axis represents time and the vertical axis represents frequency in FIG. 29A. In this example, feedback signal 1002 includes areas for "feedback signal 2901_1 for frequency ♭1, feedback signal 2901_2 for frequency ♭2, feedback signal 2901_3 for frequency ♭3, feedback signal 2901_4 for frequency ♭4, feedback signal 2901_5 for frequency ♭5, feedback signal 2901_6 for frequency ♭6, feedback signal 2901_7 for frequency ♭7, ..., feedback signal 2901_K for frequency ♭K" as illustrated in FIG. 29A.

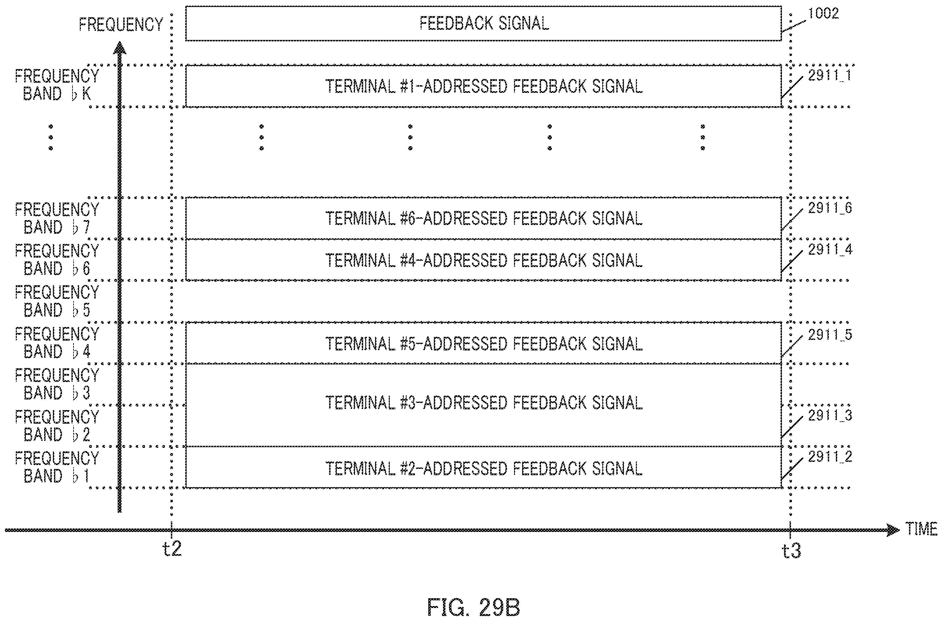

FIG. 29B illustrates exemplary specific feedback signal assignment for feedback signal 1002 in the areas for "feedback signal 2901_1 for frequency ♭1, feedback signal 2901_2 for frequency ♭2, feedback signal 2901_3 for frequency ♭3, feedback signal 2901_4 for frequency ♭4, feedback signal 2901_5 for frequency ♭5, feedback signal 2901_6 for frequency ♭6, feedback signal 2901_7 for frequency ♭7, ..., feedback signal 2901_K for frequency ♭K" illustrated in FIG. 29A.

As in FIG. 28B, for example, terminal #1 labeled 902_1 transmits terminal #1 "sector sweep reference signal" 2811_1, terminal #2 labeled 902_2 transmits terminal #2 "sector sweep reference signal" 2811_2, terminal #3 labeled 902_3 transmits terminal #3 "sector sweep reference signal" 2811_3, and other terminals also transmit sector sweep reference signals.

As in FIG. 29B, base station #1 labeled 901_1 transmits terminal #1-addressed feedback signal 2911_1 using frequency band ♭K based on terminal #1 "sector sweep reference signal" 2811_1.

Base station #1 labeled 901_1 transmits terminal #2-addressed feedback signal 2911_2 using frequency band ♭1 based on terminal #2 "sector sweep reference signal" 2811_2 as in FIG. 29B.

Base station #1 labeled 901_1 transmits terminal #3-addressed feedback signal 2911_3 using frequency bands ♭2 and ♭3 based on terminal #3 "sector sweep reference signal" 2811_3 as in FIG. 29.

Base station #1 labeled 901_1 transmits terminal #4-addressed feedback signal 2911_4 using frequency band ♭6 based on terminal #4 "sector sweep reference signal" 2811_4 as in FIG. 29.

Base station #1 labeled 901_1 transmits terminal #5-addressed feedback signal 2911_5 using frequency band ♭4 based on terminal #5 "sector sweep reference signal" 2811_5 as in FIG. 29.

Base station #1 labeled 901_1 transmits terminal #6-addressed feedback signal 2911_6 using frequency band ♭7 based on terminal #6 "sector sweep reference signal" 2811_6 as in FIG. 29.

In this manner, obtaining terminal #i-addressed feedback signal 2911_i allows terminal #i labeled 902_i to know that communication with base station #1 labeled 901_1 is available and to know the frequency band to be used. Note that FIG. 29B is merely an example. In a case where there is no terminal #1-addressed feedback signal 2911_1 as feedback signal 1002, for example, terminal #1 labeled 902_1 recognizes that the communication with base station #1 labeled 901_1 has not been established.

At this time, terminal #i-addressed feedback signal 2911_i includes, for example, information indicating that communication with terminal #i labeled 902_i is available (or indicating that data-symbol-included frame 1003 in FIG. 10 includes a symbol addressed to terminal #i labeled 902_i).

Further, base station #1 labeled 901_1 selects a frequency (band) and a transmission panel antenna and sets a parameter of beamforming based on the "information of the "transmission panel antenna and parameter" of base station #1 labeled 901_1 with high reception quality" transmitted by terminal #i labeled 902_i, and base station #1 labeled 901_1 then transmits terminal #i-addressed feedback signal 2911_i. The ""frequency (band) information" of base station #1 labeled 901_1 with high reception quality" transmitted by terminal #i labeled 902_i may be included.

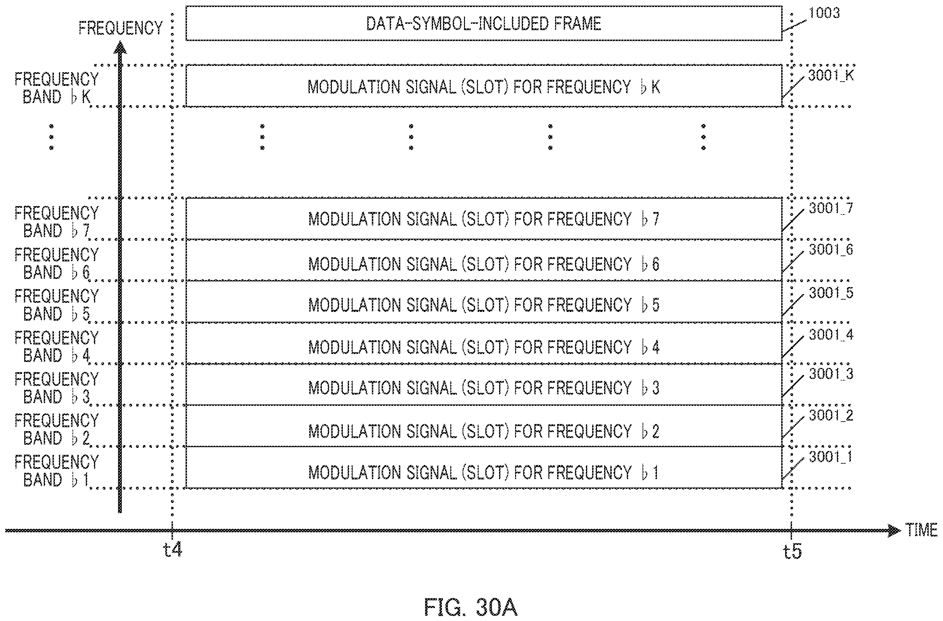

FIG. 30A illustrates an exemplary configuration of data-symbol-included frame 1003 that is present in the time period from t4 to t5 in FIG. 10 and transmitted by base station #1 labeled 901_1. Note that the horizontal axis represents time and the vertical axis represents frequency in FIG. 30A. In this example, data-symbol-included frame 1003 includes areas for "modulation signal (slot) 3001_1 for frequency ♭1, modulation signal (slot) 3001_2 for frequency ♭2, modulation signal (slot) 3001_3 for frequency ♭3, modulation signal (slot) 3001_4 for frequency ♭4, modulation signal (slot) 3001_5 for frequency ♭5, modulation signal (slot) 3001_6 for frequency ♭6, modulation signal (slot) 3001_7 for frequency ♭7, ..., modulation signal (slot) 3001_K for frequency ♭K" as illustrated in FIG. 30A.

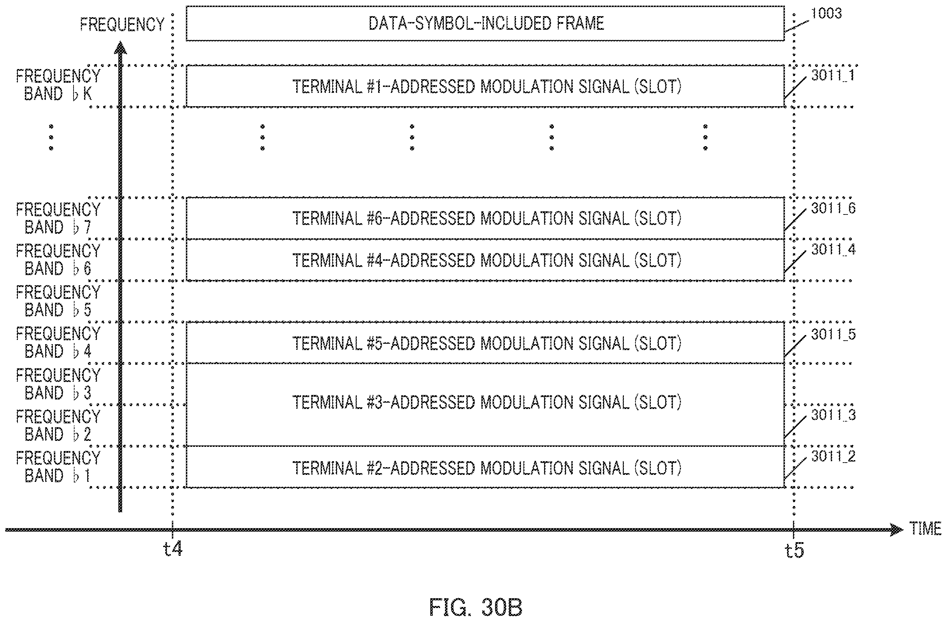

FIG. 30B illustrates exemplary specific modulation signal (slot) assignment for data-symbol-included frame 1003 in the areas for "modulation signal (slot) 3001_1 for frequency ♭1, modulation signal (slot) 3001_2 for frequency ♭2, modulation signal (slot) 3001_3 for frequency ♭3, modulation signal (slot) 3001_4 for frequency ♭4, modulation signal (slot) 3001_5 for frequency ♭5, modulation signal (slot) 3001_6 for frequency ♭6, modulation signal (slot) 3001_7 for frequency ♭7, ..., modulation signal (slot) 3001_K for frequency ♭K" illustrated in FIG. 30A.

As in FIG. 28B, for example, terminal #1 labeled 902_1 transmits terminal #1 "sector sweep reference signal" 2811_1, terminal #2 labeled 902_2 transmits terminal #2 "sector sweep reference signal" 2811_2, terminal #3 labeled 902_3 transmits terminal #3 "sector sweep reference signal" 2811_3, and other terminals also transmit sector sweep reference signals.

As in FIG. 30B, base station #1 labeled 901_1 transmits terminal #1-addressed modulation signal (slot) 3011_1 using frequency band ♭K based on terminal #1 "sector sweep reference signal" 2811_1.

Base station #1 labeled 901_1 transmits terminal #2-addressed modulation signal (slot) 3011_2 using frequency band ♭1 based on terminal #2 "sector sweep reference signal" 2811_2 as in FIG. 30B.

Base station #1 labeled 901_1 transmits terminal #3-addressed modulation signal (slot) 3011_3 using frequency bands ♭2 and ♭3 based on terminal #3 "sector sweep reference signal" 2811_3 as in FIG. 30B.

Base station #1 labeled 901_1 transmits terminal #4-addressed modulation signal (slot) 3011_4 using frequency band ♭6 based on terminal #4 "sector sweep reference signal" 2811_4 as in FIG. 30B.

Base station #1 labeled 901_1 transmits terminal #5-addressed modulation signal (slot) 3011_5 using frequency band ♭4 based on terminal #5 "sector sweep reference signal" 2811_5 as in FIG. 30B.

Base station #1 labeled 901_1 transmits terminal #6-addressed modulation signal (slot) 3011_6 using frequency band ♭7 based on terminal #6 "sector sweep reference signal" 2811_6 as in FIG. 30B.

At this time, terminal #i-addressed modulation signal (slot) 3011_i includes, for example, a data symbol (data and/or information) addressed to terminal #i labeled 902_i.

In this manner, terminal #i-addressed modulation signal (slot) 3011_i allows terminal #i labeled 902_i to know that communication with base station #1 labeled 901_1 is available and to know the frequency band to be used. Note that FIG. 30B is merely an example. In a case where there is no terminal #1-addressed modulation signal (slot) 3011_i as data-symbol-included frame 1003, for example, terminal #1 labeled 902_1 recognizes that the communication with base station #1 labeled 901_1 has not been established.

Further, base station #1 labeled 901_1 selects a frequency (band) and a transmission panel antenna and sets a parameter of beamforming based on the "information of the "transmission panel antenna and parameter" of base station #1 labeled 901_1 with high reception quality" transmitted by terminal #i labeled 902_i, and base station #1 labeled 901_1 then transmits terminal #i-addressed modulation signal (slot) 3011_i. The ""frequency (band) information" of base station #1 labeled 901_1 with high reception quality" transmitted by terminal #i labeled 902_i may be included.

Note that, in FIGS. 29A and 29B, base station #1 labeled 901_1 may estimate the "frequency (band)" and the "transmission panel antenna and parameter" of terminal #i labeled 902_1 with high reception quality in receiving "terminal #i "sector sweep reference signal" 2811_i transmitted by terminal #i labeled 902_i", and the estimated information may be included in terminal #i-addressed feedback signal 2911_i.

Terminal #i labeled 902_i selects a frequency (band) and a transmission panel antenna and determines a beamforming method based on the information of "frequency (band)" and "transmission panel antenna and parameter" of terminal #i labeled 902_i with high reception quality obtained from base station #1 labeled 901_1, and terminal #i labeled 902_i then transmits a symbol, a frame, and/or a modulation signal to base station #1 labeled 901_1. This produces the effect of enhancing data reception quality in base station #1 labeled 901_1.

Incidentally, in the time period from t3 to t4 in FIG. 10, terminal #i labeled 902_i may transmit, to base station #1 labeled 901_1, a modulation signal including information indicating successful reception of a signal from base station #1 labeled 901_1, such as acknowledgement (ACK).

Note that, terminal #i-addressed modulation signal (slot) 3011_i in FIG. 30B may include, in addition to the data symbol, a "reference signal such as a demodulation reference signal (DMRS), phase tracking reference signal (PTRS), or sounding reference signal (SRS)", a pilot symbol, a pilot signal, a preamble, and a symbol including control information, for example. Examples of the symbol including the control information may include information of a destination terminal (ID for identifying the terminal), a transmission method of the modulation signal, information of the modulation scheme, information of the error correction coding scheme (code length, code rate, etc.), information of the modulation and coding scheme (MCS), and the like.

FIG. 18 illustrates an exemplary state where base station #1 labeled 901_1 and "terminal #1 labeled 902_1, terminal #2 labeled 902_2, terminal #3 labeled 902_3, terminal #4 labeled 902_4, terminal #5 labeled 902_5, and terminal #6 labeled 902_6" communicate with each other as illustrated in FIG. 9. (A) of FIG. 18 illustrates an exemplary modulation signal transmission state of base station #1 labeled 901_1, and (B) of FIG. 18 illustrates an exemplary modulation signal transmission state of "terminal #1 labeled 902_1, terminal #2 labeled 902_2, terminal #3 labeled 902_3, terminal #4 labeled 902_4, terminal #5 labeled 902_5, and terminal #6 labeled 902_6". Note that the horizontal axes represent time in (A) and (B) of FIG. 18.

First, base station #1 labeled 901_1 transmits sector sweep reference signal 1801_1. Note that this has already been described with reference to FIG. 10, and the description thereof will be thus omitted.

Then, a terminal such as "terminal #1 labeled 902_1, terminal #2 labeled 902_2, terminal #3 labeled 902_3, terminal #4 labeled 902_4, terminal #5 labeled 902_5, and terminal #6 labeled 902_6" transmits sector sweep reference signal 1851_1. Note that this has already been described with reference to, for example, FIGS. 27, 28A, 28B, 15A, 15B, etc., and the description thereof will be thus omitted.

Base station #1 labeled 901_1 transmits feedback signal 1802_1. Note that this has already been described with reference to FIGS. 29A and 29B, and the description thereof will be thus omitted.

After that, base station #1 labeled 901_1 transmits "data-symbol-included frame 1803_1". Note that this has already been described with reference to FIGS. 30A and 30B, and the description thereof will be thus omitted. (Hence, "data-symbol-included frame 1803_1" is considered to be a frame for downlink, for example).

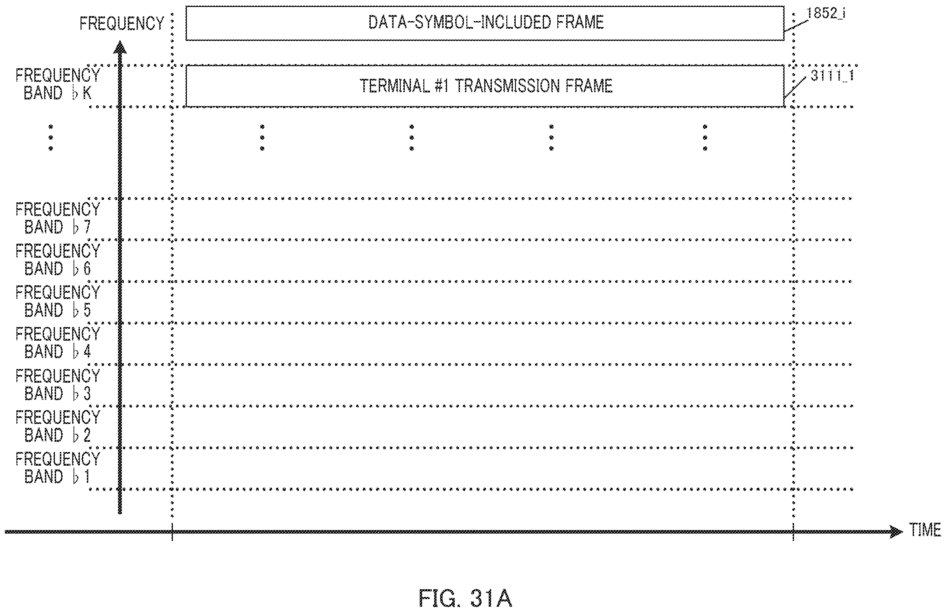

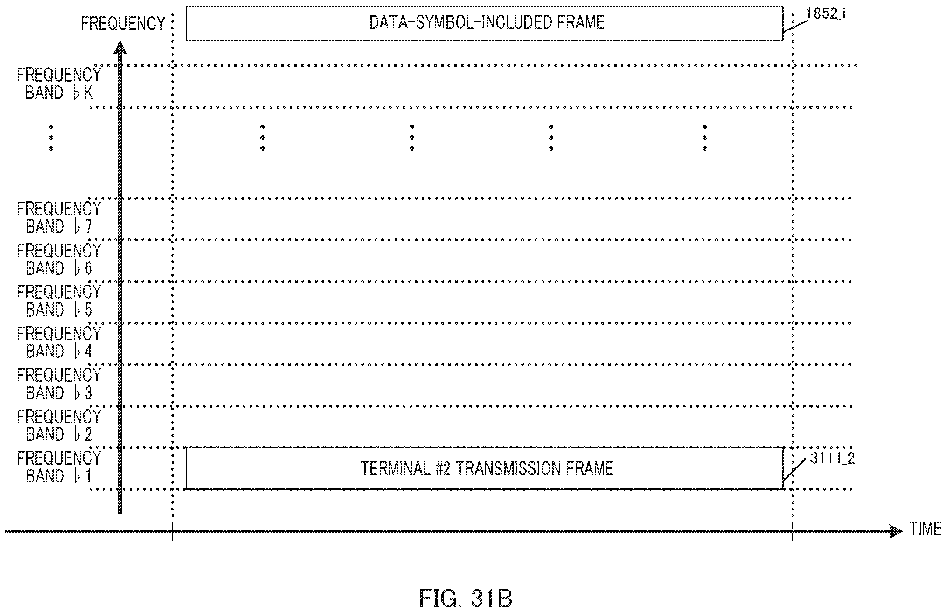

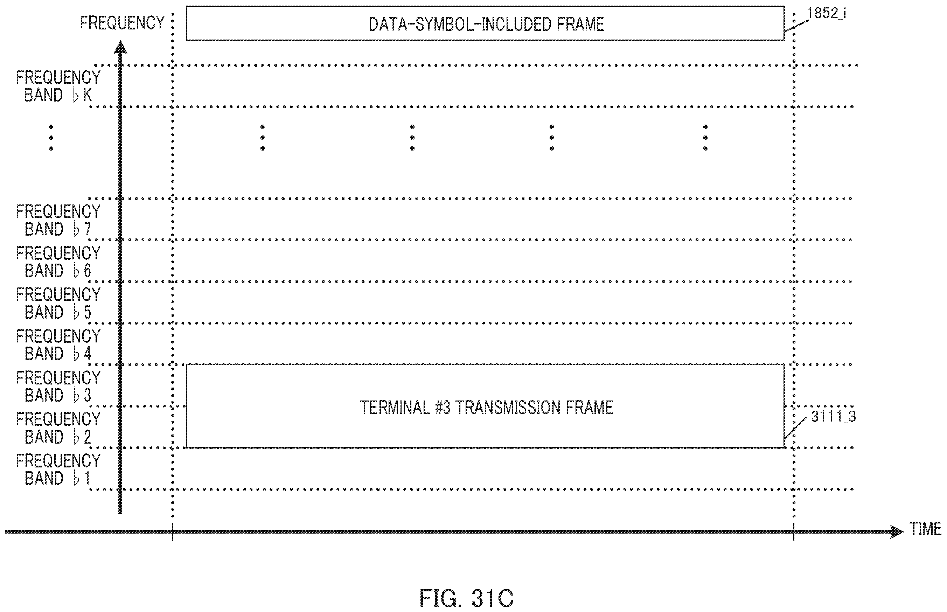

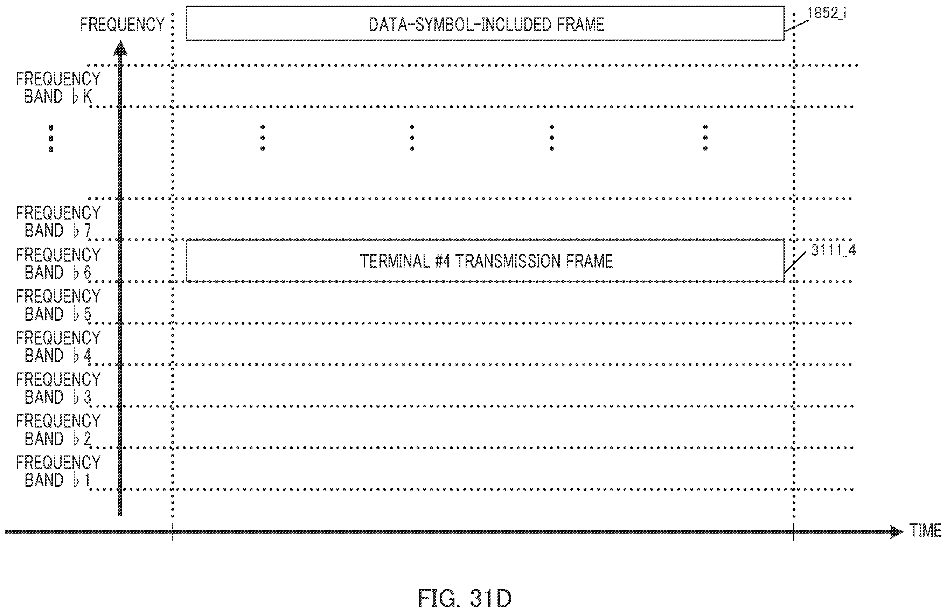

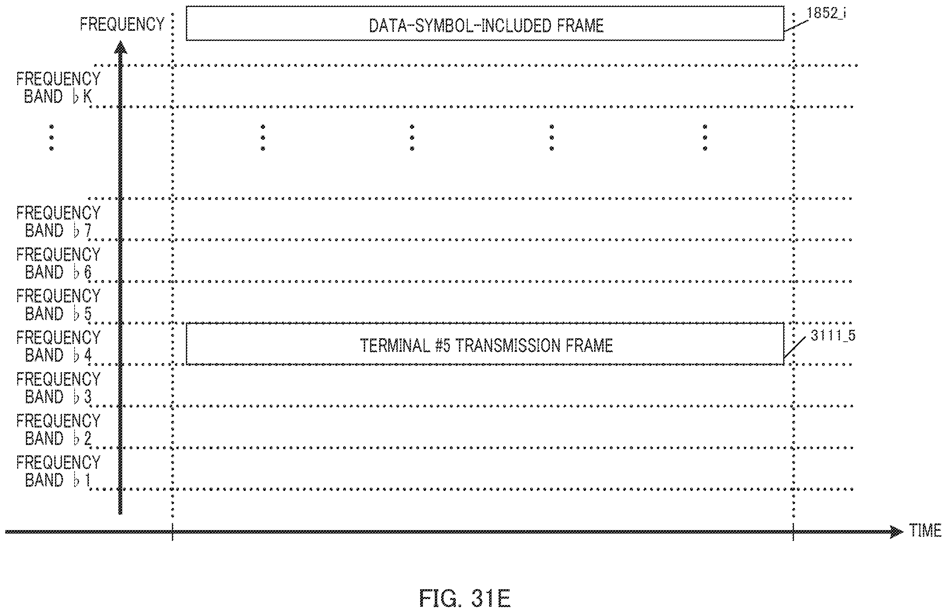

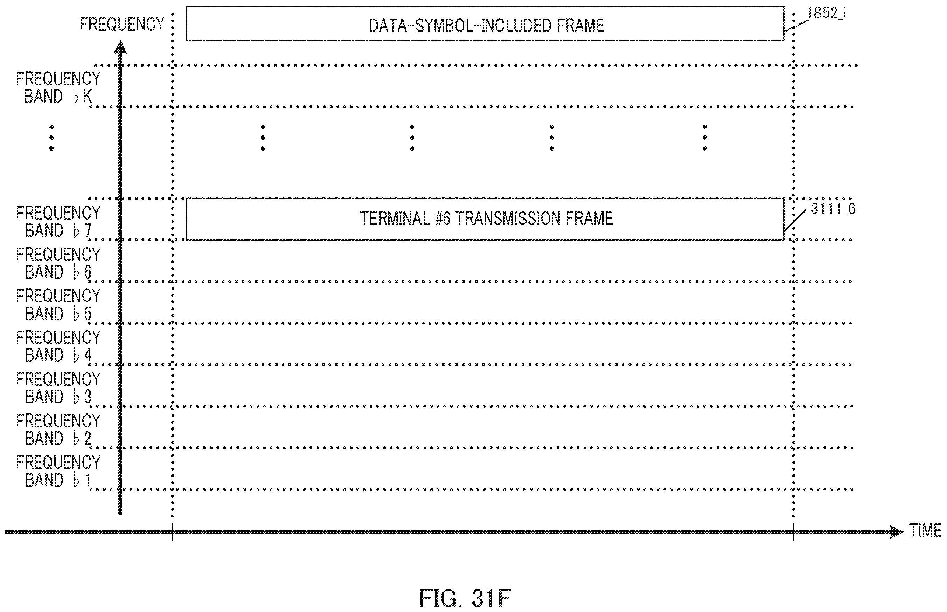

Then, the terminal such as "terminal #1 labeled 902_1, terminal #2 labeled 902_2, terminal #3 labeled 902_3, terminal #4 labeled 902_4, terminal #5 labeled 902_5, and terminal #6 labeled 902_6" transmits "data-symbol-included frame 1852_1". Note that a configuration of the frame will be described later with reference to FIGS. 31A, 31B, 31C, 31D, 31E, and 31F. (Hence, "data-symbol-included frame 1852_1" is considered to be a frame for uplink, for example).

Next, base station #1 labeled 901_1 transmits "data-symbol-included frame 1803_2". Note that a configuration method of "data-symbol-included frame 1803_2" is as described with reference to FIGS. 30A and 30B.

Then, the terminal such as "terminal #1 labeled 902_1, terminal #2 labeled 902_2, terminal #3 labeled 902_3, terminal #4 labeled 902_4, terminal #5 labeled 902_5, and terminal #6 labeled 902_6" transmits "data-symbol-included frame 1852_2". Note that a configuration of the frame will be described later with reference to FIGS. 31A, 31B, 31C, 31D, 31E, and 31F.

FIG. 19 illustrates an exemplary modulation signal transmission state of base station #1 labeled 901_1 and an exemplary modulation signal transmission state of the terminal such as "terminal #1 labeled 902_1, terminal #2 labeled 902_2, terminal #3 labeled 902_3, terminal #4 labeled 902_4, terminal #5 labeled 902_5, and terminal #6 labeled 902_6" after the state in FIG. 18.

(A) of FIG. 19 illustrates an exemplary modulation signal transmission state of base station #1 labeled 901_1, and it is a temporal continuation from the modulation signal transmission state of base station #1 labeled 901_1 in (A) of FIG. 18.

(B) of FIG. 19 illustrates an exemplary modulation signal transmission state of the terminal such as "terminal #1 labeled 902_1, terminal #2 labeled 902_2, terminal #3 labeled 902_3, terminal #4 labeled 902_4, terminal #5 labeled 902_5, and terminal #6 labeled 902_6", and it is a temporal continuation from the modulation signal transmission state of the terminal such as "terminal #1 labeled 902_1, terminal #2 labeled 902_2, terminal #3 labeled 902_3, terminal #4 labeled 902_4, terminal #5 labeled 902_5, and terminal #6 labeled 902_6" in (B) of FIG. 18.

Note that the horizontal axes represent time in (A) and (B) of FIG. 19.

After the states in (A) and (B) of FIG. 18, base station #1 labeled 901_1 transmits "data-symbol-included frame 1803_3". Note that a configuration method of "data-symbol-included frame 1803_3" is as described with reference to FIGS. 30A and 30B.

The terminal such as "terminal #1 labeled 902_1, terminal #2 labeled 902_2, terminal #3 labeled 902_3, terminal #4 labeled 902_4, terminal #5 labeled 902_5, and terminal #6 labeled 902_6" transmits "data-symbol-included frame 1852_3". Note that a configuration of the frame will be described later with reference to FIGS. 31A, 31B, 31C, 31D, 31E, and 31F.

Next, base station #1 labeled 901_1 transmits sector sweep reference signal 1801_2. Note that this has already been described with reference to FIG. 10, and the description thereof will be thus omitted.

Then, the terminal such as "terminal #1 labeled 902_1, terminal #2 labeled 902_2, terminal #3 labeled 902_3, terminal #4 labeled 902_4, terminal #5 labeled 902_5, and terminal #6 labeled 902_6" transmits sector sweep reference signal 1851_2. Note that this has already been described with reference to, for example, FIGS. 27, 28A, 28B, 15A, 15B, etc., and the description thereof will be thus omitted.

Base station #1 labeled 901_1 transmits feedback signal 1802_2. Note that this has already been described with reference to FIGS. 29A and 29B, and the description thereof will be thus omitted.

After that, base station #1 labeled 901_1 transmits "data-symbol-included frame 1803_4". Note that this has already been described with reference to FIGS. 30A and 30B, and the description thereof will be thus omitted.

Then, the terminal such as "terminal #1 labeled 902_1, terminal #2 labeled 902_2, terminal #3 labeled 902_3, terminal #4 labeled 902_4, terminal #5 labeled 902_5, and terminal #6 labeled 902_6" transmits "data-symbol-included frame 1852_4". Note that a configuration of the frame will be described later with reference to FIGS. 31A, 31B, 31C, 31D, 31E, and 31F.

As described above, base station #1 labeled 901_1 and the terminal transmit the sector sweep reference signals before the "transmission of the "data-symbol-included frames" by base station #1 labeled 901_1 and/or the transmission of the "data-symbol-included frames" by the terminal such as "terminal #1 labeled 902_1, terminal #2 labeled 902_2, terminal #3 labeled 902_3, terminal #4 labeled 902_4, terminal #5 labeled 902_5, and terminal #6 labeled 902_6"", and again transmit the sector sweep reference signals after the "transmission of the "data-symbol-included frames" by base station #1 labeled 901_1 and/or the transmission of the "data-symbol-included frames" by the terminal such as "terminal #1 labeled 902_1, terminal #2 labeled 902_2, terminal #3 labeled 902_3, terminal #4 labeled 902_4, terminal #5 labeled 902_5, and terminal #6 labeled 902_6"" Base station #1 labeled 901_1 and the terminal then each configure a frequency (band), select a transmission panel antenna to be used, and configure transmit beamforming. This produces the effect that the base station and/or the terminal achieve high data reception quality.

Next, a description will be given of an exemplary configuration of "data-symbol-included frame 1852_i" transmitted by the terminal such as "terminal #1 labeled 902_1, terminal #2 labeled 902_2, terminal #3 labeled 902_3, terminal #4 labeled 902_4, terminal #5 labeled 902_5, and terminal #6 labeled 902_6" with reference to FIGS. 31A, 31B, 31C, 31D, 31E, and 31F. Note that i is an integer equal to or greater than 1, for example, and the horizontal axis represents time and the vertical axis represents frequency in FIGS. 31A, 31B, 31C, 31D, 31E, and 31F.

As illustrated in FIGS. 31A, 31B, 31C, 31D, 31E, and 31F, there are frequency band $\flat 1$, frequency band $\flat 2$, frequency band $\flat 3$, frequency band $\flat 4$, frequency band $\flat 5$, frequency band $\flat 6$, frequency band $\flat 7$, ..., frequency band $\flat K$ for "data-symbol-included frame 1852_i".

FIG. 31A illustrates "data-symbol-included frame 1852_i" transmitted by terminal #1 labeled 902_1, and terminal #1 labeled 902_1 transmits "terminal #1 transmission frame (including a data symbol) 3111_1" using frequency band $\flat K$ as illustrated in FIG. 31A.

FIG. 31B illustrates "data-symbol-included frame 1852_i" transmitted by terminal #2 labeled 902_2, and terminal #2 labeled 902_2 transmits "terminal #2 transmission frame (including a data symbol) 3111_2" using frequency band $\flat 1$ as illustrated in FIG. 31B.

FIG. 31C illustrates "data-symbol-included frame 1852_i" transmitted by terminal #3 labeled 902_3, and terminal #3 labeled 902_3 transmits "terminal #3 transmission frame (including a data symbol) 3111_3" using frequency bands $\flat 2$ and $\flat 3$ as illustrated in FIG. 31C.

FIG. 31D illustrates "data-symbol-included frame 1852_i" transmitted by terminal #4 labeled 902_4, and terminal #4 labeled 902_4 transmits "terminal #4 transmission frame (including a data symbol) 3111_4" using frequency band ♭6 as illustrated in FIG. 31D.

FIG. 31E illustrates "data-symbol-included frame 1852_i" transmitted by terminal #5 labeled 902_5, and terminal #5 labeled 902_5 transmits "terminal #5 transmission frame (including a data symbol) 3111_5" using frequency band ♭4 as illustrated in FIG. 31E.

FIG. 31F illustrates "data-symbol-included frame 1852_i" transmitted by terminal #6 labeled 902_6, and terminal #6 labeled 902_6 transmits "terminal #6 transmission frame (including a data symbol) 3111_6" using frequency band ♭7 as illustrated in FIG. 31F.

As described above, "data-symbol-included frame 1852_i" transmitted by the terminal such as "terminal #1 labeled 902_1, terminal #2 labeled 902_2, terminal #3 labeled 902_3, terminal #4 labeled 902_4, terminal #5 labeled 902_5, and terminal #6 labeled 902_6" is subjected to, for example, frequency division (OFDMA here) and transmitted by each terminal, and base station #1 labeled 901_1 receives the frame transmitted by the terminal, thereby preventing interference and achieving high data reception quality.

Note that terminal #1 transmission frame 3111_1, terminal #2 transmission frame 3111_2, terminal #3 transmission frame 3111_3, terminal #4 transmission frame 3111_4, terminal #5 transmission frame 3111_5, and terminal #6 transmission frame 3111_6 in FIGS. 31A, 31B, 31C, 31D, 31E, and 31F may include, in addition to the data symbol, a "reference signal such as DMRS, PTRS, or SRS", a pilot symbol, a pilot signal, a preamble, and a symbol including control information, for example.

In FIGS. 31A, 31B, 31C, 31D, 31E, and 31F, a description has been given of a case where the terminals perform frequency division on the frames to be transmitted, but the terminals may perform spatial division on the frames to be transmitted using multi user-multiple-input multiple-output (MU-MIMO).

FIG. 28B illustrates exemplary occupation by the terminals in the areas for ""sector sweep reference signal" 2801_1 for frequency ♭1, "sector sweep reference signal" 2801_2 for frequency ♭2, "sector sweep reference signal" 2801_3 for frequency ♭3, "sector sweep reference signal" 2801_4 for frequency ♭4, "sector sweep reference signal" 2801_5 for frequency ♭5, "sector sweep reference signal" 2801_6 for frequency ♭6, "sector sweep reference signal" 2801_7 for frequency ♭7, ..., "sector sweep reference signal" 2801_K for frequency ♭K" included in terminal "sector sweep reference signal" 2701_1" illustrated in FIG. 28A.

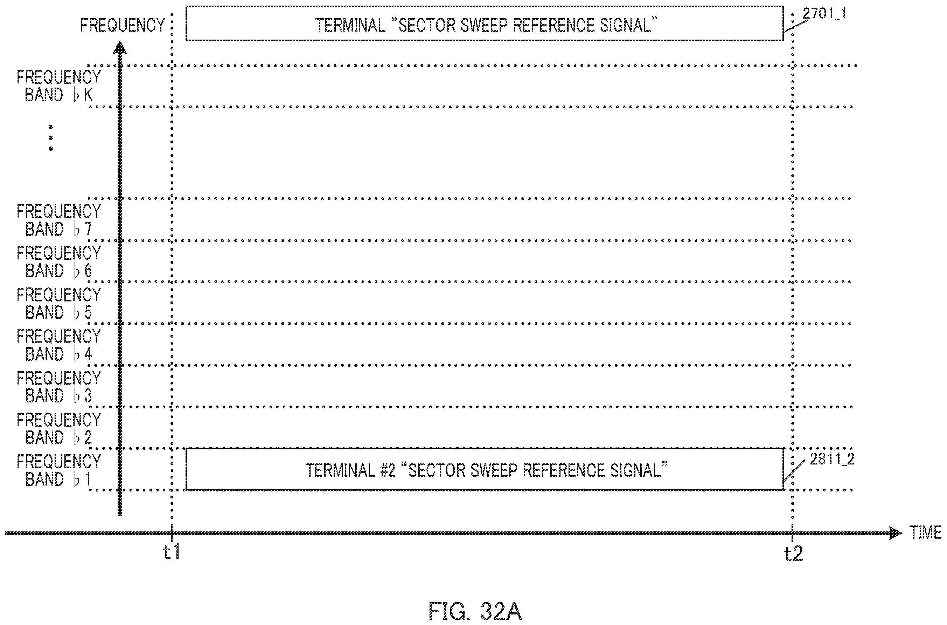

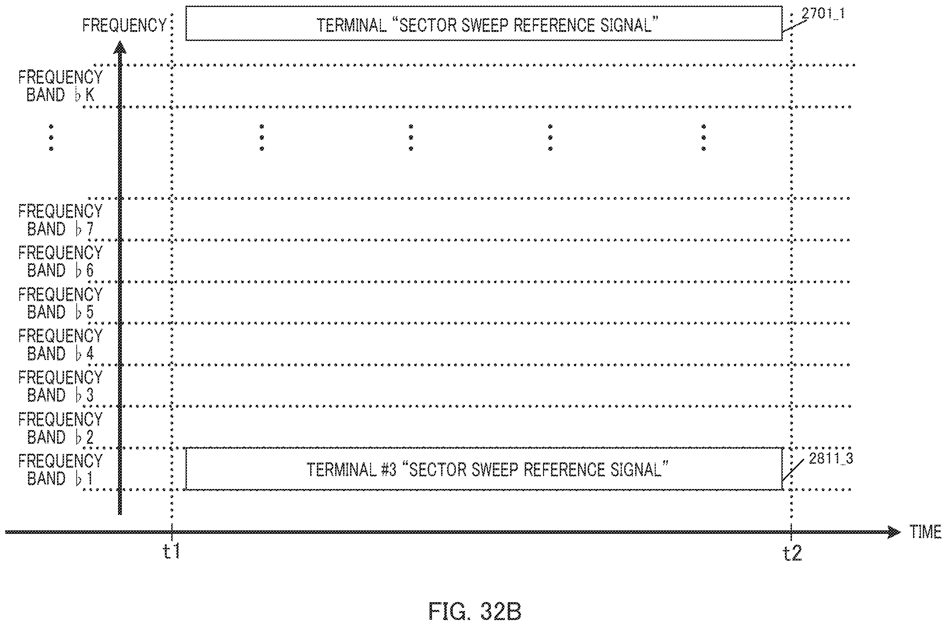

In FIGS. 32A and 32B, a description will be given of exemplary occupation by the terminals different from that in FIG. 28B in the areas for ""sector sweep reference signal" 2801_1 for frequency ♭1, "sector sweep reference signal" 2801_2 for frequency ♭2, "sector sweep reference signal" 2801_3 for frequency ♭3, "sector sweep reference signal" 2801_4 for frequency ♭4, "sector sweep reference signal" 2801_5 for frequency ♭5, "sector sweep reference signal" 2801_6 for frequency ♭6, "sector sweep reference signal" 2801_7 for frequency ♭7, ..., "sector sweep reference signal" 2801_K for frequency ♭K" included in terminal "sector sweep reference signal" 2701_1".

In FIGS. 32A and 32B, the components that operate in the same manner as in FIG. 28B are denoted by the same reference signs, and the description thereof will be thus omitted. The horizontal axis represents time and the vertical axis represents frequency in FIGS. 32A and 32B.

Terminal #2 labeled 902_2 in FIG. 9 receives sector sweep reference signal 1001 transmitted by base station #1 labeled 901_1, obtains the "frequency (band)", "identification number (ID) of the transmission panel antenna", and "identification number (ID) of the parameter used for beamforming (directivity control)" with high reception quality, and then can communicate with base station #1 labeled 901_1.

Terminal #2 labeled 902_2, for example, estimates frequency band ♭1 as the "frequency (band)" with high reception quality and estimates "transmission panel antenna a2 and parameter b2" as the "transmission panel antenna and parameter".

Then, terminal #2 labeled 902_2 transmits "terminal #2 "sector sweep reference signal" 2811_2" using frequency band ♭1 as illustrated in FIG. 32A.

Note that "terminal #2 "sector sweep reference signal" 2811_2" includes information of the "transmission panel antenna and parameter" with high reception quality obtained by terminal #2 labeled 902_2, that is, information of "transmission panel antenna a2 and parameter b2".

Terminal #3 labeled 902_3 in FIG. 9 receives sector sweep reference signal 1001 transmitted by base station #1 labeled 901_1, obtains the "identification number (ID) of the transmission panel antenna" and the "identification number (ID) of the parameter used for beamforming (directivity control)" with high reception quality, and then can communicate with base station #1 labeled 901_1.

Terminal #3 labeled 902_3, for example, estimates frequency band ♭1 as the "frequency (band)" with high reception quality and estimates "transmission panel antenna a3 and parameter b3" as the "transmission panel antenna and parameter".

Then, terminal #3 labeled 902_3 transmits "terminal #3 "sector sweep reference signal" 2811_3" using frequency band ♭1 as illustrated in FIG. 32B.

Note that "terminal #3 "sector sweep reference signal" 2811_3" includes information of the "transmission panel antenna and parameter" with high reception quality obtained by terminal #3 labeled 902_3, that is, information of "transmission panel antenna a3 and parameter b3".

At this time, as illustrated in FIGS. 32A and 32B, the frequencies and the time periods for "terminal #2 "sector sweep reference signal" 2811_2 transmitted by terminal #2 labeled 902_2" and "terminal #3 "sector sweep reference signal" 2811_3 transmitted by terminal #3 labeled 902_3" overlap each other.

Thus, base station #1 labeled 901_1 possibly simultaneously receives terminal #2 "sector sweep reference signal" 2811_2 and terminal #3 "sector sweep reference signal" 2811_3.

In this case, the following is two possible cases.

\<Case 1\>

Both "terminal #2 "sector sweep reference signal" 2811_2 transmitted by terminal #2 labeled 902_2" and "terminal #3 "sector sweep reference signal" 2811_3 transmitted by terminal #3 labeled 902_3" have the configuration in FIGS. 15A and 15B.

Here, the ""transmission panel antenna and parameter for beamforming of terminal #2 labeled 902_2" with high reception quality in receiving terminal #2 "sector sweep reference signal" 2811_2 transmitted by terminal #2 labeled 902_2 by base station #1 labeled 901_1" are different from the ""transmission panel antenna and parameter for beamforming of terminal #3 labeled 902_3" with high reception quality in receiving terminal #3 "sector sweep reference signal" 2811_3 transmitted by terminal #3 labeled 902_3 by base station #1 labeled 901_1". Accordingly, base station #1 labeled 901_1 obtains information included in "terminal #2 terminal #2 "sector sweep reference signal" 2811_2 transmitted by terminal #2 labeled 902_2" and information included in "terminal #3 "sector sweep reference signal" 2811_3 transmitted by terminal #3 labeled 902_3".

In this case, in FIG. 29A for example, "feedback signal 6001_1 for frequency $b1$ is a signal addressed to terminal #2 labeled 902_2" and "feedback signal 6001_2 for frequency $b2$ is a signal addressed to terminal #3 labeled 902_3".

In addition, in FIG. 30A for example, "modulation signal (slot) 3001_1 for frequency $b1$ is a signal addressed to terminal #2 labeled 902_2" and "modulation signal (slot) 3001_2 for frequency $b2$ is a signal addressed to terminal #3 labeled 902_3".

In this manner, base station #1 labeled 901_1 can communicate with terminal #2 labeled 902_2 and terminal #3 labeled 902_3.

\<Case 2\>

Both "terminal #2 "sector sweep reference signal" 2811_2 transmitted by terminal #2 labeled 902_2" and "terminal #3 "sector sweep reference signal" 2811_3 transmitted by terminal #3 labeled 902_3" have the configuration in FIGS. 15A and 15B.

Here, the ""transmission panel antenna and parameter for beamforming of terminal #2 labeled 902_2" with high reception quality in receiving terminal #2 "sector sweep reference signal" 2811_2 transmitted by terminal #2 labeled 902_2 by base station #1 labeled 901_1" interfere with the ""transmission panel antenna and parameter for beamforming of terminal #3 labeled 902_3" with high reception quality in receiving terminal #3 "sector sweep reference signal" 2811_3 transmitted by terminal #3 labeled 902_3 by base station #1 labeled 901_1".

\<Case 2-1\>

In some cases, base station #1 labeled 901_1 obtains either information included in "terminal #2 "sector sweep reference signal" 2811_2 transmitted by terminal #2 labeled 902_2" or information included in "terminal #3 "sector sweep reference signal" 2811_3 transmitted by terminal #3 labeled 902_3".

For example, base station #1 labeled 901_1 obtains the information included in "terminal #2 "sector sweep reference signal" 2811_2 transmitted by terminal #2 labeled 902_2".

In this case, in FIG. 29A for example, "feedback signal 2901_1 for frequency $b1$ is a signal addressed to terminal #2 labeled 902_2".

In addition, in FIG. 30A for example, "modulation signal (slot) 3001_1 for frequency $b1$ is a signal addressed to terminal #2 labeled 902_2".

In this manner, base station #1 labeled 901_1 can communicate with (terminal #1 labeled 902_1 and) terminal #2 labeled 902_2.

An operation of terminal #3 labeled 902_3 will be described.

It is assumed that sector sweep reference signal 1851_1 in FIG. 18 has the states in FIGS. 32A and 32B. That is, data-symbol-included frames 1803_1, 1803_2, and 1803_3 in FIG. 18 have no frame (slot) addressed to terminal #3 labeled 902_3.

In this case, terminal #3 labeled 902_3 in FIG. 9 receives sector sweep reference signal 1801_2 in FIG. 19 transmitted by base station #1 labeled 901_1, obtains the "frequency (band)", "identification number (ID) of the transmission panel antenna", and "identification number (ID) of the parameter used for beamforming (directivity control)" with high reception quality, and then can communicate with base station #1 labeled 901_1.

Terminal #3 labeled 902_3, for example, estimates frequency band $b2$ as the "frequency (band)" with high reception quality and estimates "transmission panel antenna a3 and parameter b3" as the "transmission panel antenna and parameter".

At this time, terminal #3 labeled 902_3 transmits a terminal #3 sector sweep reference signal using the area for "sector sweep reference signal" 2801_2 for frequency band b2 in FIG. 28A.

Note that the terminal #3 sector sweep reference signal includes information of the "transmission panel antenna and parameter" with high reception quality obtained by terminal #3 labeled 902_3, that is, information of "transmission panel antenna a3 and parameter b3".

In this case, base station #1 labeled 901_1 receives the "terminal #3 sector sweep reference signal transmitted by terminal #3 labeled 902_3". Then, the predetermined procedure described above is performed, and base station #1 labeled 901_1 and terminal #3 labeled 902_3 communicate with each other.

<Case 2-2>

In some cases, base station #1 labeled 901_1 obtains neither information included in "terminal #2 "sector sweep reference signal" 2811_2 transmitted by terminal #2 labeled 902_2" nor information included in "terminal #3 "sector sweep reference signal" 2811_3 transmitted by terminal #3 labeled 902_3".

It is assumed that sector sweep reference signal 1851_1 in FIG. 18 has the states in FIGS. 32A and 32B, and base station #1 labeled 901_1 obtains neither information included in "terminal #2 "sector sweep reference signal" 2811_2 transmitted by terminal #2 labeled 902_2" nor information included in "terminal #3 "sector sweep reference signal" 2811_3 transmitted by terminal #3 labeled 902_3". In this case, data-symbol-included frames 1803_1, 1803_2, and 1803_3 in FIG. 18 have neither a frame (slot) addressed to terminal #2 labeled 902_2 nor a frame (slot) addressed to terminal #3 labeled 902_3.

In this case, terminal #2 labeled 902_2 in FIG. 9 receives sector sweep reference signal 1801_2 in FIG. 19 transmitted by base station #1 labeled 901_1, obtains the "frequency (band)", "identification number (ID) of the transmission panel antenna", and "identification number (ID) of the parameter used for beamforming (directivity control)" with high reception quality, and then can communicate with base station #1 labeled 901_1.

Terminal #2 labeled 902_2, for example, estimates frequency band $b1$ as the "frequency (band)" with high reception quality and estimates "transmission panel antenna a2 and parameter b2" as the "transmission panel antenna and parameter".

At this time, terminal #2 labeled 902_2 transmits a terminal #2 sector sweep reference signal using the area for "sector sweep reference signal" 2801_1 for frequency band b 1 in FIG. 28A.

Note that the terminal #2 sector sweep reference signal includes information of the "transmission panel antenna and parameter" with high reception quality obtained by terminal #2 labeled 902_2, that is, information of "transmission panel antenna a2 and parameter b3".

In this case, base station #1 labeled 901_1 receives the "terminal #2 sector sweep reference signal transmitted by terminal #2 labeled 902_2". Then, the predetermined procedure described above is performed, and base station #1 labeled 901_1 and terminal #2 labeled 902_2 communicate with each other.

Likewise, terminal #3 labeled 902_3 in FIG. 9 receives sector sweep reference signal 1801_2 in FIG. 19 transmitted by base station #1 labeled 901_1, obtains the "frequency (band)", "identification number (ID) of the transmission panel antenna", and "identification number (ID) of the parameter used for beamforming (directivity control)" with high reception quality, and then can communicate with base station #1 labeled 901_1.

Terminal #3 labeled 902_3, for example, estimates frequency band $b2$ as the "frequency (band)" with high reception quality and estimates "transmission panel antenna a3 and parameter b3" as the "transmission panel antenna and parameter".

At this time, terminal #3 labeled 902_3 transmits a terminal #3 sector sweep reference signal using the area for "sector sweep reference signal" 2801_2 for frequency band b2 in FIG. 28A.

Note that the terminal #3 sector sweep reference signal includes information of the "transmission panel antenna and parameter" with high reception quality obtained by terminal #3 labeled 902_3, that is, information of "transmission panel antenna a3 and parameter b3".

In this case, base station #1 labeled 901_1 receives the "terminal #3 sector sweep reference signal transmitted by terminal #3 labeled 902_3". Then, the predetermined procedure described above is performed, and base station #1 labeled 901_1 and terminal #3 labeled 902_3 communicate with each other.

In the manner described above, a collision of the sector sweep reference signals transmitted by the respective terminals can be further reduced. This produces the effect that the base station can receive more sector sweep reference signals and can communicate with more terminals.

As described above in the present embodiment, the effect of improving communication capacity in a system composed of a base station and terminals can be obtained by the terminals transmitting sector sweep reference signals so as to cause less collision. Note that the configurations of the terminals and the base station are not limited to the configurations in FIGS. 1A, 1B, and 1C. In addition, the configurations of a transmission panel antenna and a reception panel antenna are not limited to the configurations in FIGS. 3 and 4, and may be any antenna configurations as long as one or more or a plurality of transmission directivities and reception directivities can be generated, for example. Further, signals, frames, etc. are illustrated in FIGS. 9, 10, 11, 12, 15A, 15B, 18, 19, 27, 28A, 28B, 29A, 29B, 30A, 30B, 31A, 31B, 31C, 31D, 31E, 31F, 32A, and 32B, but the names thereof are not limited to those in the drawings and the important part is the functions of the signals to be transmitted.

Note that, although the present embodiment has provided a description of a case where frequency (bands) for signals transmitted by a base station and frequency (bands) for signals transmitted by a terminal are the same or partially overlap each other, by way of example, the same can be implemented in a case where frequency (bands) for signals transmitted by a base station and frequency (bands) for signals transmitted by a terminal are different or partially different from each other.

Further, the present embodiment has provided a description of a case where a terminal transmits a modulation signal in a multi-carrier scheme such as OFDM, for example, but the scheme is not limited to this. For example, a terminal may transmit a signal in a single-carrier scheme when transmitting a signal of a frame in FIGS. 14, 20A, 20B, 20C, 20D, 20E, 20F, 21A, 21B, 22A, 22B, etc.

In FIG. 14, for example, terminal #1 labeled 902_1 may transmit terminal #1 "sector sweep reference signal" 1401_1 in frequency band $\flat K$ in a single-carrier scheme. Further, in FIG. 20A, terminal #1 labeled 902_1 may transmit "terminal #1 transmission frame" 2001_1 in frequency band $\flat K$ in a single-carrier scheme. Note that other terminals may also transmit a signal in a single-carrier scheme.

(Embodiment 4)

In Embodiment 7, a description will be given of a communication system, communication apparatus, and communication method using sector sweep as a variation of Embodiment 3. Note that the drawings used in Embodiment 3 are sometimes used in the following description of Embodiment 7.

FIGS. 1A, 1B, and 1C illustrate exemplary configurations of, for example, a base station, an access point, a terminal, and a repeater according to Embodiment 2, and the description of the detailed operations will be omitted since they have already been described with reference to FIGS. 2, 3, 4, 5, 6, 7, and 8. For FIGS. 2, 3, 4, 5, 6, 7, and 8, the description of the detailed operations will also be omitted since they have already been described.

FIG. 9 illustrates an exemplary communication state in Embodiment 4. As illustrated in FIG. 9, a case to be discussed is where base station #1 labeled 901_1 communicates with terminal #1 labeled 902_1, terminal #2 labeled 902_2, terminal #3 labeled 902_3, terminal #4 labeled 902_4, terminal #5 labeled 902_5, and terminal #6 labeled 902_6. A relationship between a base station and terminals, however, is not limited to this example, and the base station may communicate with one or more terminals, for example.

Note that the following description is about an exemplary case where the base station transmits modulation signals to the terminals using the OFDMA scheme and the terminals transmit modulation signals to the base station using a single-carrier scheme.

FIG. 10 illustrates an example of modulation signal 1000 transmitted by base station #1 labeled 901_1 in FIG. 9. In FIG. 10, the horizontal axis represents time and the vertical axis represents frequency. In the time period from time t0 to t1, sector sweep (sector-sweep level) reference signal 1001 is present. Note that sector sweep reference signal 1001 will be described later.

The time period from time t1 to t2 is a terminal response period. Note that the terminal response will be described later.

In the time period from time t2 to t3, feedback signal 1002 is present. Note that feedback signal 1002 will be described later.

In the time period from time t4 to t5, data-symbol-included frame 1003 is present. Note that data-symbol-included frame 1003 will be described later.

The reference signal for sector sweep is referred to as sector sweep reference signal 1001 in FIG. 10, but the name is not limited thereto and may be a reference signal, a reference symbol, a training signal, a training symbol, or the like. The signal denoted by reference sign 1002 is referred to as feedback signal 1002, but the name is not limited thereto and may be a feedback symbol, a terminal-addressed signal, a terminal-addressed symbol, a control signal, a control symbol, or the like. In addition, the frame including a data symbol is referred to as data-symbol-included frame 1003, but the name is not limited thereto and may be a slot/mini-slot/unit-included frame, or the like.

FIG. 11 illustrates examples of sector sweep reference signal 1001 in FIG. 10 transmitted by base station #1 labeled 901_1 in FIG. 9 with the configuration in FIG. 1A, 1B, or 1C, for example. Note that the horizontal axis represents time and the vertical axis represents frequency in FIG. 11. In the example of FIG. 11, the frequency is divided into frequency band $\flat 1$, frequency band $\flat 2$, ..., frequency band $\flat K$ as illustrated in FIG. 11 for base station #1 labeled 901_1 to transmit modulation signals based on OFDMA. Note that K is an integer equal to or greater than 1 or an integer equal to or greater than 2.

In frequency band $\flat 1$, for example, sector sweep reference signal 1101_11 in transmission panel antenna 1 for frequency $\flat 1$ is present in the first time period, sector sweep reference signal 1101_12 in transmission panel antenna 2 for frequency $\flat 1$ is present in the second time period, ..., sector sweep reference signal 1101_1M in transmission panel antenna M for frequency $\flat 1$ is present in the M-th time period.

That is, in frequency band bi, sector sweep reference signal 1101_i1 in transmission panel antenna 1 for frequency bi is present in the first time period, sector sweep reference signal 1101_i2 in transmission panel antenna 2 for frequency bi is present in the second time period, ..., sector sweep reference signal 1101_iM in transmission panel antenna M for frequency bi is present in the M-th time period. Note that i is an integer from 1 to K (both inclusive).

Note that sector sweep reference signal 1101_ij in transmission panel antenna j for frequency bi is transmitted from transmission panel antenna j labeled 106_j of base station #1 labeled 901_1 with the configuration in FIG. 1A, 1B, or 1C. In this case, j is an integer from 1 to M (both inclusive).

One feature is that "sector sweep reference signals are transmitted from the same transmission panel antenna in the i-th time period regardless of the frequency band in FIG. 11". At this time, the same beamforming parameter is used in a first period of time regardless of the frequency band. Note that the beamforming will be described later.

FIG. 12 illustrates an exemplary configuration of "sector sweep reference signal 1101_pi in transmission panel antenna i for frequency $_bp$" in FIG. 11. Note that the horizontal axis represents time in FIG. 12. Note that p is an integer from 1 to K (both inclusive) and i is an integer from 1 to M (both inclusive).

A description will be omitted on a specific example of a method of transmitting "sector sweep reference signal 1101_pi in transmission panel antenna i for frequency $_bp$", which is configured as in FIGS. 11 and 12 and transmitted by base station #1 labeled 901_1 with the configuration in FIG. 1A, 1B, or 1C, since it has already been described.

As illustrated in FIGS. 11 and 12, when base station #1 labeled 901_1 transmits "sector sweep reference signal 1101_i in transmission panel antenna i for frequency $_bp$", "reference signal 1201_j according to j-th parameter in transmission panel antenna i for frequency $_bp$" includes, for example, the following information.

· Identification number (ID) of the transmission panel antenna, which corresponds to i here, for example;

· Identification number (ID) of the parameter used for beamforming (directivity control), which corresponds to j here, for example; and

· The number of time divisions in which sector sweep reference signals can be transmitted when the terminals transmit the sector sweep reference signals, which will be described later.

Note that, in a case where "the number of time divisions in which sector sweep reference signals can be transmitted" is determined in advance, information of the number of time divisions in which sector sweep reference signals can be transmitted need not be included in "reference signal 1201_j according to j-th parameter in transmission panel antenna i for frequency $_bp$".

Note that "reference signal 1201_j according to j-th parameter in transmission panel antenna i for frequency $_bp$" may include other information. Examples of the information will be described in the other embodiments, for example, in Embodiment 6 or later.

The following information may also be included in "reference signal 1201_j according to j-th parameter in transmission panel antenna i for frequency $_bp$".

· Information on the frequency band and/or frequency $_bp$ (information of the number of frequency divisions may also be included), which will be described later.

Transmission of the "identification number (ID) of the transmission panel antenna for frequency $_bp$" and the "identification number (ID) of the parameter used for beamforming (directivity control)" by base station #1 labeled 901_1 allows the terminals to recognize the "identification number (ID) of the transmission panel antenna" and the "identification number (ID) of the parameter used for beamforming (directivity control)" that have allowed successful reception; accordingly, base station #1 labeled 901_1 and the terminals can perform appropriate control. This produces the effect of enhancing data reception quality.

Note that "the number of time divisions in which sector sweep reference signals can be transmitted when the terminals transmit the sector sweep reference signals" may be changeable according to the frame and/or time, for example. This produces the effect of enhancing data transmission efficiency of a communication system.

Further, transmission of the "information on the frequency band and/or frequency $_bp$" by base station #1 labeled 901_1 allows the terminals to obtain the information and transmit "information relative to a frequency that the terminals desire the base station to use for transmission". This allows the base station to perform appropriate control and produces the effect of enhancing data reception quality.

Next, a description will be given of an operation in the time period from time t1 to t2 in FIG. 10, which is the terminal response period. Note that, in Embodiment 4, the description is based on a case where the terminals use a single-carrier scheme and frequency (bands) used by the base station and frequency (bands) used by the terminals partially overlap each other.

FIG. 23 illustrates an exemplary operation in the time period from time t1 to t2, which is the terminal response period. Note that the horizontal axis represents time in FIG. 23. Terminals such as terminal #1 labeled 902_1, terminal #2 labeled 902_2, terminal #3 labeled 902_3, terminal #4 labeled 902_4, terminal #5 labeled 902_5, and terminal #6 labeled 902_6 in FIG. 9 transmit sector sweep reference signals in the time period from time t1 to t2, which is the terminal response period. Note that, in FIG. 23, the components that operate in the same manner as in FIGS. 10 and 13 are denoted by the same reference signs.

As illustrated in FIGS. 10 and 23, for example, base station #1 labeled 901_1 transmits sector sweep reference signals in the time period from time t0 to t1. After that, the terminal response period, which is the time period from time t1 to t2, includes terminal "sector sweep reference signal" first transmission period 1301_1, terminal "sector sweep reference signal" second transmission period 1301_2, terminal "sector sweep reference signal" third transmission period 1301_3, terminal "sector sweep reference signal" fourth transmission period 1301_4, terminal "sector sweep reference signal" fifth transmission period 1301_5, terminal "sector sweep reference signal" sixth transmission period 1301_6, terminal "sector sweep reference signal" seventh transmission period 1301_7, and terminal "sector sweep reference signal" eighth transmission period 1301_8, as illustrated in FIG. 13.

Thus, in the case of FIG. 23, "the number of time divisions in which sector sweep reference signals can be transmitted when the terminals transmit the sector sweep reference signals" is set to eight by base station #1 labeled 901_1.

FIG. 24 illustrates exemplary occupation by the terminals in terminal "sector sweep reference signal" first transmission period 1301_1, terminal "sector sweep reference signal" second transmission period 1301_2, terminal "sector sweep reference signal" third transmission period 1301_3, and terminal "sector sweep reference signal" fourth transmission period 1301_4, terminal "sector sweep reference signal" fifth transmission period 1301_5, terminal "sector sweep reference signal" sixth transmission period 1301_6, terminal "sector sweep reference signal" seventh transmission period 1301_7, and terminal "sector sweep reference signal" eighth transmission period 1301_8 illustrated in FIG. 23. Note that the horizontal axis represents time in FIG. 24.

Terminal #1 labeled 902_1 in FIG. 9 receives sector sweep reference signal 1001 transmitted by base station #1 labeled 901_1 and estimates the "frequency band, transmission panel antenna, and parameter number" with high reception quality from transmission panel antennas of base station #1 labeled 901_1. Note that this estimation can be performed by obtaining sector sweep reference signal 1001, and the "identification number (ID) of the transmission panel antenna" and the "identification number (ID) of the parameter used for beamforming (directivity control)" that are included in sector sweep reference signal 1001. In addition, the "information on the frequency band and/or frequency $_\flat p$" included in sector sweep reference signal 1001 may be used for this estimation.

Terminal #1 labeled 902_1 estimates, for example, "transmission panel antenna a1 and parameter b1" as the "transmission panel antenna and parameter" with high reception quality. Terminal #1 labeled 902_1 also estimates frequency band $_\flat K$ as the "frequency domain" with high reception quality.

In addition, while estimating the "transmission panel antenna and parameter" with high reception quality, terminal #1 labeled 902_1 simultaneously obtains information of "the number of time divisions in which sector sweep reference signals can be transmitted when the terminals transmit the sector sweep reference signals". In the case of FIG. 24, terminal #1 labeled 902_1 obtains information indicating that "the number of time divisions in which sector sweep reference signals can be transmitted when the terminals transmit the sector sweep reference signals" is eight.

In this case, terminal #1 labeled 902_1 obtains, for example, any one of the values "0", "1", "2", "3", "4", "5", "6", and "7" using a random number. For example, terminal #1 labeled 902_1 obtains "0" using a random number. In this case, since "0" + 1 = 1, terminal #1 labeled 902_1 transmits terminal #1 "sector sweep reference signal 2401_1" using "terminal "sector sweep reference signal" first (= "0" + 1) transmission period 1301_1" in FIG. 24.

Here, the transmission period for the sector sweep reference signal is configured using a random number, but the transmission period for the sector sweep reference signal may be configured using, instead of a random number, a random number of an integer or a natural number, an irregular integer or natural number, a regular integer or natural number, an integer or a natural number held uniquely by the terminal, for example. Hence, the configuration of the transmission period for the sector sweep reference signal is not limited to the above example, and the transmission period for the sector sweep reference signal is configured for each terminal, for example. This is also applicable to the following similar descriptions.

Note that terminal #1 "sector sweep reference signal" 2401_1 includes information of the "transmission panel antenna and parameter" with high reception quality obtained by terminal #1 labeled 902_1, that is, information of "transmission panel antenna a1 and parameter b1". Terminal #1 "sector sweep reference signal" 2401_1 also includes information of the "frequency domain", for example, information of "frequency band $_\flat K$". This will be described later.

Likewise, terminal #2 labeled 902_2 in FIG. 9 receives sector sweep reference signal 1001 transmitted by base station #1 labeled 901_1 and estimates the "frequency band, transmission panel antenna, and parameter number" with high reception quality from transmission panel antennas of base station #1 labeled 901_1. Note that this estimation can be performed by obtaining sector sweep reference signal 1001, and the "identification number (ID) of the transmission panel antenna" and the "identification number (ID) of the parameter used for beamforming (directivity control)" that are included in sector sweep reference signal 1001. In addition, the "information on the frequency band and/or frequency $_\flat p$" included in sector sweep reference signal 1001 may be used for this estimation.

Terminal #2 labeled 902_2 estimates, for example, "transmission panel antenna a2 and parameter b2" as the "transmission panel antenna and parameter" with high reception quality. Terminal #2 labeled 902_2 also estimates frequency band ♭1 as the "frequency domain" with high reception quality.

In addition, while estimating the "transmission panel antenna and parameter" with high reception quality, terminal #2 labeled 902_2 simultaneously obtains information of "the number of time divisions in which sector sweep reference signals can be transmitted when the terminals transmit the sector sweep reference signals". In the case of FIG. 24, terminal #2 labeled 902_2 obtains information indicating that "the number of time divisions in which sector sweep reference signals can be transmitted when the terminals transmit the sector sweep reference signals" is eight.

In this case, terminal #2 labeled 902_2 obtains, for example, any one of the values "0", "1", "2", "3", "4", "5", "6", and "7" using a random number. For example, terminal #2 labeled 902_2 obtains "5" using a random number. In this case, since "5" + 1 = 6, terminal #2 labeled 902_2 transmits terminal #2 "sector sweep reference signal 2401_2" using "terminal "sector sweep reference signal" sixth (= "5" + 1) transmission period 1301_6" in FIG. 24.

Note that terminal #2 "sector sweep reference signal 1401_2" includes information of the "transmission panel antenna and parameter" with high reception quality obtained by terminal #2 labeled 902_2, that is, information of "transmission panel antenna a2 and parameter b2". Terminal #2 "sector sweep reference signal" 2401_2 also includes information of the "frequency domain", for example, information of "frequency band ♭1". This will be described later.

Thus, terminal #i labeled 902_i receives sector sweep reference signal 1001 transmitted by base station #1 labeled 901_1 and estimates the "frequency band, transmission panel antenna, and parameter number" with high reception quality from transmission panel antennas of base station #1 labeled 901_1. Note that this estimation can be performed by obtaining sector sweep reference signal 1001, and the "identification number (ID) of the transmission panel antenna" and the "identification number (ID) of the parameter used for beamforming (directivity control)" that are included in sector sweep reference signal 1001. Note that i is an integer equal to or greater than 1, for example. In addition, the "information on the frequency band and/or frequency ♭p" included in sector sweep reference signal 1001 may be used for this estimation.

Terminal #i labeled 902_i estimates, for example, "transmission panel antenna ai and parameter bi" as the "transmission panel antenna and parameter" with high reception quality. Terminal #i labeled 902_i also estimates frequency band bzi as the "frequency domain" with high reception quality.

In addition, while estimating the "transmission panel antenna and parameter" with high reception quality, terminal #i labeled 902_i simultaneously obtains information of "the number of time divisions in which sector sweep reference signals can be transmitted when the terminals transmit the sector sweep reference signals". In the case of FIG. 24, terminal #i labeled 902_i obtains information indicating that "the number of time divisions in which sector sweep reference signals can be transmitted when the terminals transmit the sector sweep reference signals" is eight.

In this case, terminal #i labeled 902_i obtains, for example, any one of the values "0", "1", "2", "3", "4", "5", "6", and "7" using a random number. For example, terminal #i labeled 902_i obtains "yi" using a random number. Note that yi is any one of the values "0", "1", "2", "3", "4", "5", "6", and "7". In this case, terminal #i labeled 902_i transmits terminal #i "sector sweep reference signal" 2401_i using terminal "sector sweep reference signal" ("yi" + 1)-th transmission period 1301_("yi" + 1) in FIG. 24.

Note that terminal #i "sector sweep reference signal" 2401_i includes information of the "transmission panel antenna and parameter" with high reception quality obtained by terminal #i labeled 902_i, that is, information of "transmission panel antenna ai and parameter bi". Terminal #i "sector sweep reference signal" 2401_j also includes information of the "frequency domain", for example, information of "frequency band bzi". This will be described later.

Note that, in FIG. 24, it may be considered that terminal #i "sector sweep reference signals" 2401_i use a first frequency (band) regardless of i as a first method. In this case, terminal #i "sector sweep reference signals" 2401_i are subjected to time division (time division multiple access (TDMA)). This is because the terminals transmit modulation signals using a single-carrier scheme.

As a second method, terminal #i "sector sweep reference signals" 2401_i do not necessarily use the same frequency (band).

Both the first and second methods produce the effect of "reducing interference between terminal #i "sector sweep reference signals" 2401_i".

For example, in a case where base station #1 labeled 901_1 transmits modulation signals using "frequency band ♭1 to frequency band ♭K" as described in Embodiment 3, a method can be considered in which terminal #i labeled 902_i transmits a modulation signal in a single-carrier scheme using "frequency band ♭1 to frequency band ♭K".

As another method, in a case where base station #1 labeled 901_1 transmits modulation signals using "frequency band ♭1 to frequency band ♭K" as described in Embodiment 3, a method can be considered in which terminal #i labeled 902_i transmits a modulation signal in a single-carrier scheme using some of "frequency band

♭1 to frequency band ♭K". Further, a method can be considered in which base station #1 labeled 901_1 transmits modulation signals using "frequency band ♭1 to frequency band ♭K" as described in Embodiment 3 and terminal #i labeled 902_i transmits a modulation signal using a frequency (band) other than "frequency band ♭1 to frequency band ♭K".

In the manner described above, a collision of the sector sweep reference signals transmitted by the respective terminals can be reduced. This produces the effect that the base station can receive more sector sweep reference signals and can communicate with more terminals.

A description will be given of a configuration of terminal #i "sector sweep reference signal" 2401_i transmitted by terminal #i labeled 902_i described with reference to FIG. 24. To simplify the description, terminal #i labeled 902_i has the configuration in FIG. 1A, 1B, or 1C, and terminal #i labeled 902_i with the configuration in FIG. 1A, 1B, or 1C includes the configuration in FIG. 3 as transmission panel antenna xi labeled 106_xi. Note that the configuration of terminal #i labeled 902_i is not limited to the configuration in FIG. 1A, 1B, or 1C, and the configuration of transmission panel antenna xi labeled 106_xi included in terminal #i labeled 902_i with the configuration in FIG. 1A, 1B, or 1C is not limited to the configuration in FIG. 3.

Note that the difference from Embodiment 3 is that terminal #i labeled 902_i transmits a modulation signal in a single-carrier scheme, and the specific configuration has already been described in Embodiment 1.

Terminal #i labeled 902_i transmits terminal #i "sector sweep reference signal" 2401_i as illustrated in FIG. 24. FIG. 15A illustrates an exemplary configuration of terminal #i "sector sweep reference signal" 2401_i. Note that the horizontal axis represents time in FIG. 15A. "Terminal #i "sector sweep reference signal" 1401_i" in FIG. 15A corresponds to an exemplary "sector sweep reference signal" 2401_i in FIG. 24.

As illustrated in FIG. 15A, terminal #i "sector sweep reference signal" 2401_i of terminal #i labeled 902_i is composed of "sector sweep reference signal 1501_1 in terminal #i transmission panel antenna 1, sector sweep reference signal 1501_2 in terminal #i transmission panel antenna 2, ..., sector sweep reference signal 1501_M in terminal #i transmission panel antenna M".

For example, terminal #i labeled 902_i with the configuration in FIG. 1A, 1B, or 1C transmits "sector sweep reference signal 1501_1 in terminal #i transmission panel antenna 1" using transmission panel antenna 1 labeled 106_1.

That is, terminal #i labeled 902_i with the configuration in FIG. 1A, 1B, or 1C transmits "sector sweep reference signal 1501_k in terminal #i transmission panel antenna k" using transmission panel antenna k labeled 106_k. Note that k is an integer from 1 to M (both inclusive).

Note that the number of transmission panel antennas included in terminal #i labeled 902_i is M in FIG. 15A, but the number of transmission panel antennas is not limited to this and may be N, where N is an integer equal to or greater than 1.

FIG. 15B illustrates an exemplary configuration of "sector sweep reference signal 1501_xi in terminal #i transmission panel antenna xi" in FIG. 15A. Note that the horizontal axis represents time in FIG. 15.

As illustrated in FIG. 15B, "sector sweep reference signal 1501_xi in terminal #i transmission panel antenna xi" is composed of, for example, "reference signal 1511_1 according to first parameter in transmission panel antenna xi", "reference signal 1511_2 according to second parameter in transmission panel antenna xi", "reference signal 1511_3 according to third parameter in transmission panel antenna xi", and "reference signal 1511_4 according to fourth parameter in transmission panel antenna xi".

For example, terminal #i labeled 902_i with the configuration in FIG. 1A, 1B, or 1C includes the configuration in FIG. 3 as transmission panel antenna xi labeled 106_xi.

A description will be given of "reference signal 1511_1 according to first parameter in transmission panel antenna xi".

When terminal #i labeled 902_i transmits "reference signal 1511_1 according to first parameter in transmission panel antenna xi" illustrated in FIG. 15B, terminal #i labeled 902_i sets the multiplication coefficient in multiplier 304_1 in transmission panel antenna xi labeled 106_xi as $w1(xi, 1)$. When first transmission signal 303_1 of "reference signal 1511_1 according to first parameter in transmission panel antenna xi" is $tx1ref1(t)$, multiplier 304_1 obtains $tx1ref1(t) \times w1(xi, 1)$. Then, terminal #i labeled 902_i transmits $tx1ref1(t) \times w1(xi, 1)$ from antenna 306_1 in FIG. 3. Note that t represents time.

When terminal #i labeled 902_i transmits "reference signal 1511_1 according to first parameter in transmission panel antenna xi" illustrated in FIG. 15B, terminal #i labeled 902_i sets the multiplication coefficient in multiplier 304_2 in transmission panel antenna xi labeled 106_xi as $w2(xi, 1)$. When second transmission signal 303_2 of "reference signal 1511_1 according to first parameter in transmission panel antenna xi" is $tx2ref1(t)$, multiplier 304_2 obtains $tx2ref1(t) \times w2(xi, 1)$. Then, terminal #i labeled 902_i transmits $tx2ref1(t) \times w2(xi, 1)$ from antenna 306_2 in FIG. 3.

When terminal #i labeled 902_i transmits "reference signal 1511_1 according to first parameter in transmission panel antenna xi" illustrated in FIG. 15B, terminal #i labeled 902_i sets the multiplication coefficient in multiplier 304_3 in transmission panel antenna xi labeled 106_xi as $w3(xi, 1)$. When third transmission signal 303_3 of "reference signal 1511_1 according to first parameter in transmission panel antenna xi" is $tx3ref1(t)$, multiplier 304_3 obtains $tx3ref1(t) \times w3(xi, 1)$.

Then, terminal #i labeled 902_i transmits tx3ref1(t) $\times$ w3(xi, 1) from antenna 306_3 in FIG. 3.

When terminal #i labeled 902_i transmits "reference signal 1511_1 according to first parameter in transmission panel antenna xi" illustrated in FIG. 15B, terminal #i labeled 902_i sets the multiplication coefficient in multiplier 304_4 in transmission panel antenna xi labeled 106_xi as w4(xi, 1). When fourth transmission signal 303_4 of "reference signal 1511_1 according to first parameter in transmission panel antenna xi" is tx4ref1(t), multiplier 304_4 obtains tx4ref1(t) $\times$ w4(xi, 1). Then, terminal #i labeled 902_i transmits tx4ref1(t) $\times$ w4(xi, 1) from antenna 306_4 in FIG. 3.

A description will be given of "reference signal 1511J according to j-th parameter in transmission panel antenna xi".

When terminal #i labeled 902_i transmits "reference signal 1511_j according to j-th parameter in transmission panel antenna xi" illustrated in FIG. 15B, terminal #i labeled 902_i sets the multiplication coefficient in multiplier 304_1 in transmission panel antenna xi labeled 106_xi as w1(xi, j). When first transmission signal 303_1 of "reference signal 1511_j according to j-th parameter in transmission panel antenna xi" is tx1refj(t), multiplier 304_1 obtains tx1refj(t) $\times$ w1(xi, j). Then, terminal #i labeled 902_i transmits tx1refj(t) $\times$ w1(xi, j) from antenna 306_1 in FIG. 3. Note that t represents time.

When terminal #i labeled 902_i transmits "reference signal 1511_j according to j-th parameter in transmission panel antenna xi" illustrated in FIG. 15B, terminal #i labeled 902_i sets the multiplication coefficient in multiplier 304_2 in transmission panel antenna xi labeled 106_xi as w2(xi, j). When second transmission signal 303_2 of "reference signal 1511_j according to j-th parameter in transmission panel antenna xi" is tx2refj(t), multiplier 304_2 obtains tx2refj(t) $\times$ w2(xi, j). Then, terminal #i labeled 902_i transmits tx2refj(t) $\times$ w2(xi, j) from antenna 306_2 in FIG. 3.

When terminal #i labeled 902_i transmits "reference signal 1511_j according to j-th parameter in transmission panel antenna xi" illustrated in FIG. 15B, terminal #i labeled 902_i sets the multiplication coefficient in multiplier 304_3 in transmission panel antenna xi labeled 106_xi as w3(xi, j). When third transmission signal 303_3 of "reference signal 1511_j according to j-th parameter in transmission panel antenna xi" is tx3refj(t), multiplier 304_3 obtains tx3refj(t) $\times$ w3(xi, j). Then, terminal #i labeled 902_i transmits tx3refj(t) $\times$ w3(xi, j) from antenna 306_3 in FIG. 3.

When terminal #i labeled 902_i transmits "reference signal 1511_j according to j-th parameter in transmission panel antenna xi" illustrated in FIG. 15B, terminal #i labeled 902_i sets the multiplication coefficient in multiplier 304_4 in transmission panel antenna xi labeled 106_xi as w4(xi, j). When fourth transmission signal 303_4 of "reference signal 1511_j according to j-th parameter in transmission panel antenna xi" is tx4refj(t), multiplier 304_4 obtains tx4refj(t) $\times$ w4(xi, j). Then, terminal #i labeled 902_i transmits tx4refj(t) $\times$ w4(xi, j) from antenna 306_4 in FIG. 3.

Note that j is an integer from 1 to 4 (both inclusive) in the case of FIG. 15B. The number Z of parameter changes is four in FIG. 15B, but the number Z of parameter changes is not limited to four. The same can be implemented as long as Z is an integer equal to or greater than 1 or an integer equal to or greater than 2. At this time, j is an integer from 1 to Z (both inclusive).

As illustrated in FIGS. 24, 15A, and 15B, when terminal #i labeled 902_i transmits "sector sweep reference signal 1501_xi in terminal #i transmission panel antenna xi", "reference signal 1511_j according to j-th parameter in transmission panel antenna xi" includes, for example, the following information.

· Information of the "transmission panel antenna and parameter" of base station #1 labeled 901_1 with high reception quality, as described above.

Thus, terminal #i labeled 902_i transmits the "information of the "transmission panel antenna and parameter" of base station #1 labeled 901_1 with high reception quality" in "sector sweep reference signal 1501_1 in terminal #i transmission panel antenna 1", "sector sweep reference signal 1501_2 in terminal #i transmission panel antenna 2", ..., "sector sweep reference signal 1501_M in terminal #i transmission panel antenna M" in FIG. 15A.

Note that "reference signal 1511J according to j-th parameter in transmission panel antenna xi" may include other information. Examples of the information will be described in the other embodiments, for example, in Embodiment 6 or later.

In addition, terminal #i labeled 902_i transmits the "information of the "transmission panel antenna and parameter" of base station #1 labeled 901_1 with high reception quality" in "reference signal 1511_1 according to first parameter in transmission panel antenna xi", "reference signal 1511_2 according to second parameter in transmission panel antenna xi", "reference signal 1511_3 according to third parameter in transmission panel antenna xi", and "reference signal 1511_4 according to fourth parameter in transmission panel antenna xi" in FIG. 15B in ""sector sweep reference signal 1501_1 in terminal #i transmission panel antenna 1", "sector sweep reference signal 1501_2 in terminal #i transmission panel antenna 2", ..., "sector sweep reference signal 1501_M in terminal #i transmission panel antenna M" in FIG. 15A".

In this case, base station #1 labeled 901_1 is more likely to receive, even with an omnidirectional antenna for example, any of ""sector sweep reference signal 1501_1 in terminal #i transmission panel antenna 1", "sector sweep reference signal 1501_2 in terminal #i transmission panel antenna 2", ..., "sector sweep reference signal 1501_M in terminal #i transmission panel antenna M" in FIG. 15A" transmitted by terminal #i labeled 902_i. This is because terminal #i labeled 902_i performs transmit beamforming (directivity control). This produces the effect that base station #1 labeled 901_1 is more likely to receive the "information of the "transmission panel antenna and parameter" of base station #1 labeled 901_1 with high reception quality" transmitted by terminal #i labeled 902_i. Accordingly, base station #1 labeled 901_1 can transmit a modulation signal to terminal #i labeled 902_i based on the "information of the "transmission panel antenna and parameter" of base station #1 labeled 901_1 with high reception quality", and terminal #i labeled 902_i can receive the modulation signal with high reception quality.

In a case where a plurality of terminals transmit the sector sweep reference signals as in FIG. 24, base station #1 labeled 901_1 can obtain the "information of the "transmission panel antenna and parameter" of base station #1 labeled 901_1 with high reception quality" from the plurality of terminals. This produces the effect that base station #1 labeled 901_1 can transmit modulation signals to the plurality of terminals based on the "information of the "transmission panel antenna and parameter" of base station #1 labeled 901_1 with high reception quality" from the plurality of terminals, and that the plurality of terminals can receive the modulation signals with high reception quality.

As illustrated in FIGS. 24, 15A, and 15B, when terminal #i labeled 902_i transmits "sector sweep reference signal 1501_xi in terminal #i transmission panel antenna xi", "reference signal 1511_j according to j-th parameter in transmission panel antenna xi" includes, for example, the following information.

· Identification number (ID) of the transmission panel antenna, which corresponds to Xi here, for example; and

· Identification number (ID) of the parameter used for beamforming (directivity control), which corresponds to j here, for example.

Transmission of the "identification number (ID) of the transmission panel antenna" and the "identification number (ID) of the parameter used for beamforming (directivity control)" by terminal #i labeled 902_i allows base station #1 labeled 901_1 to recognize the "identification number (ID) of the transmission panel antenna" and the "identification number (ID) of the parameter used for beamforming (directivity control)" that have allowed successful reception; accordingly, terminal #i labeled 902_i and base station #1 labeled 901_1 can perform appropriate control. This produces the effect of enhancing data reception quality.

Further, as illustrated in FIGS. 24, 15A, and 15B, when terminal #i labeled 902_i transmits "sector sweep reference signal 1501_xi in terminal #i transmission panel antenna xi", "reference signal 1511_j according to j-th parameter in transmission panel antenna xi" includes, for example, the following information.

· "Information on the frequency band and/or frequency ♭p" that has been used for transmission by terminal #i labeled 902_i or that terminal #i labeled 902_i desires base station #1 labeled 901_1 to use.

Transmission of the "information on the frequency band and/or frequency ♭p" by terminal #i labeled 902_i allows base station #1 labeled 901_1 to recognize the "information on the frequency band and/or frequency ♭p"; accordingly, terminal #i labeled 902_i and base station #1 labeled 901_1 can perform appropriate control. This produces the effect of enhancing data reception quality.

Note that "reference signal 1511J according to j-th parameter in transmission panel antenna xi" may include other information. Examples of the information will be described in the other embodiments, for example, in Embodiment 6 or later.

FIG. 29A illustrates an exemplary configuration of feedback signal 1002 that is present in the time period from t2 to t3 in FIG. 10 and transmitted by base station #1 labeled 901_1. Note that the horizontal axis represents time and the vertical axis represents frequency in FIG. 29A. In this example, feedback signal 1002 includes areas for "feedback signal 2901_1 for frequency ♭1, feedback signal 2901_2 for frequency ♭2, feedback signal 2901_3 for frequency ♭3, feedback signal 2901_4 for frequency ♭4, feedback signal 2901_5 for frequency ♭5, feedback signal 2901_6 for frequency ♭6, feedback signal 2901_7 for frequency ♭7, ..., feedback signal 2901_K for frequency ♭K" as illustrated in FIG. 29A.

FIG. 29B illustrates exemplary specific feedback signal assignment for feedback signal 1002 in the areas for "feedback signal 2901_1 for frequency ♭1, feedback signal 2901_2 for frequency ♭2, feedback signal 2901_3 for frequency ♭3, feedback signal 2901_4 for frequency ♭4, feedback signal 2901_5 for frequency ♭5, feedback signal 2901_6 for frequency ♭6, feedback signal 2901_7 for frequency ♭7, ..., feedback signal 2901_K for frequency ♭K" illustrated in FIG. 29A.

As in FIG. 24, for example, terminal #1 labeled 902_1 transmits terminal #1 "sector sweep reference signal" 2401_1, terminal #2 labeled 902_2 transmits terminal #2 "sector sweep reference signal" 2401_2, terminal #3 labeled 902_3 transmits terminal #3 "sector sweep reference signal" 2401_3, and other terminals also transmit sector sweep reference signals.

Additionally, terminal #1 "sector sweep reference signal" 2401_1 includes information indicating that "frequency band ♭K has high reception quality". Thus, base station #1 labeled 901_1 transmits terminal #1-addressed feedback signal 1611_1 using frequency band ♭K as in FIG. 29B.

Terminal #2 "sector sweep reference signal" 2401_2 includes information indicating that "frequency band ♭1 has high reception quality". Thus, base station #1 labeled 901_1 transmits terminal #2-addressed feedback signal 1611_2 using frequency band ♭1 as in FIG. 29B.

Terminal #3 "sector sweep reference signal" 2401_3 includes information indicating that "frequency band ♭2 and frequency band ♭3 have high reception quality". Thus, base station #1 labeled 901_1 transmits terminal #3-addressed feedback signal 1611_3 using frequency bands ♭2 and ♭3 as in FIG. 29B.

Terminal #4 "sector sweep reference signal" (not illustrated in FIG. 24) includes information indicating that "frequency band ♭6 has high reception quality". Thus, base station #1 labeled 901_1 transmits terminal #4-addressed feedback signal 1611_4 using frequency band ♭6 as in FIG. 29B.

Terminal #5 "sector sweep reference signal" (not illustrated in FIG. 24) includes information indicating that "frequency band ♭4 has high reception quality". Thus, base station #1 labeled 901_1 transmits terminal #5-addressed feedback signal 1611_5 using frequency band ♭4 as in FIG. 29B.

Terminal #6 "sector sweep reference signal" (not illustrated in FIG. 24) includes information indicating that "frequency band ♭7 has high reception quality". Thus, base station #1 labeled 901_1 transmits terminal #6-addressed feedback signal 1611_6 using frequency band ♭7 as in FIG. 29B.

In this manner, obtaining terminal #i-addressed feedback signal 2911_i allows terminal #i labeled 902_i to know that communication with base station #1 labeled 901_1 is available and to know the frequency band to be used. Note that FIG. 29B is merely an example. In a case where there is no terminal #1-addressed feedback signal 2911_1 as feedback signal 1002, for example, terminal #1 labeled 902_1 recognizes that the communication with base station #1 labeled 901_1 has not been established.

At this time, terminal #i-addressed feedback signal 2911_i includes, for example, information indicating that communication with terminal #i labeled 902_i is available (or indicating that data-symbol-included frame 1003 in FIG. 10 includes a symbol addressed to terminal #i labeled 902_i).

Further, base station #1 labeled 901_1 selects a frequency (band) and a transmission panel antenna and sets a parameter of beamforming based on the "frequency (band) information" and the "information of the "transmission panel antenna and parameter" of base station #1 labeled 901_1 with high reception quality" transmitted by terminal #i labeled 902_i, and base station #1 labeled 901_1 then transmits terminal #i-addressed feedback signal 2911_i.

FIG. 30A illustrates an exemplary configuration of data-symbol-included frame 1003 that is present in the time period from t4 to t5 in FIG. 10 and transmitted by base station #1 labeled 901_1. Note that the horizontal axis represents time and the vertical axis represents frequency in FIG. 30A. In this example, data-symbol-included frame 1003 includes areas for "modulation signal (slot) 3001_1 for frequency ♭1, modulation signal (slot) 3001_2 for frequency ♭2, modulation signal (slot) 3001_3 for frequency ♭3, modulation signal (slot) 3001_4 for frequency ♭4, modulation signal (slot) 3001_5 for frequency ♭5, modulation signal (slot) 3001_6 for frequency ♭6, modulation signal (slot) 3001_7 for frequency ♭7, ..., modulation signal (slot) 3001_K for frequency ♭K" as illustrated in FIG. 30A.

FIG. 30B illustrates exemplary specific modulation signal (slot) assignment for data-symbol-included frame 1003 in the areas for "modulation signal (slot) 3001_1 for frequency ♭1, modulation signal (slot) 3001_2 for frequency ♭2, modulation signal (slot) 3001_3 for frequency ♭3, modulation signal (slot) 3001_4 for frequency ♭4, modulation signal (slot) 3001_5 for frequency ♭5, modulation signal (slot) 3001_6 for frequency ♭6, modulation signal (slot) 3001_7 for frequency ♭7, ..., modulation signal (slot) 3001_K for frequency ♭K" illustrated in FIG. 30A.

As in the example of FIG. 24, for example, terminal #1 labeled 902_1 transmits terminal #1 "sector sweep reference signal" 2401_1, terminal #2 labeled 902_2 transmits terminal #2 "sector sweep reference signal" 2401_2, terminal #3 labeled 902_3 transmits terminal #3 "sector sweep reference signal" 2401_3, terminal #4 labeled 902_4 transmits terminal #4 "sector sweep reference signal" (not illustrated in FIG. 24), terminal #5 labeled 902_5 transmits terminal #5 "sector sweep reference signal" (not illustrated in FIG. 24), and terminal #6 labeled 902_6 transmits terminal #6 "sector sweep reference signal" (not illustrated in FIG. 24).

Additionally, terminal #1 "sector sweep reference signal" 2401_1 includes information indicating that "frequency band ♭K has high reception quality". Thus, base station #1 labeled 901_1 transmits terminal #1-addressed modulation signal (slot) 3011_1 using frequency band ♭K as in FIG. 30B.

Terminal #2 "sector sweep reference signal" 2401_2 includes information indicating that "frequency band ♭1 has high reception quality". Thus, base station #1 labeled 901_1 transmits terminal #2-addressed modulation signal (slot) 3011_2 using frequency band ♭1 as in FIG. 30B.

Terminal #3 "sector sweep reference signal" 2401_3 includes information indicating that "frequency band ♭2 and frequency band ♭3 have high reception quality". Thus, base station #1 labeled 901_1 transmits terminal #3-addressed modulation signal (slot) 3011_3 using frequency bands ♭2 and ♭3 as in FIG. 30B.

Terminal #4 "sector sweep reference signal" (not illustrated in FIG. 24) includes information indicating that "frequency band ♭6 has high reception quality". Thus, base station #1 labeled 901_1 transmits terminal #4-addressed modulation signal (slot) 3011_4 using frequency band ♭6 as in FIG. 30B.

Terminal #5 "sector sweep reference signal" (not illustrated in FIG. 24) includes information indicating that "frequency band ♭4 has high reception quality". Thus, base station #1 labeled 901_1 transmits terminal #5-addressed modulation signal (slot) 3011_5 using frequency band ♭4 as in FIG. 30B.

Terminal #6 "sector sweep reference signal" (not illustrated in FIG. 24) includes information indicating that "frequency band ♭7 has high reception quality". Thus, base station #1 labeled 901_1 transmits terminal #6-addressed modulation signal (slot) 3011_6 using frequency band ♭7 as in FIG. 30B.

At this time, terminal #i-addressed modulation signal (slot) 3011_i includes, for example, a data symbol (data and/or information) addressed to terminal #i labeled 902_i.

In this manner, terminal #i-addressed modulation signal (slot) 3011_i allows terminal #i labeled 902_i to know that communication with base station #1 labeled 901_1 is available and to know the frequency band to be used. Note that FIG. 30B is merely an example. In a case where there is no terminal #1-addressed modulation signal (slot) 3011_1 as data-symbol-included frame 1003, for example, terminal #1 labeled 902_1 recognizes that the communication with base station #1 labeled 901_1 has not been established.

Further, base station #1 labeled 901_1 selects a frequency (band) and a transmission panel antenna and sets a parameter of beamforming based on the "frequency (band) information" and the "information of the "transmission panel antenna and parameter" of base station #1 labeled 901_1 with high reception quality" transmitted by terminal #i labeled 902_i, and base station #1 labeled 901_1 then transmits terminal #i-addressed modulation signal (slot) 3011_i.

Note that, in FIGS. 29A and 29B, base station #1 labeled 901_1 may estimate the "frequency (band)" and the "transmission panel antenna and parameter" of terminal #i labeled 902_1 with high reception quality in receiving "terminal #i "sector sweep reference signal" 2401_i transmitted by terminal #i labeled 902_i", and the estimated information may be included in terminal #i-addressed feedback signal 2911_i.

Terminal #i labeled 902_i selects a frequency (band) and a transmission panel antenna and determines a beamforming method based on the information of "frequency (band)" and "transmission panel antenna and parameter" of terminal #i labeled 902_i with high reception quality obtained from base station #1 labeled 901_1, and terminal #i labeled 902_i then transmits a symbol, a frame, and/or a modulation signal to base station #1 labeled 901_1. This produces the effect of enhancing data reception quality in base station #1 labeled 901_1.

Incidentally, in the time period from t3 to t4 in FIG. 10, terminal #i labeled 902_i may transmit, to base station #1 labeled 901_1, a modulation signal including information indicating successful reception of a signal from base station #1 labeled 901_1, such as acknowledgement (ACK).

Note that, terminal #i-addressed modulation signal (slot) 3011_i in FIG. 30B may include, in addition to the data symbol, a "reference signal such as a demodulation reference signal (DMRS), phase tracking reference signal (PTRS), or sounding reference signal (SRS)", a pilot symbol, a pilot signal, a preamble, and a symbol including control information, for example. Examples of the symbol including the control information may include information of a destination terminal (ID for identifying the terminal), a transmission method of the modulation signal, information of the modulation scheme, information of the error correction coding scheme (code length, code rate, etc.), information of the modulation and coding scheme (MCS), and the like.

FIG. 18 illustrates an exemplary state where base station #1 labeled 901_1 and "terminal #1 labeled 902_1, terminal #2 labeled 902_2, terminal #3 labeled 902_3, terminal #4 labeled 902_4, terminal #5 labeled 902_5, and terminal #6 labeled 902_6" communicate with each other as illustrated in FIG. 9. (A) of FIG. 18 illustrates an exemplary modulation signal transmission state of base station #1 labeled 901_1, and (B) of FIG. 18 illustrates an exemplary modulation signal transmission state of "terminal #1 labeled 902_1, terminal #2 labeled 902_2, terminal #3 labeled 902_3, terminal #4 labeled 902_4, terminal #5 labeled 902_5, and terminal #6 labeled 902_6". Note that the horizontal axes represent time in (A) and (B) of FIG. 18.

First, base station #1 labeled 901_1 transmits sector sweep reference signal 1801_1. Note that this has already been described with reference to FIG. 10, and the description thereof will be thus omitted.

Then, a terminal such as "terminal #1 labeled 902_1, terminal #2 labeled 902_2, terminal #3 labeled 902_3, terminal #4 labeled 902_4, terminal #5 labeled 902_5, and terminal #6 labeled 902_6" transmits sector sweep reference signal 1851_1. Note that this has already been described with reference to, for example, FIGS. 23, 24, 15A, 15B, etc., and the description thereof will be thus omitted.

Base station #1 labeled 901_1 transmits feedback signal 1802_1. Note that this has already been described with reference to FIGS. 29A and 29B, and the description thereof will be thus omitted.

After that, base station #1 labeled 901_1 transmits "data-symbol-included frame 1803_1". Note that this has already been described with reference to FIGS. 17A and 17B, and the description thereof will be thus omitted. (Hence, "data-symbol-included frame 1803_1" is considered to be a frame for downlink, for example).

Then, the terminal such as "terminal #1 labeled 902_1, terminal #2 labeled 902_2, terminal #3 labeled 902_3, terminal #4 labeled 902_4, terminal #5 labeled 902_5, and terminal #6 labeled 902_6" transmits "data-symbol-included frame 1852_1". Note that a configuration of the frame will be described later with reference to FIG. 25. (Hence, "data-symbol-included frame 1852_1" is considered to be a frame for uplink, for example).

Next, base station #1 labeled 901_1 transmits "data-symbol-included frame 1803_2". Note that a configuration method of "data-symbol-included frame 1803_2" is as described with reference to FIGS. 30A and 30B.

Then, the terminal such as "terminal #1 labeled 902_1, terminal #2 labeled 902_2, terminal #3 labeled 902_3, terminal #4 labeled 902_4, terminal #5 labeled 902_5, and terminal #6 labeled 902_6" transmits "data-symbol-included frame 1852_2". Note that a configuration of the frame will be described later with reference to FIG. 25.

FIG. 19 illustrates an exemplary modulation signal transmission state of base station #1 labeled 901_1 and an exemplary modulation signal transmission state of the terminal such as "terminal #1 labeled 902_1, terminal #2 labeled 902_2, terminal #3 labeled 902_3, terminal #4 labeled 902_4, terminal #5 labeled 902_5, and terminal #6 labeled 902_6" after the state in FIG. 18.

(A) of FIG. 19 illustrates an exemplary modulation signal transmission state of base station #1 labeled 901_1, and it is a temporal continuation from the modulation signal transmission state of base station #1 labeled 901_1 in (A) of FIG. 18.

(B) of FIG. 19 illustrates an exemplary modulation signal transmission state of the terminal such as "terminal #1 labeled 902_1, terminal #2 labeled 902_2, terminal #3 labeled 902_3, terminal #4 labeled 902_4, terminal #5 labeled 902_5, and terminal #6 labeled 902_6", and it is a temporal continuation from the modulation signal transmission state of the terminal such as "terminal #1 labeled 902_1, terminal #2 labeled 902_2, terminal #3 labeled 902_3, terminal #4 labeled 902_4, terminal #5 labeled 902_5, and terminal #6 labeled 902_6" in (B) of FIG. 18.

Note that the horizontal axes represent time in (A) and (B) of FIG. 19.

After the states in (A) and (B) of FIG. 18, base station #1 labeled 901_1 transmits "data-symbol-included frame 1803_3". Note that a configuration method of "data-symbol-included frame 1803_3" is as described with reference to FIGS. 30A and 30B.

The terminal such as "terminal #1 labeled 902_1, terminal #2 labeled 902_2, terminal #3 labeled 902_3, terminal #4 labeled 902_4, terminal #5 labeled 902_5, and terminal #6 labeled 902_6" transmits "data-symbol-included frame 1852_3". Note that a configuration of the frame will be described later with reference to FIG. 25.

Next, base station #1 labeled 901_1 transmits

sector sweep reference signal 1801_2. Note that this has already been described with reference to FIG. 10, and the description thereof will be thus omitted.

Then, the terminal such as "terminal #1 labeled 902_1, terminal #2 labeled 902_2, terminal #3 labeled 902_3, terminal #4 labeled 902_4, terminal #5 labeled 902_5, and terminal #6 labeled 902_6" transmits sector sweep reference signal 1851_2. Note that this has already been described with reference to, for example, FIGS. 23, 24, 15A, 15B, etc., and the description thereof will be thus omitted.

Base station #1 labeled 901_1 transmits feedback signal 1802_2. Note that this has already been described with reference to FIGS. 29A and 29B, and the description thereof will be thus omitted.

After that, base station #1 labeled 901_1 transmits "data-symbol-included frame 1803_4". Note that this has already been described with reference to FIGS. 30A and 30B, and the description thereof will be thus omitted.

Then, the terminal such as "terminal #1 labeled 902_1, terminal #2 labeled 902_2, terminal #3 labeled 902_3, terminal #4 labeled 902_4, terminal #5 labeled 902_5, and terminal #6 labeled 902_6" transmits "data-symbol-included frame 1852_4". Note that a configuration of the frame will be described later with reference to FIG. 25.

As described above, base station #1 labeled 901_1 and the terminal transmit the sector sweep reference signals before the "transmission of the "data-symbol-included frames" by base station #1 labeled 901_1 and/or the transmission of the "data-symbol-included frames" by the terminal such as "terminal #1 labeled 902_1, terminal #2 labeled 902_2, terminal #3 labeled 902_3, terminal #4 labeled 902_4, terminal #5 labeled 902_5, and terminal #6 labeled 902_6"", and again transmit the sector sweep reference signals after the "transmission of the "data-symbol-included frames" by base station #1 labeled 901_1 and/or the transmission of the "data-symbol-included frames" by the terminal such as "terminal #1 labeled 902_1, terminal #2 labeled 902_2, terminal #3 labeled 902_3, terminal #4 labeled 902_4, terminal #5 labeled 902_5, and terminal #6 labeled 902_6"" Base station #1 labeled 901_1 and the terminal then each configure a frequency (band), select a transmission panel antenna to be used, and configure transmit beamforming. This produces the effect that the base station and/or the terminal achieve high data reception quality.

Next, a description will be given of an exemplary configuration of "data-symbol-included frame 1852_i" transmitted by the terminal such as "terminal #1 labeled 902_1, terminal #2 labeled 902_2, terminal #3 labeled 902_3, terminal #4 labeled 902_4, terminal #5 labeled 902_5, and terminal #6 labeled 902_6" with reference to FIG. 25. Note that i is an integer equal to or greater than 1, for example, and the horizontal axis represents time in FIG. 25.

As illustrated in FIG. 25, "data-symbol-included frame 1852_i" is composed of a first transmission period, a second transmission period, a third transmission period, a fourth transmission period, a fifth transmission period, a sixth transmission period, a seventh transmission period, and an eighth transmission period.

As illustrated in FIG. 25, for example, terminal #1 labeled 902_1 transmits terminal #1 transmission frame (including a data symbol) 2501_1 using the first transmission period.

Terminal #2 labeled 902_2 transmits terminal #2 transmission frame (including a data symbol) 2501_2 using the sixth transmission period.

Terminal #3 labeled 902_3 transmits terminal #3 transmission frame (including a data symbol) 2501_3 using the fourth transmission period.

Terminal #4 labeled 902_4 transmits terminal #4 transmission frame (including a data symbol) 2501_4 using the second transmission period.

Terminal #5 labeled 902_5 transmits terminal #5 transmission frame (including a data symbol) 2501_5 using the eighth transmission period.

Terminal #6 labeled 902_6 transmits terminal #6 transmission frame (including a data symbol) 2501_6 using the fifth transmission period.

Note that the terminal such as "terminal #1 labeled 902_1, terminal #2 labeled 902_2, terminal #3 labeled 902_3, terminal #4 labeled 902_4, terminal #5 labeled 902_5, and terminal #6 labeled 902_6" uses a single-carrier transmission scheme. In addition, a plurality of terminals may use the same frequency (band).

As described above, "data-symbol-included frame 1852_i" transmitted by the terminal such as "terminal #1 labeled 902_1, terminal #2 labeled 902_2, terminal #3 labeled 902_3, terminal #4 labeled 902_4, terminal #5 labeled 902_5, and terminal #6 labeled 902_6" is subjected to, for example, time division and transmitted by each terminal, and base station #1 labeled 901_1 receives the frame transmitted by the terminal, thereby preventing interference and achieving high data reception quality.

Note that terminal #1 transmission frame 2501_1, terminal #2 transmission frame 2501_2, terminal #3 transmission frame 2501_3, terminal #4 transmission frame 2501_4, terminal #5 transmission frame 2501_5, and terminal #6 transmission frame 2501_6 in FIG. 25 may include, in addition to the data symbol, a "reference signal such as DMRS, PTRS, or SRS", a pilot symbol, a pilot signal, a preamble, and a symbol including control information, for example.

In FIG. 25, a description has been given of a case where the terminals perform time division on the frames to be transmitted, but the terminals may perform spatial division on the frames to be transmitted using multi user-multiple-input multiple-output (MU-MIMO).

FIG. 28B illustrates exemplary occupation by the terminals in the areas for ""sector sweep reference signal" 2801_1 for frequency $f_1$, "sector sweep reference signal" 2801_2 for frequency $f_2$, "sector sweep reference signal" 2801_3 for frequency $f_3$, "sector sweep reference signal" 2801_4 for frequency $f_4$, "sector sweep reference signal" 2801_5 for frequency $f_5$, "sector sweep reference signal" 2801_6 for frequency $f_6$, "sector sweep reference signal" 2801_7 for frequency $f_7$, ..., "sector sweep reference signal" 2801_K for frequency $f_K$" included in terminal "sector sweep reference signal" 2701_1" illustrated in FIG. 28A.

In FIGS. 32A and 32B, a description will be given of exemplary occupation by the terminals different from that in FIG. 28A in the areas for ""sector sweep reference signal" 2801_1 for frequency $f_1$, "sector sweep reference signal" 2801_2 for frequency $f_2$, "sector sweep reference signal" 2801_3 for frequency $f_3$, "sector sweep reference signal" 2801_4 for frequency $f_4$, "sector sweep reference signal" 2801_5 for frequency $f_5$, "sector sweep reference signal" 2801_6 for frequency $f_6$, "sector sweep reference signal" 2801_7 for frequency $f_7$, ..., "sector sweep reference signal" 2801_K for frequency $f_K$" included in terminal "sector sweep reference signal" 2701_1".

In FIG. 26, a description will be given of exemplary occupation by terminals different from that in FIG. 24 in "terminal "sector sweep reference signal" first transmission period 1301_1, terminal "sector sweep reference signal" second transmission period 1301_2, terminal "sector sweep reference signal" third transmission period 1301_3, and terminal "sector sweep reference signal" fourth transmission period 1301_4, terminal "sector sweep reference signal" fifth transmission period 1301_5, terminal "sector sweep reference signal" sixth transmission period 1301_6, terminal "sector sweep reference signal" seventh transmission period 1301_7, and terminal "sector sweep reference signal" eighth transmission period 1301_8" illustrated in FIG. 23.

In FIG. 26, the components that operate in the same manner as in FIGS. 23 and 24 are denoted by the same reference signs, and the descriptions thereof will be omitted since they have already been described. In the following, the difference from the description in FIG. 24 will be described.

Terminal #2 labeled 902_2 in FIG. 9 receives sector sweep reference signal 1001 transmitted by base station #1 labeled 901_1, obtains the "frequency (band)", "identification number (ID) of the transmission panel antenna", and "identification number (ID) of the parameter used for beamforming (directivity control)" with high reception quality, and then can communicate with base station #1 labeled 901_1.

Terminal #2 labeled 902_2, for example, estimates frequency band $f_1$ as the "frequency (band)" with high reception quality and estimates "transmission panel antenna a2 and parameter b2" as the "transmission panel antenna and parameter".

In addition, while estimating the "transmission panel antenna and parameter" with high reception quality, terminal #2 labeled 902_2 simultaneously obtains information of the "the number of time divisions in which sector sweep reference signals can be transmitted when the terminals transmit the sector sweep reference signals". In the case of FIG. 26, terminal #2 labeled 902_2 obtains information indicating that "the number of time divisions in which sector sweep reference signals can be transmitted when the terminals transmit the sector sweep reference signals" is eight.

In this case, terminal #2 labeled 902_2 obtains, for example, any one of the values "0", "1", "2", "3", "4", "5", "6",and "7" using a random number. For example, terminal #2 labeled 902_2 obtains "5" using a random number. In this case, since "5" + 1 = 6, terminal #2 labeled 902_2 transmits terminal #2 sector sweep reference signal 2401_2 using "terminal "sector sweep reference signal" sixth transmission period 1301_6" as in FIG. 26.

Note that terminal #2 sector sweep reference signal 2401_2 includes information of the "transmission panel antenna and parameter" with high reception quality obtained by terminal #2 labeled 902_2, that is, information of "transmission panel antenna a2 and parameter b2".

Terminal #3 labeled 902_3 in FIG. 9 receives sector sweep reference signal 1001 transmitted by base station #1 labeled 901_1, obtains the "identification number (ID) of the transmission panel antenna" and "identification number (ID) of the parameter used for beamforming (directivity control)" with high reception quality, and then can communicate with base station #1 labeled 901_1.

Terminal #3 labeled 902_3, for example, estimates frequency band ♭2 as the "frequency (band)" with high reception quality and estimates "transmission panel antenna a3 and parameter b3" as the "transmission panel antenna and parameter" with high reception quality.

In addition, while estimating the "frequency (band)" and "transmission panel antenna and parameter" with high reception quality, terminal #3 labeled 902_3 simultaneously obtains information of the "the number of time divisions in which sector sweep reference signals can be transmitted when the terminals transmit the sector sweep reference signals". In the case of FIG. 26, terminal #3 labeled 902_3 obtains information indicating that "the number of time divisions in which sector sweep reference signals can be transmitted when the terminals transmit the sector sweep reference signals" is eight.

In this case, terminal #3 labeled 902_3 obtains, for example, any one of the values "0", "1", "2", "3", "4", "5", "6",and "7" using a random number. For example, terminal #3 labeled 902_3 obtains "5" using a random number. In this case, since "5" + 1 = 6, terminal #3 labeled 902_3 transmits terminal #3 sector sweep reference signal 2601_3 using "terminal "sector sweep reference signal" sixth transmission period 1301_6" as in FIG. 26.

Note that terminal #3 sector sweep reference signal 2601_3 includes information of the "transmission panel antenna and parameter" with high reception quality obtained by terminal #3 labeled 902_3, that is, information of "transmission panel antenna a3 and parameter b3".

At this time, as illustrated in FIG. 26, the time period for "terminal #2 "sector sweep reference signal" 2401_2 transmitted by terminal #2 labeled 902_2" and the time period for "terminal #3 "sector sweep reference signal" 2601_3 transmitted by terminal #3 labeled 902_3" overlap each other.

Thus, base station #1 labeled 901_1 possibly simultaneously receives terminal #2 "sector sweep reference signal" 2401_2 and terminal #3 "sector sweep reference signal" 2601_3.

In this case, the following is two possible cases.

<Case 1>

Both "terminal #2 "sector sweep reference signal" 2401_2 transmitted by terminal #2 labeled 902_2" and "terminal #3 "sector sweep reference signal" 2601_3 transmitted by terminal #3 labeled 902_3" have the configuration in FIGS. 15A and 15B.

Here, the ""transmission panel antenna and parameter for beamforming of terminal #2 labeled 902_2" with high reception quality in receiving terminal #2 "sector sweep reference signal" 2401_2 transmitted by terminal #2 labeled 902_2 by base station #1" labeled 901_1 are different from the ""transmission panel antenna and parameter for beamforming of terminal #3 labeled 902_3" with high reception quality in receiving terminal #3 "sector sweep reference signal" 2601_3 transmitted by terminal #3 labeled 902_3 by base station #1 labeled 901_1". Accordingly, base station #1 labeled 901_1 obtains information included in "terminal #2 "sector sweep reference signal" 2401_2 transmitted by terminal #2 labeled 902_2" and information included in "terminal #3 "sector sweep reference signal" 2601_3 transmitted by terminal #3 labeled 902_3".

In this case, in FIG. 29A for example, "feedback signal 2901_1 for frequency ♭1 is a signal addressed to terminal #2 labeled 902_2" and "feedback signal 2901_2 for frequency ♭2 is a signal addressed to terminal #3 labeled 902_3".

In addition, in FIG. 30A for example, "modulation signal (slot) 3001_1 for frequency ♭1 is a signal addressed to terminal #2 labeled 902_2" and "modulation signal (slot) 3001_2 for frequency ♭2 is a signal addressed to terminal #3 labeled 902_3".

In this manner, base station #1 labeled 901_1 can communicate with terminal #2 labeled 902_2 and terminal #3 labeled 902_3.

<Case 2>

Both "terminal #2 "sector sweep reference signal" 2401_2 transmitted by terminal #2 labeled 902_2" and "terminal #3 "sector sweep reference signal" 2601_3 transmitted by terminal #3 labeled 902_3" have the configuration in FIGS. 15A and 15B.

Here, the ""transmission panel antenna and parameter for beamforming of terminal #2 labeled 902_2" with high reception quality in receiving terminal #2 "sector sweep reference signal" 2401_2 transmitted by terminal #2 labeled 902_2 by base station #1" labeled 901_1 interfere with the ""transmission panel antenna and parameter for beamforming of terminal #3 labeled 902_3" with high reception quality in receiving terminal #3 "sector sweep reference signal" 2601_3 transmitted by terminal #3 labeled 902_3 by base station #1 labeled 901_1".

<Case 2-1>

In some cases, base station #1 labeled 901_1 obtains either information included in "terminal #2 "sector sweep reference signal" 2401_2 transmitted by terminal #2 labeled 902_2" or information included in "terminal #3 "sector sweep reference signal" 2601_3 transmitted by terminal #3 labeled 902_3".

For example, base station #1 labeled 901_1 obtains the information included in "terminal #2 "sector sweep reference signal" 2401_2 transmitted by terminal #2 labeled 902_2".

In this case, in FIG. 29A for example, "feedback signal 2901_1 for frequency $b1$ is a signal addressed to terminal #2 labeled 902_2".

In addition, in FIG. 30A for example, "modulation signal (slot) 3001_1 for frequency $b1$ is a signal addressed to terminal #2 labeled 902_2".

In this manner, base station #1 labeled 901_1 can communicate with (terminal #1 labeled 902_1 and) terminal #2 labeled 902_2.

An operation of terminal #3 labeled 902_3 will be described.

It is assumed that sector sweep reference signal 1851_1 in FIG. 18 has the states in FIG. 26. That is, data-symbol-included frames 1803_1, 1803_2, and 1803_3 in FIG. 18 have no frame (slot) addressed to terminal #3 labeled 902_3.

In this case, terminal #3 labeled 902_3 in FIG. 9 receives sector sweep reference signal 1801_2 in FIG. 19 transmitted by base station #1 labeled 901_1, obtains the "frequency (band)", "identification number (ID) of the transmission panel antenna", and "identification number (ID) of the parameter used for beamforming (directivity control)" with high reception quality, and then can communicate with base station #1 labeled 901_1.

Terminal #3 labeled 902_3, for example, estimates frequency band $b2$ as the "frequency (band)" with high reception quality and estimates "transmission panel antenna a3 and parameter b3" as the "transmission panel antenna and parameter".

In addition, while performing such estimation, terminal #3 labeled 902_3 simultaneously obtains information of the "the number of time divisions in which sector sweep reference signals can be transmitted when the terminals transmit the sector sweep reference signals". Terminal #3 labeled 902_3 obtains information indicating that "the number of time divisions in which sector sweep reference signals can be transmitted when the terminals transmit the sector sweep reference signals" is eight.

In this case, terminal #3 labeled 902_3 obtains, for example, any one of the values "0", "1", "2", "3", "4", "5", "6",and "7" using a random number. For example, terminal #3 labeled 902_3 obtains "3" by generating a random number using seeds different from the previous. In this case, since "3" + 1 = 4, terminal #3 labeled 902_3 transmits terminal #3 sector sweep reference signal 2401_3 using "terminal "sector sweep reference signal" fourth transmission period 1301_4" as in FIG. 24.

Note that terminal #3 sector sweep reference signal 2401_3 includes information of the "transmission panel antenna and parameter" with high reception quality obtained by terminal #3 labeled 902_3, that is, information of "transmission panel antenna a3 and parameter b3".

In this case, as illustrated in FIG. 24, base station #1 labeled 901_1 receives "terminal #3 sector sweep reference signal 2401_3 transmitted by terminal #3 labeled 902_3". Then, the predetermined procedure described above is performed, and base station #1 labeled 901_1 and terminal #3 labeled 902_3 communicate with each other.

<Case 2-2>

In some cases, base station #1 labeled 901_1 obtains neither information included in "terminal #2 "sector sweep reference signal" 2401_2 transmitted by terminal #2 labeled 902_2" nor information included in "terminal #3 "sector sweep reference signal" 2601_3 transmitted by terminal #3 labeled 902_3".

It is assumed that sector sweep reference signal 1851_1 in FIG. 18 has the states in FIG. 26, and base station #1 labeled 901_1 obtains neither information included in "terminal #2 "sector sweep reference signal" 2401_2 transmitted by terminal #2 labeled 902_2" nor information included in "terminal #3 "sector sweep reference signal" 2601_3 transmitted by terminal #3 labeled 902_3". In this case, data-symbol-included frames 1803_1, 1803_2, and 1803_3 in FIG. 18 have neither a frame (slot) addressed to terminal #2 labeled 902_2 nor a frame (slot) addressed to terminal #3 labeled 902_3.

In this case, terminal #2 labeled 902_2 in FIG. 9 receives sector sweep reference signal 1801_2 in FIG. 19 transmitted by base station #1 labeled 901_1, obtains the "frequency (band)", "identification number (ID) of the transmission panel antenna", and "identification number (ID) of the parameter used for beamforming (directivity control)" with high reception quality, and then can communicate with base station #1 labeled 901_1.

Terminal #2 labeled 902_2, for example, estimates frequency band ♭1 as the "frequency (band)" with high reception quality and estimates "transmission panel antenna a2 and parameter b2" as the "transmission panel antenna and parameter".

In addition, while performing such estimation, terminal #2 labeled 902_2 simultaneously obtains information of the "the number of time divisions in which sector sweep reference signals can be transmitted when the terminals transmit the sector sweep reference signals". Terminal #2 labeled 902_2 obtains information indicating that "the number of time divisions in which sector sweep reference signals can be transmitted when the terminals transmit the sector sweep reference signals" is eight.

In this case, terminal #2 labeled 902_2 obtains, for example, any one of the values "0", "1", "2", "3", "4", "5", "6",and "7" using a random number. For example, terminal #2 labeled 902_2 obtains "5" by generating a random number using seeds different from the previous. In this case, since "5" + 1 = 6, terminal #2 labeled 902_2 transmits terminal #2 sector sweep reference signal 2401_2 using "terminal "sector sweep reference signal" sixth transmission period 1301_6" as in FIG. 24.

Note that terminal #2 sector sweep reference signal 2401_2 includes information of the "transmission panel antenna and parameter" with high reception quality obtained by terminal #2 labeled 902_2, that is, information of "transmission panel antenna a2 and parameter b3".

In this case, as illustrated in FIG. 24, base station #1 labeled 901_1 receives "terminal #2 sector sweep reference signal 2401_2 transmitted by terminal #2 labeled 902_2". Then, the predetermined procedure described above is performed, and base station #1 labeled 901_1 and terminal #2 labeled 902_2 communicate with each other.

Likewise, terminal #3 labeled 902_3 in FIG. 9 receives sector sweep reference signal 1801_2 in FIG. 19 transmitted by base station #1 labeled 901_1, obtains the "frequency (band)", "identification number (ID) of the transmission panel antenna", and "identification number (ID) of the parameter used for beamforming (directivity control)" with high reception quality, and then can communicate with base station #1 labeled 901_1.

Terminal #3 labeled 902_3, for example, estimates frequency band ♭2 as the "frequency (band)" with high reception quality and estimates "transmission panel antenna a3 and parameter b3" as the "transmission panel antenna and parameter".

In addition, while performing such estimation, terminal #3 labeled 902_3 simultaneously obtains information of the "the number of time divisions in which sector sweep reference signals can be transmitted when the terminals transmit the sector sweep reference signals". Terminal #3 labeled 902_3 obtains information indicating that "the number of time divisions in which sector sweep reference signals can be transmitted when the terminals transmit the sector sweep reference signals" is eight.

In this case, terminal #3 labeled 902_3 obtains, for example, any one of the values "0", "1", "2", "3", "4", "5", "6",and "7" using a random number. For example, terminal #3 labeled 902_3 obtains "3" by generating a random number using seeds different from the previous. In this case, since "3" + 1 = 4, terminal #3 labeled 902_3 transmits terminal #3 sector sweep reference signal 2401_3 using "terminal "sector sweep reference signal" fourth transmission period 1301_4" as in FIG. 24.

Note that terminal #3 sector sweep reference signal 2401_3 includes information of the "transmission panel antenna and parameter" with high reception quality obtained by terminal #3 labeled 902_3, that is, information of "transmission panel antenna a3 and parameter b3".

In this case, as illustrated in FIG. 24, base station #1 labeled 901_1 receives "terminal #3 sector sweep reference signal 2401_3 transmitted by terminal #3 labeled 902_3". Then, the predetermined procedure described above is performed, and base station #1 labeled 901_1 and terminal #3 labeled 902_3 communicate with each other.

In the manner described above, a collision of the sector sweep reference signals transmitted by the respective terminals can be further reduced. This produces the effect that the base station can receive more sector sweep reference signals and can communicate with more terminals.

As described above in the present embodiment, the effect of improving communication capacity in a system composed of a base station and terminals can be obtained by the terminals transmitting sector sweep reference signals so as to cause less collision. Note that the configurations of the terminals and the base station are not limited to the configurations in FIGS. 1A, 1B, and 1C. In addition, the configurations of a transmission panel antenna and a reception panel antenna are not limited to the configurations in FIGS. 3 and 4, and may be any antenna configurations as long as one or more or a plurality of transmission directivities and reception directivities can be generated, for example. Further, signals, frames, etc. are illustrated in FIGS. 10, 11, 12, 23, 24, 15A, 15B, 18, 19, 24, 25, 26, 27, 29A, 29B, 30A, and 30B, but the names thereof are not limited to those in the drawings and the important part is the functions of the signals to be transmitted.

(Embodiment 5)

In Embodiment 5, a description will be given of a communication system, communication apparatus, and communication method using sector sweep in a case where a base station and a terminal performs transmission in a single-carrier scheme. Note that the drawings used in Embodiment 1 are sometimes used in the following description of Embodiment 5.

FIGS. 1A, 1B, and 1C illustrate exemplary configurations of, for example, a base station, an access point, a terminal, and a repeater according to Embodiment 5, and the description of the detailed operations will be omitted since they have already been described with reference to FIGS. 2, 3, 4, 5, 6, 7, and 8. For FIGS. 2, 3, 4, 5, 6, 7, and 8, the description of the detailed operations will also be omitted since they have already been described.

For example, examples of the single-carrier scheme include "discrete Fourier transform (DFT)-spread orthogonal frequency division multiplexing (OFDM)" (DFT-S OFDM), "trajectory constrained DFT-spread OFDM", "constrained DFT-spread OFDM" (constrained DFT-S OFDM), "OFDM based single carrier (SC)", "single carrier (SC)-frequency division multiple access (FDMA)", "guard interval DFT-spread OFDM", a time-domain implementation single carrier scheme (e.g., single carrier (SC)-QAM), and the like.

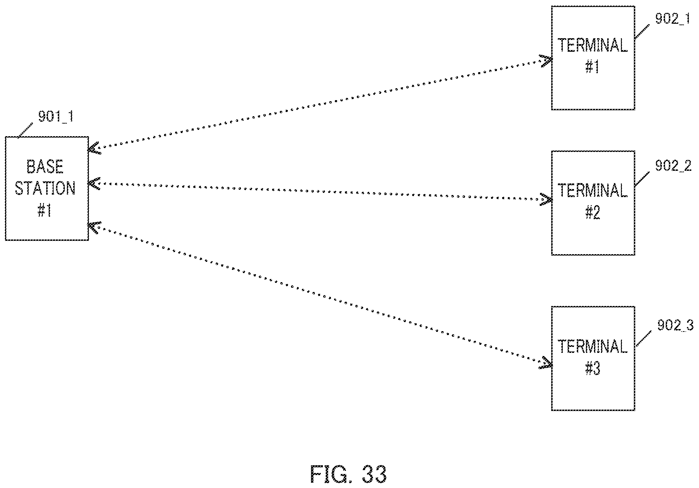

FIG. 33 illustrates an exemplary communication state in Embodiment 5. As illustrated in FIG. 33, a case to be discussed is where base station #1 labeled 901_1 communicates with terminal #1 labeled 902_1, terminal #2 labeled 902_2, and terminal #3 labeled 902_3. A relationship between a base station and terminals, however, is not limited to this example, and the base station may communicate with one or more terminals, for example.

Note that the following description is about an exemplary case where the base station and the terminals perform time division duplex (TDD), time division multiple access (TDMA), or time division multiplexing (TDM).

FIG. 10 illustrates an example of modulation signal 1000 transmitted by base station #1 labeled 901_1 in FIG. 33. In FIG. 10, the horizontal axis represents time. In the time period from time t0 to 11, sector sweep (sector-sweep level) reference signal 1001 is present. Note that sector sweep reference signal 1001 will be described later.

The time period from time t1 to t2 is a terminal response period. Note that the terminal response will be described later.

In the time period from time t2 to t3, feedback signal 1002 is present. Note that feedback signal 1002 will be described later.

In the time period from time t4 to t5, data-symbol-included frame 1003 is present. Note that data-symbol-included frame 1003 will be described later.

The reference signal for sector sweep is referred to as sector sweep reference signal 1001 in FIG. 10, but the name is not limited thereto and may be a reference signal, a reference symbol, a training signal, a training symbol, or the like. The signal denoted by reference sign 1002 is referred to as feedback signal 1002, but the name is not limited thereto and may be a feedback symbol, a terminal-addressed signal, a terminal-addressed symbol, a control signal, a control symbol, or the like. In addition, the frame including a data symbol is referred to as data-symbol-included frame 1003, but the name is not limited thereto and may be a frame, slot, mini-slot, unit, or the like.

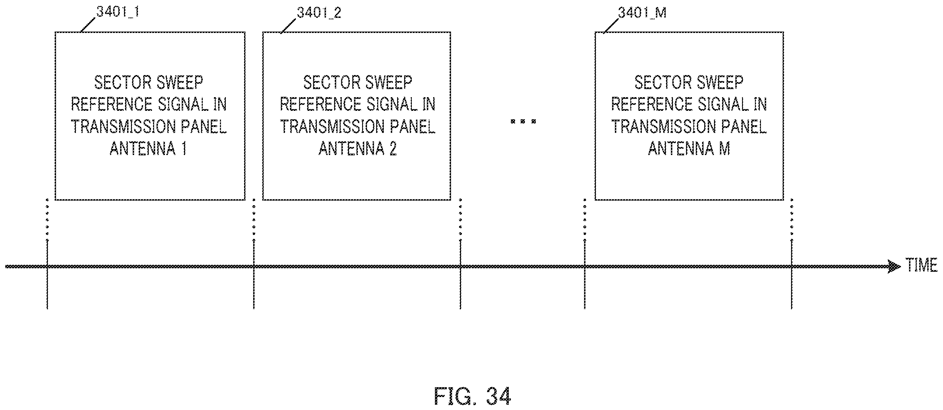

FIG. 34 illustrates examples of sector sweep reference signal 1001 in FIG. 10 transmitted by base station #1 labeled 901_1 in FIG. 33. Note that the horizontal axis represents time in FIG. 34.

For example, base station #1 labeled 901_1 with the configuration in FIG. 1A, 1B, or 1C transmits sector sweep reference signal 3401_1 in transmission panel antenna 1 from transmission panel antenna 1 labeled 106_1.

That is, as illustrated in FIG. 34, base station #1 labeled 901_1 with the configuration in FIG. 1A, 1B, or 1C transmits sector sweep reference signal 3401_i in transmission panel antenna i from transmission panel antenna i labeled 106_i. Note that i is an integer from 1 to M (both inclusive).

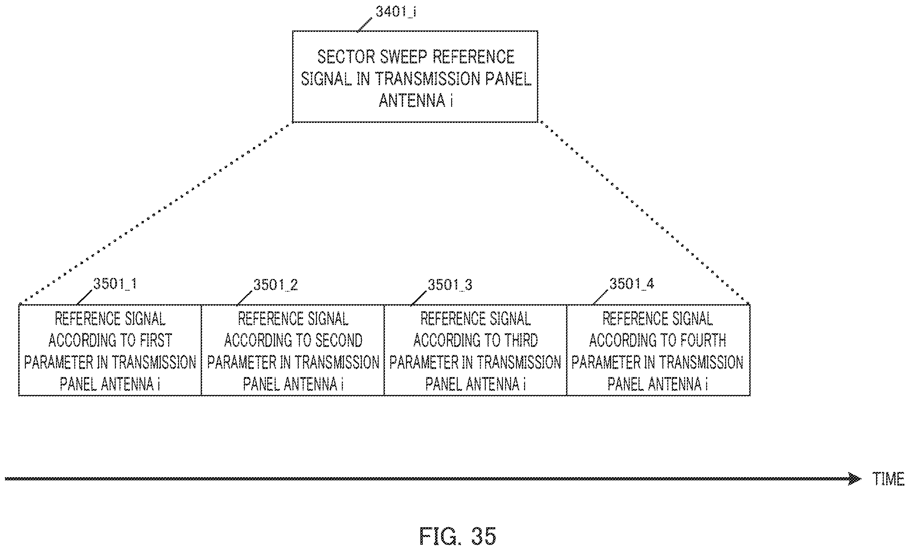

FIG. 35 illustrates an exemplary configuration of "sector sweep reference signal 3401_i in transmission panel antenna i" in FIG. 34. Note that the horizontal axis represents time in FIG. 35.

For example, base station #1 labeled 901_1 with the configuration in FIG. 1A, 1B, or 1C includes the configuration in FIG. 3 as transmission panel antenna i labeled 106_i.

A description will be given of "reference signal 3501_1 according to first parameter in transmission panel antenna i".

When base station #1 labeled 901_1 transmits "reference signal 3501_1 according to first parameter in transmission panel antenna i" illustrated in FIG. 35, base station #1 labeled 901_1 sets the multiplication coefficient in multiplier 304_1 in transmission panel antenna i labeled 106_i as $w1(i, 1)$. When first transmission signal 303_1 of "reference signal 3501_1 according to first parameter in transmission panel antenna i" is $tx1ref1(t)$, multiplier 304_1 obtains $tx1ref1(t) \times w1(i, 1)$. Then, base station #1 labeled 901_1 transmits $tx1ref1(t) \times w1(i, 1)$ from antenna 306_1 in FIG. 3. Note that $t$ represents time.

When base station #1 labeled 901_1 transmits "reference signal 3501_1 according to first parameter in transmission panel antenna i" illustrated in FIG. 35, base station #1 labeled 901_1 sets the multiplication coefficient in multiplier 304_2 in transmission panel antenna i labeled 106_i as $w2(i, 1)$. When second transmission signal 303_2 of "reference signal 3501_1 according to first parameter in transmission panel antenna i" is $tx2ref1(t)$, multiplier 304_2 obtains $tx2ref1(t) \times w2(i, 1)$. Then, base station #1 labeled 901_1 transmits $tx2ref1(t) \times w2(i, 1)$ from antenna 306_2 in FIG. 3.

When base station #1 labeled 901_1 transmits "reference signal 3501_1 according to first parameter in transmission panel antenna i" illustrated in FIG. 35, base station #1 labeled 901_1 sets the multiplication coefficient in multiplier 304_3 in transmission panel antenna i labeled 106_i as w3(i, 1). When third transmission signal 303_3 of "reference signal 3501_1 according to first parameter in transmission panel antenna i" is tx3ref1(t), multiplier 304_3 obtains tx3ref1(t) × w3(i, 1). Then, base station #1 labeled 901_1 transmits tx3ref1(t) × w3(i, 1) from antenna 306_3 in FIG. 3.

When base station #1 labeled 901_1 transmits "reference signal 3501_1 according to first parameter in transmission panel antenna i" illustrated in FIG. 35, base station #1 labeled 901_1 sets the multiplication coefficient in multiplier 304_4 in transmission panel antenna i labeled 106_i as w4(i, 1). When fourth transmission signal 303_4 of "reference signal 3501_1 according to first parameter in transmission panel antenna i" is tx4ref1(t), multiplier 304_4 obtains tx4ref1(t) × w4(i, 1). Then, base station #1 labeled 901_1 transmits tx4ref1(t) × w4(i, 1) from antenna 306_4 in FIG. 3.

A description will be given of "reference signal 3501_j according to j-th parameter in transmission panel antenna i".

When base station #1 labeled 901_1 transmits "reference signal 3501_j according to j-th parameter in transmission panel antenna i" illustrated in FIG. 35, base station #1 labeled 901_1 sets the multiplication coefficient in multiplier 304_1 in transmission panel antenna i labeled 106_i as w1(i, j). When first transmission signal 303_1 of "reference signal 3501_j according to j-th parameter in transmission panel antenna i" is tx1refj(t), multiplier 304_1 obtains tx1refj(t) × w1(i, j). Then, base station #1 labeled 901_1 transmits tx1refj(t) × w1(i, j) from antenna 306_1 in FIG. 3. Note that t represents time.

When base station #1 labeled 901_1 transmits "reference signal 3501_j according to j-th parameter in transmission panel antenna i" illustrated in FIG. 35, base station #1 labeled 901_1 sets the multiplication coefficient in multiplier 304_2 in transmission panel antenna i labeled 106_i as w2(i, j). When second transmission signal 303_2 of "reference signal 3501_j according to j-th parameter in transmission panel antenna i" is tx2refj(t), multiplier 304_2 obtains tx2refj(t) × w2(i, j). Then, base station #1 labeled 901_1 transmits tx2refj(t) × w2(i, j) from antenna 306_2 in FIG. 3.

When base station #1 labeled 901_1 transmits "reference signal 3501_j according to j-th parameter in transmission panel antenna i" illustrated in FIG. 35, base station #1 labeled 901_1 sets the multiplication coefficient in multiplier 304_3 in transmission panel antenna i labeled 106_i as w3(i, j). When third transmission signal 303_3 of "reference signal 3501_j according to j-th parameter in transmission panel antenna i" is tx3refj(t), multiplier 304_3 obtains tx3refj(t) × w3(i, j). Then, base station #1 labeled 901_1 transmits tx3refj(t) × w3(i, j) from antenna 306_3 in FIG. 3.

When base station #1 labeled 901_1 transmits "reference signal 3501_j according to j-th parameter in transmission panel antenna i" illustrated in FIG. 35, base station #1 labeled 901_1 sets the multiplication coefficient in multiplier 304_4 in transmission panel antenna i labeled 106_i as w4(i, j). When fourth transmission signal 303_4 of "reference signal 3501_j according to j-th parameter in transmission panel antenna i" is tx4refj(t), multiplier 304_4 obtains tx4refj(t) × w4(i, j). Then, base station #1 labeled 901_1 transmits tx4refj(t) × w4(i, j) from antenna 306_4 in FIG. 3.

Note that j is an integer from 1 to 4 (both inclusive) in the case of FIG. 12. The number Z of parameter changes is four in FIG. 35, but the number Z of parameter changes is not limited to four. The same can be implemented as long as Z is an integer equal to or greater than 1 or an integer equal to or greater than 2. At this time, j is an integer from 1 to Z (both inclusive).

As illustrated in FIGS. 34 and 35, when base station #1 labeled 901_1 transmits "sector sweep reference signal 3401_i in transmission panel antenna i", "reference signal 3501_j according to j-th parameter in transmission panel antenna i" includes, for example, the following information.

· Identification number (ID) of the transmission panel antenna, which corresponds to i here, for example;

· Identification number (ID) of the parameter used for beamforming (directivity control), which corresponds to j here, for example; and

· The number of slots in which sector sweep reference signals can be transmitted when the terminals transmit the sector sweep reference signals (the number of terminals that can transmit the sector sweep reference signals), which will be described later.

Note that "reference signal 3501_j according to j-th parameter in transmission panel antenna i" may include other information. Examples of the information will be described in the other embodiments, for example, in Embodiment 6 or later.

Transmission of the "identification number (ID) of the transmission panel antenna" and the "identification number (ID) of the parameter used for beamforming (directivity control)" by base station #1 labeled 901_1 allows the terminals to recognize the "identification number (ID) of the transmission panel antenna" and the "identification number (ID) of the parameter used for beamforming (directivity control)" that have allowed successful reception; accordingly, base station #1 labeled 901_1 and the terminals can perform appropriate control. This produces the effect of enhancing data reception quality.

Note that "the number of slots in which sector sweep reference signals can be transmitted when the terminals transmit the sector sweep reference signals (the number of terminals that can transmit the sector sweep reference signals)" may be changeable according to the frame and/or time, for example. This produces the effect of enhancing data transmission efficiency of a communication system.

Next, a description will be given of an operation in the time period from time t1 to t2 in FIG. 10, which is the terminal response period.

FIG. 13 illustrates an exemplary operation in the time period from time t1 to t2, which is the terminal response period. Note that the horizontal axis represents time in FIG. 13.

As illustrated in FIGS. 10 and 13, for example, base station #1 labeled 901_1 transmits sector sweep reference signals in the time period from time t0 to t1. After that, the terminal response period, which is the time period from time t1 to t2, includes terminal "sector sweep reference signal" first transmission period 1301_1, terminal "sector sweep reference signal" second transmission period 1301_2, terminal "sector sweep reference signal" third transmission period 1301_3, and terminal "sector sweep reference signal" fourth transmission period 1301_4, as illustrated in FIG. 13.

Thus, in the case of FIG. 13, "the number of slots in which sector sweep reference signals can be transmitted when the terminals transmit the sector sweep reference signals (the number of terminals that can transmit the sector sweep reference signals)" is set to four by base station #1 labeled 901_1.

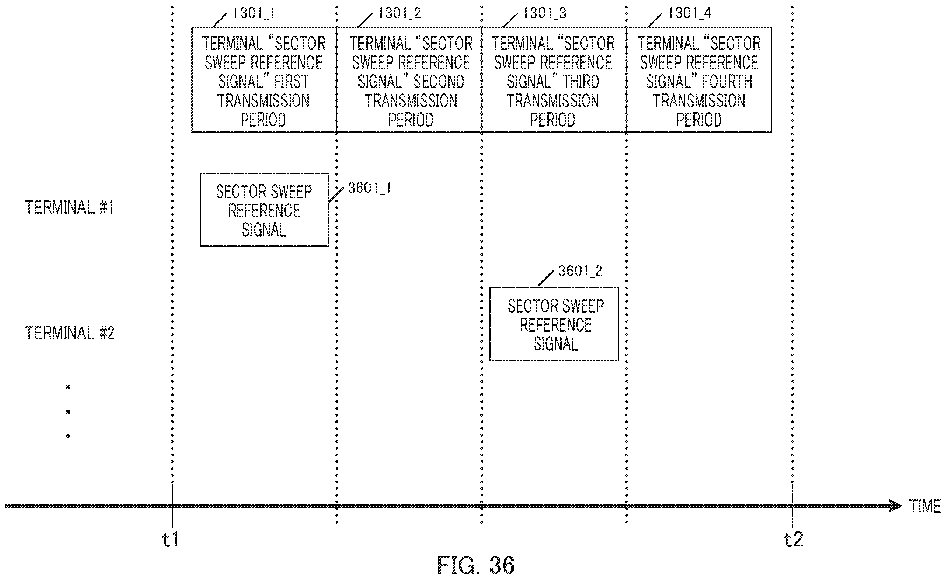

FIG. 36 illustrates exemplary occupation by the terminals in terminal "sector sweep reference signal" first transmission period 1301_1, terminal "sector sweep reference signal" second transmission period 1301_2, terminal "sector sweep reference signal" third transmission period 1301_3, and terminal "sector sweep reference signal" fourth transmission period 1301_4 illustrated in FIG. 13. Note that the horizontal axis represents time in FIG. 36.

Terminal #1 labeled 902_1 in FIG. 33 receives sector sweep reference signal 1001 transmitted by base station #1 labeled 901_1 and estimates the "transmission panel antenna and parameter number" with high reception quality from transmission panel antennas of base station #1 labeled 901_1. Note that this estimation can be performed by obtaining sector sweep reference signal 1001, and the "identification number (ID) of the transmission panel antenna" and the "identification number (ID) of the parameter used for beamforming (directivity control)" that are included in sector sweep reference signal 1001.

Terminal #1 labeled 902_1 estimates, for example, "transmission panel antenna a1 and parameter b1" as the "transmission panel antenna and parameter" with high reception quality.

In addition, while estimating the "transmission panel antenna and parameter" with high reception quality, terminal #1 labeled 902_1 simultaneously obtains information of "the number of slots in which sector sweep reference signals can be transmitted when the terminals transmit the sector sweep reference signals (the number of terminals that can transmit the sector sweep reference signals)". In the case of FIG. 36, terminal #1 labeled 902_1 obtains information indicating that "the number of slots in which sector sweep reference signals can be transmitted when the terminals transmit the sector sweep reference signals (the number of terminals that can transmit the sector sweep reference signals)" is four.

In this case, terminal #1 labeled 902_1 obtains, for example, any one of the values "0", "1", "2", and "3" using a random number. For example, terminal #1 labeled 902_1 obtains "0" using a random number. In this case, since "0" + 1 = 1, terminal #1 labeled 902_1 transmits sector sweep reference signal 3601_1 using "terminal "sector sweep reference signal" first (= "0" + 1) transmission period 1301_1" in FIG. 36. Here, the transmission period for the sector sweep reference signal is configured using a random number, but the transmission period for the sector sweep reference signal may be configured using, instead of a random number, a random number of an integer or a natural number, an irregular integer or natural number, a regular integer or natural number, an integer or a natural number held uniquely by the terminal, for example. Hence, the configuration of the transmission period for the sector sweep reference signal is not limited to the above example, and the transmission period for the sector sweep reference signal is configured for each terminal, for example. This is also applicable to the following similar descriptions.

Note that sector sweep reference signal 1401_1 includes information of the "transmission panel antenna and parameter" with high reception quality obtained by terminal #1 labeled 902_1, that is, information of "transmission panel antenna a1 and parameter b1". This will be described later.

Likewise, terminal #2 labeled 902_2 in FIG. 33 receives sector sweep reference signal 1001 transmitted by base station #1 labeled 901_1 and estimates the "transmission panel antenna and parameter number" with high reception quality from transmission panel antennas of base station #1 labeled 901_1. Note that this estimation can be performed by obtaining sector sweep reference signal 1001, and the "identification number (ID) of the transmission panel antenna" and the "identification number (ID) of the parameter used for beamforming (directivity control)" that are included in sector sweep reference signal 1001.

Terminal #2 labeled 902_2 estimates, for example, "transmission panel antenna a2 and parameter b2" as the "transmission panel antenna and parameter" with high reception quality.

In addition, while estimating the "transmission panel antenna and parameter" with high reception quality, terminal #2 labeled 902_2 simultaneously obtains information of "the number of slots in which sector sweep reference signals can be transmitted when the terminals transmit the sector sweep reference signals (the number of terminals that can transmit the sector sweep reference signals)". In the case of FIG. 36, terminal #2 labeled 902_2 obtains information indicating that "the number of slots in which sector sweep reference signals can be transmitted when the terminals transmit the sector sweep reference signals (the number of terminals that can transmit the sector sweep reference signals)" is four.

In this case, terminal #2 labeled 902_2 obtains, for example, any one of the values "0", "1", "2", and "3" using a random number. For example, terminal #2 labeled 902_2 obtains "2" using a random number. In this case, since "2" + 1 = 3, terminal #2 labeled 902_2 transmits sector sweep reference signal 3601_2 using "terminal "sector sweep reference signal" third (= "2" + 1) transmission period 1301_3" in FIG. 36.

Note that sector sweep reference signal 1401_2 includes information of the "transmission panel antenna and parameter" with high reception quality obtained by terminal #2 labeled 902_2, that is, information of "transmission panel antenna a2 and parameter b2". This will be described later.

Thus, terminal #i labeled 902_i receives sector sweep reference signal 1001 transmitted by base station #1 labeled 901_1 and estimates the "transmission panel antenna and parameter number" with high reception quality from transmission panel antennas of base station #1 labeled 901_1. Note that this estimation can be performed by obtaining sector sweep reference signal 1001, and the "identification number (ID) of the transmission panel antenna" and the "identification number (ID) of the parameter used for beamforming (directivity control)" that are included in sector sweep reference signal 1001. Note that i is an integer equal to or greater than 1, for example.

Terminal #i labeled 902_i estimates, for example, "transmission panel antenna ai and parameter bi" as the "transmission panel antenna and parameter" with high reception quality.

In addition, while estimating the "transmission panel antenna and parameter" with high reception quality, terminal #i labeled 902_i simultaneously obtains information of "the number of slots in which sector sweep reference signals can be transmitted when the terminals transmit the sector sweep reference signals (the number of terminals that can transmit the sector sweep reference signals)". In the case of FIG. 36, terminal #i labeled 902_i obtains information indicating that "the number of slots in which sector sweep reference signals can be transmitted when the terminals transmit the sector sweep reference signals (the number of terminals that can transmit the sector sweep reference signals)" is four.

In this case, terminal #i labeled 902_i obtains, for example, any one of the values "0", "1", "2", and "3" using a random number. For example, terminal #i labeled 902_i obtains "j" using a random number. Note that j is any one of the values "0", "1", "2", and "3". In this case, terminal #i labeled 902_i transmits sector sweep reference signal 3601_i using terminal "sector sweep reference signal" ("j" + 1)-th transmission period 1301_("j" + 1) in FIG. 36.

Note that sector sweep reference signal 3601_i includes information of the "transmission panel antenna and parameter" with high reception quality obtained by terminal #i labeled 902_i, that is, information of "transmission panel antenna ai and parameter bi". This will be described later.

In the manner described above, a collision of the sector sweep reference signals transmitted by the respective terminals can be reduced. This produces the effect that the base station can receive more sector sweep reference signals and can communicate with more terminals.

A description will be given of a configuration of sector sweep reference signal 3601_i transmitted by terminal #i labeled 902_i described with reference to FIG. 36. To simplify the description, terminal #i labeled 902_i has the configuration in FIG. 1A, 1B, or 1C, and terminal #i labeled 902_i with the configuration in FIG. 1A, 1B, or 1C includes the configuration in FIG. 3 as transmission panel antenna xi labeled 106_xi. Note that the configuration of terminal #i labeled 902_i is not limited to the configuration in FIG. 1A, 1B, or 1C, and the configuration of transmission panel antenna xi labeled 106_xi included in terminal #i labeled 902_i with the configuration in FIG. 1A, 1B, or 1C is not limited to the configuration in FIG. 3.

FIG. 34 illustrates examples of sector sweep reference signal 3401_i transmitted by terminal #i labeled 902_i. Note that the horizontal axis represents time in FIG. 34.

For example, terminal #i labeled 902_i with the configuration in FIG. 1A, 1B, or 1C transmits sector sweep reference signal 3401_1 in transmission panel antenna 1 from transmission panel antenna 1 labeled 106_1.

That is, as illustrated in FIG. 34, terminal #i labeled 902_i with the configuration in FIG. 1A, 1B, or 1C transmits sector sweep reference signal 3401_xi in transmission panel antenna xi from transmission panel antenna xi labeled 106_xi. Note that xi is an integer from 1 to M (both inclusive).

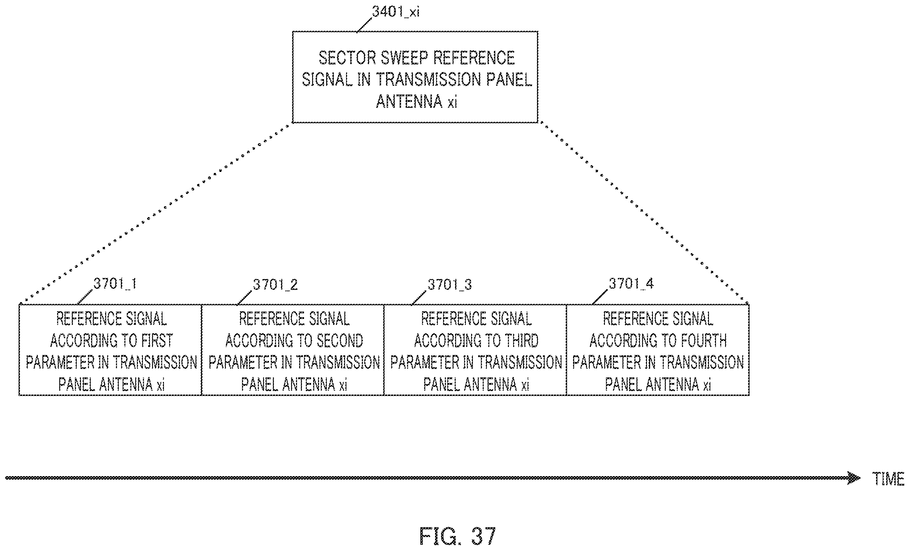

FIG. 37 illustrates an exemplary configuration of "sector sweep reference signal 3401_xi in transmission panel antenna xi" in FIG. 34. Note that the horizontal axis represents time in FIG. 37.

For example, terminal #i labeled 902_i with the configuration in FIG. 1A, 1B, or 1C includes the configuration in FIG. 3 as transmission panel antenna xi labeled 106_xi.

A description will be given of "reference signal 3701_1 according to first parameter in transmission panel antenna xi".

When terminal #i labeled 902_i transmits "reference signal 3701_1 according to first parameter in transmission panel antenna xi" illustrated in FIG. 37, terminal #i labeled 902_i sets the multiplication coefficient in multiplier 304_1 in transmission panel antenna xi labeled 106_xi as w1(xi, 1). When first transmission signal 303_1 of "reference signal 3701_1 according to first parameter in transmission panel antenna xi" is tx1ref1(t), multiplier 304_1 obtains tx1ref1(t) × w1(xi, 1). Then, terminal #i labeled 902_i transmits tx1ref1(t) × w1(xi, 1) from antenna 306_1 in FIG. 3. Note that t represents time.

When terminal #i labeled 902_i transmits "reference signal 3701_1 according to first parameter in transmission panel antenna xi" illustrated in FIG. 37, terminal #i labeled 902_i sets the multiplication coefficient in multiplier 304_2 in transmission panel antenna xi labeled 106_xi as w2(xi, 1). When second transmission signal 303_2 of "reference signal 3701_1 according to first parameter in transmission panel antenna xi" is tx2ref1(t), multiplier 304_2 obtains tx2ref1(t) × w2(xi, 1). Then, terminal #i labeled 902_i transmits tx2ref1(t) × w2(xi, 1) from antenna 306_2 in FIG. 3.

When terminal #i labeled 902_i transmits "reference signal 3701_1 according to first parameter in transmission panel antenna xi" illustrated in FIG. 37, terminal #i labeled 902_i sets the multiplication coefficient in multiplier 304_3 in transmission panel antenna xi labeled 106_xi as w3(xi, 1). When third transmission signal 303_3 of "reference signal 3701_1 according to first parameter in transmission panel antenna xi" is tx3ref1(t), multiplier 304_3 obtains tx3ref1(t) × w3(xi, 1). Then, terminal #i labeled 902_i transmits tx3ref1(t) × w3(xi, 1) from antenna 306_3 in FIG. 3.

When terminal #i labeled 902_i transmits "reference signal 3701_1 according to first parameter in transmission panel antenna xi" illustrated in FIG. 37, terminal #i labeled 902_i sets the multiplication coefficient in multiplier 304_4 in transmission panel antenna xi labeled 106_xi as w4(xi, 1). When fourth transmission signal 303_4 of "reference signal 3701_1 according to first parameter in transmission panel antenna xi" is tx4ref1(t), multiplier 304_4 obtains tx4ref1(t) × w4(xi, 1). Then, terminal #i labeled 902_i transmits tx4ref1(t) × w4(xi, 1) from antenna 306_4 in FIG. 3.

A description will be given of "reference signal 3701_j according to j-th parameter in transmission panel antenna xi".

When terminal #i labeled 902_i transmits "reference signal 3701_j according to j-th parameter in transmission panel antenna xi" illustrated in FIG. 37, terminal #i labeled 902_i sets the multiplication coefficient in multiplier 304_1 in transmission panel antenna xi labeled 106_xi as w1(xi, j). When first transmission signal 303_1 of "reference signal 3701_j according to j-th parameter in transmission panel antenna xi" is tx1refj(t), multiplier 304_1 obtains tx1refj(t) × w1(xi, j). Then, terminal #i labeled 902_i transmits tx1refj(t) × w1(xi, j) from antenna 306_1 in FIG. 3. Note that t represents time.

When terminal #i labeled 902_i transmits "reference signal 3701_j according to j-th parameter in transmission panel antenna xi" illustrated in FIG. 37, terminal #i labeled 902_i sets the multiplication coefficient in multiplier 304_2 in transmission panel antenna xi labeled 106_xi as w2(xi, j). When second transmission signal 303_2 of "reference signal 3701_j according to j-th parameter in transmission panel antenna xi" is tx2refj(t), multiplier 304_2 obtains tx2refj(t) × w2(xi, j). Then, terminal #i labeled 902_i transmits tx2refj(t) × w2(xi, j) from antenna 306_2 in FIG. 3.

When terminal #i labeled 902_i transmits "reference signal 3701_j according to j-th parameter in transmission panel antenna xi" illustrated in FIG. 37, terminal #i labeled 902_i sets the multiplication coefficient in multiplier 304_3 in transmission panel antenna xi labeled 106_xi as w3(xi, j). When third transmission signal 303_3 of "reference signal 3701_j according to j-th parameter in transmission panel antenna xi" is tx3refj(t), multiplier 304_3 obtains tx3refj(t) × w3(xi, j). Then, terminal #i labeled 902_i transmits tx3refj(t) × w3(xi, j) from antenna 306_3 in FIG. 3.

When terminal #i labeled 902_i transmits "reference signal 3701_j according to j-th parameter in transmission panel antenna xi" illustrated in FIG. 37, terminal #i labeled 902_i sets the multiplication coefficient in multiplier 304_4 in transmission panel antenna xi labeled 106_xi as w4(xi, j). When fourth transmission signal 303_4 of "reference signal 3701_j according to j-th parameter in transmission panel antenna xi" is tx4refj(t), multiplier 304_4 obtains tx4refj(t) × w4(xi, j). Then, terminal #i labeled 902_i transmits tx4refj(t) × w4(xi, j) from antenna 306_4 in FIG. 3.

Note that j is an integer from 1 to 4 (both inclusive) in the case of FIG. 37. The number Z of parameter changes is four in FIG. 37, but the number Z of parameter changes is not limited to four. The same can be implemented as long as Z is an integer equal to or greater than 1 or an integer equal to or greater than 2. At this time, j is an integer from 1 to Z (both inclusive).

As illustrated in FIGS. 34 and 37, when terminal #i labeled 902_i transmits "sector sweep reference signal 3401_xi in transmission panel antenna xi", "reference signal 3701_j according to j-th parameter in transmission panel antenna xi" includes, for example, the following information.

· Information of the "transmission panel antenna and parameter" of base station #1 labeled 901_1 with high reception quality, as described above.

Thus, terminal #i labeled 902_i transmits the "information of the "transmission panel antenna and parameter" of base station #1 labeled 901_1 with high reception quality" in "sector sweep reference signal 3401_1 in transmission panel antenna 1", "sector sweep reference signal 3401_2 in transmission panel antenna 2", ..., "sector sweep reference signal 3401_M in transmission panel antenna M" in FIG. 34.

In addition, terminal #i labeled 902_i transmits the "information of the "transmission panel antenna and parameter" of base station #1 labeled 901_1 with high reception quality" in "reference signal 3701_1 according to first parameter in transmission panel antenna xi", "reference signal 3701_2 according to second parameter in transmission panel antenna xi", "reference signal 3701_3 according to third parameter in transmission panel antenna xi", and "reference signal 3701_4 according to fourth parameter in transmission panel antenna xi" in FIG. 37 in ""sector sweep reference signal 3401_1 in transmission panel antenna 1", "sector sweep reference signal 3401_2 in transmission panel antenna 2", ..., "sector sweep reference signal 3401_M in transmission panel antenna M" in FIG. 34".

In this case, base station #1 labeled 901_1 is more likely to receive, even with an omnidirectional antenna for example, any of ""sector sweep reference signal 3401_1 in transmission panel antenna 1", "sector sweep reference signal 3401_2 in transmission panel antenna 2", ..., "sector sweep reference signal 3401_M in transmission panel antenna M" in FIG. 34" transmitted by terminal #i labeled 902_i. This is because terminal #i labeled 902_i performs transmit beamforming (directivity control). This produces the effect that base station #1 labeled 901_1 is more likely to receive the "information of the "transmission panel antenna and parameter" of base station #1 labeled 901_1 with high reception quality" transmitted by terminal #i labeled 902_i. Accordingly, base station #1 labeled 901_1 can transmit a modulation signal to terminal #i labeled 902_i based on the "information of the "transmission panel antenna and parameter" of base station #1 labeled 901_1 with high reception quality", and terminal #i labeled 902_i can receive the modulation signal with high reception quality.

In a case where a plurality of terminals transmit the sector sweep reference signals as in FIG. 36, base station #1 labeled 901_1 can obtain the "information of the "transmission panel antenna and parameter" of base station #1 labeled 901_1 with high reception quality" from the plurality of terminals. This produces the effect that base station #1 labeled 901_1 can transmit modulation signals to the plurality of terminals based on the "information of the "transmission panel antenna and parameter" of base station #1 labeled 901_1 with high reception quality" from the plurality of terminals, and that the plurality of terminals can receive the modulation signals with high reception quality.

As illustrated in FIGS. 34 and 37, when terminal #i labeled 902_i transmits "sector sweep reference signal 3401_xi in transmission panel antenna xi", "reference signal 3701_j according to j-th parameter in transmission panel antenna xi" includes, for example, the following information.

· Identification number (ID) of the transmission panel antenna, which corresponds to i here, for example; and

· Identification number (ID) of the parameter used for beamforming (directivity control), which corresponds to j here, for example.

Transmission of the "identification number (ID) of the transmission panel antenna" and the "identification number (ID) of the parameter used for beamforming (directivity control)" by terminal #i labeled 902_i allows base station #1 labeled 901_1 to recognize the "identification number (ID) of the transmission panel antenna" and the "identification number (ID) of the parameter used for beamforming (directivity control)" that have allowed successful reception; accordingly, terminal #i labeled 902_i and base station #1 labeled 901_1 can perform appropriate control. This produces the effect of enhancing data reception quality.

Note that "reference signal 3701_j according to j-th parameter in transmission panel antenna xi" may include other information. Examples of the information will be described in the other embodiments, for example, in Embodiment 6 or later.

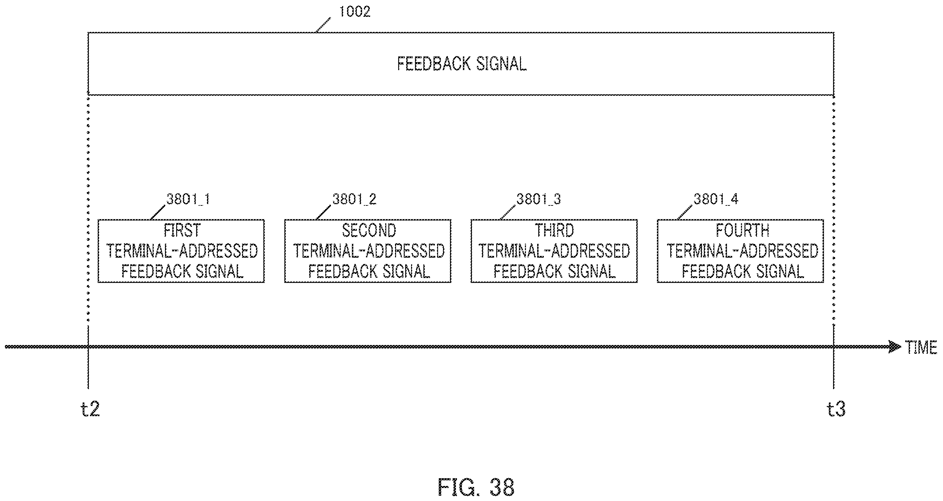

FIG. 38 illustrates an exemplary configuration of feedback signal 1002 that is present in the time period from t2 to t3 in FIG. 10 and transmitted by base station #1 labeled 901_1. Note that the horizontal axis represents time in FIG. 38. In this example, since "the number of slots in which sector sweep reference signals can be transmitted when the terminals transmit the sector sweep reference signals (the number of terminals that can transmit the sector sweep reference signals)" is four, there are four terminal-addressed feedback signals, such as first terminal-addressed feedback signal 3801_1, second terminal-addressed feedback signal 3801_2, third terminal-addressed feedback signal 3801_3, and fourth terminal-addressed feedback signal 3801_4, for feedback signal 1002 as illustrated in FIG. 38. Note that, in a case where "the number of slots in which sector sweep reference signals can be transmitted when the terminals transmit the sector sweep reference signals (the number of terminals that can transmit the sector sweep reference signals)" is S2, for example, S2 terminal feedback signals may be configured to be present for feedback signal 1002, where Ω is an integer equal to or greater than 1 or an integer equal to or greater than 2.

As in FIG. 36, when terminal #1 labeled 902_1 transmits sector sweep reference signal 3601_1 and terminal #2 labeled 902_2 transmits sector sweep reference signal 3601_2, for example, base station #1 labeled 901_1 transmits a feedback signal to terminal #1 labeled 902_1 using first terminal-addressed feedback signal 3801_1 and transmits a feedback signal to terminal #2 labeled 902_2 using third terminal-addressed feedback signal 3801_3.

At this time, first terminal-addressed feedback signal 3801_1 includes, for example, information indicating that communication with terminal #1 labeled 902_1 is available (or indicating that data-symbol-included frame 1003 in FIG. 10 includes a symbol addressed to terminal #1 labeled 902_1).

Third terminal-addressed feedback signal 3801_3 includes, for example, information indicating that communication with terminal #2 labeled 902_2 is available (or indicating that data-symbol-included frame 1003 in FIG. 10 includes a symbol addressed to terminal #2 labeled 902_2).

Note that base station #1 labeled 901_1 selects a transmission panel antenna and sets a parameter of beamforming based on the "information of the "transmission panel antenna and parameter" of base station #1 labeled 901_1 with high reception quality" transmitted by terminal #1 labeled 902_1, and base station #1 labeled 901_1 then transmits first terminal-addressed feedback signal 3801_1.

Likewise, base station #1 labeled 901_1 selects a transmission panel antenna and sets a parameter of beamforming based on the "information of the "transmission panel antenna and parameter" of base station #1 labeled 901_1 with high reception quality" transmitted by terminal #2 labeled 902_2, and base station #1 labeled 901_1 then transmits third terminal-addressed feedback signal 3801_3.

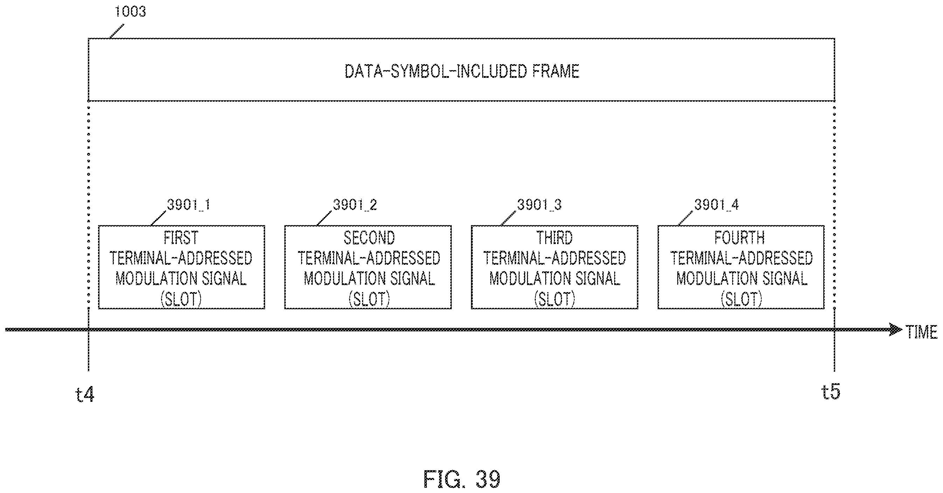

FIG. 39 illustrates an exemplary configuration of data-symbol-included frame 1003 that is present in the time period from t4 to t5 in FIG. 10 and transmitted by base station #1 labeled 901_1. Note that the horizontal axis represents time in FIG. 39. In this example, since "the number of slots in which sector sweep reference signals can be transmitted when the terminals transmit the sector sweep reference signals (the number of terminals that can transmit the sector sweep reference signals)" is four, there are four terminal-addressed modulation signals (slots), such as first terminal-addressed modulation signal (first terminal-addressed slot) 3901_1, second terminal-addressed modulation signal (second terminal-addressed slot) 3901_2, third terminal-addressed modulation signal (third terminal-addressed slot) 3901_3, and fourth terminal-addressed modulation signal (fourth terminal-addressed slot) 3901_4, for data-symbol-included frame 1003 as illustrated in FIG. 17. Note that, in a case where "the number of slots in which sector sweep reference signals can be transmitted when the terminals transmit the sector sweep reference signals (the number of terminals that can transmit the sector sweep reference signals)" is S2, for example, S2 terminal-addressed modulation signals (slots) may be configured to be present for data-symbol-included frame 1003, where $\Omega$ is an integer equal to or greater than 1 or an integer equal to or greater than 2.

As in FIG. 36, when terminal #1 labeled 902_1 transmits sector sweep reference signal 3601_1 and terminal #2 labeled 902_2 transmits sector sweep reference signal 3601_2, for example, base station #1 labeled 901_1 transmits a modulation signal (slot) to terminal #1 labeled 902_1 using first terminal-addressed modulation signal (first terminal-addressed slot) 3901_1 and transmits a modulation signal (slot) to terminal #2 labeled 902_2 using third terminal-addressed modulation signal (first terminal-addressed slot) 3901_3.

At this time, first terminal-addressed modulation signal (first terminal-addressed slot) 3901_1 includes, for example, a data symbol (data/information) addressed to terminal #1 labeled 902_1.

Third terminal-addressed modulation signal (third terminal-addressed slot) 3901_3 includes, for example, a data symbol (data/information) addressed to terminal #2 labeled 902_2.

Note that base station #1 labeled 901_1 selects a transmission panel antenna and sets a parameter of beamforming based on the "information of the "transmission panel antenna and parameter" of base station #1 labeled 901_1 with high reception quality" transmitted by terminal #1 labeled 902_1, and base station #1 labeled 901_1 then transmits first terminal-addressed modulation signal (first terminal-addressed slot) 3901_1.

Likewise, base station #1 labeled 901_1 selects a transmission panel antenna and sets a parameter of beamforming based on the "information of the "transmission panel antenna and parameter" of base station #1 labeled 901_1 with high reception quality" transmitted by terminal #2 labeled 902_2, and base station #1 labeled 901_1 then transmits third terminal-addressed modulation signal (third terminal-addressed slot) 3901_3.

Note that, in FIG. 38, "base station #1 labeled 901_1 may estimate the "transmission panel antenna and parameter" of terminal #1 labeled 902_1 with high reception quality in receiving "sector sweep reference signal 3601_1 transmitted by terminal #1 labeled 902_1", and the estimated information" may be included in first terminal-addressed feedback signal 3801_1.

Terminal #1 labeled 902_1 selects a transmission panel antenna and determines a beamforming method based on the information of "transmission panel antenna and parameter" of terminal #1 labeled 902_1 with high reception quality obtained from base station #1 labeled 901_1, and terminal #1 labeled 902_1 then transmits a symbol, a frame, and/or a modulation signal to base station #1 labeled 901_1. This produces the effect of enhancing data reception quality in base station #1 labeled 901_1.

Further, in FIG. 38, "base station #1 labeled 901_1 may estimate the "transmission panel antenna and parameter" of terminal #2 labeled 902_2 with high reception quality in receiving "sector sweep reference signal 3601_2 transmitted by terminal #2 labeled 902_2", and the estimated information" may be included in third terminal-addressed feedback signal 3801_3.

Terminal #2 labeled 902_2 selects a transmission panel antenna and determines a beamforming method based on the information of "transmission panel antenna and parameter" of terminal #2 labeled 902_2 with high reception quality obtained from base station #2 labeled 901_1, and terminal #2 labeled 902_2 then transmits a symbol, a frame, and/or a modulation signal to base station #1 labeled 901_1. This produces the effect of enhancing data reception quality in base station #1 labeled 901_1.

Incidentally, in the time period from t3 to t4, terminals, which are terminal #1 labeled 902_1 and terminal #2 labeled 902_2 in the above description, may transmit, to base station #1 labeled 901_1, modulation signals including information indicating successful reception of a signal from base station #1 labeled 901_1, such as acknowledgement (ACK).

Note that, first terminal-addressed modulation signal (first terminal-addressed slot) 3901_1 in FIG. 39 may include, in addition to the data symbol, a "reference signal such as a demodulation reference signal (DMRS), phase tracking reference signal (PTRS), or sounding reference signal (SRS)", a pilot symbol, a pilot signal, a preamble, and a symbol including control information, for example. Examples of the symbol including the control information may include information of a destination terminal (ID for identifying the terminal), a transmission method of the modulation signal, information of the modulation scheme, information of the error correction coding scheme (code length, code rate, etc.), information of the modulation and coding scheme (MCS), and the like.

Likewise, second terminal-addressed modulation signal (second terminal-addressed slot) 3901_2, third terminal-addressed modulation signal (third terminal-addressed slot) 3901_3, and fourth terminal-addressed modulation signal (fourth terminal-addressed slot) 3901_4 may include, in addition to the data symbol, a "reference signal such as DMRS, PTRS, or SRS", a pilot symbol, a pilot signal, a preamble, and a symbol including control information, for example. Examples of the symbol including the control information may include information of a destination terminal (ID for identifying the terminal), a transmission method of the modulation signal, information of the modulation scheme, information of the error correction coding scheme (code length, code rate, etc.), information of the MCS, and the like.

FIG. 18 illustrates an exemplary state where base station #1 labeled 901_1 and "terminal #1 labeled 902_1, terminal #2 labeled 902_2, and terminal #3 labeled 902_3" communicate with each other as illustrated in FIG. 33. (A) of FIG. 18 illustrates an exemplary modulation signal transmission state of base station #1 labeled 901_1, and (B) of FIG. 18 illustrates an exemplary modulation signal transmission state of "terminal #1 labeled 902_1, terminal #2 labeled 902_2, and terminal #3 labeled 902_3". Note that the horizontal axes represent time in (A) and (B) of FIG. 18.

First, base station #1 labeled 901_1 transmits sector sweep reference signal 1801_1. Note that this has already been described with reference to FIG. 10, and the description thereof will be thus omitted.

Then, a terminal such as "terminal #1 labeled 902_1, terminal #2 labeled 902_2, and terminal #3 labeled 902_3" transmits sector sweep reference signal 1851_1. Note that this has already been described with reference to, for example, FIGS. 13, 36, etc., and the description thereof will be thus omitted.

Base station #1 labeled 901_1 transmits feedback signal 1802_1. Note that this has already been described with reference to FIG. 38, and the description thereof will be thus omitted.

After that, base station #1 labeled 901_1 transmits "data-symbol-included frame 1803_1". Note that this has already been described with reference to FIG. 39, and the description thereof will be thus omitted. (Hence, "data-symbol-included frame 1803_1" is considered to be a frame for downlink, for example).

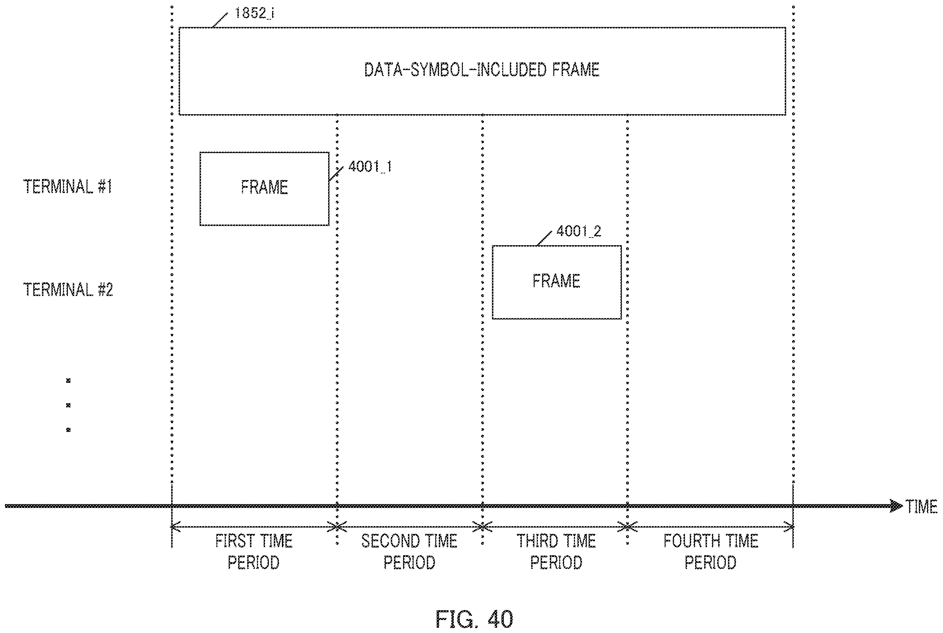

Then, the terminal such as "terminal #1 labeled 902_1, terminal #2 labeled 902_2, and terminal #3 labeled 902_3" transmits "data-symbol-included frame 1852_1". Note that a configuration of the frame will be described later with reference to FIG. 40. (Hence, "data-symbol-included frame 1852_1" is considered to be a frame for uplink, for example).

Next, base station #1 labeled 901_1 transmits "data-symbol-included frame 1803_2". Note that a configuration method of "data-symbol-included frame 1803_2" is as described with reference to FIG. 39.

Then, the terminal such as "terminal #1 labeled 902_1, terminal #2 labeled 902_2, and terminal #3 labeled 902_3" transmits "data-symbol-included frame 1852_2". Note that a configuration of the frame will be described later with reference to FIG. 40.

FIG. 19 illustrates an exemplary modulation signal transmission state of base station #1 labeled 901_1 and an exemplary modulation signal transmission state of the terminal such as "terminal #1 labeled 902_1, terminal #2 labeled 902_2, and terminal #3 labeled 902_3" after the state in FIG. 18.

(A) of FIG. 19 illustrates an exemplary modulation signal transmission state of base station #1 labeled 901_1, and it is a temporal continuation from the modulation signal transmission state of base station #1 labeled 901_1 in (A) of FIG. 18.

(B) of FIG. 19 illustrates an exemplary modulation signal transmission state of "terminal #1 labeled 902_1, terminal #2 labeled 902_2, and terminal #3 labeled 902_3", and it is a temporal continuation from the modulation signal transmission state of "terminal #1 labeled 902_1, terminal #2 labeled 902_2, and terminal #3 labeled 902_3" in (B) of FIG. 18.

Note that the horizontal axes represent time in (A) and (B) of FIG. 19.

After the states in (A) and (B) of FIG. 18, base station #1 labeled 901_1 transmits "data-symbol-included frame 1803_3". Note that a configuration method of "data-symbol-included frame 1803_2" is as described with reference to FIG. 39.

The terminal such as "terminal #1 labeled 902_1, terminal #2 labeled 902_2, and terminal #3 labeled 902_3" transmits "data-symbol-included frame 1852_3". Note that a configuration of the frame will be described later with reference to FIG. 40.

Next, base station #1 labeled 901_1 transmits sector sweep reference signal 1801_2. Note that this has already been described with reference to FIG. 10, and the description thereof will be thus omitted.

Then, the terminal such as "terminal #1 labeled 902_1, terminal #2 labeled 902_2, and terminal #3 labeled 902_3" transmits sector sweep reference signal 1851_2. Note that this has already been described with reference to, for example, FIGS. 13, 36, etc., and the description thereof will be thus omitted.

Base station #1 labeled 901_1 transmits feedback signal 1802_2. Note that this has already been described with reference to FIG. 38, and the description thereof will be thus omitted.

After that, base station #1 labeled 901_1 transmits "data-symbol-included frame 1803_4". Note that this has already been described with reference to FIG. 39, and the description thereof will be thus omitted.

Then, the terminal such as "terminal #1 labeled 902_1, terminal #2 labeled 902_2, and terminal #3 labeled 902_3" transmits "data-symbol-included frame 1852_4". Note that a configuration of the frame will be described later with reference to FIG. 40.

As described above, base station #1 labeled 901_1 and the terminal transmit the sector sweep reference signals before the "transmission of the "data-symbol-included frames" by base station #1 labeled 901_1 and/or the transmission of the "data-symbol-included frames" by the terminal such as "terminal #1 labeled 902_1, terminal #2 labeled 902_2, and terminal #3 labeled 902_3"", and again transmit the sector sweep reference signals after the "transmission of the "data-symbol-included frames" by base station #1 labeled 901_1 and/or the transmission of the "data-symbol-included frames" by the terminal such as "terminal #1 labeled 902_1, terminal #2 labeled 902_2, and terminal #3 labeled 902_3"" Base station #1 labeled 901_1 and the terminal then each select a transmission panel antenna to be used and configure transmit beamforming. This produces the effect that the base station and/or the terminal achieve high data reception quality.

Next, a description will be given of an exemplary configuration of "data-symbol-included frame 1852_i" transmitted by the terminal such as "terminal #1 labeled 902_1, terminal #2 labeled 902_2, and terminal #3 labeled 902_3" with reference to FIG. 40. Note that i is an integer equal to or greater than 1, for example, and the horizontal axis represents time in FIG. 40.

As illustrated in FIG. 40, "data-symbol-included frame 1852_i" is composed of a first time period, a second time period, a third time period, and a fourth time period.

Terminal #1 labeled 902_1 transmits frame (including a data symbol) 4001_1 using the first time period, for example. Terminal #2 labeled 902_2 transmits frame (including a data symbol) 4001_2 using the third time period.

As described above, "data-symbol-included frame 1852_i" transmitted by the terminal such as "terminal #1 labeled 902_1, terminal #2 labeled 902_2, and terminal #3 labeled 902_3" is subjected to, for example, time division and transmitted by each terminal, and base station #1 labeled 901_1 receives the frame transmitted by the terminal, thereby preventing interference and achieving high data reception quality.

Note that frame 4001_1 in FIG. 40 may include, in addition to the data symbol, a "reference signal such as DMRS, PTRS, or SRS", a pilot symbol, a pilot signal, a preamble, and a symbol including control information, for example.

Likewise, frames present in the first time period, the second time period, the third time period, and the fourth time period, such as frames 4001_1 and 4001_2, may include, in addition to the data symbol, a "reference signal such as DMRS, PTRS, or SRS", a pilot symbol, a pilot signal, a preamble, and a symbol including control information, for example.

In FIG. 40, a description has been given of a case where the terminals perform time division on the frames to be transmitted, but the terminals may perform frequency division on the frames to be transmitted or perform spatial division using multi user-multiple-input multiple-output (MU-MIMO).

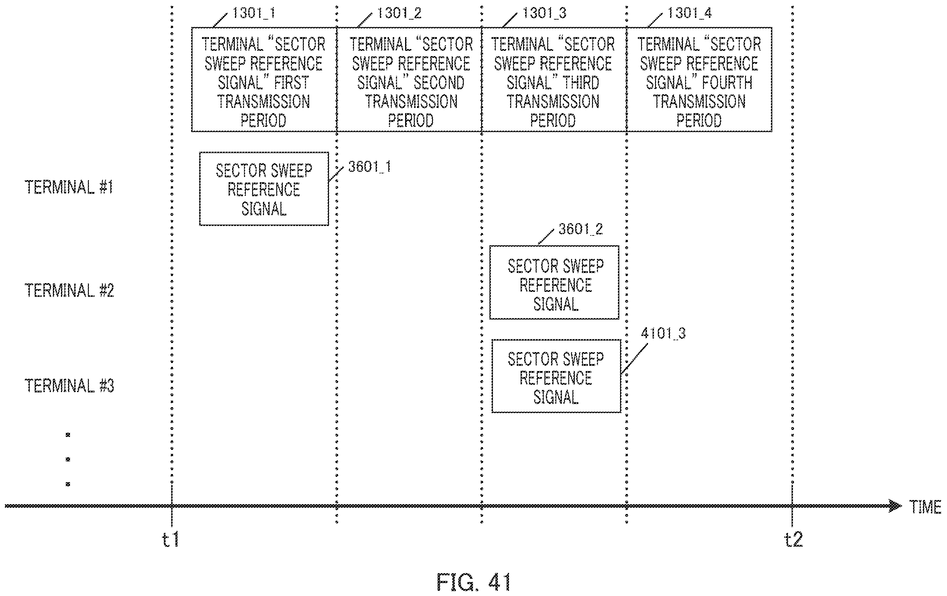

FIG. 36 illustrates exemplary occupation by terminals in terminal "sector sweep reference signal" first transmission period 1301_1, terminal "sector sweep reference signal" second transmission period 1301_2, terminal "sector sweep reference signal" third transmission period 1301_3, and terminal "sector sweep reference signal" fourth transmission period 1301_4 illustrated in FIG. 13. In FIG. 41, a description will be given of exemplary occupation by terminals different from that in FIG. 36 in terminal "sector sweep reference signal" first transmission period 1301_1, terminal "sector sweep reference signal" second transmission period 1301_2, terminal "sector sweep reference signal" third transmission period 1301_3, and terminal "sector sweep reference signal" fourth transmission period 1301_4 illustrated in FIG. 13.

In FIG. 41, the components that operate in the same manner as in FIGS. 13 and 36 are denoted by the same reference signs, and the descriptions thereof will be omitted since they have already been described. In the following, the difference from the description in FIG. 36 will be described.

Terminal #3 labeled 902_3 in FIG. 33 receives sector sweep reference signal 1001 transmitted by base station #1 labeled 901_1, obtains the "identification number (ID) of the transmission panel antenna" and "identification number (ID) of the parameter used for beamforming (directivity control)" with high reception quality, and then can communicate with base station #1 labeled 901_1.

Terminal #3 labeled 902_3, for example, estimates "transmission panel antenna a3 and parameter b3" as the "transmission panel antenna and parameter" with high reception quality.

In addition, while estimating the "transmission panel antenna and parameter" with high reception quality, terminal #3 labeled 902_3 simultaneously obtains information of the "the number of slots in which sector sweep reference signals can be transmitted when the terminals transmit the sector sweep reference signals (the number of terminals that can transmit the sector sweep reference signals)". In the case of FIG. 41, terminal #3 labeled 902_3 obtains information indicating that "the number of slots in which sector sweep reference signals can be transmitted when the terminals transmit the sector sweep reference signals (the number of terminals that can transmit the sector sweep reference signals)" is four.

In this case, terminal #3 labeled 902_3 obtains, for example, any one of the values "0", "1", "2", and "3" using a random number. For example, terminal #3 labeled 902_3 obtains "2" using a random number. In this case, since "2" + 1 = 3, terminal #3 labeled 902_3 transmits sector sweep reference signal 4101_3 using "terminal "sector sweep reference signal" third (= "2" + 1) transmission period 1301_3" in FIG. 41.

Note that sector sweep reference signal 2101_3 includes information of the "transmission panel antenna and parameter" with high reception quality obtained by terminal #3 labeled 902_3, that is, information of "transmission panel antenna a3 and parameter b3".

At this time, as illustrated in FIG. 41, the time period for "sector sweep reference signal 3601_2 transmitted by terminal #2 labeled 902_2" and the time period for "sector sweep reference signal 4101_3 transmitted by terminal #3 labeled 902_3" overlap each other.

Thus, base station #1 labeled 901_1 possibly simultaneously receives "sector sweep reference signal 3601_2 transmitted by terminal #2 labeled 902_2" and "sector sweep reference signal 4101_3 transmitted by terminal #3 labeled 902_3".

In this case, the following is two possible cases.

<Case 1>

Both "sector sweep reference signal 3601_2 transmitted by terminal #2 labeled 902_2" and "sector sweep reference signal 4101_3 transmitted by terminal #3 labeled 902_3" have the configuration in FIG. 37.

Here, the ""transmission panel antenna and parameter for beamforming of terminal #2 labeled 902_2" with high reception quality in receiving "sector sweep reference signal 3601_2 transmitted by terminal #2 labeled 902_2" by base station #1 labeled 901_1" are different from the ""transmission panel antenna and parameter for beamforming of terminal #3 labeled 902_3" with high reception quality in receiving "sector sweep reference signal" 3601_3 transmitted by terminal #3 labeled 902_3" by base station #1 labeled 901_1". Accordingly, base station #1 labeled 901_1 obtains information included in "sector sweep reference signal 3601_2 transmitted by terminal #2 labeled 902_2" and information included in "sector sweep reference signal" 4101_3 transmitted by terminal #3 labeled 902_3".

In this case, for example, "first terminal-addressed feedback signal 3801_1 in FIG. 38 is a signal addressed to terminal #1 labeled 902_1", "second terminal-addressed feedback signal 3801_2 is a signal addressed to terminal #3 labeled 902_3", and "third terminal-addressed feedback signal 3801_3 is a signal addressed to terminal #2 labeled 902_2".

Further, for example, "first terminal-addressed modulation signal (slot) 3901_1 in FIG. 39 is a signal addressed to terminal #1 labeled 902_1", "second terminal-addressed modulation signal (slot) 3901_2 is a signal addressed to terminal #3 labeled 902_3", and "third terminal-addressed modulation signal (slot) 3901_3 is a signal addressed to terminal #2 labeled 902_2".

In this manner, base station #1 labeled 901_1 can communicate with (terminal #1 labeled 902_1,) terminal #2 labeled 902_2 and terminal #3 labeled 902_3.

<Case2>

Both "sector sweep reference signal 3601_2 transmitted by terminal #2 labeled 902_2" and "sector sweep reference signal 4101_3 transmitted by terminal #3 labeled 902_3" have the configuration in FIG. 37.

Here, the ""transmission panel antenna and parameter for beamforming of terminal #2 labeled 902_2" with high reception quality in receiving "sector sweep reference signal" 3601_2 transmitted by terminal #2 labeled 902_2" by base station #1 labeled 901_1" interfere with the ""transmission panel antenna and parameter for beamforming of terminal #3 labeled 902_3" with high reception quality in receiving "sector sweep reference signal" 3601_3 transmitted by terminal #3 labeled 902_3" by base station #1 labeled 901_1".

<Case2-1>

In some cases, base station #1 labeled 901_1 obtains either information included in "sector sweep reference signal 3601_2 transmitted by terminal #2 labeled 902_2" or information included in "sector sweep reference signal 4101_3 transmitted by terminal #3 labeled 902_3".

For example, base station #1 labeled 901_1 obtains the information included in "sector sweep reference signal 3601_2 transmitted by terminal #2 labeled 902_2".

In this case, for example, "first terminal-addressed feedback signal 3801_1 in FIG. 38 is a signal addressed to terminal #1 labeled 902_1", and "third terminal-addressed feedback signal 3801_3 is a signal addressed to terminal #2 labeled 902_2".

Further, for example, "first terminal-addressed modulation signal (slot) 3901_1 in FIG. 39 is a signal addressed to terminal #1 labeled 902_1", and "third terminal-addressed modulation signal (slot) 3901_3 is a signal addressed to terminal #2 labeled 902_2".

In this manner, base station #1 labeled 901_1 can communicate with (terminal #1 labeled 902_1 and) terminal #2 labeled 902_2.

An operation of terminal #3 labeled 902_3 will be described.

It is assumed that sector sweep reference signal 1851_1 in FIG. 18 has the states in FIG. 41. That is, data-symbol-included frames 1803_1, 1803_2, and 1803_3 in FIG. 18 have no frame (slot) addressed to terminal #3 labeled 902_3.

In this case, terminal #3 labeled 902_3 in FIG. 33 receives sector sweep reference signal 1801_2 in FIG. 19 transmitted by base station #1 labeled 901_1, obtains the "identification number (ID) of the transmission panel antenna" and "identification number (ID) of the parameter used for beamforming (directivity control)" with high reception quality, and then can communicate with base station #1 labeled 901_1.

Terminal #3 labeled 902_3, for example, estimates "transmission panel antenna a3 and parameter b3" as the "transmission panel antenna and parameter" with high reception quality.

In addition, while estimating the "transmission panel antenna and parameter" with high reception quality, terminal #3 labeled 902_3 simultaneously obtains information of the "the number of slots in which sector sweep reference signals can be transmitted when the terminals transmit the sector sweep reference signals (the number of terminals that can transmit the sector sweep reference signals)". Terminal #3 labeled 902_3 obtains information indicating that "the number of slots in which sector sweep reference signals can be transmitted when the terminals transmit the sector sweep reference signals (the number of terminals that can transmit the sector sweep reference signals)" is four.

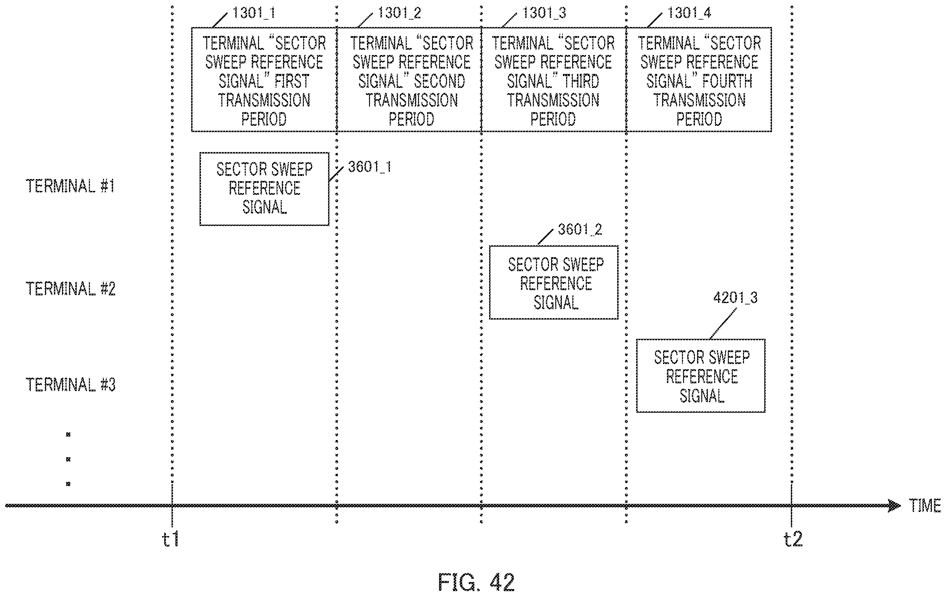

In this case, terminal #3 labeled 902_3 obtains, for example, any one of the values "0", "1", "2", and "3" using a random number. For example, terminal #3 labeled 902_3 obtains "3" by generating a random number using seeds different from the previous. In this case, since "3" + 1 = 4, terminal #3 labeled 902_3 transmits sector sweep reference signal 4201_3 using "terminal "sector sweep reference signal" fourth (= "3" + 1) transmission period 1301_4" in FIG. 42.

Note that sector sweep reference signal 4201_3 includes information of the "transmission panel antenna and parameter" with high reception quality obtained by terminal #3 labeled 902_3, that is, information of "transmission panel antenna a3 and parameter b3".

In this case, as illustrated in FIG. 42, base station #1 labeled 901_1 receives "sector sweep reference signal 4201_3 transmitted by terminal #3 labeled 902_3". Then, the predetermined procedure described above is performed, and base station #1 labeled 901_1 and terminal #3 labeled 902_3 communicate with each other.

<Case2-2>

In some cases, base station #1 labeled 901_1 obtains neither information included in "sector sweep reference signal 3601_2 transmitted by terminal #2 labeled 902_2" nor information included in "sector sweep reference signal 4101_3 transmitted by terminal #3 labeled 902_3".

It is assumed that sector sweep reference signal 1851_1 in FIG. 18 has the states in FIG. 41, and base station #1 labeled 901_1 obtains neither information included in "sector sweep reference signal 3601_2 transmitted by terminal #2 labeled 902_2" nor information included in "sector sweep reference signal 4101_3 transmitted by terminal #3 labeled 902_3". In this case, data-symbol-included frames 1803_1, 1803_2, and 1803_3 in FIG. 18 have no frame (slot) addressed to terminal #2 labeled 902_2 or frame (slot) addressed to terminal #3 labeled 902_3.

In this case, terminal #2 labeled 902_2 in FIG. 9 receives sector sweep reference signal 1801_2 in FIG. 19 transmitted by base station #1 labeled 901_1, obtains the "identification number (ID) of the transmission panel antenna" and "identification number (ID) of the parameter used for beamforming (directivity control)" with high reception quality, and then can communicate with base station #1 labeled 901_1.

Terminal #2 labeled 902_2 estimates, for example, "transmission panel antenna a2 and parameter b2" as the "transmission panel antenna and parameter" with high reception quality.

In addition, while estimating the "transmission panel antenna and parameter" with high reception quality, terminal #2 labeled 902_2 simultaneously obtains information of "the number of slots in which sector sweep reference signals can be transmitted when the terminals transmit the sector sweep reference signals (the number of terminals that can transmit the sector sweep reference signals)". Terminal #2 labeled 902_2 obtains information indicating that "the number of slots in which sector sweep reference signals can be transmitted when the terminals transmit the sector sweep reference signals (the number of terminals that can transmit the sector sweep reference signals)" is four.

In this case, terminal #2 labeled 902_2 obtains, for example, any one of the values "0", "1", "2", and "3" using a random number. For example, terminal #2 labeled 902_2 obtains "2" by generating a random number using seeds different from the previous. In this case, since "2" + 1 = 3, terminal #2 labeled 902_2 transmits sector sweep reference signal 3601_2 using "terminal "sector sweep reference signal" third (= "2" + 1) transmission period 1301_3" in FIG. 42.

Note that sector sweep reference signal 3601_2 includes information of the "transmission panel antenna and parameter" with high reception quality obtained by terminal #2 labeled 902_2, that is, information of "transmission panel antenna a2 and parameter b3".

In this case, as illustrated in FIG. 42, base station #1 labeled 901_1 receives "sector sweep reference signal 3601_2 transmitted by terminal #2 labeled 902_2". Then, the predetermined procedure described above is performed, and base station #1 labeled 901_1 and terminal #2 labeled 902_2 communicate with each other.

Likewise, terminal #3 labeled 902_3 in FIG. 9 receives sector sweep reference signal 1801_2 in FIG.

19 transmitted by base station #1 labeled 901_1, obtains the "identification number (ID) of the transmission panel antenna" and "identification number (ID) of the parameter used for beamforming (directivity control)" with high reception quality, and then can communicate with base station #1 labeled 901_1.

Terminal #3 labeled 902_3, for example, estimates "transmission panel antenna a3 and parameter b3" as the "transmission panel antenna and parameter" with high reception quality.

In addition, while estimating the "transmission panel antenna and parameter" with high reception quality, terminal #3 labeled 902_3 simultaneously obtains information of the "the number of slots in which sector sweep reference signals can be transmitted when the terminals transmit the sector sweep reference signals (the number of terminals that can transmit the sector sweep reference signals)". Terminal #3 labeled 902_3 obtains information indicating that "the number of slots in which sector sweep reference signals can be transmitted when the terminals transmit the sector sweep reference signals (the number of terminals that can transmit the sector sweep reference signals)" is four.

In this case, terminal #3 labeled 902_3 obtains, for example, any one of the values "0", "1", "2", and "3" using a random number. For example, terminal #3 labeled 902_3 obtains "3" by generating a random number using seeds different from the previous. In this case, since "3" + 1 = 4, terminal #3 labeled 902_3 transmits sector sweep reference signal 4201_3 using "terminal "sector sweep reference signal" fourth (= "3" + 1) transmission period 1301_4" in FIG. 42.

Note that sector sweep reference signal 4201_3 includes information of the "transmission panel antenna and parameter" with high reception quality obtained by terminal #3 labeled 902_3, that is, information of "transmission panel antenna a3 and parameter b3".

In this case, as illustrated in FIG. 42, base station #1 labeled 901_1 receives "sector sweep reference signal 4201_3 transmitted by terminal #3 labeled 902_3". Then, the predetermined procedure described above is performed, and base station #1 labeled 901_1 and terminal #3 labeled 902_3 communicate with each other.

In the manner described above, a collision of the sector sweep reference signals transmitted by the respective terminals can be further reduced. This produces the effect that the base station can receive more sector sweep reference signals and can communicate with more terminals.

As described above in the present embodiment, the effect of improving communication capacity in a system composed of a base station and terminals can be obtained by the terminals transmitting sector sweep reference signals so as to cause less collision. Note that the configurations of the terminals and the base station are not limited to the configurations in FIGS. 1A, 1B, and 1C. In addition, the configurations of a transmission panel antenna and a reception panel antenna are not limited to the configurations in FIGS. 3 and 4, and may be any antenna configurations as long as one or more or a plurality of transmission directivities and reception directivities can be generated, for example. Further, signals, frames, etc. are illustrated in FIGS. 10, 34, 35, 13, 36, 37, 38, 39, 18, 19, 40, 41, and 42, but the names thereof are not limited to those in the drawings and the important part is the functions of the signals to be transmitted.

(Embodiment 6)

The embodiments in the present specification, such as Embodiments 1 to 5, have provided a description of methods of transmitting a sector sweep reference signal (e.g., 1001 in FIG. 10, etc.) by a base station, the example of which is base station #1 labeled 901_1 in FIG. 9, etc., and a description of methods of transmitting a sector sweep reference signal by a terminal, the example of which is the terminal labeled 902_i in FIG. 9, etc. In the present embodiment, a description will be given of variations of the "methods of transmitting a sector sweep reference signal by a base station" and the "methods of transmitting a sector sweep reference signal by a terminal".

The methods of transmitting a sector sweep reference signal by a base station have been described with reference to, for example, FIGS. 11, 12, 34, 35, etc.

To be more specific, a sector sweep reference signal is generated based on the identification (ID) of a transmission panel antenna and the ID of beamforming (see FIG. 12).

For example, a base station transmits sector sweep reference signals using transmission panel antenna #1. In this case, the base station transmits sector sweep reference signals as described below using transmission panel antenna #1.

· "(Reference) signal subjected to processing based on a parameter of beamforming (directivity control) ID 0, which is parameter ID 0, using transmission panel antenna #1"

· "(Reference) signal subjected to processing based on a parameter of beamforming (directivity control) ID 1, which is parameter ID 1, using transmission panel antenna #1"

· "(Reference) signal subjected to processing based on a parameter of beamforming (directivity control) ID 2, which is parameter ID 2, using transmission panel antenna #1"

· "(Reference) signal subjected to processing based on a parameter of beamforming (directivity control) ID 3, which is parameter ID 3, using transmission panel antenna #1"

Likewise, the base station transmits sector sweep reference signals using transmission panel antenna #2. In this case, the base station transmits sector sweep reference signals as described below using transmission panel antenna #2.

· "(Reference) signal subj ected to processing based on a parameter of beamforming (directivity control) ID 0, which is parameter ID 0, using transmission panel antenna #2"

· "(Reference) signal subj ected to processing based on a parameter of beamforming (directivity control) ID 1, which is parameter ID 1, using transmission panel antenna #2"

· "(Reference) signal subj ected to processing based on a parameter of beamforming (directivity control) ID 2, which is parameter ID 2, using transmission panel antenna #2"

· "(Reference) signal subj ected to processing based on a parameter of beamforming (directivity control) ID 3, which is parameter ID 3, using transmission panel antenna #2"

That is, the base station transmits sector sweep reference signals using transmission panel antenna #i. Note that i is an integer equal to or greater than 1. In this case, the base station transmits sector sweep reference signals as described below using transmission panel antenna #i.

· "(Reference) signal subj ected to processing based on a parameter of beamforming (directivity control) ID 0, which is parameter ID 0, using transmission panel antenna #i"

· "(Reference) signal subj ected to processing based on a parameter of beamforming (directivity control) ID 1, which is parameter ID 1, using transmission panel antenna #i"

· "(Reference) signal subj ected to processing based on a parameter of beamforming (directivity control) ID 2, which is parameter ID 2, using transmission panel antenna #i"

· "(Reference) signal subj ected to processing based on a parameter of beamforming (directivity control) ID 3, which is parameter ID 3, using transmission panel antenna #i"

In the above, "the ID of a transmission panel antenna and the ID of beamforming (directivity control) of a base station" are distinguished from each other, but the ID may be assigned without distinguishing and the base station may generate and transmit a sector sweep reference signal.

For example, an ID is assigned to "use of beamforming (directivity control) ID 0, which is parameter ID 0, with transmission panel antenna #1", and it is ID $\flat$0. An ID is assigned to "use of beamforming (directivity control) ID 1, which is parameter ID 1, with transmission panel antenna #1", and it is ID $\flat$1. An ID is assigned to "use of beamforming (directivity control) ID 2, which is parameter ID 2, with transmission panel antenna #1", and it is ID $\flat$2. An ID is assigned to "use of beamforming (directivity control) ID 3, which is parameter ID 3, with transmission panel antenna #1", and it is ID $\flat$3.

An ID is assigned to "use of beamforming (directivity control) ID 0, which is parameter ID 0, with transmission panel antenna #2", and it is ID $\flat$4. An ID is assigned to "use of beamforming (directivity control) ID 1, which is parameter ID 1, with transmission panel antenna #2", and it is ID $\flat$5. An ID is assigned to "use of beamforming (directivity control) ID 2, which is parameter ID 2, with transmission panel antenna #2", and it is ID $\flat$6. An ID is assigned to "use of beamforming (directivity control) ID 3, which is parameter ID 3, with transmission panel antenna #2", and it is ID $\flat$7.

An ID is assigned to "use of beamforming (directivity control) ID 0, which is parameter ID 0, with transmission panel antenna #3", and it is ID $\flat$8. An ID is assigned to "use of beamforming (directivity control) ID 1, which is parameter ID 1, with transmission panel antenna #3", and it is ID $\flat$9. An ID is assigned to "use of beamforming (directivity control) ID 2, which is parameter ID 2, with transmission panel antenna #3", and it is ID $\flat$10. An ID is assigned to "use of beamforming (directivity control) ID 3, which is parameter ID 3, with transmission panel antenna #3", and it is ID $\flat$11, and so forth.

Then, the base station transmits, as sector sweep reference signals, a "(reference) signal subjected to processing based on ID $\flat$0", a "(reference) signal subjected to processing based on ID $\flat$1", a "(reference) signal subjected to processing based on ID $\flat$2", a "(reference) signal subjected to processing based on ID $\flat$3", a "(reference) signal subjected to processing based on ID $\flat$4", a "(reference) signal subjected to processing based on ID $\flat$5", a "(reference) signal subjected to processing based on ID $\flat$6", a "(reference) signal subjected to processing based on ID $\flat$7", a "(reference) signal subjected to processing based on ID $\flat$8", a "(reference) signal subjected to processing based on ID $\flat$9", a "(reference) signal subjected to processing based on ID $\flat$10", a "(reference) signal subj ected to processing based on ID $\flat$11", and so forth. Note that the above signals may be transmitted in the above order or in a different order.

At this time, the "(reference) signal subjected to processing based on ID $\flat$k" transmitted by the base station includes information of ID 6k, where k is an integer equal to or greater than 0. Note that the "(reference) signal subjected to processing based on ID $\flat$k" transmitted by the base station may include other information. The examples are described in other embodiments, and the description thereof will be thus omitted (information of a transmission panel antenna may be included).

A terminal then receives the sector sweep reference signals transmitted by the base station and transmits a sector sweep reference signal including information of the ID with high reception quality (e.g., when "ID $\flat$3" has high reception quality, the information of "ID $\flat$3" is included). Note that the sector sweep reference signal transmitted by a terminal may include other information. The examples are as described in other embodiments. Methods of transmitting the sector sweep reference signal by a terminal are as described in other embodiments and will be described later in the present embodiment.

A transmission panel antenna (see FIGS. 1A, 1B and 1C) of the base station may include the configuration in FIG. 3. The transmission panel antenna may be composed of a single antenna or a plurality of antennas.

Based on the above, the base station may generate and transmit, for example, sector sweep reference signal 1001 in FIG. 10, etc. in the following manner.

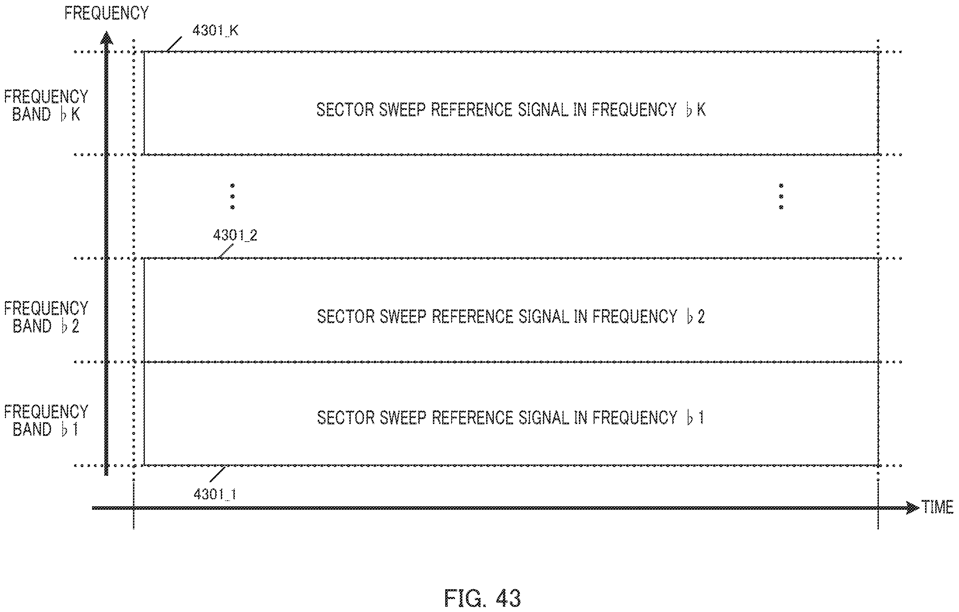

FIG. 43 illustrates an exemplary configuration of sector sweep reference signal 1001, which has been described with reference to FIG. 10 etc., for example, transmitted by the base station. The vertical axis represents frequency and the horizontal axis represents time in FIG. 43. Note that there are frequency band $\flat$1, frequency band $\flat$2, ..., frequency band $\flat$K as in other embodiments.

As illustrated in FIG. 43, sector sweep reference signal 1001 is composed of "sector sweep reference signal 4301_1 in frequency $\flat$1", "sector sweep reference signal 4301_2 in frequency $\flat$2", ..., "sector sweep reference signal 4301_K in frequency $\flat$K".

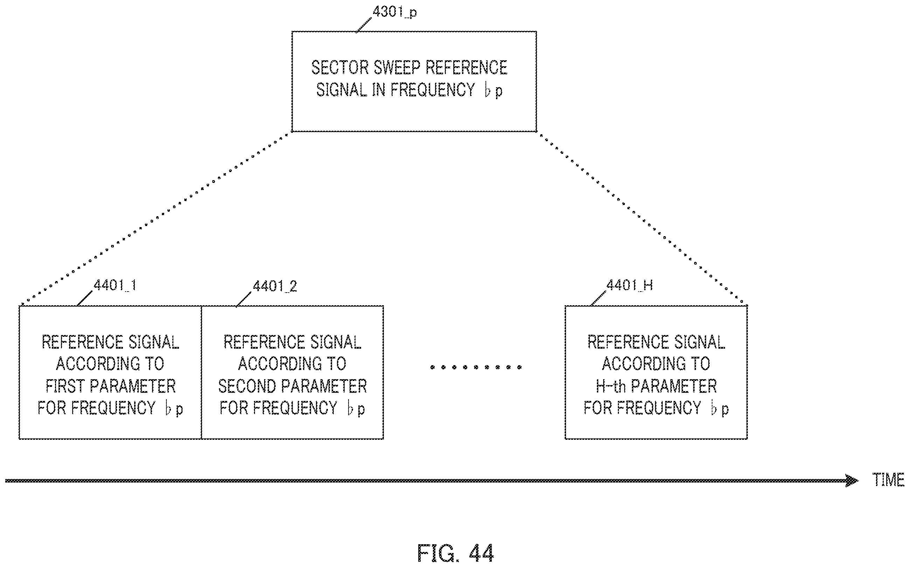

FIG. 44 illustrates an exemplary configuration of "sector sweep reference signal 4301_p in frequency $\flat$p" in FIG. 43. Note that the horizontal axis represents time in FIG. 44 and p is an integer from 1 to K (both inclusive).

"Sector sweep reference signal 4301_p in frequency $\flat$p" is composed of "reference signal 4401_1 according to first parameter for frequency $\flat$p", "reference signal 4401_2 according to second parameter for frequency $\flat$p", ..., "reference signal 4401_H according to H-th parameter for frequency bp". Note that H is an integer equal to or greater than 1 or an integer equal to or greater than 2.

In a case where the base station has a configuration in FIG. 1A, 1B, or 1C, "reference signal 4401_i according to i-th parameter for frequency $\flat$p" is transmitted using one or more transmission panel antennas among transmission panel antenna 1 labeled 106_1 to transmission panel antenna M labeled 106_M. Note that i is an integer from 1 to H (both inclusive).

For example, in a case where the base station has a configuration in FIG. 1A or 1B, "reference signal 4401_i according to i-th parameter for frequency $\flat$p" is subjected to signal processing (beamforming (directivity control)) according to the i-th parameter in first processor 104, and first processor 104 generates "reference signal 4401_i according to i-th parameter for frequency $\flat$p" to be transmitted using one or more transmission panel antennas among transmission panel antenna 1 labeled 106_1 to transmission panel antenna M labeled 106_M.

"Reference signal 4401_i according to i-th parameter for frequency $\flat$p" includes, for example, the following information.

· Information on the i-th parameter, that is, a beamforming (directivity control) identification number (ID), which corresponds to i here, for example;

· The number of time divisions in which sector sweep reference signals can be transmitted when the terminals transmit the sector sweep reference signals; and

· Information on the frequency band and/or frequency $\flat$p (information of the number of frequency divisions may also be included).

Other information may also be included, and "reference signal 4401_i according to i-th parameter for frequency $\flat$p" may include, for example, information similar to the information included in reference signal 1201_a according to a-th parameter in a transmission panel antenna for frequency $\flat$p in FIG. 12. Thus, for operations on "reference signal 1201_a according to a-th parameter in a transmission panel antenna for frequency $\flat$p in FIG. 12" in the present specification, the same can be implemented by replacing "reference signal 1201_a according to a-th parameter in a transmission panel antenna for frequency $\flat$p in FIG. 12" with "reference signal 4401_i according to i-th parameter for frequency $\flat$p".

In addition, "reference signal 4401_i according to i-th parameter for frequency $\flat$p" may include information of an antenna (e.g., transmission panel antenna ID, sector antenna information, and antenna port number) used for transmitting "reference signal 4401_i according to i-th parameter for frequency $\flat$p".

Note that, although the above description is based on a case of multi-carrier such as OFDM, by way of example, the present disclosure is not limited to this and the same can be implemented in a case of single-carrier. It can be implemented in a single-carrier scheme, for example, considering that there is only frequency $\flat$1 in FIG. 43, etc.

Next, a variation on a sector sweep reference signal transmitted by a terminal will be described.

The methods of transmitting a sector sweep reference signal by a terminal have described with reference to, for example, FIGS. 14, 15A, 15B, etc.

To be more specific, a sector sweep reference signal is generated based on the identification (ID) of a transmission panel antenna and the ID of beamforming (see FIGS. 15A and 15B).

For example, a terminal transmits sector sweep reference signals using transmission panel antenna #1. In this case, the terminal transmits the following sector sweep reference signals using transmission panel antenna #1.

· "(Reference) signal subjected to processing based on a parameter of beamforming (directivity control) ID 0, which is parameter ID 0, using transmission panel antenna #1"

· "(Reference) signal subjected to processing based on a parameter of beamforming (directivity control) ID 1, which is parameter ID 1, using transmission panel antenna #1"

· "(Reference) signal subjected to processing based on a parameter of beamforming (directivity control) ID 2, which is parameter ID 2, using transmission panel antenna #1"

· "(Reference) signal subjected to processing based on a parameter of beamforming (directivity control) ID 3, which is parameter ID 3, using transmission panel antenna #1"

Likewise, the terminal transmits sector sweep reference signals using transmission panel antenna #2. In this case, the terminal transmits the following sector sweep reference signals using transmission panel antenna #2.

· "(Reference) signal subjected to processing based on a parameter of beamforming (directivity control) ID 0, which is parameter ID 0, using transmission panel antenna #2"

· "(Reference) signal subjected to processing based on a parameter of beamforming (directivity control) ID 1, which is parameter ID 1, using transmission panel antenna #2"

· "(Reference) signal subjected to processing based on a parameter of beamforming (directivity control) ID 2, which is parameter ID 2, using transmission panel antenna #2"

· "(Reference) signal subjected to processing based on a parameter of beamforming (directivity control) ID 3, which is parameter ID 3, using transmission panel antenna #2"

That is, the terminal transmits sector sweep reference signals using transmission panel antenna #i. Note that i is an integer equal to or greater than 1. In this case, the terminal transmits the following sector sweep reference signals using transmission panel antenna #i.

· "(Reference) signal subjected to processing based on a parameter of beamforming (directivity control) ID 0, which is parameter ID 0, using transmission panel antenna #i"

· "(Reference) signal subjected to processing based on a parameter of beamforming (directivity control) ID 1, which is parameter ID 1, using transmission panel antenna #i"

· "(Reference) signal subjected to processing based on a parameter of beamforming (directivity control) ID 2, which is parameter ID 2, using transmission panel antenna #i"

· "(Reference) signal subjected to processing based on a parameter of beamforming (directivity control) ID 3, which is parameter ID 3, using transmission panel antenna #i"

In the above, "the ID of a transmission panel antenna and the ID of beamforming (directivity control) of a terminal" are distinguished from each other, but the ID may be assigned without distinguishing and the terminal may generate and transmit a sector sweep reference signal.

For example, an ID is assigned to "use of beamforming (directivity control) ID 0, which is parameter ID 0, with transmission panel antenna #1", and it is ID $_b$0. An ID is assigned to "use of beamforming (directivity control) ID 1, which is parameter ID 1, with transmission panel antenna #1", and it is ID $_b$1. An ID is assigned to "use of beamforming (directivity control) ID 2, which is parameter ID 2, with transmission panel antenna #1", and it is ID $_b$2. An ID is assigned to "use of beamforming (directivity control) ID 3, which is parameter ID 3, with transmission panel antenna #1", and it is ID $_b$3.

An ID is assigned to "use of beamforming (directivity control) ID 0, which is parameter ID 0, with transmission panel antenna #2", and it is ID $_b$4. An ID is assigned to "use of beamforming (directivity control) ID 1, which is parameter ID 1, with transmission panel antenna #2", and it is ID $_b$5. An ID is assigned to "use of beamforming (directivity control) ID 2, which is parameter ID 2, with transmission panel antenna #2", and it is ID $_b$6. An ID is assigned to "use of beamforming (directivity control) ID 3, which is parameter ID 3, with transmission panel antenna #2", and it is ID $_b$7.

An ID is assigned to "use of beamforming (directivity control) ID 0, which is parameter ID 0, with transmission panel antenna #3", and it is ID ♭8. An ID is assigned to "use of beamforming (directivity control) ID 1, which is parameter ID 1, with transmission panel antenna #3", and it is ID ♭9. An ID is assigned to "use of beamforming (directivity control) ID 2, which is parameter ID 2, with transmission panel antenna #3", and it is ID ♭10. An ID is assigned to "use of beamforming (directivity control) ID 3, which is parameter ID 3, with transmission panel antenna #3", and it is ID ♭11, and so forth.

Then, the terminal transmits, as sector sweep reference signals, a "(reference) signal subjected to processing based on ID ♭0", a "(reference) signal subjected to processing based on ID ♭1", a "(reference) signal subjected to processing based on ID ♭2", a "(reference) signal subjected to processing based on ID ♭3", a "(reference) signal subjected to processing based on ID ♭4", a "(reference) signal subjected to processing based on ID ♭5", a "(reference) signal subjected to processing based on ID ♭6", a "(reference) signal subjected to processing based on ID ♭7", a "(reference) signal subjected to processing based on ID ♭8", a "(reference) signal subjected to processing based on ID ♭9", a "(reference) signal subjected to processing based on ID ♭10", a "(reference) signal subjected to processing based on ID ♭11", and so forth. Note that the above signals may be transmitted in the above order or in a different order.

At this time, the "(reference) signal subjected to processing based on ID 6k" transmitted by the terminal includes information of ID ♭k, where k is an integer equal to or greater than 0. Note that the "(reference) signal subjected to processing based on ID ♭k" transmitted by the terminal may include other information. The examples are described in other embodiments, and the description thereof will be thus omitted (information of a transmission panel antenna may be included).

A base station then receives the sector sweep reference signals transmitted by the terminal and transmits a feedback signal including information of the ID with high reception quality (e.g., when "ID ♭3" has high reception quality, the information of "ID ♭3" is included). Note that the feedback signal transmitted by a base station may include other information. The examples are as described in other embodiments. Methods of transmitting the feedback signal by a base station are as described in other embodiments and will be described later in the present embodiment.

A transmission panel antenna (see FIGS. 1A, 1B and 1C) of the terminal may include the configuration in FIG. 3. The transmission panel antenna may be composed of a single antenna or a plurality of antennas.

Based on the above, the terminal may generate and transmit, for example, a terminal sector sweep reference signal in FIG. 13, etc. in the following manner.

FIG. 14 illustrates exemplary assignment of sector sweep reference signals transmitted by the terminals. The description thereof will be omitted since it has already been described.

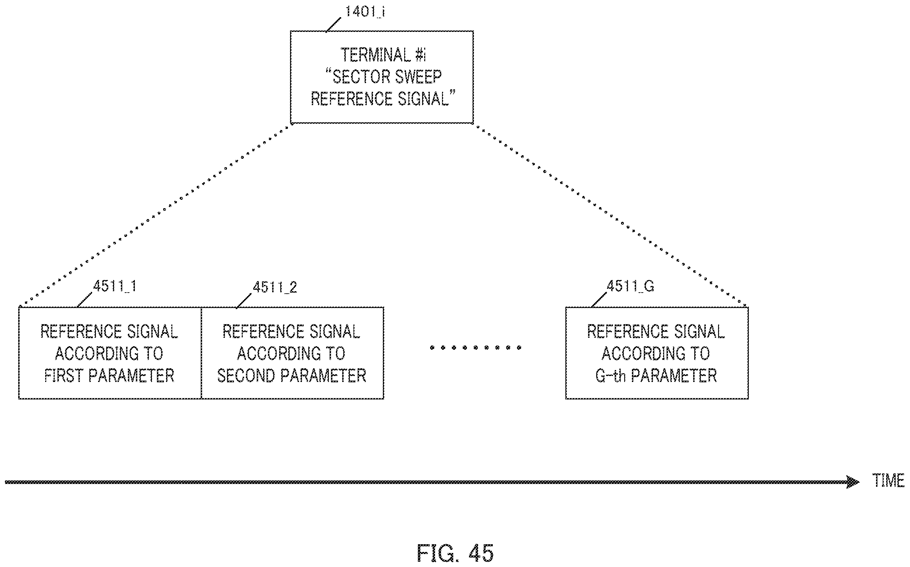

FIG. 45 illustrates an exemplary configuration of terminal #i "sector sweep reference signal" 1401 _i in FIG. 14. Terminal #i "sector sweep reference signal" 1401_i is composed of "reference signal 4511_1 according to first parameter", "reference signal 4511_2 according to second parameter", ..., "reference signal 4511_G according to G-th parameter". Note that G is an integer equal to or greater than 1 or an integer equal to or greater than 2.

In a case where terminal #i has a configuration in FIG. 1A, 1B, or 1C, terminal #i "sector sweep reference signal" 1401_i is transmitted using one or more transmission panel antennas among transmission panel antenna 1 labeled 106_1 to transmission panel antenna M labeled 106_M.

For example, in a case where the terminal has a configuration in FIG. 1A or 1B, "reference signal 4511_k according to k-th parameter" is subjected to signal processing (beamforming (directivity control)) according to the k-th parameter in first processor 104, and first processor 104 generates "reference signal 4511_k according to k-th parameter" to be transmitted using one or more transmission panel antennas among transmission panel antenna 1 labeled 106_1 to transmission panel antenna M labeled 106_M. Note that k is an integer from 1 to G (both inclusive).

"Reference signal 4511_k according to k-th parameter" includes, for example, the following information.

· Information on the k-th parameter, that is, a beamforming (directivity control) identification number (ID), for example; and

· Information to be fed back to the base station, for example, information of a frequency (band) with high reception quality, information of a parameter of beamforming (directivity control) with high reception quality, and information of an antenna with high reception quality that have been estimated by the terminal in receiving sector sweep reference signals transmitted by the base station.

Information included in "reference signal 4511_k according to k-th parameter" are as described in other embodiments, including the above-described information.

Thus, for operations on "reference signal 1511_a according to a-th parameter in transmission panel antenna xi in FIG. 15B" in the present specification, the same can be implemented by replacing "reference signal 1511_a according to a-th parameter in transmission panel antenna xi in FIG. 15B" with "reference signal 4511_k according to k-th parameter".

In addition, "reference signal 4511_k according to k-th parameter" may include information of an antenna (e.g., transmission panel antenna ID, sector antenna information, and antenna port number) used for transmitting "reference signal 4511_k according to k-th parameter".

Another example will be described.

A transmission panel antenna (see FIGS. 1A, 1B and 1C) of the terminal may include the configuration in FIG. 3. The transmission panel antenna may be composed of a single antenna or a plurality of antennas.

Based on the above, the terminal may generate and transmit, for example, a terminal sector sweep reference signal in FIG. 23, etc. in the following manner.

FIG. 24 illustrates exemplary assignment of sector sweep reference signals transmitted by the terminals. The description thereof will be omitted since it has already been described.

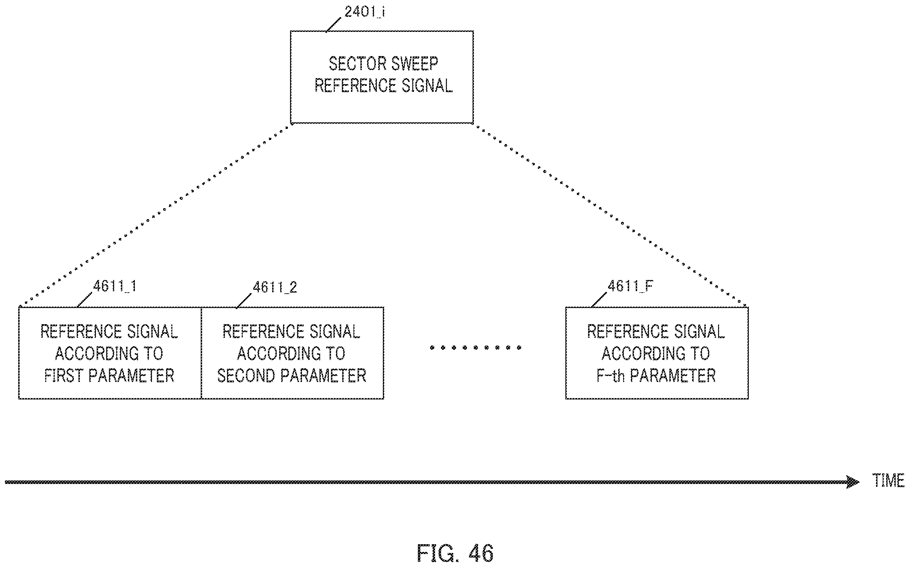

FIG. 46 illustrates an exemplary configuration of sector sweep reference signal 2401_i in FIG. 24. Sector sweep reference signal 2401_i is composed of "reference signal 4611_1 according to first parameter", "reference signal 4611_2 according to second parameter", ..., "reference signal 4611_F according to F-th parameter". Note that F is an integer equal to or greater than 1 or an integer equal to or greater than 2.

In a case where terminal #i has a configuration in FIG. 1A, 1B, or 1C, sector sweep reference signal 2401_i is transmitted using one or more transmission panel antennas among transmission panel antenna 1 labeled 106_1 to transmission panel antenna M labeled 106_M.

For example, in a case where the terminal has a configuration in FIG. 1A or 1B, "reference signal 4611_k according to k-th parameter" is subjected to signal processing (beamforming (directivity control)) according to the k-th parameter in first processor 104, and first processor 104 generates "reference signal 4611_k according to k-th parameter" to be transmitted using one or more transmission panel antennas among transmission panel antenna 1 labeled 106_1 to transmission panel antenna M labeled 106_M. Note that k is an integer from 1 to F (both inclusive).

"Reference signal 4611_k according to k-th parameter" includes, for example, the following information.

· Information on the k-th parameter, that is, a beamforming (directivity control) identification number (ID), for example; and

· Information to be fed back to the base station, for example, information of a frequency (band) with high reception quality, information of a parameter of beamforming (directivity control) with high reception quality, and information of an antenna with high reception quality that have been estimated by the terminal in receiving sector sweep reference signals transmitted by the base station.

Information included in "reference signal 4611_k according to k-th parameter" are as described in other embodiments, including the above-described information.

Thus, for operations on "reference signal 1511_a according to a-th parameter in transmission panel antenna xi in FIG. 15B" in the present specification, the same can be implemented by replacing "reference signal 1511_a according to a-th parameter in transmission panel antenna xi in FIG. 15B" with "reference signal 4611_k according to k-th parameter".

In addition, "reference signal 4611_k according to k-th parameter" may include information of an antenna (e.g., transmission panel antenna ID, sector antenna information, and antenna port number) used for transmitting "reference signal 4611_k according to k-th parameter".

The base station may transmit, to a communication counterpart (terminal), information of a reception panel antenna used for reception of a modulation signal and information of a parameter of beamforming (directivity control) for the reception. In addition, as is the case with the above examples on transmission, an ID may be assigned without distinguishing between the information of a reception panel antenna and the beamforming (directivity control), and the ID information may be transmitted to the communication counterpart (terminal).

Note that, although FIGS. 1A, 1B, and 1C have been used for the configuration example of the base station, the configuration is not limited to these. The configuration of a reception panel antenna is not limited to the configuration in FIG. 4 either, and the reception panel antenna may be composed of a single antenna or a plurality of antennas.

At this time, the beamforming (directivity control) for reception may be performed using one or more reception panel antennas (one or more reception antennas). Then, information of a parameter of the beamforming (directivity control) used for the reception may be transmitted to a communication counterpart (terminal).

The terminal may transmit, to a communication counterpart (base station), information of a reception panel antenna used for reception of a modulation signal and information of a parameter of beamforming (directivity control) for the reception. In addition, as is the case with the above examples on transmission, an ID may be assigned without distinguishing between the information of a reception panel antenna and the beamforming (directivity control), and the ID information may be transmitted to the communication counterpart (base station).

Note that, although FIGS. 1A, 1B, and 1C have been used for the configuration example of the terminal, the configuration is not limited to these. The configuration of a reception panel antenna is not limited to the configuration in FIG. 4 either, and the reception panel antenna may be composed of a single antenna or a plurality of antennas.

At this time, the beamforming (directivity control) for reception may be performed using one or more reception panel antennas (one or more reception antennas). Then, information of a parameter of the beamforming (directivity control) used for the reception may be transmitted to a communication counterpart (base station).

(Embodiment 7)

In some cases, radio systems using different radio communication schemes share "a licensed band and/or an unlicensed band". For example, the NR system in a frequency band from 52.6 GHz to 71 GHz (both inclusive) and a radio system of IEEE 802.11ad/ay sometimes share "a licensed band and/or an unlicensed band". A description will be given of exemplary operations in the case where radio systems using different radio communication schemes share "a licensed band and/or an unlicensed band". Note that operations described in the present embodiment are applicable to a case where a frequency (band) is shared.

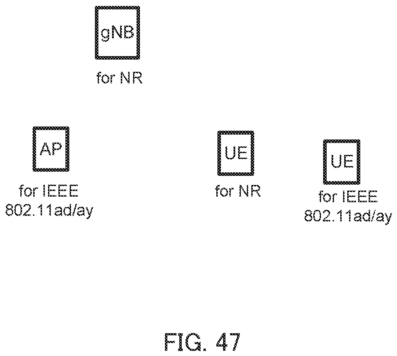

FIG. 47 illustrates an exemplary radio system according to Embodiment 7. In FIG. 47, a radio system of NR and a radio system of IEEE 802.11ad and/or IEEE 802.11ay are present in a certain space. In the following, IEEE 802.11ad and/or IEEE 802.11ay are sometimes referred to as the first standard.

The radio system of new radio (NR) includes a base station and a terminal. The base station of NR may be referred to as g Node B (gNB). The terminal of NR may be referred to as user equipment (UE). Note that they may be referred to as another name.

The radio system specified in the first standard includes a base station and a terminal. The base station specified in the first standard may be referred to as an access point (AP). The terminal specified in the first standard may be referred to as UE.

The radio system of NR and the radio system specified in the first standard share "a licensed band and/or an unlicensed band". The radio system of NR and the radio system specified in the first standard occupy the "licensed band and/or unlicensed band" based on Listen Before Talk (LBT).

As a simple method, the radio system of NR and/or the radio system specified in the first standard performs carrier sensing and starts communication when a channel is available, for example. Meanwhile, the radio system of NR and/or the radio system specified in the first standard stands by to start communication when a channel is in use.

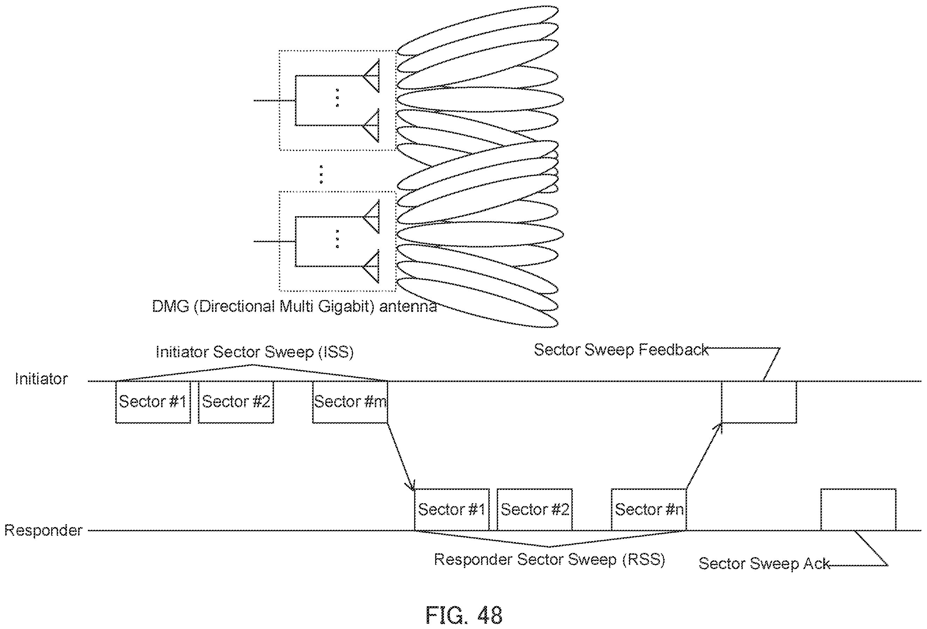

FIG. 48 describes exemplary sector sweep in the radio system specified in the first standard. The "initiator" illustrated in FIG. 48 may correspond to an AP specified in the first standard (may also correspond to a terminal or a repeater), for example. The "responder" illustrated in FIG. 48 may correspond to UE specified in the first standard (may also correspond to an AP or a repeater), for example.

As illustrated in FIG. 48, the initiator performs initiator sector sweep (ISS), for example, using a directional multi gigabit (DMG) antenna. For example, the initiator sweeps sectors #1 to #m (the initiator performs transmission in sectors #1 to #m). The responder may listen for a signal during the ISS, for example, with the largest beamwidth.

The responder then performs responder sector sweep (RSS) using a DMG antenna. For example, the responder sweeps sectors #1 to n# (the responder performs transmission in sectors sector #1 to n#). The initiator may listen for a signal during the RSS, for example, with the largest beamwidth.

Next, the initiator returns a reception result of the RSS (sector sweep feedback) to the responder. The responder then returns a reception result of the ISS (sector sweep ACK) to the initiator.

Note that examples of detailed operations of the sector sweep, for example, transmission methods of the sector sweep reference signal, data included in the sector sweep reference signal, etc., are described in Embodiment 1 to Embodiment 7.

An example using a beacon transmission interval (BTI) and an example using a data transfer interval (DTI) will be described as exemplary operations of the initiator and the responder related to sector sweep.

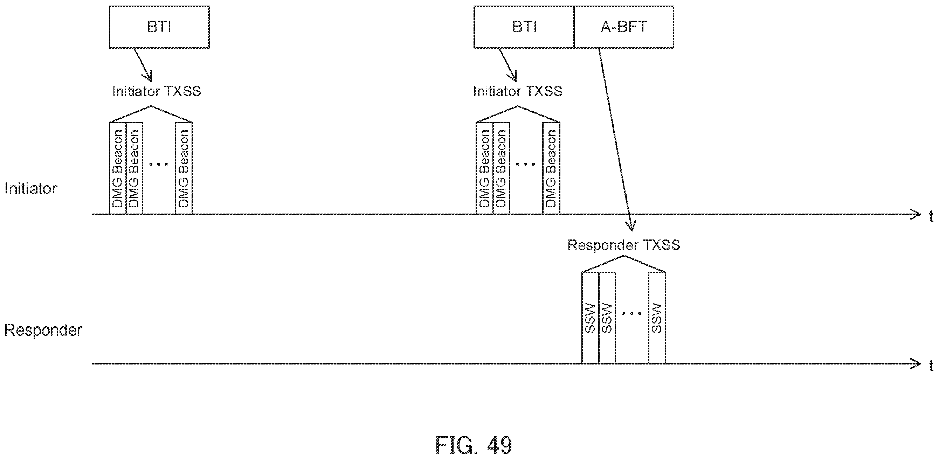

FIG. 49 describes an exemplary operation of sector sweep using the BTI. DMG beacons are transmitted in the BTI. DMG beacons are beams respectively having different directivities, for example. This allows the initiator to transmit sector sweep-related signals in the BTI.

Note that transmission of the sector sweep-related signal based on the DMG beacon is referred to as initiator TXSS here. TX is an abbreviation for a transmitter, and SS is an abbreviation for sector sweep. The initiator TXSS corresponds to the ISS in FIG. 48, for example.

The responder receives signals related to the initiator TXSS transmitted by the initiator and estimates a favorable beam. The responder transmits sector sweep (SSW) signals in association beamforming training (A-BFT).

Note that transmission of the SSW signals in the A-BFT is referred to as responder TXSS here. The SSWs are beams respectively having different directivities, for example, and each include at least "information of the estimated favorable beam". The responder TXSS corresponds to the RSS in FIG. 48, for example.

Examples of detailed operations related to the initiator TXSS and the responder TXSS, for example, transmission methods of the sector sweep reference signal (SSW signal), data included in the sector sweep reference signal (SSW signal), etc., are described in

Embodiment 1 to Embodiment 6.

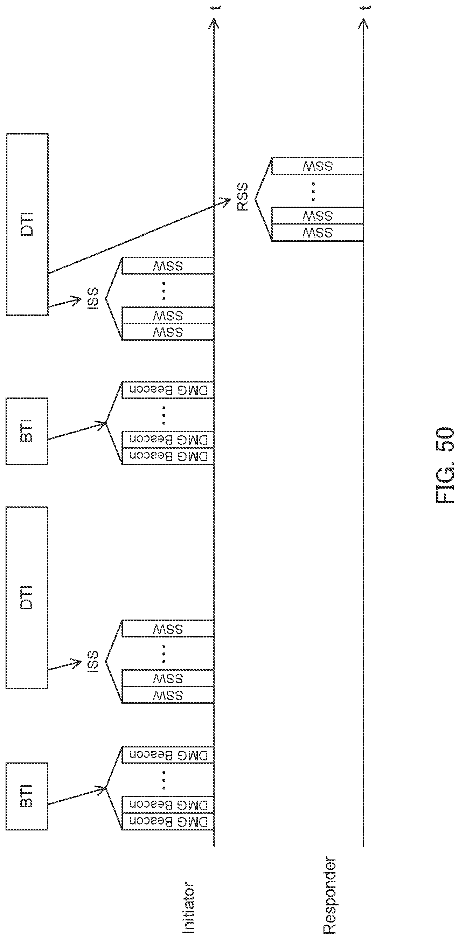

FIG. 50 describes an exemplary operation of sector sweep using the DTI The initiator and the responder perform the SSW procedure in the DTI in FIG. 50, while the initiator transmits sector sweep-related signals by using DMG beacons in the BTI in FIG. 49.

In the example of FIG. 50, the initiator transmits no sector sweep-related signal and transmits beacons for carrier sensing in the BTI, for example.

The DMG beacons transmitted in the BTI in FIG. 50 may be beams having a quasi-omni directivity or wide directivity. The responder and other apparatuses (e.g., base station and UE of NR) may implement carrier sensing by detecting the DMG beacons, which are beams having a quasi-omni directivity or wide directivity.

The initiator transmits the SSWs, which may be referred to as sector sweep reference signals or sectors, in the DTI to implement the ISS. The SSWs are beams respectively having different directivities, for example, and include information on the beams.

The responder receives the ISS-related signals transmitted by the initiator and estimates a favorable beam. The responder transmits SSW signals, which may be referred to as sector sweep reference signals and/or sectors, in the DTI to implement the RSS. The SSWs are beams respectively having different directivities, for example, and each include at least "information of the estimated favorable beam".

Note that examples of detailed operations related to the ISS and RSS have been described in Embodiment 1 to Embodiment 6 and have also been described with reference to FIG. 48.

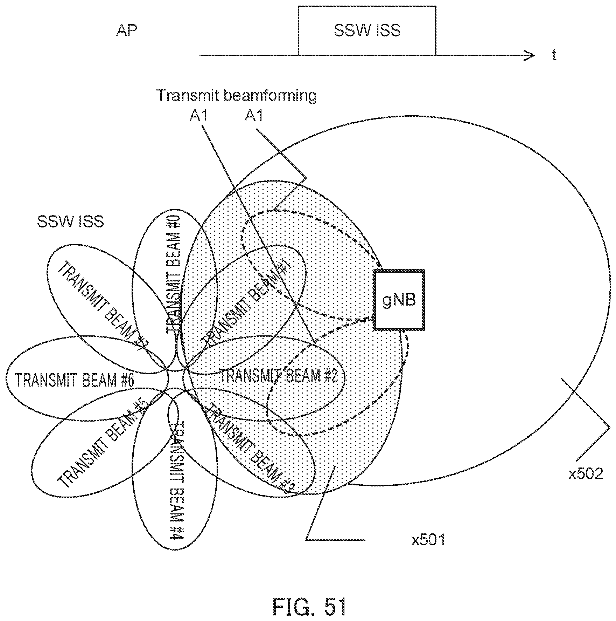

FIG. 51 describes exemplary interference between sector sweep in the first standard and an NR signal. In FIG. 51, an AP (referred to as AP 1) handles eight transmit beams by SSW ISS (or TXSS), for example.

That is, as illustrated in FIG. 51, AP 1 transmits a signal (sector sweep reference signal and/or sector) using transmit beam #0, then transmits a signal (sector sweep reference signal and/or sector) using transmit beam #1, transmits a signal (sector sweep reference signal and/or sector) using transmit beam #2, transmits a signal (sector sweep reference signal and/or sector) using transmit beam #3, transmits a signal (sector sweep reference signal and/or sector) using transmit beam #4, transmits a signal (sector sweep reference signal and/or sector) using transmit beam #5, transmits a signal (sector sweep reference signal and/or sector) using transmit beam #6, and transmits a signal (sector sweep reference signal and/or sector) using transmit beam #7.

The gNB of NR performs transmit beamforming to transmit a signal as indicated by broken lines A1 in FIG. 51. Closed space x501 is an area where the SSW ISS (or TXSS) transmitted by the AP and the signal transmitted by the gNB interfere (collide) with each other. In addition, closed space x502 is an area where UE can receive the signal transmitted by the gNB and is also an area where the signal transmitted by the AP is difficult to be received by the UE.

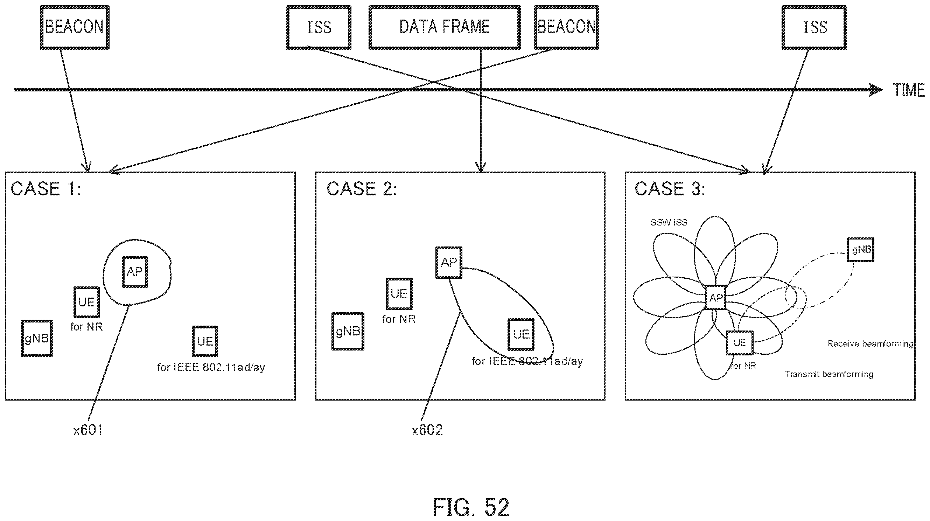

FIG. 52 describes exemplary interference between sector sweep in the first standard and an NR signal. In FIG. 52, the description is based on a case where the SSW ISS is transmitted in the DTI (case of FIG. 50).

The AP transmits DMG beacons in the BTI. The AP transmits DMG beacons using, for example, beams having quasi-omni or wide directivities.

The AP performs the SSW ISS in the DTI. The AP also transmits a data frame in the DTI. The AP transmits the SSW ISS and the data frame using, for example, narrow beams having different directivities.

Case 1 illustrates an exemplary situation where the AP transmits DMG beacons. Note that there are the AP, gNB, UE capable of NR communication, and UE capable of communication specified in the first standard in Case 1. Hereinafter, the UE capable of NR communication is sometimes referred to as NR-UE. The UE capable of the first standard communication is sometimes referred to as first standard-UE.

When the AP transmits DMG beacons, the DMG beacons are enabled in a wide range. Thus, the AP transmits beams with wide directivities, indicated as x601 in Case 1. Since the beams have wide directivities, a receivable area of the DMG beacons is narrow, such as an area of several tens of meters, for example.

Case 2 illustrates an exemplary situation where the AP transmits a data frame. Note that there are the AP, gNB, NR-UE, and first standard-UE in Case 2.

The AP performs beamforming determined by SSW when transmitting a data frame. Detailed examples are as described in Embodiment 1 to Embodiment 6. Thus, the AP transmits a beam with narrow directivity, indicated as x602 in Case 2. This limits a direction in which the data frame transmission by the AP possibly causes interference.

Case 3 illustrates an exemplary situation where the AP performs the SSW ISS using the DTI. The details are as described with reference to FIG. 51. Note that there are the AP, gNB, and NR-UE in Case 3.

As illustrated in Case 3, the UE of NR performs transmit beamforming to transmit a signal. At this time, the gNB performs receive beamforming to receive the signal transmitted by the NR-UE.

As illustrated in Case 3, the gNB possibly receives both the signal transmitted by the NR-UE and the signal transmitted when the AP performs the SSW ISS. That is, the signal transmitted by the NR-UE interferes with the signal transmitted when the AP performs the SSW ISS.

Since the DTI is regularly present on the time axis, the gNB may be regularly interfered by the SSW ISS transmitted by the AP, which may cause a problem of decrease in the data transmission rate for the gNB and NR-UE.

Note that a signal transmitted by the NR-UE may similarly interfere with a signal transmitted when the AP performs the initiator TXSS in the case where a sector sweep-related signal is transmitted in the BTI (case of FIG. 49).

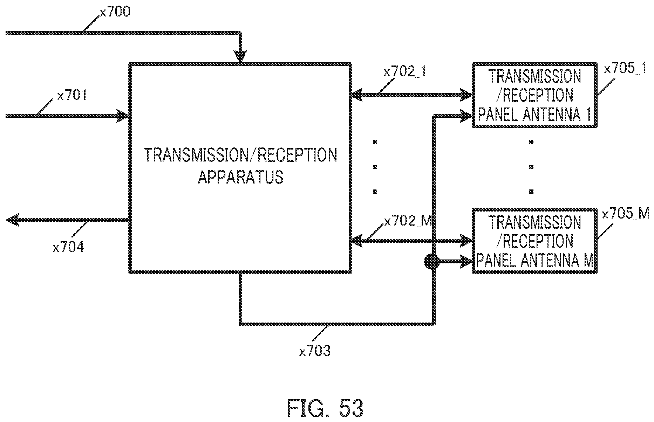

FIG. 53 illustrates an exemplary configuration of the gNB and NR-UE. A configuration of a communication apparatus is described in Embodiment 1 to Embodiment 6, and the communication apparatus described in Embodiment 1 to Embodiment 6 may also be considered to be a configuration of the "gNB and NR-UE".

Transmission/reception panel antenna i labeled x705_i in FIG. 53 is an antenna including components in FIGS. 3 and 4, for example. Here, i is an integer from 1 to M (both inclusive), and M is an integer equal to or greater than 1 or an integer equal to or greater than 2. Thus, transmission/reception panel antenna i labeled x705_i can perform transmit beamforming (transmission directivity control) and receive beamforming (reception directivity control).

Note that specific operations of transmit beamforming (transmission directivity control) and receive beamforming (reception directivity control) are described in Embodiment 1 to Embodiment 6, and the apparatus performs transmit beamforming (transmission directivity control) to transmit a sector sweep reference signal, feedback signal, frame, slot, modulation signal, data symbol, and the like.

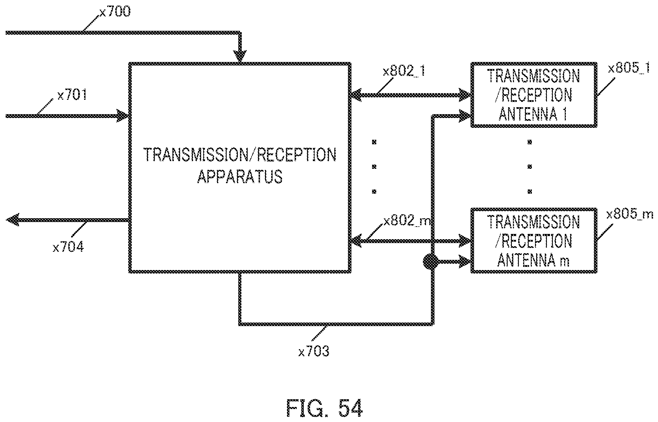

FIG. 54 illustrates another exemplary configuration of the gNB and NR-UE. In FIG. 54, the components that operate in the same manner as in FIG. 53 are denoted by the same reference signs, and detailed descriptions thereof will be omitted.

In a case where the gNB has the configuration in FIG. 54, transmit beamforming (transmission directivity control) and receive beamforming (reception directivity control) are performed using one or more of "transmission/reception antenna 1 labeled x805_1 to transmission/reception antenna m labeled x805_m".

Then, the gNB with the configuration in FIG. 54 performs transmit beamforming (transmission directivity control) and transmits sector sweep reference signals illustrated in FIGS. 11, 12, 28A, 28B, 34, 35, 37, 43, 44, and the like.

For example, the gNB with the configuration in FIG. 54 uses a first transmit beam to transmit a first sector sweep reference signal, use a second transmit beam to transmit a second sector sweep reference signal, and so forth.

The gNB then determines "transmit beamforming and receive beamforming" to be used for communication with each terminal, and transmits and receives a feedback signal, frame, slot, modulation signal, data symbol, and the like.

In a case where the NR-UE has the configuration in FIG. 54, transmit beamforming (transmission directivity control) and receive beamforming (reception directivity control) are performed using one or more of "transmission/reception antenna 1 labeled x805_1 to transmission/reception antenna m labeled x805_m".

Then, the NR-UE with the configuration in FIG. 54 performs transmit beamforming (transmission directivity control) and transmits sector sweep reference signals illustrated in FIGS. 14, 15A, 15B, 21A, 21B, 22A, 22B, 24, 26, 31A, 31B, 31C, 31D, 31E, 31F, 32A, 32B, 36, 37, 41, 42, 45, 46, and the like.

For example, the NR-UE with the configuration in FIG. 54 uses a first transmit beam to transmit a first sector sweep reference signal, use a second transmit beam to transmit a second sector sweep reference signal, and so forth.

The NR-UE then determines "transmit beamforming and receive beamforming" to be used for communication with the gNB, and transmits and receives a feedback signal, frame, slot, modulation signal, data symbol, and the like.

Note that FIGS. 53 and 54 illustrating "a configuration of the gNB and a configuration of the NR-UE" are merely examples and the configurations are not limited to these.

The transmission/reception panel antenna (x705_1 to x705_M) in FIG. 53 may be composed of a single antenna or a plurality of antennas. In addition, the transmission/reception panel antenna (x705 _1 to x705_M) may be composed of a single antenna element or a plurality of antenna elements. A configuration of the transmission/reception panel antenna (x705_1 to x705_M) is not limited to the configuration described in the present embodiment, and may be the configuration described in the other embodiments, for example.

The transmission/reception antenna (x805_1 to x805_m) in FIG. 54 may be composed of a single antenna or a plurality of antennas. In addition, the transmission/reception antenna (x805_1 to x805_m) may be composed of a single antenna element or a plurality of antenna elements. A configuration of the transmission/reception antenna (x805_1 to x805_m) is not limited to the configuration described in the present embodiment.

Note that, in a case where transmission/reception panel antenna i labeled x705_i in FIG. 53 shares, for example, the transmission panel antenna with the configuration in FIG. 3 and the reception panel antenna with the configuration in FIG. 4, transmission antenna 306_1 in FIG. 3 and reception antenna 401_1 in FIG. 4 are shared to configure a single antenna, and multiplier 304_1 and multiplier 403_1 are connected to the shared antenna.

Likewise, transmission antenna 306_2 in FIG. 3 and reception antenna 401_2 in FIG. 4 are shared to configure a single antenna, and multiplier 304_2 and multiplier 403_2 are connected to the shared antenna. In addition, transmission antenna 306_3 in FIG. 3 and reception antenna 401_3 in FIG. 4 are shared to configure a single antenna, and multiplier 304_3 and multiplier 403_3 are connected to the shared antenna. Then, transmission antenna 306_4 in FIG. 3 and reception antenna 401_4 in FIG. 4 are shared to configure a single antenna, and multiplier 304_4 and multiplier 403_4 are connected to the shared antenna.

Regarding Omni-Directional Antenna:

In a case where the gNB and NR-UE have the configuration in FIG. 53, signal reception is performed by using one or more of "transmission/reception panel antenna 1 labeled x705_1 to transmission/reception panel antenna M labeled x705_M".

In each of "transmission/reception panel antenna 1 labeled x705_1 to transmission/reception panel antenna M labeled x705_M", certain receive beamforming (reception directivity control) is configured for antennas composing the transmission/reception panel antenna.

Note that not all antennas composing the transmission/reception panel antenna need to be used for signal reception, and the configuration of receive beamforming (reception directivity control) may or may not be fixed in time.

The method of using the transmission/reception panel antenna in omni-directional reception is not limited to the above example.

In a case where the gNB and NR-UE have the configuration in FIG. 54, signal reception is performed by using one or more of "transmission/reception antenna 1 labeled x805_1 to transmission/reception antenna m labeled x805_m".

In each of "transmission/reception antenna 1 labeled x805_1 to transmission/reception antenna m labeled x805_m", certain receive beamforming (reception directivity control) is configured for antennas composing the transmission/reception antenna.

Note that not all antennas composing the transmission/reception antenna need to be used for signal reception.

The method of using the transmission/reception antenna in omni-directional reception is not limited to the above example.

Regarding Omni-Directional LBT:

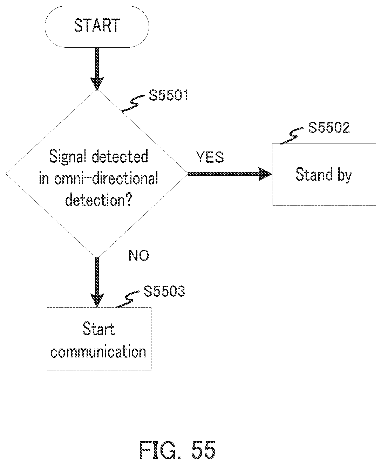

FIG. 55 is a flowchart describing an exemplary operation of the gNB in omni-directional LBT. The gNB determines whether a signal is detected in omni-directional detection (S5501).

When a signal is detected in the omni-directional detection (YES in S5501), the gNB stands by for communication (S5502). For example, the gNB determines that another apparatus (another gNB, NR-UE, AP, or first standard-UE) occupies a channel of the "licensed band and/or unlicensed band" and stands by without transmitting a signal.

When no signal is detected (no signal can be detected) in the omni-directional detection (NO in S5501), the gNB starts communication (S5503). For example, the gNB determines that another apparatus (another gNB, NR-UE, AP, or first standard-UE) does not occupy a channel of the "licensed band and/or unlicensed band" and starts communication.

As a method of signal detection, the gNB may determine that a signal is present when the power at the time of reception is greater than a threshold and that a signal is not present when the power is less than the threshold. As another method, the gNB may determine that a signal is present when the signal can be demodulated and that a signal is not present when the signal cannot be demodulated. Although two examples have been described as methods of signal detection, the present disclosure is not limited to these.

In addition, the above description is about an exemplary operation of the gNB, but the NR-UE operates in the same manner. Note that the signal detected by the gNB and NR-UE may be any frame or signal, such as SSW ISS, SSW RSS, TXSS, a beacon, or a data frame, (based on the first standard) or may be a signal other than a signal of the first standard.

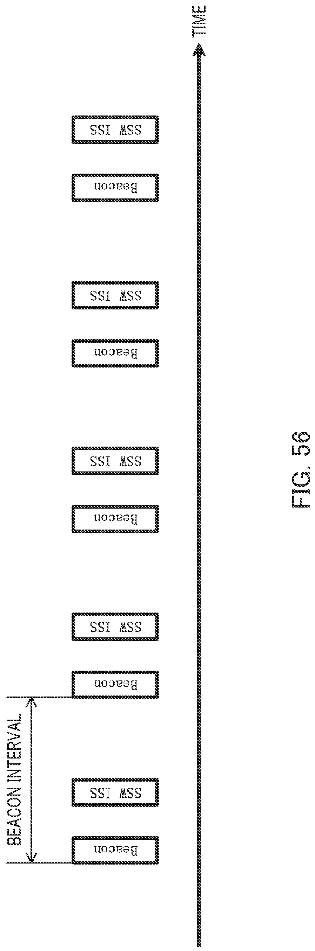

FIG. 56 illustrates an exemplary signal reception period in the omni-directional LBT. The gNB and NR-UE, for example, perform the omni-directional reception and detect a beacon frame, preamble, data frame, SSW ISS, SSW RSS, TXSS, etc., as described above. In terms of a reception period (listen period or signal detection period) at that time, beacons (frames) in FIG. 56 may be focused. The signal detection is possible as long as the reception period (listen period or signal detection period) in the omni-directional LBT is at least equal to or greater than the beacon interval illustrated in FIG. 56.

Thus, the gNB and NR-UE configure the reception period (listen period or signal detection period) in the omni-directional LBT to be equal to or greater than the beacon interval. The configuration value of the reception period may be a fixed value, may be configurable, or may be changed in accordance with time.

Note that the reception period (listen period or signal detection period) in the omni-directional LBT is configured to be an approximate value when the beacon interval is not obtained.

Regarding Stand-by:

In some cases, the gNB and NR-UE "stand by" when the omni-directional reception is performed and a signal is detected. For example, the gNB and NR-UE stand by without transmitting a signal as illustrated in S5502 of FIG. 55.

The gNB and NR-UE may restart the operation of the omni-directional LBT when a certain amount of time has passed. Alternatively, when the omni-directional reception is performed and a signal is detected, the gNB and NR-UE may again perform the omni-directional reception and check whether a signal is present.

Regarding Directional LBT:

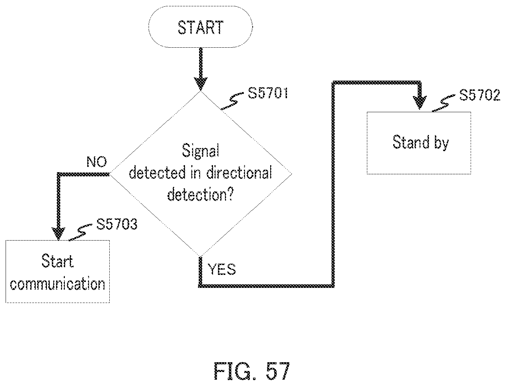

FIG. 57 is a flowchart describing an exemplary operation of the gNB in directional LBT. The gNB determines whether a signal is detected in directional detection (S5701).

When a signal is detected in the directional detection (YES in S5701), the gNB stands by for communication (S5702). For example, the gNB determines that another apparatus (another gNB, NR-UE, AP, or first standard-UE) occupies a channel of the "licensed band and/or unlicensed band" and stands by without transmitting a signal.

When no signal is detected (no signal can be detected) in the directional detection (NO in S5701), the gNB starts communication (S5703). For example, the gNB determines that another apparatus (another gNB, NR-UE, AP, or first standard-UE) does not occupy a channel of the "licensed band and/or unlicensed band" and starts communication.

As a method of signal detection, the gNB may determine that a signal is present when the power at the time of reception is greater than a threshold and that a signal is not present when the power is less than the threshold. As another method, the gNB may determine that a signal is present when the signal can be demodulated and that a signal is not present when the signal cannot be demodulated. Two examples have been described but the method is not limited to the examples.

In addition, the above description is about an exemplary operation of the gNB, but the NR-UE operates in the same manner. Note that the signal detected by the gNB and NR-UE may be any frame or signal, such as SSW ISS, SSW RSS, TXSS, a beacon, or a data frame, (based on the first standard) or may be a signal other than a signal of the first standard.

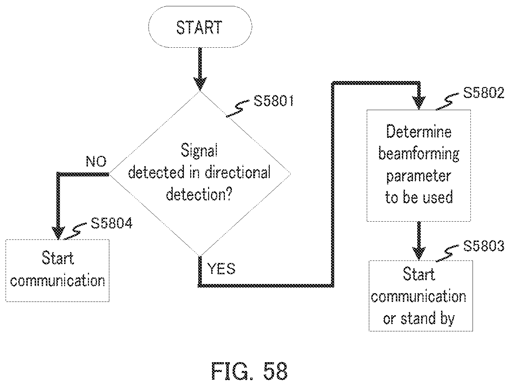

FIG. 58 is a flowchart describing an exemplary operation of the gNB in the directional LBT. In FIG. 58, the gNB specifies a beam direction in which signal interference occurs. The gNB stands by without transmitting a signal in the specified beam direction, and transmits a signal (starts communication) in a direction other than the specified beam direction.

The gNB determines whether a signal is detected in the directional detection (S5801).

When a signal is detected in the directional detection (YES in S5801), the gNB determines a beamforming parameter to be used for signal transmission (S5802). For example, the gNB may determine the beamforming parameter in a direction other than the direction in which a signal is detected in the directional detection.

Upon determining the beamforming parameter in S5802, the gNB starts communication or stands by, using the determined beamforming parameter (S5803). For example, the gNB may determine that another apparatus (another gNB, NR-UE, AP, or first standard-UE) occupies a channel of the "licensed band and/or unlicensed band" in the direction in which a signal is detected in the directional detection, and stand by without transmitting a signal. The gNB may determine that another apparatus (another gNB, NR-UE, AP, or first standard-UE) does not occupy a channel of the "licensed band and/or unlicensed band" in a direction other than the direction in which a signal is detected in the directional detection, and starts communication.

When no signal is detected (no signal can be detected) in the directional detection (NO in S5801), the gNB starts communication (S5804). For example, the gNB determines that another apparatus (another gNB, NR-UE, AP, or first standard-UE) does not occupy a channel of the "licensed band and/or unlicensed band" and starts communication.

As a method of signal detection, the gNB may determine that a signal is present when the power at the time of reception is greater than a threshold and that a signal is not present when the power is less than the threshold. As another method, the gNB may determine that a signal is present when the signal can be demodulated and that a signal is not present when the signal cannot be demodulated. Two examples have been described but the method is not limited to the examples.

In addition, the above description is about an exemplary operation of the gNB, but the NR-UE operates in the same manner. Note that the signal detected by the gNB and NR-UE may be any frame or signal, such as SSW ISS, SSW RSS, TXSS, a beacon, or a data frame, (based on the first standard) or may be a signal other than a signal of the first standard.

Regarding Directional Antenna:

In a case where the gNB and NR-UE have the configuration in FIG. 53, signal reception is performed by using one of "transmission/reception panel antenna 1 labeled x705_1 to transmission/reception panel antenna M labeled x705_M".

In detecting a signal in the directional reception, each transmission panel antenna performs, for example, four types of receive beamforming (reception directivity control).

In detecting a signal in the directional reception, the gNB and NR-UE perform, for example, receive beamforming (reception directivity control) according to the first parameter, receive beamforming (reception directivity control) according to the second parameter, receive beamforming (reception directivity control) according to the third parameter, and receive beamforming (reception directivity control) according to the fourth parameter in transmission/reception panel antenna 1 labeled x705_1.

Further, in detecting a signal in the directional reception, the gNB and NR-UE perform receive beamforming (reception directivity control) according to the fifth parameter, receive beamforming (reception directivity control) according to the sixth parameter, receive beamforming (reception directivity control) according to the seventh parameter, and receive beamforming (reception directivity control) according to the eighth parameter in transmission/reception panel antenna 2 labeled x705_2.

Thus, in detecting a signal in the directional reception, receive beamforming (reception directivity control) according to the $(4 \times i - 3)$-th parameter, receive beamforming (reception directivity control) according to the $(4 \times i - 2)$-th parameter, receive beamforming (reception directivity control) according to the $(4 \times i - 1)$-th parameter, and receive beamforming (reception directivity control) according to the $(4 \times i)$-th parameter are performed in transmission/reception panel antenna i labeled x705_i. Note that i is an integer from 1 to M (both inclusive).

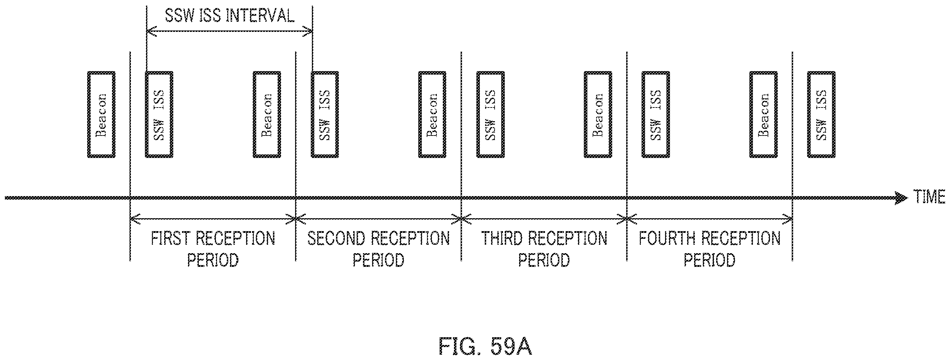

The gNB and NR-UE configure the first reception period to have an approximate SSW ISS interval as in FIG. 59A, perform receive beamforming (reception directivity control) according to the first parameter in the first reception period, and confirm whether some SSW ISS can be received. Accordingly, the gNB and NR-UE use transmission/reception panel antenna 1 labeled x705_1.

The gNB and NR-UE configure the second reception period to have an approximate SSW ISS interval as in FIG. 59A, perform receive beamforming (reception directivity control) according to the second parameter in the second reception period, and confirm whether some SSW ISS can be received. Accordingly, the gNB and NR-UE use transmission/reception panel antenna 1 labeled x705_1.

The gNB and NR-UE configure the third reception period to have an approximate SSW ISS interval as in FIG. 59A, perform receive beamforming (reception directivity control) according to the third parameter in the third reception period, and confirm whether some SSW ISS can be received. Accordingly, the gNB and NR-UE use transmission/reception panel antenna 1 labeled x705_1.

The gNB and NR-UE configure the fourth reception period to have an approximate SSW ISS interval as in FIG. 59A, perform receive beamforming (reception directivity control) according to the fourth parameter in the fourth reception period, and confirm whether some SSW ISS can be received. Accordingly, the gNB and NR-UE use transmission/reception panel antenna 1 labeled x705_1.

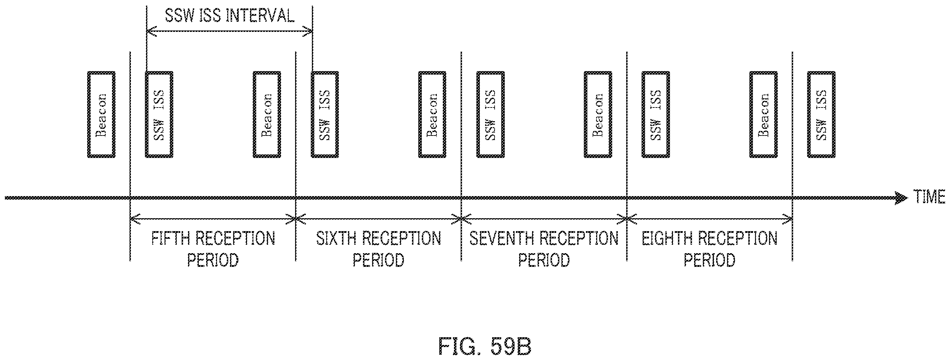

The gNB and NR-UE configure the fifth reception period to have an approximate SSW ISS interval as in FIG. 59B, perform receive beamforming (reception directivity control) according to the fifth parameter in the fifth reception period, and confirm whether some SSW ISS can be received. Accordingly, the gNB and NR-UE use transmission/reception panel antenna 2 labeled x705_2.

The gNB and NR-UE configure the sixth reception period to have an approximate SSW ISS interval as in FIG. 59B, perform receive beamforming (reception directivity control) according to the sixth parameter in the sixth reception period, and confirm whether some SSW ISS can be received. Accordingly, the gNB and NR-UE use transmission/reception panel antenna 2 labeled x705_2.

The gNB and NR-UE configure the seventh reception period to have an approximate SSW ISS interval as in FIG. 59B, perform receive beamforming (reception directivity control) according to the seventh parameter in the seventh reception period, and confirm whether some SSW ISS can be received. Accordingly, the gNB and NR-UE use transmission/reception panel antenna 2 labeled x705_2.

The gNB and NR-UE configure the eighth reception period to have an approximate SSW ISS interval as in FIG. 59B, perform receive beamforming (reception directivity control) according to the eighth parameter in the eighth reception period, and confirm whether some SSW ISS can be received. Accordingly, the gNB and NR-UE use transmission/reception panel antenna 2 labeled x705_2.

Thus, the gNB and NR-UE configure the $(4 \times i - 3)$-th reception period to have an approximate SSW ISS interval, perform receive beamforming (reception directivity control) according to the $(4 \times i - 3)$-th parameter in the $(4 \times i - 3)$-th reception period, and confirm whether some SSW ISS can be received. Accordingly, the gNB and NR-UE use transmission/reception panel antenna i labeled x705_i.

The gNB and NR-UE configure the $(4 \times i - 2)$-th reception period to have an approximate SSW ISS interval, perform receive beamforming (reception directivity control) according to the $(4 \times i - 2)$-th parameter in the $(4 \times i - 2)$-th reception period, and confirm whether some SSW ISS can be received. Accordingly, the gNB and NR-UE use transmission/reception panel antenna i labeled x705_i.

The gNB and NR-UE configure the $(4 \times i - 1)$-th reception period to have an approximate SSW ISS interval, perform receive beamforming (reception directivity control) according to the $(4 \times i - 1)$-th parameter in the $(4 \times i - 1)$-th reception period, and confirm whether some SSW ISS can be received. Accordingly, the gNB and NR-UE use transmission/reception panel antenna i labeled x705_i.

The gNB and NR-UE configure the $(4 \times i)$-th reception period to have an approximate SSW ISS interval, perform receive beamforming (reception directivity control) according to the $(4 \times i)$-th parameter in the $(4 \times i)$-th reception period, and confirm whether some SSW ISS can be received. Accordingly, the gNB and NR-UE use transmission/reception panel antenna i labeled x705_i.

Note that i is an integer from 1 to M (both inclusive).

In the above example, the first reception period to the $(4 \times M)$-th reception period are present when all of the receive beamforming (reception directivity control) according to the first parameter to the receive beamforming (reception directivity control) according to the $(4 \times M)$-th parameter are used, but the present disclosure is not limited thereto, and there only needs to be a plurality of reception periods using a plurality of types of receive beamforming (reception directivity control).

Next, a description will be given of a case where the TXSS is transmitted using the BTI (DMG beacon) as in FIG. 49.

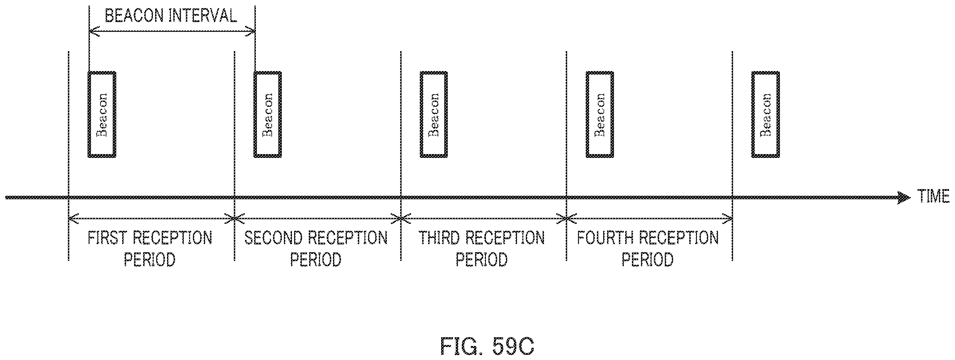

The gNB and NR-UE configure the first reception period to have an approximate beacon interval as in FIG. 59C, perform receive beamforming (reception directivity control) according to the first parameter in the first reception period, and confirm whether some DMG beacons can be received. Accordingly, the gNB and NR-UE use transmission/reception panel antenna 1 labeled x705_1.

The gNB and NR-UE configure the second reception period to have an approximate beacon interval as in FIG. 59C, perform receive beamforming (reception directivity control) according to the second parameter in the second reception period, and confirm whether some DMG beacons can be received. Accordingly, the gNB and NR-UE use transmission/reception panel antenna 1 labeled x705_1.

The gNB and NR-UE configure the third reception period to have an approximate beacon interval as in FIG. 59C, perform receive beamforming (reception directivity control) according to the third parameter in the third reception period, and confirm whether some DMG beacons can be received. Accordingly, the gNB and NR-UE use transmission/reception panel antenna 1 labeled x705_1.

The gNB and NR-UE configure the fourth reception period to have an approximate beacon interval as in FIG. 59C, perform receive beamforming (reception directivity control) according to the fourth parameter in the fourth reception period, and confirm whether some DMG beacons can be received. Accordingly, the gNB and NR-UE use transmission/reception panel antenna 1 labeled x705_1.

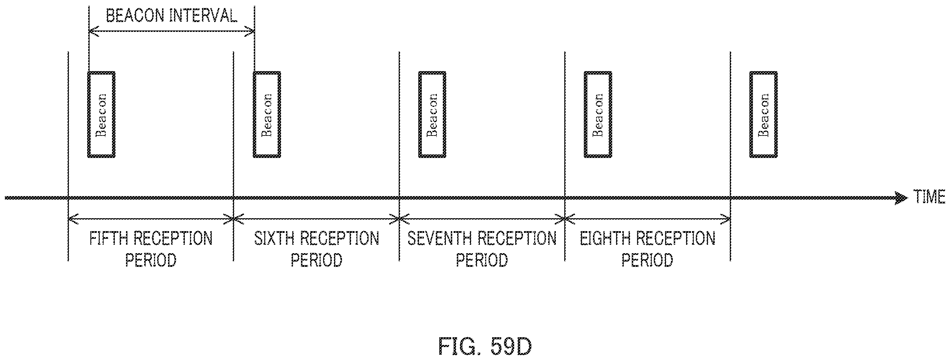

The gNB and NR-UE configure the fifth reception period to have an approximate beacon interval as in FIG. 59D, perform receive beamforming (reception directivity control) according to the fifth parameter in the fifth reception period, and confirm whether some DMG beacons can be received. Accordingly, the gNB and NR-UE use transmission/reception panel antenna 2 labeled x705_2.

The gNB and NR-UE configure the sixth reception period to have an approximate beacon interval as in FIG. 59D, perform receive beamforming (reception directivity control) according to the sixth parameter in the sixth reception period, and confirm whether some DMG beacons can be received. Accordingly, the gNB and NR-UE use transmission/reception panel antenna 2 labeled x705_2.

The gNB and NR-UE configure the seventh reception period to have an approximate beacon interval as in FIG. 59D, perform receive beamforming (reception directivity control) according to the seventh parameter in the seventh reception period, and confirm whether some DMG beacons can be received. Accordingly, the gNB and NR-UE use transmission/reception panel antenna 2 labeled x705_2.

The gNB and NR-UE configure the eighth reception period to have an approximate beacon interval as in FIG. 59D, perform receive beamforming (reception directivity control) according to the eighth parameter in the eighth reception period, and confirm whether some DMG beacons can be received. Accordingly, the gNB and NR-UE use transmission/reception panel antenna 2 labeled x705_2.

Thus, the gNB and NR-UE configure the $(4 \times i - 3)$-th reception period to have an approximate beacon interval, perform receive beamforming (reception directivity control) according to the $(4 \times i - 3)$-th parameter in the $(4 \times i - 3)$-th reception period, and confirm whether some DMG beacons can be received. Accordingly, the gNB and NR-UE use transmission/reception panel antenna i labeled x705_i.

The gNB and NR-UE configure the $(4 \times i - 2)$-th reception period to have an approximate beacon interval, perform receive beamforming (reception directivity control) according to the $(4 \times i - 2)$-th parameter in the $(4 \times i - 2)$-th reception period, and confirm whether some DMG beacons can be received. Accordingly, the gNB and NR-UE use transmission/reception panel antenna i labeled x705_i.

The gNB and NR-UE configure the $(4 \times i - 1)$-th reception period to have an approximate beacon interval, perform receive beamforming (reception directivity control) according to the $(4 \times i - 1)$-th parameter in the $(4 \times i - 1)$-th reception period, and confirm whether some DMG beacons can be received. Accordingly, the gNB and NR-UE use transmission/reception panel antenna i labeled x705_i.

The gNB and NR-UE configure the $(4 \times i)$-th reception period to have an approximate beacon interval, perform receive beamforming (reception directivity control) according to the $(4 \times i)$-th parameter in the $(4 \times i)$-th reception period, and confirm whether some DMG beacons can be received. Accordingly, the gNB and NR-UE use transmission/reception panel antenna i labeled x705_i.

In the above example, the first reception period to the $(4 \times M)$-th reception period are present when all of the receive beamforming (reception directivity control) according to the first parameter to the receive beamforming (reception directivity control) according to the $(4 \times M)$-th parameter are used, but the present disclosure is not limited thereto, and there only needs to be a plurality of reception periods using a plurality of types of receive beamforming (reception directivity control).

Another example will be described. In a case where the gNB and NR-UE have the configuration in FIG. 54, signal reception is performed by using one or more of "transmission/reception antenna 1 labeled x805_1 to transmission/reception antenna m labeled x805_m" and performing receive beamforming (reception directivity control).

In detecting a signal in the directional reception, g types of receive beamforming (reception directivity control) are performed by using one or more of "transmission/reception antenna 1 labeled x805_1 to transmission/reception antenna m labeled x805_m". Note that g is an integer equal to or greater than 2.

The gNB and NR-UE configure the first reception period to have an approximate SSW ISS interval as in FIG. 59A, perform receive beamforming (reception directivity control) according to the first parameter using one or more of "transmission/reception antenna 1 labeled x805_1 to transmission/reception antenna m labeled x805_m" in the first reception period, and confirm whether some SSW ISS can be received.

The gNB and NR-UE configure the second reception period to have an approximate SSW ISS interval as in FIG. 59A, perform receive beamforming (reception directivity control) according to the second parameter using one or more of "transmission/reception antenna 1 labeled x805_1 to transmission/reception antenna m labeled x805_m" in the second reception period, and confirm whether some SSW ISS can be received.

The gNB and NR-UE configure the third reception period to have an approximate SSW ISS interval as in FIG. 59A, perform receive beamforming (reception directivity control) according to the third parameter using one or more of "transmission/reception antenna 1 labeled x805_1 to transmission/reception antenna m labeled x805_m" in the third reception period, and confirm whether some SSW ISS can be received.

The gNB and NR-UE configure the fourth reception period to have an approximate SSW ISS interval as in FIG. 59A, perform receive beamforming (reception directivity control) according to the fourth parameter using one or more of "transmission/reception antenna 1 labeled x805_1 to transmission/reception antenna m labeled x805_m" in the fourth reception period, and confirm whether some SSW ISS can be received.

The gNB and NR-UE configure the fifth reception period to have an approximate SSW ISS interval as in FIG. 59B, perform receive beamforming (reception directivity control) according to the fifth parameter using one or more of "transmission/reception antenna 1 labeled x805_1 to transmission/reception antenna m labeled x805_m" in the fifth reception period, and confirm whether some SSW ISS can be received.

The gNB and NR-UE configure the sixth reception period to have an approximate SSW ISS interval as in FIG. 59B, perform receive beamforming (reception directivity control) according to the sixth parameter using one or more of "transmission/reception antenna 1 labeled x805_1 to transmission/reception antenna m labeled x805_m" in the sixth reception period, and confirm whether some SSW ISS can be received.

The gNB and NR-UE configure the seventh reception period to have an approximate SSW ISS interval as in FIG. 59B, perform receive beamforming (reception directivity control) according to the seventh parameter using one or more of "transmission/reception antenna 1 labeled x805_1 to transmission/reception antenna m labeled x805_m" in the seventh reception period, and confirm whether some SSW ISS can be received.

The gNB and NR-UE configure the eighth reception period to have an approximate SSW ISS interval as in FIG. 59B, perform receive beamforming (reception directivity control) according to the eighth parameter using one or more of "transmission/reception antenna 1 labeled x805_1 to transmission/reception antenna m labeled x805_m" in the eighth reception period, and confirm whether some SSW ISS can be received.

Thus, the gNB and NR-UE configure the i-th reception period to have an approximate SSW ISS interval, perform receive beamforming (reception directivity control) according to the i-th parameter using one or more of "transmission/reception antenna 1 labeled x805_1 to transmission/reception antenna m labeled x805_m" in the i-th reception period, and confirm whether some SSW ISS can be received. Note that i is an integer from 1 to g (both inclusive).

In the above example, the first reception period to the g-th reception period are present when all of the receive beamforming (reception directivity control) according to the first parameter to the receive beamforming (reception directivity control) according to the g-th parameter are used, but the present disclosure is not limited thereto, and there only needs to be a plurality of reception periods using a plurality of types of receive beamforming (reception directivity control).

Next, a description will be given of a case where the TXSS is transmitted using the BTI (DMG beacon) as in FIG. 49.

The gNB and NR-UE configure the first reception period to have an approximate beacon interval as in FIG. 59C, perform receive beamforming (reception directivity control) according to the first parameter using one or more of "transmission/reception antenna 1 labeled x805_1 to transmission/reception antenna m labeled x805_m" in the first reception period, and confirm whether some DMG beacons can be received.

The gNB and NR-UE configure the second reception period to have an approximate beacon interval as in FIG. 59C, perform receive beamforming (reception directivity control) according to the second parameter using one or more of "transmission/reception antenna 1 labeled x805_1 to transmission/reception antenna m labeled x805_m" in the second reception period, and confirm whether some DMG beacons can be received.

The gNB and NR-UE configure the third reception period to have an approximate beacon interval as in FIG. 59C, perform receive beamforming (reception directivity control) according to the third parameter using one or more of "transmission/reception antenna 1 labeled x805_1 to transmission/reception antenna m labeled x805_m" in the third reception period, and confirm whether some DMG beacons can be received.

The gNB and NR-UE configure the fourth reception period to have an approximate beacon interval as in FIG. 59C, perform receive beamforming (reception directivity control) according to the fourth parameter using one or more of "transmission/reception antenna 1 labeled x805_1 to transmission/reception antenna m labeled x805_m" in the fourth reception period, and confirm whether some DMG beacons can be received.

The gNB and NR-UE configure the fifth reception period to have an approximate beacon interval as in FIG. 59D, perform receive beamforming (reception directivity control) according to the fifth parameter using one or more of "transmission/reception antenna 1 labeled x805_1 to transmission/reception antenna m labeled x805_m" in the fifth reception period, and confirm whether some DMG beacons can be received.

The gNB and NR-UE configure the sixth reception period to have an approximate beacon interval as in FIG. 59D, perform receive beamforming (reception directivity control) according to the sixth parameter using one or more of "transmission/reception antenna 1 labeled x805_1 to transmission/reception antenna m labeled x805_m" in the sixth reception period, and confirm whether some DMG beacons can be received.

The gNB and NR-UE configure the seventh reception period to have an approximate beacon interval as in FIG. 59D, perform receive beamforming (reception directivity control) according to the seventh parameter using one or more of "transmission/reception antenna 1 labeled x805_1 to transmission/reception antenna m labeled x805_m" in the seventh reception period, and confirm whether some DMG beacons can be received.

The gNB and NR-UE configure the eighth reception period to have an approximate beacon interval as in FIG. 59D, perform receive beamforming (reception directivity control) according to the eighth parameter using one or more of "transmission/reception antenna 1 labeled x805_1 to transmission/reception antenna m labeled x805_m" in the eighth reception period, and confirm whether some DMG beacons can be received.

Thus, the gNB and NR-UE configure the i-th reception period to have an approximate beacon interval, perform receive beamforming (reception directivity control) according to the i-th parameter using one or more of "transmission/reception antenna 1 labeled x805_1 to transmission/reception antenna m labeled x805_m" in the i-th reception period, and confirm whether some DMG beacons can be received. Note that i is an integer from 1 to g (both inclusive).

In the above example, the first reception period to the g-th reception period are present when all of the receive beamforming (reception directivity control) according to the first parameter to the receive beamforming (reception directivity control) according to the g-th parameter are used, but the present disclosure is not limited thereto, and there only needs to be a plurality of reception periods using a plurality of types of receive beamforming (reception directivity control).

Note that the gNB and NR-UE, for example, perform the directional reception and detect a beacon frame, preamble, data frame, SSW ISS, SSW RSS, TXSS, etc., as described in FIGS. 57, 58, and 59A to 59D. In terms of a reception period (listen period or signal detection period) at that time, SSW ISSs in FIGS. 59A and 59B may be focused. The signal detection is possible as long as the reception period (listen period or signal detection period) in the directional LBT is at least equal to or greater than "n times the SSW ISS interval (n is an integer of 2 or more)" illustrated in FIGS. 59A and 59B.

Further, focusing on the beacons in FIG. 59C and FIG. 59D, which are the initiator TXSS in FIG. 49, the signal detection is possible as long as the reception period (listen period or signal detection period) in the directional LBT is at least equal to or greater than "n times the beacon interval (n is an integer of 2 or more)" illustrated in FIGS. 59C and 59D.

Thus, the gNB and NR-UE configure the reception period (listen period or signal detection period) in the directional LBT to be equal to or greater than "n times the SSW ISS interval (n is an integer of 2 or more)". The configuration value of the reception period may be a fixed value, may be configurable, or may be changed in accordance with time.

Note that the reception period (listen period or signal detection period) in the directional LBT is configured to be an approximate value when the SSW ISS interval is not obtained.

In addition, the gNB and NR-UE configure the reception period (listen period or signal detection period) in the directional LBT to be equal to or greater than "n times the initiator TXSS interval (n is an integer of 2 or more)", that is, equal to or more than "n times the beacon interval (n is an integer of 2 or more)". The configuration value of the reception period may be a fixed value, may be configurable, or may be changed in accordance with time.

Note that the reception period (listen period or signal detection period) in the directional LBT is configured to be an approximate value when the initiator TXSS interval and beacon interval are not obtained.

Regarding Stand-by:

In some cases, the gNB and NR-UE "stand by" when the directional reception is performed and a signal is detected. For example, the gNB and NR-UE stand by without transmitting a signal.

The gNB and NR-UE may restart the operation of the directional LBT when a certain amount of time has passed. Alternatively, when the directional reception is performed and a signal is detected, the gNB and NR-UE may again perform the directional reception and check whether a signal is present.

Regarding "Determine Beamforming Parameter to be Used" in S5802 of FIG. 58:

Descriptions will be separately given of a case where the gNB and NR-UE have the configuration in FIG. 53 and a case where the gNB and NR-UE have the configuration in FIG. 54.

1) Case where the gNB and NR-UE have the configuration in FIG. 53:

As discussed above, the gNB and NR-UE perform receive beamforming (reception directivity control) according to the (4 × i - 3)-th parameter, and confirm whether some SSW ISS can be received.

The gNB and NR-UE also perform receive beamforming (reception directivity control) according to the (4 × i - 2)-th parameter, and confirm whether some SSW ISS can be received.

Then, the gNB and NR-UE perform receive beamforming (reception directivity control) according to the (4 × i - 1)-th parameter, and confirm whether some SSW ISS can be received.

The gNB and NR-UE perform receive beamforming (reception directivity control) according to the (4 × i)-th parameter, and confirm whether some SSW ISS can be received.

Note that i is an integer from 1 to M (both inclusive).

When some SSW ISS can be received (a signal is detected), the gNB and NR-UE do not use the parameter at that time to transmit a modulation signal. When no SSW ISS can be received (no signal is detected), the gNB and NR-UE can use the parameter at that time to transmit a modulation signal.

For example, the gNB and NR-UE configure the first reception period to have an approximate SSW ISS interval as in FIG. 59A, perform receive beamforming (reception directivity control) according to the first parameter in the first reception period, and confirm whether some SSW ISS can be received. At this time, the gNB and NR-UE use transmission/reception panel antenna 1 labeled x705_1.

When some SSW ISS can be received (a signal is detected), the gNB and NR-UE do not transmit a modulation signal using the first parameter. When no SSW ISS can be received (no signal is detected), the gNB and NR-UE can transmit a modulation signal using the first parameter.

For example, the gNB and NR-UE configure the fifth reception period to have an approximate SSW ISS interval as in FIG. 59B, perform receive beamforming (reception directivity control) according to the fifth parameter in the fifth reception period, and confirm whether some SSW ISS can be received. At this time, the gNB and NR-UE use transmission/reception panel antenna 2 labeled x705_2.

When some SSW ISS can be received (a signal is detected), the gNB and NR-UE do not transmit a modulation signal using the fifth parameter. When no SSW ISS can be received (no signal is detected), the gNB and NR-UE can transmit a modulation signal using the fifth parameter.

Similar processing is performed for beamforming parameters in the other reception periods.

Another example will be described. As described above, the gNB and NR-UE perform receive beamforming (reception directivity control) according to the (4 × i - 3)-th parameter, and confirm whether some DMG beacons can be received.

The gNB and NR-UE also perform receive beamforming (reception directivity control) according to the (4 × i - 2)-th parameter, and confirm whether some DMG beacons can be received.

Then, the gNB and NR-UE perform receive beamforming (reception directivity control) according to the (4 × i - 1)-th parameter, and confirm whether some DMG beacons can be received.

The gNB and NR-UE perform receive beamforming (reception directivity control) according to the (4 × i)-th parameter, and confirm whether some DMG beacons can be received.

Note that i is an integer from 1 to M (both inclusive).

When some DMG beacons can be received (a signal is detected), the gNB and NR-UE do not use the parameter at that time to transmit a modulation signal. When no DMG beacon can be received (no signal is detected), the gNB and NR-UE can use the parameter at that time to transmit a modulation signal.

For example, the gNB and NR-UE configure the first reception period to have an approximate DMG beacon interval as in FIG. 59C, perform receive beamforming (reception directivity control) according to the first parameter in the first reception period, and confirm whether some DMG beacons can be received. At this time, the gNB and NR-UE use transmission/reception panel antenna 1 labeled x705_1.

When some DMG beacons can be received (a signal is detected), the gNB and NR-UE do not transmit a modulation signal using the first parameter. When no DMG beacon can be received (no signal is detected), the gNB and NR-UE can transmit a modulation signal using the first parameter.

For example, the gNB and NR-UE configure the fifth reception period to have an approximate DMG beacon interval as in FIG. 59D, perform receive beamforming (reception directivity control) according to the fifth parameter in the fifth reception period, and confirm whether some DMG beacons can be received. At this time, the gNB and NR-UE use transmission/reception panel antenna 2 labeled x705_2.

When some DMG beacons can be received (a signal is detected), the gNB and NR-UE do not transmit a modulation signal using the fifth parameter. When no DMG beacon can be received (no signal is detected), the gNB and NR-UE can transmit a modulation signal using the fifth parameter.

Similar processing is performed for beamforming parameters in the other reception periods.

2) Case where the gNB and NR-UE have the configuration in FIG. 54:

As described above, the gNB and NR-UE perform receive beamforming (reception directivity control) according to the i-th parameter by using one or more of "transmission/reception antenna 1 labeled x805_1 to transmission/reception antenna m labeled x805_m", and confirm whether some SSW ISS can be received. Note that i is an integer from 1 to g (both inclusive).

When some SSW ISS can be received (a signal is detected), the gNB and NR-UE do not use the parameter at that time to transmit a modulation signal. When no SSW ISS can be received (no signal is detected), the gNB and NR-UE can use the parameter at that time to transmit a modulation signal.

For example, the gNB and NR-UE configure the first reception period to have an approximate SSW ISS interval as in FIG. 59A, perform receive beamforming (reception directivity control) according to the first parameter using one or more of "transmission/reception antenna 1 labeled x805_1 to transmission/reception antenna m labeled x805_m" in the first reception period, and confirm whether some SSW ISS can be received.

When some SSW ISS can be received (a signal is detected), the gNB and NR-UE do not transmit a modulation signal using the first parameter. When no SSW ISS can be received (no signal is detected), the gNB and NR-UE can transmit a modulation signal using the first parameter.

For example, the gNB and NR-UE configure the fifth reception period to have an approximate SSW ISS interval as in FIG. 59B, perform receive beamforming (reception directivity control) according to the fifth parameter using one or more of "transmission/reception antenna 1 labeled x805_1 to transmission/reception antenna m labeled x805_m" in the fifth reception period, and confirm whether some SSW ISS can be received.

When some SSW ISS can be received (a signal is detected), the gNB and NR-UE do not transmit a modulation signal using the fifth parameter. When no SSW ISS can be received (no signal is detected), the gNB and NR-UE can transmit a modulation signal using the fifth parameter.

Similar processing is performed for beamforming parameters in the other reception periods.

Another example will be described. As described above, the gNB and NR-UE perform receive beamforming (reception directivity control) according to the i-th parameter by using one or more of "transmission/reception antenna 1 labeled x805_1 to transmission/reception antenna m labeled x805_m", and confirm whether some DMG beacons can be received. Note that i is an integer from 1 to g (both inclusive).

When some DMG beacons can be received (a signal is detected), the gNB and NR-UE do not use the parameter at that time to transmit a modulation signal. When no DMG beacon can be received (no signal is detected), the gNB and NR-UE can use the parameter at that time to transmit a modulation signal.

For example, the gNB and NR-UE configure the first reception period to have an approximate beacon interval as in FIG. 59C, perform receive beamforming (reception directivity control) according to the first parameter using one or more of "transmission/reception antenna 1 labeled x805_1 to transmission/reception antenna m labeled x805_m" in the first reception period, and confirm whether some DMG beacons can be received.

When some DMG beacons can be received (a signal is detected), the gNB and NR-UE do not transmit a modulation signal using the first parameter. When no DMG beacon can be received (no signal is detected), the gNB and NR-UE can transmit a modulation signal using the first parameter.

For example, the gNB and NR-UE configure the fifth reception period to have an approximate beacon interval as in FIG. 59D, perform receive beamforming (reception directivity control) according to the fifth parameter using one or more of "transmission/reception antenna 1 labeled x805_1 to transmission/reception antenna m labeled x805_m" in the fifth reception period, and confirm whether some DMG beacons can be received.

When some DMG beacons can be received (a signal is detected), the gNB and NR-UE do not transmit a modulation signal using the fifth parameter. When no DMG beacon can be received (no signal is detected), the gNB and NR-UE can transmit a modulation signal using the fifth parameter.

Similar processing is performed for beamforming parameters in the other reception periods.

The gNB and NE-UE may perform the omni-directional LBT and directional LBT processing.

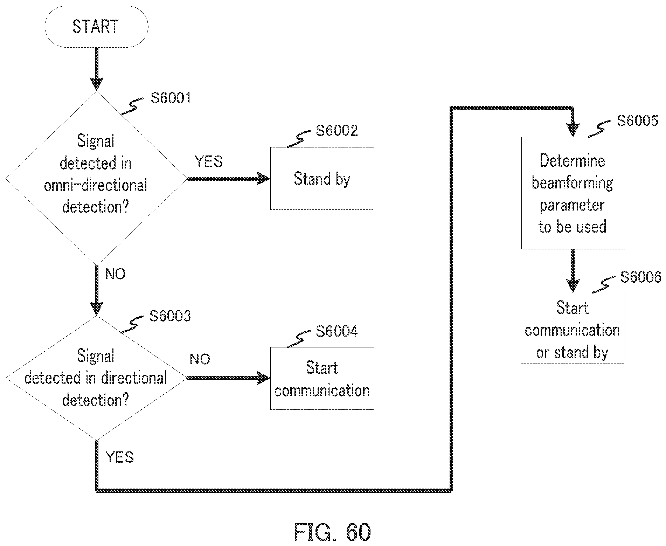

FIG. 60 is a flowchart describing an exemplary operation of the gNB in the omni-directional LBT and directional LBT. The gNB determines whether a signal is detected in the omni-directional detection (S6001).

When a signal is detected in the omni-directional detection (YES in S6001), the gNB stands by for communication (S6002). For example, the gNB determines that another apparatus (another gNB, NR-UE, AP, or first standard-UE) occupies a channel in the "licensed band and/or unlicensed band" and stands by without transmitting a signal.

When no signal is detected (no signal can be detected) in the omni-directional detection (NO in S6001), the gNB determines whether a signal is detected in the directional detection (S6003).

When no signal is detected (no signal can be detected) in the directional detection (NO in S6003), the gNB starts communication (S6004). For example, the gNB determines that another apparatus (another gNB, NR-UE, AP, or first standard-UE) does not occupy a channel in the "licensed band and/or unlicensed band" and starts communication.

When a signal is detected in the directional detection (YES in S6003), the gNB determines a beamforming parameter to be used for signal transmission (S6005). For example, the gNB may determine a beamforming parameter in a direction other than the direction in which a signal is detected in the directional detection.

Upon determining the beamforming parameter in S6005, the gNB starts communication or stands by, using the determined beamforming parameter (S6006). For example, the gNB may determine that another apparatus (another gNB, NR-UE, AP, or first standard-UE) occupies a channel of the "licensed band and/or unlicensed band" in the direction in which a signal is detected in the directional detection, and stand by without transmitting a signal. The gNB may determine that another apparatus (another gNB, NR-UE, AP, or first standard-UE) does not occupy a channel of the "licensed band and/or unlicensed band" in a direction other than the direction in which a signal is detected in the directional detection, and starts communication.

As a method of signal detection, the gNB may determine that a signal is present when the power at the time of reception is greater than a threshold and that a signal is not present when the power is less than the threshold. As another method, the gNB may determine that a signal is present when the signal can be demodulated and that a signal is not present when the signal cannot be demodulated. Two examples have been described but the method is not limited to the examples.

In a case where the gNB performs both the "omni-directional LBT processing" and the "directional LBT processing", the reception period for the omni-directional LBT is shorter than the reception period for the directional LBT. The reason for this is as described in "the description of the reception period in the "omni-directional LBT processing" and the description of the reception period in the "directional LBT processing"".

In addition, the above description is about an exemplary operation of the gNB, but the NR-UE operates in the same manner. Note that the signal detected by the gNB and NR-UE may be any frame or signal, such as SSW ISS, SSW RSS, TXSS, a beacon, or a data frame, (based on the first standard) or may be a signal other than a signal of the first standard.

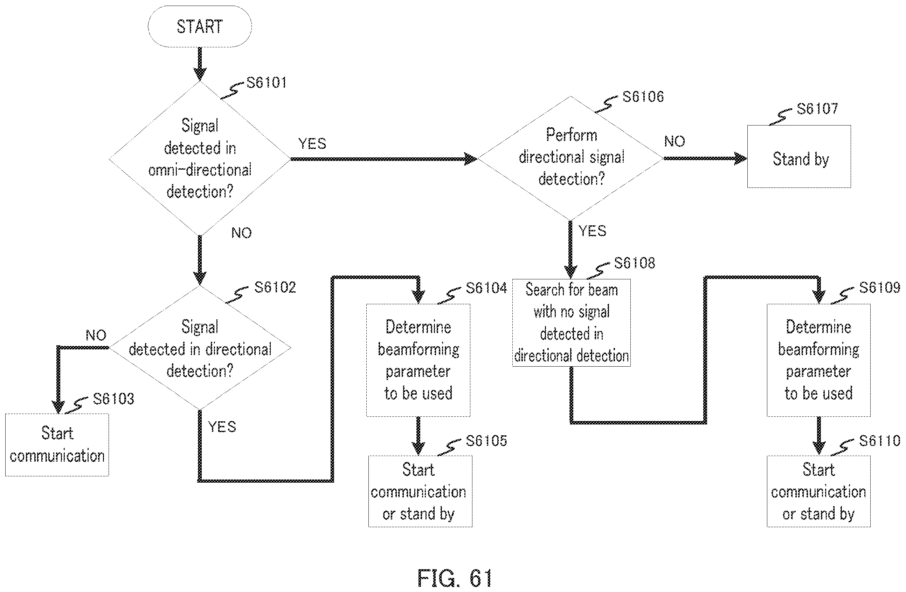

FIG. 61 is a flowchart describing another exemplary operation of the gNB in the omni-directional LBT and directional LBT. The gNB determines whether a signal is detected in the omni-directional detection (S6101).

When no signal is detected (no signal can be detected) in the omni-directional detection (NO in S6001), the gNB determines whether a signal is detected in the directional detection (S6002).

When no signal is detected (no signal can be detected) in the directional detection (NO in S6002), the gNB starts communication (S6003). For example, the gNB determines that another apparatus (another gNB, NR-UE, AP, or first standard-UE) does not occupy a channel in the "licensed band and/or unlicensed band" and starts communication.

When a signal is detected in the directional detection (YES in S6102), the gNB determines a beamforming parameter to be used for signal transmission (S6104). For example, the gNB may determine a beamforming parameter in a direction other than the direction in which a signal is detected in the directional detection.

Upon determining the beamforming parameter in S6104, the gNB starts communication or stands by, using the determined beamforming parameter (S6105). For example, the gNB may determine that another apparatus (another gNB, NR-UE, AP, or first standard-UE) occupies a channel of the "licensed band and/or unlicensed band" in the direction in which a signal is detected in the directional detection, and stand by without transmitting a signal. The gNB may determine that another apparatus (another gNB, NR-UE, AP, or first standard-UE) does not occupy a channel of the "licensed band and/or unlicensed band" in a direction other than the direction in which a signal is detected in the directional detection, and starts communication.

When a signal is detected in the omni-directional detection (YES in S6101), the gNB determines whether to perform the directional signal detection (S6106). A user may set whether to perform the directional signal detection, for example.

When determining not to perform the directional signal detection (NO in S6106), the gNB stands by for communication (S6107).

When determining to perform the directional signal detection (YES in S6106), the gNB searches for a beam in which no signal is detected in the directional detection (S6108). In other words, the gNB specifies a signal reception direction in the directional detection.

Upon searching for a beam in which no signal is detected in S6108, the gNB determines a beamforming parameters to be used (S6109). For example, the gNB determines a beamforming parameter in the direction of the beam searched in S6108.

Upon determining the beamforming parameter in S6109, the gNB starts communication or stands by, using the determined beamforming parameter (S6110).

As a method of signal detection, the gNB may determine that a signal is present when the power at the time of reception is greater than a threshold and that a signal is not present when the power is less than the threshold. As another method, the gNB may determine that a signal is present when the signal can be demodulated and that a signal is not present when the signal cannot be demodulated. Two examples have been described but the method is not limited to the examples.

In a case where the gNB performs both the "omni-directional LBT processing" and the "directional LBT processing", the reception period for the omni-directional LBT is shorter than the reception period for the directional LBT. The reason for this is as described in "the description of the reception period in the "omni-directional LBT processing" and the description of the reception period in the "directional LBT processing"".

In addition, the above description is about an exemplary operation of the gNB, but the NR-UE operates in the same manner. Note that the signal detected by the gNB and NR-UE may be any frame or signal, such as SSW ISS, SSW RSS, TXSS, a beacon, or a data frame, (based on the first standard) or may be a signal other than a signal of the first standard.

Regarding LBT Processing Performed by gNB and NR-UE:

The omni-directional LBT processing may be referred to as the first LBT processing method. The directional LBT processing may be referred to as the second LBT processing method. The LBT in which both omni-directional LBT processing and directional LBT processing are performed may be referred to as the third LBT processing method.

The gNB and NR-UE may perform any one of the "first LBT processing, second LBT processing, and third LBT processing".

The gNB and NR-UE may perform any two or more of the "first LBT processing, second LBT processing, and third LBT processing".

In addition, the gNB and NR-UE may selectively perform one of the two or more processing methods, or may perform the two or more processing methods as a set.

As described above, for the gNB and NR-UE capable of performing the "first LBT processing and second LBT processing", the reception period for the omni-directional LBT in the first LBT processing is shorter than the reception period for the directional LBT in the second LBT processing. The "first LBT processing method, second LBT processing method, and third LBT processing method" have been described with reference to the respective drawings (flowcharts), but they are merely examples, and the "first LBT processing method, second LBT processing method, and third LBT processing method" are not limited to the examples.

In the above description, the gNB and NR-UE detect (listen for) a signal in a single direction in a single reception period, but the present disclosure is not limited to this. The gNB and NR-UE may detect signals in a plurality of directions in a single reception period. For example, the gNB and NR-UE are assumed to detect signals in 16 directions. The gNB and NR-UE may detect signals in two directions in a single reception period. In this case, the gNB and NR-UE complete the signal detection in all directions (16 directions) in eight reception periods. This allows the gNB and NR-UE to reduce the number of reception periods. At this time, the gNB and NR-UE need a receiver for detecting signals in a plurality of directions in order to detect signals in the plurality of directions.

As described above, the gNB and NR-UE each include reception circuitry that receives an SSW-related signal by the omni-directional detection, and control circuitry that controls transmission and standby of a transmission signal based on the reception of the SSW-related signal. The reception period for the SSW-related signal is configured to be shorter than the reception period for an SSW-related signal received by the directional detection. This enables the gNB and NR-UE to detect signals considering the directions and communicate with reduced interference in an environment where radio systems using different radio communication schemes are present, thereby producing effects of enhancing data quality and improving data throughput. Note that the SSW-related signal may be, for example, a signal transmitted in the BTI or DTI, such as the initiator TXSS illustrated in FIG. 49 or the ISS illustrated in FIG. 50. The SSW-related signal may be a directivity-controlled (sector sweep) reference signal.

The reception period for the SSW-related signal received by the omni-directional detection may be configured to be longer than the beacon interval in LBT. This allows the gNB and NR-UE to appropriately receive the SSW-related signal.

Further, as described above, the gNB and NR-UE each include reception circuitry that receives an SSW-related signal by the directional detection, and control circuitry that controls transmission and standby of a transmission signal based on the reception of the SSW-related signal. The reception period for the SSW-related signal is configured to be longer than the reception period for the SSW-related signal received by the omni-directional detection. This enables the gNB and NR-UE to detect signals considering the directions and communicate with reduced interference, thereby producing effects of enhancing data quality and improving data throughput.

The reception period for the SSW-related signals may be divided into a plurality of reception periods, and the reception circuitry may receive the SSW-related signals in different directions in each of the plurality of reception periods. This enables early signal detection for the gNB and NR-UE in an environment where radio systems using different radio communication schemes are present.

The control circuitry may stand by to transmit a transmission signal in the reception direction of the SSW-related signal. Accordingly, the gNB and NR-UE can perform communication with reduced interference, thereby producing effects of enhancing data quality and improving data throughput.

Further, as described above, the gNB and NR-UE each include reception circuitry that receives an SSW-related signal by the omni-directional detection and directional detection, and control circuitry that controls transmission and standby of a transmission signal based on the reception of the SSW-related signal. The reception period for the SSW-related signal received by the omni-directional detection is configured to be shorter than the reception period for the SSW-related signal received by the directional detection. Accordingly, the gNB and NR-UE can perform communication with reduced interference, thereby producing effects of enhancing data quality and improving data throughput.

When no SSW-related signal is received by the omni-directional detection, the control circuitry may determine whether the SSW-related signal is received by the directional detection. Accordingly, the gNB and NR-UE can perform communication with reduced interference, thereby producing effects of enhancing data quality and improving data throughput.

When the SSW-related signal is received by the omni-directional detection, the control circuitry specifies the reception direction of the SSW-related signal. Accordingly, the gNB and NR-UE can perform communication with reduced interference, thereby producing effects of enhancing data quality and improving data throughput.

(Embodiment 8)

In Embodiment 8, transmission of a sector sweep reference signal in SSW is not performed in a sector where a signal is detected in the directional LBT, that is, in a direction in which a signal is detected in the directional LBT. The following description is about exemplary methods of reducing signal interference.

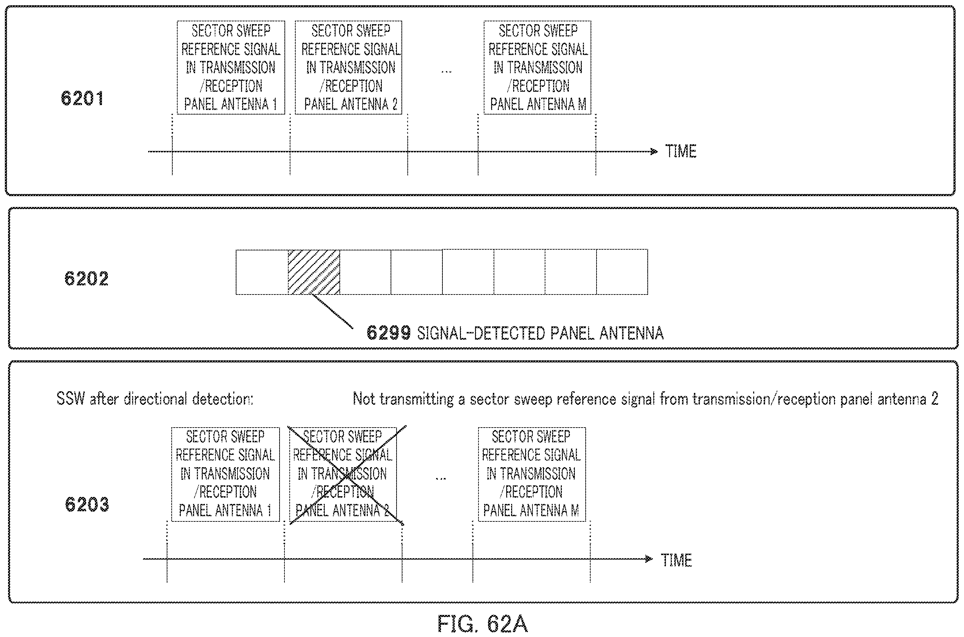

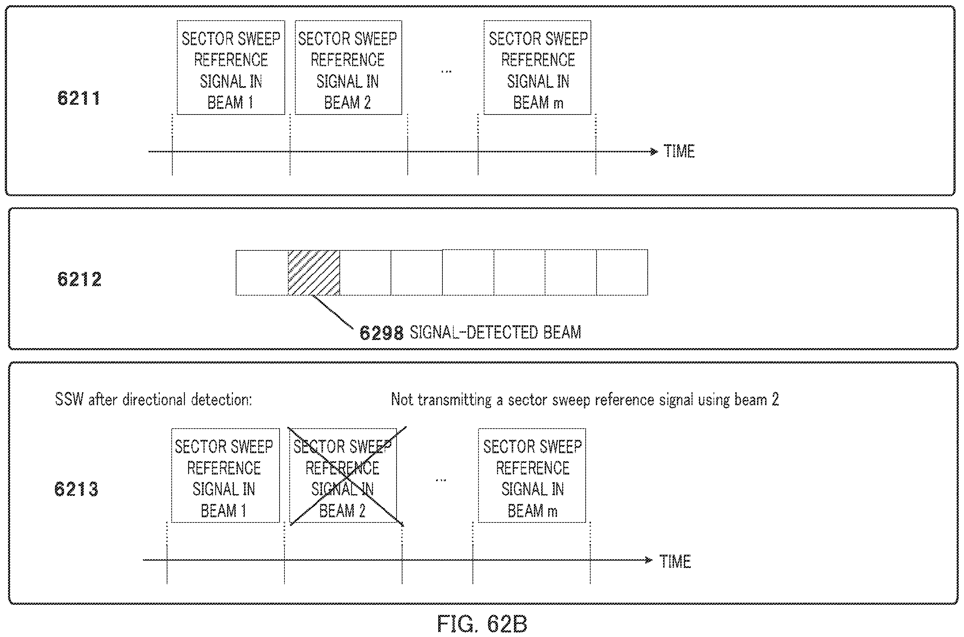

FIGS. 62A and 62B illustrate exemplary operations of the gNB and NR-UE according to Embodiment 8. The gNB and NR-UE are capable of performing at least one of the second LBT processing and the third LBT processing. FIGS. 62A and 62B describe exemplary operations of sector sweep methods performed after one of the second LBT processing and the third LBT processing. Note that examples of the second LBT processing and the third LBT processing are as described in Embodiment 7.

In the exemplary sector sweep operation using the BTI described in FIG. 49, the gNB and NR-UE detect a DMG beacon (TXSS) transmitted by an apparatus of the first standard (hereinafter, sometimes referred to as a first standard apparatus). In the exemplary sector sweep operation using the DTI described in FIG. 50, the gNB and NR-UE detect SSW ISS transmitted by a first standard apparatus.

At the time of signal detection by LBT, the gNB and NR-UE know a panel antenna by which a signal is detected. The gNB and NR-UE do not transmit a sector sweep reference signal using the panel antenna. In other words, the gNB and NR-UE transmit a sector sweep reference signal using a panel antenna by which no signal is detected.

The example in FIG. 62A illustrates the above-described operation. Note that the gNB and NR-UE each have the configuration in FIG. 53. Frame 6201 is a frame for a case where the gNB and NR-UE transmit sector sweep reference signals without restriction, and the horizontal axis represents time. As illustrated in frame 6201, the gNB and NR-UE each transmit a "sector sweep reference signal in transmission/reception panel antenna 1", a "sector sweep reference signal in transmission/reception panel antenna 2", ..., a "sector sweep reference signal in transmission/reception panel antenna M". Note that a method of configuring the sector sweep reference signal, information included therein, and the like are described in Embodiments 1 to 6, and M is an integer equal to or greater than 1 or an integer equal to or greater than 2.

6202 in FIG. 62A illustrates an exemplary state of a reception period in the directional detection when the second LBT processing or the third LBT processing is performed. In the example, "no signal is detected when receiving by transmission/reception panel antenna 1", "a signal is detected when receiving by transmission/reception panel antenna 2 (i.e., state 6299)", "no signal is detected when receiving by transmission/reception panel antenna 3", thereafter, no signal is detected when receiving by transmission/reception panel antennas 4 to M.

Frame 6203 in FIG. 62A is a frame for a case where the gNB and NR-UE transmit sector sweep reference signals when the state of the reception period in the directional detection is as in 6202, and the horizontal axis represents time. As illustrated in frame 6203, the gNB and NR-UE do not transmit a "sector sweep reference signal in transmission/reception panel antenna 2" based on state 6202 of the reception period in the directional detection. Thus, the gNB and NR-UE transmit a "sector sweep reference signal in transmission/reception panel antenna 1". Then, the gNB and NR-UE do not transmit a "sector sweep reference signal in transmission/reception panel antenna 2", and thereafter, the gNB and NR-UE transmit a "sector sweep reference signal in transmission/reception panel antenna 3", ..., a "sector sweep reference signal in transmission/reception panel antenna M".

Note that, although frame 6203 illustrates a time interval for not transmitting a "sector sweep reference signal in transmission/reception panel antenna 2" by the gNB and NR-UE, this time interval need not be present. That is, the key point in frame 6203 is that the gNB and NR-UE do not transmit a "sector sweep reference signal in transmission/reception panel antenna 2", and the temporal arrangement and the transmission order, for example, of the sector sweep reference signals are not limited to the illustration of frame 6203 in FIG. 62A.

Next, an example different from FIG. 62A will be described. At the time of signal detection by LBT, the gNB and NR-UE know a parameter (state) of receive beamforming (reception directivity control) in which a signal is detected. The gNB and NR-UE do not perform sector sweep reference signal transmission by transmit beamforming corresponding to the parameter. In other words, the gNB and NR-UE perform sector sweep reference signal transmission by transmit beamforming in a direction in which no signal is detected.

The example in FIG. 62B illustrates the above-described operation. Note that the configurations of the gNB and NR-UE may be that in FIG. 53 or FIG. 54. Frame 6211 is a frame for a case where the gNB and NR-UE transmit sector sweep reference signals without restriction, and the horizontal axis represents time. As illustrated in frame 6211, the gNB and NR-UE each transmit a "sector sweep reference signal in beam 1", a "sector sweep reference signal in beam 2", ..., a "sector sweep reference signal in beam m". Note that a method of configuring the sector sweep reference signal, information included therein, and the like are described in Embodiments 1 to 6, and m is an integer equal to or greater than 1 or an integer equal to or greater than 2.

6212 in FIG. 62B illustrates an exemplary state of a reception period in the directional detection when the second LBT processing or the third LBT processing is performed. In the example, "no signal is detected when receiving by beam 1", "a signal is detected when receiving by beam 2 (i.e., state 6298)", "no signal is detected when receiving by beam 3", thereafter, no signal is detected when receiving by beams 4 to m.

Frame 6213 in FIG. 62B is a frame for a case where the gNB and NR-UE transmit sector sweep reference signals when the state of the reception period in the directional detection is as in 6212, and the horizontal axis represents time. As illustrated in frame 6213, the gNB and NR-UE do not transmit a "sector sweep reference signal in beam 2" based on state 6212 of the reception period in the directional detection. Thus, the gNB and NR-UE transmit a "sector sweep reference signal in beam 1". Then, the gNB and NR-UE do not transmit a "sector sweep reference signal in beam 2", and thereafter, the gNB and NR-UE transmit a "sector sweep reference signal in beam 3", ..., a "sector sweep reference signal in beam m".

Note that, although frame 6213 illustrates a time interval for not transmitting a "sector sweep reference signal in beam 2" by the gNB and NR-UE, this time interval need not be present. That is, the key point in frame 6213 is that the gNB and NR-UE do not transmit a "sector sweep reference signal in beam 2", and the temporal arrangement and the transmission order, for example, of the sector sweep reference signals are not limited to the illustration of frame 6213 in FIG. 62B.

Note that, as described in Embodiment 1 to Embodiment 6, the gNB and NR-UE may use either a multi-carrier scheme such as OFDM or a single-carrier scheme when transmitting sector sweep reference signals in FIGS. 62A and 62B, and the detailed operation is as described in Embodiment 1 to Embodiment 6.

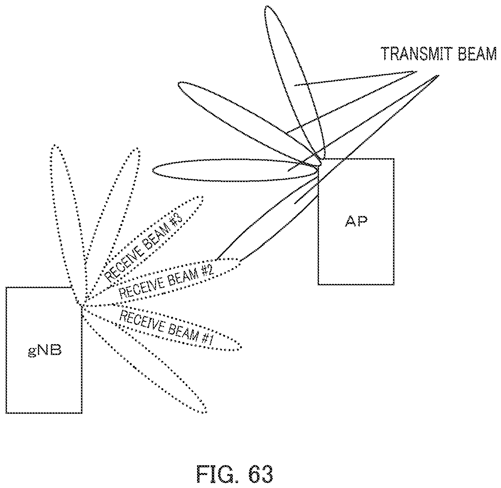

FIG. 63 illustrates an exemplary operation of beamforming. The gNB and AP are illustrated in FIG. 63. The AP performs the SSW ISS (or TXSS). Thus, the AP performs transmit beamforming (transmission directivity control).

For example, a signal is detected when the gNB performs the directional reception with "receive beam #2" during LBT.

Note that, although the SSW ISS (or TXSS) is exemplified, the gNB possibly detects a data frame transmitted by the AP or first standard-UE. In addition, the gNB also possibly detects the RSS transmitted by the AP or first standard-UE.

The gNB (or NR-UE) performs the second LBT processing, i.e., directional reception, for example. The gNB (or NR-UE) also performs receive beamforming (reception directivity control). Alternatively, it is assumed that the gNB (or NR-UE) performs directional reception in the third LBT processing (omni-directional LBT and directional LBT). Thus, the gNB (or NR-UE) performs receive beamforming (reception directivity control).

The directivity of receive beam #i and the directivity of transmit beam #i are the same. Although the receive beam number and the transmit beam number are the same here, they may be different. For example, a transmit beam having the same directivity as that of receive beam #1 may be transmit beam #4.

As a result of LBT, the gNB (or NR-UE) has detected a signal when using receive beam #2 and detected no signal when using the other receive beams. With this regard, the gNB transmits sector sweep reference in order to start communication, as described in Embodiment 1 to Embodiment 6.

At this time, the gNB transmits a sector sweep reference signal in transmit beam #1, for example. The gNB does not transmit a sector sweep reference signal in transmit beam #2. The gNB transmits sector sweep reference signals in transmit beams #3, #4, and so forth. That is, in the example of FIG. 63, the gNB does not transmit a sector sweep reference signal in transmit beam #2 and transmits sector sweep reference signals in the other transmit beams #1, #3, #4, and so forth.

Note that the gNB (or NR-UE) normally transmits a sector sweep reference signal in transmit beamforming #2.

As described above, the gNB and NR-UE each include transmission circuitry that does not transmit an SSW-related signal in the reception direction of an SSW-related signal. This enables communication with reduced interference, thereby producing effects of enhancing data quality and improving data throughput.

As a variation of the description regarding FIG. 63, the gNB (or NR-UE) has detected a signal when using receive beam #2 and detected no signal when using the other receive beams as a result of LBT, as described with reference to FIG. 62A. At this time, for example, the gNB may not transmit a sector sweep reference signal from an antenna used for receive beam #2.

Note that the LBT may be replaced with "channel access procedure" in the present disclosure.

Quasi-omni may be replaced with omni, omni-directional, or the like, and omni-directional may be replaced with quasi-omni, omni, or the like. In addition, processing related to directional detection may be performed during processing related to quasi-omni, omni-directional, or omni. Processing related to quasi-omni, omni-directional, or omni may be performed during processing related to directional detection.

In the present disclosure, a base station (gNB) of NR may be a base station, terminal, AP, repeater, or the like, and may be referred to as a communication apparatus. What it is called is not limited to these examples.

In the present disclosure, NR-UE may be a base station, terminal, AP, repeater, gNB, or the like, and may be referred to as a communication apparatus. What it is called is not limited to these examples.

Although the term AP is used in the present disclosure, it may be a base station, terminal, repeater, gNB, or the like, and may be referred to as a communication apparatus. What it is called is not limited to these examples.

In the present disclosure, first standard-UE may be a base station, terminal, AP, repeater, gNB, or the like, and may be referred to as a communication apparatus. What it is called is not limited to these examples.

Note that examples of an alternative name for a communication apparatus are as described in the present disclosure.

The gNB, NR-UE, AP, and first standard-UE may simultaneously perform reception and/or signal detection in a plurality of directions.

It is assumed that the gNB and NR-UE perform the second LBT processing or the third LBT processing and start communication without using more than one direction for the communication. Then, after starting the communication, the gNB and NR-UE check whether a signal is present in a direction not used for the communication, and when detecting a direction in which no signal is present, the gNB and NR-UE may start communication by a beam corresponding to the direction.

For example, when a certain amount of time has passed after the gNB and NR-UE start the processing of not transmitting a sector sweep reference signal in a transmit beam in a predetermined direction (in the example of FIG. 63, processing of not transmitting a sector sweep reference signal in transmit beam #2), the gNB and NR-UE determine whether a signal is received in the predetermined direction. When no signal is received in the predetermined direction after the certain amount of time, the gNB and NR-UE resume transmission of the sector sweep reference signal that has been suspended (in the example of FIG. 63, the sector sweep reference signal in transmit beam #2).

Alternatively, when a certain amount of time has passed after the gNB and NR-UE start the processing of not transmitting a modulation signal in a transmit beam in a predetermined direction (transmit beam #2 in the example of FIG. 63), the gNB and NR-UE determine whether a signal is received in the predetermined direction. When no signal is received in the predetermined direction after the certain amount of time, the gNB and NR-UE resume transmission of the modulation signal in the transmit beam in the predetermined direction that has been suspended.

Note that Embodiment 8 can be implemented in both "directional LBT" and "LBT in which both omni-directional LBT processing and directional LBT processing are performed" that include the directional LBT.

(Embodiment 9)

Embodiment 8 has a description of "the gNB and NR-UE perform the second LBT processing or the third LBT processing and start communication without using more than one direction for the communication. Then, after starting the communication, the gNB and NR-UE check whether a signal is present in a direction not used for the communication, and when detecting a direction in which no signal is present, the gNB and NR-UE may start communication by a beam corresponding to the direction". The specific examples will be described in Embodiment 9.

(First Example)

As the first example, the case where the gNB has the configuration in FIG. 53 will be described with reference to FIG. 62A.

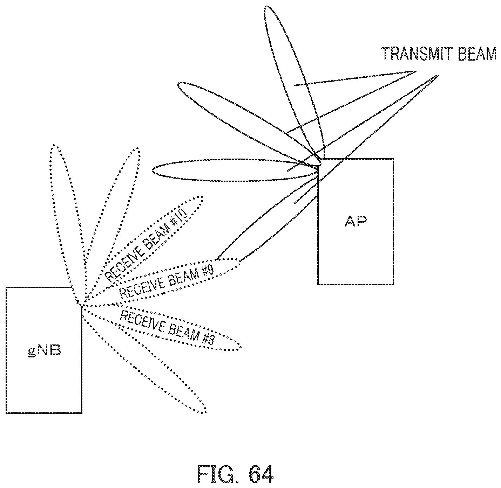

It is assumed that the gNB with the configuration in FIG. 53 performs the second LBT (directional LBT) processing or the third LBT (LBT in which both omnidirectional LBT processing and directional LBT processing are performed) processing, and the gNB detects, for example, a signal of "TXSS, SSW ISS, a data frame, or the like" transmitted by a first standard apparatus as in FIG. 64. At that time, the gNB detects the signal transmitted by the first standard apparatus in receive beam #9. Note that receive beam #9 is a beam generated by transmission/reception panel antenna 2 labeled x705_2 in FIG. 53.

Thus, as in FIG. 62A, the gNB does not perform communication using transmission/reception panel antenna 2 labeled X705_2 in FIG. 53. Note that the gNB transmits a sector sweep reference signal using transmission/reception panel antenna 2 in FIG. 62A, but the following operation can also be performed when the gNB transmits a sector sweep reference signal using transmission/reception panel antenna 2.

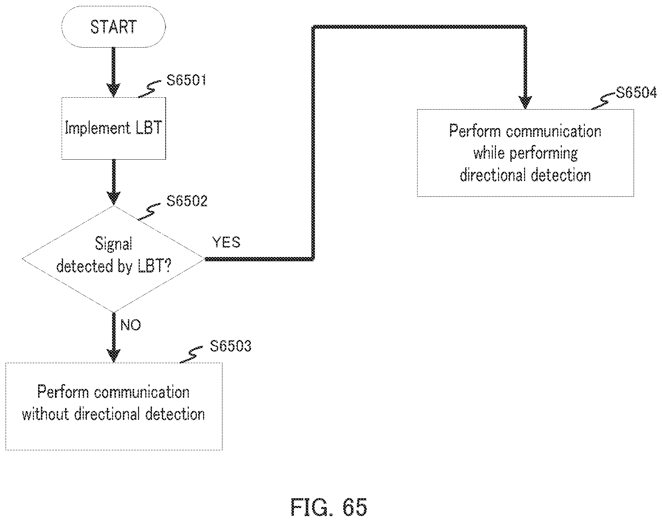

FIG. 65 illustrates an exemplary operation of the gNB at this time. As illustrated in FIG. 65, the gNB performs LBT implementation (S6501). Note that the second LBT processing or the third LBT processing is performed in the LBT implementation S6501.

Then, the gNB determines whether a signal is detected by the LBT (S6502). In the case of the first example, the gNB can detect a signal by receive beam #9. Thus, it is "YES" in S6502.

Accordingly, the gNB "performs communication while performing the directional detection" (S6504). Details will be described later.

Note that, when the determination is NO after the process of S6502, the gNB "performs communication without performing the directional detection" (S6503).

(Second Example)

As the second example, the case where the gNB has the configuration in FIG. 53 will be described with reference to FIG. 62B.

It is assumed that the gNB with the configuration in FIG. 53 performs the second LBT (directional LBT) processing or the third LBT (LBT in which both omnidirectional LBT processing and directional LBT processing are performed) processing, and the gNB detects, for example, a signal of "TXSS, SSW ISS, a data frame, or the like" transmitted by a first standard apparatus as in FIG. 63. At that time, the gNB detects the signal transmitted by the first standard apparatus in receive beam #2.

Thus, the gNB does not perform communication by beam #2 as in FIG. 62B. Note that the directivity (direction) of beam #2 is the same as the directivity (direction) of receive beam #2, and the term "beam #2" collectively refers to a transmit beam and a receive beam. This has been described in detail in Embodiment 8, and the same can be implemented with the contents described in Embodiment 8.

In FIG. 62B, the gNB transmits a sector sweep reference signal using beam #2, but the following operation can also be performed when the gNB transmits a sector sweep reference signal using beam #2.

FIG. 65 illustrates an exemplary operation of the gNB at this time. As illustrated in FIG. 65, the gNB performs LBT implementation (S6501). Note that the second LBT processing or the third LBT processing is performed in the LBT implementation S6501.

Then, the gNB determines whether a signal is detected by the LBT (S6502). In the case of the second example, the gNB can detect a signal by receive beam #2. Thus, it is "YES" in S6502.

Accordingly, the gNB "performs communication while performing the directional detection" (S6504). Details will be described later.

Note that, when the determination is NO after the process of S6502, the gNB "performs communication without performing the directional detection" (S6503).

(Third Example)

As the third example, the case where the gNB has the configuration in FIG. 54 will be described with reference to FIG. 62B.

It is assumed that the gNB with the configuration in FIG. 54 performs the second LBT (directional LBT) processing or the third LBT (LBT in which both omnidirectional LBT processing and directional LBT processing are performed) processing, and the gNB detects, for example, a signal of "TXSS, SSW ISS, a data frame, or the like" transmitted by a first standard apparatus as in FIG. 63. At that time, the gNB detects the signal transmitted by the first standard apparatus in receive beam #2.

Thus, the gNB does not perform communication by beam #2 as in FIG. 62B. Note that the directivity (direction) of beam #2 is the same as the directivity (direction) of receive beam #2, and the term "beam #2" collectively refers to a transmit beam and a receive beam. This has been described in detail in Embodiment 8, and the same can be implemented with the contents described in Embodiment 8.

In FIG. 62B, the gNB transmits a sector sweep reference signal using beam #2, but the following operation can also be performed when the gNB transmits a sector sweep reference signal using beam #2.

FIG. 65 illustrates an exemplary operation of the gNB at this time. As illustrated in FIG. 65, the gNB performs LBT implementation (S6501). Note that the second LBT processing or the third LBT processing is performed in the LBT implementation S6501.

Then, the gNB determines whether a signal is detected by the LBT (S6502). In the case of the third example, the gNB can detect a signal by receive beam #2. Thus, it is "YES" in S6502.

Accordingly, the gNB "performs communication while performing the directional detection" (S6504). Details will be described later.

Note that, when the determination is NO after the process of S6502, the gNB "performs communication without performing the directional detection" (S6503).

Next, "performing communication while performing the directional detection" S6504 by the gNB will be described.

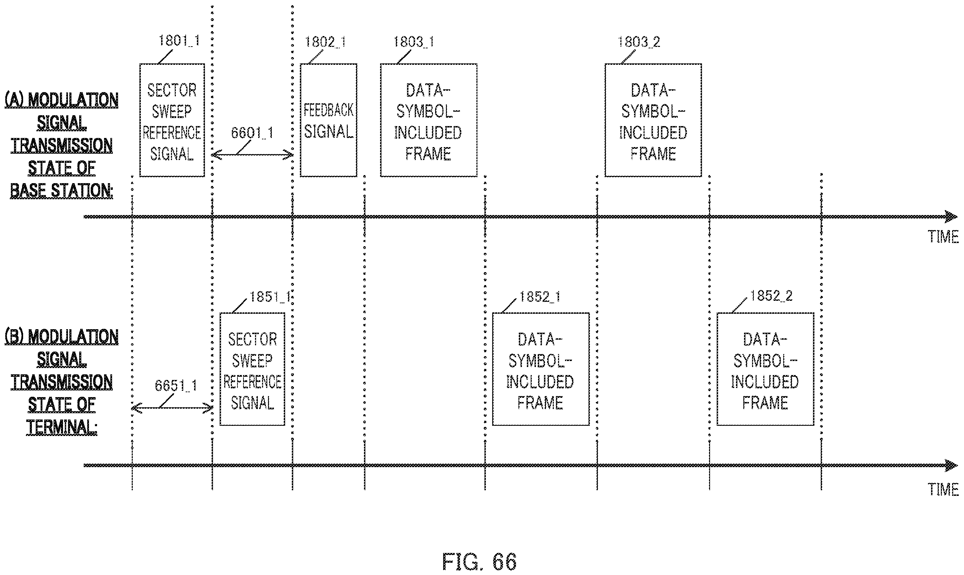

FIG. 66 illustrates exemplary transmission states of the gNB (i.e., base station) and the terminal (NR-UE), wherein (A) of FIG. 66 illustrates a modulation signal transmission state of the gNB, (B) of FIG. 66 illustrates a modulation signal transmission state of the NR-UE, and the horizontal axes represent time. In FIG. 66, the components that operate in the same manner as in FIG. 18 are denoted by the same reference signs, and the descriptions thereof will be omitted since they have already been described.

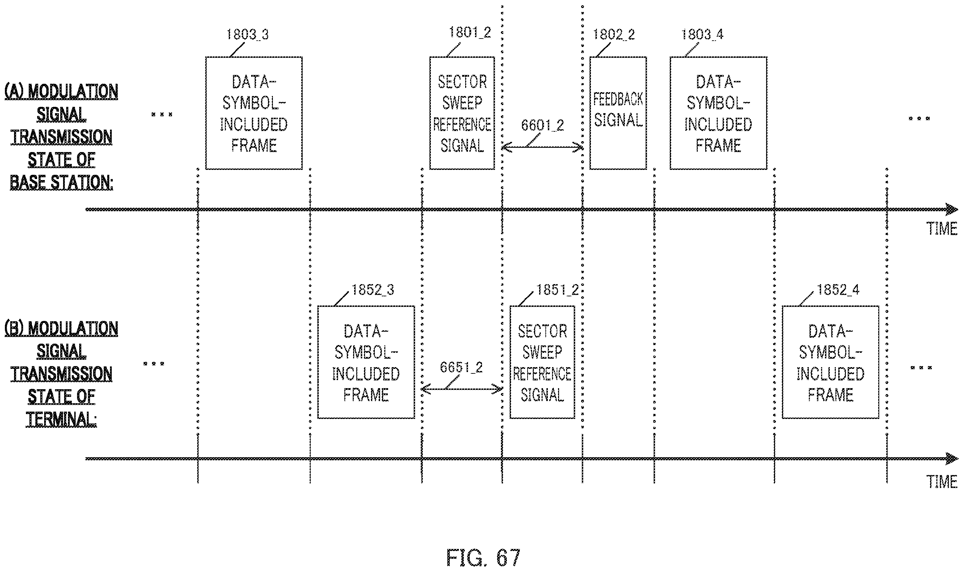

FIG. 67 illustrates exemplary transmission states of the gNB and NR-UE and illustrates transmission states after the states in FIG. 66. (A) of FIG. 67 illustrates a modulation signal transmission state of the gNB, (B) of FIG. 67 illustrates a modulation signal transmission state of the NR-UE, and the horizontal axes represent time. In FIG. 67, the components that operate in the same manner as in FIG. 19 are denoted by the same reference signs, and the descriptions thereof will be omitted since they have already been described.

For example, a reception period (listen period) for the directional detection by the gNB is placed in a period where the NR-UE transmits a sector sweep reference signal. Thus, reception periods (listen periods) for the directional detection by the gNB are placed in period 6601_1 in FIG. 66 and period 6601_2 in FIG. 67.

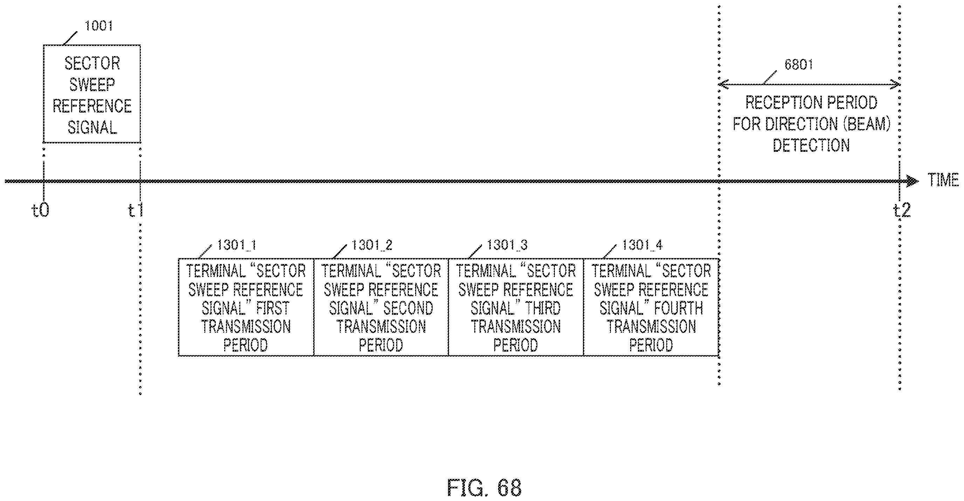

FIG. 68 illustrates an exemplary placement of the reception period (listen period) for the directional detection by the gNB placed in period 6601_1 in FIG. 66 and period 6601_2 in FIG. 67. Note that, in FIG. 68, the components that operate in the same manner as in FIG. 13 are denoted by the same reference signs, and the descriptions thereof will be omitted since they have already been described.

As illustrated in FIG. 68, "reception period 6801 for direction (beam) detection" is provided as the "reception period (listen period) for the directional detection by the gNB". Thus, the gNB performs direction (beam) detection in "reception period 6801 for direction (beam) detection".

In the case of the first example, the gNB determines whether it is possible to detect a signal (for direction (beam) detection) using transmission/reception panel antennas including at least "an antenna that is not used for communication, i.e., transmission/reception panel antenna 2 labeled x705_2".

When no signal is detected by transmission/reception panel antenna 2 labeled x705_2, the gNB determines that it is possible to start communication by transmission/reception panel antenna 2 labeled x705_2.

Meanwhile, when a signal is detected by transmission/reception panel antenna 2 labeled x705_2, the gNB continues suspending communication by transmission/reception panel antenna 2 labeled x705_2.

Note that, when the gNB does not transmit a sector sweep reference signal by transmission/reception panel antenna 2 labeled x705_2 as in FIG. 62A and no signal is detected by transmission/reception panel antenna 2 labeled x705_2 in "reception period 6801 for direction (beam) detection", the gNB starts transmitting a sector sweep reference signal by transmission/reception panel antenna 2 labeled x705_2.

Note that the start of transmission of a sector sweep reference signal may be applied to another embodiment.

In contrast, when a signal is detected by transmission/reception panel antenna 2 labeled x705_2 in "reception period 6801 for direction (beam) detection", the gNB continues suspending transmission of a sector sweep reference signal by transmission/reception panel antenna 2 labeled x705_2.

In the case of the second example, the gNB determines whether it is possible to detect a signal (for direction (beam) detection) using beams (directivities) including at least a "beam not used for communication, i.e., beam #2".

When no signal is detected using (receive) beam #2, the gNB determines that it is possible to start communication by beam #2.

Meanwhile, when a signal is detected using (receive) beam #2, the gNB continues suspending communication by beam #2.

Note that, when the gNB does not transmit a sector sweep reference signal by beam #2 as in FIG. 62B and no signal is detected by (receive) beam #2 in "reception period 6801 for direction (beam) detection", the gNB starts transmitting a sector sweep reference signal by beam #2.

Note that the start of transmission of a sector sweep reference signal may be applied to another embodiment.

In contrast, when a signal is detected by (receive) beam #2 in "reception period 6801 for direction (beam) detection", the gNB continues suspending transmission of a sector sweep reference signal by beam #2.

In the case of the third example, the gNB determines whether it is possible to detect a signal (for direction (beam) detection) using beams (directivities) including at least a "beam not used for communication, i.e., beam #2".

When no signal is detected using (receive) beam #2, the gNB determines that it is possible to start communication by beam #2.

Meanwhile, when a signal is detected using (receive) beam #2, the gNB continues suspending communication by beam #2.

Note that, when the gNB does not transmit a sector sweep reference signal by beam #2 as in FIG. 62B and no signal is detected by (receive) beam #2 in "reception period 6801 for direction (beam) detection", the gNB starts transmitting a sector sweep reference signal by beam #2.

Note that the start of transmission of a sector sweep reference signal may be applied to another embodiment.

In contrast, when a signal is detected by (receive) beam #2 in "reception period 6801 for direction (beam) detection", the gNB continues suspending transmission of a sector sweep reference signal by beam #2.

Next, a description will be given of an exemplary placement of the "reception period for direction (beam) detection" different from the above.

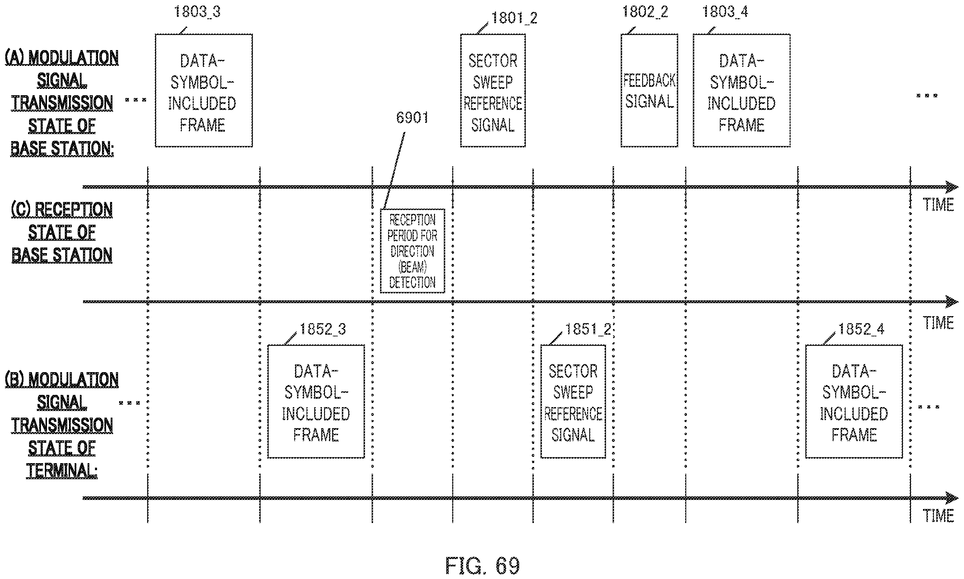

FIG. 69 illustrates exemplary transmission states of the gNB and NR-UE and illustrates transmission states after the states in FIG. 66. A reception state of the gNB (base station) is also illustrated in FIG. 69.

(A) of FIG. 69 illustrates a modulation signal transmission state of the gNB, (B) of FIG. 69 illustrates a modulation signal transmission state of the NR-UE, and the horizontal axes represent time. In (A) and (B) of FIG. 69, the components that operate in the same manner as in FIG. 19 are denoted by the same reference signs, and the descriptions thereof will be omitted since they have already been described. In addition, (C) of FIG. 69 illustrates a reception state of the gNB, and the horizontal axis represents time.

For example, "reception period for direction (beam) detection" 6901 is provided as the "reception period (listen period) for the directional detection by the gNB" as in FIG. 69.

Thus, the gNB performs direction (beam) detection in "reception period for direction (beam) detection" 6901.

In the case of the first example, the gNB determines whether it is possible to detect a signal (for direction (beam) detection) using transmission/reception panel antennas including at least an "antenna that is not used for communication, i.e., transmission/reception panel antenna 2 labeled x705_2".

When no signal is detected by transmission/reception panel antenna 2 labeled x705_2, the gNB determines that it is possible to start communication by transmission/reception panel antenna 2 labeled x705_2.

Meanwhile, when a signal is detected by transmission/reception panel antenna 2 labeled x705_2, the gNB continues suspending communication by transmission/reception panel antenna 2 labeled x705_2.

Note that, when the gNB does not transmit a sector sweep reference signal by transmission/reception panel antenna 2 labeled x705_2 as in FIG. 62A and no signal is detected by transmission/reception panel antenna 2 labeled x705_2 in "reception period for direction (beam) detection" 6901, the gNB starts transmitting a sector sweep reference signal by transmission/reception panel antenna 2 labeled x705_2.

Note that the start of transmission of a sector sweep reference signal may be applied to another embodiment.

In contrast, when a signal is detected by transmission/reception panel antenna 2 labeled x705_2 in "reception period for direction (beam) detection" 6901, the gNB continues suspending transmission of a sector sweep reference signal by transmission/reception panel antenna 2 labeled x705_2.

In the case of the second example, the gNB determines whether it is possible to detect a signal (for direction (beam) detection) using beams (directivities) including at least a "beam not used for communication, i.e., beam #2".

When no signal is detected using (receive) beam #2, the gNB determines that it is possible to start communication by beam #2.

Meanwhile, when a signal is detected using (receive) beam #2, the gNB continues suspending communication by beam #2.

Note that, when the gNB does not transmit a sector sweep reference signal by beam #2 as in FIG. 62B and no signal is detected by (receive) beam #2 in "reception period for direction (beam) detection" 6901, the gNB starts transmitting a sector sweep reference signal by beam #2.

Note that the start of transmission of a sector sweep reference signal may be applied to another embodiment.

In contrast, when a signal is detected by (receive) beam #2 in "reception period for direction (beam) detection" 6901, the gNB continues suspending transmission of a sector sweep reference signal by beam #2.

In the case of the third example, the gNB determines whether it is possible to detect a signal (for direction (beam) detection) using beams (directivities) including at least a "beam not used for communication, i.e., beam #2".

When no signal is detected using (receive) beam #2, the gNB determines that it is possible to start communication by beam #2.

Meanwhile, when a signal is detected using (receive) beam #2, the gNB continues suspending communication by beam #2.

Note that, when the gNB does not transmit a sector sweep reference signal by beam #2 as in FIG. 62B and no signal is detected by (receive) beam #2 in "reception period for direction (beam) detection" 6901, the gNB starts transmitting a sector sweep reference signal by beam #2.

Note that the start of transmission of a sector sweep reference signal may be applied to another embodiment.

In contrast, when a signal is detected by (receive) beam #2 in "reception period for direction (beam) detection" 6901, the gNB continues suspending transmission of a sector sweep reference signal by beam #2.

A description will be given of an exemplary placement of the "reception period for direction (beam) detection" different from that in FIG. 69.

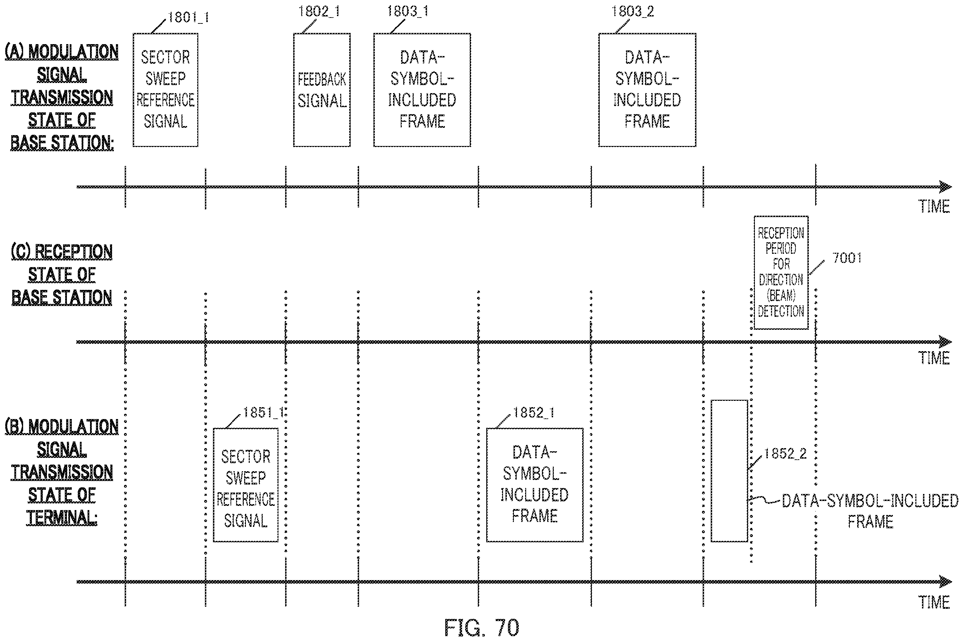

FIG. 70 illustrates exemplary transmission states of the gNB and NR-UE, and a reception state of the gNB (base station) is also illustrated in FIG. 70.

(A) of FIG. 70 illustrates a modulation signal transmission state of the gNB, (B) of FIG. 70 illustrates a modulation signal transmission state of the NR-UE, and the horizontal axes represent time. In (A) and (B) of FIG. 70, the components that operate in the same manner as in FIG. 18 are denoted by the same reference signs, and the descriptions thereof will be omitted since they have already been described. In addition, (C) of FIG. 70 illustrates a reception state of the gNB, and the horizontal axis represents time.

For example, the gNB uses a period in which the NR-UE transmits a data-symbol-included frame as the reception period (listen period) for the directional detection.

It is assumed that there is a period not assigned for transmission by the NR-UE in a period in which the NR-UE transmits a data-symbol-included frame. The reception period (listen period) for the directional detection by the gNB is placed in that period.

For example, as in FIG. 70, the reception period (listen period) for the directional detection by the gNB, i.e., "reception period for direction (beam) detection" 7001 is placed using an available period immediately after the NR-UE transmits data-symbol-included frame 1852_2.

The gNB performs direction (beam) detection in "reception period for direction (beam) detection" 7001.

In the case of the first example, the gNB determines whether it is possible to detect a signal (for direction (beam) detection) using transmission/reception panel antennas including at least an "antenna that is not used for communication, i.e., transmission/reception panel antenna 2 labeled x705_2".

When no signal is detected by transmission/reception panel antenna 2 labeled x705_2, the gNB determines that it is possible to start communication by transmission/reception panel antenna 2 labeled x705_2.

Meanwhile, when a signal is detected by transmission/reception panel antenna 2 labeled x705_2, the gNB continues suspending communication by transmission/reception panel antenna 2 labeled x705_2.

Note that, when the gNB does not transmit a sector sweep reference signal by transmission/reception panel antenna 2 labeled x705_2 as in FIG. 62A and no signal is detected by transmission/reception panel antenna 2 labeled x705_2 in "reception period for direction (beam) detection" 7001, the gNB starts transmitting a sector sweep reference signal by transmission/reception panel antenna 2 labeled x705_2.

Note that the start of transmission of a sector sweep reference signal may be applied to another embodiment.

In contrast, when a signal is detected by transmission/reception panel antenna 2 labeled x705_2 in "reception period for direction (beam) detection" 7001, the gNB continues suspending transmission of a sector sweep reference signal by transmission/reception panel antenna 2 labeled x705_2.

In the case of the second example, the gNB determines whether it is possible to detect a signal (for direction (beam) detection) using beams (directivities) including at least a "beam not used for communication, i.e., beam #2".

When no signal is detected using (receive) beam #2, the gNB determines that it is possible to start communication by beam #2.

Meanwhile, when a signal is detected using (receive) beam #2, the gNB continues suspending communication by beam #2.

Note that, when the gNB does not transmit a sector sweep reference signal by beam #2 as in FIG. 62B and no signal is detected by (receive) beam #2 in "reception period for direction (beam) detection" 7001, the gNB starts transmitting a sector sweep reference signal by beam #2.

Note that the start of transmission of a sector sweep reference signal may be applied to another embodiment.

In contrast, when a signal is detected by (receive) beam #2 in "reception period for direction (beam) detection" 7001, the gNB continues suspending transmission of a sector sweep reference signal by beam #2.

In the case of the third example, the gNB determines whether it is possible to detect a signal (for direction (beam) detection) using beams (directivities) including at least a "beam not used for communication, i.e., beam #2".

When no signal is detected using (receive) beam #2, the gNB determines that it is possible to start communication by beam #2.

Meanwhile, when a signal is detected using (receive) beam #2, the gNB continues suspending communication by beam #2.

Note that, when the gNB does not transmit a sector sweep reference signal by beam #2 as in FIG. 62B and no signal is detected by (receive) beam #2 in "reception period for direction (beam) detection" 7001, the gNB starts transmitting a sector sweep reference signal by beam #2.

Note that the start of transmission of a sector sweep reference signal may be applied to another embodiment.

In contrast, when a signal is detected by (receive) beam #2 in "reception period for direction (beam) detection" 7001, the gNB continues suspending transmission of a sector sweep reference signal by beam #2.

As described above, the gNB can increase the number of terminals to communicate by introducing a procedure for using an antenna and a beam that are not used as a result of LBT, thereby producing the effect of improving the data transmission rate of a system.

In addition, the direction (beam) detection by the gNB using a transmission period of the NR-UE as in FIGS. 67 and 70 facilitates efficient use of time (eliminates switching of transmission and reception), thereby enhancing data transmission efficiency of a system.

In the following, a variation related to the reception period for direction (beam) detection by the gNB will be described.

In FIG. 63, the gNB detects, for example, a signal of "TXSS, SSWISS, a data frame, or the like" transmitted by a first standard apparatus. It has been described that the gNB detects the signal transmitted by the first standard apparatus in receive beam #2 at that time.

Further, in FIG. 64, the gNB detects, for example, a signal of "TXSS, SSW ISS, a data frame, or the like" transmitted by a first standard apparatus. It has been described that the gNB detects the signal transmitted by the first standard apparatus in receive beam #9 at that time.

When the gNB detects a signal of "TXSS, SSW ISS, a data frame, or the like" transmitted by a first standard apparatus, however, the signal of "TXSS, SSW ISS, a data frame, or the like" is not always detected in a single receive beam, and the gNB possibly detects the signal of "TXSS, SSW ISS, a data frame, or the like" transmitted by the first standard apparatus in two or more receive beams.

In addition, the number of receive beams in which the gNB detects a signal of "TXSS, SSW ISS, a data frame, or the like" transmitted by a first standard apparatus varies depending on the communication state.

Since the number of beams required to detect a signal in "reception periods 6801, 6901, and 7001 for direction (beam) detection" varies depending on the communication state, it is preferable that the gNB can configure the time length (time resource) and/or the amount of frequency resources to be used of "reception periods 6801, 6901, and 7001 for direction (beam) detection".

At this time, the gNB needs to indicate the time length (time resource) and/or the amount of frequency resources to be used of "reception periods 6801, 6901, and 7001 for direction (beam) detection" to a terminal, which is a communication counterpart (because the terminal needs to know a frame configuration in time and frequency).

Thus, control information transmitted by the gNB includes "information on the time length (time resource) and/or the amount of frequency resources to be used of "reception periods 6801, 6901, and 7001 for direction (beam) detection" configured by the gNB", and transmitted to the NR-UE.

Then, the NR-UE obtains the control information including the "information on the time length (time resource) and/or the amount of frequency resources to be used of "reception periods 6801, 6901, and 7001 for direction (beam) detection" configured by the gNB", and this allows the NR-UE to know the timing, frequency, etc. for transmitting a modulation signal. The NR-UE can also know the timing, frequency, etc. of a modulation signal transmitted by the gNB, thereby allowing the NR-UE to communicate with the gNB. Thus, it is possible to enhance the data transmission rate and have the effect of facilitating efficient use of the frequency and time resources.

The "information on the time length (time resource) and/or the amount of frequency resources to be used of "reception periods 6801, 6901, and 7001 for direction (beam) detection" configured by the gNB" transmitted by the gNB is preferably included in, for example, a "sector sweep reference signal", "synchronization signals (SS) block", "physical broadcast channel (PBCH) block", "SS/PBCH block", "physical downlink control channel (PDCCH)", "broadcast channel (BCH)", "downlink shared channel (DL-SCH)", "paging channel (PCH)", and the like transmitted by the gNB.

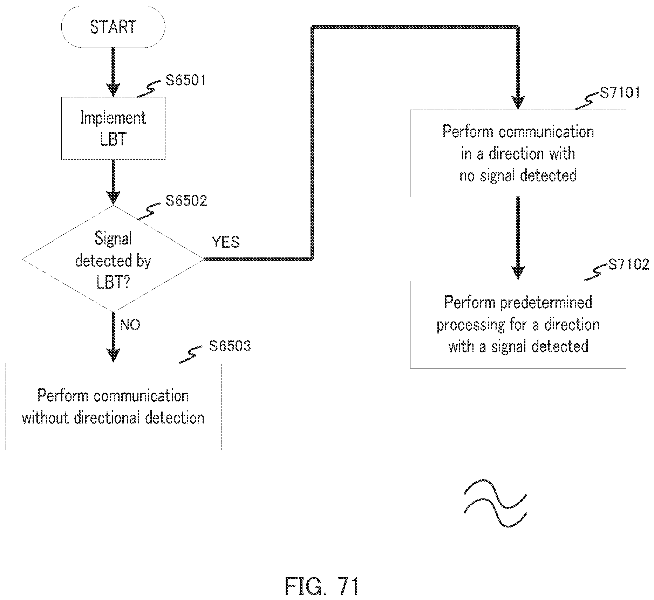

Next, a description will be given of FIG. 71, which is a variation of FIG. 65. FIG. 71 illustrates an exemplary operation of the gNB. In FIG. 71, the components that operate in the same manner as in FIG. 65 are denoted by the same reference signs, and the descriptions thereof will be omitted.

"When a signal is detected by LBT (YES in S6502)", the gNB "performs communication in a direction (beam) in which no signal is detected" (S7101). The gNB then "performs predetermined processing for a direction (beam) in which a signal is detected" (S7102). In the following, the predetermined processing at this time will be described.

In the case of the first example described above, in the step of "performing predetermined processing for a direction (beam) in which a signal is detected (S7102)" in FIG. 71, the gNB determines whether it is possible to detect a signal (for direction (beam) detection) using transmission/reception panel antennas including at least an "antenna that is not used for communication, i.e., transmission/reception panel antenna 2 labeled x705_2". In doing this, the gNb may control the time to detect a signal as follows, for example.

The gNb randomly generates a value (e.g., referred to as random backoff) from a predetermined range, and determines, based on the generated value, the time for "determining whether it is possible to detect a signal (for direction (beam) detection) using transmission/reception panel antennas including at least an "antenna that is not used for communication, i.e., transmission/reception panel antenna 2 labeled x705_2"".

When no signal is detected by transmission/reception panel antenna 2 labeled x705_2, the gNB determines that it is possible to start communication by transmission/reception panel antenna 2 labeled x705_2.

Meanwhile, when a signal is detected by transmission/reception panel antenna 2 labeled x705_2, the gNB continues suspending communication by transmission/reception panel antenna 2 labeled x705_2.

When a plurality of gNBs or NR-UEs are present, these apparatuses are more likely to start communication at the same time by the use of the random value as described above, and this increases the possibility of avoiding collision of modulation signals and improves communication quality.

As another method, the gNB may control the time for starting communication instead of controlling the time for "determining whether it is possible to detect a signal (for direction (beam) detection) using transmission/reception panel antennas including at least an "antenna that is not used for communication, i.e., transmission/reception panel antenna 2 labeled x705_2"".

For example, in the step of "performing predetermined processing for a direction (beam) in which a signal is detected (S7102)" in FIG. 71, the gNB regularly determines whether it is possible to detect a signal (for direction (beam) detection) using transmission/reception panel antennas including at least an "antenna that is not used for communication, i.e., transmission/reception panel antenna 2 labeled x705_2".

The gNB then randomly generates a value (e.g., referred to as random backoff) from a predetermined range, and determines the time for starting communication based on the generated value.

When no signal is detected by transmission/reception panel antenna 2 labeled x705_2, the gNB determines that it is possible to start communication by transmission/reception panel antenna 2 labeled x705_2, but the communication starting time is determined based on the generated value described above.

Meanwhile, when a signal is detected by transmission/reception panel antenna 2 labeled x705_2, the gNB continues suspending communication by transmission/reception panel antenna 2 labeled x705_2.

Even in this case, when a plurality of gNBs or NR-UEs are present, these apparatuses are more likely to start communication at the same time by the use of the random value, and this increases the possibility of avoiding collision of modulation signals and improves communication quality.

In the case of the second example described above, in the step of "performing predetermined processing for a direction (beam) in which a signal is detected (S7102)" in FIG. 71, the gNB determines whether it is possible to detect a signal (for direction (beam) detection) using beams (directivities) including at least a "beam that is not used for communication, i.e., beam #2". In doing this, the gNB may control the time to detect a signal as follows, for example.

The gNB randomly generates a value (e.g., referred to as random backoff) from a predetermined range, and determines, based on the generated value, the time for "determining whether it is possible to detect a signal (for direction (beam) detection) using beams (directivities) including at least a "beam that is not used for communication, i.e., beam #2"".

When no signal is detected using (receive) beam #2, the gNB determines that it is possible to start communication by beam #2.

Meanwhile, when a signal is detected using (receive) beam #2, the gNB continues suspending communication by beam #2.

When a plurality of gNBs or NR-UEs are present, these apparatuses are more likely to start communication at the same time by the use of the random value as described above, and this increases the possibility of avoiding collision of modulation signals and improves communication quality.

As another method, the gNB may control the time for starting communication instead of controlling the time for "determining whether it is possible to detect a signal (for direction (beam) detection) using beams (directivities) including at least a "beam that is not used for communication, i.e., beam #2"".

For example, in the step of "performing predetermined processing for a direction (beam) in which a signal is detected (S7102)" in FIG. 71, the gNB regularly determines whether it is possible to detect a signal (for direction (beam) detection) using beams (directivities) including at least a "beam that is not used for communication, i.e., beam #2".

The gNB then randomly generates a value (e.g., referred to as random backoff) from a predetermined range, and determines the time for starting communication based on the generated value.

Thus, when no signal is detected using (receive) beam #2, the gNB determines that it is possible to start communication by beam #2, but the communication starting time is determined based on the generated value described above.

Meanwhile, when a signal is detected using (receive) beam #2, the gNB continues suspending communication by beam #2.

Even in this case, when a plurality of gNBs or NR-UEs are present, these apparatuses are more likely to start communication at the same time by the use of the random value, and this increases the possibility of avoiding collision of modulation signals and improves communication quality.

In the case of the third example described above, in the step of "performing predetermined processing for a direction (beam) in which a signal is detected (S7102)" in FIG. 71, the gNB determines whether it is possible to detect a signal (for direction (beam) detection) using beams (directivities) including at least a "beam that is not used for communication, i.e., beam #2". In doing this, the gNB may control the time to detect a signal as follows, for example.

The gNB randomly generates a value (e.g., referred to as random backoff) from a predetermined range, and determines, based on the generated value, the time for "determining whether it is possible to detect a signal (for direction (beam) detection) using beams (directivities) including at least a "beam that is not used for communication, i.e., beam #2"".

When no signal is detected using (receive) beam #2, the gNB determines that it is possible to start communication by beam #2.

Meanwhile, when a signal is detected using (receive) beam #2, the gNB continues suspending communication by beam #2.

When a plurality of gNBs or NR-UEs are present, these apparatuses are more likely to start communication at the same time by the use of the random value as described above, and this increases the possibility of avoiding collision of modulation signals and improves communication quality.

As another method, the gNB may control the time for starting communication instead of controlling the time for "determining whether it is possible to detect a signal (for direction (beam) detection) using beams (directivities) including at least a "beam that is not used for communication, i.e., beam #2"".

For example, in the step of "performing predetermined processing for a direction (beam) in which a signal is detected (S7102)" in FIG. 71, the gNB regularly determines whether it is possible to detect a signal (for direction (beam) detection) using beams (directivities) including at least a "beam that is not used for communication, i.e., beam #2".

The gNB then randomly generates a value (e.g., referred to as random backoff) from a predetermined range, and determines the time for starting communication based on the generated value.

Thus, when no signal is detected using (receive) beam #2, the gNB determines that it is possible to start communication by beam #2, but the communication starting time is determined based on the generated value described above.

Meanwhile, when a signal is detected using (receive) beam #2, the gNB continues suspending communication by beam #2.

Even in this case, when a plurality of gNBs or NR-UEs are present, these apparatuses are more likely to start communication at the same time by the use of the random value, and this increases the possibility of avoiding collision of modulation signals and improves communication quality.

Note that, in the present embodiment, the frame configuration is described with the examples of FIGS. 66, 67, 68, 69, and 70, but these are merely examples, and the frame configuration is not limited to the examples. The frame configuration described in another embodiment may be combined, for example. In addition, the names of signals, frames, etc. in FIGS. 66, 67, 68, 69, and 70 are not limited to those in the drawings, and other names may be used.

The gNB performs LBT, and after that, performs once or more "the method where the gNB and NR-UE check whether a signal is present in a direction not used for communication after starting the communication, and when detecting a direction in which no signal is present, the gNB and NR-UE start communication by a beam corresponding to the direction" described in the present embodiment. Then, the gNB may perform LBT again and further perform once or more "the method where the gNB and NR-UE check whether a signal is present in a direction not used for communication after starting the communication, and when detecting a direction in which no signal is present, the gNB and NR-UE start communication by a beam corresponding to the direction" described in the present embodiment.

Note that the implementation order for the gNB to perform the LBT and ""the method where the gNB and NR-UE check whether a signal is present in a direction not used for communication after starting the communication, and when detecting a direction in which no signal is present, the gNB and NR-UE start communication by a beam corresponding to the direction" described in the present embodiment" and the number of times each processing is performed are not limited to the examples.

Additionally, in performing the directional detection in S6504 of FIG. 65, an NR apparatus may detect "a sector sweep signal and/or a signal related to sector sweep implementation", "a data frame", etc. transmitted by another NR apparatus.

In S7102 of FIG. 71, an NR apparatus may detect "a sector sweep signal and/or a signal related to sector sweep implementation", "a data frame", etc. transmitted by another NR apparatus.

Note that the processing described in the present embodiment or a part of the processing is performed by the transmission/reception apparatus in FIG. 53 or FIG. 54. The configurations of the gNB and NR-UE, however, are not limited to the configurations in FIGS. 53 and 54.

Further, the processing described in other than the present embodiment or a part of the processing is performed by the transmission/reception apparatus in FIG. 53 or FIG. 54. The configurations of the gNB and NR-UE, however, are not limited to the configurations in FIGS. 53 and 54.

(Embodiment 10)

In Embodiment 9, a description has been given of an exemplary operation in which the gNB checks whether a signal is present in a direction not used for communication, and when detecting a direction in which no signal is present, the gNB starts communication by a beam corresponding to the direction.

In Embodiment 10, a description will be given of an exemplary operation in which NU-UE (hereinafter, NR-UE that transmits a signal to a gNB is sometimes referred to as NU-UE. The NR-UE may be a repeater that transmits a signal to a gNB. Note that this is applicable to the entire specification.) checks whether a signal is present in a direction not used for communication, and when detecting a direction in which no signal is present, the NU-UE starts communication by a beam corresponding to the direction.

(Fourth Example)

As the fourth example, the case where the NU-UE has the configuration in FIG. 53 will be described with reference to FIG. 62A.

It is assumed that the gNB with the configuration in FIG. 53 performs the second LBT (directional LBT) processing or the third LBT (LBT in which both omnidirectional LBT processing and directional LBT processing are performed) processing. Note that the gNB is considered to be NU-UE in FIG. 64. The NU-UE detects, for example, a signal of "TXSS, SSW ISS, a data frame, or the like" transmitted by a first standard apparatus in FIG. 64. At that time, the NU-UE detects the signal transmitted by the first standard apparatus in receive beam #9. Note that receive beam #9 is a beam generated by transmission/reception panel antenna 2 labeled x705_2 in FIG. 53.

Thus, as in FIG. 62A, the NU-UE does not perform communication using transmission/reception panel antenna 2 labeled X705_2 in FIG. 53. Note that the NU-UE transmits a sector sweep reference signal using transmission/reception panel antenna 2 in FIG. 62A, but the following operation can also be performed when the NU-UE transmits a sector sweep reference signal using transmission/reception panel antenna 2.

FIG. 65 illustrates an exemplary operation of the NU-UE at this time. As illustrated in FIG. 65, the NU-UE performs LBT implementation (S6501). Note that the second LBT processing or the third LBT processing is performed in the LBT implementation S6501.

Then, the NU-UE determines whether a signal is detected by the LBT (S6502). In the case of the first example, the NU-UE can detect a signal by receive beam #9. Thus, it is "YES" in S6502.

Accordingly, the NU-UE "performs communication while performing the directional detection" (S6504). Details will be described later.

Note that, when the determination is NO after the process of S6502, the NU-UE "performs communication without performing the directional detection" (S6503).

(Fifth Example)

As the fifth example, the case where the NU-UE has the configuration in FIG. 53 will be described with reference to FIG. 62B.

It is assumed that the NU-UE with the configuration in FIG. 53 performs the second LBT (directional LBT) processing or the third LBT (LBT in which both omnidirectional LBT processing and directional LBT processing are performed) processing. Note that the gNB is considered to be the NU-UE in FIG. 63. The NU-UE detects, for example, a signal of "TXSS, SSW ISS, a data frame, or the like" transmitted by a first standard apparatus as in FIG. 63. At that time, the NU-UE detects the signal transmitted by the first standard apparatus in receive beam #2.

Thus, the NU-UE does not perform communication by beam #2 as in FIG. 62B. Note that the directivity (direction) of beam #2 is the same as the directivity (direction) of receive beam #2, and the term "beam #2" collectively refers to a transmit beam and a receive beam. This has been described in detail in Embodiment 8, and the same can be implemented with the contents described in Embodiment 8.

In FIG. 62B, the NU-UE transmits a sector sweep reference signal using beam #2, but the following operation can also be performed when the NU-UE transmits a sector sweep reference signal using beam #2.

FIG. 65 illustrates an exemplary operation of the NU-UE at this time. As illustrated in FIG. 65, the NU-UE performs LBT implementation (S6501). Note that the second LBT processing or the third LBT processing is performed in the LBT implementation S6501.

Then, the NU-UE determines whether a signal is detected by the LBT (S6502). In the case of the second example, the NU-UE can detect a signal by receive beam #2. Thus, it is "YES" in S6502.

Accordingly, the NU-UE "performs communication while performing the directional detection" (S6504). Details will be described later.

Note that, when the determination is NO after the process of S6502, the NU-UE "performs communication without performing the directional detection" (S6503).

(Sixth Example)

As the sixth example, the case where the NU-UE has the configuration in FIG. 54 will be described with reference to FIG. 62B.

It is assumed that the NU-UE with the configuration in FIG. 54 performs the second LBT (directional LBT) processing or the third LBT (LBT in which both omnidirectional LBT processing and directional LBT processing are performed) processing. Note that the gNB is considered to be the NU-UE in FIG. 63. The NU-UE detects, for example, a signal of "TXSS, SSW ISS, a data frame, or the like" transmitted by a first standard apparatus as in FIG. 63. At that time, the NU-UE detects the signal transmitted by the first standard apparatus in receive beam #2.

Thus, the NU-UE does not perform communication by beam #2 as in FIG. 62B. Note that the directivity (direction) of beam #2 is the same as the directivity (direction) of receive beam #2, and the term "beam #2" collectively refers to a transmit beam and a receive beam. This has been described in detail in Embodiment 8, and the same can be implemented with the contents described in Embodiment 8.

In FIG. 62B, the NU-UE transmits a sector sweep reference signal using beam #2, but the following operation can also be performed when the NU-UE transmits a sector sweep reference signal using beam #2.

FIG. 65 illustrates an exemplary operation of the NU-UE at this time. As illustrated in FIG. 65, the NU-UE performs LBT implementation (S6501). Note that the second LBT processing or the third LBT processing is performed in the LBT implementation S6501.

Then, the NU-UE determines whether a signal is detected by the LBT (S6502). In the case of the third example, the NU-UE can detect a signal by receive beam #2. Thus, it is "YES" in S6502.

Accordingly, the NU-UE "performs communication while performing the directional detection" (S6504). Details will be described later.

Note that, when the determination is NO after the process of S6502, the NU-UE "performs communication without performing the directional detection" (S6503).

Next, "performing communication while performing the directional detection" S6504 by the NU-UE will be described.

FIG. 66 illustrates exemplary transmission states of the gNB (i.e., base station) and the terminal (NR-UE), wherein (A) of FIG. 66 illustrates a modulation signal transmission state of the gNB, (B) of FIG. 66 illustrates a modulation signal transmission state of the NR-UE, and the horizontal axes represent time. In FIG. 66, the components that operate in the same manner as in FIG. 18 are denoted by the same reference signs, and the descriptions thereof will be omitted since they have already been described.

FIG. 67 illustrates exemplary transmission states of the gNB and NR-UE and illustrates transmission states after the states in FIG. 66. (A) of FIG. 67 illustrates a modulation signal transmission state of the gNB, (B) of FIG. 67 illustrates a modulation signal transmission state of the NR-UE, and the horizontal axes represent time. In FIG. 67, the components that operate in the same manner as in FIG. 19 are denoted by the same reference signs, and the descriptions thereof will be omitted since they have already been described.

For example, a reception period (listen period) for the directional detection by the NR-UE is placed in a period where the gNB transmits a sector sweep reference signal. Thus, reception periods (listen periods) for the directional detection by the NR-UE are placed in period 6651_1 in FIG. 66 and period 6651_2 in FIG. 67.

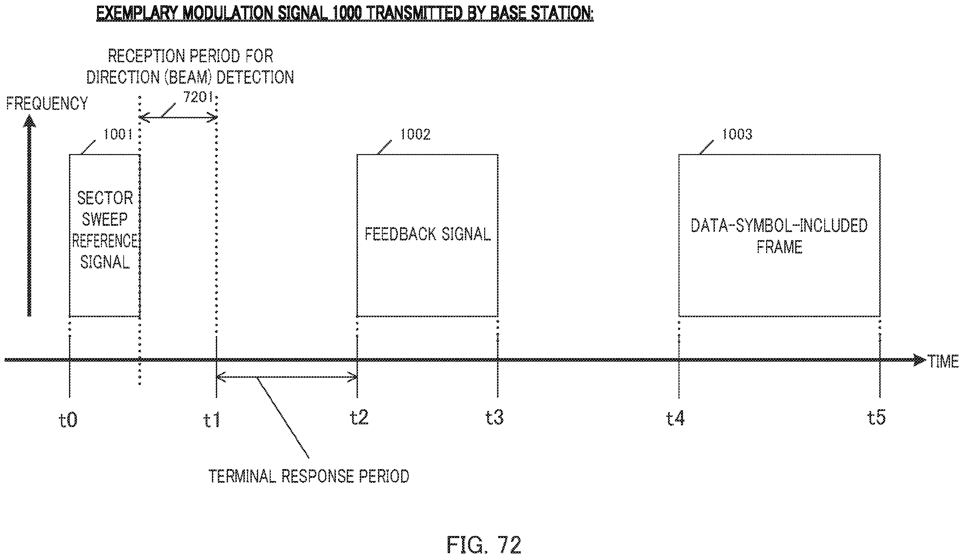

FIG. 72 illustrates an exemplary placement of the reception period (listen period) for the directional detection by the NR-UE placed in period 6651_1 in FIG. 66 and period 6651_2 in FIG. 67. Note that, in FIG. 72, the components that operate in the same manner as in FIG. 10 are denoted by the same reference signs, and the descriptions thereof will be omitted since they have already been described.

As illustrated in FIG. 72, "reception period 7201 for direction (beam) detection" is provided as the "reception period (listen period) for the directional detection by the NR-UE". Thus, the NR-UE performs direction (beam) detection in "reception period 7201 for direction (beam) detection".

In the case of the fourth example, the NR-UE determines whether it is possible to detect a signal (for direction (beam) detection) using transmission/reception panel antennas including at least "an antenna that is not used for communication, i.e., transmission/reception panel antenna 2 labeled x705_2". When no signal is detected by transmission/reception panel antenna 2 labeled x705_2, the NR-UE determines that it is possible to start communication by transmission/reception panel antenna 2 labeled x705_2.

Meanwhile, when a signal is detected by transmission/reception panel antenna 2 labeled x705_2, the NR-UE continues suspending communication by transmission/reception panel antenna 2 labeled x705_2.

Note that, when the NR-UE does not transmit a sector sweep reference signal by transmission/reception panel antenna 2 labeled x705_2 as in FIG. 62A and no signal is detected by transmission/reception panel antenna 2 labeled x705_2 in "reception period 7201 for direction (beam) detection", the NR-UE starts transmitting a sector sweep reference signal by transmission/reception panel antenna 2 labeled x705_2.

Note that the start of transmission of a sector sweep reference signal may be applied to another embodiment.

In contrast, when a signal is detected by transmission/reception panel antenna 2 labeled x705_2 in "reception period 7201 for direction (beam) detection", the NR-UE continues suspending transmission of a sector sweep reference signal by transmission/reception panel antenna 2 labeled x705_2.

In the case of the fifth example, the NR-UE determines whether it is possible to detect a signal (for direction (beam) detection) using beams (directivities) including at least a "beam not used for communication, i.e., beam #2".

When no signal is detected using (receive) beam #2, the NR-UE determines that it is possible to start communication by beam #2.

Meanwhile, when a signal is detected using (receive) beam #2, the NR-UE continues suspending communication by beam #2.

Note that, when the NR-UE does not transmit a sector sweep reference signal by beam #2 as in FIG. 62B and no signal is detected by (receive) beam #2 in "reception period 7201 for direction (beam) detection", the NR-UE starts transmitting a sector sweep reference signal by beam #2.

Note that the start of transmission of a sector sweep reference signal may be applied to another embodiment.

In contrast, when a signal is detected by (receive) beam #2 in "reception period 7201 for direction (beam) detection", the NR-UE continues suspending transmission of a sector sweep reference signal by beam #2.

In the case of the sixth example, the NR-UE determines whether it is possible to detect a signal (for direction (beam) detection) using beams (directivities) including at least a "beam not used for communication, i.e., beam #2".

When no signal is detected using (receive) beam #2, the NR-UE determines that it is possible to start communication by beam #2.

Meanwhile, when a signal is detected using (receive) beam #2, the NR-UE continues suspending communication by beam #2.

Note that, when the NR-UE does not transmit a sector sweep reference signal by beam #2 as in FIG. 62B and no signal is detected by (receive) beam #2 in "reception period 7201 for direction (beam) detection", the NR-UE starts transmitting a sector sweep reference signal by beam #2.

Note that the start of transmission of a sector sweep reference signal may be applied to another embodiment.

In contrast, when a signal is detected by (receive) beam #2 in "reception period 7201 for direction (beam) detection", the NR-UE continues suspending transmission of a sector sweep reference signal by beam #2.

Next, a description will be given of an exemplary placement of the "reception period for direction (beam) detection" different from the above.

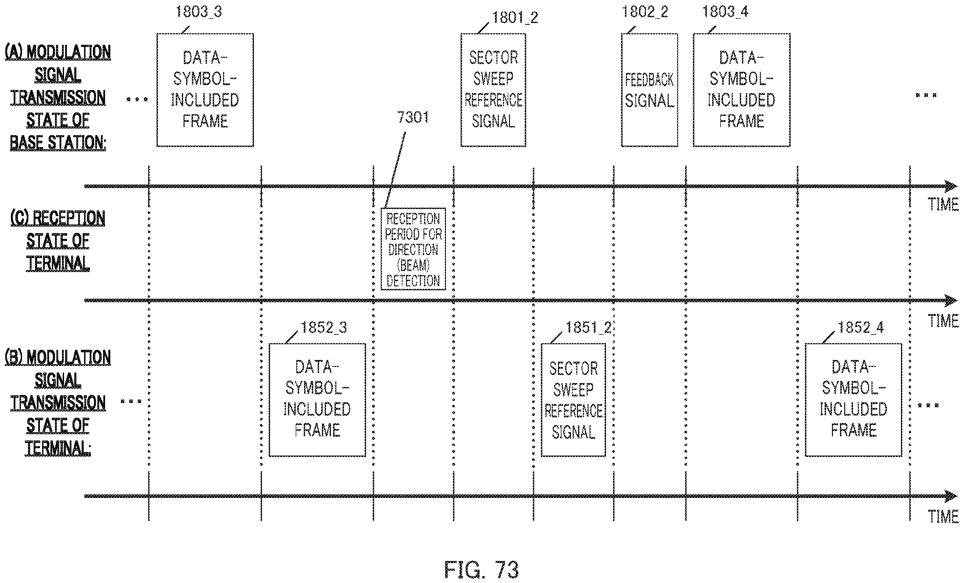

FIG. 73 illustrates exemplary transmission states of the gNB and NR-UE and illustrates transmission states after the states in FIG. 66. A reception state of the NR-UE is also illustrated in FIG. 73.

(A) of FIG. 73 illustrates a modulation signal transmission state of the gNB, (B) of FIG. 73 illustrates a modulation signal transmission state of the NR-UE, and the horizontal axes represent time. In (A) and (B) of FIG. 73, the components that operate in the same manner as in FIG. 19 are denoted by the same reference signs, and the descriptions thereof will be omitted since they have already been described. In addition, (C) of FIG. 73 illustrates a reception state of the NR-UE, and the horizontal axis represents time.

For example, "reception period for direction (beam) detection" 7301 is provided as the "reception period (listen period) for the directional detection by the NR-UE" as in FIG. 73.

Thus, the NR-UE performs direction (beam) detection in "reception period for direction (beam) detection" 7301.

In the case of the fourth example, the NR-UE determines whether it is possible to detect a signal (for direction (beam) detection) using transmission/reception panel antennas including at least an "antenna that is not used for communication, i.e., transmission/reception panel antenna 2 labeled x705_2".

When no signal is detected by transmission/reception panel antenna 2 labeled x705_2, the NR-UE determines that it is possible to start communication by transmission/reception panel antenna 2 labeled x705_2.

Meanwhile, when a signal is detected by transmission/reception panel antenna 2 labeled x705_2, the NR-UE continues suspending communication by transmission/reception panel antenna 2 labeled x705_2.

Note that, when the NR-UE does not transmit a sector sweep reference signal by transmission/reception panel antenna 2 labeled x705_2 as in FIG. 62A and no signal is detected by transmission/reception panel antenna 2 labeled x705_2 in "reception period for direction (beam) detection" 7301, the NR-UE starts transmitting a sector sweep reference signal by transmission/reception panel antenna 2 labeled x705_2.

Note that the start of transmission of a sector sweep reference signal may be applied to another embodiment.

In contrast, when a signal is detected by transmission/reception panel antenna 2 labeled x705_2 in "reception period for direction (beam) detection" 7301, the NR-UE continues suspending transmission of a sector sweep reference signal by transmission/reception panel antenna 2 labeled x705_2.

In the case of the fifth example, the NR-UE determines whether it is possible to detect a signal (for direction (beam) detection) using beams (directivities) including at least a "beam not used for communication, i.e., beam #2".

When no signal is detected using (receive) beam #2, the NR-UE determines that it is possible to start communication by beam #2.

Meanwhile, when a signal is detected using (receive) beam #2, the NR-UE continues suspending communication by beam #2.

Note that, when the NR-UE does not transmit a sector sweep reference signal by beam #2 as in FIG. 62B and no signal is detected by (receive) beam #2 in "reception period for direction (beam) detection" 7301, the NR-UE starts transmitting a sector sweep reference signal by beam #2.

Note that the start of transmission of a sector sweep reference signal may be applied to another embodiment.

In contrast, when a signal is detected by (receive) beam #2 in "reception period for direction (beam) detection" 7301, the NR-UE continues suspending transmission of a sector sweep reference signal by beam #2.

In the case of the sixth example, the NR-UE determines whether it is possible to detect a signal (for direction (beam) detection) using beams (directivities) including at least a "beam not used for communication, i.e., beam #2".

When no signal is detected using (receive) beam #2, the NR-UE determines that it is possible to start communication by beam #2.

Meanwhile, when a signal is detected using (receive) beam #2, the NR-UE continues suspending communication by beam #2.

Note that, when the NR-UE does not transmit a sector sweep reference signal by beam #2 as in FIG. 62B and no signal is detected by (receive) beam #2 in "reception period for direction (beam) detection" 7301, the NR-UE starts transmitting a sector sweep reference signal by beam #2.

Note that the start of transmission of a sector sweep reference signal may be applied to another embodiment.

In contrast, when a signal is detected by (receive) beam #2 in "reception period for direction (beam) detection" 7301, the NR-UE continues suspending transmission of a sector sweep reference signal by beam #2.

A description will be given of an exemplary placement of the "reception period for direction (beam) detection" different from that in FIG. 73.

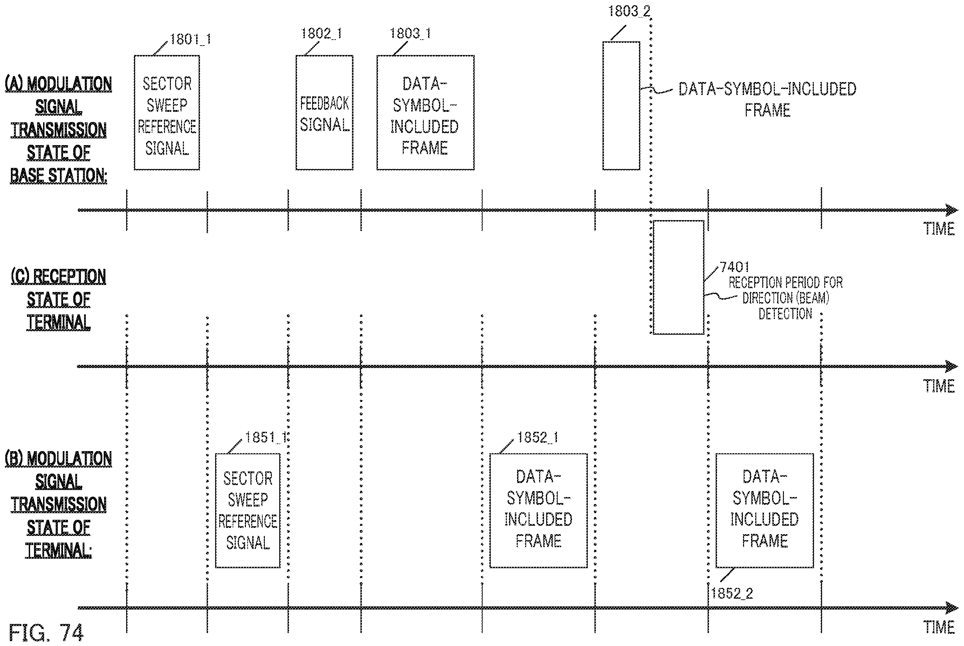

FIG. 74 illustrates exemplary transmission states of the gNB and NR-UE, and a reception state of the NR-UE is also illustrated in FIG. 74.

(A) of FIG. 74 illustrates a modulation signal transmission state of the gNB, (B) of FIG. 74 illustrates a modulation signal transmission state of the NR-UE, and the horizontal axes represent time. In (A) and (B) of FIG. 74, the components that operate in the same manner as in FIG. 18 are denoted by the same reference signs, and the descriptions thereof will be omitted since they have already been described. In addition, (C) of FIG. 74 illustrates a reception state of the NR-UE, and the horizontal axis represents time.

For example, the NR-UE uses a period in which the gNB transmits a data-symbol-included frame as the reception period (listen period) for the directional detection.

It is assumed that there is a period not assigned for transmission by the gNB in a period in which the gNB transmits a data-symbol-included frame. The reception period (listen period) for the directional detection by the NR-UE is placed in that period.

For example, as in FIG. 74, the reception period (listen period) for the directional detection by the gNB, i.e., "reception period for direction (beam) detection" 7401 is placed using an available period immediately after the gNB transmits data-symbol-included frame 1803_2.

The NR-UE performs direction (beam) detection in "reception period for direction (beam) detection" 7401.

In the case of the fourth example, the NR-UE determines whether it is possible to detect a signal (for direction (beam) detection) using transmission/reception panel antennas including at least an "antenna that is not used for communication, i.e., transmission/reception panel antenna 2 labeled x705_2". When no signal is detected by transmission/reception panel antenna 2 labeled x705_2, the NR-UE determines that it is possible to start communication by transmission/reception panel antenna 2 labeled x705_2.

Meanwhile, when a signal is detected by transmission/reception panel antenna 2 labeled x705_2, the NR-UE continues suspending communication by transmission/reception panel antenna 2 labeled x705_2.

Note that, when the NR-UE does not transmit a sector sweep reference signal by transmission/reception panel antenna 2 labeled x705_2 as in FIG. 62A and no signal is detected by transmission/reception panel antenna 2 labeled x705_2 in "reception period for direction (beam) detection" 7401, the NR-UE starts transmitting a sector sweep reference signal by transmission/reception panel antenna 2 labeled x705_2.

Note that the start of transmission of a sector sweep reference signal may be applied to another embodiment.

In contrast, when a signal is detected by transmission/reception panel antenna 2 labeled x705_2 in "reception period for direction (beam) detection" 7401, the NR-UE continues suspending transmission of a sector sweep reference signal by transmission/reception panel antenna 2 labeled x705_2.

In the case of the fifth example, the NR-UE determines whether it is possible to detect a signal (for direction (beam) detection) using beams (directivities) including at least a "beam not used for communication, i.e., beam #2".

When no signal is detected using (receive) beam #2, the NR-UE determines that it is possible to start communication by beam #2.

Meanwhile, when a signal is detected using (receive) beam #2, the NR-UE continues suspending communication by beam #2.

Note that, when the NR-UE does not transmit a sector sweep reference signal by beam #2 as in FIG. 62B and no signal is detected by (receive) beam #2 in "reception period for direction (beam) detection" 7401, the NR-UE starts transmitting a sector sweep reference signal by beam #2.

Note that the start of transmission of a sector sweep reference signal may be applied to another embodiment.

In contrast, when a signal is detected by (receive) beam #2 in "reception period for direction (beam) detection" 7401, the NR-UE continues suspending transmission of a sector sweep reference signal by beam #2.

In the case of the sixth example, the NR-UE determines whether it is possible to detect a signal (for direction (beam) detection) using beams (directivities) including at least a "beam not used for communication, i.e., beam #2".

When no signal is detected using (receive) beam #2, the NR-UE determines that it is possible to start communication by beam #2.

Meanwhile, when a signal is detected using (receive) beam #2, the NR-UE continues suspending communication by beam #2.

Note that, when the NR-UE does not transmit a sector sweep reference signal by beam #2 as in FIG. 62B and no signal is detected by (receive) beam #2 in "reception period for direction (beam) detection" 7401, the NR-UE starts transmitting a sector sweep reference signal by beam #2.

Note that the start of transmission of a sector sweep reference signal may be applied to another embodiment.

In contrast, when a signal is detected by (receive) beam #2 in "reception period for direction (beam) detection" 7401, the NR-UE continues suspending transmission of a sector sweep reference signal by beam #2.

As described above, the NR-UE can increase the number of communication opportunities by introducing a procedure for using an antenna and a beam that are not used as a result of LBT, thereby producing the effect of improving the data transmission rate of a system.

In addition, the direction (beam) detection by the NR-UE using a transmission period of the gNB as in FIGS. 67 and 74 facilitates efficient use of time (eliminates switching of transmission and reception), thereby enhancing data transmission efficiency of a system.

In the following, a variation related to the reception period for direction (beam) detection by the NR-UE will be described.

In FIG. 63, the NR-UE detects, for example, a signal of "TXSS, SSW ISS, a data frame, or the like" transmitted by a first standard apparatus. It has been described that the gNB detects the signal transmitted by the first standard apparatus in receive beam #2 at that time.

Further, in FIG. 64, the NR-UE detects, for example, a signal of "TXSS, SSW ISS, a data frame, or the like" transmitted by a first standard apparatus. It has been described that the NR-UE detects the signal transmitted by the first standard apparatus in receive beam #9 at that time.

When the NR-UE detects a signal of "TXSS, SSW ISS, a data frame, or the like" transmitted by a first standard apparatus, however, the signal of "TXSS, SSW ISS, a data frame, or the like" is not always detected in a single receive beam, and the NR-UE possibly detects the signal of "TXSS, SSW ISS, a data frame, or the like" transmitted by the first standard apparatus in two or more receive beams.

In addition, the number of receive beams in which the NR-UE detects a signal of "TXSS, SSW ISS, a data frame, or the like" transmitted by a first standard apparatus varies depending on the communication state.

Since the number of beams required to detect a signal in "reception periods 7201, 7301, and 7401 for direction (beam) detection" varies depending on the communication state, it is preferable that the NR-UE can configure the time length (time resource) and/or the amount of frequency resources to be used of "reception periods 7201, 7301, and 7401 for direction (beam) detection".

At this time, the NR-UE needs to indicate the time length (time resource) and/or the amount of frequency resources to be used of "reception periods 7201, 7301, and 7401 for direction (beam) detection" to a gNB, which is a communication counterpart (because the gNB needs to know a frame configuration in time and frequency).

Thus, control information transmitted by the NR-UE includes "information on the time length (time resource) and/or the amount of frequency resources to be used of "reception periods 7201, 7301, and 7401 for direction (beam) detection" configured by the NR-UE", and transmitted to the gNB.

Then, the gNB obtains the control information including the "information on the time length (time resource) and/or the amount of frequency resources to be used of "reception periods 7201, 7301, and 7401 for direction (beam) detection" configured by the NR-UE", and this allows the gNB to know the timing, frequency, etc. for transmitting a modulation signal. The gNB can also know the timing, frequency, etc. of a modulation signal transmitted by the gNB, thereby allowing the gNB to communicate with the NR-UE. Thus, it is possible to enhance the data transmission rate and have the effect of facilitating efficient use of the frequency and time resources.

At this time, the "information of the time length (time resource) and/or the amount of frequency resources to be used of "reception periods 6801, 6901, and 7001 for direction (beam) detection" configured by the gNB" transmitted by the NR-UE is preferably included in, for example, a "sector sweep reference signal", "uplink shared channel (UL-SCH)", "random access channel (RACH)", "physical random access channel (PRACH)", "physical uplink control channel (PUCCH)", and the like transmitted by the NR-UE.

As another method, the NR-UE transmits, to the gNB as a communication counterpart, request information of the time length (time resource) and/or the amount of frequency resources to be used of "reception periods 7201, 7301, and 7401 for direction (beam) detection".

The gNB obtains the request information, determines, based on the request information, the time length (time resource) and/or the amount of frequency resources to be used of "reception periods 7201, 7301, and 7401 for direction (beam) detection" configured by the NR-UE, and transmits, to the NR-UE, the determined information of the time length (time resource) and/or the amount of frequency resources to be used of "reception periods 7201, 7301, and 7401 for direction (beam) detection".

The NR-UE changes the time length (time resource) and/or the amount of frequency resources to be used of "reception periods 7201, 7301, and 7401 for direction (beam) detection" based on the information of the time length (time resource) and/or the amount of frequency resources to be used of "reception periods 7201, 7301, and 7401 for direction (beam) detection" transmitted by the gNB. This enhances the data transmission rate and produces the effect of facilitating efficient use of the frequency and time resources.

At this time, the request information of the time length (time resource) and/or the amount of frequency resources to be used of "reception periods 7201, 7301, and 7401 for direction (beam) detection" transmitted by the NR-UE is preferably included in, for example, a "sector sweep reference signal", "uplink shared channel (UL-SCH)", "random access channel (RACH)", "physical random access channel (PRACH)", "physical uplink control channel (PUCCH)", and the like transmitted by the NR-UE.

The information of the time length (time resource) and/or the amount of frequency resources to be used of "reception periods 7201, 7301, and 7401 for direction (beam) detection" transmitted by the gNB is preferably included in, for example, a "sector sweep reference signal", "synchronization signals (SS) block", "physical broadcast channel (PBCH) block", "SS/PBCH block", "physical downlink control channel (PDCCH)", "broadcast channel (BCH)", "downlink shared channel (DL-SCH)", "paging channel (PCH)", and the like transmitted by the gNB.

Next, a description will be given of FIG. 71, which is a variation of FIG. 65. FIG. 71 illustrates an exemplary operation of the NR-UE. In FIG. 71, the components that operate in the same manner as in FIG. 65 are denoted by the same reference signs, and the descriptions thereof will be omitted.

"When a signal is detected by LBT (YES in S6502)", the NR-UE "performs communication in a direction (beam) in which no signal is detected (S7101)". The NR-UE then "performs predetermined processing for a direction (beam) in which a signal is detected (S7102)". In the following, the predetermined processing at this time will be described.

In the case of the fourth example described above, in the step of "performing predetermined processing for a direction (beam) in which a signal is detected (S7102)" in FIG. 71, the NR-UE determines whether it is possible to detect a signal (for direction (beam) detection) using transmission/reception panel antennas including at least an "antenna that is not used for communication, i.e., transmission/reception panel antenna 2 labeled x705_2". In doing this, the NR-UE may control the time to detect a signal as follows, for example.

The NR-UE randomly generates a value (e.g., referred to as random backoff) from a predetermined range, and determines, based on the generated value, the time for "determining whether it is possible to detect a signal (for direction (beam) detection) using transmission/reception panel antennas including at least an "antenna that is not used for communication, i.e., transmission/reception panel antenna 2 labeled x705_2"".

When no signal is detected by transmission/reception panel antenna 2 labeled x705_2, the NR-UE determines that it is possible to start communication by transmission/reception panel antenna 2 labeled x705_2.

Meanwhile, when a signal is detected by transmission/reception panel antenna 2 labeled x705_2, the NR-UE continues suspending communication by transmission/reception panel antenna 2 labeled x705_2.

When a plurality of gNBs or NR-UEs are present, these apparatuses are more likely to start communication at the same time by the use of the random value as described above, and this increases the possibility of avoiding collision of modulation signals and improves communication quality.

As another method, the NR-UE may control the time for starting communication instead of controlling the time for "determining whether it is possible to detect a signal (for direction (beam) detection) using transmission/reception panel antennas including at least an "antenna that is not used for communication, i.e., transmission/reception panel antenna 2 labeled x705_2"".

For example, in the step of "performing predetermined processing for a direction (beam) in which a signal is detected (S7102)" in FIG. 71, the NR-UE regularly determines whether it is possible to detect a signal (for direction (beam) detection) using transmission/reception panel antennas including at least an "antenna that is not used for communication, i.e., transmission/reception panel antenna 2 labeled x705_2".

The NR-UE then randomly generates a value (e.g., referred to as random backoff) from a predetermined range, and determines the time for starting communication based on the generated value.

When no signal is detected by transmission/reception panel antenna 2 labeled x705_2, the NR-UE determines that it is possible to start communication by transmission/reception panel antenna 2 labeled x705_2, but the communication starting time is determined based on the generated value described above.

Meanwhile, when a signal is detected by transmission/reception panel antenna 2 labeled x705_2, the NR-UE continues suspending communication by transmission/reception panel antenna 2 labeled x705_2.

Even in this case, when a plurality of gNBs or NR-UEs are present, these apparatuses are more likely to start communication at the same time by the use of the random value, and this increases the possibility of avoiding collision of modulation signals and improves communication quality.

In the case of the fifth example described above, in the step of "performing predetermined processing for a direction (beam) in which a signal is detected (S7102)" in FIG. 71, the NR-UE determines whether it is possible to detect a signal (for direction (beam) detection) using beams (directivities) including at least a "beam that is not used for communication, i.e., beam #2". In doing this, the NR-UE may control the time to detect a signal as follows, for example.

The NR-UE randomly generates a value (e.g., referred to as random backoff) from a predetermined range, and determines, based on the generated value, the time for "determining whether it is possible to detect a signal (for direction (beam) detection) using beams (directivities) including at least a "beam that is not used for communication, i.e., beam #2"".

When no signal is detected using (receive) beam #2, the NR-UE determines that it is possible to start communication by beam #2.

Meanwhile, when a signal is detected using (receive) beam #2, the NR-UE continues suspending communication by beam #2.

When a plurality of gNBs or NR-UEs are present, these apparatuses are more likely to start communication at the same time by the use of the random value as described above, and this increases the possibility of avoiding collision of modulation signals and improves communication quality.

As another method, the NR-UE may control the time for starting communication instead of controlling the time for "determining whether it is possible to detect a signal (for direction (beam) detection) using beams (directivities) including at least a "beam that is not used for communication, i.e., beam #2"".

For example, in the step of "performing predetermined processing for a direction (beam) in which a signal is detected (S7102)" in FIG. 71, the NR-UE regularly determines whether it is possible to detect a signal (for direction (beam) detection) using beams (directivities) including at least a "beam that is not used for communication, i.e., beam #2".

The NR-UE then randomly generates a value (e.g., referred to as random backoff) from a predetermined range, and determines the time for starting communication based on the generated value.

Thus, when no signal is detected using (receive) beam #2, the NR-UE determines that it is possible to start communication by beam #2, but the communication starting time is determined based on the generated value described above.

Meanwhile, when a signal is detected using (receive) beam #2, the NR-UE continues suspending communication by beam #2.

Even in this case, when a plurality of gNBs or NR-UEs are present, these apparatuses are more likely to start communication at the same time by the use of the random value, and this increases the possibility of avoiding collision of modulation signals and improves communication quality.

In the case of the sixth example described above, in the step of "performing predetermined processing for a direction (beam) in which a signal is detected (S7102)" in FIG. 71, the NR-UE determines whether it is possible to detect a signal (for direction (beam) detection) using beams (directivities) including at least a "beam that is not used for communication, i.e., beam #2". In doing this, the NR-UE may control the time to detect a signal as follows, for example.

The NR-UE randomly generates a value (e.g., referred to as random backoff) from a predetermined range, and determines, based on the generated value, the time for "determining whether it is possible to detect a signal (for direction (beam) detection) using beams (directivities) including at least a "beam that is not used for communication, i.e., beam #2"".

When no signal is detected using (receive) beam #2, the NR-UE determines that it is possible to start communication by beam #2. Meanwhile, when a signal is detected using (receive) beam #2, the NR-UE continues suspending communication by beam #2.

When a plurality of gNBs or NR-UEs are present, these apparatuses are more likely to start communication at the same time by the use of the random value as described above, and this increases the possibility of avoiding collision of modulation signals and improves communication quality.

As another method, the NR-UE may control the time for starting communication instead of controlling the time for "determining whether it is possible to detect a signal (for direction (beam) detection) using beams (directivities) including at least a "beam that is not used for communication, i.e., beam #2"".

For example, in the step of "performing predetermined processing for a direction (beam) in which a signal is detected (S7102)" in FIG. 71, the NR-UE regularly determines whether it is possible to detect a signal (for direction (beam) detection) using beams (directivities) including at least a "beam that is not used for communication, i.e., beam #2".

The NR-UE then randomly generates a value (e.g., referred to as random backoff) from a predetermined range, and determines the time for starting communication based on the generated value.

Thus, when no signal is detected using (receive) beam #2, the NR-UE determines that it is possible to start communication by beam #2, but the communication starting time is determined based on the generated value described above.

Meanwhile, when a signal is detected using (receive) beam #2, the NR-UE continues suspending communication by beam #2.

Even in this case, when a plurality of gNBs or NR-UEs are present, these apparatuses are more likely to start communication at the same time by the use of the random value, and this increases the possibility of avoiding collision of modulation signals and improves communication quality.

Note that, in the present embodiment, the frame configuration is described with the examples of FIGS. 66, 67, 72, 73, and 74, but these are merely examples, and the frame configuration is not limited to the examples. The frame configuration described in another embodiment may be combined, for example. In addition, the names of signals, frames, etc. in FIGS. 66, 67, 72, 73, and 74 are not limited to those in the drawings, and other names may be used.

The NR-UE performs LBT, and after that, performs once or more "the method where the gNB and NR-UE check whether a signal is present in a direction not used for communication after starting the communication, and when detecting a direction in which no signal is present, the gNB and NR-UE start communication by a beam corresponding to the direction" described in the present embodiment. Then, the NR-UE may perform LBT again and further perform once or more "the method where the gNB and NR-UE check whether a signal is present in a direction not used for communication after starting the communication, and when detecting a direction in which no signal is present, the gNB and NR-UE start communication by a beam corresponding to the direction" described in the present embodiment.

Note that the implementation order for the NR-UE to perform the LBT and ""the method where the gNB and NR-UE check whether a signal is present in a direction not used for communication after starting the communication, and when detecting a direction in which no signal is present, the gNB and NR-UE start communication by a beam corresponding to the direction" described in the present embodiment" and the number of times each processing is performed are not limited to the examples.

Additionally, in performing the directional detection in S6504 of FIG. 65, an NR apparatus may detect "a sector sweep signal and/or a signal related to sector sweep implementation", "a data frame", etc. transmitted by another NR apparatus.

In S7102 of FIG. 71, an NR apparatus may detect "a sector sweep signal and/or a signal related to sector sweep implementation", "a data frame", etc. transmitted by another NR apparatus.

Note that the processing described in the present embodiment or a part of the processing is performed by the transmission/reception apparatus in FIG. 53 or FIG. 54. The configurations of the gNB and NR-UE, however, are not limited to the configurations in FIGS. 53 and 54.

(Embodiment 11)

In Embodiments 8 and 9, descriptions have been given of the first LBT (omni-directional LBT) processing, the second LBT (directional LBT) processing, and the third LBT (LBT in which both omni-directional LBT processing and directional LBT processing are performed) processing. In the present embodiment, a variation of the first LBT processing, the second LBT processing, and the third LBT processing will be described.

The gNB and NR-UE randomly generate a value (e.g., referred to as random backoff) from a predetermined range, determine the time for performing the "first LBT processing, second LBT processing, or third LBT processing" based on the generated value, and perform the "first LBT processing, second LBT processing, or third LBT processing".

When a plurality of gNBs or NR-UEs are present, these apparatuses are more likely to start communication at the same time by the use of the random value as described above, and this increases the possibility of avoiding collision of modulation signals and improves communication quality.

Note that the processing described in the present embodiment or a part of the processing is performed by the transmission/reception apparatus in FIG. 53 or FIG. 54. The configurations of the gNB and NR-UE, however, are not limited to the configurations in FIGS. 53 and 54.

(Embodiment 12)

In Embodiment 12, a description will be given of variations of "the second LBT (directional LBT) processing and the third LBT (LBT in which both omni-directional LBT processing and directional LBT processing are performed) processing" described in Embodiments 8 and 9.

First, a variation of the second LBT (directional LBT) processing will be described.

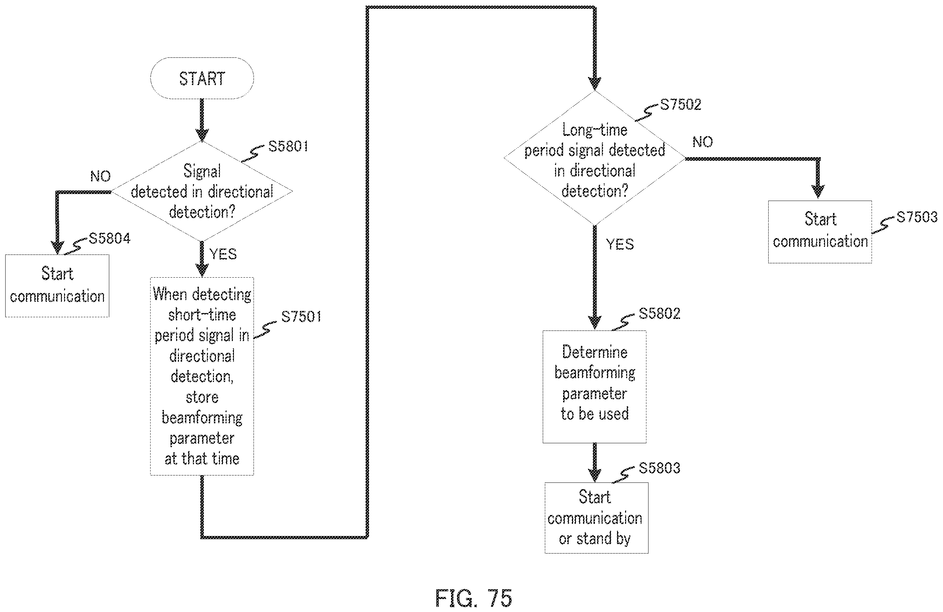

FIG. 75 is a flowchart describing an exemplary operation of the gNB and NR-UE in the directional LBT. Note that, in FIG. 75, the components that operate in the same manner as in FIG. 58 are denoted by the same reference signs, and already-described components will not be described.

When the gNB and NR-UE detect a signal in the directional detection, the gNB and NR-UE perform whether a short time (period) signal can be detected in the directional detection. When detecting a short-time (period) signal in the directional detection, the gNB and NR-UE store a beamforming parameter at that time (S7501).

Note that the description "the gNB and NU-UE detect a short-time (period) signal in the directional detection" means that "the gNB and NR-UE detect SSW ISS, SSW RSS, TXSS, a beacon, or the like transmitted by a first standard apparatus", for example.

Then, the gNB and NU-RE determine whether a long-time (period) signal is detected in the directional detection (S7502).

When no long-time (period) signal is detected in the directional detection (NO in S7502), the gNB and NR-UE start communication (S7503).

When a long-time (period) signal is detected in the directional detection (YES in S7502), the gNB and NR-UE determine a beamforming parameter to be used for signal transmission (S5802).

For example, the gNB and NR-UE determine to use a beamforming parameter in a direction other than the direction in which the long-time (period) signal is detected in the directional detection. As another method, the gNB and NR-UE determine to use an antenna other than the antenna that has detected the long-time (period) signal in the directional detection. Details are described in Embodiment 7, etc., and the description thereof is thus omitted.

Note that the description "the gNB and NU-UE detect a long-time (period) signal in the directional detection" means that "the gNB and NR-UE detect a signal transmitted by another gNB or NR-UE that detects a data frame or the like transmitted by a first standard apparatus", for example.

Upon determining the beamforming parameter in S5802, the gNB and NR-UE start communication or stand by, using the determined beamforming parameter (S5803).

For example, the gNB and NR-UE determine that another apparatus (another "gNB and NR-UE", AP, or first standard-UE) occupies a channel of the "licensed band and/or unlicensed band" in the direction in which the long-time (period) signal is detected in the directional detection and stand by without transmitting a signal. The gNB and NR-UE determine that another apparatus (another "gNB and NR-UE", AP, or first standard-UE) does not occupy a channel of the "licensed band and/or unlicensed band" in a direction other than the direction in which the long-time (period) signal is detected in the directional detection and start communication.

As a method of signal detection, the gNB and NR-UE may determine that a signal is present when the power at the time of reception is greater than a threshold and that a signal is not present when the power is less than the threshold. As another method, the gNB and NR-UE may determine that a signal is present when the signal can be demodulated and that a signal is not present when the signal cannot be demodulated. Two examples have been described but the method is not limited to the examples.

Next, a variation of the third LBT (LBT in which both omni-directional LBT processing and directional LBT processing are performed) processing will be described.

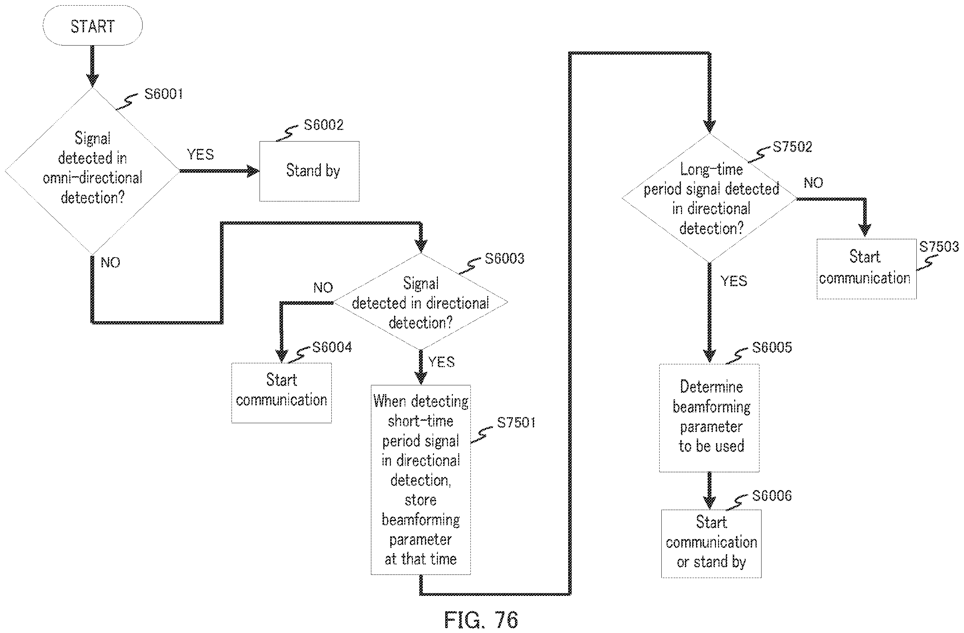

FIG. 76 is a flowchart describing an exemplary operation of the gNB and NR-UE in the third LBT. Note that, in FIG. 76, the components that operate in the same manner as in FIG. 60 are denoted by the same reference signs, and already-described components will not be described.

When the gNB and NR-UE detect a signal in the directional detection, the gNB and NR-UE perform whether a short-time (period) signal can be detected in the directional detection. When detecting a short-time (period) signal in the directional detection, the gNB and NR-UE store a beamforming parameter at that time (S7501).

Note that the description "the gNB and NU-UE detect a short-time (period) signal in the directional detection" means that "the gNB and NR-UE detect SSW ISS, SSW RSS, TXSS, a beacon, or the like transmitted by a first standard apparatus", for example.

Then, the gNB and NU-RE determine whether a long-time (period) signal is detected in the directional detection (S7502).

When no long-time (period) signal is detected in the directional detection (NO in S7502), the gNB and NR-UE start communication (S7503).

When a long-time (period) signal is detected in the directional detection (YES in S7502), the gNB and NR-UE determine a beamforming parameter to be used for signal transmission (S6005). For example, the gNB and NR-UE determine to use a beamforming parameter in a direction other than the direction in which the long-time (period) signal is detected in the directional detection. As another method, the gNB and NR-UE determine to use an antenna other than the antenna that has detected the long-time (period) signal in the directional detection. Details are described in Embodiment 7, etc., and the description thereof is thus omitted.

Note that the description "the gNB and NU-UE detect a long-time (period) signal in the directional detection" means that "the gNB and NR-UE detect a signal transmitted by another gNB or NR-UE that detects a data frame or the like transmitted by a first standard apparatus", for example.

Upon determining the beamforming parameter in S6005, the gNB and NR-UE start communication or stand by, using the determined beamforming parameter (S6006). For example, the gNB and NR-UE determine that another apparatus (another "gNB and NR-UE", AP, or first standard-UE) occupies a channel of the "licensed band and/or unlicensed band" in the direction in which the long-time (period) signal is detected in the directional detection and stand by without transmitting a signal. The gNB and NR-UE determine that another apparatus (another "gNB and NR-UE", AP, or first standard-UE) does not occupy a channel of the "licensed band and/or unlicensed band" in a direction other than the direction in which the long-time (period) signal is detected in the directional detection and start communication.

As a method of signal detection, the gNB and NR-UE may determine that a signal is present when the power at the time of reception is greater than a threshold and that a signal is not present when the power is less than the threshold. As another method, the gNB and NR-UE may determine that a signal is present when the signal can be demodulated and that a signal is not present when the signal cannot be demodulated. Two examples have been described but the method is not limited to the examples.

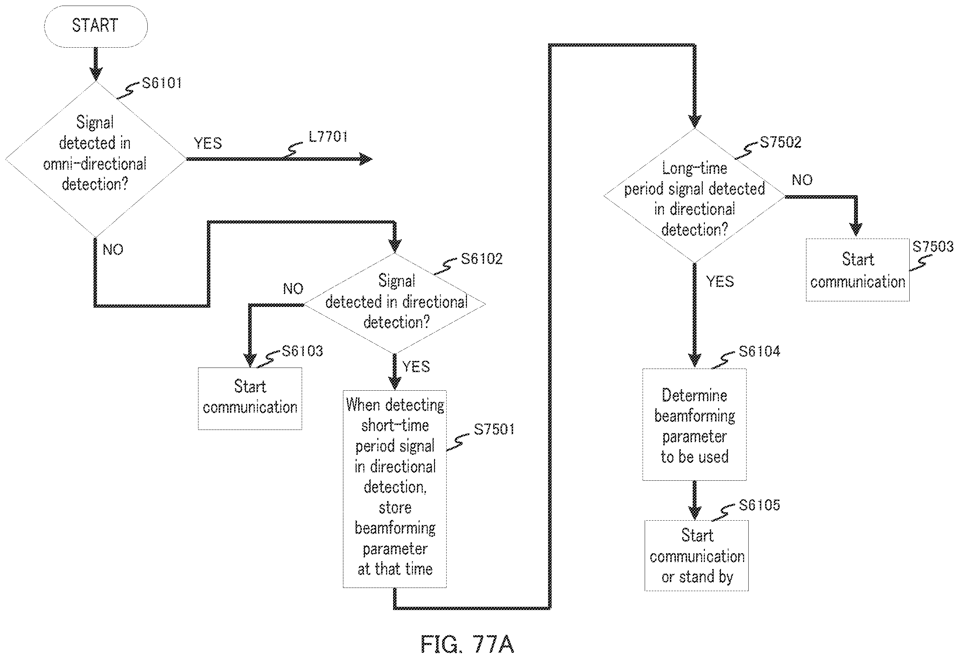

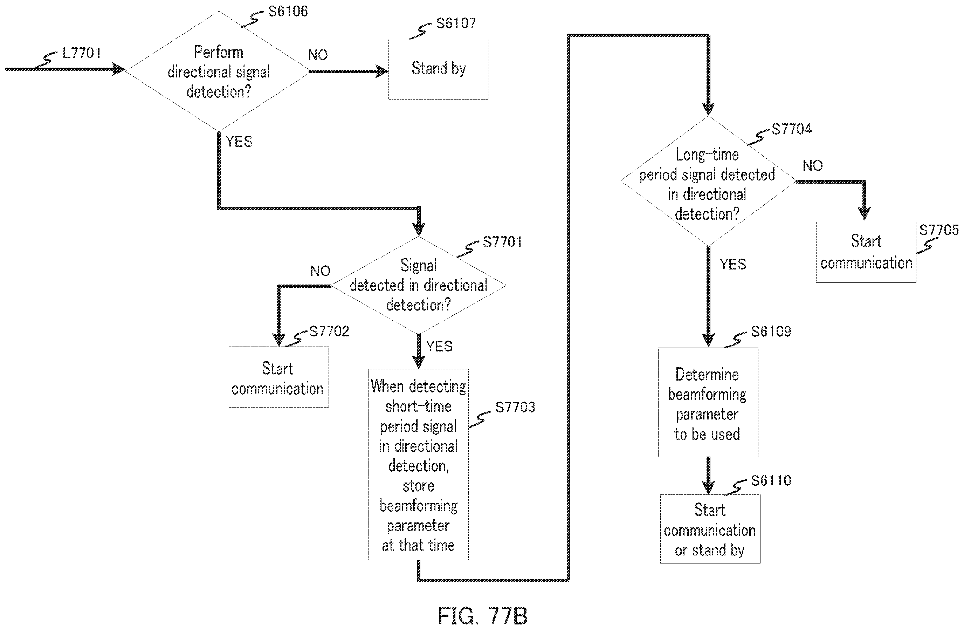

FIGS. 77A and 77B are flowcharts describing exemplary operations of the gNB and NR-UE in the third LBT. Note that, in FIGS. 77A and 77B, the components that operate in the same manner as in FIG. 61 are denoted by the same reference signs, and already-described components will not be described.

The gNB and NR-UE determine whether a signal is detected in the omni-directional detection (S6101). When the gNB and NR-UE detect a signal in the omni-directional detection (YES in S6101), the procedure goes through L7701 in FIG. 77A, that is, L7701 in FIG. 77B, and transitions to S6106 in FIG. 77B. Note that FIG. 77B will be described later.

In FIG. 77A, when the gNB and NR-UE detect a signal in the directional detection, the gNB and NR-UE perform whether a short-time (period) signal is detected in the directional detection. When detecting a short-time (period) signal in the directional detection, the gNB and NR-UE store a beamforming parameter at that time (S7501).

Note that the description "the gNB and NU-UE detect a short-time (period) signal in the directional detection" means that "the gNB and NR-UE detect SSW ISS, SSW RSS, TXSS, a beacon, or the like transmitted by a first standard apparatus", for example.

Then, in FIG. 77A, the gNB and NU-RE determine whether a long-time (period) signal is detected in the directional detection (S7502).

In FIG. 77A, when no long-time (period) signal is detected in the directional detection (NO in S7502), the gNB and NR-UE start communication (S7503).

In FIG. 77A, when a long-time (period) signal is detected in the directional detection (YES in S7502), the gNB and NR-UE determine a beamforming parameter to be used for signal transmission (S6104).

For example, the gNB and NR-UE determine to use a beamforming parameter in a direction other than the direction in which the long-time (period) signal is detected in the directional detection. As another method, the gNB and NR-UE determine to use an antenna other than the antenna that has detected the long-time (period) signal in the directional detection. Details are described in Embodiment 7, etc., and the description thereof is thus omitted.

Note that the description "the gNB and NU-UE detect a long-time (period) signal in the directional detection" means that "the gNB and NR-UE detect a signal transmitted by another gNB or NR-UE that detects a data frame or the like transmitted by a first standard apparatus", for example.

In FIG. 77A, upon determining the beamforming parameter in S6104, the gNB and NR-UE start communication or stand by, using the determined beamforming parameter (S6105).

For example, the gNB and NR-UE determine that another apparatus (another "gNB and NR-UE", AP, or first standard-UE) occupies a channel of the "licensed band and/or unlicensed band" in the direction in which the long-time (period) signal is detected in the directional detection and stand by without transmitting a signal. The gNB and NR-UE determine that another apparatus (another "gNB and NR-UE", AP, or first standard-UE) does not occupy a channel of the "licensed band and/or unlicensed band" in a direction other than the direction in which the long-time (period) signal is detected in the directional detection and start communication.

As a method of signal detection, the gNB and NR-UE may determine that a signal is present when the power at the time of reception is greater than a threshold and that a signal is not present when the power is less than the threshold. As another method, the gNB and NR-UE may determine that a signal is present when the signal can be demodulated and that a signal is not present when the signal cannot be demodulated. Two examples have been described but the method is not limited to the examples.

In FIG. 77B, when it is YES after determining whether to perform the directional signal detection (S6106), the gNB and NR-UE determine whether a signal is detected in the directional detection (S7701).

When detecting a signal in the directional detection (NO in S7701), the gNB and NR-UE start communication.

Then, in FIG. 77B, when the gNB and NR-UE detect a signal in the directional detection, the gNB and NR-UE perform whether a short-time (period) signal is detected in the directional detection. When detecting a short-time (period) signal in the directional detection, the gNB and NR-UE store a beamforming parameter at that time (S7703).

Note that the description "the gNB and NU-UE detect a short-time (period) signal in the directional detection" means that "the gNB and NR-UE detect SSW ISS, SSW RSS, TXSS, a beacon, or the like transmitted by a first standard apparatus", for example.

Then, in FIG. 77B, the gNB and NU-RE determine whether a long-time (period) signal is detected in the directional detection (S7704).

In FIG. 77B, when no long-time (period) signal is detected in the directional detection (NO in S7704), the gNB and NR-UE start communication (S7705).

In FIG. 77B, when a long-time (period) signal is detected in the directional detection (YES in S7704), the gNB and NR-UE determine a beamforming parameter to be used for signal transmission (S6109).

For example, the gNB and NR-UE determine to use a beamforming parameter in a direction other than the direction in which the long-time (period) signal is detected in the directional detection. As another method, the gNB and NR-UE determine to use an antenna other than the antenna that has detected the long-time (period) signal in the directional detection. Details are described in Embodiment 7, etc., and the description thereof is thus omitted.

Note that the description "the gNB and NU-UE detect a long-time (period) signal in the directional detection" means that "the gNB and NR-UE detect a signal transmitted by another gNB or NR-UE that detects a data frame or the like transmitted by a first standard apparatus", for example.

In FIG. 77B, upon determining the beamforming parameter in S6109, the gNB and NR-UE start communication or stand by, using the determined beamforming parameter (S6110).

For example, the gNB and NR-UE determine that another apparatus (another "gNB and NR-UE", AP, or first standard-UE) occupies a channel of the "licensed band and/or unlicensed band" in the direction in which the long-time (period) signal is detected in the directional detection and stand by without transmitting a signal. The gNB and NR-UE determine that another apparatus (another "gNB and NR-UE", AP, or first standard-UE) does not occupy a channel of the "licensed band and/or unlicensed band" in a direction other than the direction in which the long-time (period) signal is detected in the directional detection and start communication.

As a method of signal detection, the gNB and NR-UE may determine that a signal is present when the power at the time of reception is greater than a threshold and that a signal is not present when the power is less than the threshold. As another method, the gNB and NR-UE may determine that a signal is present when the signal can be demodulated and that a signal is not present when the signal cannot be demodulated. Two examples have been described but the method is not limited to the examples.

In the second LBT processing described with reference to FIG. 75, the contents described in Embodiments 8 and 9 may be applied, combined, or the like. For example, in the second LBT processing described with reference to FIG. 75, the methods described in Embodiments 8 and 9 may be applied in terms of the directional detection method.

In addition, in the third LBT processing described with reference to FIG. 76 and the third LBT processing described with reference to FIGS. 77A and 77B, the contents described in Embodiments 8 and 9 may be applied, combined, or the like. For example, in the third LBT processing described with reference to FIG. 76 and the third LBT processing described with reference to FIGS. 77A and 77B, the methods described in Embodiments 8 and 9 may be applied in terms of the omni-directional and directional detection methods.

Next, a description will be given of exemplary processing described in Embodiments 9 and 10 after the LBT processing is performed as described above.

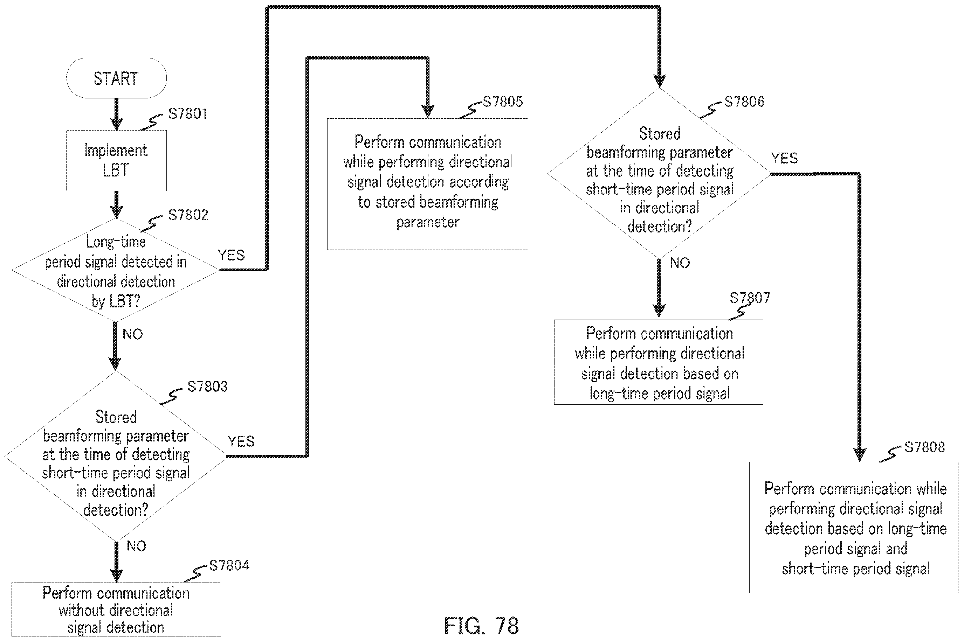

FIG. 78 is a flowchart describing an exemplary operation of the gNB and NR-UE after performing any one of "the second LBT processing in FIG. 75", "the third LBT processing in FIG. 76", and "the third LBT processing in FIGS. 77A and 77B" and starting communication with a communication counterpart.

As illustrated in FIG. 78, the gNB and NR-UE perform any one of "the second LBT processing in FIG. 75", "the third LBT processing in FIG. 76", and "the third LBT processing in FIGS. 77A and 77B" (S7801) and start communication with a communication counterpart.

The gNB and NR-UE determine whether a long-time (period) signal is detected in the directional detection by the LBT processing (S7802).

When no long-time (period) signal is detected in the directional detection (NO in S7802), the gNB and NR-UE determine whether a beamforming parameter in detecting a short-time (period) signal in the directional detection is stored during the LBT processing (S7803).

When a beamforming parameter in detecting a short-time (period) signal in the directional detection is stored during the LBT processing (YES in S7803), the gNB and NR-UE perform communication while performing the directional detection according to the stored beamforming parameter (S7805).

Note that, when the gNB and NU-UE "perform the directional detection according to the stored beamforming parameter" and detect a signal during the process of S7805, the communication by the beamforming parameter is terminated. At this time, the communication based on the beamforming parameter may be terminated, or the communication using an antenna related to the beamforming parameter may be terminated. When the gNB and NU-UE "perform the directional detection according to the stored beamforming parameter" and detect no signal, the communication by the beamforming parameter can be continued.

The "stored beamforming parameter" is a beamforming parameter stored in "the second LBT processing in FIG. 75", "the third LBT processing in FIG. 76", or "the third LBT processing in FIGS. 77A and 77B".

When a beamforming parameter in detecting a short-time (period) signal in the directional detection is not stored during the LBT processing (NO in S7803), the gNB and NR-UE perform communication without performing the directional signal detection (S7804).

When a long-time (period) signal is detected in the directional detection (YES in S7802), the gNB and NR-UE determine whether a beamforming parameter in detecting a short-time (period) signal in the directional detection is stored during the LBT processing (S7806).

When a beamforming parameter in detecting a short-time (period) signal in the directional detection is not stored during the LBT processing (NO in S7806), the gNB and NR-UE perform communication while performing the directional signal detection according to the beamforming parameter by which the long-time (period) signal is detected during the LBT processing (S7807).

Note that, when a signal is no longer detected in "performing the directional signal detection according to the beamforming parameter by which the long-time (period) signal is detected" in S7807, the gNB and NR-UE can start communication by the beamforming parameter. Detailed operations in that case are described in Embodiments 9 and 10.

Further, during the communication after performing the LBT processing, the gNB and NR-UE do not perform communication using the beamforming parameter by which the long-time (period) signal is detected during the LBT processing. The operations in this case are described in Embodiments 9 and 10.

When a beamforming parameter in detecting a short-time (period) signal in the directional detection is not stored during the LBT processing (YES in S7806), the gNB and NR-UE perform communication while performing the directional signal detection according to the beamforming parameter by which the long-time (period) signal is detected during the LBT processing and performing the directional signal detection according to the beamforming parameter stored in detecting the short-time (period) signal during the LBT processing (S7808).

Note that, when a signal is no longer detected in "performing the directional signal detection according to the beamforming parameter by which the long-time (period) signal is detected" in S7808, the gNB and NR-UE can start communication by the beamforming parameter. Detailed operations in that case are described in Embodiments 9 and 10.

During the communication after performing the LBT processing, the gNB and NR-UE do not perform communication using the beamforming parameter by which the long-time (period) signal is detected during the LBT processing. The operations in this case are described in Embodiments 9 and 10.

When the gNB and NU-UE "perform the directional detection according to the stored beamforming parameter" and detect a signal during the process of S7808, the communication by the beamforming parameter is terminated. At this time, the communication based on the beamforming parameter may be terminated, or the communication using an antenna related to the beamforming parameter may be terminated. When the gNB and NU-UE "perform the directional detection according to the stored beamforming parameter" and detect no signal, the communication by the beamforming parameter may be continued, or the communication may be continued using an antenna related to the beamforming parameter.

The "stored beamforming parameter" is a beamforming parameter stored in "the second LBT processing in FIG. 75", "the third LBT processing in FIG. 76", or "the third LBT processing in FIGS. 77A and 77B".

Note that the "stored beamforming parameter" may be set per antenna in the descriptions in S7803 and S7806 of FIG. 78. Thus, the directional signal detection may be performed by a "stored antenna", and when a signal is detected, communication using the stored antenna is terminated.

Further, in S7807 and S7808, the long-time (period) signal detection may be signal detection using an antenna parameter by which a long-time (period) signal is detected in the LBT processing.

Accordingly, in S7807, "the directional signal detection according to the beamforming parameter by which a long-time (period) signal is detected" may be "directional signal detection using an antenna parameter by which a long-time (period) signal is detected", and when a signal is no longer detected in the detection, communication based on the antenna parameter can be started. Detailed operations in that case are described in Embodiments 9 and 10.

Further, during the communication after performing the LBT processing, the gNB and NR-UE do not perform communication using the antenna parameter by which the long-time (period) signal is detected during the LBT processing. The operations in this case are described in Embodiments 9 and 10.

In S7808, "the directional signal detection according to the beamforming parameter by which a long-time (period) signal is detected" may be "directional signal detection using an antenna parameter by which a long-time (period) signal is detected", and when a signal is no longer detected in the detection, communication based on the antenna parameter can be started. Detailed operations in that case are described in Embodiments 9 and 10.

Further, during the communication after performing the LBT processing, the gNB and NR-UE do not perform communication using the antenna parameter by which the long-time (period) signal is detected during the LBT processing. The operations in this case are described in Embodiments 9 and 10.

In S7805, S7807, and S7808 of FIG. 78, the gNB and NR-UE "detect a signal transmitted by another gNB or NR-UE that detects a data frame transmitted by a first standard apparatus", for example.

Note that, in S7805, S7807, and S7808 of FIG. 78, the gNB and NR-UE may also detect "SSW ISS, SSW RSS, TXSS, a beacon, or the like transmitted by a first standard apparatus", for example.

As described above, the gNB and NR-UE control the start and end of the communication by performing the signal detection for a beamforming parameter and an antenna parameter obtained by detecting a short-time (period) signal in the second LBT processing or the third LBT processing, thereby reducing interference and improving the data transmission rate of a system.

Note that a "reception period (listen period) for the directional detection" needs to be provided to perform the "directional signal detection in S7805, directional signal detection in S7807, and directional signal detection in S7808" in FIG. 78. The placement of the "reception period (listen period) for the directional detection" is described in Embodiments 9 and 10, and the "reception period (listen period) for the directional detection" for implementing the procedure in FIG. 78 may be placed in the same manner as the "reception period (listen period) for the directional detection" described in Embodiments 9 and 10. Specific examples of the frame configuration are described in FIGS. 66, 67, 68, 69, 70, 72, 73, and 74.

The gNB and NR-UE perform the long-time (period) signal detection (and short-time (period) signal detection) in the "reception period (listen period) for the directional detection" for implementing the procedure in FIG. 78.

Note that the gNB and NR-UE may also detect "SSW ISS, SSW RSS, TXSS, a beacon, or the like transmitted by a first standard apparatus" in the "reception period (listen period) for the directional detection" for implementing the procedure in FIG. 78.

In addition, the gNB and NR-UE may detect "a sector sweep signal and/or a signal related to sector sweep implementation", "a data frame", etc. transmitted by another NR apparatus in the "reception period (listen period) for the directional detection" for implementing the procedure in FIG. 78.

In S7807 and S7908 of FIG. 78, the "predetermined processing" in S7102 of FIG. 71 may be performed. This will be described below.

When a beamforming parameter in detecting a short-time (period) signal in the directional detection is not stored during the LBT processing (NO in S7806), the gNB and NR-UE perform communication while performing the directional signal detection according to the beamforming parameter by which the long-time (period) signal is detected during the LBT processing (S7807).

At this time, the gNB and NR-UE randomly generate a value (e.g., referred to as random backoff) from a predetermined range in S7807, and determine, based on the generated value, the time for performing "the directional signal detection according to the beamforming parameter by which the long-time (period) signal is detected".

When a signal is no longer detected during "the directional signal detection according to the beamforming parameter by which the long-time (period) signal is detected", communication based on the beamforming parameter can be started. Detailed operations in that case are described in Embodiments 9 and 10.

Further, during the communication after performing the LBT processing, the gNB and NR-UE do not perform communication using the beamforming parameter by which the long-time (period) signal is detected during the LBT processing. The operations in this case are described in Embodiments 9 and 10.

When a beamforming parameter in detecting a short-time (period) signal in the directional detection is not stored during the LBT processing (YES in S7806), the gNB and NR-UE perform communication while performing the directional signal detection according to the beamforming parameter by which the long-time (period) signal is detected during the LBT processing and performing the directional signal detection according to the beamforming parameter stored in detecting the short-time (period) signal during the LBT processing (S7808).

At this time, the gNB and NR-UE randomly generate a value (e.g., referred to as random backoff) from a predetermined range in S7808, and determine, based on the generated value, the time for performing "the directional signal detection according to the beamforming parameter by which the long-time (period) signal is detected".

When a signal is no longer detected during "the directional signal detection according to the beamforming parameter by which the long-time (period) signal is detected", communication based on the beamforming parameter can be started. Detailed operations in that case are described in Embodiments 9 and 10.

Further, during the communication after performing the LBT processing, the gNB and NR-UE do not perform communication using the beamforming parameter by which the long-time (period) signal is detected during the LBT processing. The operations in this case are described in Embodiments 9 and 10.

When the gNB and NU-UE "perform the directional detection according to the stored beamforming parameter" and detect a signal during the process of S7808, the communication by the beamforming parameter is terminated. At this time, the communication based on the beamforming parameter may be terminated, or the communication using an antenna related to the beamforming parameter may be terminated. When the gNB and NU-UE "perform the directional detection according to the stored beamforming parameter" and detect no signal, the communication by the beamforming parameter may be continued, or the communication may be continued using an antenna related to the beamforming parameter.

Note that the "stored beamforming parameter" may be set per antenna in the descriptions in S7803 and S7806 of FIG. 78. Thus, the directional signal detection may be performed by a "stored antenna", and when a signal is detected, communication using the stored antenna is terminated.

Further, in S7807 and S7808, the long-time (period) signal detection may be signal detection using an antenna parameter by which a long-time (period) signal is detected in the LBT processing.

Accordingly, in S7807, "the directional signal detection according to the beamforming parameter by which a long-time (period) signal is detected" may be "directional signal detection using an antenna parameter by which a long-time (period) signal is detected", and when a signal is no longer detected in the detection, communication based on the antenna parameter can be started. Detailed operations in that case are described in Embodiments 9 and 10.

Further, during the communication after performing the LBT processing, the gNB and NR-UE do not perform communication using the antenna parameter by which the long-time (period) signal is detected during the LBT processing. The operations in this case are described in Embodiments 9 and 10.

In S7808, "the directional signal detection according to the beamforming parameter by which a long-time (period) signal is detected" may be "directional signal detection using an antenna parameter by which a long-time (period) signal is detected", and when a signal is no longer detected in the detection, communication based on the antenna parameter can be started. Detailed operations in that case are described in Embodiments 9 and 10.

Further, during the communication after performing the LBT processing, the gNB and NR-UE do not perform communication using the antenna parameter by which the long-time (period) signal is detected during the LBT processing. The operations in this case are described in Embodiments 9 and 10.

In S7805, S7807, and S7808 of FIG. 78, the gNB and NR-UE "detect a signal transmitted by another gNB or NR-UE that detects a data frame transmitted by a first standard apparatus", for example.

Note that, in S7805, S7807, and S7808 of FIG. 78, the gNB and NR-UE may also detect "SSW ISS, SSW RSS, TXSS, a beacon, or the like transmitted by a first standard apparatus", for example.

When a plurality of gNBs or NR-UEs are present, these apparatuses are more likely to start communication at the same time by the use of the random value as described above, and this increases the possibility of avoiding collision of modulation signals and improves communication quality.

Note that, in the present embodiment, the frame configuration is described with the examples of FIGS. 66, 67, 68, 69, 70, 72, 73, and 74, but these are merely examples, and the frame configuration is not limited to the examples. The frame configuration described in another embodiment may be combined, for example. In addition, the names of signals, frames, etc. in FIGS. 66, 67, 68, 69, 70, 72, 73, and 74 are not limited to those in the drawings, and other names may be used.

The gNB performs LBT, and after that, performs once or more "the method where the gNB and NR-UE check whether a signal is present in a direction not used for communication after starting the communication, and when detecting a direction in which no signal is present, the gNB and NR-UE start communication by a beam corresponding to the direction" described in the present embodiment. Then, the gNB may perform LBT again and further perform once or more "the method where the gNB and NR-UE check whether a signal is present in a direction not used for communication after starting the communication, and when detecting a direction in which no signal is present, the gNB and NR-UE start communication by a beam corresponding to the direction" described in the present embodiment.

Note that the implementation order for the gNB to perform the LBT and ""the method where the gNB and NR-UE check whether a signal is present in a direction not used for communication after starting the communication, and when detecting a direction in which no signal is present, the gNB and NR-UE start communication by a beam corresponding to the direction" described in the present embodiment" and the number of times each processing is performed are not limited to the examples.

Note that the processing described in the present embodiment or a part of the processing is performed by the transmission/reception apparatus in FIG. 53 or FIG. 54. The configurations of the gNB and NR-UE, however, are not limited to the configurations in FIGS. 53 and 54.

(Embodiment 13)

In Embodiment 12, a description has been given of the second LBT (directional LBT) processing and the third LBT (LBT in which both omni-directional LBT processing and directional LBT processing are performed) processing. In the present embodiment, a variation of the second LBT processing and the third LBT processing will be described.

The gNB and NR-UE randomly generate a value (e.g., referred to as random backoff) from a predetermined range, determine the time for performing the "second LBT processing or third LBT processing" based on the generated value, and perform the "second LBT processing or third LBT processing".

When a plurality of gNBs or NR-UEs are present, these apparatuses are more likely to start communication at the same time by the use of the random value as described above, and this increases the possibility of avoiding collision of modulation signals and improves communication quality.

Note that the processing described in the present embodiment or a part of the processing is performed by the transmission/reception apparatus in FIG. 53 or FIG. 54. The configurations of the gNB and NR-UE, however, are not limited to the configurations in FIGS. 53 and 54.

(Embodiment 14)

In Embodiment 14, variations of Embodiments 9 and 10 will be described.

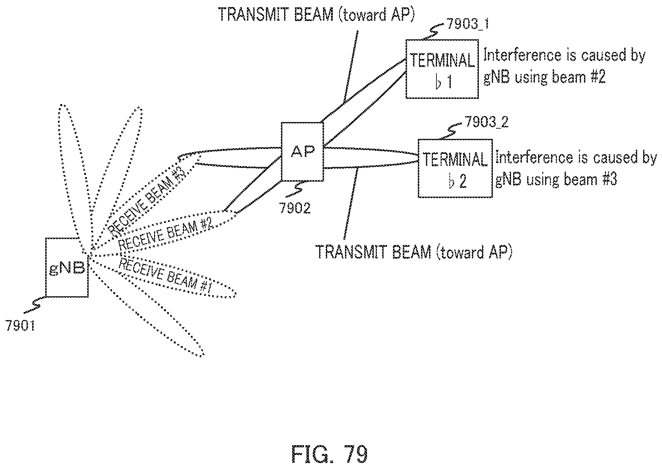

FIG. 79 illustrates an exemplary system in the present embodiment. gNB 7901 is an apparatus capable of performing transmit/receive beamforming in multiple directions. As a result of LBT, gNB 7901 determines that receive beam #2 (and transmit beam #2) can be used for communication and receive beam #3 (and transmit beam #3) can be used for communication.

Further, there is first standard AP 7902. First standard AP 7902 starts communication with terminal ♭1 labeled 7903_1 and terminal ♭2 labeled 7903_2.

Terminal ♭1 labeled 7903_1 performs transmit beamforming toward first standard AP 7902, for example, and transmits a modulation signal. At this time, it is assumed that gNB 7901 can receive the modulation signal transmitted from terminal ♭1 labeled 7903_1 by receive beam #2.

Thus, interference is caused by gNB 7901 starting communication using transmit beam #2, which corresponds to receive beam #2.

Terminal ♭2 labeled 7903_2 performs transmit beamforming toward first standard AP 7902, for example, and transmits a modulation signal. At this time, it is assumed that gNB 7901 can receive the modulation signal transmitted from terminal ♭2 labeled 7903_2 by receive beam #3.

Thus, interference is caused by gNB 7901 starting communication using transmit beam #3, which corresponds to receive beam #3.

Note that the same applies when gNB 7901 is NR-UE in FIG. 79.

In the present embodiment, a method for reducing the interference will be described.

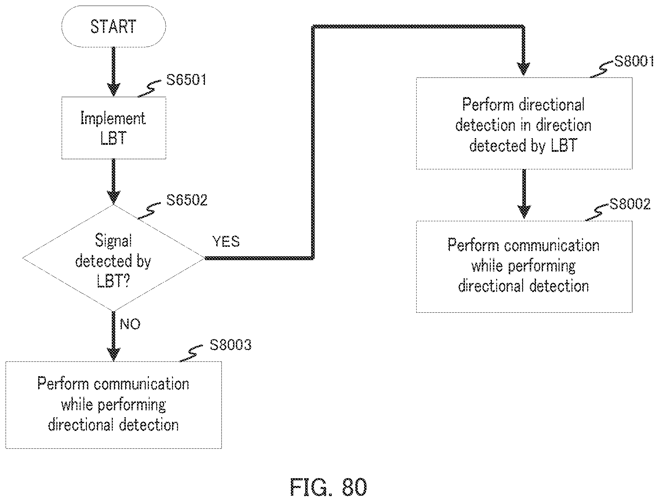

FIG. 80 illustrates exemplary processing of the gNB and NR-UE. Note that, in FIG. 80, the components that operate in the same manner as in FIG. 65 are denoted by the same reference signs, and some descriptions thereof will be omitted.

The gNB and NR-UE determine whether a signal is detected by the LBT (S6502).

When no signal is detected by the LBT (NO in S6502), the gNB and NR-UE perform communication while performing directional signal detection (in all directions or some directions) (S8003).

At this time, S8003 allows the gNB and NR-UE to know the state of the modulation signal transmitted by terminal ♭1 labeled 7903_1 and the state of the modulation signal of terminal ♭2 labeled 7903_2 in FIG. 79.

When detecting "the modulation signal transmitted by terminal ♭1 labeled 7903_1", the gNB and NR-UE do not perform communication using transmit beam #2 or receive beam #2. The gNB and NR-UE can perform communication using transmit beam #2 or receive beam #2 when no signal is detected by receive beam #2.

When detecting "the modulation signal transmitted by terminal ♭2 labeled 7903_2", the gNB and NR-UE do not perform communication using transmit beam #3 or receive beam #3. The gNB and NR-UE can perform communication using transmit beam #3 or receive beam #3 when no signal is detected by receive beam #3.

When a signal is detected by the LBT (YES in S6502), the gNB and NR-UE perform the directional detection in the direction detected by the LBT (S8001). In addition, the gNB and NR-UE perform communication while performing the directional signal detection (in all directions or some directions) (S8002).

When a signal is detected in the direction detected by the LBT, the gNB and NR-UE do not perform communication in that direction. When no signal is detected in the direction detected by the LBT, the gNB and NR-UE can start communication in that direction.

The gNB and NR-UE also perform the directional signal detection in the other directions.

Then, for example, when detecting "the modulation signal transmitted by terminal ♭1 labeled 7903_1", the gNB and NR-UE do not perform communication using transmit beam #2 or receive beam #2. The gNB and NR-UE can perform communication using transmit beam #2 or receive beam #2 when no signal is detected by receive beam #2.

When detecting "the modulation signal transmitted by terminal $b2$ labeled 7903_2", the gNB and NR-UE do not perform communication using transmit beam #3 or receive beam #3. The gNB and NR-UE can perform communication using transmit beam #3 or receive beam #3 when no signal is detected by receive beam #3.

Note that the gNB and NR-UE may perform control per antenna. Specific operations will be described.

The gNB and NR-UE determine whether a signal is detected by the LBT (S6502).

When no signal is detected by the LBT (NO in S6502), the gNB and NR-UE perform communication while performing directional signal detection (in all directions or some directions) (S8003).

At this time, S8003 allows the gNB and NR-UE to know the state of the modulation signal transmitted by terminal $b1$ labeled 7903_1 and the state of the modulation signal of terminal $b2$ labeled 7903_2 in FIG. 79.

When detecting the "modulation signal transmitted by terminal $b1$ labeled 7903_1", the gNB and NR-UE do not perform communication using an antenna used to generate transmit beam #2 (and receive beam #2). When detecting no signal by receive beam #2, the gNB and NR-UE can perform communication using the antenna used to generate transmit beam #2 (and receive beam #2).

When detecting the "modulation signal transmitted by terminal $b2$ labeled 7903_2", the gNB and NR-UE do not perform communication using an antenna used to generate transmit beam #3 (and receive beam #3). When detecting no signal by receive beam #3, the gNB and NR-UE can perform communication using the antenna used to generate transmit beam #3 (and receive beam #3).

When a signal is detected by the LBT (YES in S6502), the gNB and NR-UE perform the directional detection in the direction detected by the LBT (S8001). In addition, the gNB and NR-UE perform communication while performing the directional signal detection (in all directions or in some directions) (S8002).

When a signal is detected in the direction detected by the LBT, the gNB and NR-UE do not perform communication in that direction. When no signal is detected in the direction detected by the LBT, the gNB and NR-UE can start communication in that direction.

The gNB and NR-UE also perform the directional signal detection in the other directions.

Then, when detecting the "modulation signal transmitted by terminal $b1$ labeled 7903_1", the gNB and NR-UE do not perform communication using an antenna used to generate transmit beam #2 (and receive beam #2). When detecting no signal by receive beam #2, the gNB and NR-UE can perform communication using the antenna used to generate transmit beam #2 (and receive beam #2).

When detecting the "modulation signal transmitted by terminal $b2$ labeled 7903_2", the gNB and NR-UE do not perform communication using an antenna used to generate transmit beam #3 (and receive beam #3). When detecting no signal by receive beam #3, the gNB and NR-UE can perform communication using the antenna used to generate transmit beam #3 (and receive beam #3).

Performing the post-LBT processing as described above allows a system including the gNB and NR-UE to have less interference, thereby producing the effect of improving data transmission efficiency of the system.

Note that the same can be implemented when the gNB and NR-UE perform the above-described procedure in FIG. 80 considering AP 7902 as the gNB and "terminal $b1$ labeled 7903_1 and terminal $b2$ labeled 7903_2" as NR-UE in FIG. 79.

S8001, S8002, and S8003 in FIG. 80 may be implemented as follows. In S8001, S8002, and S8003, the gNB and NR-UE randomly generate a value (e.g., referred to as random backoff) from a predetermined range, determine the time for performing the "directional detection" based on the generated value, and perform the "directional detection".

When a plurality of gNBs or NR-UEs are present, these apparatuses are more likely to start communication at the same time by the use of the random value as described above, and this increases the possibility of avoiding collision of modulation signals and improves communication quality.

Another method for reducing the interference will be described.

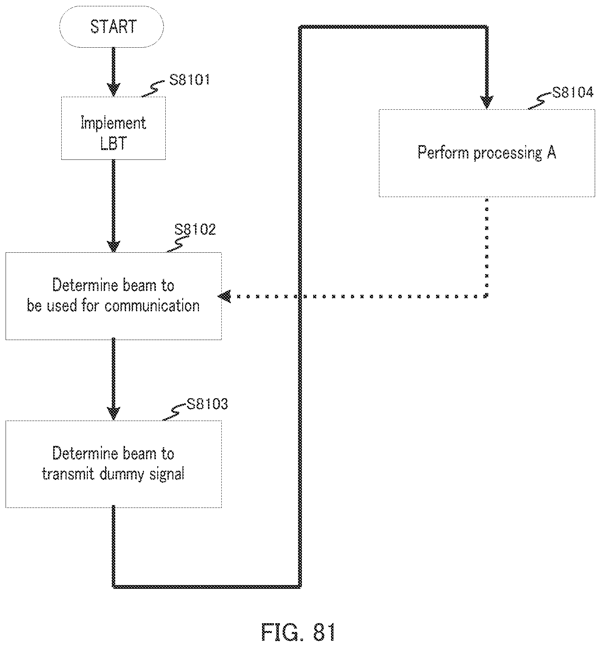

FIG. 81 illustrates exemplary processing of the gNB and NR-UE. The gNB and NR-UE perform any one of "the second LBT (directional LBT) processing and the third LBT (LBT in which both omni-directional LBT processing and directional LBT processing are performed) processing" (S8101).

Then, by performing S8101, the gNB (or NR-UE) determines the "direction (beam) in which communication can be started" and the "direction in which communication is not started" by the LBT processing.

For example, it is assumed that the gNB (or NR-UE) is capable of generating beam #1 to beam #16. Then, by the LBT processing, the gNB (or NR-UE) determines that beam #1 to beam #12 can be used for communication and determines that beam #13 to beam #16 are not used for communication at this time.

After that, the gNB (or NR-UE) performs the sector sweep processing described in Embodiments 1 to 6. Accordingly, the gNB (or NR-UE) determines a beam to be used for communication with a communication counterpart from beam #1 to beam #12 (S8102).

For example, the gNB (or NR-UE) determines to perform communication with one or more communication counterparts using beam #1 to beam #8 by performing the sector sweep processing described in Embodiments 1 to 6. The gNB (or NR-UE) determines not to use beam #9 to beam #12 for communication.

The gNB (or NR-UE) determines to transmit dummy signals using beam #9 to beam #12 that are not used for communication (S8103). Note that, although dummy signals are transmitted using beam #9 to beam #12 that are not used for communication here, the present disclosure is not limited to this example, and dummy signals are transmitted using one or more beams from beam #9 to beam #12 that are not used for communication. A frame in which the dummy signal is mapped may be a data frame (data channel or data slot) or a control frame (control channel or control slot), and not even limited to these examples, the dummy signal may be mapped in any frame.

The dummy signal may be any signal as long as it is not a zero-power signal, that is, as long as it is a non-zero-power signal.

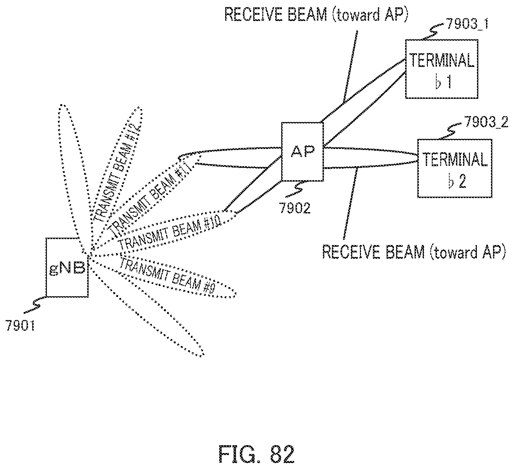

FIG. 82 illustrates an exemplary state in this situation. Note that similar components in FIG. 82 are denoted by the same reference signs, and the descriptions thereof will be omitted.

gNB 7901 transmits dummy signals using transmit beam #9 to transmit beam #12.

Incidentally, terminal ♭1 labeled 7903_1 of the first standard directs a receive beam toward first standard AP 7902. Then, terminal ♭1 labeled 7903_1 of the first standard receives a dummy signal in transmit beam #10 transmitted by gNB 7901. Thus, terminal ♭1 labeled 7903_1 of the first standard does not transmit a modulation signal to prevent interference.

In addition, terminal ♭2 labeled 7903_2 of the first standard directs a receive beam toward first standard AP 7902. Then, terminal ♭2 labeled 7903_2 of the first standard receives a dummy signal in transmit beam #11 transmitted by gNB 7901. Thus, terminal ♭2 labeled 7903_2 of the first standard does not transmit a modulation signal to prevent interference.

As described above, the transmission of dummy signals by the gNB using beams not used for communication produces the effect of preventing interference by a modulation signal of a first standard apparatus, thereby improving communication data quality of the gNB and NR-UE.

After that, the gNB (or NR-UE) performs processing A (S8104).

Next, processing A will be described. Processing A is, for example, processing in which the gNB and NR-UE check whether a signal is present in a direction not used for communication, and when detecting a direction in which no signal is present, the gNB and NR-UE start communication by a beam corresponding to the direction, as in the "processing in FIG. 75", "processing in FIG. 76", "processing in FIGS. 77A and 77B", "processing in FIG. 78", "processing in FIG. 80", etc.

In the case of the above example, the gNB (or NR-UE) performs a check regarding processing A on beam #13 to beam #16, checks whether a signal is detected in each of beam #13 to beam #16. For a beam in which a signal is detected, the gNB (or NR-UE) continues not using the beam for communication, and for a beam in which no signal is detected, the gNB (or NR-UE) can start communication.

After the process of S8104 is performed, the procedure may return to S8102.

Note that the above-described example can be implemented replacing the "beam" with an "antenna". This point has been similarly described in another embodiment.

Further, it may be implemented as follows.

The gNB and NR-UE perform any one of "the second LBT (directional LBT) processing and the third LBT (LBT in which both omni-directional LBT processing and directional LBT processing are performed) processing" (S8101).

Then, by performing S8101, the gNB (or NR-UE) determines the "direction (beam) in which communication can be started" and the "direction in which communication is not started" by the LBT processing.

For example, it is assumed that the gNB (or NR-UE) is capable of generating beam #1 to beam #16. Then, by the LBT processing, the gNB (or NR-UE) determines that beam #1 to beam #12 can be used for communication and determines that beam #13 to beam #16 are not used for communication at this time.

In this case, an antenna for generating beam #1 and beam #2 is antenna #1, an antenna for generating beam #3 and beam #4 is antenna #2, an antenna for generating beam #5 and beam #6 is antenna #3, an antenna for generating beam #7 and beam #8 is antenna #4, an antenna for generating beam #9 and beam #10 is antenna #5, an antenna for generating beam #11 and beam #12 is antenna #6, an antenna for generating beam #13 and beam #14 is antenna #7, and an antenna for generating beam #15 and beam #16 is antenna #8.

After that, the gNB (or NR-UE) performs the sector sweep processing described in Embodiments 1 to 6. Accordingly, the gNB (or NR-UE) determines an antenna and a beam to be used for communication with a communication counterpart from beam #1 to beam #12, i.e., antenna #1 to antenna #6 (S8102).

For example, the gNB (or NR-UE) determines to perform communication with one or more communication counterparts using beam #1 to beam #8, i.e., antenna #1 to antenna #4, by performing the sector sweep processing described in Embodiments 1 to 6. The gNB (or NR-UE) determines not to use beam #9 to beam #12, i.e., antenna #5 and antenna #6, for communication.

The gNB (or NR-UE) determines to transmit dummy signals using beam #9 to beam #12, i.e., antenna #5 and antenna #6, that are not used for communication (S8103). Note that, although dummy signals are transmitted using beam #9 to beam #12, i.e., antenna #5 and antenna #6, that are not used for communication here, the present disclosure is not limited to this example, and dummy signals are transmitted using one or more antennas from antenna #5 and antenna #6 that are not used for communication. A frame in which the dummy signal is mapped may be a data frame (data channel or data slot) or a control frame (control channel or control slot), and not even limited to these examples, the dummy signal may be mapped in any frame.

The dummy signal may be any signal as long as it is not a zero-power signal, that is, as long as it is a non-zero-power signal.

FIG. 82 illustrates an exemplary state in this situation. Note that similar components in FIG. 82 are denoted by the same reference signs, and the descriptions thereof will be omitted.

gNB 7901 transmits dummy signals using transmit beam #9 to transmit beam #12, i.e., antenna #5 and antenna #6.

Incidentally, terminal ♭1 labeled 7903_1 of the first standard directs a receive beam toward first standard AP 7902. Then, terminal ♭1 labeled 7903_1 of the first standard receives a dummy signal in transmit beam #10 transmitted by gNB 7901. Thus, terminal ♭1 labeled 7903_1 of the first standard does not transmit a modulation signal to prevent interference.

In addition, terminal ♭2 labeled 7903_2 of the first standard directs a receive beam toward first standard AP 7902. Then, terminal ♭2 labeled 7903_2 of the first standard receives a dummy signal in transmit beam #11 transmitted by gNB 7901. Thus, terminal ♭2 labeled 7903_2 of the first standard does not transmit a modulation signal to prevent interference.

As described above, the transmission of dummy signals by the gNB using antennas not used for communication produces the effect of preventing interference by a modulation signal of a first standard apparatus, thereby improving communication data quality of the gNB and NR-UE.

After that, the gNB (or NR-UE) performs processing A (S8104).

Processing A is, for example, processing in which the gNB and NR-UE check whether a signal is present in a direction not used for communication, and when detecting a direction in which no signal is present, the gNB and NR-UE start communication by a beam corresponding to the direction, as in the "processing in FIG. 75", "processing in FIG. 76", "processing in FIGS. 77A and 77B", "processing in FIG. 78", "processing in FIG. 80", etc.

In the case of the above example, the gNB (or NR-UE) performs a check regarding processing A on beam #13 to beam #16, i.e., antenna #7 and antenna #8, checks whether a signal is detected in each of beam #13 to beam #16, i.e., antenna #7 and antenna #8. For a beam in which a signal is detected, the gNB (or NR-UE) continues not using the beam for communication, and for a beam in which no signal is detected, the gNB (or NR-UE) can start communication.

After the process of S8104 is performed, the procedure may return to S8102.

Note that the exemplary operation of the gNB and NR-UE is not limited to the procedure in FIG. 81, and another process may be in the middle of the procedure in FIG. 81.

Note that the processing described in the present embodiment or a part of the processing is performed by the transmission/reception apparatus in FIG. 53 or FIG. 54. The configurations of the gNB and NR-UE, however, are not limited to the configurations in FIGS. 53 and 54.

(Embodiment 15)

In Embodiment 15, a description will be given of a method for reducing interference other than the method described in Embodiment 14.

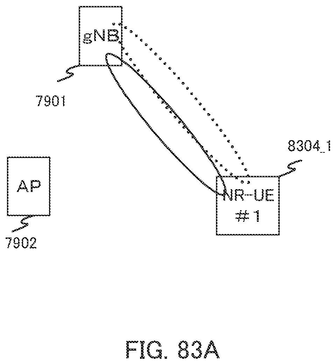

FIG. 83A illustrates an exemplary state of the system, and the components that operate in the same manner as in FIG. 79 are denoted by the same reference signs.

As in FIG. 83A, there are gNB 7901, first standard AP 7902, and NR-UE #1 labeled 8304_1.

In this case, gNB 7901 and NR-UE #1 labeled 8304_1 perform the LBT processing, the example of which is in Embodiment 7, 8, 11, and 12, in the first frequency (band); consequently, gNB 7901 and NR-UE #1 labeled 8304_1 start communication in the first frequency (band).

Thus, gNB 7901 performs transmit beamforming to transmit a modulation signal in the first frequency (band), and NR-UE #1 labeled 8304_1 performs receive beamforming to receive the modulation signal.

In addition, NR-UE #1 labeled 8304_1 performs transmit beamforming to transmit a modulation signal in the first frequency (band), and gNB 7901 performs receive beamforming to receive the modulation signal.

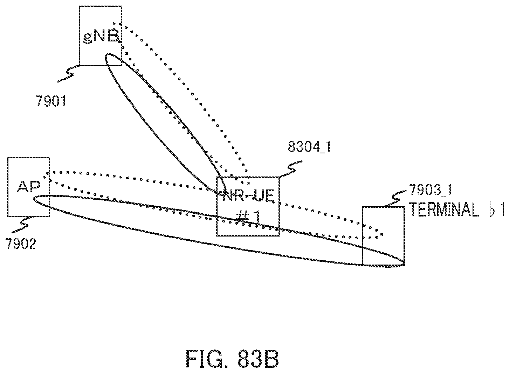

Then, the state is changed to that in FIG. 83B after some time has elapsed. Note that, in FIG. 83B, components that operate in the same manner as in FIG. 79 are denoted by the same reference signs.

As is the case with FIG. 83A, gNB 7901 and NR-UE #1 labeled 8304_1 continue to communicate with each other in the first frequency (band).

Then, first standard AP 7902 starts communication according to the first standard with terminal ♭1 labeled 7903_1 in the first frequency (band).

First standard AP 7902 performs transmit beamforming to transmit a modulation signal in the first frequency (band), and terminal ♭1 labeled 7903_1 performs receive beamforming to receive the modulation signal.

In addition, terminal ♭1 labeled 7903_1 performs transmit beamforming to transmit a modulation signal in the first frequency (band), and first standard AP 7902 performs receive beamforming to receive the modulation signal.

At this time, NR-UE #1 labeled 8304_1 receives the modulation signal transmitted by gNB 7901, but NR-UE #1 labeled 8304_1 is subject to interference from "the modulation signal transmitted by first standard AP 7902 and the modulation signal transmitted by terminal ♭1 labeled 7903_1".

This causes NR-UE #1 labeled 8304_1 to have significantly lower data reception quality in receiving the modulation signal transmitted by gNB 7901 in the case of the state in FIG. 83B.

Accordingly, when NR-UE #1 labeled 8304_1 receives the modulation signal transmitted by gNB 7901, obtains data, and performs data error detection using an error detection code such as a cyclic redundancy check (CRC), for example, the data has an error in more cases.

Thus, when there are many data errors although NR-UE #1 labeled 8304_1 determines that the received field strength is high by measuring, for example, a received signal strength indicator (RSSI), NR-UE #1 labeled 8304_1 indicates, to gNB 7901, information indicating that "it is subject to interference from another apparatus (in an unusual state)". Note that, when NR-UE #1 labeled 8304_1 indicates, to gNB 7901, the information indicating that "it is subject to interference from another apparatus (in an unusual state)", NR-UE #1 labeled 8304_1 can transmit a modulation signal including this information using the first frequency (band) in the case of FIG. 83B.

Then, gNB 7901 obtains the information, and may:

· stop communication with NR-UE #1 labeled 8304_1; or

· change the frequency (band) for communicating with NR-UE #1 labeled 8304_1 from the first frequency (band) to the second frequency (band), which is different from the first frequency (band).

When gNB 7901 and NR-UE #1 perform communication using the first frequency (band) and the second frequency (band), gNB 7901 obtains this information and stops communication with NR-UE #1 labeled 8304_1 using the first frequency (band).

Next, another example will be described.

As in FIG. 83A, there are gNB 7901, first standard AP 7902, and NR-UE #1 labeled 8304_1.

In this case, gNB 7901 and NR-UE #1 labeled 8304_1 perform the LBT processing, the example of which is in Embodiment 7, 8, 11, and 12, in the first frequency (band); consequently, gNB 7901 and NR-UE #1 labeled 8304_1 start communication in the first frequency (band).

Thus, gNB 7901 performs transmit beamforming to transmit a modulation signal in the first frequency (band), and NR-UE #1 labeled 8304_1 performs receive beamforming to receive the modulation signal.

In addition, NR-UE #1 labeled 8304_1 performs transmit beamforming to transmit a modulation signal in the first frequency (band), and gNB 7901 performs receive beamforming to receive the modulation signal.

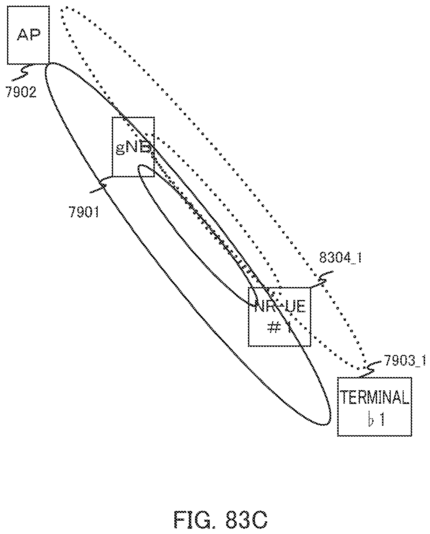

Then, the state is changed to that in FIG. 83C after some time has elapsed. Note that, in FIG. 83C, components that operate in the same manner as in FIG. 79 or FIG. 83B are denoted by the same reference signs.

As is the case with FIG. 83A, gNB 7901 and NR-UE #1 labeled 8304_1 continue to communicate with each other in the first frequency (band).

Then, first standard AP 7902 starts communication according to the first standard with terminal ♭1 labeled 7903_1 in the first frequency (band).

First standard AP 7902 performs transmit beamforming to transmit a modulation signal in the first frequency (band), and terminal ♭1 labeled 7903_1 performs receive beamforming to receive the modulation signal.

In addition, terminal ♭1 labeled 7903_1 performs transmit beamforming to transmit a modulation signal in the first frequency (band), and first standard AP 7902 performs receive beamforming to receive the modulation signal.

At this time, NR-UE #1 labeled 8304_1 receives the modulation signal transmitted by gNB 7901, but NR-UE #1 labeled 8304_1 is subject to interference from "the modulation signal transmitted by first standard AP 7902 and the modulation signal transmitted by terminal ♭1 labeled 7903_1".

This causes NR-UE #1 labeled 8304_1 to have significantly lower data reception quality in receiving the modulation signal transmitted by gNB 7901 in the case of the state in FIG. 83C.

Accordingly, when NR-UE #1 labeled 8304_1 receives the modulation signal transmitted by gNB 7901, obtains data, and performs data error detection using an error detection code such as a cyclic redundancy check (CRC), for example, the data has an error in more cases.

In addition, gNB 7901 has significantly lower data reception quality in receiving the modulation signal transmitted by NR-UE #1 labeled 8304_1.

Thus, when there are many data errors although NR-UE #1 labeled 8304_1 determines that the received field strength is high by measuring, for example, a received signal strength indicator (RSSI), NR-UE #1 labeled 8304_1 indicates, to gNB 7901, information indicating that "it is subject to interference from another apparatus (in an unusual state)". Note that, when NR-UE #1 labeled 8304_1 indicates, to gNB 7901, the information indicating that "it is subject to interference from another apparatus (in an unusual state)", NR-UE #1 labeled 8304_1 can transmit a modulation signal including this information using the second frequency (band) for precise indication in the case of FIG. 83C.

Then, gNB 7901 obtains the information, and may:

· stop communication with NR-UE #1 labeled 8304_1 in the first frequency (band); or

· change the frequency (band) for communicating with NR-UE #1 labeled 8304_1 from the first frequency (band) to the second frequency (band), which is different from the first frequency (band).

When gNB 7901 and NR-UE #1 perform communication using the first frequency (band) and the second frequency (band), gNB 7901 obtains this information and stops communication with NR-UE #1 labeled 8304_1 using the first frequency (band).

Note that, in a case where the gNB for communication in the first frequency band is 7901 in FIGS. 83B and 83C, the gNB for communication in the second frequency band may also be 7901, or the gNB for communication in the second frequency band may be a gNB located different from 7901.

In a case where the gNB for communication in the second frequency band is a gNB located different from 7901, the gNB may communicate with gNB 7901 by wire or by radio. This makes it possible to share information.

Implementing as described above allows the communication between the gNB and NR-UE to have high data reception quality.

Note that the processing described in the present embodiment or a part of the processing is performed by the transmission/reception apparatus in FIG. 53 or FIG. 54. The configurations of the gNB and NR-UE, however, are not limited to the configurations in FIGS. 53 and 54.

(Embodiment 16)

In Embodiment 16, a description will be given of a variation of "the second LBT (directional LBT) processing and the third LBT (LBT in which both omni-directional LBT processing and directional LBT processing are performed) processing" described in Embodiments 7, 8, 11, 12, and 13.

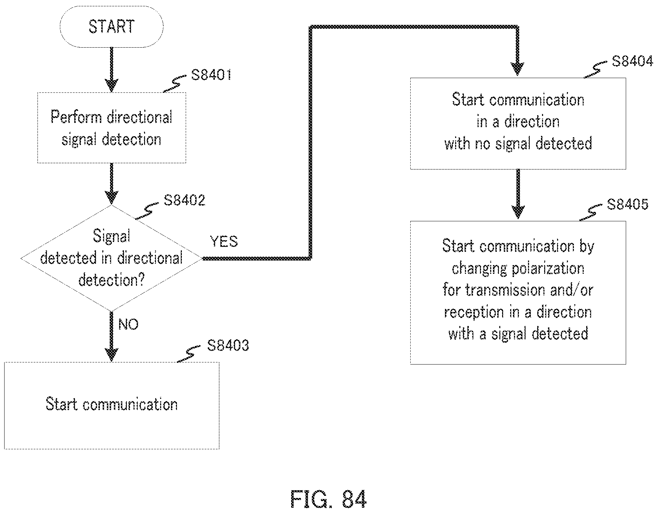

FIG. 84 is a flowchart of an LBT processing variation of "the second LBT (directional LBT) processing and the third LBT (LBT in which both omni-directional LBT processing and directional LBT processing are performed) processing" performed by gNB and NR-UE.

The gNB and NR-UE perform the directional signal detection (S8401).

By performing S8401, the gNB and NR-UE determine whether a signal is detected by the directional detection (S8402).

When no signal is detected by the directional detection (NO in S8402), the gNB and NR-UE start communication (S8403).

When a signal is detected by the directional detection (YES in S8402), the gNB and NR-UE can start communication in a direction in which no signal is detected (S8404).

For the direction in which a signal is detected, the gNB and NR-UE can start communication by changing polarization for transmission and/or reception (S8405).

For example, the gNB and NR-UE perform the signal detection using the first polarization (e.g., vertical polarization) in S8401, and a signal is detected in beam #1. Then, the gNB and NR-UE can start communication using beam #1 by changing the polarization used for beam #1 to the second polarization (e.g., horizontal polarization), which is different from the first polarization.

As another example, the gNB and NR-UE perform the signal detection using the first polarization (e.g., vertical polarization) in S8401, and a signal is detected when antenna #1 is used. Then, the gNB and NR-UE can start communication using antenna #1 by changing the polarization used for antenna #1 to the second polarization (e.g., horizontal polarization), which is different from the first polarization.

As still another example, the gNB and NR-UE perform the signal detection using the first polarization (e.g., vertical polarization) in S8401, and a signal is detected in beam #1. Then, considering an antenna used for generating beam #1 is antenna #1, the gNB and NR-UE can start communication using beam #1 (and antenna #1) by changing the polarization used for antenna #1 to the second polarization (e.g., horizontal polarization), which is different from the first polarization.

Note that horizontal polarization and vertical polarization have been exemplified as the polarization, but the present embodiment is not limited to the examples, and the same can be implemented using any polarization such as linear polarization, circular polarization, elliptical polarization, right-handed circular (elliptical) polarization, and left-handed circular (elliptical) polarization.

As described above, communication can be started in a direction in which a signal is detected by using polarization different from the polarization used for the signal detection, thereby reducing interference between modulation signals and producing the effect of improving data reception quality in the communication.

Note that the LBT processing in FIG. 84 describes only distinctive processes, but the LBT processing in FIG. 84 may include a process in the LBT processing described in another embodiment and may include another process.

Note that the processing described in the present embodiment or a part of the processing is performed by the transmission/reception apparatus in FIG. 53 or FIG. 54. The configurations of the gNB and NR-UE, however, are not limited to the configurations in FIGS. 53 and 54.

(Embodiment 17)

In Embodiment 17, a description will be given of variations of the LBT and "the operation in which the gNB and NR-UE check whether a signal is present in a direction not used for communication, and when detecting a direction in which no signal is present, the gNB and NR-UE start communication by a beam corresponding to the direction" described above, and processing associated with these.

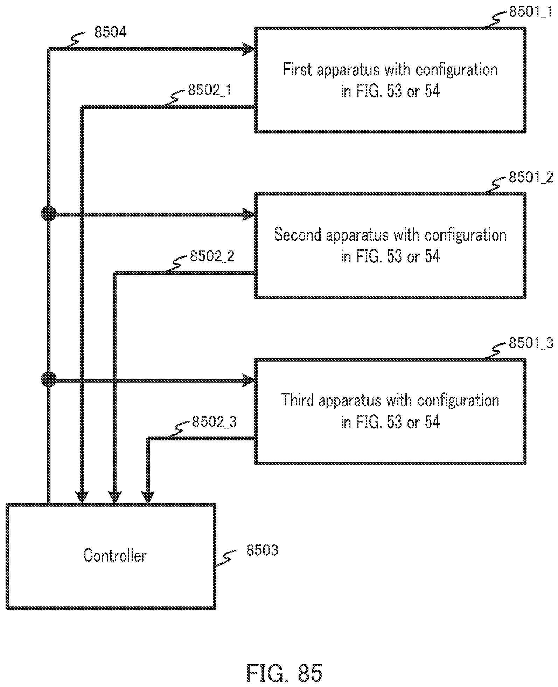

FIG. 85 is an exemplary configuration of the gNB. 8501_1 is the first apparatus with the configuration in FIG. 53 or 54 (hereinafter, referred to as the first apparatus). 8501_2 is the second apparatus with the configuration in FIG. 53 or 54 (hereinafter, referred to as the second apparatus). 8501_3 is the third apparatus with the configuration in FIG. 53 or 54 (hereinafter, referred to as the third apparatus). Note that, in FIG. 85, the gNB includes three "apparatuses with the configuration in FIG. 53 or 54", but the present embodiment is not limited to this and the gNB only needs to include two or more apparatuses.

Controller 8503 takes signal 8502_1 outputted by first apparatus 8501_1, signal 8502_2 outputted by second apparatus 8501_2, and signal 8502_3 outputted by third apparatus 8501_3 as input, and outputs control signal 8504 including signals for controlling first apparatus 8501_1, second apparatus 8501_2, and third apparatus 8501_3. Note that the details will be described later.

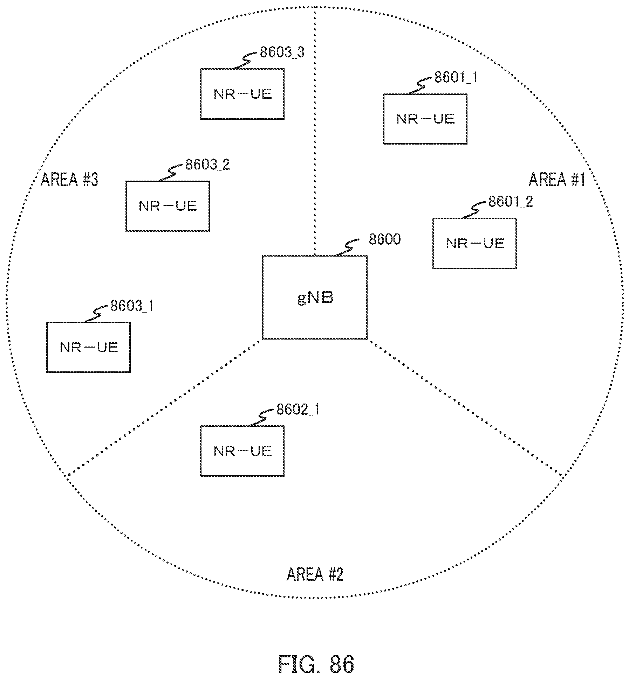

FIG. 86 illustrates an exemplary system in Embodiment 17. gNB 8600 is a gNB with the configuration in FIG. 85. First apparatus 8501_1 in FIG. 85 included in gNB 8600 is capable of communicating with NR-UE 8601_1 and 8601_2 present in area #1 surrounded by dotted lines in FIG. 86. Second apparatus 8501_2 in FIG. 85 included in gNB 8600 is capable of communicating with NR-UE 8602_1 present in area #2 surrounded by dotted lines in FIG. 86. Third apparatus 8501_3 in FIG. 85 included in gNB 8600 is capable of communicating with NR-UE 8603_1, 8603_2, and 8603_3 present in area #3 surrounded by dotted lines in FIG. 86.

Specific operations will be described below with examples.

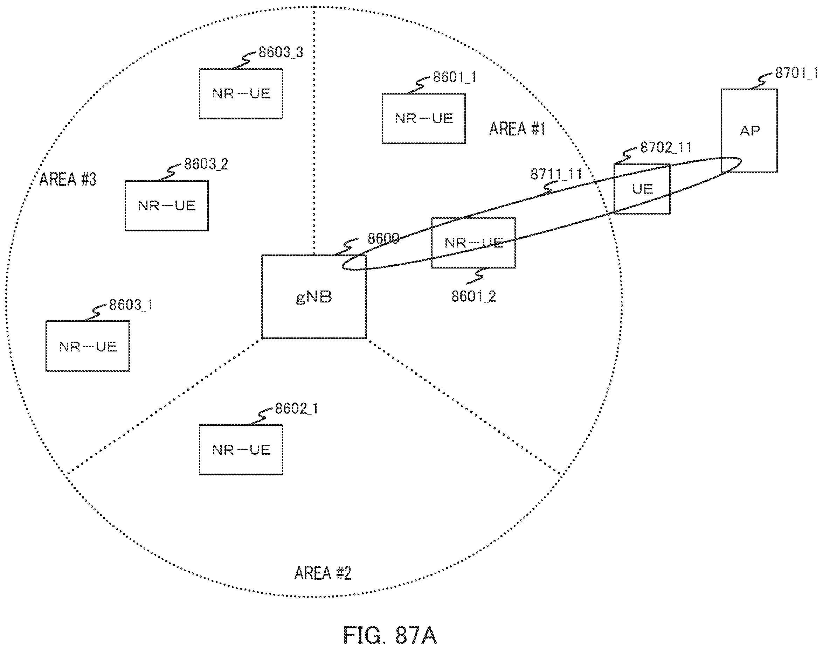

FIG. 87A illustrates an exemplary system, and components that operate in the same manner as in FIG. 86 are denoted by the same reference signs.

In FIG. 87A, first standard AP 8701_1 is present, and first standard AP 8701_1 perform communication with first standard UE 8702_11. Thus, first standard AP 8701_1 generates transmit/receive beam (transmit beam and receive beam) 8711_11.

At this time, gNB 8600 is subject to interference from transmit beam 8711_11 generated by AP 8701_1. Note that the interference of transmit beam 8711_11 is within area #1.

Second apparatus 8501_2 in FIG. 85 included in gNB 8600 and third apparatus 8501_3 in FIG. 85 included in gNB 8600 are not subject to interference from another system, gNB, or the like as in FIG. 87A, and thus second apparatus 8501_2 in FIG. 85 included in gNB 8600 and third apparatus 8501_3 in FIG. 85 included in gNB 8600 perform the LBT processing and determine that communication can be performed. Note that specific examples of the LBT processing have been described in other embodiments.

Accordingly, second apparatus 8501_2 in FIG. 85 included in gNB 8600 starts communication with NR-UE 8602_1, and third apparatus 8501_3 in FIG. 85 included in gNB 8600 starts communication with NR-UE 8603_1, 8603_2, and 8603_3. Then, the processing described in other embodiments of the present disclosure may be performed.

First apparatus 8501_1 in FIG. 85 included in gNB 8600 performs the LBT processing and determines that interference is caused by beam 8711_11. Note that specific examples of the LBT processing have been described in other embodiments.

First apparatus 8501_1 in FIG. 85 included in gNB 8600 determines not to transmit a modulation signal, i.e., not to perform communication, in a direction in which beam 8711_11 is present. First apparatus 8501_1 in FIG. 85 included in gNB 8600 also determines to transmit a modulation signal, i.e., to perform communication, in a direction in which beam 8711_11 is not present. Thus, in the case of FIG. 87A, first apparatus 8501_1 in FIG. 85 included in gNB 8600 does not perform communication with NR-UE 8601_2 but starts communication with NR-UE 8601_1. Note that first apparatus 8501_1 in FIG. 85 included in gNB 8600 may then perform the processing described in other embodiments of the present disclosure.

As described above, first apparatus 8501_1 in FIG. 85 included in gNB 8600, second apparatus 8501_2 in FIG. 85 included in gNB 8600, and third apparatus 8501_3 in FIG. 85 included in gNB 8600 individually perform the LBT processing and determine whether to start communication.

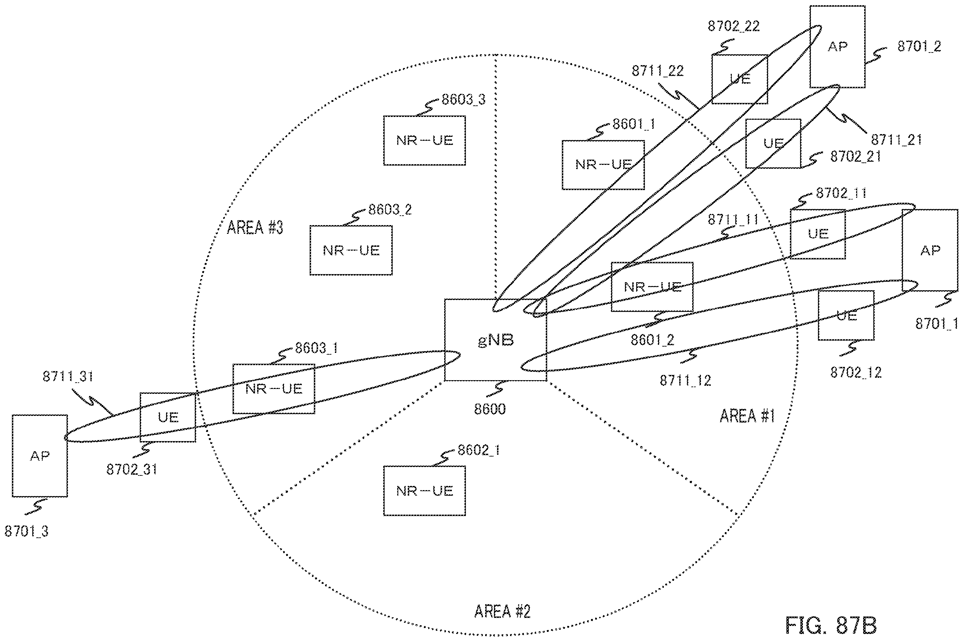

Next, a description will be given with an example of the state in FIG. 87B, which is different from FIG. 87A. FIG. 87B illustrates an exemplary system, and components that operate in the same manner as in FIG. 86 or 87 are denoted by the same reference signs.

In FIG. 87B, first standard AP 8701_1 is present, and first standard AP 8701_1 perform communication with first standard UE 8702_11. Thus, first standard AP 8701_1 generates transmit/receive beam (transmit beam and receive beam) 8711_11.

At this time, gNB 8600 is subject to interference from transmit beam 8711_11 generated by AP 8701_1. Note that the interference of transmit beam 8711_11 is within area #1.

In addition, first standard AP 8701_1 perform communication with first standard UE 8702_12. Thus, first standard AP 8701_1 generates transmit/receive beam (transmit beam and receive beam) 8711_12.

At this time, gNB 8600 is subject to interference from transmit beam 8711_12 generated by AP 8701_1. Note that the interference of transmit beam 8711_12 is within area #1.

In FIG. 87B, first standard AP 8701_2 is also present, and first standard AP 8701_2 perform communication with first standard UE 8702_21. Thus, first standard AP 8701_2 generates transmit/receive beam (transmit beam and receive beam) 8711_21.

At this time, gNB 8600 is subject to interference from transmit beam 8711_21 generated by AP 8701_2. Note that the interference of transmit beam 8711_21 is within area #1.

In addition, first standard AP 8701_2 perform communication with first standard UE 8702_22. Thus, first standard AP 8701_2 generates transmit/receive beam (transmit beam and receive beam) 8711_22.

At this time, gNB 8600 is subject to interference from transmit beam 8711_22 generated by AP 8701_2. Note that the interference of transmit beam 8711_22 is within area #1.

In FIG. 87B, first standard AP 8701_3 is also present, and first standard AP 8701_3 perform communication with first standard UE 8702_31. Thus, first standard AP 8701_3 generates transmit/receive beam (transmit beam and receive beam) 8711_31.

At this time, gNB 8600 is subject to interference from transmit beam 8711_31 generated by AP 8701_3. Note that the interference of transmit beam 8711_31 is within area #3.

Second apparatus 8501_2 in FIG. 85 included in gNB 8600 is not subject to interference from another system, gNB, or the like as in FIG. 87B, and thus second apparatus 8501_2 in FIG. 85 included in gNB 8600 performs the LBT processing and determines that communication can be performed. Note that specific examples of the LBT processing have been described in other embodiments.

Accordingly, second apparatus 8501_2 in FIG. 85 included in gNB 8600 starts communication with NR-UE 8602_1. Then, the processing described in other embodiments of the present disclosure may be performed.

Third apparatus 8501_3 in FIG. 85 included in gNB 8600 performs the LBT processing and determines that interference is caused by beam 8711_31. Note that specific examples of the LBT processing have been described in other embodiments.

Third apparatus 8501_3 in FIG. 85 included in gNB 8600 determines not to transmit a modulation signal, i.e., not to perform communication, in a direction in which beam 8711_31 is present. Third apparatus 8501_3 in FIG. 85 included in gNB 8600 also determines to transmit a modulation signal, i.e., to perform communication, in a direction in which beam 8711_31 is not present. Thus, in the case of FIG. 87B, third apparatus 8501_3 in FIG. 85 included in gNB 8600 does not perform communication with NR-UE 8603_1 but starts communication with NR-UE 8601_2 and 8603_3. Note that third apparatus 8501_3 in FIG. 85 included in gNB 8600 may then perform the processing described in other embodiments of the present disclosure.

First apparatus 8501_1 in FIG. 85 included in gNB 8600 performs the LBT processing and determines that interference is caused by beams 8711_11, 8711_12, and 8711_22. Note that specific examples of the LBT processing have been described in other embodiments.

First apparatus 8501_1 in FIG. 85 included in gNB 8600 determines not to transmit a modulation signal, i.e., not to perform communication, in "a direction in which beam 8711_11 is present, a direction in which beam 8711_12 is present, and a direction in which beam 8711_22 is present". At this time, there are a plurality of directions in which first apparatus 8501_1 in FIG. 85 included in gNB 8600 does not transmit a modulation signal, and thus first apparatus 8501_1 in FIG. 85 included in gNB 8600 may determine not to transmit a modulation signal in all directions. Accordingly, in the case of FIG. 87B, first apparatus 8501_1 in FIG. 85 included in gNB 8600 does not perform communication with NR-UE. Note that first apparatus 8501_1 in FIG. 85 included in gNB 8600 may then perform the processing described in other embodiments of the present disclosure.

As described above, first apparatus 8501_1 in FIG. 85 included in gNB 8600, second apparatus 8501_2 in FIG. 85 included in gNB 8600, and third apparatus 8501_3 in FIG. 85 included in gNB 8600 individually perform the LBT processing and determine whether to start communication.

When gNB 8600 in FIGS. 87A and 87B has the configuration in FIG. 85, "first apparatus with the configuration in FIG. 53 or 54" 8501_1 of gNB 8600 performs the LBT processing and outputs signal 8502_1 including a result of the LBT processing.

For example, the "result of the LBT processing" may include information such as "information whether a signal is present", "information of a direction (or receive beam) in which a signal is present", and "information of a direction (or receive beam) in which no signal is present".

"Second apparatus with the configuration in FIG. 53 or 54" 8501_2 of gNB 8600 performs the LBT processing and outputs signal 8502_2 including a result of the LBT processing.

In addition, "third apparatus with the configuration in FIG. 53 or 54" 8501_3 of gNB 8600 performs the LBT processing and outputs signal 8502_3 including a result of the LBT processing.

Controller 8503 takes signals 8502_1, 8502_2, and 8502_3 each including the result of the LBT processing as input, determines communication starting methods for ""first apparatus with the configuration in FIG. 53 or 54" 8501_1, "second apparatus with the configuration in FIG. 53 or 54" 8501_2, and "third apparatus with the configuration in FIG. 53 or 54" 8501_3", and outputs control signal 8504 including information on the communication methods for respective apparatuses.

Note that exemplary operations in the communication starting methods for ""first apparatus with the configuration in FIG. 53 or 54" 8501_1, "second apparatus with the configuration in FIG. 53 or 54" 8501_2, and "third apparatus with the configuration in FIG. 53 or 54" 8501_3" have been described with reference to FIGS. 87A and 87B.

Then, "first apparatus with the configuration in FIG. 53 or 54" 8501_1 of gNB 8600 takes control signal 8504 including the information on the communication methods for respective apparatuses as input, determines "whether to start communication", "how to transmit a modulation signal (direction to transmit the modulation signal) in the case of starting communication", etc. based on the information of control signal 8504, and operates for communication.

"Second apparatus with the configuration in FIG. 53 or 54" 8501_2 of gNB 8600 takes control signal 8504 including the information on the communication methods for respective apparatuses as input, determines "whether to start communication", "how to transmit a modulation signal (direction to transmit a modulation signal) in the case of starting communication", etc. based on the information of control signal 8504, and operates for communication.

"Third apparatus with the configuration in FIG. 53 or 54" 8501_3 of gNB 8600 takes control signal 8504 including the information on the communication methods for respective apparatuses as input, determines "whether to start communication", "how to transmit a modulation signal (direction to transmit a modulation signal) in the case of starting communication", etc. based on the information of control signal 8504, and operates for communication.

When communication is started, "X-th apparatus with the configuration in FIG. 53 or 54" 8501_X (X is 1, 2, or 3) of gNB 8600 outputs signal 8502_X including a result of the post-LBT processing described in other embodiments of the present disclosure.

Controller 8503 then takes signal 8502_X including a result of the post-LBT processing described in other embodiments of the present disclosure as input, and outputs control signal 8504 including a method of controlling a modulation signal to be transmitted for communication of "X-th apparatus with the configuration in FIG. 53 or 54" 8501_X.

"X-th apparatus with the configuration in FIG. 53 or 54" 8501_X of gNB 8600 takes control signal 8504 including a method of controlling a modulation signal to be transmitted for communication of "X-th apparatus with the configuration in FIG. 53 or 54" 8501_X as input, determines a method of transmitting a modulation signal (e.g., determines a direction to transmit a modulation signal, determines a direction not to transmit a modulation signal, etc.), and controls the method of transmitting a modulation signal.

As described above, first apparatus 8501_1 in FIG. 85 included in gNB 8600, second apparatus 8501_2 in FIG. 85 included in gNB 8600, and third apparatus 8501_3 in FIG. 85 included in gNB 8600 individually perform "the LBT processing or the post-LBT processing caused by the LBT processing" and control communication, thereby producing effects of enhancing the communication quality and improving the data transmission rate.

In FIG. 85, the gNB includes three "apparatuses with the configuration in FIG. 53 or 54", but the present embodiment is not limited to this and the gNB only needs to include two or more apparatuses. The configuration of the gNB is not limited to the configuration in FIG. 85. Although the states of the system are exemplified in FIGS. 87A and 87B, the state of the system is not limited to these examples.

The gNB includes at least "A-th apparatus with the configuration in FIG. 53 or 54" and "B-th apparatus with the configuration in FIG. 53 or 54". Note that A is an integer of 1 or more, B is an integer of 1 or more, and A and B are different from each other. In this case, a frequency (band) for "A-th apparatus with the configuration in FIG. 53 or 54" to perform communication may be the same as or different from a frequency (band) for "B-th apparatus with the configuration in FIG. 53 or 54" to perform communication, or some of the frequencies may be the same (some of the frequencies may be common).

Further, "A-th apparatus with the configuration in FIG. 53 or 54" included in the gNB may switch the frequency used for communication. For example, in FIG. 87B, after "first apparatus 8501_1 in FIG. 85 included in gNB 8600 determines not to transmit a modulation signal in all directions" as in the above description, first apparatus 8501_1 in FIG. 85 included in gNB 8600 may change the frequency (band) to be used.

In the LBT processing, the gNB and NR-UE may perform the signal detection in a plurality of areas in FIG. 86 in a single reception period. (Modulation signals may be transmitted in a plurality of areas in a plurality of reception periods. In this case, time division multiplexing (TDM) may be applied in some sections.) Note that, when the signal detection is performed in a plurality of areas, the frequencies (bands) of a plurality of signals may be the same or different from each other.

When the gNB and NR-UE detect a signal in a single reception period in area #1 and area #2 in FIG. 86, for example, the frequency (band) of a signal in area #1 may be the same as or different from the frequency (band) of a signal in area #2. Note that the gNB and NR-UE, for example, generate receive beam #1 to detect a signal in area #1 and generate receive beam #2 to detect a signal in area #2.

At this time, the case where the frequency (band) of a signal in area #1 is the same as the frequency (band) of a signal in area #2 produces an effect of spatial multiplexing (spatial division multiplexing (SDM)), and the case where the frequency (band) of a signal in area #1 is different from the frequency (band) of a signal in area #2 produces an effect of frequency division multiplexing (FDM).

Note that the gNB and/or NR-UE may control so that the relationship between a signal in area #1 and a signal in area #2 is any one of "spatial multiplexing (spatial division multiplexing (SDM))", "frequency division multiplexing (FDM)", and "time division multiplexing (TDM)". Further, the gNB and/or NR-UE may switch the relationship between a signal in area #1 and a signal in area #2 so that it is any one of "spatial multiplexing (spatial division multiplexing (SDM))", "frequency division multiplexing (FDM)", and "time division multiplexing (TDM)" as time passes.

It is assumed that the gNB and NR-UE perform the LBT processing and do not use more than one direction in the plurality of areas in FIG. 86 for communication. At this time, the gNB and NR-UE may perform the signal detection in the plurality of areas in a single reception period. (The signal detection may be performed in the plurality of areas in a plurality of reception periods. In this case, time division multiplexing (TDM) may be applied in some sections.)

For example, the gNB and NR-UE perform the LBT processing and there are directions not to be used for communication in area #1 and area #2 in FIG. 86. Then, the gNB and NR-UE may perform detection of a signal in area #1 and a signal in area #2 in a single reception period. At this time, the frequency (band) of a signal in area #1 may be the same as or different from the frequency (band) of a signal in area #2. Note that the gNB and NR-UE, for example, generate receive beam #1 to detect a signal in area #1 and generate receive beam #2 to detect a signal in area #2.

At this time, the case where the frequency (band) of a signal in area #1 is the same as the frequency (band) of a signal in area #2 produces an effect of spatial multiplexing (spatial division multiplexing (SDM)), and the case where the frequency (band) of a signal in area #1 is different from the frequency (band) of a signal in area #2 produces an effect of frequency division multiplexing (FDM).

Note that the gNB and/or NR-UE may control so that the relationship between a signal in area #1 and a signal in area #2 is any one of "spatial multiplexing (spatial division multiplexing (SDM))", "frequency division multiplexing (FDM)", and "time division multiplexing (TDM)". Further, the gNB and/or NR-UE may switch the relationship between a signal in area #1 and a signal in area #2 so that it is any one of "spatial multiplexing (spatial division multiplexing (SDM))", "frequency division multiplexing (FDM)", and "time division multiplexing (TDM)" as time passes.

In addition, after the LBT processing, the gNB and NR-UE may simultaneously transmit modulation signals in the plurality of areas in FIG. 86 where communication can be performed. (Modulation signals may be transmitted in the plurality of areas in a plurality of reception periods. In this case, time division multiplexing (TDM) may be applied in some sections.)

For example, there are certain directions in area #1 and area #2 in which the gNB and NR-UE can perform communication as a result of the LBT processing. In this case, when the gNB and NR-UE each transmit the first modulation signal in area #1 and the second modulation signal in area #2, the first modulation signal and the second modulation signal may be present in the same time period. Note that the gNB and NR-UE, for example, generate transmit beam #1 to transmit a signal in area #1 and generate transmit beam #2 to transmit a signal in area #2.

The frequency (band) of the first modulation signal may be the same as or different from the frequency (band) of the second modulation signal. The case where the frequency (band) of the first modulation signal is the same as the frequency (band) of the second modulation signal produces an effect of spatial multiplexing (spatial division multiplexing (SDM)), and the case where the frequency (band) of the first modulation signal is different from the frequency (band) of the second modulation signal produces an effect of frequency division multiplexing (FDM).

Note that the gNB and/or NR-UE may control so that the relationship between the first modulation signal and the second modulation signal is any one of "spatial multiplexing (spatial division multiplexing (SDM))", "frequency division multiplexing (FDM)", and "time division multiplexing (TDM)". Further, the gNB and/or NR-UE may switch the relationship between the first modulation signal and the second modulation signal so that it is any one of "spatial multiplexing (spatial division multiplexing (SDM))", "frequency division multiplexing (FDM)", and "time division multiplexing (TDM)" as time passes.

As another example, it is assumed that the gNB and NR-UE perform the LBT processing and do not use more than one direction in the plurality of areas in FIG. 86. At this time, the gNB and NR-UE may perform the signal detection in the plurality of areas and simultaneously transmit modulation signals in two or more areas. (Note that it need not be simultaneous. In this case, time division multiplexing (TDM) may be applied in some sections.)

For example, the gNB and NR-UE perform the LBT processing and there are directions not to be used for communication in area #1 and area #2 in FIG. 86. (The directions are referred to as the first direction in area #1 and the second direction in area #2.) Then, the gNB and NR-UE may perform the signal detection in the first direction in area #1 and the second direction in area #2 and simultaneously transmit modulation signals in the first direction in area #1 and the second direction in area #2. Note that the gNB and NR-UE, for example, generate transmit beam #1 to transmit a signal in the first direction in area #1 and generate transmit beam #2 to transmit a signal in the second direction in area #2.

The frequency (band) of a signal in the first direction in area #1 may be the same as or different from the frequency (band) of a signal in the second direction in area #2. The case where the frequency (band) of a signal in the first direction in area #1 is the same as the frequency (band) of a signal in the second direction in area #2 produces an effect of spatial multiplexing (spatial division multiplexing (SDM)), and the case where the frequency (band) of a signal in the first direction in area #1 is different from the frequency (band) of a signal in the second direction in area #2 produces an effect of frequency division multiplexing (FDM).

Note that the gNB and/or NR-UE may control so that the relationship between a signal in the first direction in area #1 and a signal in the second direction in area #2 is any one of "spatial multiplexing (spatial division multiplexing (SDM))", "frequency division multiplexing (FDM)", and "time division multiplexing (TDM)". Further, the gNB and/or NR-UE may switch the relationship between a signal in the first direction in area #1 and a signal in the second direction in area #2 so that it is any one of "spatial multiplexing (spatial division multiplexing (SDM))", "frequency division multiplexing (FDM)", and "time division multiplexing (TDM)" as time passes.

(Embodiment 18)

In Embodiments 1 to 6, descriptions have been given of the case where "the gNB and NR-UE transmit an OFDMA modulation signal and a multi-carrier modulation signal" and the case where "the gNB and NR-UE transmit a sector sweep signal and a sector sweep reference signal at the time of OFDMA and multi-carrier". In Embodiment 18, examples of an LBT method etc. in these cases will be described.

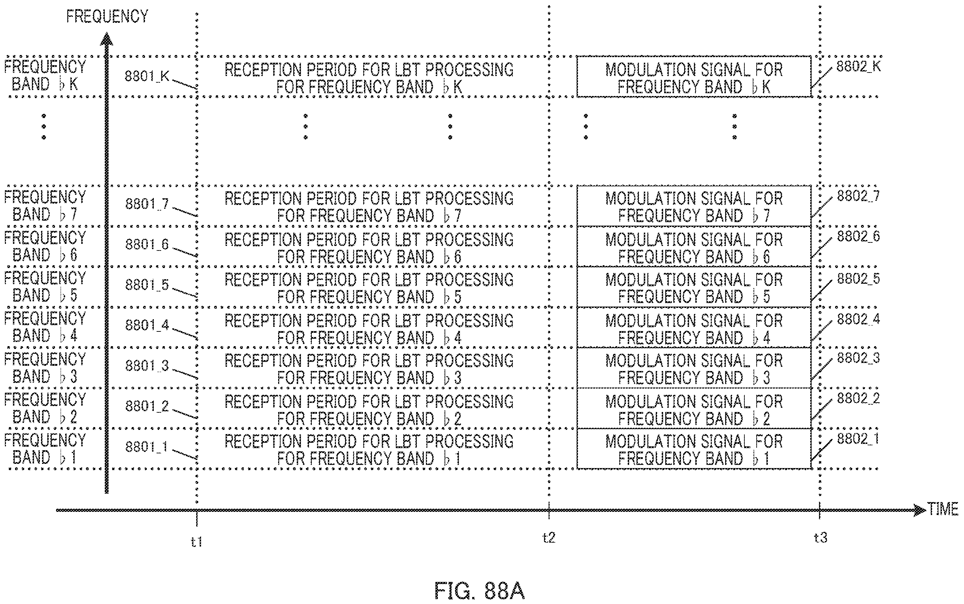

FIG. 88A illustrates an exemplary state of the gNB and NR-UE, and the horizontal axis represents time while the vertical axis represents frequency. On the frequency axis, there are "frequency band $♭1$", "frequency band $♭2$", "frequency band $♭3$", ..., "frequency band $♭K$" as illustrated in FIG. 88A. Note that K is an integer equal to or greater than 2.

As illustrated in FIG. 88A, there is reception period 8801_1 for LBT processing for frequency band $♭1$ in frequency band $♭1$ from time t1 to time t2. Thus, the gNB and NR-UE perform the LBT processing in frequency band $♭1$ by determining whether a signal is present in frequency band $♭1$ using reception period 8801_1 for LBT processing for frequency band $♭1$.

Likewise, there is reception period 8801_2 for LBT processing for frequency band $♭2$ in frequency band $♭2$ from time t1 to time t2. Thus, the gNB and NR-UE perform the LBT processing in frequency band $♭2$ by determining whether a signal is present in frequency band $♭2$ using reception period 8801_2 for LBT processing for frequency band $♭2$.

That is, in FIG. 88A, there is reception period 8801_i for LBT processing for frequency band bi in frequency band bi from time t1 to time t2. Note that i is an integer from 1 to K (both inclusive). Thus, the gNB and NR-UE perform the LBT processing in frequency band bi by determining whether a signal is present in frequency band bi using reception period 8801_i for LBT processing for frequency band bi.

For example, it is assumed that there is a direction in which the gNB and NR-UE detect no signal in reception period 8801_1 for LBT processing for frequency band $♭1$, as in FIG. 88A. Then, the gNB and NR-UE transmit "modulation signal 8802_1 for frequency band $♭1$" in frequency band $♭1$ at or after time t2.

Note that the configuration of a modulation signal transmitted by the gNB and NR-UE (e.g., sector sweep reference signal, feedback signal, data symbol, PDCCH, PDSCH, PUCCH, PUSCH, SS block, PBCH, SS/PBCH block, etc.) has been described in, for example, Embodiments 1 to 6 or the like, and thus the description thereof will be omitted.

The LBT processing methods (e.g., "omni-directional LBT", "directional LBT", "LBT in which both omni-directional LBT processing and directional LBT processing are performed", etc.) have been described in detail in Embodiment 7 or later, and thus the description thereof will be omitted. In terms of "modulation signal 8802_1 for frequency band $♭1$", there may be a beam in which no modulation signal is present depending on the beam.

In addition, in terms of "modulation signal 8802_1 for frequency band $♭1$", there may be an antenna from which no modulation signal is transmitted depending on the antenna. These have been described in other embodiments.

Similarly, in the case of FIG. 88A, it is assumed that there is a direction in which the gNB and NR-UE detect no signal in reception period 8801_i for LBT processing for frequency band 6i. Then, the gNB and NR-UE transmit "modulation signal 8802_i for frequency band bi" in frequency band bi at or after time t2. At this time, i is an integer from 1 to K (both inclusive).

Note that the configuration of a modulation signal transmitted by the gNB and NR-UE (e.g., sector sweep reference signal, feedback signal, data symbol, PDCCH, PDSCH, PUCCH, PUSCH, SS block, PBCH, SS/PBCH block, etc.) has been described in, for example, Embodiments 1 to 6 or the like, and thus the description thereof will be omitted.

The LBT processing methods (e.g., "omni-directional LBT", "directional LBT", "LBT in which both omni-directional LBT processing and directional LBT processing are performed", etc.) have been described in detail in Embodiment 7 or later, and thus the description thereof will be omitted. In terms of "modulation signal 8802_i for frequency band $♭i$", there may be a beam in which no modulation signal is present depending on the beam.

In addition, in terms of "modulation signal 8802_i for frequency band $♭i$", there may be an antenna from which no modulation signal is transmitted depending on the antenna. These have been described in other embodiments.

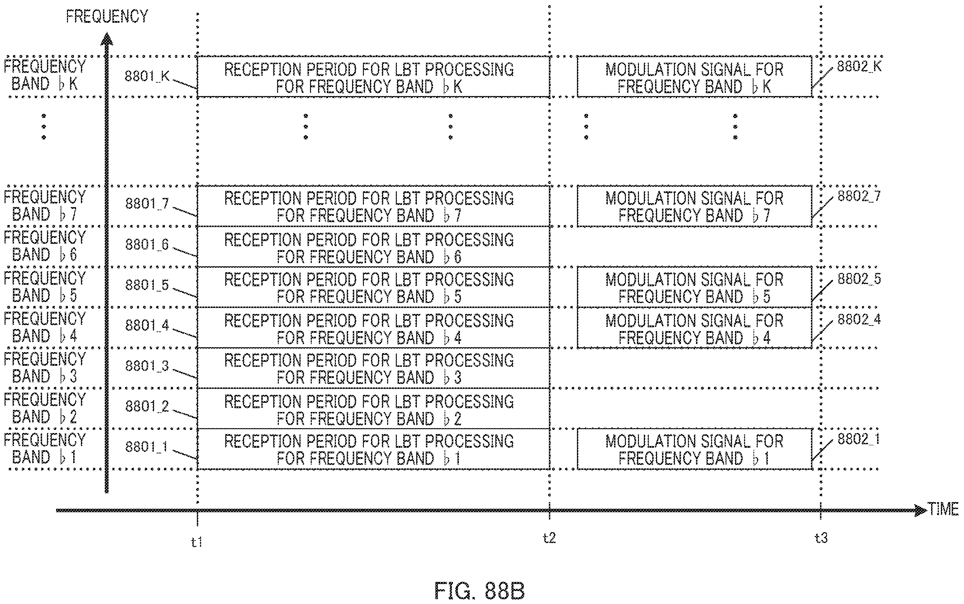

FIG. 88B illustrates an exemplary state of the gNB and NR-UE different from that in FIG. 88A, and the horizontal axis represents time while the vertical axis represents frequency. In FIG. 88B, components that operate in the same manner as in FIG. 88A are denoted by the same reference signs, and the description thereof will be omitted.

As illustrated in FIG. 88B, there is reception period 8801_1 for LBT processing for frequency band ♭1 in frequency band ♭1 from time t1 to time t2. Thus, the gNB and NR-UE perform the LBT processing in frequency band ♭1 by determining whether a signal is present in frequency band ♭1 using reception period 8801_1 for LBT processing for frequency band b 1.

Likewise, there is reception period 8801_2 for LBT processing for frequency band ♭2 in frequency band ♭2 from time t1 to time t2. Thus, the gNB and NR-UE perform the LBT processing in frequency band ♭2 by determining whether a signal is present in frequency band ♭2 using reception period 8801_2 for LBT processing for frequency band ♭2.

That is, in FIG. 88B, there is reception period 8801_i for LBT processing for frequency band bi in frequency band bi from time t1 to time t2. Note that i is an integer from 1 to K (both inclusive). Thus, the gNB and NR-UE perform the LBT processing in frequency band bi by determining whether a signal is present in frequency band bi using reception period 8801_i for LBT processing for frequency band bi.

For example, it is assumed that there is a direction in which the gNB and NR-UE detect no signal in reception period 8801_1 for LBT processing for frequency band ♭1, as in FIG. 88B similar to FIG. 88A. Then, the gNB and NR-UE transmit "modulation signal 8802_1 for frequency band ♭1" in frequency band ♭1 at or after time t2.

Note that the configuration of a modulation signal transmitted by the gNB and NR-UE (e.g., sector sweep reference signal, feedback signal, data symbol, PDCCH, PDSCH, PUCCH, PUSCH, SS block, PBCH, SS/PBCH block, etc.) has been described in, for example, Embodiments 1 to 6 or the like, and thus the description thereof will be omitted.

The LBT processing methods (e.g., "omni-directional LBT", "directional LBT", "LBT in which both omni-directional LBT processing and directional LBT processing are performed", etc.) have been described in detail in Embodiment 7 or later, and thus the description thereof will be omitted. In terms of "modulation signal 8802_1 for frequency band ♭1", there may be a beam in which no modulation signal is present depending on the beam.

In addition, in terms of "modulation signal 8802_1 for frequency band ♭1", there may be an antenna from which no modulation signal is transmitted depending on the antenna. These have been described in other embodiments.

As in FIG. 88B, it is assumed that there is a direction in which the gNB and NR-UE detect no signal in reception period 8801_4 for LBT processing for frequency band ♭4. Then, the gNB and NR-UE transmit "modulation signal 8802_4 for frequency band ♭4" in frequency band ♭4 at or after time t2.

Note that the configuration of a modulation signal transmitted by the gNB and NR-UE (e.g., sector sweep reference signal, feedback signal, data symbol, PDCCH, PDSCH, PUCCH, PUSCH, SS block, PBCH, SS/PBCH block, etc.) has been described in, for example, Embodiments 1 to 6 or the like, and thus the description thereof will be omitted.

The LBT processing methods (e.g., "omni-directional LBT", "directional LBT", "LBT in which both omni-directional LBT processing and directional LBT processing are performed", etc.) have been described in detail in Embodiment 7 or later, and thus the description thereof will be omitted. In terms of "modulation signal 8802_4 for frequency band ♭4", there may be a beam in which no modulation signal is present depending on the beam.

In addition, in terms of "modulation signal 8802_4 for frequency band ♭4", there may be an antenna from which no modulation signal is transmitted depending on the antenna. These have been described in other embodiments.

As in FIG. 88B, it is assumed that there is a direction in which the gNB and NR-UE detect no signal in reception period 8801_5 for LBT processing for frequency band ♭5. Then, the gNB and NR-UE transmit "modulation signal 8802_4 for frequency band ♭5" in frequency band ♭5 at or after time t2.

Note that the configuration of a modulation signal transmitted by the gNB and NR-UE (e.g., sector sweep reference signal, feedback signal, data symbol, PDCCH, PDSCH, PUCCH, PUSCH, SS block, PBCH, SS/PBCH block, etc.) has been described in, for example, Embodiments 1 to 6 or the like, and thus the description thereof will be omitted.

The LBT processing methods (e.g., "omni-directional LBT", "directional LBT", "LBT in which both omni-directional LBT processing and directional LBT processing are performed", etc.) have been described in detail in Embodiment 7 or later, and thus the description thereof will be omitted. In terms of "modulation signal 8802_5 for frequency band ♭5", there may be a beam in which no modulation signal is present depending on the beam.

In addition, in terms of "modulation signal 8802_5 for frequency band ♭5", there may be an antenna from which no modulation signal is transmitted depending on the antenna. These have been described in other embodiments.

As in FIG. 88B, it is assumed that there is a direction in which the gNB and NR-UE detect no signal in reception period 8801_7 for LBT processing for frequency band ♭7. Then, the gNB and NR-UE transmit "modulation signal 8802_4 for frequency band ♭7" in frequency band ♭7 at or after time t2.

Note that the configuration of a modulation signal transmitted by the gNB and NR-UE (e.g., sector sweep reference signal, feedback signal, data symbol, PDCCH, PDSCH, PUCCH, PUSCH, SS block, PBCH, SS/PBCH block, etc.) has been described in, for example, Embodiments 1 to 6 or the like, and thus the description thereof will be omitted.

The LBT processing methods (e.g., "omni-directional LBT", "directional LBT", "LBT in which both omni-directional LBT processing and directional LBT processing are performed", etc.) have been described in detail in Embodiment 7 or later, and thus the description thereof will be omitted. In terms of "modulation signal 8802_7 for frequency band ♭7", there may be a beam in which no modulation signal is present depending on the beam.

In addition, in terms of "modulation signal 8802_7 for frequency band ♭7", there may be an antenna from which no modulation signal is transmitted depending on the antenna. These have been described in other embodiments.

As in FIG. 88B, it is assumed that there is a direction in which the gNB and NR-UE detect no signal in reception period 8801_K for LBT processing for frequency band ♭K. Then, the gNB and NR-UE transmit "modulation signal 8802_4 for frequency band ♭K" in frequency band ♭K at or after time t2.

Note that the configuration of a modulation signal transmitted by the gNB and NR-UE (e.g., sector sweep reference signal, feedback signal, data symbol, PDCCH, PDSCH, PUCCH, PUSCH, SS block, PBCH, SS/PBCH block, etc.) has been described in, for example, Embodiments 1 to 6 or the like, and thus the description thereof will be omitted.

The LBT processing methods (e.g., "omni-directional LBT", "directional LBT", "LBT in which both omni-directional LBT processing and directional LBT processing are performed", etc.) have been described in detail in Embodiment 7 or later, and thus the description thereof will be omitted. In terms of "modulation signal 8802_K for frequency band ♭K", there may be a beam in which no modulation signal is present depending on the beam.

In addition, in terms of "modulation signal 8802_K for frequency band ♭K", there may be an antenna from which no modulation signal is transmitted depending on the antenna. These have been described in other embodiments.

Meanwhile, it is assumed that the gNB and NR-UE detect a signal in reception period 8801_2 for LBT processing for frequency band ♭2. Then, the gNB and NR-UE does not transmit a modulation signal in frequency band ♭2 at or after time t2.

Likewise, it is assumed that the gNB and NR-UE detect a signal in reception period 8801_3 for LBT processing for frequency band ♭3. Then, the gNB and NR-UE does not transmit a modulation signal in frequency band ♭3 at or after time t2.

It is assumed that the gNB and NR-UE detect a signal in reception period 8801_6 for LBT processing for frequency band ♭6. Then, the gNB and NR-UE does not transmit a modulation signal in frequency band ♭6 at or after time t2.

Note that the state of the gNB and NR-UE is exemplified in FIGS. 88A and 88B, but the state is not limited to these. For example, there may be a time period in which a communication counterpart transmits a modulation signal. Further, the gNB and NR-UE may transmit a modulation signal immediately after performing the LBT, or may transmit a modulation signal some time after performing the LBT.

There are reception periods for LBT processing in the same time period in frequency band ♭1 to frequency band ♭K of FIGS. 88A and 88B, but the reception periods for LBT processing need not be present in the same time period.

Embodiment 8 has a description of the case of "performing the LBT and not transmitting a sector sweep reference signal using an antenna that has detected a signal" with reference to FIG. 62A. The processing of "performing the LBT and not transmitting a sector sweep reference signal using an antenna that has detected a signal" may be performed in each of the frequency bands from "frequency band ♭1" to "frequency band ♭K" described above.

Embodiment 8 also has a description of the case of "performing the LBT and not transmitting a sector sweep reference signal using a beam in which a signal has detected" with reference to FIG. 62B. The processing of "performing the LBT and not transmitting a sector sweep reference signal using a beam in which a signal has detected" may be performed in each of the frequency bands from "frequency band ♭1" to "frequency band ♭K" described above.

Embodiments 8, 9, and 10 have a description of "the gNB and NR-UE perform the second LBT processing (directional LBT) or the third LBT processing (LBT in which both omni-directional LBT processing and directional LBT processing are performed) and start communication without using more than one direction for the communication. Then, after starting the communication, the gNB and NR-UE check whether a signal is present in a direction not used for the communication, and when detecting a direction in which no signal is present, the gNB and NR-UE may start communication by a beam corresponding to the direction". The processing described in Embodiments 8, 9, and 10 may be performed in each of the frequency bands from "frequency band $b$ 1" to "frequency band $b$ K" described above. The examples will be described below.

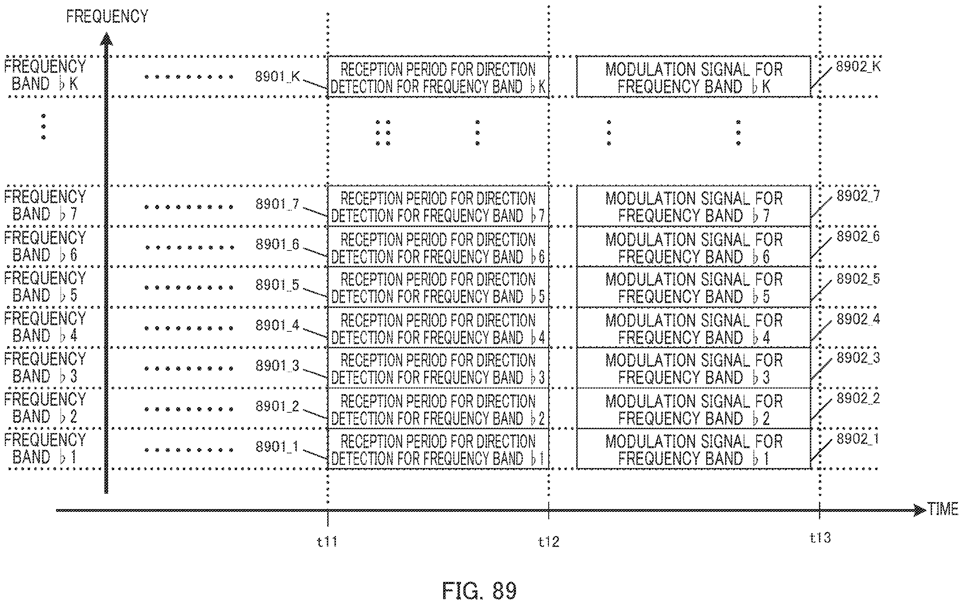

FIG. 89 illustrates an exemplary state of the gNB and NR-UE, and the horizontal axis represents time while the vertical axis represents frequency. On the frequency axis, there are "frequency band $b$ 1", "frequency band $b$ 2", "frequency band $b$ 3", ..., "frequency band $b$ K" as illustrated in FIG. 89. Note that K is an integer equal to or greater than 2.

The gNB and NR-UE "perform the LBT and then transmit a modulation signal in each frequency band" as in FIG. 88A. FIG. 89 illustrates an exemplary state of the gNB and NR-UE after that. Note that the gNB and NR-UE may "perform the LBT and then transmit a modulation signal in each frequency band" as described in the present specification.

In FIG. 88A, the gNB and NR-UE assume that there is a "direction in which a signal is present" (assume that there is a receive beam in which a signal is detected) in frequency band $b$ 1, and do not start communication in that direction.

Likewise, the gNB and NR-UE assume that there is a "direction in which a signal is present" (assume that there is a receive beam in which a signal is detected) in frequency band bi, and do not start communication in that direction. Note that i is an integer from 1 to K (both inclusive).

In FIG. 89, there is reception period 8901_1 for direction (beam) detection for frequency band b 1 from time t11 to time 112 in frequency band b 1.

Similarly, there is reception period 8901_i for direction (beam) detection for frequency band bi from time t11 to time 112 in frequency band 6i. Note that i is an integer from 1 to K (both inclusive).

"Reception period 8901_i for direction (beam) detection for frequency band bi" in FIG. 89 corresponds to "reception period 6801 for direction (beam) detection" in FIG. 68, "reception period 6901 for direction (beam) detection" in FIG. 69, and "reception period 7001 for direction (beam) detection" in FIG. 70.

It is assumed that the gNB and NR-UE determine a direction not to be used for communication in frequency band b 1 (referred to as the first direction) by using "reception period 8801_1 for LBT processing for frequency band $b$ 1 in FIG. 88A".

Then, the gNB and NR-UE determine whether a signal is present in the first direction in frequency band $b$ 1 by using "reception period 8901_1 for direction (beam) detection for frequency band $b$ 1" in FIG. 89.

When the gNB and NR-UE determine that a signal is present in the first direction, the gNB and NR-UE determine not to use the first direction for communication, for example, for modulation signal 8902_1 for frequency band b 1. When the gNB and NR-UE determine that no signal is present in the first direction, the gNB and NR-UE can use the first direction for communication, for example, for modulation signal 8902_1 for frequency band b 1.

Likewise, it is assumed that the gNB and NR-UE determine a direction not to be used for communication in frequency band bi (referred to as the i-th direction) by using "reception period 8801_i for LBT processing for frequency band bi in FIG. 88A". Note that i is an integer from 1 to K (both inclusive).

Then, the gNB and NR-UE determine whether a signal is present in the i-th direction in frequency band bi by using "reception period 8901_i for direction (beam) detection for frequency band bi" in FIG. 89.

When the gNB and NR-UE determine that a signal is present in the i-th direction, the gNB and NR-UE determine not to use the i-th direction for communication, for example, for modulation signal 8902_i for frequency band 6i. When the gNB and NR-UE determine that no signal is present in the i-th direction, the gNB and NR-UE can use the i-th direction for communication, for example, for modulation signal 8902_i for frequency band bi.

Note that "reception period 8901_i for direction (beam) detection for frequency band bi" in FIG. 89 corresponds to "reception period 6801 for direction (beam) detection" in FIG. 68, "reception period 6901 for direction (beam) detection" in FIG. 69, and "reception period 7001 for direction (beam) detection" in FIG. 70, and thus specific operations in "reception period 8901_i for direction (beam) detection for frequency band bi" are as described in other embodiments.

Although FIG. 89 has been described as an exemplary state of the gNB and NR-UE, the state is not limited to this. For example, there may be a time period in which a communication counterpart transmits a modulation signal. Further, the gNB and NR-UE may transmit a modulation signal immediately after the direction (beam) detection in FIG. 89, or may transmit a modulation signal some time after the direction (beam) detection.

In FIG. 89, there are reception periods for direction (beam) detection in the same time period in frequency band $b$ 1 to frequency band $b$ K, but the reception periods for direction (beam) detection need not be present in the same time period.

The names of signals, frames, etc. in FIG. 89 are not limited to those in the drawing, and other names may be used.

The above operation allows the gNB and NR-UE to perform the LBT with fine frequency granularity and to select a frequency and a direction in which communication can be started with little interference, thereby producing the effect of improving the system data throughput of a system including the gNB, NR-UE, etc.

Further, the determination of a direction, a beam, and an antenna to be used for communication by the gNB and NR-UE with fine frequency granularity produces the effect of improving the system data throughput of a system including the gNB, NR-UE, etc.

Note that the processing described in the present embodiment or a part of the processing is performed by the transmission/reception apparatus in FIG. 53 or FIG. 54. The configurations of the gNB and NR-UE, however, are not limited to the configurations in FIGS. 53 and 54.

(Embodiment 19)

In Embodiments 1 to 6, descriptions have been given of the case where "the gNB and NR-UE transmit an OFDMA modulation signal and a multi-carrier modulation signal" and the case where "the gNB and NR-UE transmit a sector sweep signal and a sector sweep reference signal at the time of OFDMA and multi-carrier". In Embodiment 19, variations of an LBT method etc. in these cases will be described.

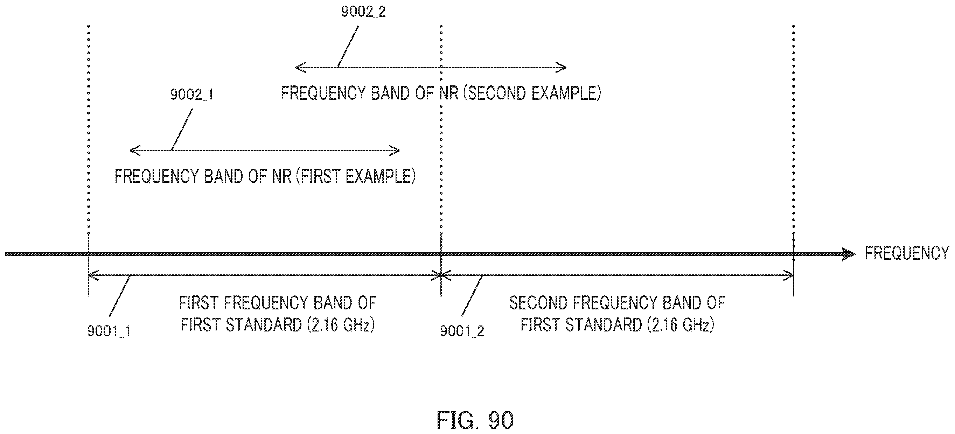

FIG. 90 illustrates exemplary frequency allocation in the present embodiment, and the horizontal axis represents frequency. As illustrated in FIG. 90, first frequency band 9001_1 of the first standard and second frequency band 9001_2 of the first standard are aligned. Note that first frequency band 9001_1 of the first standard and second frequency band 9001_2 of the first standard each have a bandwidth of 2.16 GHz, for example.

Then, the frequency band of NR such as the gNB and NR-UE is, for example, frequency band 9002_1 of NR or frequency band 9002_2 of NR. At this time, frequency band 9002_1 of NR is referred to as a first example, and frequency band 9002_2 of NR is referred to as a second example. Exemplary operations in the first example and the second example will be described below.

(First Example)

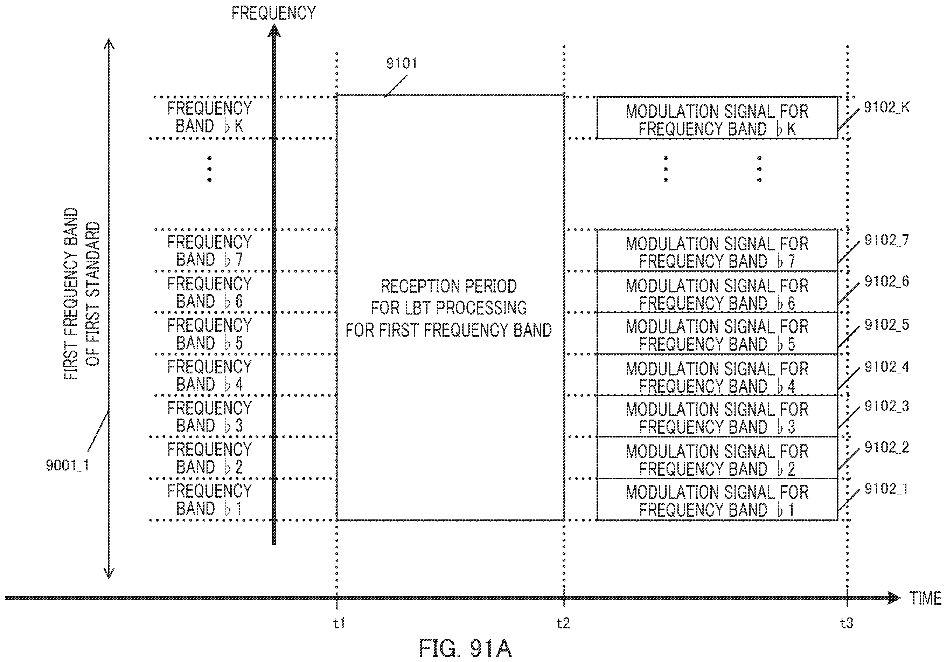

FIG. 91A illustrates an exemplary state of the gNB and NR-UE, and the horizontal axis represents time while the vertical axis represents frequency. On the frequency axis, there are "frequency band $b1$", "frequency band $b2$", "frequency band $b3$", ..., "frequency band $bK$" as illustrated in FIG. 91A. Note that K is an integer equal to or greater than 2.

As illustrated in FIG. 91A, there is reception period 9101 for LBT processing for the first frequency band in frequency band $b1$ to frequency band $bK$ from time t1 to time t2. Thus, the gNB and NR-UE perform the LBT processing in first frequency band 9001_1 of the first standard by determining whether a signal is present in first frequency band 9001_1 of the first standard using reception period 9101 for LBT processing for the first frequency band.

For example, as in FIG. 91A, it is assumed that there is a direction in which the gNB and NR-UE detect no signal in reception period 9101 for LBT processing for the first frequency band. Then, the gNB and NR-UE transmit, at or after time t2, "modulation signal 9102_1 for frequency band $b1$" in frequency band $b1$, "modulation signal 9102_2 for frequency band $b2$" in frequency band $b2$, "modulation signal 9102_3 for frequency band $b3$" in frequency band $b3$, ...,"modulation signal 9102_K for frequency band $bK$" in frequency band $bK$.

Note that the configuration of a modulation signal transmitted by the gNB and NR-UE (e.g., sector sweep reference signal, feedback signal, data symbol, PDCCH, PDSCH, PUCCH, PUSCH, SS block, PBCH, SS/PBCH block, etc.) has been described in, for example, Embodiments 1 to 6 or the like, and thus the description thereof will be omitted.

The LBT processing methods (e.g., "omni-directional LBT", "directional LBT", "LBT in which both omni-directional LBT processing and directional LBT processing are performed", etc.) have been described in detail in Embodiment 7 or later, and thus the description thereof will be omitted. In terms of "modulation signal 9102_i for frequency band bi", there may be a beam in which no modulation signal is present depending on the beam.

In addition, in terms of "modulation signal 9102_i for frequency band bi", there may be an antenna from which no modulation signal is transmitted depending on the antenna. These have been described in other embodiments. Note that i is an integer from 1 to K (both inclusive).

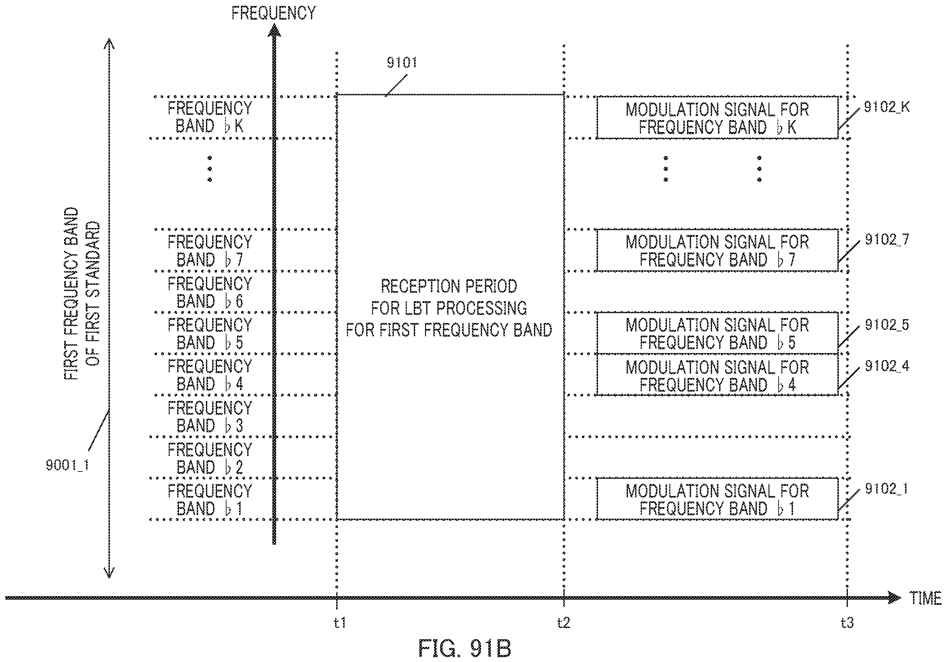

FIG. 91B illustrates an exemplary state of the gNB and NR-UE different from that in FIG. 91A, and the horizontal axis represents time while the vertical axis represents frequency. In FIG. 91B, components that operate in the same manner as in FIG. 91A are denoted by the same reference signs, and the description thereof will be omitted.

As illustrated in FIG. 91B, there is reception period 9101 for LBT processing for the first frequency band in frequency band $b1$ to frequency band $bK$ from time t1 to time t2. Thus, the gNB and NR-UE perform the LBT processing in first frequency band 9001_1 of the first standard by determining whether a signal is present in first frequency band 9001_1 of the first standard using reception period 9101 for LBT processing for the first frequency band. At this time, the gNB and NR-UE determine whether a signal is present in each frequency band.

As in FIG. 91B, it is assumed that there is a direction in which the gNB and NR-UE detect no signal in frequency band $b1$ in reception period 9101 for LBT processing for the first frequency band. Then, the gNB and NR-UE transmit "modulation signal 9102_1 for frequency band $b1$" in frequency band $b1$ at or after time t2.

Note that the configuration of a modulation signal transmitted by the gNB and NR-UE (e.g., sector sweep reference signal, feedback signal, data symbol, PDCCH, PDSCH, PUCCH, PUSCH, SS block, PBCH, SS/PBCH block, etc.) has been described in, for example, Embodiments 1 to 6 or the like, and thus the description thereof will be omitted.

The LBT processing methods (e.g., "omni-directional LBT", "directional LBT", "LBT in which both omni-directional LBT processing and directional LBT processing are performed", etc.) have been described in detail in Embodiment 7 or later, and thus the description thereof will be omitted. In terms of "modulation signal 9102_1 for frequency band ♭1", there may be a beam in which no modulation signal is present depending on the beam.

In addition, in terms of "modulation signal 9102_1 for frequency band ♭1", there may be an antenna from which no modulation signal is transmitted depending on the antenna. These have been described in other embodiments.

As in FIG. 91B, it is assumed that there is a direction in which the gNB and NR-UE detect no signal in frequency band ♭4 in reception period 9101 for LBT processing for the first frequency band. Then, the gNB and NR-UE transmit "modulation signal 9102_4 for frequency band ♭4" in frequency band ♭4 at or after time t2.

Note that the configuration of a modulation signal transmitted by the gNB and NR-UE (e.g., sector sweep reference signal, feedback signal, data symbol, PDCCH, PDSCH, PUCCH, PUSCH, SS block, PBCH, SS/PBCH block, etc.) has been described in, for example, Embodiments 1 to 6 or the like, and thus the description thereof will be omitted.

The LBT processing methods (e.g., "omni-directional LBT", "directional LBT", "LBT in which both omni-directional LBT processing and directional LBT processing are performed", etc.) have been described in detail in Embodiment 7 or later, and thus the description thereof will be omitted. In terms of "modulation signal 9102_4 for frequency band ♭4", there may be a beam in which no modulation signal is present depending on the beam.

In addition, in terms of "modulation signal 9102_4 for frequency band ♭4", there may be an antenna from which no modulation signal is transmitted depending on the antenna. These have been described in other embodiments.

As in FIG. 91B, it is assumed that there is a direction in which the gNB and NR-UE detect no signal in frequency band ♭5 in reception period 9101 for LBT processing for the first frequency band. Then, the gNB and NR-UE transmit "modulation signal 9102_5 for frequency band ♭5" in frequency band ♭5 at or after time t2.

Note that the configuration of a modulation signal transmitted by the gNB and NR-UE (e.g., sector sweep reference signal, feedback signal, data symbol, PDCCH, PDSCH, PUCCH, PUSCH, SS block, PBCH, SS/PBCH block, etc.) has been described in, for example, Embodiments 1 to 6 or the like, and thus the description thereof will be omitted.

The LBT processing methods (e.g., "omni-directional LBT", "directional LBT", "LBT in which both omni-directional LBT processing and directional LBT processing are performed", etc.) have been described in detail in Embodiment 7 or later, and thus the description thereof will be omitted. In terms of "modulation signal 9102_5 for frequency band ♭5", there may be a beam in which no modulation signal is present depending on the beam.

In addition, in terms of "modulation signal 9102_5 for frequency band ♭5", there may be an antenna from which no modulation signal is transmitted depending on the antenna. These have been described in other embodiments.

As in FIG. 91B, it is assumed that there is a direction in which the gNB and NR-UE detect no signal in frequency band ♭7 in reception period 9101 for LBT processing for the first frequency band. Then, the gNB and NR-UE transmit "modulation signal 9102_7 for frequency band ♭7" in frequency band ♭7 at or after time t2.

Note that the configuration of a modulation signal transmitted by the gNB and NR-UE (e.g., sector sweep reference signal, feedback signal, data symbol, PDCCH, PDSCH, PUCCH, PUSCH, SS block, PBCH, SS/PBCH block, etc.) has been described in, for example, Embodiments 1 to 6 or the like, and thus the description thereof will be omitted.

The LBT processing methods (e.g., "omni-directional LBT", "directional LBT", "LBT in which both omni-directional LBT processing and directional LBT processing are performed", etc.) have been described in detail in Embodiment 7 or later, and thus the description thereof will be omitted. In terms of "modulation signal 9102_7 for frequency band ♭7", there may be a beam in which no modulation signal is present depending on the beam.

In addition, in terms of "modulation signal 9102_7 for frequency band ♭7", there may be an antenna from which no modulation signal is transmitted depending on the antenna. These have been described in other embodiments.

As in FIG. 91B, it is assumed that there is a direction in which the gNB and NR-UE detect no signal in frequency band ♭K in reception period 9101 for LBT processing for the first frequency band. Then, the gNB and NR-UE transmit "modulation signal 9102_K for frequency band ♭K" in frequency band ♭K at or after time t2.

Note that the configuration of a modulation signal transmitted by the gNB and NR-UE (e.g., sector sweep reference signal, feedback signal, data symbol, PDCCH, PDSCH, PUCCH, PUSCH, SS block, PBCH, SS/PBCH block, etc.) has been described in, for example, Embodiments 1 to 6 or the like, and thus the description thereof will be omitted.

The LBT processing methods (e.g., "omni-directional LBT", "directional LBT", "LBT in which both omni-directional LBT processing and directional LBT processing are performed", etc.) have been described in detail in Embodiment 7 or later, and thus the description thereof will be omitted. In terms of "modulation signal 9102_K for frequency band ♭K", there may be a beam in which no modulation signal is present depending on the beam.

In addition, in terms of "modulation signal 9102_K for frequency band ♭K", there may be an antenna from which no modulation signal is transmitted depending on the antenna. These have been described in other embodiments.

Meanwhile, it is assumed that the gNB and NR-UE detect a signal in frequency band ♭2 in reception period 9101 for LBT processing for the first frequency band. Then, the gNB and NR-UE does not transmit a modulation signal in frequency band ♭2 at or after time t2.

Likewise, it is assumed that the gNB and NR-UE detect a signal in frequency band ♭3 in reception period 9101 for LBT processing for the first frequency band. Then, the gNB and NR-UE does not transmit a modulation signal in frequency band ♭3 at or after time t2. It is assumed that the gNB and NR-UE detect a signal in frequency band ♭6 in reception period 9101 for LBT processing for the first frequency band. Then, the gNB and NR-UE does not transmit a modulation signal in frequency band ♭6 at or after time t2.

Note that the state of the gNB and NR-UE is exemplified in FIGS. 91A and 91B, but the state is not limited to these. For example, there may be a time period in which a communication counterpart transmits a modulation signal. Further, the gNB and NR-UE may transmit a modulation signal immediately after performing the LBT, or may transmit a modulation signal some time after performing the LBT.

In FIG. 91A, reception period 9101 for LBT processing for the first frequency band has a configuration using frequency band ♭1 to frequency band ♭K, but the reception period for LBT processing for the first frequency band may have frequency bands narrower than frequency band ♭1 to frequency band ♭K.

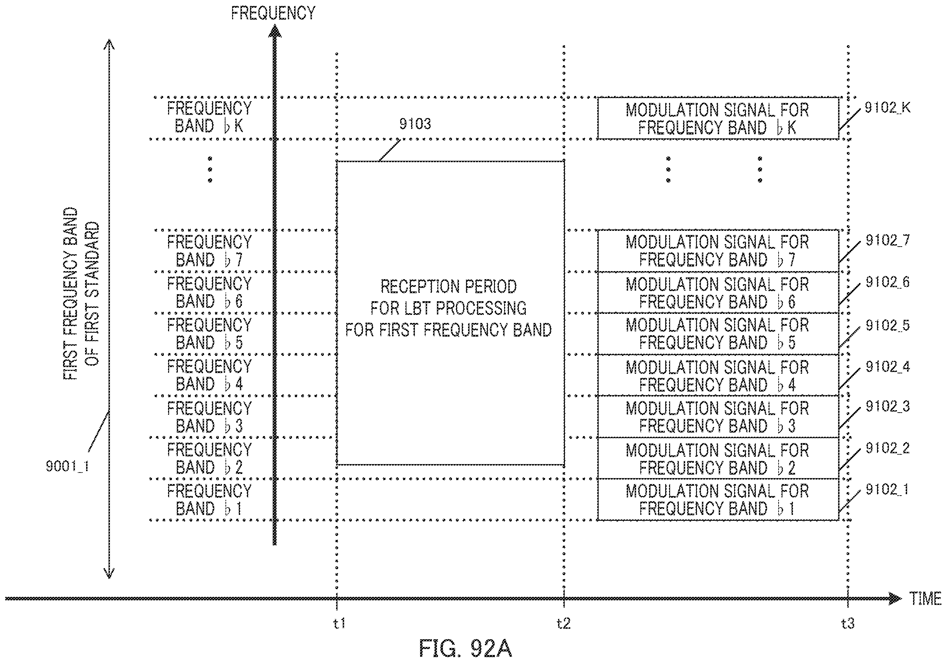

FIG. 92A illustrates an exemplary state of the gNB and NR-UE, and the horizontal axis represents time while the vertical axis represents frequency. On the frequency axis, there are "frequency band ♭1", "frequency band ♭2", "frequency band ♭3", ..., "frequency band ♭K" as illustrated in FIG. 92A. Note that K is an integer equal to or greater than 2. In FIG. 92A, components that operate in the same manner as in FIG. 91A are denoted by the same reference signs, and the description thereof will be omitted.

As illustrated in FIG. 92A, there is reception period 9103 for LBT processing for the first frequency band having frequency bands narrower than frequency band ♭1 to frequency band ♭K from time t1 to time t2. Thus, the gNB and NR-UE perform the LBT processing in first frequency band 9001_1 of the first standard by determining whether a signal is present in first frequency band 9001_1 of the first standard using reception period 9103 for LBT processing for the first frequency band.

For example, as in FIG. 92A, it is assumed that there is a direction in which the gNB and NR-UE detect no signal in reception period 9103 for LBT processing for the first frequency band. Then, the gNB and NR-UE transmit, at or after time t2, "modulation signal 9102_1 for frequency band ♭1" in frequency band ♭1, "modulation signal 9102_2 for frequency band ♭2" in frequency band ♭2, "modulation signal 9102_3 for frequency band ♭3" in frequency band ♭3, ...,"modulation signal 9102_K for frequency band ♭K" in frequency band bK.

Note that the configuration of a modulation signal transmitted by the gNB and NR-UE (e.g., sector sweep reference signal, feedback signal, data symbol, PDCCH, PDSCH, PUCCH, PUSCH, SS block, PBCH, SS/PBCH block, etc.) has been described in, for example, Embodiments 1 to 6 or the like, and thus the description thereof will be omitted.

The LBT processing methods (e.g., "omni-directional LBT", "directional LBT", "LBT in which both omni-directional LBT processing and directional LBT processing are performed", etc.) have been described in detail in Embodiment 7 or later, and thus the description thereof will be omitted. In terms of "modulation signal 9102_i for frequency band bi", there may be a beam in which no modulation signal is present depending on the beam.

In addition, in terms of "modulation signal 9102_i for frequency band bi", there may be an antenna from which no modulation signal is transmitted depending on the antenna. These have been described in other embodiments. Note that i is an integer from 1 to K (both inclusive).

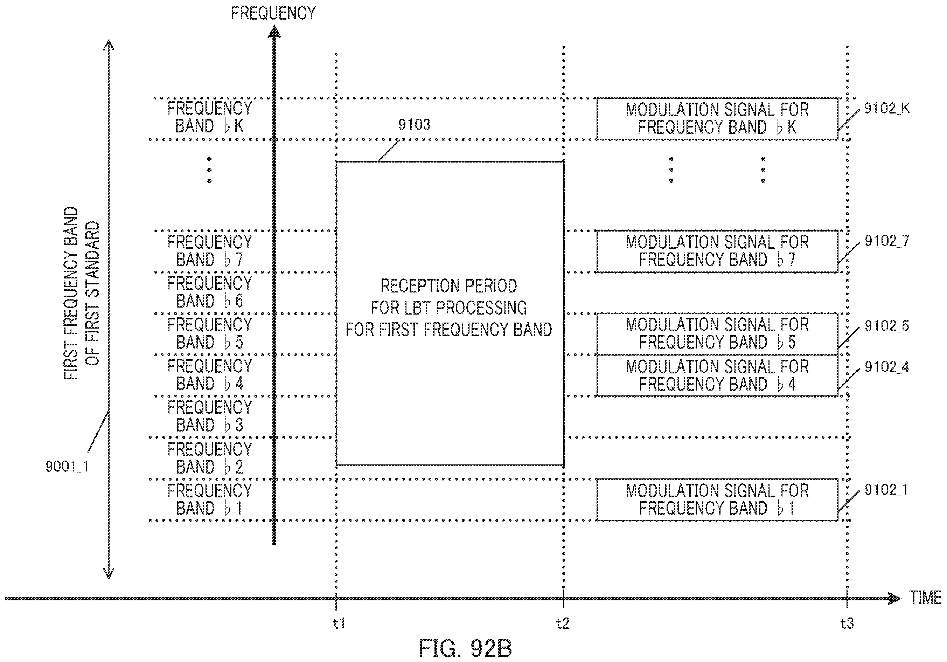

FIG. 92B illustrates an exemplary state of the gNB and NR-UE different from that in FIG. 92A, and the horizontal axis represents time while the vertical axis represents frequency. In FIG. 92B, components that operate in the same manner as in FIG. 92A are denoted by the same reference signs, and the description thereof will be omitted.

As illustrated in FIG. 92B, there is reception period 9103 for LBT processing for the first frequency band having frequency bands narrower than frequency band ♭1 to frequency band ♭K from time t1 to time t2. Thus, the gNB and NR-UE perform the LBT processing in first frequency band 9001_1 of the first standard by determining whether a signal is present in first frequency band 9001_1 of the first standard using reception period 9103 for LBT processing for the first frequency band. At this time, the gNB and NR-UE determine whether a signal is present in each frequency band.

As in FIG. 92B, it is assumed that there is a direction in which the gNB and NR-UE detect no signal in frequency band ♭1 in reception period 9103 for LBT processing for the first frequency band. Then, the gNB and NR-UE transmit "modulation signal 9102_1 for frequency band ♭1" in frequency band ♭1 at or after time t2.

Note that the configuration of a modulation signal transmitted by the gNB and NR-UE (e.g., sector sweep reference signal, feedback signal, data symbol, PDCCH, PDSCH, PUCCH, PUSCH, SS block, PBCH, SS/PBCH block, etc.) has been described in, for example, Embodiments 1 to 6 or the like, and thus the description thereof will be omitted.

The LBT processing methods (e.g., "omni-directional LBT", "directional LBT", "LBT in which both omni-directional LBT processing and directional LBT processing are performed", etc.) have been described in detail in Embodiment 7 or later, and thus the description thereof will be omitted. In terms of "modulation signal 9102_1 for frequency band ♭1", there may be a beam in which no modulation signal is present depending on the beam.

In addition, in terms of "modulation signal 9102_1 for frequency band ♭1", there may be an antenna from which no modulation signal is transmitted depending on the antenna. These have been described in other embodiments.

As in FIG. 92B, it is assumed that there is a direction in which the gNB and NR-UE detect no signal in frequency band ♭4 in reception period 9103 for LBT processing for the first frequency band. Then, the gNB and NR-UE transmit "modulation signal 9102_4 for frequency band ♭4" in frequency band ♭4 at or after time t2.

Note that the configuration of a modulation signal transmitted by the gNB and NR-UE (e.g., sector sweep reference signal, feedback signal, data symbol, PDCCH, PDSCH, PUCCH, PUSCH, SS block, PBCH, SS/PBCH block, etc.) has been described in, for example, Embodiments 1 to 6 or the like, and thus the description thereof will be omitted.

The LBT processing methods (e.g., "omni-directional LBT", "directional LBT", "LBT in which both omni-directional LBT processing and directional LBT processing are performed", etc.) have been described in detail in Embodiment 7 or later, and thus the description thereof will be omitted. In terms of "modulation signal 9102_4 for frequency band ♭4", there may be a beam in which no modulation signal is present depending on the beam.

In addition, in terms of "modulation signal 9102_4 for frequency band ♭4", there may be an antenna from which no modulation signal is transmitted depending on the antenna. These have been described in other embodiments.

As in FIG. 92B, it is assumed that there is a direction in which the gNB and NR-UE detect no signal in frequency band ♭5 in reception period 9103 for LBT processing for the first frequency band. Then, the gNB and NR-UE transmit "modulation signal 9102_5 for frequency band ♭5" in frequency band ♭5 at or after time t2.

Note that the configuration of a modulation signal transmitted by the gNB and NR-UE (e.g., sector sweep reference signal, feedback signal, data symbol, PDCCH, PDSCH, PUCCH, PUSCH, SS block, PBCH, SS/PBCH block, etc.) has been described in, for example, Embodiments 1 to 6 or the like, and thus the description thereof will be omitted.

The LBT processing methods (e.g., "omni-directional LBT", "directional LBT", "LBT in which both omni-directional LBT processing and directional LBT processing are performed", etc.) have been described in detail in Embodiment 7 or later, and thus the description thereof will be omitted. In terms of "modulation signal 9102_5 for frequency band ♭5", there may be a beam in which no modulation signal is present depending on the beam.

In addition, in terms of "modulation signal 9102_5 for frequency band ♭5", there may be an antenna from which no modulation signal is transmitted depending on the antenna. These have been described in other embodiments.

As in FIG. 92B, it is assumed that there is a direction in which the gNB and NR-UE detect no signal in frequency band ♭7 in reception period 9103 for LBT processing for the first frequency band. Then, the gNB and NR-UE transmit "modulation signal 9102_7 for frequency band ♭7" in frequency band ♭7 at or after time t2.

Note that the configuration of a modulation signal transmitted by the gNB and NR-UE (e.g., sector sweep reference signal, feedback signal, data symbol, PDCCH, PDSCH, PUCCH, PUSCH, SS block, PBCH, SS/PBCH block, etc.) has been described in, for example, Embodiments 1 to 6 or the like, and thus the description thereof will be omitted.

The LBT processing methods (e.g., "omni-directional LBT", "directional LBT", "LBT in which both omni-directional LBT processing and directional LBT processing are performed", etc.) have been described in detail in Embodiment 7 or later, and thus the description thereof will be omitted. In terms of "modulation signal 9102_7 for frequency band ♭7", there may be a beam in which no modulation signal is present depending on the beam.

In addition, in terms of "modulation signal 9102_7 for frequency band ♭7", there may be an antenna from which no modulation signal is transmitted depending on the antenna. These have been described in other embodiments.

As in FIG. 92B, it is assumed that there is a direction in which the gNB and NR-UE detect no signal in frequency band ♭K in reception period 9103 for LBT processing for the first frequency band. Then, the gNB and NR-UE transmit "modulation signal 9102_K for frequency band ♭K" in frequency band ♭K at or after time t2.

Note that the configuration of a modulation signal transmitted by the gNB and NR-UE (e.g., sector sweep reference signal, feedback signal, data symbol, PDCCH, PDSCH, PUCCH, PUSCH, SS block, PBCH, SS/PBCH block, etc.) has been described in, for example, Embodiments 1 to 6 or the like, and thus the description thereof will be omitted.

The LBT processing methods (e.g., "omni-directional LBT", "directional LBT", "LBT in which both omni-directional LBT processing and directional LBT processing are performed", etc.) have been described in detail in Embodiment 7 or later, and thus the description thereof will be omitted. In terms of "modulation signal 9102_K for frequency band ♭K", there may be a beam in which no modulation signal is present depending on the beam.

In addition, in terms of "modulation signal 9102_K for frequency band ♭K", there may be an antenna from which no modulation signal is transmitted depending on the antenna. These have been described in other embodiments.

Meanwhile, it is assumed that the gNB and NR-UE detect a signal in frequency band ♭2 in reception period 9103 for LBT processing for the first frequency band. Then, the gNB and NR-UE does not transmit a modulation signal in frequency band ♭2 at or after time t2.

Likewise, it is assumed that the gNB and NR-UE detect a signal in frequency band ♭3 in reception period 9103 for LBT processing for the first frequency band. Then, the gNB and NR-UE does not transmit a modulation signal in frequency band ♭3 at or after time t2.

It is assumed that the gNB and NR-UE detect a signal in frequency band ♭6 in reception period 9103 for LBT processing for the first frequency band. Then, the gNB and NR-UE does not transmit a modulation signal in frequency band ♭6 at or after time t2.

Note that the state of the gNB and NR-UE is exemplified in FIGS. 92A and 92B, but the state is not limited to these. For example, there may be a time period in which a communication counterpart transmits a modulation signal. Further, the gNB and NR-UE may transmit a modulation signal immediately after performing the LBT, or may transmit a modulation signal some time after performing the LBT.

Note that, unlike FIGS. 91A, 91B, 92A, and 92B, the reception period for LBT processing for the first frequency band may have frequency bands broader than frequency band ♭1 from frequency band ♭K.

Embodiment 8 has a description of the case of "performing the LBT and not transmitting a sector sweep reference signal using an antenna that has detected a signal" with reference to FIG. 62A. The processing of "performing the LBT and not transmitting a sector sweep reference signal using an antenna that has detected a signal" may be performed in each of the frequency bands from "frequency band ♭1" to "frequency band ♭K" described above.

Embodiment 8 also has a description of the case of "performing the LBT and not transmitting a sector sweep reference signal using a beam in which a signal has detected" with reference to FIG. 62B. The processing of "performing the LBT and not transmitting a sector sweep reference signal using a beam in which a signal has detected" may be performed in each of the frequency bands from "frequency band ♭1" to "frequency band ♭K" described above.

Embodiments 8, 9, and 10 have a description of "the gNB and NR-UE perform the second LBT processing (directional LBT) or the third LBT processing (LBT in which both omni-directional LBT processing and directional LBT processing are performed) and start communication without using more than one direction for the communication. Then, after starting the communication, the gNB and NR-UE check whether a signal is present in a direction not used for the communication, and when detecting a direction in which no signal is present, the gNB and NR-UE may start communication by a beam corresponding to the direction". The processing described in Embodiments 8, 9, and 10 may be performed in each of the frequency bands from "frequency band ♭1" to "frequency band ♭K" described above. The examples will be described below.

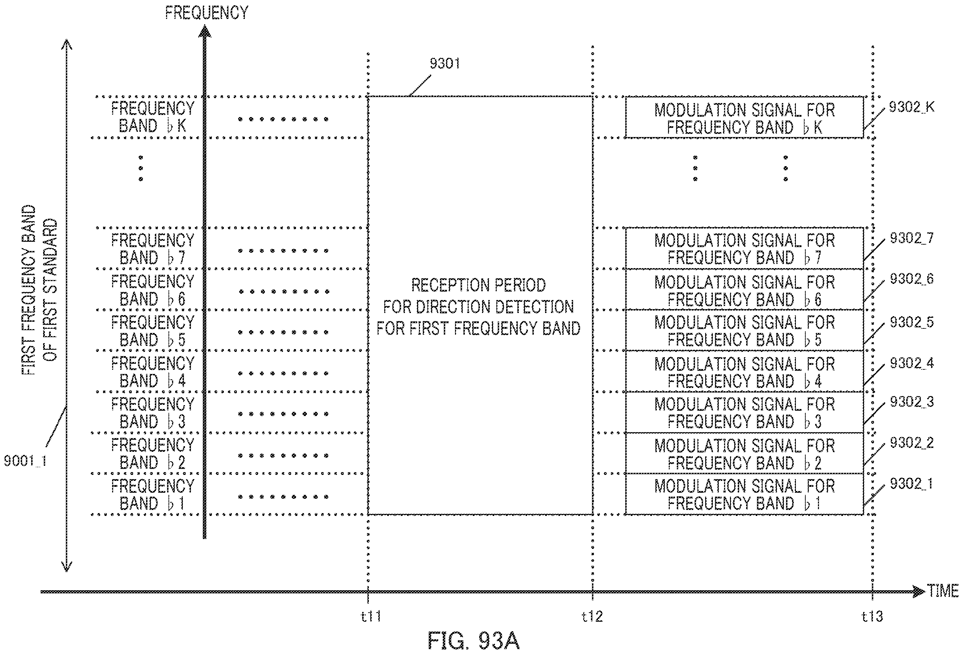

FIG. 93A illustrates an exemplary state of the gNB and NR-UE, and the horizontal axis represents time while the vertical axis represents frequency. On the frequency axis, there are "frequency band ♭1", "frequency band ♭2", "frequency band ♭3", ..., "frequency band ♭K" as illustrated in FIGS. 91A and 91B. Note that K is an integer equal to or greater than 2.

The gNB and NR-UE "perform the LBT and then transmit a modulation signal in each frequency band" as in FIG. 91A. FIG. 93A illustrates an exemplary state of the gNB and NR-UE after that. Note that ""performing the LBT and then transmitting a modulation signal in each frequency band" as in FIG. 91A" is merely an example, and ""performing the LBT and then transmitting a modulation signal in each frequency band" as in FIGS. 88A, 92A, and the description in the present specification" is also possible.

Note that, in FIG. 91A, the gNB and NR-UE assume that there is a "direction in which a signal is present" (assume that there is a receive beam in which a signal is detected) in frequency band ♭1, and do not start communication in that direction.

Likewise, the gNB and NR-UE assume that there is a "direction in which a signal is present" (assume that there is a receive beam in which a signal is detected) in frequency band ♭i, and do not start communication in that direction. Note that i is an integer from 1 to K (both inclusive).

In FIG. 93A, there is reception period 9301 for direction (beam) detection for the first frequency band in frequency band ♭1 to frequency band ♭K from time 111 to time t12.

"Reception period 9301 for direction (beam) detection for the first frequency band" in FIG. 93A corresponds to "reception period 6801 for direction (beam) detection" in FIG. 68, "reception period 6901 for direction (beam) detection" in FIG. 69, and "reception period 7001 for direction (beam) detection" in FIG. 70.

It is assumed that the gNB and NR-UE determine a direction not to be used for communication in frequency band b 1 (referred to as the first direction) by using "reception period 9101 for LBT processing for the first frequency band in FIG. 91A".

Then, the gNB and NR-UE determine whether a signal is present in the first direction in frequency band ♭1 by using "reception period 9301 for direction (beam) detection for the first frequency band" in FIG. 93A.

When the gNB and NR-UE determine that a signal is present in the first direction, the gNB and NR-UE determine not to use the first direction for communication, for example, for modulation signal 9302_1 for frequency band b 1. When the gNB and NR-UE determine that no signal is present in the first direction, the gNB and NR-UE can use the first direction for communication, for example, for modulation signal 9302_1 for frequency band ♭1.

Likewise, it is assumed that the gNB and NR-UE determine a direction not to be used for communication in frequency band bi (referred to as the i-th direction) by using "reception period 9101 for LBT processing for the first frequency band in FIG. 91A". Note that i is an integer from 1 to K (both inclusive).

Then, the gNB and NR-UE determine whether a signal is present in the i-th direction in frequency band bi by using "reception period 9301 for direction (beam) detection for the first frequency band" in FIG. 93A.

When the gNB and NR-UE determine that a signal is present in the i-th direction, the gNB and NR-UE determine not to use the i-th direction for communication, for example, for modulation signal 9302_i for frequency band 6i. When the gNB and NR-UE determine that no signal is present in the i-th direction, the gNB and NR-UE can use the i-th direction for communication, for example, for modulation signal 9302_i for frequency band bi.

Note that "reception period 9301 for direction (beam) detection for the first frequency band" in FIG. 93A corresponds to "reception period 6801 for direction (beam) detection" in FIG. 68, "reception period 6901 for direction (beam) detection" in FIG. 69, and "reception period 7001 for direction (beam) detection" in FIG. 70, and thus specific operations in "reception period 9301 for direction (beam) detection for the first frequency band" are as described in other embodiments.

Although FIG. 93A has been described as an exemplary state of the gNB and NR-UE, the state is not limited to this. For example, there may be a time period in which a communication counterpart transmits a modulation signal. Further, the gNB and NR-UE may transmit a modulation signal immediately after the direction (beam) detection in FIG. 93A, or may transmit a modulation signal some time after the direction (beam) detection.

The names of signals, frames, etc. in FIG. 93A are not limited to those in the drawing, and other names may be used.

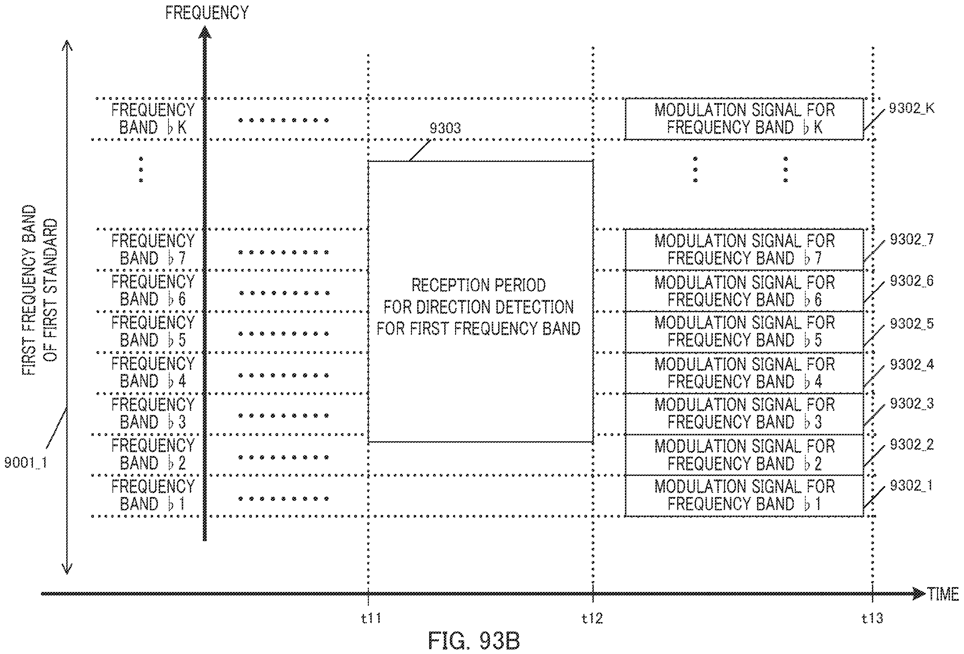

FIG. 93B illustrates an exemplary state of the gNB and NR-UE different from that in FIG. 93A, and the horizontal axis represents time while the vertical axis represents frequency. In FIG. 93B, components that operate in the same manner as in FIG. 93A are denoted by the same reference signs, and the description thereof will be omitted.

The gNB and NR-UE "perform the LBT and then transmit a modulation signal in each frequency band" as in FIG. 92A. FIG. 93B illustrates an exemplary state of the gNB and NR-UE after that. Note that ""performing the LBT and then transmitting a modulation signal in each frequency band" as in FIG. 92A" is merely an example, and ""performing the LBT and then transmitting a modulation signal in each frequency band" as in FIGS. 88A, 91A, and the description in the present specification" is also possible.

Note that, in FIG. 92A, the gNB and NR-UE assume that there is a "direction in which a signal is present" (assume that there is a receive beam in which a signal is detected) in frequency band ♭1, and do not start communication in that direction.

Likewise, the gNB and NR-UE assume that there is a "direction in which a signal is present" (assume that there is a receive beam in which a signal is detected) in frequency band bi, and do not start communication in that direction. Note that i is an integer from 1 to K (both inclusive).

In FIG. 93B, there is reception period 9303 for direction (beam) detection for the first frequency band in frequency bands narrower than frequency band ♭1 to frequency band ♭K from time t11 to time t12.

"Reception period 9303 for direction (beam) detection for the first frequency band" in FIG. 93B corresponds to "reception period 6801 for direction (beam) detection" in FIG. 68, "reception period 6901 for direction (beam) detection" in FIG. 69, and "reception period 7001 for direction (beam) detection" in FIG. 70.

It is assumed that the gNB and NR-UE determine a direction not to be used for communication in frequency band b 1 (referred to as the first direction) by using "reception period 9103 for LBT processing for the first frequency band in FIG. 91A".

Then, the gNB and NR-UE determine whether a signal is present in the first direction in frequency band ♭1 by using "reception period 9303 for direction (beam) detection for the first frequency band" in FIG. 93A.

When the gNB and NR-UE determine that a signal is present in the first direction, the gNB and NR-UE determine not to use the first direction for communication, for example, for modulation signal 9302_1 for frequency band b 1. When the gNB and NR-UE determine that no signal is present in the first direction, the gNB and NR-UE can use the first direction for communication, for example, for modulation signal 9302_1 for frequency band $b$1.

Likewise, it is assumed that the gNB and NR-UE determine a direction not to be used for communication in frequency band bi (referred to as the i-th direction) by using "reception period 9103 for LBT processing for the first frequency band in FIG. 91A". Note that i is an integer from 1 to K (both inclusive).

Then, the gNB and NR-UE determine whether a signal is present in the i-th direction in frequency band bi by using "reception period 9303 for direction (beam) detection for the first frequency band" in FIG. 93A.

When the gNB and NR-UE determine that a signal is present in the i-th direction, the gNB and NR-UE determine not to use the i-th direction for communication, for example, for modulation signal 9302_i for frequency band 6i. When the gNB and NR-UE determine that no signal is present in the i-th direction, the gNB and NR-UE can use the i-th direction for communication, for example, for modulation signal 9302_i for frequency band bi.

Note that "reception period 9303 for direction (beam) detection for the first frequency band" in FIG. 93A corresponds to "reception period 6801 for direction (beam) detection" in FIG. 68, "reception period 6901 for direction (beam) detection" in FIG. 69, and "reception period 7001 for direction (beam) detection" in FIG. 70, and thus specific operations in "reception period 9303 for direction (beam) detection for the first frequency band" are as described in other embodiments.

Although FIG. 93B has been described as an exemplary state of the gNB and NR-UE, the state is not limited to this. For example, there may be a time period in which a communication counterpart transmits a modulation signal. Further, the gNB and NR-UE may transmit a modulation signal immediately after the direction (beam) detection in FIG. 93B, or may transmit a modulation signal some time after the direction (beam) detection.

The names of signals, frames, etc. in FIG. 93B are not limited to those in the drawing, and other names may be used.

The above procedure allows the gNB and NR-UE to perform the LBT, detect a signal of the first standard, and accordingly control communication performed by themselves, thereby producing the effect of improving the system data throughput of a system including the gNB, NR-UE, etc. In addition, the determination of a direction, a beam, and an antenna to be used for communication by the gNB and NR-UE according to the presence of a signal of the first standard produces the effect of improving the system data throughput of a system including the gNB, NR-UE, etc.

Further, fine control of the frequency granularity allows the gNB and NR-UE to perform the LBT and select a frequency and a direction in which communication can be started with little interference, thereby producing the effect of improving the system data throughput of a system including the gNB, NR-UE, etc.

In addition, the determination of a direction, a beam, and an antenna to be used for communication by the gNB and NR-UE produces the effect of improving the system data throughput of a system including the gNB, NR-UE, etc.

Note that the processing described in the present embodiment or a part of the processing is performed by the transmission/reception apparatus in FIG. 53 or FIG. 54. The configurations of the gNB and NR-UE, however, are not limited to the configurations in FIGS. 53 and 54.

(Second Example)

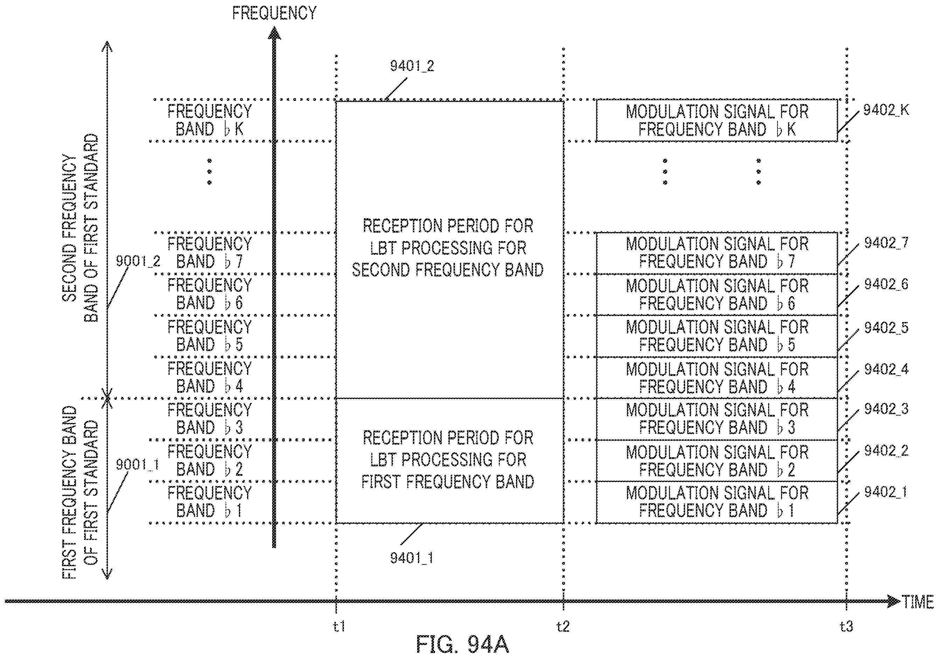

FIG. 94A illustrates an exemplary state of the gNB and NR-UE, and the horizontal axis represents time while the vertical axis represents frequency. On the frequency axis, there are "frequency band $b$1", "frequency band $b$2", "frequency band $b$3", ..., "frequency band $b$K" as illustrated in FIG. 94A. Note that K is an integer equal to or greater than 2. "Frequency band $b$1", "frequency band $b$2", and "frequency band $b$3" belong to first frequency band 9001_1 of the first standard illustrated in FIG. 90, and "frequency band $b$4" to "frequency band $b$K" belong to second frequency band 9001_2 of the first standard illustrated in FIG. 90.

As illustrated in FIG. 94A, there is reception period 9401_1 for LBT processing for the first frequency band in frequency band $b$1 to frequency band $b$3 from time t1 to time t2. Thus, the gNB and NR-UE perform the LBT processing in first frequency band 9001_1 of the first standard by determining whether a signal is present in first frequency band 9001_1 of the first standard using reception period 9401_1 for LBT processing for the first frequency band.

For example, as in FIG. 94A, it is assumed that there is a direction in which the gNB and NR-UE detect no signal in reception period 9401_1 for LBT processing for the first frequency band. Then, the gNB and NR-UE transmit, at or after time t2, "modulation signal 9402_1 for frequency band $b$1" in frequency band $b$1, "modulation signal 9402_2 for frequency band $b$2" in frequency band $b$2, and "modulation signal 9104_3 for frequency band $b$3" in frequency band $b$3.

Note that the configuration of a modulation signal transmitted by the gNB and NR-UE (e.g., sector sweep reference signal, feedback signal, data symbol, PDCCH, PDSCH, PUCCH, PUSCH, SS block, PBCH, SS/PBCH block, etc.) has been described in, for example, Embodiments 1 to 6 or the like, and thus the description thereof will be omitted.

The LBT processing methods (e.g., "omni-directional LBT", "directional LBT", "LBT in which both omni-directional LBT processing and directional LBT processing are performed", etc.) have been described in detail in Embodiment 7 or later, and thus the description thereof will be omitted. In terms of "modulation signal 9402_i for frequency band bi", there may be a beam in which no modulation signal is present depending on the beam.

In addition, in terms of "modulation signal 9402_i for frequency band bi", there may be an antenna from which no modulation signal is transmitted depending on the antenna. These have been described in other embodiments. Note that i is an integer from 1 to 3 (both inclusive).

As illustrated in FIG. 94A, there is reception period 9401_2 for LBT processing for the second frequency band in frequency band ♭4 to frequency band ♭K from time t1 to time t2. Thus, the gNB and NR-UE perform the LBT processing in second frequency band 9001_2 of the first standard by determining whether a signal is present in second frequency band 9001_2 of the first standard using reception period 9401_2 for LBT processing for the second frequency band.

For example, as in FIG. 94A, it is assumed that there is a direction in which the gNB and NR-UE detect no signal in reception period 9401_2 for LBT processing for the second frequency band. Then, the gNB and NR-UE transmit, at or after time t2, "modulation signal 9402_4 for frequency band ♭4" in frequency band ♭4, "modulation signal 9402_5 for frequency band ♭5" in frequency band ♭5, ..., "modulation signal 9404_K for frequency band ♭K" in frequency band ♭K.

Note that the configuration of a modulation signal transmitted by the gNB and NR-UE (e.g., sector sweep reference signal, feedback signal, data symbol, PDCCH, PDSCH, PUCCH, PUSCH, SS block, PBCH, SS/PBCH block, etc.) has been described in, for example, Embodiments 1 to 6 or the like, and thus the description thereof will be omitted.

The LBT processing methods (e.g., "omni-directional LBT", "directional LBT", "LBT in which both omni-directional LBT processing and directional LBT processing are performed", etc.) have been described in detail in Embodiment 7 or later, and thus the description thereof will be omitted. In terms of "modulation signal 9402_i for frequency band bi", there may be a beam in which no modulation signal is present depending on the beam.

In addition, in terms of "modulation signal 9402_i for frequency band bi", there may be an antenna from which no modulation signal is transmitted depending on the antenna. These have been described in other embodiments. Note that i is an integer from 4 to K (both inclusive).

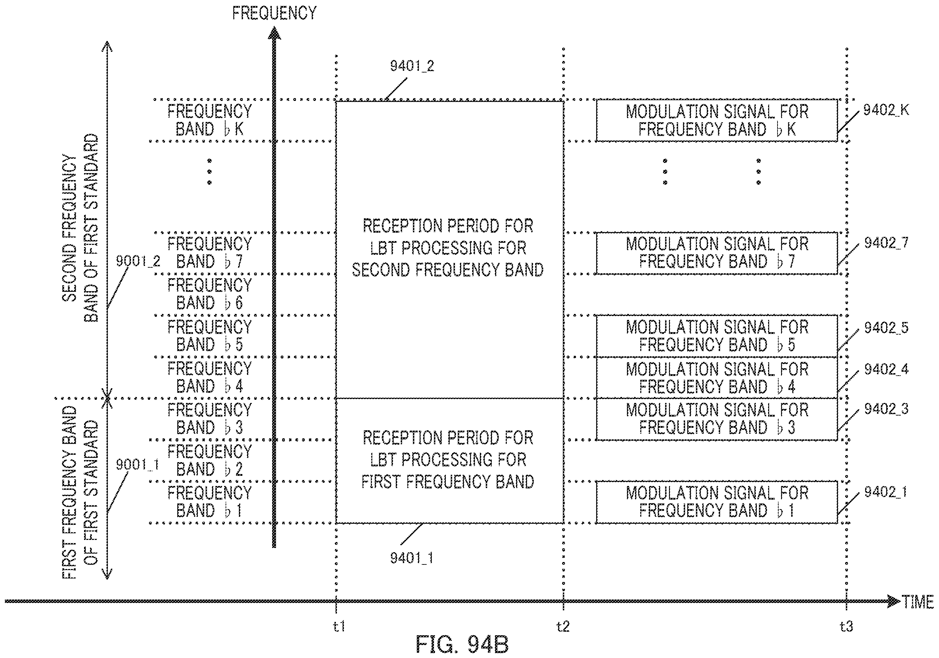

FIG. 94B illustrates an exemplary state of the gNB and NR-UE different from that in FIG. 94A, and the horizontal axis represents time while the vertical axis represents frequency. In FIG. 94B, components that operate in the same manner as in FIG. 94A are denoted by the same reference signs, and the description thereof will be omitted.

As illustrated in FIG. 94B, there is reception period 9401_1 for LBT processing for the first frequency band in frequency band ♭1 to frequency band ♭3 from time t1 to time t2. Thus, the gNB and NR-UE perform the LBT processing in first frequency band 9001_1 of the first standard by determining whether a signal is present in first frequency band 9001_1 of the first standard using reception period 9401_1 for LBT processing for the first frequency band. At this time, the gNB and NR-UE determine whether a signal is present in each frequency band.

As in FIG. 94B, it is assumed that there is a direction in which the gNB and NR-UE detect no signal in frequency band ♭1 in reception period 9401_1 for LBT processing for the first frequency band. Then, the gNB and NR-UE transmit "modulation signal 9402_1 for frequency band ♭1" in frequency band ♭1 at or after time t2.

Note that the configuration of a modulation signal transmitted by the gNB and NR-UE (e.g., sector sweep reference signal, feedback signal, data symbol, PDCCH, PDSCH, PUCCH, PUSCH, SS block, PBCH, SS/PBCH block, etc.) has been described in, for example, Embodiments 1 to 6 or the like, and thus the description thereof will be omitted.

The LBT processing methods (e.g., "omni-directional LBT", "directional LBT", "LBT in which both omni-directional LBT processing and directional LBT processing are performed", etc.) have been described in detail in Embodiment 7 or later, and thus the description thereof will be omitted. In terms of "modulation signal 9402_1 for frequency band ♭1", there may be a beam in which no modulation signal is present depending on the beam.

In addition, in terms of "modulation signal 9402_1 for frequency band ♭1", there may be an antenna from which no modulation signal is transmitted depending on the antenna. These have been described in other embodiments.

As in FIG. 94B, it is assumed that there is a direction in which the gNB and NR-UE detect no signal in frequency band ♭3 in reception period 9401_1 for LBT processing for the first frequency band. Then, the gNB and NR-UE transmit "modulation signal 9402_3 for frequency band ♭3" in frequency band ♭3 at or after time t2.

Note that the configuration of a modulation signal transmitted by the gNB and NR-UE (e.g., sector sweep reference signal, feedback signal, data symbol, PDCCH, PDSCH, PUCCH, PUSCH, SS block, PBCH, SS/PBCH block, etc.) has been described in, for example, Embodiments 1 to 6 or the like, and thus the description thereof will be omitted.

The LBT processing methods (e.g., "omni-directional LBT", "directional LBT", "LBT in which both omni-directional LBT processing and directional LBT processing are performed", etc.) have been described in detail in Embodiment 7 or later, and thus the description thereof will be omitted. In terms of "modulation signal 9402_3 for frequency band ♭3", there may be a beam in which no modulation signal is present depending on the beam.

In addition, in terms of "modulation signal 9402_3 for frequency band ♭3", there may be an antenna from which no modulation signal is transmitted depending on the antenna. These have been described in other embodiments.

Meanwhile, it is assumed that the gNB and NR-UE detect a signal in frequency band ♭2 in reception period 9401_1 for LBT processing for the first frequency band. Then, the gNB and NR-UE does not transmit a modulation signal in frequency band ♭2 at or after time t2.

As illustrated in FIG. 94B, there is reception period 9401_2 for LBT processing for the second frequency band in frequency band ♭4 to frequency band ♭K from time t1 to time t2. Thus, the gNB and NR-UE perform the LBT processing in second frequency band 9001_2 of the first standard by determining whether a signal is present in second frequency band 9001_2 of the first standard using reception period 9401_2 for LBT processing for the second frequency band. At this time, the gNB and NR-UE determine whether a signal is present in each frequency band.

As in FIG. 94B, it is assumed that there is a direction in which the gNB and NR-UE detect no signal in frequency band ♭4 in reception period 9401_2 for LBT processing for the second frequency band. Then, the gNB and NR-UE transmit "modulation signal 9402_4 for frequency band ♭4" in frequency band ♭4 at or after time t2.

Note that the configuration of a modulation signal transmitted by the gNB and NR-UE (e.g., sector sweep reference signal, feedback signal, data symbol, PDCCH, PDSCH, PUCCH, PUSCH, SS block, PBCH, SS/PBCH block, etc.) has been described in, for example, Embodiments 1 to 6 or the like, and thus the description thereof will be omitted.

The LBT processing methods (e.g., "omni-directional LBT", "directional LBT", "LBT in which both omni-directional LBT processing and directional LBT processing are performed", etc.) have been described in detail in Embodiment 7 or later, and thus the description thereof will be omitted. In terms of "modulation signal 9402_4 for frequency band ♭4", there may be a beam in which no modulation signal is present depending on the beam.

In addition, in terms of "modulation signal 9402_4 for frequency band ♭4", there may be an antenna from which no modulation signal is transmitted depending on the antenna. These have been described in other embodiments.

As in FIG. 94B, it is assumed that there is a direction in which the gNB and NR-UE detect no signal in frequency band ♭5 in reception period 9401_2 for LBT processing for the second frequency band. Then, the gNB and NR-UE transmit "modulation signal 9402_5 for frequency band ♭5" in frequency band ♭5 at or after time t2.

Note that the configuration of a modulation signal transmitted by the gNB and NR-UE (e.g., sector sweep reference signal, feedback signal, data symbol, PDCCH, PDSCH, PUCCH, PUSCH, SS block, PBCH, SS/PBCH block, etc.) has been described in, for example, Embodiments 1 to 6 or the like, and thus the description thereof will be omitted.

The LBT processing methods (e.g., "omni-directional LBT", "directional LBT", "LBT in which both omni-directional LBT processing and directional LBT processing are performed", etc.) have been described in detail in Embodiment 7 or later, and thus the description thereof will be omitted. In terms of "modulation signal 9402_5 for frequency band ♭5", there may be a beam in which no modulation signal is present depending on the beam.

In addition, in terms of "modulation signal 9402_5 for frequency band ♭5", there may be an antenna from which no modulation signal is transmitted depending on the antenna. These have been described in other embodiments.

As in FIG. 94B, it is assumed that there is a direction in which the gNB and NR-UE detect no signal in frequency band ♭7 in reception period 9401_2 for LBT processing for the second frequency band. Then, the gNB and NR-UE transmit "modulation signal 9402_7 for frequency band ♭7" in frequency band ♭7 at or after time t2.

Note that the configuration of a modulation signal transmitted by the gNB and NR-UE (e.g., sector sweep reference signal, feedback signal, data symbol, PDCCH, PDSCH, PUCCH, PUSCH, SS block, PBCH, SS/PBCH block, etc.) has been described in, for example, Embodiments 1 to 6 or the like, and thus the description thereof will be omitted.

The LBT processing methods (e.g., "omni-directional LBT", "directional LBT", "LBT in which both omni-directional LBT processing and directional LBT processing are performed", etc.) have been described in detail in Embodiment 7 or later, and thus the description thereof will be omitted. In terms of "modulation signal 9402_7 for frequency band ♭7", there may be a beam in which no modulation signal is present depending on the beam.

In addition, in terms of "modulation signal 9402_7 for frequency band ♭7", there may be an antenna from which no modulation signal is transmitted depending on the antenna. These have been described in other embodiments

As in FIG. 94B, it is assumed that there is a direction in which the gNB and NR-UE detect no signal in frequency band ♭K in reception period 9401_2 for LBT processing for the second frequency band. Then, the gNB and NR-UE transmit "modulation signal 9402_K for frequency band ♭K" in frequency band ♭K at or after time t2.

Note that the configuration of a modulation signal transmitted by the gNB and NR-UE (e.g., sector sweep reference signal, feedback signal, data symbol, PDCCH, PDSCH, PUCCH, PUSCH, SS block, PBCH, SS/PBCH block, etc.) has been described in, for example, Embodiments 1 to 6 or the like, and thus the description thereof will be omitted.

The LBT processing methods (e.g., "omni-directional LBT", "directional LBT", "LBT in which both omni-directional LBT processing and directional LBT processing are performed", etc.) have been described in detail in Embodiment 7 or later, and thus the description thereof will be omitted. In terms of "modulation signal 9402_K for frequency band ♭K", there may be a beam in which no modulation signal is present depending on the beam.

In addition, in terms of "modulation signal 9402_K for frequency band ♭K", there may be an antenna from which no modulation signal is transmitted depending on the antenna. These have been described in other embodiments

Meanwhile, it is assumed that the gNB and NR-UE detect a signal in frequency band ♭6 in reception period 9401_2 for LBT processing for the second frequency band. Then, the gNB and NR-UE does not transmit a modulation signal in frequency band ♭6 at or after time t2.

Note that the state of the gNB and NR-UE is exemplified in FIGS. 94A and 94B, but the state is not limited to these. For example, there may be a time period in which a communication counterpart transmits a modulation signal. Further, the gNB and NR-UE may transmit a modulation signal immediately after performing the LBT, or may transmit a modulation signal some time after performing the LBT.

In FIG. 94A, reception period 9401_1 for LBT processing for the first frequency band has a configuration using frequency band ♭1 to frequency band ♭3, but the reception period for LBT processing for the first frequency band may have frequency bands narrower than frequency band ♭1 to frequency band ♭3. Further, in FIG. 94A, reception period 9401_2 for LBT processing for the second frequency band has a configuration using frequency band ♭4 to frequency band ♭K, but the reception period for LBT processing for the first frequency band may have frequency bands narrower than frequency band ♭4 to frequency band ♭K.

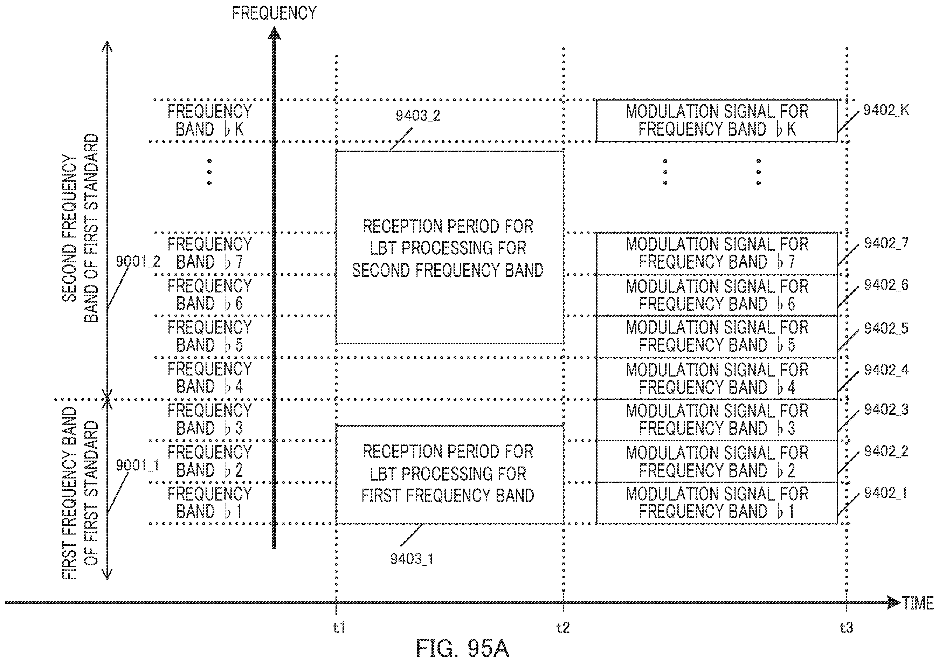

FIG. 95A illustrates an exemplary state of the gNB and NR-UE, and the horizontal axis represents time while the vertical axis represents frequency. On the frequency axis, there are "frequency band ♭1", "frequency band ♭2", "frequency band ♭3", ..., "frequency band ♭K" as illustrated in FIG. 95A. Note that K is an integer equal to or greater than 2. In FIG. 95A, components that operate in the same manner as in FIG. 94A are denoted by the same reference signs, and the description thereof will be omitted.

As illustrated in FIG. 95A, there is reception period 9403_1 for LBT processing for the first frequency band having frequency bands narrower than frequency band ♭1 to frequency band ♭3 from time t1 to time t2. Thus, the gNB and NR-UE perform the LBT processing in first frequency band 9001_1 of the first standard by determining whether a signal is present in first frequency band 9001_1 of the first standard using reception period 9403_1 for LBT processing for the first frequency band.

For example, as in FIG. 95A, it is assumed that there is a direction in which the gNB and NR-UE detect no signal in reception period 9403_1 for LBT processing for the first frequency band. Then, the gNB and NR-UE transmit, at or after time t2, "modulation signal 9402_1 for frequency band ♭1" in frequency band ♭1, "modulation signal 9402_2 for frequency band ♭2" in frequency band ♭2, and "modulation signal 9402_3 for frequency band ♭3" in frequency band ♭3.

Note that the configuration of a modulation signal transmitted by the gNB and NR-UE (e.g., sector sweep reference signal, feedback signal, data symbol, PDCCH, PDSCH, PUCCH, PUSCH, SS block, PBCH, SS/PBCH block, etc.) has been described in, for example, Embodiments 1 to 6 or the like, and thus the description thereof will be omitted.

The LBT processing methods (e.g., "omni-directional LBT", "directional LBT", "LBT in which both omni-directional LBT processing and directional LBT processing are performed", etc.) have been described in detail in Embodiment 7 or later, and thus the description thereof will be omitted. In terms of "modulation signal 9402_i for frequency band bi", there may be a beam in which no modulation signal is present depending on the beam.

In addition, in terms of "modulation signal 9402_i for frequency band bi", there may be an antenna from which no modulation signal is transmitted depending on the antenna. These have been described in other embodiments. Note that i is an integer from 3 to K (both inclusive).

As illustrated in FIG. 95A, there is reception period 9403_2 for LBT processing for the second frequency band having frequency bands narrower than frequency band ♭4 to frequency band ♭K from time t1 to time t2. Thus, the gNB and NR-UE perform the LBT processing in second frequency band 9001_2 of the first standard by determining whether a signal is present in second frequency band 9001_2 of the first standard using reception period 9403_2 for LBT processing for the second frequency band.

For example, as in FIG. 95A, it is assumed that there is a direction in which the gNB and NR-UE detect no signal in reception period 9403_2 for LBT processing for the second frequency band. Then, the gNB and NR-UE transmit, at or after time t2, "modulation signal 9402_4 for frequency band ♭4" in frequency band ♭4, "modulation signal 9402_5 for frequency band ♭5" in frequency band ♭5, ..., "modulation signal 9404_K for frequency band ♭K" in frequency band ♭K.

Note that the configuration of a modulation signal transmitted by the gNB and NR-UE (e.g., sector sweep reference signal, feedback signal, data symbol, PDCCH, PDSCH, PUCCH, PUSCH, SS block, PBCH, SS/PBCH block, etc.) has been described in, for example, Embodiments 1 to 6 or the like, and thus the description thereof will be omitted.

The LBT processing methods (e.g., "omni-directional LBT", "directional LBT", "LBT in which both omni-directional LBT processing and directional LBT processing are performed", etc.) have been described in detail in Embodiment 7 or later, and thus the description thereof will be omitted. In terms of "modulation signal 9402_i for frequency band bi", there may be a beam in which no modulation signal is present depending on the beam.

In addition, in terms of "modulation signal 9402_i for frequency band bi", there may be an antenna from which no modulation signal is transmitted depending on the antenna. These have been described in other embodiments. Note that i is an integer from 4 to K (both inclusive).

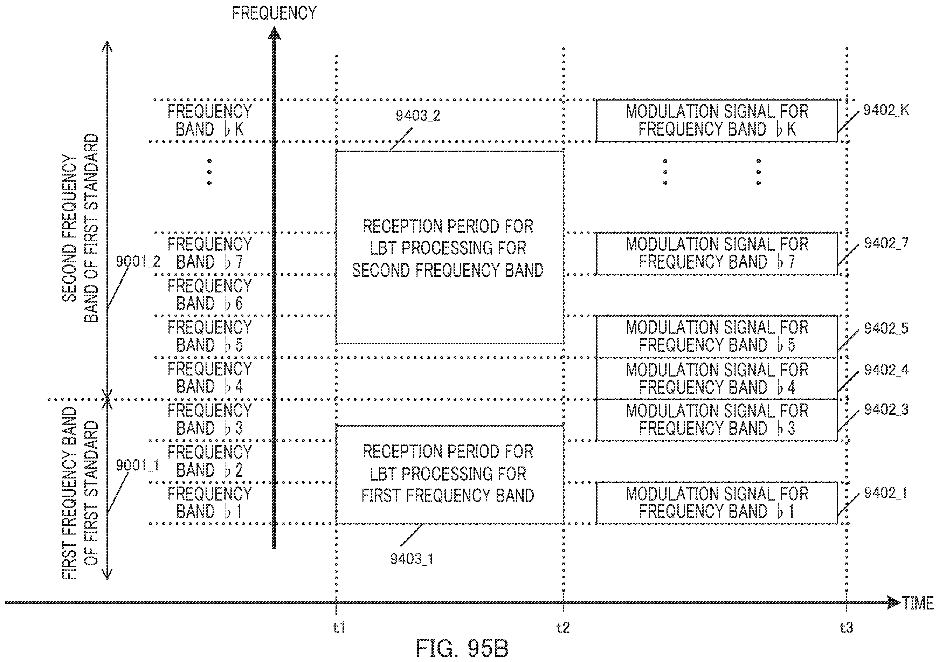

FIG. 95B illustrates an exemplary state of the gNB and NR-UE different from that in FIG. 95A, and the horizontal axis represents time while the vertical axis represents frequency. In FIG. 95B, components that operate in the same manner as in FIG. 95A are denoted by the same reference signs, and the description thereof will be omitted.

As illustrated in FIG. 95B, there is reception period 9403_1 for LBT processing for the first frequency band having frequency bands narrower than frequency band ♭1 to frequency band ♭3 from time t1 to time t2. Thus, the gNB and NR-UE perform the LBT processing in first frequency band 9001_1 of the first standard by determining whether a signal is present in first frequency band 9001_1 of the first standard using reception period 9403_1 for LBT processing for the first frequency band. At this time, the gNB and NR-UE determine whether a signal is present in each frequency band.

As in FIG. 95B, it is assumed that there is a direction in which the gNB and NR-UE detect no signal in frequency band ♭1 in reception period 9403_1 for LBT processing for the first frequency band. Then, the gNB and NR-UE transmit "modulation signal 9402_1 for frequency band ♭1" in frequency band ♭1 at or after time t2.

Note that the configuration of a modulation signal transmitted by the gNB and NR-UE (e.g., sector sweep reference signal, feedback signal, data symbol, PDCCH, PDSCH, PUCCH, PUSCH, SS block, PBCH, SS/PBCH block, etc.) has been described in, for example, Embodiments 1 to 6 or the like, and thus the description thereof will be omitted.

The LBT processing methods (e.g., "omni-directional LBT", "directional LBT", "LBT in which both omni-directional LBT processing and directional LBT processing are performed", etc.) have been described in detail in Embodiment 7 or later, and thus the description thereof will be omitted. In terms of "modulation signal 9402_1 for frequency band ♭1", there may be a beam in which no modulation signal is present depending on the beam.

In addition, in terms of "modulation signal 9402_1 for frequency band ♭1", there may be an antenna from which no modulation signal is transmitted depending on the antenna. These have been described in other embodiments.

As in FIG. 95B, it is assumed that there is a direction in which the gNB and NR-UE detect no signal in frequency band ♭3 in reception period 9403_1 for LBT processing for the first frequency band. Then, the gNB and NR-UE transmit "modulation signal 9402_3 for frequency band ♭3" in frequency band ♭3 at or after time t2.

Note that the configuration of a modulation signal transmitted by the gNB and NR-UE (e.g., sector sweep reference signal, feedback signal, data symbol, PDCCH, PDSCH, PUCCH, PUSCH, SS block, PBCH, SS/PBCH block, etc.) has been described in, for example, Embodiments 1 to 6 or the like, and thus the description thereof will be omitted.

The LBT processing methods (e.g., "omni-directional LBT", "directional LBT", "LBT in which both omni-directional LBT processing and directional LBT processing are performed", etc.) have been described in detail in Embodiment 7 or later, and thus the description thereof will be omitted. In terms of "modulation signal 9402_3 for frequency band ♭3", there may be a beam in which no modulation signal is present depending on the beam.

In addition, in terms of "modulation signal 9402_3 for frequency band ♭3", there may be an antenna from which no modulation signal is transmitted depending on the antenna. These have been described in other embodiments.

Meanwhile, it is assumed that the gNB and NR-UE detect a signal in frequency band ♭2 in reception period 9403_1 for LBT processing for the first frequency band. Then, the gNB and NR-UE does not transmit a modulation signal in frequency band ♭2 at or after time t2.

As illustrated in FIG. 95B, there is reception period 9403_2 for LBT processing for the second frequency band in frequency band ♭4 to frequency band ♭K from time t1 to time t2. Thus, the gNB and NR-UE perform the LBT processing in second frequency band 9001_2 of the first standard by determining whether a signal is present in second frequency band 9001_2 of the first standard using reception period 9403_2 for LBT processing for the second frequency band. At this time, the gNB and NR-UE determine whether a signal is present in each frequency band.

As in FIG. 95B, it is assumed that there is a direction in which the gNB and NR-UE detect no signal in frequency band ♭4 in reception period 9403_2 for LBT processing for the second frequency band. Then, the gNB and NR-UE transmit "modulation signal 9402_4 for frequency band ♭4" in frequency band ♭4 at or after time t2.

Note that the configuration of a modulation signal transmitted by the gNB and NR-UE (e.g., sector sweep reference signal, feedback signal, data symbol, PDCCH, PDSCH, PUCCH, PUSCH, SS block, PBCH, SS/PBCH block, etc.) has been described in, for example, Embodiments 1 to 6 or the like, and thus the description thereof will be omitted.

The LBT processing methods (e.g., "omni-directional LBT", "directional LBT", "LBT in which both omni-directional LBT processing and directional LBT processing are performed", etc.) have been described in detail in Embodiment 7 or later, and thus the description thereof will be omitted. In terms of "modulation signal 9402_4 for frequency band ♭4", there may be a beam in which no modulation signal is present depending on the beam.

In addition, in terms of "modulation signal 9402_4 for frequency band ♭4", there may be an antenna from which no modulation signal is transmitted depending on the antenna. These have been described in other embodiments.

As in FIG. 95B, it is assumed that there is a direction in which the gNB and NR-UE detect no signal in frequency band ♭5 in reception period 9403_2 for LBT processing for the second frequency band. Then, the gNB and NR-UE transmit "modulation signal 9402_5 for frequency band ♭5" in frequency band ♭5 at or after time t2.

Note that the configuration of a modulation signal transmitted by the gNB and NR-UE (e.g., sector sweep reference signal, feedback signal, data symbol, PDCCH, PDSCH, PUCCH, PUSCH, SS block, PBCH, SS/PBCH block, etc.) has been described in, for example, Embodiments 1 to 6 or the like, and thus the description thereof will be omitted.

The LBT processing methods (e.g., "omni-directional LBT", "directional LBT", "LBT in which both omni-directional LBT processing and directional LBT processing are performed", etc.) have been described in detail in Embodiment 7 or later, and thus the description thereof will be omitted. In terms of "modulation signal 9402_5 for frequency band ♭5", there may be a beam in which no modulation signal is present depending on the beam.

In addition, in terms of "modulation signal 9402_5 for frequency band ♭5", there may be an antenna from which no modulation signal is transmitted depending on the antenna. These have been described in other embodiments.

As in FIG. 95B, it is assumed that there is a direction in which the gNB and NR-UE detect no signal in frequency band ♭7 in reception period 9403_2 for LBT processing for the second frequency band. Then, the gNB and NR-UE transmit "modulation signal 9402_7 for frequency band ♭7" in frequency band ♭7 at or after time t2.

Note that the configuration of a modulation signal transmitted by the gNB and NR-UE (e.g., sector sweep reference signal, feedback signal, data symbol, PDCCH, PDSCH, PUCCH, PUSCH, SS block, PBCH, SS/PBCH block, etc.) has been described in, for example, Embodiments 1 to 6 or the like, and thus the description thereof will be omitted.

The LBT processing methods (e.g., "omni-directional LBT", "directional LBT", "LBT in which both omni-directional LBT processing and directional LBT processing are performed", etc.) have been described in detail in Embodiment 7 or later, and thus the description thereof will be omitted. In terms of "modulation signal 9402_7 for frequency band ♭7", there may be a beam in which no modulation signal is present depending on the beam.

In addition, in terms of "modulation signal 9402_7 for frequency band ♭7", there may be an antenna from which no modulation signal is transmitted depending on the antenna. These have been described in other embodiments

As in FIG. 95B, it is assumed that there is a direction in which the gNB and NR-UE detect no signal in frequency band ♭K in reception period 9403_2 for LBT processing for the second frequency band. Then, the gNB and NR-UE transmit "modulation signal 9402_K for frequency band ♭K" in frequency band ♭K at or after time t2.

Note that the configuration of a modulation signal transmitted by the gNB and NR-UE (e.g., sector sweep reference signal, feedback signal, data symbol, PDCCH, PDSCH, PUCCH, PUSCH, SS block, PBCH, SS/PBCH block, etc.) has been described in, for example, Embodiments 1 to 6 or the like, and thus the description thereof will be omitted.

The LBT processing methods (e.g., "omni-directional LBT", "directional LBT", "LBT in which both omni-directional LBT processing and directional LBT processing are performed", etc.) have been described in detail in Embodiment 7 or later, and thus the description thereof will be omitted. In terms of "modulation signal 9402_K for frequency band ♭K", there may be a beam in which no modulation signal is present depending on the beam.

In addition, in terms of "modulation signal 9402_K for frequency band ♭K", there may be an antenna from which no modulation signal is transmitted depending on the antenna. These have been described in other embodiments

Meanwhile, it is assumed that the gNB and NR-UE detect a signal in frequency band ♭6 in reception period 9403_2 for LBT processing for the second frequency band. Then, the gNB and NR-UE does not transmit a modulation signal in frequency band ♭6 at or after time t2.

Note that the state of the gNB and NR-UE is exemplified in FIGS. 95A and 95B, but the state is not limited to these. For example, there may be a time period in which a communication counterpart transmits a modulation signal. Further, the gNB and NR-UE may transmit a modulation signal immediately after performing the LBT, or may transmit a modulation signal some time after performing the LBT.

Note that, unlike FIGS. 94A, 94B, 95A, and 95B, the reception period for LBT processing for the first frequency band may have frequency bands broader or narrower than frequency band ♭1 to frequency band ♭3. In addition, the reception period for LBT processing for the second frequency band may have frequency bands broader or narrower than frequency band ♭4 to frequency band ♭K.

Embodiment 8 has a description of the case of "performing the LBT and not transmitting a sector sweep reference signal using an antenna that has detected a signal" with reference to FIG. 62A. The processing of "performing the LBT and not transmitting a sector sweep reference signal using an antenna that has detected a signal" may be performed in each of the frequency bands from "frequency band ♭1" to "frequency band ♭K" described above.

Embodiment 8 also has a description of the case of "performing the LBT and not transmitting a sector sweep reference signal using a beam in which a signal has detected" with reference to FIG. 62B. The processing of "performing the LBT and not transmitting a sector sweep reference signal using a beam in which a signal has detected" may be performed in each of the frequency bands from "frequency band ♭1" to "frequency band ♭K" described above.

Embodiments 8, 9, and 10 have a description of "the gNB and NR-UE perform the second LBT processing (directional LBT) or the third LBT processing (LBT in which both omni-directional LBT processing and directional LBT processing are performed) and start communication without using more than one direction for the communication. Then, after starting the communication, the gNB and NR-UE check whether a signal is present in a direction not used for the communication, and when detecting a direction in which no signal is present, the gNB and NR-UE may start communication by a beam corresponding to the direction". The processing described in Embodiments 8, 9, and 10 may be performed in each of the frequency bands from "frequency band ♭1" to "frequency band ♭K" described above. The examples will be described below.

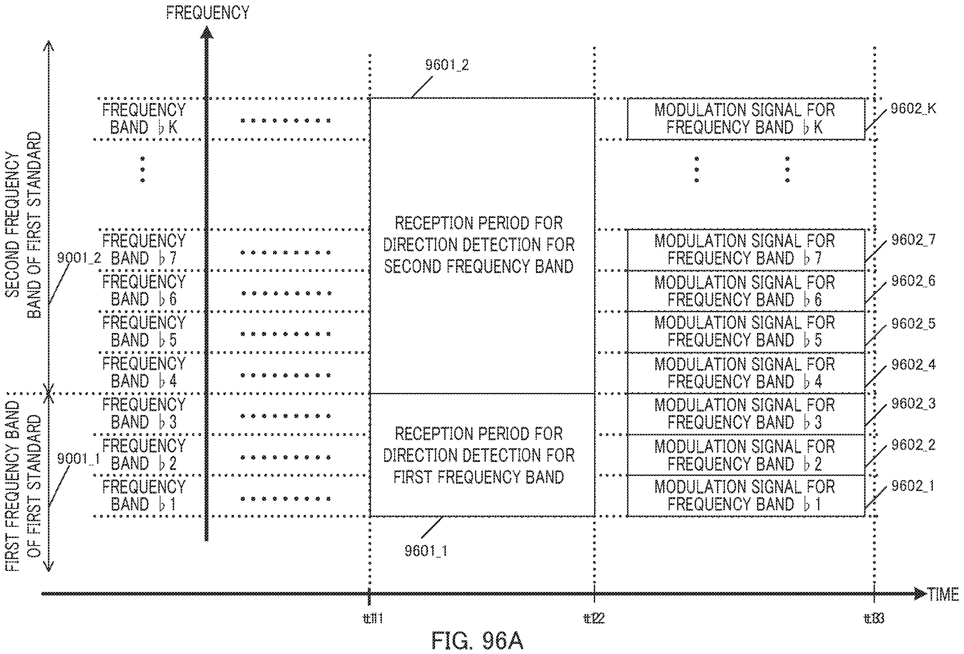

FIG. 96A illustrates an exemplary state of the gNB and NR-UE, and the horizontal axis represents time while the vertical axis represents frequency. On the frequency axis, there are "frequency band ♭1", "frequency band ♭2", "frequency band ♭3", ..., "frequency band ♭K" as illustrated in FIGS. 94A and 94B. Note that K is an integer equal to or greater than 2.

The gNB and NR-UE "perform the LBT and then transmit a modulation signal in each frequency band" as in FIG. 94A. FIG. 96A illustrates an exemplary state of the gNB and NR-UE after that.

Note that ""performing the LBT and then transmitting a modulation signal in each frequency band" as in FIG. 94A" is merely an example, and ""performing the LBT and then transmitting a modulation signal in each frequency band" as in FIG. 95A and the description in the present specification" is also possible.

Note that, in FIG. 94A, the gNB and NR-UE assume that there is a "direction in which a signal is present" (assume that there is a receive beam in which a signal is detected) in frequency band ♭1, and do not start communication in that direction.

Likewise, the gNB and NR-UE assume that there is a "direction in which a signal is present" (assume that there is a receive beam in which a signal is detected) in frequency band bi, and do not start communication in that direction. Note that i is an integer from 1 to K (both inclusive).

In FIG. 96A, there is reception period 9601_1 for direction (beam) detection for the first frequency band in frequency band ♭1 to frequency band ♭3 from time t11 to time t12.

"Reception period 9601_1 for direction (beam) detection for the first frequency band" in FIG. 96A corresponds to "reception period 6801 for direction (beam) detection" in FIG. 68, "reception period 6901 for direction (beam) detection" in FIG. 69, and "reception period 7001 for direction (beam) detection" in FIG. 70.

It is assumed that the gNB and NR-UE determine a direction not to be used for communication in frequency band b 1 (referred to as the first direction) by using "reception period 9401_1 for LBT processing for the first frequency band in FIG. 94A".

Then, the gNB and NR-UE determine whether a signal is present in the first direction in frequency band ♭1 by using "reception period 9601_1 for direction (beam) detection for the first frequency band" in FIG. 96A.

When the gNB and NR-UE determine that a signal is present in the first direction, the gNB and NR-UE determine not to use the first direction for communication, for example, for modulation signal 9602_1 for frequency band b 1. When the gNB and NR-UE determine that no signal is present in the first direction, the gNB and NR-UE can use the first direction for communication, for example, for modulation signal 9602_1 for frequency band b 1.

Likewise, it is assumed that the gNB and NR-UE determine a direction not to be used for communication in frequency band bi (referred to as the i-th direction) by using "reception period 9401_1 for LBT processing for the first frequency band in FIG. 94A". Note that i is an integer from 1 to 3 (both inclusive).

Then, the gNB and NR-UE determine whether a signal is present in the i-th direction in frequency band bi by using "reception period 9601_1 for direction (beam) detection for the first frequency band" in FIG. 96A.

When the gNB and NR-UE determine that a signal is present in the i-th direction, the gNB and NR-UE determine not to use the i-th direction for communication, for example, for modulation signal 9602_i for frequency band 6i. When the gNB and NR-UE determine that no signal is present in the i-th direction, the gNB and NR-UE can use the i-th direction for communication, for example, for modulation signal 9602_i for frequency band bi.

Note that "reception period 9601_1 for direction (beam) detection for the first frequency band" in FIG. 96A corresponds to "reception period 6801 for direction (beam) detection" in FIG. 68, "reception period 6901 for direction (beam) detection" in FIG. 69, and "reception period 7001 for direction (beam) detection" in FIG. 70, and thus specific operations in "reception period 9601_1 for direction (beam) detection for the first frequency band" are as described in other embodiments.

In FIG. 96A, there is reception period 9601_2 for direction (beam) detection for the second frequency band in frequency band ♭4 to frequency band ♭K from time t11 to time t12.

"Reception period 9601_2 for direction (beam) detection for the second frequency band" in FIG. 96A corresponds to "reception period 6801 for direction (beam) detection" in FIG. 68, "reception period 6901 for direction (beam) detection" in FIG. 69, and "reception period 7001 for direction (beam) detection" in FIG. 70.

It is assumed that the gNB and NR-UE determine a direction not to be used for communication in frequency band ♭4 (referred to as the fourth direction) by using "reception period 9401_2 for LBT processing for the second frequency band in FIG. 94A".

Then, the gNB and NR-UE determine whether a signal is present in the fourth direction in frequency band ♭4 by using "reception period 9601_2 for direction (beam) detection for the second frequency band" in FIG. 96A.

When the gNB and NR-UE determine that a signal is present in the fourth direction, the gNB and NR-UE determine not to use the fourth direction for communication, for example, for modulation signal 9602_4 for frequency band ♭4. When the gNB and NR-UE determine that no signal is present in the fourth direction, the gNB and NR-UE can use the fourth direction for communication, for example, for modulation signal 9602_4 for frequency band ♭4.

Likewise, it is assumed that the gNB and NR-UE determine a direction not to be used for communication in frequency band ♭j (referred to as the j-th direction) by using "reception period 9401_2 for LBT processing for the second frequency band in FIG. 94A". Note that j is an integer from 4 to K (both inclusive).

Then, the gNB and NR-UE determine whether a signal is present in the j-th direction in frequency band ♭j by using "reception period 9601_2 for direction (beam) detection for the second frequency band" in FIG. 96A.

When the gNB and NR-UE determine that a signal is present in the j-th direction, the gNB and NR-UE determine not to use the j-th direction for communication, for example, for modulation signal 9602_j for frequency band ♭j. When the gNB and NR-UE determine that no signal is present in the j-th direction, the gNB and NR-UE can use the j-th direction for communication, for example, for modulation signal 9602_j for frequency band bj.

Note that "reception period 9601_2 for direction (beam) detection for the second frequency band" in FIG. 96A corresponds to "reception period 6801 for direction (beam) detection" in FIG. 68, "reception period 6901 for direction (beam) detection" in FIG. 69, and "reception period 7001 for direction (beam) detection" in FIG. 70, and thus specific operations in "reception period 9601_2 for direction (beam) detection for the second frequency band" are as described in other embodiments.

Although FIG. 96A has been described as an exemplary state of the gNB and NR-UE, the state is not limited to this. For example, there may be a time period in which a communication counterpart transmits a modulation signal. Further, the gNB and NR-UE may transmit a modulation signal immediately after the direction (beam) detection in FIG. 96A, or may transmit a modulation signal some time after the direction (beam) detection.

The names of signals, frames, etc. in FIG. 96A are not limited to those in the drawing, and other names may be used.

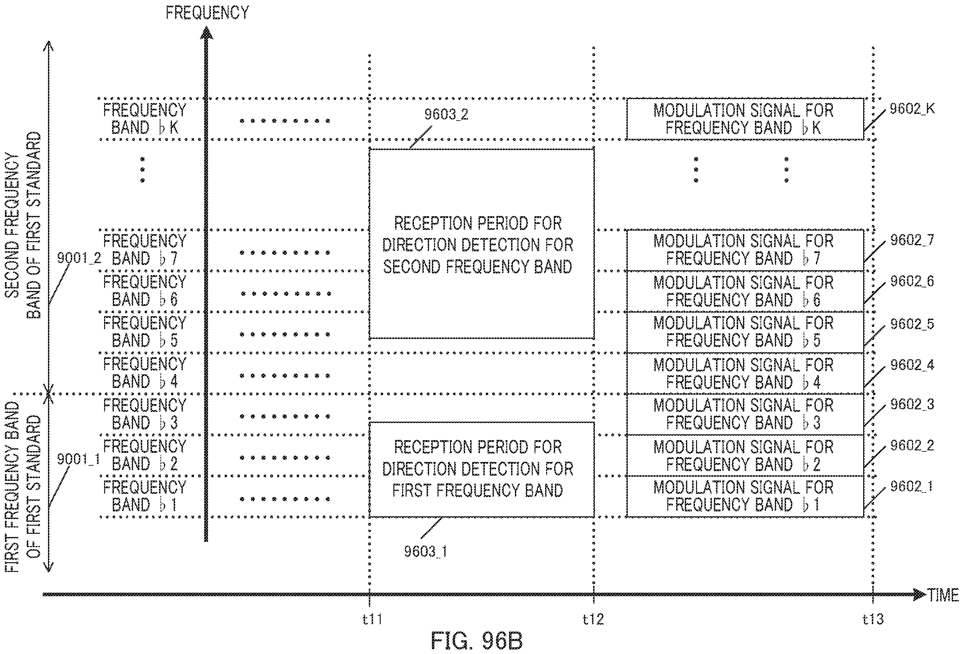

FIG. 96B illustrates an exemplary state of the gNB and NR-UE different from that in FIG. 96A, and the horizontal axis represents time while the vertical axis represents frequency. In FIG. 96B, components that operate in the same manner as in FIG. 96A are denoted by the same reference signs, and the description thereof will be omitted.

The gNB and NR-UE "perform the LBT and then transmit a modulation signal in each frequency band" as in FIG. 95A. FIG. 96B illustrates an exemplary state of the gNB and NR-UE after that.

Note that ""performing the LBT and then transmitting a modulation signal in each frequency band" as in FIG. 95A" is merely an example, and ""performing the LBT and then transmitting a modulation signal in each frequency band" as in FIG. 94A and the description in the present specification" is also possible.

Note that, in FIG. 95A, the gNB and NR-UE assume that there is a "direction in which a signal is present" (assume that there is a receive beam in which a signal is detected) in frequency band $b1$, and do not start communication in that direction.

Likewise, the gNB and NR-UE assume that there is a "direction in which a signal is present" (assume that there is a receive beam in which a signal is detected) in frequency band bi, and do not start communication in that direction. Note that i is an integer from 1 to K (both inclusive).

In FIG. 96B, there is reception period 9603_1 for direction (beam) detection for the first frequency band in frequency band $b1$ to frequency band $b3$ from time t11 to time t12.

"Reception period 9603_1 for direction (beam) detection for the first frequency band" in FIG. 96B corresponds to "reception period 6801 for direction (beam) detection" in FIG. 68, "reception period 6901 for direction (beam) detection" in FIG. 69, and "reception period 7001 for direction (beam) detection" in FIG. 70.

It is assumed that the gNB and NR-UE determine a direction not to be used for communication in frequency band b 1 (referred to as the first direction) by using "reception period 9403_1 for LBT processing for the first frequency band in FIG. 95A".

Then, the gNB and NR-UE determine whether a signal is present in the first direction in frequency band $b1$ by using "reception period 9603_1 for direction (beam) detection for the first frequency band" in FIG. 96B.

When the gNB and NR-UE determine that a signal is present in the first direction, the gNB and NR-UE determine not to use the first direction for communication, for example, for modulation signal 9602_1 for frequency band b 1. When the gNB and NR-UE determine that no signal is present in the first direction, the gNB and NR-UE can use the first direction for communication, for example, for modulation signal 9602_1 for frequency band $b1$.

Likewise, it is assumed that the gNB and NR-UE determine a direction not to be used for communication in frequency band bi (referred to as the i-th direction) by using "reception period 9403_1 for LBT processing for the first frequency band in FIG. 95A". Note that i is an integer from 1 to 3 (both inclusive).

Then, the gNB and NR-UE determine whether a signal is present in the i-th direction in frequency band bi by using "reception period 9603_1 for direction (beam) detection for the first frequency band" in FIG. 96B.

When the gNB and NR-UE determine that a signal is present in the i-th direction, the gNB and NR-UE determine not to use the i-th direction for communication, for example, for modulation signal 9602_i for frequency band 6i. When the gNB and NR-UE determine that no signal is present in the i-th direction, the gNB and NR-UE can use the i-th direction for communication, for example, for modulation signal 9602_i for frequency band bi.

Note that "reception period 9603_1 for direction (beam) detection for the first frequency band" in FIG. 96B corresponds to "reception period 6801 for direction (beam) detection" in FIG. 68, "reception period 6901 for direction (beam) detection" in FIG. 69, and "reception period 7001 for direction (beam) detection" in FIG. 70, and thus specific operations in "reception period 9603_1 for direction (beam) detection for the first frequency band" are as described in other embodiments.

In FIG. 96B, there is reception period 9603_2 for direction (beam) detection for the second frequency band in frequency band $b4$ to frequency band $bK$ from time t11 to time t12.

"Reception period 9603_2 for direction (beam) detection for the second frequency band" in FIG. 96B corresponds to "reception period 6801 for direction (beam) detection" in FIG. 68, "reception period 6901 for direction (beam) detection" in FIG. 69, and "reception period 7001 for direction (beam) detection" in FIG. 70.

It is assumed that the gNB and NR-UE determine a direction not to be used for communication in frequency band $b4$ (referred to as the fourth direction) by using "reception period 9403_2 for LBT processing for the second frequency band in FIG. 95A".

Then, the gNB and NR-UE determine whether a signal is present in the fourth direction in frequency band $b4$ by using "reception period 9603_2 for direction (beam) detection for the second frequency band" in FIG. 96B.

When the gNB and NR-UE determine that a signal is present in the fourth direction, the gNB and NR-UE determine not to use the fourth direction for communication, for example, for modulation signal 9602_4 for frequency band $b4$. When the gNB and NR-UE determine that no signal is present in the fourth direction, the gNB and NR-UE can use the fourth direction for communication, for example, for modulation signal 9602_4 for frequency band $b4$.

Likewise, it is assumed that the gNB and NR-UE determine a direction not to be used for communication in frequency band bj (referred to as the j-th direction) by using "reception period 9403_2 for LBT processing for the second frequency band in FIG. 95A". Note that j is an integer from 4 to K (both inclusive).

Then, the gNB and NR-UE determine whether a signal is present in the j-th direction in frequency band bj by using "reception period 9603_2 for direction (beam) detection for the second frequency band" in FIG. 96B.

When the gNB and NR-UE determine that a signal is present in the j-th direction, the gNB and NR-UE determine not to use the j-th direction for communication, for example, for modulation signal 9602_j for frequency band bj. When the gNB and NR-UE determine that no signal is present in the j-th direction, the gNB and NR-UE can use the j-th direction for communication, for example, for modulation signal 9602_j for frequency band bj.

Note that "reception period 9603_2 for direction (beam) detection for the second frequency band" in FIG. 96B corresponds to "reception period 6801 for direction (beam) detection" in FIG. 68, "reception period 6901 for direction (beam) detection" in FIG. 69, and "reception period 7001 for direction (beam) detection" in FIG. 70, and thus specific operations in "reception period 9603_2 for direction (beam) detection for the second frequency band" are as described in other embodiments.

Although FIG. 96B has been described as an exemplary state of the gNB and NR-UE, the state is not limited to this. For example, there may be a time period in which a communication counterpart transmits a modulation signal. Further, the gNB and NR-UE may transmit a modulation signal immediately after the direction (beam) detection in FIG. 96B, or may transmit a modulation signal some time after the direction (beam) detection.

The names of signals, frames, etc. in FIG. 96B are not limited to those in the drawing, and other names may be used.

Note that, unlike FIGS. 96A, and 96B, the reception period for direction (beam) detection for the first frequency band may have frequency bands broader or narrower than frequency band b1 to frequency band b3. In addition, the reception period for direction (beam) detection for the second frequency band may have frequency bands broader or narrower than frequency band b4 to frequency band bK.

The above procedure allows the gNB and NR-UE to perform the LBT, detect a signal of the first standard, and accordingly control communication performed by themselves, thereby producing the effect of improving the system data throughput of a system including the gNB, NR-UE, etc.

Further, even in a case where the gNB and NR-UE perform communication over a plurality of channels of the first standard, the gNB and NR-UE can perform the LBT, detect a signal of the first standard, and accordingly control communication performed by themselves, thereby producing the effect of improving the system data throughput of a system including the gNB, NR-UE, etc.

In addition, the determination of a direction, a beam, and an antenna to be used for communication by the gNB and NR-UE according to the presence of a signal of the first standard produces the effect of improving the system data throughput of a system including the gNB, NR-UE, etc. Even in a case where the gNB and NR-UE perform communication over a plurality of channels of the first standard, the appropriate determination of a direction, a beam, and an antenna to be used for communication produces the effect of improving the system data throughput of a system including the gNB, NR-UE, etc.

Further, fine control of the frequency granularity allows the gNB and NR-UE to perform the LBT and select a frequency and a direction in which communication can be started with little interference, thereby producing the effect of improving the system data throughput of a system including the gNB, NR-UE, etc. In addition, the determination of a direction, a beam, and an antenna to be used for communication by the gNB and NR-UE produces the effect of improving the system data throughput of a system including the gNB, NR-UE, etc.

Note that the processing described in the present embodiment or a part of the processing is performed by the transmission/reception apparatus in FIG. 53 or FIG. 54. The configurations of the gNB and NR-UE, however, are not limited to the configurations in FIGS. 53 and 54.

A variation of the first example and the second example will be described. For example, it is assumed that the frequency band used by the gNB and NR-UE for communication is placed in frequency band 9002_1 of NR, which is the first example in FIG. 90, and the frequency band is then changed to frequency band 9002_2 of NR, which is the second example in FIG. 90. Conversely, it is assumed that the frequency band used by the gNB and NR-UE for communication is placed in frequency band 9002_2 of NR, which is the second example in FIG. 90, and the frequency band is then changed to frequency band 9002_1 of NR, which is the first example in FIG. 90.

At this time, the gNB and NR-UE having the configuration in FIG. 53 or 54, for example, switch between the first example implementation and the second example implementation described above. Note that the configuration of the gNB and NR-UE is not limited to the configurations in FIGS. 53 and 54.

Next, another variation of the first example and the second example will be described.

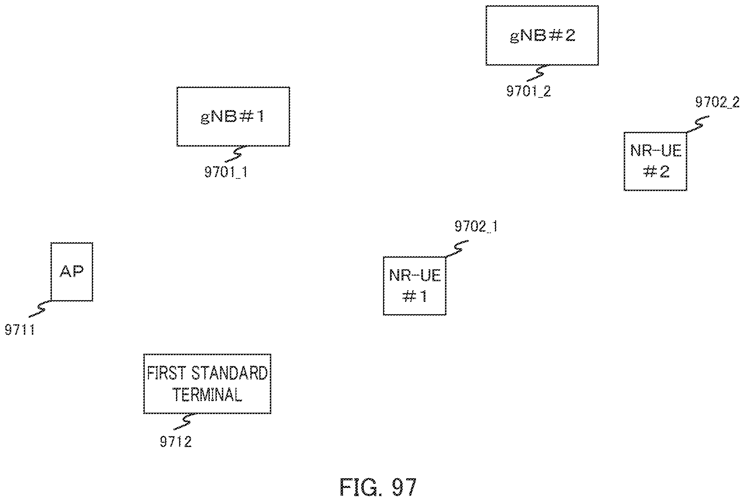

FIG. 97 illustrates an exemplary system. It is assumed that gNB #1 labeled 9701_1 and NR-UE #1 labeled 9702_1 perform the LBT to start communication. At this time, for example, first standard AP 9711 and first standard terminal 9712 possibly interfere with gNB #1 labeled 9701_1 and NR-UE #1 labeled 9702_1. In addition, gNB #2 labeled 9701_2 and NR-UE #2 labeled 9702_2 possibly interfere with gNB #1 labeled 9701_1 and NR-UE #1 labeled 9702_1.

The "LBT and direction detection after starting communication in the first example and the second example" of the present embodiment enable accurate detection of a modulation signal of the first standard in particular. Meanwhile, in "the first example and the second example", consideration is necessary in terms of the point where "gNB #1 labeled 9701_1 and NR-UE #1 labeled 9702_1 accurately detect a modulation signal transmitted by gNB #2 labeled 9701_2 and NR-UE #2 labeled 9702_2". This will be described below.

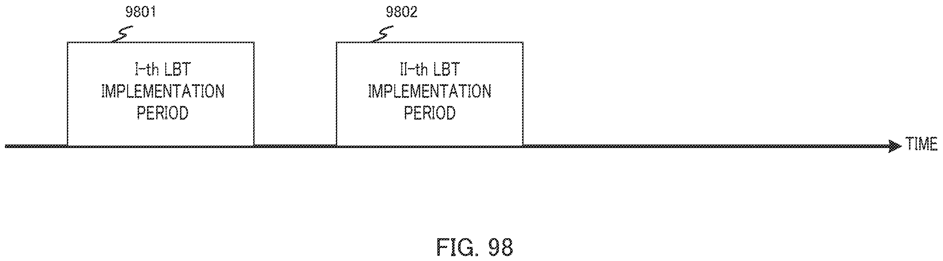

FIG. 98 illustrates exemplary LBT performed by gNB #1 labeled 9701_1 and NR-UE #1 labeled 9702_1, for example. Note that the horizontal axis represents time in FIG. 98.

As illustrated in FIG. 98, gNB #1 labeled 9701_1 and NR-UE #1 labeled 9702_1 perform the I-th LBT in I-th LBT implementation period 9801, and when determining that communication can be started, perform the II-th LBT in II-th LBT implementation period 9802. Then, when determining that communication can be started, gNB #1 labeled 9701_1 and NR-UE #1 labeled 9702_1 start communication.

Note that gNB #1 labeled 9701_1 and NR-UE #1 labeled 9702_1 may determine not to start communication after performing the I-th LBT in I-th LBT implementation period 9801. Likewise, gNB #1 labeled 9701_1 and NR-UE #1 labeled 9702_1 may determine not to start communication after performing the II-th LBT in II-th LBT implementation period 9802.

At this time, the I-th LBT performed in I-th LBT implementation period 9801 is LBT for detecting a modulation signal transmitted by a first standard apparatus (AP, terminal, repeater, etc.). Thus, the "LBT described in the first example and the second example" described in the present embodiment is performed in the I-th LBT.

In contrast, the II-th LBT performed in II-th LBT implementation period 9802 is LBT for detecting a modulation signal transmitted by an NR apparatus (gNB, NR-UE, repeater, etc.) (and/or a modulation signal transmitted by an apparatus of another standard). Thus, LBT that is other than the I-th LBT and described in other embodiments is performed in the II-th LBT, for example.

This allows the gNB and NR-UE to detect modulation signals of a plurality of standards and control the start of communication, thereby reducing interference during communication, improving the data transmission rate, and enhancing the data reception quality.

Note that, in FIG. 98, the order of I-th LBT implementation period 9801 and II-th LBT implementation period 9802 may be reversed on the time axis. Further, in FIG. 98, there may be a modulation signal transmission period of the gNB and NR-UE and a modulation signal period of the gNB and NR-UE after II-th LBT implementation period 9802 and I-th LBT implementation period 9801.

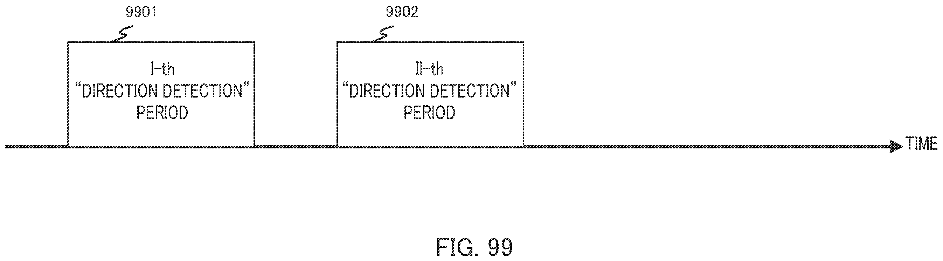

FIG. 99 illustrates exemplary direction detection performed by gNB #1 labeled 9701_1 and NR-UE #1 labeled 9702_1, for example. Note that the horizontal axis represents time in FIG. 99.

As illustrated in FIG. 99, gNB #1 labeled 9701_1 and NR-UE #1 labeled 9702_1 perform the I-th direction (beam) detection in I-th "direction (beam) detection" period 9901, and then perform the II-th direction (beam) detection in the II-th "direction (beam) detection" period 9902.

At this time, the I-th direction (beam) detection performed in I-th "direction (beam) detection" period 9901 is "direction (beam) detection" for detecting a direction (beam) of a modulation signal transmitted by a first standard apparatus (AP, terminal, repeater, etc.). Thus, the "direction (beam) detection described in the first example and the second example" described in the present embodiment is performed in the I-th direction (beam) detection. Note that the control to be performed at the time of direction (beam) detection has already been described, and thus the description thereof will be omitted.

In contrast, the II-th direction (beam) detection performed in the II-th "direction (beam) detection" period 9902 is "direction (beam) detection" for detecting a direction (beam) of a modulation signal transmitted by an NR apparatus (gNB, NR-UE, repeater, etc.) (and/or a modulation signal transmitted by an apparatus of another standard). Thus, the direction (beam) detection that is other than the I-th direction (beam) detection and described in other embodiments is performed in the II-th direction (beam) detection, for example. Note that the control to be performed at the time of direction (beam) detection has already been described, and thus the description thereof will be omitted.

This allows the gNB and NR-UE to detect modulation signals of a plurality of standards and control the communication state, thereby reducing interference during communication, improving the data transmission rate, and enhancing the data reception quality. This enables efficient use of directions and beams and produces the effect of improving the data transmission efficiency of a system.

Note that, in FIG. 99, the order of I-th direction (beam) detection period 9901 and II-th direction (beam) detection period 9902 may be reversed on the time axis. Further, in FIG. 99, there may be a modulation signal transmission period of the gNB and NR-UE and a modulation signal period of the gNB and NR-UE after I-th "direction (beam) detection" period 9901 and II-th "direction (beam) detection" period 9902.

The processing described in the present embodiment or a part of the processing is performed by the transmission/reception apparatus in FIG. 53 or FIG. 54. The configurations of the gNB and NR-UE, however, are not limited to the configurations in FIGS. 53 and 54.

(Embodiment 20)

In Embodiments 1 to 6, descriptions have been given of the case where "the gNB and NR-UE transmit an OFDMA modulation signal and a multi-carrier modulation signal" and the case where "the gNB and NR-UE transmit a sector sweep signal and a sector sweep reference signal at the time of OFDMA and multi-carrier". In Embodiment 20, variations of an LBT method etc. in these cases will be described.

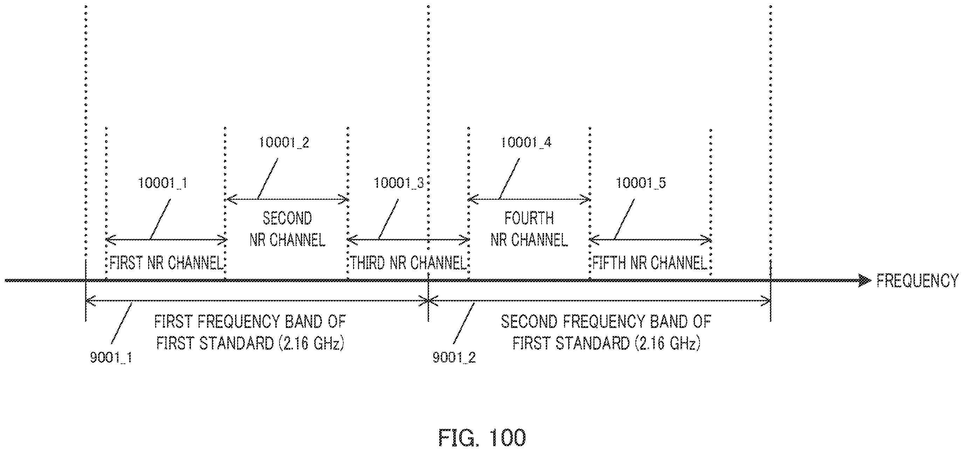

FIG. 100 illustrates exemplary frequency allocation in the present embodiment, and the horizontal axis represents frequency. As illustrated in FIG. 100, first frequency band 9001_1 of the first standard and second frequency band 9001_2 of the first standard are aligned. Note that first frequency band 9001_1 of the first standard and second frequency band 9001_2 of the first standard each have a bandwidth of 2.16 GHz, for example.

As in FIG. 100, for example, an NR apparatus such as a gNB and NR-UE handles a modulation signal of first NR channel 10001_1, a modulation signal of second NR channel 10001_2, a modulation signal of third NR channel 10001_3, a modulation signal of fourth NR channel 10001_4, and a modulation signal of fifth NR channel 10001_5. In the following, exemplary operations in the third example and the fourth example will be described.

(Third Example)

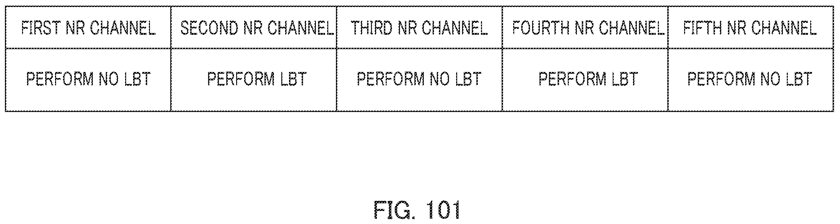

FIG. 101 illustrates whether the LBT is performed in "first NR channel 10001_1, second NR channel 10001_2, third NR channel 10001_3, fourth NR channel 10001_4, and fifth NR channel 10001_5" in FIG. 100. In the third example, the LBT is not performed in first NR channel 10001_1, the LBT is performed in second NR channel 10001_2, the LBT is not performed in third NR channel 10001_3, the LBT is performed in fourth NR channel 10001_4, and the LBT is not performed in fifth NR channel 10001_5 as illustrated in FIG. 101.

In such a case, an NR apparatus such as a gNB and NR-UE knows the state of the first frequency band of the first standard by "performing the LBT in second NR channel 10001_2".

Thus, the NR apparatus such as a gNB and NR-UE knows the state of first frequency band 9001_1 of the first standard in "first NR channel 10001_1, second NR channel 10001_2, and part of third NR channel 10001_3" as a result of "performing the LBT in second NR channel 10001_2". This allows the NR apparatus such as a gNB and NR-UE to determine whether to start communication in "first NR channel 10001_1, second NR channel 10001_2, and part of third NR channel 10001_3".

Likewise, the NR apparatus such as a gNB and NR-UE knows the state of the second frequency band of the first standard by "performing the LBT in fourth NR channel 10001_4".

Thus, the NR apparatus such as a gNB and NR-UE knows the state of second frequency band 9001_2 of the first standard in "part of third NR channel 10001_3, fourth NR channel 10001_4, and fifth NR channel 10001_5" as a result of "performing the LBT in fourth NR channel 10001_4". This allows the NR apparatus such as a gNB and NR-UE to determine whether to start communication in "part of third NR channel 10001_3, fourth NR channel 10001_4, and fifth NR channel 10001_5".

Next, specific examples of the state of the gNB and NR-UE will be described.

"FIGS. 88A and 88B", "FIGS. 91A and 91B", and "FIGS. 92A and 92B" are examples when the gNB and NR-UE use second NR channel 10001_2 in FIG. 100 for the LBT. Each of the drawings will be described below.

"FIGS. 88A and 88B" illustrate exemplary states of the gNB and NR-UE, and the horizontal axes represent time while the vertical axes represent frequency. On the frequency axes, there are "frequency band $\flat 1$", "frequency band $\flat 2$", "frequency band $\flat 3$", ..., "frequency band $\flat K$" as illustrated in "FIGS. 88A and 88B". Note that K is an integer equal to or greater than 1. K being 1 indicates a single carrier scheme.

A period for performing the LBT by the gNB and NR-UE in second NR channel 10001_2 is "reception period 8801_1 for LBT processing for frequency band $\flat 1$" to "reception period 8801_K for LBT processing for frequency band $\flat K$" in "FIGS. 88A and 88B". Note that the detailed description of FIGS. 88A and 88B will be omitted since it has already been provided.

The gNB and NR-UE perform the LBT in second NR channel 10001_2 and determine whether to start communication in "first NR channel 10001_1, second NR channel 10001_2, and part of third NR channel 10001_3" based on the result.

"FIGS. 91A and 91B" illustrate exemplary states of the gNB and NR-UE different from those in "FIGS. 88A and 88B", and the horizontal axes represent time while the vertical axes represent frequency. On the frequency axes, there are "frequency band $\flat 1$", "frequency band $\flat 2$", "frequency band $\flat 3$", ..., "frequency band $\flat K$" as illustrated in "FIGS. 91A and 91B". Note that K is an integer equal to or greater than 1. K being 1 indicates a single carrier scheme.

A period for performing the LBT by the gNB and NR-UE in second NR channel 10001_2 is "reception period 9101 for LBT processing for the first frequency band" in "FIGS. 91A and 91B". Note that the detailed description of FIGS. 91A and 91B will be omitted since it has already been provided.

The gNB and NR-UE perform the LBT in second NR channel 10001_2 and determine whether to start communication in "first NR channel 10001_1, second NR channel 10001_2, and part of third NR channel 10001_3" based on the result.

"FIGS. 92A and 92B" illustrate exemplary states of the gNB and NR-UE different from those in ""FIGS. 88A and 88B" and "FIGS. 91A and 91B"", and the horizontal axes represent time while the vertical axes represent frequency. On the frequency axes, there are "frequency band ♭1", "frequency band ♭2", "frequency band ♭3", ..., "frequency band ♭K" as illustrated in "FIGS. 92A and 92B". Note that K is an integer equal to or greater than 1. K being 1 indicates a single carrier scheme.

A period for performing the LBT by the gNB and NR-UE in second NR channel 10001_2 is "reception period 9103 for LBT processing for the first frequency band" in "FIGS. 92A and 92B". Note that the detailed description of FIGS. 92A and 92B will be omitted since it has already been provided.

The gNB and NR-UE perform the LBT in second NR channel 10001_2 and determine whether to start communication in "first NR channel 10001_1, second NR channel 10001_2, and part of third NR channel 10001_3" based on the result.

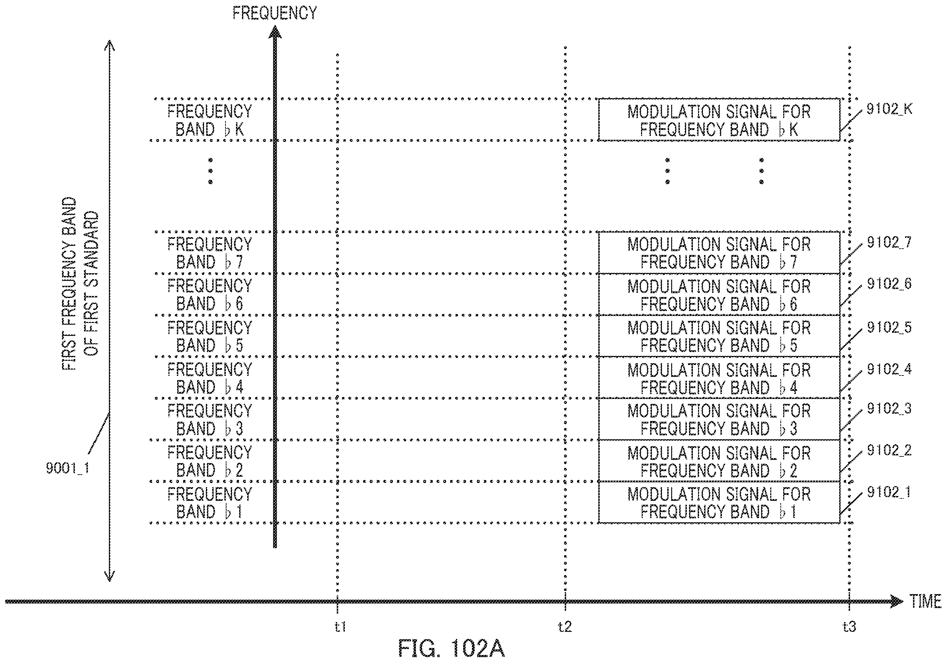

FIG. 102A is an exemplary state of the gNB and NR-UE in a case where the gNB and NR-UE perform the LBT in second NR channel 10001_2, determine whether to start communication in "first NR channel 10001_1, second NR channel 10001_2, and part of third NR channel 10001_3" based on the result, and determine to start communication.

In FIG. 102A, components that operate in the same manner as in FIG. 91 are denoted by the same reference signs. A characteristic of FIG. 102A is that no reception period for the LBT processing is provided, so that the gNB and NR-UE perform the LBT in second NR channel 10001_2, determine whether to start communication in "first NR channel 10001_1, second NR channel 10001_2, and part of third NR channel 10001_3" based on the result, and select a frequency band for communication from modulation signal 9102_1 for frequency band ♭1 to modulation signal 9102_K for frequency band ♭K.

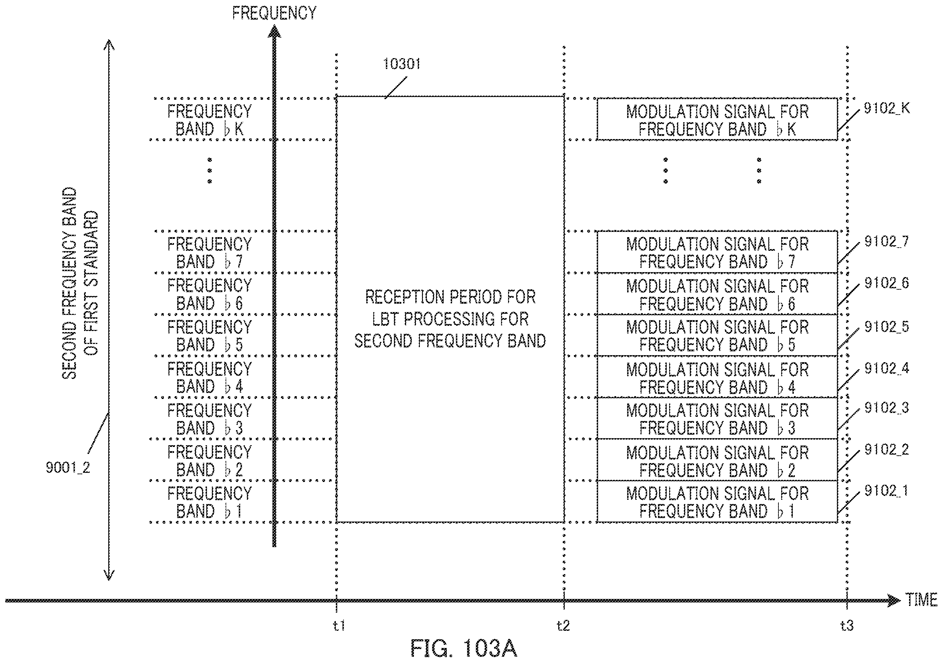

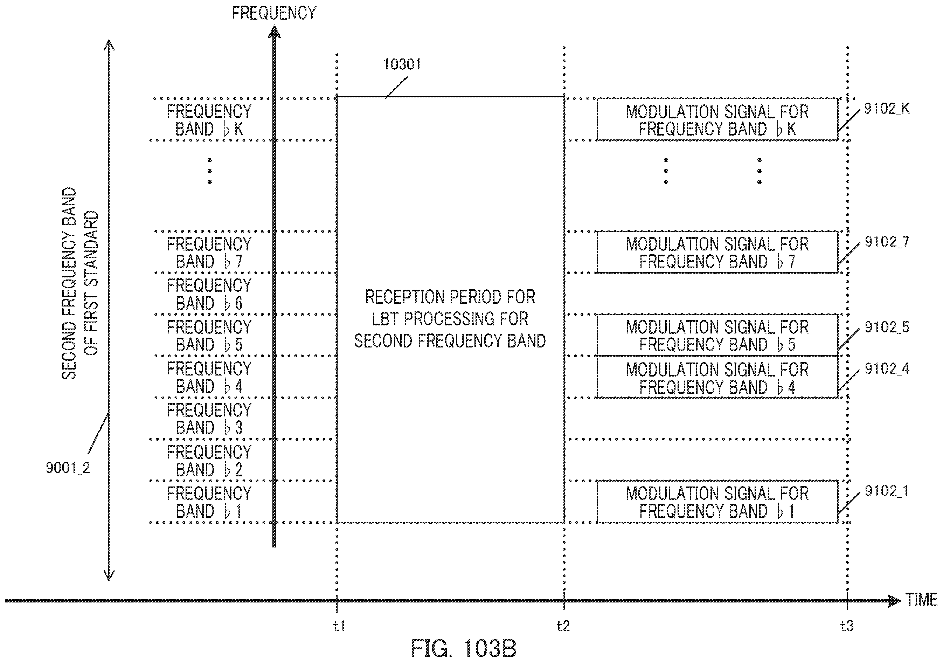

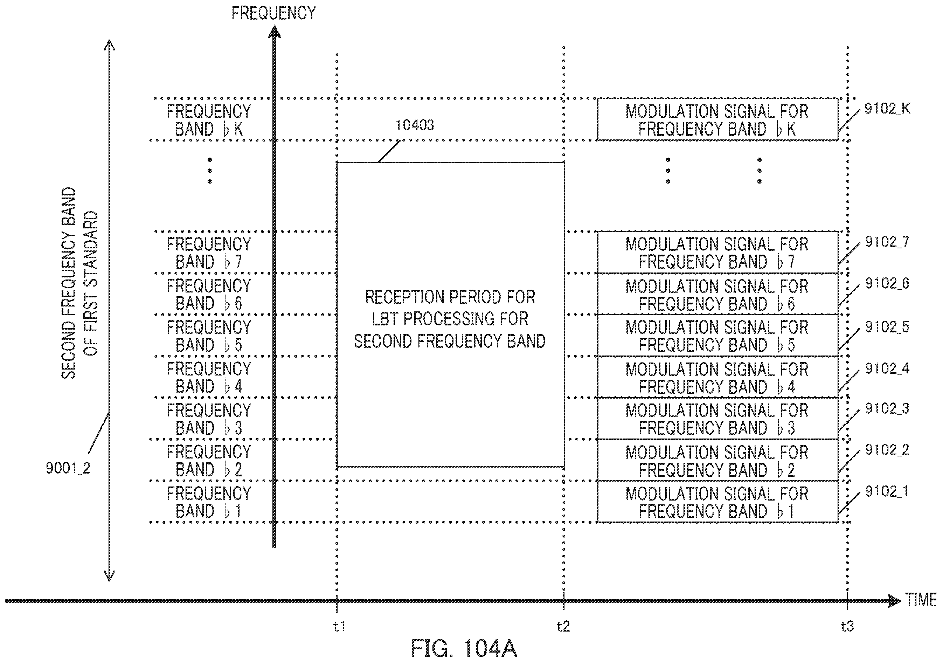

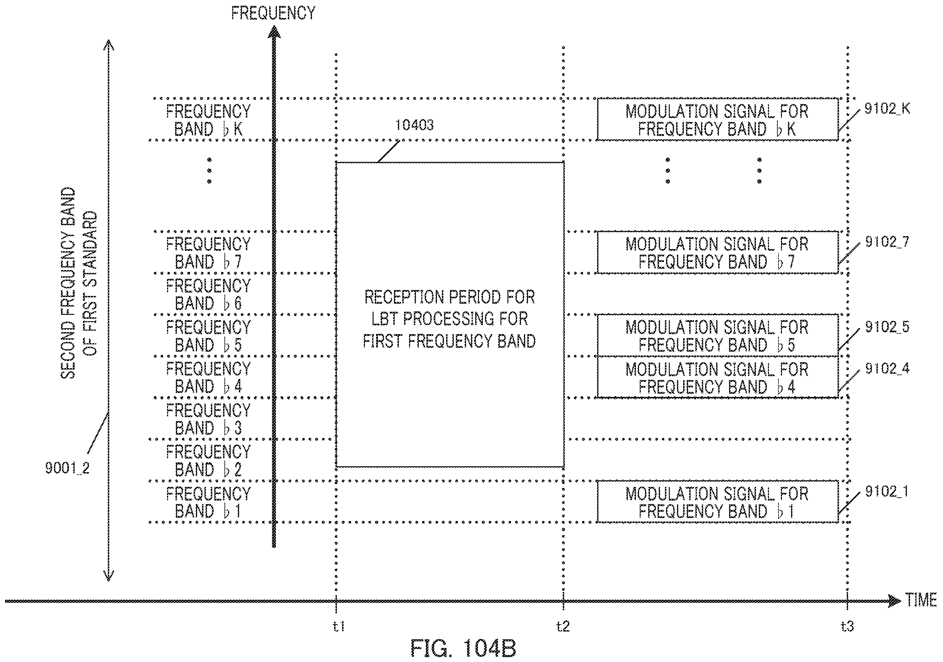

"FIGS. 88A and 88B", "FIGS. 103A and 103B", and "FIGS. 104A and 104B" are examples when the gNB and NR-UE use fourth NR channel 10001_4 in FIG. 100 for the LBT. Each of the drawings will be described below.

"FIGS. 88A and 88B" illustrate exemplary states of the gNB and NR-UE, and the horizontal axes represent time while the vertical axes represent frequency. On the frequency axes, there are "frequency band ♭1", "frequency band ♭2", "frequency band ♭3", ..., "frequency band ♭K" as illustrated in "FIGS. 88A and 88B". Note that K is an integer equal to or greater than 1. K being 1 indicates a single carrier scheme.

A period for performing the LBT by the gNB and NR-UE in fourth NR channel 10001_4 is "reception period 8801_1 for LBT processing for frequency band ♭1" to "reception period 8801_K for LBT processing for frequency band ♭K" in "FIGS. 88A and 88B". Note that the detailed description of FIGS. 88A and 88B will be omitted since it has already been provided.

The gNB and NR-UE perform the LBT in fourth NR channel 10001_4 and determine whether to start communication in "part of third NR channel 10001_3, fourth NR channel 10001_4, and fifth NR channel 10001_5" based on the result.

"FIGS. 103A and 103B" illustrate exemplary states of the gNB and NR-UE different from those in "FIGS. 88A and 88B", and the horizontal axes represent time while the vertical axes represent frequency. On the frequency axes, there are "frequency band ♭1", "frequency band ♭2", "frequency band ♭3", ..., "frequency band ♭K" as illustrated in "FIGS. 103A and 103B". Note that K is an integer equal to or greater than 1. K being 1 indicates a single carrier scheme.

A period for performing the LBT by the gNB and NR-UE in fourth NR channel 10001_4 is "reception period 10301 for LBT processing for the second frequency band" in "FIGS. 103A and 103B". Note that the detailed description of the LBT will be omitted since it has already been provided.

The gNB and NR-UE perform the LBT in fourth NR channel 10001_4 and determine whether to start communication in "part of third NR channel 10001_3, fourth NR channel 10001_4, and fifth NR channel 10001_5" based on the result.

"FIGS. 104A and 104B" illustrate exemplary states of the gNB and NR-UE different from those in "FIGS. 88A and 88B" and "FIGS. 103A and 103B", and the horizontal axes represent time while the vertical axes represent frequency. On the frequency axes, there are "frequency band ♭1", "frequency band ♭2", "frequency band ♭3", ..., "frequency band ♭K" as illustrated in "FIGS. 104A and 104B". Note that K is an integer equal to or greater than 1. K being 1 indicates a single carrier scheme.

A period for performing the LBT by the gNB and NR-UE in fourth NR channel 10001_4 is "reception period 10403 for LBT processing for the second frequency band" in "FIGS. 104A and 104B". Note that the detailed description of the LBT will be omitted since it has already been provided.

The gNB and NR-UE perform the LBT in fourth NR channel 10001_4 and determine whether to start communication in "part of third NR channel 10001_3, fourth NR channel 10001_4, and fifth NR channel 10001_5" based on the result.

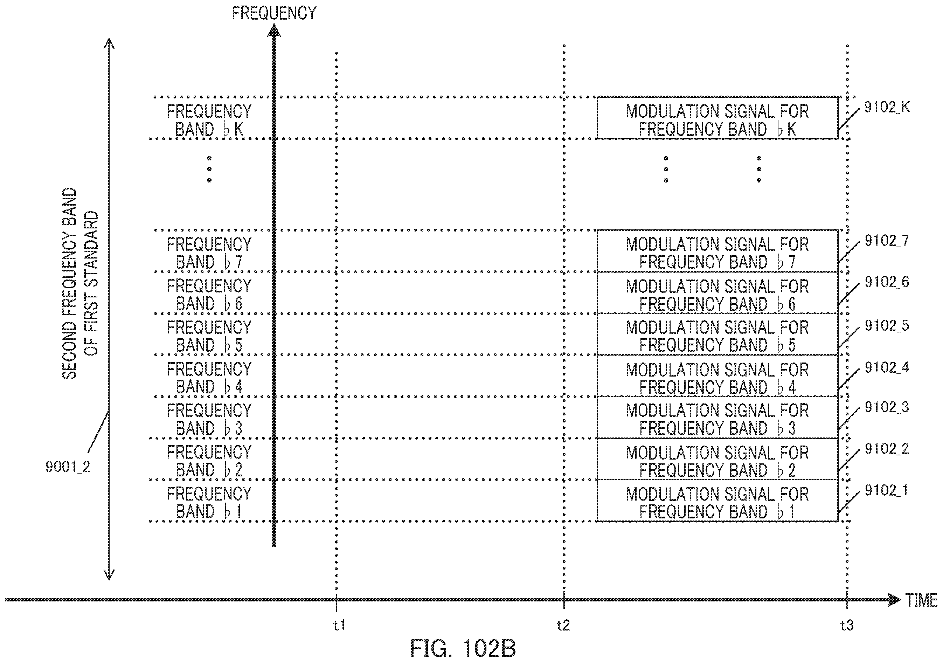

FIG. 102B is an exemplary state of the gNB and NR-UE in a case where the gNB and NR-UE perform the LBT in fourth NR channel 10001_4, determine whether to start communication in "part of third NR channel 10001_3, fourth NR channel 10001_4, and fifth NR channel 10001_5" based on the result, and determine to start communication.

In FIG. 102B, components that operate in the same manner as in FIG. 91 are denoted by the same reference signs. A characteristic of FIG. 102B is that no reception period for the LBT processing is provided, so that the gNB and NR-UE perform the LBT in fourth NR channel 10001_4, determine whether to start communication in "part of third NR channel 10001_3, fourth NR channel 10001_4, and fifth NR channel 10001_5" based on the result, and select a frequency band for communication from modulation signal 9102_1 for frequency band ♭1 to modulation signal 9102_K for frequency band ♭K.

Embodiment 8 has a description of the case of "performing the LBT and not transmitting a sector sweep reference signal using an antenna that has detected a signal" with reference to FIG. 62A. The processing of "performing the LBT and not transmitting a sector sweep reference signal using an antenna that has detected a signal" may be performed in each of the frequency bands from "frequency band ♭1" to "frequency band ♭K" described above.

Embodiment 8 also has a description of the case of "performing the LBT and not transmitting a sector sweep reference signal using a beam in which a signal has detected" with reference to FIG. 62B. The processing of "performing the LBT and not transmitting a sector sweep reference signal using a beam in which a signal has detected" may be performed in each of the frequency bands from "frequency band ♭1" to "frequency band ♭K" described above.

Embodiments 8, 9, and 10 have a description of "the gNB and NR-UE perform the second LBT processing (directional LBT) or the third LBT processing (LBT in which both omni-directional LBT processing and directional LBT processing are performed) and start communication without using more than one direction for the communication. Then, after starting the communication, the gNB and NR-UE check whether a signal is present in a direction not used for the communication, and when detecting a direction in which no signal is present, the gNB and NR-UE may start communication by a beam corresponding to the direction". The processing described in Embodiments 8, 9, and 10 may be performed in each of the frequency bands from "frequency band ♭1" to "frequency band ♭K" described above. The examples will be described below.

FIG. 100 illustrates exemplary frequency allocation in the present embodiment, and the horizontal axis represents frequency. As illustrated in FIG. 100, first frequency band 9001_1 of the first standard and second frequency band 9001_2 of the first standard are aligned. Note that first frequency band 9001_1 of the first standard and second frequency band 9001_2 of the first standard each have a bandwidth of 2.16 GHz, for example.

As in FIG. 100, for example, an NR apparatus such as a gNB and NR-UE handles a modulation signal of first NR channel 10001_1, a modulation signal of second NR channel 10001_2, a modulation signal of third NR channel 10001_3, a modulation signal of fourth NR channel 10001_4, and a modulation signal of fifth NR channel 10001_5.

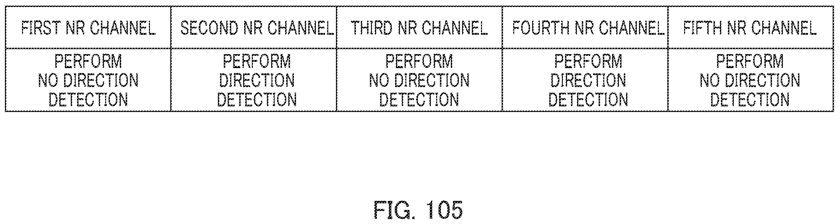

FIG. 105 illustrates whether the direction detection is performed in "first NR channel 10001_1, second NR channel 10001_2, third NR channel 10001_3, fourth NR channel 10001_4, and fifth NR channel 10001_5" in FIG. 100. In the third example, the direction detection is not performed in first NR channel 10001_1, the direction detection is performed in second NR channel 10001_2, the direction detection is not performed in third NR channel 10001_3, the direction detection is performed in fourth NR channel 10001_4, and the direction detection is not performed in fifth NR channel 10001_5 as illustrated in FIG. 105.

In such a case, an NR apparatus such as a gNB and NR-UE knows the state of the first frequency band of the first standard by "performing the direction detection in second NR channel 10001_2".

Thus, the NR apparatus such as a gNB and NR-UE knows the state of first frequency band 9001_1 of the first standard in "first NR channel 10001_1, second NR channel 10001_2, and part of third NR channel 10001_3" as a result of "performing the direction detection in second NR channel 10001_2".

This allows the NR apparatus such as a gNB and NR-UE to determine whether it is possible to perform communication in each direction in "first NR channel 10001_1, second NR channel 10001_2, and part of third NR channel 10001_3".

Likewise, the NR apparatus such as a gNB and NR-UE knows the state of the second frequency band of the first standard by "performing the direction detection in fourth NR channel 10001_4".

Thus, the NR apparatus such as a gNB and NR-UE knows the state of second frequency band 9001_2 of the first standard in "part of third NR channel 10001_3, fourth NR channel 10001_4, and fifth NR channel 10001_5" as a result of "performing the direction detection in fourth NR channel 10001_4". This allows the NR apparatus such as a gNB and NR-UE to determine whether it is possible to perform communication in each direction in "part of third NR channel 10001_3, fourth NR channel 10001_4, and fifth NR channel 10001_5".

Specific examples of the state of the gNB and NR-UE will be described.

"FIG. 89", "FIG. 93A", and "FIG. 93B" are examples when the gNB and NR-UE use second NR channel 10001_2 in FIG. 100 for the direction detection. Each of the drawings will be described below.

FIG. 89 illustrates an exemplary state of the gNB and NR-UE, and the horizontal axis represents time while the vertical axis represents frequency. On the frequency axis, there are "frequency band ♭1", "frequency band ♭2", "frequency band ♭3", ..., "frequency band ♭K" as illustrated in FIG. 89. Note that K is an integer equal to or greater than 1. K being 1 indicates a single carrier scheme.

The gNB and NR-UE, for example, "perform the LBT and then transmit a modulation signal in each frequency band" in second NR channel 10001_2 as in FIG. 88A. The gNB and NR-UE also transmit a modulation signal in each frequency band in first NR channel 10001_1 and part of third NR channel 10001_3 as in FIG. 102A. FIG. 89 illustrates an exemplary state of the gNB and NR-UE in second NR channel 10001_2 after that.

Note that ""performing the LBT and then transmitting a modulation signal in each frequency band" in second NR channel 10001_2 as in FIG. 88A" is merely an example, and ""performing the LBT and then transmitting a modulation signal in each frequency band" in second NR channel 10001_2 as in FIGS. 88A, 91A, 92A, and the description in the present specification" is also possible.

In FIG. 88A, the gNB and NR-UE assume that there is a "direction in which a signal is present" (assume that there is a receive beam in which a signal is detected) in frequency band $b1$ in second NR channel 10001_2, and do not start communication in that direction. Likewise, the gNB and NR-UE assume that there is a "direction in which a signal is present" (assume that there is a receive beam in which a signal is detected) in frequency band bi in second NR channel 10001_2, and do not start communication in that direction. Note that i is an integer from 1 to K (both inclusive).

As in FIG. 89, there are reception period 8901_1 for direction (beam) detection for frequency band $b1$ to reception period 8901_K for direction (beam) detection for frequency band $bK$ in frequency band $b1$ to frequency band $bK$ from time t11 to time 112 in second NR channel 10001_2.

"Reception period 8901_1 for direction (beam) detection for frequency band $b1$ to reception period 8901_K for direction (beam) detection for frequency band $bK$" in second NR channel 10001_2 in FIG. 89 correspond to "reception period 6801 for direction (beam) detection" in FIG. 68, "reception period 6901 for direction (beam) detection" in FIG. 69, and "reception period 7001 for direction (beam) detection" in FIG. 70.

It is assumed that the gNB and NR-UE determine a direction not to be used for communication in frequency band b 1 (referred to as the 2_1-th direction) by using "reception period 8801_1 for LBT processing for frequency band $b1$ in FIG. 88A" in second NR channel 10001_2.

Then, the gNB and NR-UE determine whether a signal is present in the 2_1-th direction in frequency band $b1$ in second NR channel 10001_2 by using "reception period 8901_1 for direction (beam) detection for frequency band $b1$" in FIG. 89 in second NR channel 10001_2.

When the gNB and NR-UE determine that a signal is present in the 2_1-th direction, the gNB and NR-UE determine not to use the 2_1-th direction for communication, for example, for modulation signal 8902_1 for frequency band $b1$ in second NR channel 10001_2. When the gNB and NR-UE determine that no signal is present in the 2_1-th direction, the gNB and NR-UE can use the 2_1-th direction for communication, for example, for modulation signal 8902_1 for frequency band $b1$ in second NR channel 10001_2.

Likewise, it is assumed that the gNB and NR-UE determine a direction not to be used for communication in frequency band bi (referred to as the 2_i-th direction) by using "reception period 8801_i for LBT processing for frequency band bi in FIG. 88A" in second NR channel 10001_2. Note that i is an integer from 1 to K (both inclusive).

Then, the gNB and NR-UE determine whether a signal is present in the 2_i-th direction in frequency band bi in second NR channel 10001_2 by using "reception period 8901_i for direction (beam) detection for frequency band bi" in FIG. 89 in second NR channel 10001_2.

When the gNB and NR-UE determine that a signal is present in the 2_i-th direction, the gNB and NR-UE determine not to use the 2_i-th direction for communication, for example, for modulation signal 8902_i for frequency band bi in second NR channel 10001_2. When the gNB and NR-UE determine that no signal is present in the 2_i-th direction, the gNB and NR-UE can use the 2_i-th direction for communication, for example, for modulation signal 8902_i for frequency band bi in second NR channel 10001_2.

Note that "reception period 8901_1 for direction (beam) detection for frequency band $b1$ to reception period 8901_K for direction (beam) detection for frequency band $bK$" in second NR channel 10001_2 in FIG. 89 correspond to "reception period 6801 for direction (beam) detection" in FIG. 68, "reception period 6901 for direction (beam) detection" in FIG. 69, and "reception period 7001 for direction (beam) detection" in FIG. 70, and thus more specific operations in "reception period 8901_1 for direction (beam) detection for frequency band $b1$ to reception period 8901_K for direction (beam) detection for frequency band $bK$" in second NR channel 10001_2 are as described in other embodiments.

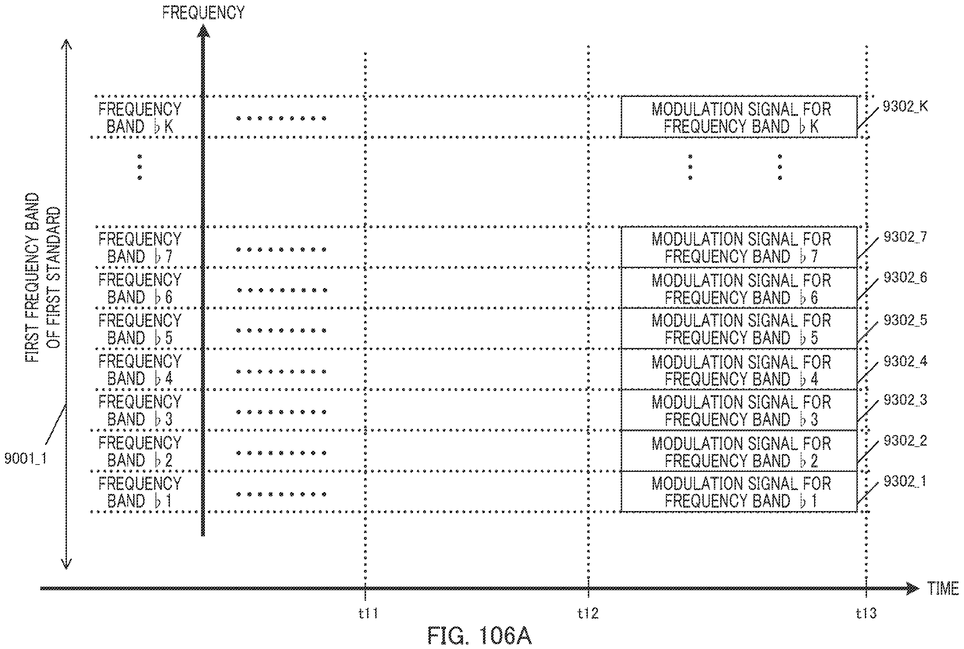

Next, operations in first NR channel 10001_1 and third NR channel 10001_3 will be described. There is no direction (beam) detection period in first NR channel 10001_1 and third NR channel 10001_3, and thus the state of the gNB and NR-UE is as illustrated in FIG. 106A. Note that, in FIG. 106A, components that operate in the same manner as in FIGS. 93A and 93B are denoted by the same reference signs, and the description thereof will be omitted.

It is assumed that the gNB and NR-UE determine a direction not to be used for communication in frequency band $b1$ in first NR channel 10001_1 (referred to as the 1_1-th direction) by using ""reception period 8801_1 for LBT processing for frequency band $b1$ to reception period 8801_K for LBT processing for frequency band ♭K in FIG. 88A" in second NR channel 10001_2, for example".

Then, the gNB and NR-UE determine whether a signal is present in the 1_1-th direction in frequency band ♭1 in first NR channel 10001_1 by using ""reception period 8901_1 for direction (beam) detection for frequency band ♭1 to reception period 8901_K for direction (beam) detection for frequency band ♭K in FIG. 89" in second NR channel 10001_2, for example".

When the gNB and NR-UE determine that a signal is present in the 1_1-th direction, the gNB and NR-UE determine not to use the 1_1-th direction for communication, for example, for modulation signal 9302_1 for frequency band ♭1 in first NR channel 10001_1. When the gNB and NR-UE determine that no signal is present in the 1_1-th direction, the gNB and NR-UE can use the 1_1-th direction for communication, for example, for modulation signal 9302_1 for frequency band ♭1 in first NR channel 10001_1.

Likewise, it is assumed that the gNB and NR-UE determine a direction not to be used for communication in frequency band bi in first NR channel 10001_1 (referred to as the 1_i-th direction) by using ""reception period 8801_1 for LBT processing for frequency band ♭1 to reception period 8801_K for LBT processing for frequency band ♭K in FIG. 88A" in second NR channel 10001_2, for example".

Then, the gNB and NR-UE determine whether a signal is present in the 1_i-th direction in frequency band bi in first NR channel 10001_1 by using ""reception period 8901_1 for direction (beam) detection for frequency band ♭1 to reception period 8901_K for direction (beam) detection for frequency band ♭K in FIG. 89" in second NR channel 10001_2, for example".

When the gNB and NR-UE determine that a signal is present in the 1_i-th direction, the gNB and NR-UE determine not to use the 1_i-th direction for communication, for example, for modulation signal 9302_i for frequency band bi in first NR channel 10001_1. When the gNB and NR-UE determine that no signal is present in the 1_i-th direction, the gNB and NR-UE can use the 1_i-th direction for communication, for example, for modulation signal 9302_i for frequency band bi in first NR channel 10001_1.

Note that "reception period 8901_1 for direction (beam) detection for frequency band ♭1 to reception period 8901_K for direction (beam) detection for frequency band ♭K" in second NR channel 10001_2 in FIG. 89 correspond to "reception period 6801 for direction (beam) detection" in FIG. 68, "reception period 6901 for direction (beam) detection" in FIG. 69, and "reception period 7001 for direction (beam) detection" in FIG. 70, and thus more specific operations in "reception period 8901_1 for direction (beam) detection for frequency band ♭1 to reception period 8901_K for direction (beam) detection for frequency band ♭K" in second NR channel 10001_2 are as described in other embodiments.

It is assumed that the gNB and NR-UE determine a direction not to be used for communication in frequency band ♭1 in third NR channel 10001_3 (referred to as the 3_1-th direction) by using ""reception period 8801_1 for LBT processing for frequency band ♭1 to reception period 8801_K for LBT processing for frequency band ♭K in FIG. 88A" in second NR channel 10001_2, for example".

Then, the gNB and NR-UE determine whether a signal is present in the 3_1-th direction in frequency band ♭1 in third NR channel 10001_3 by using ""reception period 8901_1 for direction (beam) detection for frequency band ♭1 to reception period 8901_K for direction (beam) detection for frequency band ♭K" in FIG. 89 in second NR channel 10001_2, for example".

When the gNB and NR-UE determine that a signal is present in the 3_1-th direction, the gNB and NR-UE determine not to use the 3_1-th direction for communication, for example, for modulation signal 9302_1 for frequency band ♭1 in third NR channel 10001_3. When the gNB and NR-UE determine that no signal is present in the 3_1-th direction, the gNB and NR-UE can use the 3_1-th direction for communication, for example, for modulation signal 9302_1 for frequency band ♭1 in third NR channel 10001_3.

Likewise, it is assumed that the gNB and NR-UE determine a direction not to be used for communication in frequency band bi in third NR channel 10001_3 (referred to as the 3_i-th direction) by using ""reception period 8801_1 for LBT processing for frequency band ♭1 to reception period 8801_K for LBT processing for frequency band ♭K in FIG. 88A" in second NR channel 10001_2, for example".

Then, the gNB and NR-UE determine whether a signal is present in the 3_i-th direction in frequency band bi in third NR channel 10001_3 by using ""reception period 8901_1 for direction (beam) detection for frequency band ♭1 to reception period 8901_K for direction (beam) detection for frequency band ♭K" in FIG. 89 in second NR channel 10001_2, for example".

When the gNB and NR-UE determine that a signal is present in the 3_i-th direction, the gNB and NR-UE determine not to use the 3_i-th direction for communication, for example, for modulation signal 9302_i for frequency band bi in third NR channel 10001_3. When the gNB and NR-UE determine that no signal is present in the 3_i-th direction, the gNB and NR-UE can use the 3_i-th direction for communication, for example, for modulation signal 9302_i for frequency band bi in third NR channel 10001_3.

Note that frequency band bi in third NR channel 10001_3 belongs to first frequency band 9001_1 of the first standard in FIG. 100.

Note that "reception period 8901_1 for direction (beam) detection for frequency band ♭1 to reception period 8901_K for direction (beam) detection for frequency band ♭K" in second NR channel 10001_2 in FIG. 89 correspond to "reception period 6801 for direction (beam) detection" in FIG. 68, "reception period 6901 for direction (beam) detection" in FIG. 69, and "reception period 7001 for direction (beam) detection" in FIG. 70, and thus more specific operations in "reception period 8901_1 for direction (beam) detection for frequency band ♭1 to reception period 8901_K for direction (beam) detection for frequency band ♭K" in second NR channel 10001_2 are as described in other embodiments.

FIG. 89 illustrates an exemplary state of the gNB and NR-UE, and the horizontal axis represents time while the vertical axis represents frequency. On the frequency axis, there are "frequency band ♭1", "frequency band ♭2", "frequency band ♭3", ..., "frequency band ♭K" as illustrated in FIG. 89. Note that K is an integer equal to or greater than 1. K being 1 indicates a single carrier scheme.

The gNB and NR-UE, for example, "perform the LBT and then transmit a modulation signal in each frequency band" in fourth NR channel 10001_4 as in FIG. 88A. The gNB and NR-UE also transmit a modulation signal in each frequency band in third NR channel 10001_3 and part of fifth NR channel 10001_5 as in FIG. 102B. FIG. 89 illustrates an exemplary state of the gNB and NR-UE in fourth NR channel 10001_4 after that.

Note that ""performing the LBT and then transmitting a modulation signal in each frequency band" in fourth NR channel 10001_4 as in FIG. 88A" is merely an example, and ""performing the LBT and then transmitting a modulation signal in each frequency band" in fourth NR channel 10001_4 as in FIGS. 88A, 103A, 104A, and the description in the present specification" is also possible.

In FIG. 88A, the gNB and NR-UE assume that there is a "direction in which a signal is present" (assume that there is a receive beam in which a signal is detected) in frequency band ♭1 in fourth NR channel 10001_4, and do not start communication in that direction. Likewise, the gNB and NR-UE assume that there is a "direction in which a signal is present" (assume that there is a receive beam in which a signal is detected) in frequency band bi in fourth NR channel 10001_4, and do not start communication in that direction. Note that i is an integer from 1 to K (both inclusive).

As in FIG. 89, there are reception period 8901_1 for direction (beam) detection for frequency band ♭1 to reception period 8901_K for direction (beam) detection for frequency band ♭K in frequency band ♭1 to frequency band ♭K from time t11 to time t12 in fourth NR channel 10001_4.

"Reception period 8901_1 for direction (beam) detection for frequency band ♭1 to reception period 8901_K for direction (beam) detection for frequency band ♭K" in fourth NR channel 10001_4 in FIG. 89 correspond to "reception period 6801 for direction (beam) detection" in FIG. 68, "reception period 6901 for direction (beam) detection" in FIG. 69, and "reception period 7001 for direction (beam) detection" in FIG. 70.

It is assumed that the gNB and NR-UE determine a direction not to be used for communication in frequency band b 1 (referred to as the 4_1-th direction) by using "reception period 8801_1 for LBT processing for frequency band ♭1 in FIG. 88A" in fourth NR channel 10001_4.

Then, the gNB and NR-UE determine whether a signal is present in the 4_1-th direction in frequency band ♭1 in fourth NR channel 100014 by using "reception period 8901_1 for direction (beam) detection for frequency band ♭1" in FIG. 89 in fourth NR channel 10001_4.

When the gNB and NR-UE determine that a signal is present in the 4_1-th direction, the gNB and NR-UE determine not to use the 4_1-th direction for communication, for example, for modulation signal 8902_1 for frequency band ♭1 in fourth NR channel 10001_4. When the gNB and NR-UE determine that no signal is present in the 4_1-th direction, the gNB and NR-UE can use the 4_1-th direction for communication, for example, for modulation signal 8902_1 for frequency band ♭1 in fourth NR channel 10001_4.

Likewise, it is assumed that the gNB and NR-UE determine a direction not to be used for communication in frequency band bi (referred to as the 4_i-th direction) by using "reception period 8801_i for LBT processing for frequency band bi in FIG. 88A" in fourth NR channel 10001_4. Note that i is an integer from 1 to K (both inclusive).

Then, the gNB and NR-UE determine whether a signal is present in the 4_i-th direction in frequency band bi in fourth NR channel 10001_4 by using "reception period 8901_i for direction (beam) detection for frequency band bi" in FIG. 89 in fourth NR channel 10001_4.

When the gNB and NR-UE determine that a signal is present in the 4_i-th direction, the gNB and NR-UE determine not to use the 4_i-th direction for communication, for example, for modulation signal 8902_i for frequency band bi in fourth NR channel 10001_4. When the gNB and NR-UE determine that no signal is present in the i-th direction, the gNB and NR-UE can use the 4_i-th direction for communication, for example, for modulation signal 8902_i for frequency band bi in fourth NR channel 10001_4.

Note that "reception period 8901_1 for direction (beam) detection for frequency band ♭1 to reception period 8901_K for direction (beam) detection for frequency band ♭K" in fourth NR channel 10001_4 in FIG. 89 correspond to "reception period 6801 for direction (beam) detection" in FIG. 68, "reception period 6901 for direction (beam) detection" in FIG. 69, and "reception period 7001 for direction (beam) detection" in FIG. 70, and thus more specific operations in "reception period 8901_1 for direction (beam) detection for frequency band ♭1 to reception period 8901_K for direction (beam) detection for frequency band ♭K" in fourth NR channel 10001_4 are as described in other embodiments.

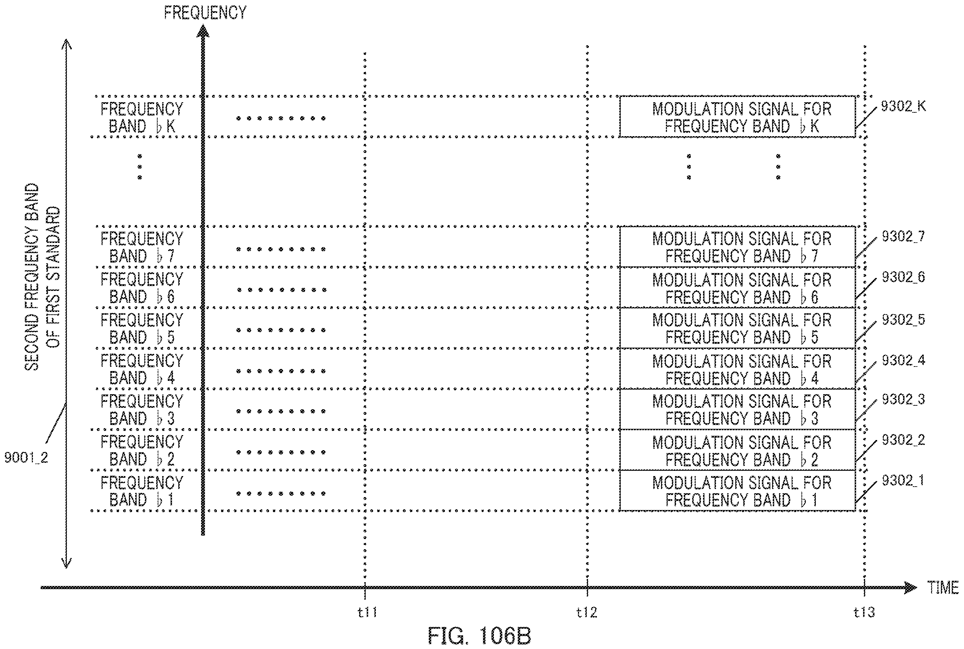

Next, operations in third NR channel 10001_3 and fifth NR channel 10001_5 will be described. There is no direction (beam) detection period in third NR channel 10001_3 and fifth NR channel 10001_5, and thus the state of the gNB and NR-UE is as illustrated in FIG. 106B. Note that, in FIG. 106B, components that operate in the same manner as in FIGS. 93A and 93B are denoted by the same reference signs, and the description thereof will be omitted.

It is assumed that the gNB and NR-UE determine a direction not to be used for communication in frequency band bi in third NR channel 10001_3 (referred to as the 3_i-th direction) by using ""reception period 8801_1 for LBT processing for frequency band ♭1 to reception period 8801_K for LBT processing for frequency band ♭K in FIG. 88A" in fourth NR channel 10001_4, for example".

Then, the gNB and NR-UE determine whether a signal is present in the 3_i-th direction in frequency band bi in third NR channel 10001_3 by using ""reception period 8901_1 for direction (beam) detection for frequency band ♭1 to reception period 8901_K for direction (beam) detection for frequency band ♭K" in FIG. 89 in fourth NR channel 10001_4, for example".

When the gNB and NR-UE determine that a signal is present in the 3_i-th direction, the gNB and NR-UE determine not to use the 3_i-th direction for communication, for example, for modulation signal 9302_i for frequency band bi in third NR channel 10001_3. When the gNB and NR-UE determine that no signal is present in the 3_i-th direction, the gNB and NR-UE can use the 3_i-th direction for communication, for example, for modulation signal 9302_i for frequency band bi in third NR channel 10001_3.

Note that frequency band bi in third NR channel 10001_3 belongs to second frequency band 9001_2 of the first standard in FIG. 100.

Note that "reception period 8901_1 for direction (beam) detection for frequency band ♭1 to reception period 8901_K for direction (beam) detection for frequency band ♭K" in fourth NR channel 10001_4 in FIG. 89 correspond to "reception period 6801 for direction (beam) detection" in FIG. 68, "reception period 6901 for direction (beam) detection" in FIG. 69, and "reception period 7001 for direction (beam) detection" in FIG. 70, and thus more specific operations in "reception period 8901_1 for direction (beam) detection for frequency band ♭1 to reception period 8901_K for direction (beam) detection for frequency band ♭K" in fourth NR channel 10001_4 are as described in other embodiments.

It is assumed that the gNB and NR-UE determine a direction not to be used for communication in frequency band ♭1 in fifth NR channel 10001_5 (referred to as the 5_1-th direction) by using ""reception period 8801_1 for LBT processing for frequency band ♭1 to reception period 8801_K for LBT processing for frequency band ♭K in FIG. 88A" in fourth NR channel 10001_4, for example".

Then, the gNB and NR-UE determine whether a signal is present in the 5_1-th direction in frequency band ♭1 in fifth NR channel 10001_5 by using ""reception period 8901_1 for direction (beam) detection for frequency band ♭1 to reception period 8901_K for direction (beam) detection for frequency band ♭K" in FIG. 89 in fourth NR channel 10001_4, for example".

When the gNB and NR-UE determine that a signal is present in the 5_1-th direction, the gNB and NR-UE determine not to use the 5_1-th direction for communication, for example, for modulation signal 9302_1 for frequency band ♭1 in fifth NR channel 10001_5. When the gNB and NR-UE determine that no signal is present in the 5_1-th direction, the gNB and NR-UE can use the 5_1-th direction for communication, for example, for modulation signal 9302_1 for frequency band ♭1 in fifth NR channel 10001_5.

Likewise, it is assumed that the gNB and NR-UE determine a direction not to be used for communication in frequency band bi in fifth NR channel 10001_5 (referred to as the 5_i-th direction) by using ""reception period 8801_1 for LBT processing for frequency band ♭1 to reception period 8801_K for LBT processing for frequency band ♭K in FIG. 88A" in fourth NR channel 10001_4, for example".

Then, the gNB and NR-UE determine whether a signal is present in the 5_i-th direction in frequency band bi in fifth NR channel 10001_5 by using ""reception period 8901_1 for direction (beam) detection for frequency band ♭1 to reception period 8901_K for direction (beam) detection for frequency band ♭K" in FIG. 89 in fourth NR channel 10001_4, for example".

When the gNB and NR-UE determine that a signal is present in the 5_i-th direction, the gNB and NR-UE determine not to use the 5_i-th direction for communication, for example, for modulation signal 9302_i for frequency band bi in fifth NR channel 10001_5. When the gNB and NR-UE determine that no signal is present in the 5_i-th direction, the gNB and NR-UE can use the 5_i-th direction for communication, for example, for modulation signal 9302_i for frequency band bi in fifth NR channel 10001_5.

Note that "reception period 8901_1 for direction (beam) detection for frequency band ♭1 to reception period 8901_K for direction (beam) detection for frequency band ♭K" in fourth NR channel 10001_4 in FIG. 89 correspond to "reception period 6801 for direction (beam) detection" in FIG. 68, "reception period 6901 for direction (beam) detection" in FIG. 69, and "reception period 7001 for direction (beam) detection" in FIG. 70, and thus more specific operations in "reception period 8901_1 for direction (beam) detection for frequency band ♭1 to reception period 8901_K for direction (beam) detection for frequency band ♭K" in fourth NR channel 10001_4 are as described in other embodiments.

Although FIGS. 89, 106A, and 106B have been described as an exemplary state of the gNB and NR-UE, the state is not limited to these. For example, there may be a time period in which a communication counterpart transmits a modulation signal. Further, the transmission timings of modulation signals by the gNB and NR-UE are not limited to the timings in FIGS. 89, 106A, and 106B. The names of signals, frames, etc. in FIGS. 89, 106A, and 106B are not limited to those in the drawings, and other names may be used.

Operations related to FIG. 93A will be described below.

FIG. 93A illustrates an exemplary state of the gNB and NR-UE, and the horizontal axis represents time while the vertical axis represents frequency. On the frequency axis, there are "frequency band ♭1", "frequency band ♭2", "frequency band ♭3", ..., "frequency band ♭K" as illustrated in FIGS. 91A and 91B. Note that K is an integer equal to or greater than 1. K being 1 indicates a single carrier scheme.

The gNB and NR-UE, for example, "perform the LBT and then transmit a modulation signal in each frequency band" in second NR channel 10001_2 as in FIG. 91A. The gNB and NR-UE also transmit a modulation signal in each frequency band in first NR channel 10001_1 and part of third NR channel 10001_3 as in FIG. 102A. FIG. 93A illustrates an exemplary state of the gNB and NR-UE in second NR channel 10001_2 after that. Note that ""performing the LBT and then transmitting a modulation signal in each frequency band" in second NR channel 10001_2 as in FIG. 91A" is merely an example, and ""performing the LBT and then transmitting a modulation signal in each frequency band" in second NR channel 10001_2 as in FIGS. 88A, 91A, 92A, and the description in the present specification" is also possible.

In FIG. 91A, the gNB and NR-UE assume that there is a "direction in which a signal is present" (assume that there is a receive beam in which a signal is detected) in frequency band ♭1 in second NR channel 10001_2, and do not start communication in that direction. Likewise, the gNB and NR-UE assume that there is a "direction in which a signal is present" (assume that there is a receive beam in which a signal is detected) in frequency band bi in second NR channel 10001_2, and do not start communication in that direction. Note that i is an integer from 1 to K (both inclusive).

As in FIG. 93A, there is "reception period 9301 for direction (beam) detection for the first frequency band" in frequency band ♭1 to frequency band ♭K from time t11 to time t12 in second NR channel 10001_2.

Reception period 9301 for direction (beam) detection for the first frequency band in second NR channel 10001_2 in FIG. 93A corresponds to "reception period 6801 for direction (beam) detection" in FIG. 68, "reception period 6901 for direction (beam) detection" in FIG. 69, and "reception period 7001 for direction (beam) detection" in FIG. 70.

It is assumed that the gNB and NR-UE determine a direction not to be used for communication in frequency band ♭1 (referred to as the 2 _1-th direction) by using "reception period 9101 for LBT processing for the first frequency band in FIG. 91A" in second NR channel 10001_2.

Then, the gNB and NR-UE determine whether a signal is present in the 2_1-th direction in frequency band ♭1 in second NR channel 10001_2 by using "reception period 9301 for direction (beam) detection for the first frequency band" in FIG. 93A in second NR channel 10001_2.

When the gNB and NR-UE determine that a signal is present in the 2_1-th direction, the gNB and NR-UE determine not to use the 2_1-th direction for communication, for example, for modulation signal 9302_1 for frequency band ♭1 in second NR channel 10001_2. When the gNB and NR-UE determine that no signal is present in the 2_1-th direction, the gNB and NR-UE can use the 2 _1-th direction for communication, for example, for modulation signal 9302_1 for frequency band ♭1 in second NR channel 10001_2.

Likewise, it is assumed that the gNB and NR-UE determine a direction not to be used for communication in frequency band bi (referred to as the 2_i-th direction) by using "reception period 9101 for LBT processing for the first frequency band in FIG. 91A" in second NR channel 10001_2. Note that i is an integer from 1 to K (both inclusive).

Then, the gNB and NR-UE determine whether a signal is present in the 2_i-th direction in frequency band bi in second NR channel 10001_2 by using "reception period 9301 for direction (beam) detection for the first frequency band" in FIG. 93A in second NR channel 10001_2.

When the gNB and NR-UE determine that a signal is present in the 2_i-th direction, the gNB and NR-UE determine not to use the 2_i-th direction for communication, for example, for modulation signal 9302_i for frequency band bi in second NR channel 10001_2. When the gNB and NR-UE determine that no signal is present in the 2_i-th direction, the gNB and NR-UE can use the 2_i-th direction for communication, for example, for modulation signal 9302_i for frequency band bi in second NR channel 10001_2.

Note that reception period 9301 for direction (beam) detection for the first frequency band in second NR channel 10001_2 in FIG. 93A corresponds to "reception period 6801 for direction (beam) detection" in FIG. 68, "reception period 6901 for direction (beam) detection" in FIG. 69, and "reception period 7001 for direction (beam) detection" in FIG. 70, and thus more specific operations in reception period 9301 for direction (beam) detection for the first frequency band in second NR channel 10001_2 are as described in other embodiments.

Next, operations in first NR channel 10001_1 and third NR channel 10001_3 will be described. There is no direction (beam) detection period in first NR channel 10001_1 and third NR channel 10001_3, and thus the state of the gNB and NR-UE is as illustrated in FIG. 106A. Note that, in FIG. 106A, components that operate in the same manner as in FIGS. 93A and 93B are denoted by the same reference signs, and the description thereof will be omitted.

It is assumed that the gNB and NR-UE determine a direction not to be used for communication in frequency band ♭1 in first NR channel 10001_1 (referred to as the 1_1-th direction) by using ""reception period 9101 for LBT processing for the first frequency band in FIG. 91A" in second NR channel 10001_2, for example".

Then, the gNB and NR-UE determine whether a signal is present in the 1_1-th direction in frequency band ♭1 in first NR channel 10001_1 by using ""reception period 9301 for direction (beam) detection for the first frequency band in FIG. 93A" in second NR channel 10001_2, for example".

When the gNB and NR-UE determine that a signal is present in the 1_1-th direction, the gNB and NR-UE determine not to use the 1_1-th direction for communication, for example, for modulation signal 9302_1 for frequency band ♭1 in first NR channel 10001_1. When the gNB and NR-UE determine that no signal is present in the 1_1-th direction, the gNB and NR-UE can use the 1_1-th direction for communication, for example, for modulation signal 9302_1 for frequency band ♭1 in first NR channel 10001_1.

Likewise, it is assumed that the gNB and NR-UE determine a direction not to be used for communication in frequency band bi in first NR channel 10001_1 (referred to as the 1_i-th direction) by using ""reception period 9101 for LBT processing for the first frequency band in FIG. 91A" in second NR channel 10001_2, for example".

Then, the gNB and NR-UE determine whether a signal is present in the 1_i-th direction in frequency band bi in first NR channel 10001_1 by using ""reception period 9301 for direction (beam) detection for the first frequency band in FIG. 93A" in second NR channel 10001_2, for example".

When the gNB and NR-UE determine that a signal is present in the 1_i-th direction, the gNB and NR-UE determine not to use the 1_i-th direction for communication, for example, for modulation signal 9302_i for frequency band bi in first NR channel 10001_1. When the gNB and NR-UE determine that no signal is present in the 1_i-th direction, the gNB and NR-UE can use the 1_i-th direction for communication, for example, for modulation signal 9302_i for frequency band bi in first NR channel 10001_1.

Note that reception period 9301 for direction (beam) detection for the first frequency band in second NR channel 10001_2 in FIG. 93A corresponds to "reception period 6801 for direction (beam) detection" in FIG. 68, "reception period 6901 for direction (beam) detection" in FIG. 69, and "reception period 7001 for direction (beam) detection" in FIG. 70, and thus more specific operations in reception period 9301 for direction (beam) detection for the first frequency band in second NR channel 10001_2 are as described in other embodiments.

It is assumed that the gNB and NR-UE determine a direction not to be used for communication in frequency band ♭1 in third NR channel 10001_3 (referred to as the 3_1-th direction) by using ""reception period 9101 for LBT processing for the first frequency band in FIG. 91A" in second NR channel 10001_2, for example".

Then, the gNB and NR-UE determine whether a signal is present in the 3_1-th direction in frequency band ♭1 in third NR channel 10001_3 by using ""reception period 9301 for direction (beam) detection for the first frequency band" in FIG. 93A in second NR channel 10001_2, for example".

When the gNB and NR-UE determine that a signal is present in the 3_1-th direction, the gNB and NR-UE determine not to use the 3_1-th direction for communication, for example, for modulation signal 9302_1 for frequency band ♭1 in third NR channel 10001_3. When the gNB and NR-UE determine that no signal is present in the 3_1-th direction, the gNB and NR-UE can use the 3_1-th direction for communication, for example, for modulation signal 9302_1 for frequency band ♭1 in third NR channel 10001_3.

Likewise, it is assumed that the gNB and NR-UE determine a direction not to be used for communication in frequency band bi in third NR channel 10001_3 (referred to as the 3_i-th direction) by using ""reception period 9101 for LBT processing for the first frequency band in FIG. 91A" in second NR channel 10001_2, for example".

Then, the gNB and NR-UE determine whether a signal is present in the 3_i-th direction in frequency band bi in third NR channel 10001_3 by using ""reception period 9301 for direction (beam) detection for the first frequency band" in FIG. 93A in second NR channel 10001_2, for example".

When the gNB and NR-UE determine that a signal is present in the 3_i-th direction, the gNB and NR-UE determine not to use the 3_i-th direction for communication, for example, for modulation signal 9302_i for frequency band bi in third NR channel 10001_3. When the gNB and NR-UE determine that no signal is present in the 3_i-th direction, the gNB and NR-UE can use the 3_i-th direction for communication, for example, for modulation signal 9302_i for frequency band bi in third NR channel 10001_3.

Note that frequency band bi in third NR channel 10001_3 belongs to first frequency band 9001_1 of the first standard in FIG. 100.

Note that reception period 9301 for direction (beam) detection for the first frequency band in second NR channel 10001_2 in FIG. 93A corresponds to "reception period 6801 for direction (beam) detection" in FIG. 68, "reception period 6901 for direction (beam) detection" in FIG. 69, and "reception period 7001 for direction (beam) detection" in FIG. 70, and thus more specific operations in reception period 9301 for direction (beam) detection for the first frequency band in second NR channel 10001_2 are as described in other embodiments.

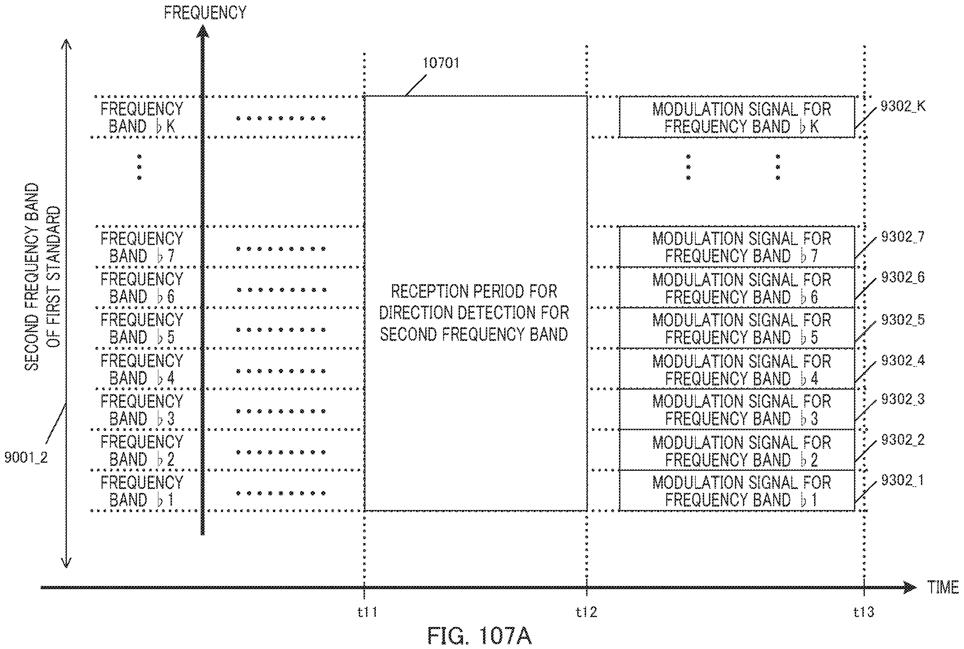

FIG. 107A illustrates an exemplary state of the gNB and NR-UE, and the horizontal axis represents time while the vertical axis represents frequency. On the frequency axis, there are "frequency band ♭1", "frequency band ♭2", "frequency band ♭3", ..., "frequency band ♭K" as illustrated in FIG. 93A. Note that K is an integer equal to or greater than 1. K being 1 indicates a single carrier scheme.

The gNB and NR-UE, for example, "perform the LBT and then transmit a modulation signal in each frequency band" in fourth NR channel 10001_4 as in FIG. 103A. The gNB and NR-UE also transmit a modulation signal in each frequency band in third NR channel 10001_3 and part of fifth NR channel 10001_5 as in FIG. 102B. FIG. 107A illustrates an exemplary state of the gNB and NR-UE in fourth NR channel 10001_4 after that.

Note that ""performing the LBT and then transmitting a modulation signal in each frequency band" in fourth NR channel 10001_4 as in FIG. 103A" is merely an example, and ""performing the LBT and then transmitting a modulation signal in each frequency band" in fourth NR channel 10001_4 as in FIGS. 88A, 103A, 104A, and the description in the present specification" is also possible.

In FIG. 103A, the gNB and NR-UE assume that there is a "direction in which a signal is present" (assume that there is a receive beam in which a signal is detected) in frequency band ♭1 in fourth NR channel 10001_4, and do not start communication in that direction.

Likewise, the gNB and NR-UE assume that there is a "direction in which a signal is present" (assume that there is a receive beam in which a signal is detected) in frequency band bi in fourth NR channel 10001_4, and do not start communication in that direction. Note that i is an integer from 1 to K (both inclusive).

As in FIG. 107A, there is "reception period 10701 for direction (beam) detection for the second frequency band" in frequency band ♭1 to frequency band ♭K from time t11 to time t12 in fourth NR channel 10001_4.

Reception period 10701 for direction (beam) detection for the second frequency band in fourth NR channel 10001_4 in FIG. 107A corresponds to "reception period 6801 for direction (beam) detection" in FIG. 68, "reception period 6901 for direction (beam) detection" in FIG. 69, and "reception period 7001 for direction (beam) detection" in FIG. 70.

It is assumed that the gNB and NR-UE determine a direction not to be used for communication in frequency band b 1 (referred to as the 4_1-th direction) by using "reception period 10301 for LBT processing for the second frequency band in FIG. 103A" in fourth NR channel 10001_4.

Then, the gNB and NR-UE determine whether a signal is present in the 4_1-th direction in frequency band ♭1 in fourth NR channel 10001_4 by using "reception period 10701 for direction (beam) detection for the second frequency band" in FIG. 107A in fourth NR channel 10001_4.

When the gNB and NR-UE determine that a signal is present in the 4_1-th direction, the gNB and NR-UE determine not to use the 4_1-th direction for communication, for example, for modulation signal 9302_1 for frequency band ♭1 in fourth NR channel 10001_4. When the gNB and NR-UE determine that no signal is present in the 4_1-th direction, the gNB and NR-UE can use the 4_1-th direction for communication, for example, for modulation signal 9302_1 for frequency band ♭1 in fourth NR channel 10001_4.

Likewise, it is assumed that the gNB and NR-UE determine a direction not to be used for communication in frequency band bi (referred to as the 4_i-th direction) by using "reception period 10301 for LBT processing for the second frequency band in FIG. 103A" in fourth NR channel 10001_4. Note that i is an integer from 1 to K (both inclusive).

Then, the gNB and NR-UE determine whether a signal is present in the 4_i-th direction in frequency band bi in fourth NR channel 10001_4 by using "reception period 10701 for direction (beam) detection for the second frequency band" in FIG. 107A in fourth NR channel 10001_4.

When the gNB and NR-UE determine that a signal is present in the 4_i-th direction, the gNB and NR-UE determine not to use the 4_i-th direction for communication, for example, for modulation signal 9302_i for frequency band bi in fourth NR channel 10001_4. When the gNB and NR-UE determine that no signal is present in the i-th direction, the gNB and NR-UE can use the 4_i-th direction for communication, for example, for modulation signal 9302_i for frequency band bi in fourth NR channel 10001_4.

Note that "reception period 10701 for direction (beam) detection for the second frequency band" in fourth NR channel 10001_4 in FIG. 107A corresponds to "reception period 6801 for direction (beam) detection" in FIG. 68, "reception period 6901 for direction (beam) detection" in FIG. 69, and "reception period 7001 for direction (beam) detection" in FIG. 70, and thus more specific operations in "reception period 10701 for direction (beam) detection for the second frequency band" in fourth NR channel 10001_4 are as described in other embodiments.

Next, operations in third NR channel 10001_3 and fifth NR channel 10001_5 will be described. There is no direction (beam) detection period in third NR channel 10001_3 and fifth NR channel 10001_5, and thus the state of the gNB and NR-UE is as illustrated in FIG. 106B. Note that, in FIG. 106B, components that operate in the same manner as in FIGS. 93A and 93B are denoted by the same reference signs, and the description thereof will be omitted.

It is assumed that the gNB and NR-UE determine a direction not to be used for communication in frequency band bi in third NR channel 10001_3 (referred to as the 3_i-th direction) by using ""reception period 10301 for LBT processing for the second frequency band in FIG. 103A" in fourth NR channel 10001_4, for example".

Then, the gNB and NR-UE determine whether a signal is present in the 3_i-th direction in frequency band bi in third NR channel 10001_3 by using ""reception period 10701 for direction (beam) detection for the second frequency band" in FIG. 107A in fourth NR channel 10001_4, for example".

When the gNB and NR-UE determine that a signal is present in the 3_i-th direction, the gNB and NR-UE determine not to use the 3_i-th direction for communication, for example, for modulation signal 9302_i for frequency band bi in third NR channel 10001_3. When the gNB and NR-UE determine that no signal is present in the 3_i-th direction, the gNB and NR-UE can use the 3_i-th direction for communication, for example, for modulation signal 9302_i for frequency band bi in third NR channel 10001_3.

Note that frequency band bi in third NR channel 10001_3 belongs to second frequency band 9001_2 of the first standard in FIG. 100.

Note that "reception period 10701 for direction (beam) detection for the second frequency band" in fourth NR channel 10001_4 in FIG. 107A corresponds to "reception period 6801 for direction (beam) detection" in FIG. 68, "reception period 6901 for direction (beam) detection" in FIG. 69, and "reception period 7001 for direction (beam) detection" in FIG. 70, and thus more specific operations in "reception period 10701 for direction (beam) detection for the second frequency band" in fourth NR channel 10001_4 are as described in other embodiments.

It is assumed that the gNB and NR-UE determine a direction not to be used for communication in frequency band b1 in fifth NR channel 10001_5 (referred to as the 5_1-th direction) by using ""reception period 10301 for LBT processing for the second frequency band in FIG. 103A" in fourth NR channel 10001_4, for example".

Then, the gNB and NR-UE determine whether a signal is present in the 5_1-th direction in frequency band b1 in fifth NR channel 10001_5 by using ""reception period 10701 for direction (beam) detection for the second frequency band" in FIG. 107A in fourth NR channel 10001_4, for example".

When the gNB and NR-UE determine that a signal is present in the 5_1-th direction, the gNB and NR-UE determine not to use the 5_1-th direction for communication, for example, for modulation signal 9302_1 for frequency band b1 in fifth NR channel 10001_5. When the gNB and NR-UE determine that no signal is present in the 5_1-th direction, the gNB and NR-UE can use the 5_1-th direction for communication, for example, for modulation signal 9302_1 for frequency band b1 in fifth NR channel 10001_5.

Likewise, it is assumed that the gNB and NR-UE determine a direction not to be used for communication in frequency band bi in fifth NR channel 10001_5 (referred to as the 5_i-th direction) by using ""reception period 10301 for LBT processing for the second frequency band in FIG. 103A" in fourth NR channel 10001_4, for example".

Then, the gNB and NR-UE determine whether a signal is present in the 5_i-th direction in frequency band bi in fifth NR channel 10001_5 by using ""reception period 10701 for direction (beam) detection for the second frequency band" in FIG. 107A in fourth NR channel 10001_4, for example".

When the gNB and NR-UE determine that a signal is present in the 5_i-th direction, the gNB and NR-UE determine not to use the 5_i-th direction for communication, for example, for modulation signal 9302_i for frequency band bi in fifth NR channel 10001_5. When the gNB and NR-UE determine that no signal is present in the 5_i-th direction, the gNB and NR-UE can use the 5_i-th direction for communication, for example, for modulation signal 9302_i for frequency band bi in fifth NR channel 10001_5.

Note that "reception period 10701 for direction (beam) detection for the second frequency band" in fourth NR channel 10001_4 in FIG. 107A corresponds to "reception period 6801 for direction (beam) detection" in FIG. 68, "reception period 6901 for direction (beam) detection" in FIG. 69, and "reception period 7001 for direction (beam) detection" in FIG. 70, and thus more specific operations in "reception period 10701 for direction (beam) detection for the second frequency band" in fourth NR channel 10001_4 are as described in other embodiments.

Although FIGS. 93A, 106A, and 106B have been described as an exemplary state of the gNB and NR-UE, the state is not limited to these. For example, there may be a time period in which a communication counterpart transmits a modulation signal. Further, the transmission timings of modulation signals by the gNB and NR-UE are not limited to the timings in FIGS. 93A, 106A, and 106B.

The names of signals, frames, etc. in FIGS. 93A, 106A, and 106B are not limited to those in the drawings, and other names may be used.

Operations related to FIG. 93B will be described below. FIG. 93B illustrates an exemplary state of the gNB and NR-UE, and the horizontal axis represents time while the vertical axis represents frequency. On the frequency axis, there are "frequency band ♭1", "frequency band ♭2", "frequency band ♭3", ..., "frequency band ♭K" as illustrated in FIGS. 92A and 92B. Note that K is an integer equal to or greater than 1. K being 1 indicates a single carrier scheme.

The gNB and NR-UE, for example, "perform the LBT and then transmit a modulation signal in each frequency band" in second NR channel 10001_2 as in FIG. 92A. The gNB and NR-UE also transmit a modulation signal in each frequency band in first NR channel 10001_1 and part of third NR channel 10001_3 as in FIG. 102A. FIG. 93B illustrates an exemplary state of the gNB and NR-UE in second NR channel 10001_2 after that.

Note that ""performing the LBT and then transmitting a modulation signal in each frequency band" in second NR channel 10001_2 as in FIG. 92A" is merely an example, and ""performing the LBT and then transmitting a modulation signal in each frequency band" in second NR channel 10001_2 as in FIGS. 88A, 91A, 92A, and the description in the present specification" is also possible.

In FIG. 92A, the gNB and NR-UE assume that there is a "direction in which a signal is present" (assume that there is a receive beam in which a signal is detected) in frequency band ♭1 in second NR channel 10001_2, and do not start communication in that direction.

Likewise, the gNB and NR-UE assume that there is a "direction in which a signal is present" (assume that there is a receive beam in which a signal is detected) in frequency band bi in second NR channel 10001_2, and do not start communication in that direction. Note that i is an integer from 1 to K (both inclusive).

As in FIG. 93B, there is "reception period 9103 for direction (beam) detection for the first frequency band" in frequency band ♭1 to frequency band ♭K from time t11 to time t12 in second NR channel 10001_2.

Reception period 9103 for direction (beam) detection for the first frequency band in second NR channel 10001_2 in FIG. 93B corresponds to "reception period 6801 for direction (beam) detection" in FIG. 68, "reception period 6901 for direction (beam) detection" in FIG. 69, and "reception period 7001 for direction (beam) detection" in FIG. 70.

It is assumed that the gNB and NR-UE determine a direction not to be used for communication in frequency band b 1 (referred to as the 2_1-th direction) by using "reception period 9103 for LBT processing for the first frequency band in FIG. 92A" in second NR channel 10001_2.

Then, the gNB and NR-UE determine whether a signal is present in the 2_1-th direction in frequency band ♭1 in second NR channel 10001_2 by using "reception period 9303 for direction (beam) detection for the first frequency band" in FIG. 93B in second NR channel 10001_2.

When the gNB and NR-UE determine that a signal is present in the 2_1-th direction, the gNB and NR-UE determine not to use the 2_1-th direction for communication, for example, for modulation signal 9302_1 for frequency band ♭1 in second NR channel 10001_2. When the gNB and NR-UE determine that no signal is present in the 2_1-th direction, the gNB and NR-UE can use the 2_1-th direction for communication, for example, for modulation signal 9302_1 for frequency band ♭1 in second NR channel 10001_2.

Likewise, it is assumed that the gNB and NR-UE determine a direction not to be used for communication in frequency band bi (referred to as the 2_i-th direction) by using "reception period 9103 for LBT processing for the first frequency band in FIG. 92A" in second NR channel 10001_2. Note that i is an integer from 1 to K (both inclusive).

Then, the gNB and NR-UE determine whether a signal is present in the 2_i-th direction in frequency band bi in second NR channel 10001 2 by using "reception period 9303 for direction (beam) detection for the first frequency band" in FIG. 93B in second NR channel 10001_2.

When the gNB and NR-UE determine that a signal is present in the 2_i-th direction, the gNB and NR-UE determine not to use the 2_i-th direction for communication, for example, for modulation signal 9302_i for frequency band bi in second NR channel 10001_2. When the gNB and NR-UE determine that no signal is present in the 2_i-th direction, the gNB and NR-UE can use the 2_i-th direction for communication, for example, for modulation signal 9302_i for frequency band bi in second NR channel 10001_2.

Note that reception period 9303 for direction (beam) detection for the first frequency band in second NR channel 10001_2 in FIG. 93B corresponds to "reception period 6801 for direction (beam) detection" in FIG. 68, "reception period 6901 for direction (beam) detection" in FIG. 69, and "reception period 7001 for direction (beam) detection" in FIG. 70, and thus more specific operations in reception period 9303 for direction (beam) detection for the first frequency band in second NR channel 10001_2 are as described in other embodiments.

Next, operations in first NR channel 10001_1 and third NR channel 10001_3 will be described. There is no direction (beam) detection period in first NR channel 10001_1 and third NR channel 10001_3, and thus the state of the gNB and NR-UE is as illustrated in FIG. 106A. Note that, in FIG. 106A, components that operate in the same manner as in FIGS. 93A and 93B are denoted by the same reference signs, and the description thereof will be omitted.

It is assumed that the gNB and NR-UE determine a direction not to be used for communication in frequency band ♭1 in first NR channel 10001_1 (referred to as the 1_1-th direction) by using ""reception period 9103 for LBT processing for the first frequency band in FIG. 92A" in second NR channel 10001_2, for example".

Then, the gNB and NR-UE determine whether a signal is present in the 1_1-th direction in frequency band ♭1 in first NR channel 10001_1 by using ""reception period 9303 for direction (beam) detection for the first frequency band in FIG. 93B" in second NR channel 10001_2, for example".

When the gNB and NR-UE determine that a signal is present in the 1_1-th direction, the gNB and NR-UE determine not to use the 1_1-th direction for communication, for example, for modulation signal 9302_1 for frequency band ♭1 in first NR channel 10001_1. When the gNB and NR-UE determine that no signal is present in the 1_1-th direction, the gNB and NR-UE can use the 1_1-th direction for communication, for example, for modulation signal 9302_1 for frequency band ♭1 in first NR channel 10001_1.

Likewise, it is assumed that the gNB and NR-UE determine a direction not to be used for communication in frequency band bi in first NR channel 10001_1 (referred to as the 1_i-th direction) by using ""reception period 9103 for LBT processing for the first frequency band in FIG. 92A" in second NR channel 10001_2, for example".

Then, the gNB and NR-UE determine whether a signal is present in the 1_i-th direction in frequency band bi in first NR channel 10001_1 by using ""reception period 9303 for direction (beam) detection for the first frequency band in FIG. 93B" in second NR channel 10001_2, for example".

When the gNB and NR-UE determine that a signal is present in the 1_i-th direction, the gNB and NR-UE determine not to use the 1_i-th direction for communication, for example, for modulation signal 9302_i for frequency band bi in first NR channel 10001_1. When the gNB and NR-UE determine that no signal is present in the 1_i-th direction, the gNB and NR-UE can use the 1_i-th direction for communication, for example, for modulation signal 9302_i for frequency band bi in first NR channel 10001_1.

Note that reception period 9303 for direction (beam) detection for the first frequency band in second NR channel 10001_2 in FIG. 93B corresponds to "reception period 6801 for direction (beam) detection" in FIG. 68, "reception period 6901 for direction (beam) detection" in FIG. 69, and "reception period 7001 for direction (beam) detection" in FIG. 70, and thus more specific operations in reception period 9303 for direction (beam) detection for the first frequency band in second NR channel 10001_2 are as described in other embodiments.

It is assumed that the gNB and NR-UE determine a direction not to be used for communication in frequency band ♭1 in third NR channel 10001_3 (referred to as the 3_1-th direction) by using ""reception period 9103 for LBT processing for the first frequency band in FIG. 92A" in second NR channel 10001_2, for example".

Then, the gNB and NR-UE determine whether a signal is present in the 3_1-th direction in frequency band ♭1 in third NR channel 10001_3 by using ""reception period 9303 for direction (beam) detection for the first frequency band" in FIG. 93B in second NR channel 10001_2, for example".

When the gNB and NR-UE determine that a signal is present in the 3_1-th direction, the gNB and NR-UE determine not to use the 3_1-th direction for communication, for example, for modulation signal 9302_1 for frequency band ♭1 in third NR channel 10001_3. When the gNB and NR-UE determine that no signal is present in the 3_1-th direction, the gNB and NR-UE can use the 3_1-th direction for communication, for example, for modulation signal 9302_1 for frequency band ♭1 in third NR channel 10001_3.

Likewise, it is assumed that the gNB and NR-UE determine a direction not to be used for communication in frequency band bi in third NR channel 10001_3 (referred to as the 3_i-th direction) by using ""reception period 9103 for LBT processing for the first frequency band in FIG. 92A" in second NR channel 10001_2, for example".

Then, the gNB and NR-UE determine whether a signal is present in the 3_i-th direction in frequency band bi in third NR channel 10001_3 by using ""reception period 9303 for direction (beam) detection for the first frequency band" in FIG. 93B in second NR channel 10001_2, for example".

When the gNB and NR-UE determine that a signal is present in the 3_i-th direction, the gNB and NR-UE determine not to use the 3_i-th direction for communication, for example, for modulation signal 9302_i for frequency band bi in third NR channel 10001_3. When the gNB and NR-UE determine that no signal is present in the 3_i-th direction, the gNB and NR-UE can use the 3_i-th direction for communication, for example, for modulation signal 9302_i for frequency band bi in third NR channel 10001_3.

Note that frequency band bi in third NR channel 10001_3 belongs to first frequency band 9001_1 of the first standard in FIG. 100.

Note that reception period 9303 for direction (beam) detection for the first frequency band in second NR channel 10001 _2 in FIG. 93B corresponds to "reception period 6801 for direction (beam) detection" in FIG. 68, "reception period 6901 for direction (beam) detection" in FIG. 69, and "reception period 7001 for direction (beam) detection" in FIG. 70, and thus more specific operations in reception period 9303 for direction (beam) detection for the first frequency band in second NR channel 10001_2 are as described in other embodiments.

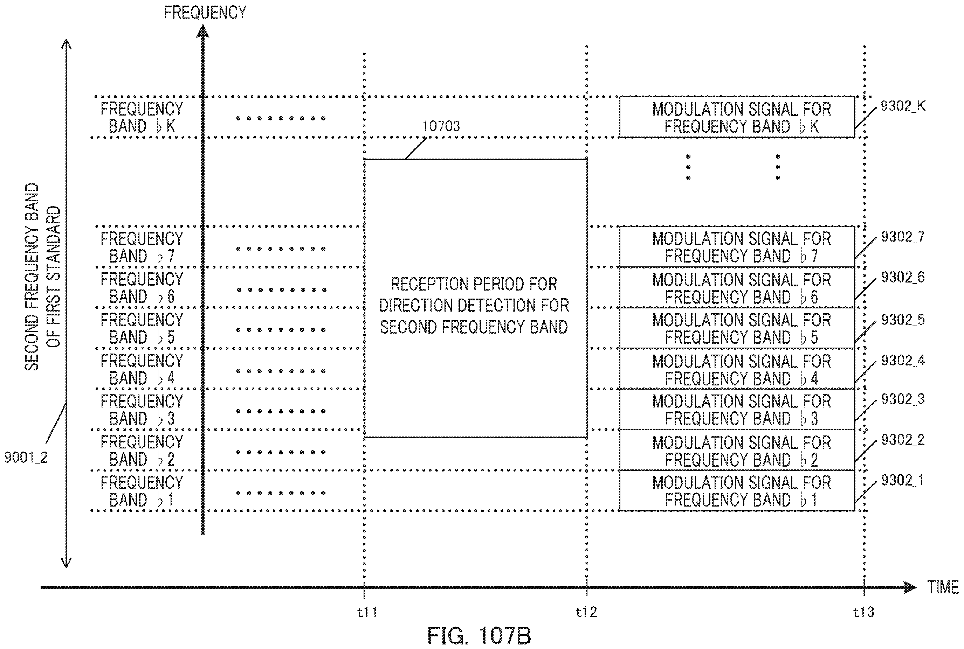

FIG. 107B illustrates an exemplary state of the gNB and NR-UE, and the horizontal axis represents time while the vertical axis represents frequency. On the frequency axis, there are "frequency band $b1$", "frequency band $b2$", "frequency band $b3$", ..., "frequency band $bK$" as illustrated in FIG. 93B. Note that K is an integer equal to or greater than 1. K being 1 indicates a single carrier scheme.

The gNB and NR-UE, for example, "perform the LBT and then transmit a modulation signal in each frequency band" in fourth NR channel 10001_4 as in FIG. 104A. The gNB and NR-UE also transmit a modulation signal in each frequency band in part of third NR channel 10001_3 and fifth NR channel 10001_5 as in FIG. 102B. FIG. 107A illustrates an exemplary state of the gNB and NR-UE in fourth NR channel 10001_4 after that.

Note that ""performing the LBT and then transmitting a modulation signal in each frequency band" in fourth NR channel 10001_4 as in FIG. 104A" is merely an example, and ""performing the LBT and then transmitting a modulation signal in each frequency band" in fourth NR channel 10001_4 as in FIGS. 88A, 103A, 104A, and the description in the present specification" is also possible.

In FIG. 104A, the gNB and NR-UE assume that there is a "direction in which a signal is present" (assume that there is a receive beam in which a signal is detected) in frequency band $b1$ in fourth NR channel 10001_4, and do not start communication in that direction.

Likewise, the gNB and NR-UE assume that there is a "direction in which a signal is present" (assume that there is a receive beam in which a signal is detected) in frequency band bi in fourth NR channel 10001_4, and do not start communication in that direction. Note that i is an integer from 1 to K (both inclusive).

As in FIG. 107B, there is "reception period 10703 for direction (beam) detection for the second frequency band" in frequency band $b1$ to frequency band $bK$ from time t11 to time t12 in fourth NR channel 10001_4.

Reception period 10703 for direction (beam) detection for the second frequency band in fourth NR channel 10001_4 in FIG. 107B corresponds to "reception period 6801 for direction (beam) detection" in FIG. 68, "reception period 6901 for direction (beam) detection" in FIG. 69, and "reception period 7001 for direction (beam) detection" in FIG. 70.

It is assumed that the gNB and NR-UE determine a direction not to be used for communication in frequency band b 1 (referred to as the 4_1-th direction) by using "reception period 10403 for LBT processing for the second frequency band in FIG. 104A" in fourth NR channel 10001_4.

Then, the gNB and NR-UE determine whether a signal is present in the 4_1-th direction in frequency band $b1$ in fourth NR channel 10001_4 by using "reception period 10703 for direction (beam) detection for the second frequency band" in FIG. 107B in fourth NR channel 10001_4.

When the gNB and NR-UE determine that a signal is present in the 4_1-th direction, the gNB and NR-UE determine not to use the 4_1-th direction for communication, for example, for modulation signal 9302_1 for frequency band $b1$ in fourth NR channel 10001_4. When the gNB and NR-UE determine that no signal is present in the 4_1-th direction, the gNB and NR-UE can use the 4_1-th direction for communication, for example, for modulation signal 9302_1 for frequency band $b1$ in fourth NR channel 10001_4.

Likewise, it is assumed that the gNB and NR-UE determine a direction not to be used for communication in frequency band bi (referred to as the 4_i-th direction) by using "reception period 10403 for LBT processing for the second frequency band in FIG. 104A" in fourth NR channel 10001_4. Note that i is an integer from 1 to K (both inclusive).

Then, the gNB and NR-UE determine whether a signal is present in the 4_i-th direction in frequency band bi in fourth NR channel 10001_4 by using "reception period 10703 for direction (beam) detection for the second frequency band" in FIG. 107B in fourth NR channel 10001_4.

When the gNB and NR-UE determine that a signal is present in the 4_i-th direction, the gNB and NR-UE determine not to use the 4_i-th direction for communication, for example, for modulation signal 9302_i for frequency band bi in fourth NR channel 10001_4. When the gNB and NR-UE determine that no signal is present in the i-th direction, the gNB and NR-UE can use the 4_i-th direction for communication, for example, for modulation signal 9302_i for frequency band bi in fourth NR channel 10001_4.

Note that "reception period 10703 for direction (beam) detection for the second frequency band" in fourth NR channel 10001_4 in FIG. 107B corresponds to "reception period 6801 for direction (beam) detection" in FIG. 68, "reception period 6901 for direction (beam) detection" in FIG. 69, and "reception period 7001 for direction (beam) detection" in FIG. 70, and thus more specific operations in "reception period 10703 for direction (beam) detection for the second frequency band" in fourth NR channel 10001_4 are as described in other embodiments.

Next, operations in third NR channel 10001_3 and fifth NR channel 10001_5 will be described. There is no direction (beam) detection period in third NR channel 10001_3 and fifth NR channel 10001_5, and thus the state of the gNB and NR-UE is as illustrated in FIG. 106B. Note that, in FIG. 106B, components that operate in the same manner as in FIGS. 93A and 93B are denoted by the same reference signs, and the description thereof will be omitted.

It is assumed that the gNB and NR-UE determine a direction not to be used for communication in frequency band bi in third NR channel 10001_3 (referred to as the 3_i-th direction) by using ""reception period 10403 for LBT processing for the second frequency band in FIG. 104A" in fourth NR channel 10001_4, for example".

Then, the gNB and NR-UE determine whether a signal is present in the 3_i-th direction in frequency band bi in third NR channel 10001_3 by using ""reception period 10703 for direction (beam) detection for the second frequency band" in FIG. 107B in fourth NR channel 10001_4, for example".

When the gNB and NR-UE determine that a signal is present in the 3_i-th direction, the gNB and NR-UE determine not to use the 3_i-th direction for communication, for example, for modulation signal 9302_i for frequency band bi in third NR channel 10001_3. When the gNB and NR-UE determine that no signal is present in the 3_i-th direction, the gNB and NR-UE can use the 3_i-th direction for communication, for example, for modulation signal 9302_i for frequency band bi in third NR channel 10001_3.

Note that frequency band bi in third NR channel 10001_3 belongs to second frequency band 9001_2 of the first standard in FIG. 100.

Note that "reception period 10703 for direction (beam) detection for the second frequency band" in fourth NR channel 10001_4 in FIG. 107B corresponds to "reception period 6801 for direction (beam) detection" in FIG. 68, "reception period 6901 for direction (beam) detection" in FIG. 69, and "reception period 7001 for direction (beam) detection" in FIG. 70, and thus more specific operations in "reception period 10703 for direction (beam) detection for the second frequency band" in fourth NR channel 10001_4 are as described in other embodiments.

It is assumed that the gNB and NR-UE determine a direction not to be used for communication in frequency band ♭1 in fifth NR channel 10001_5 (referred to as the 5_1-th direction) by using ""reception period 10403 for LBT processing for the second frequency band in FIG. 104A" in fourth NR channel 10001_4, for example".

Then, the gNB and NR-UE determine whether a signal is present in the 5_1-th direction in frequency band ♭1 in fifth NR channel 10001_5 by using ""reception period 10703 for direction (beam) detection for the second frequency band" in FIG. 107B in fourth NR channel 10001_4, for example".

When the gNB and NR-UE determine that a signal is present in the 5_1-th direction, the gNB and NR-UE determine not to use the 5_1-th direction for communication, for example, for modulation signal 9302_1 for frequency band ♭1 in fifth NR channel 10001_5. When the gNB and NR-UE determine that no signal is present in the 5_1-th direction, the gNB and NR-UE can use the 5_1-th direction for communication, for example, for modulation signal 9302_1 for frequency band ♭1 in fifth NR channel 10001_5.

Likewise, it is assumed that the gNB and NR-UE determine a direction not to be used for communication in frequency band bi in fifth NR channel 10001_5 (referred to as the 5_i-th direction) by using ""reception period 10403 for LBT processing for the second frequency band in FIG. 104A" in fourth NR channel 10001_4, for example".

Then, the gNB and NR-UE determine whether a signal is present in the 5_i-th direction in frequency band bi in fifth NR channel 10001_5 by using ""reception period 10703 for direction (beam) detection for the second frequency band" in FIG. 107B in fourth NR channel 10001_4, for example".

When the gNB and NR-UE determine that a signal is present in the 5_i-th direction, the gNB and NR-UE determine not to use the 5_i-th direction for communication, for example, for modulation signal 9302_i for frequency band bi in fifth NR channel 10001_5. When the gNB and NR-UE determine that no signal is present in the 5_i-th direction, the gNB and NR-UE can use the 5_i-th direction for communication, for example, for modulation signal 9302_i for frequency band bi in fifth NR channel 10001_5.

Note that "reception period 10703 for direction (beam) detection for the second frequency band" in fourth NR channel 10001_4 in FIG. 107B corresponds to "reception period 6801 for direction (beam) detection" in FIG. 68, "reception period 6901 for direction (beam) detection" in FIG. 69, and "reception period 7001 for direction (beam) detection" in FIG. 70, and thus more specific operations in "reception period 10703 for direction (beam) detection for the second frequency band" in fourth NR channel 10001_4 are as described in other embodiments.

Although FIGS. 106A, 106B, and 107B have been described as an exemplary state of the gNB and NR-UE, the state is not limited to these. For example, there may be a time period in which a communication counterpart transmits a modulation signal. Further, the transmission timings of modulation signals by the gNB and NR-UE are not limited to the timings in FIGS. 106A, 106B, and 107B.

The names of signals, frames, etc. in FIGS. 106A, 106B, and 107B are not limited to those in the drawings, and other names may be used.

The above procedure allows the gNB and NR-UE to perform the LBT, detect a signal of the first standard, and accordingly control communication performed by themselves, thereby producing the effect of improving the system data throughput of a system including the gNB, NR-UE, etc.

In addition, the determination of a direction, a beam, and an antenna to be used for communication by the gNB and NR-UE according to the presence of a signal of the first standard produces the effect of improving the system data throughput of a system including the gNB, NR-UE, etc.

Further, fine control of the frequency granularity allows the gNB and NR-UE to perform the LBT and select a frequency and a direction in which communication can be started with little interference, thereby producing the effect of improving the system data throughput of a system including the gNB, NR-UE, etc.

In addition, the determination of a direction, a beam, and an antenna to be used for communication by the gNB and NR-UE produces the effect of improving the system data throughput of a system including the gNB, NR-UE, etc.

Note that the processing described in the present embodiment or a part of the processing is performed by the transmission/reception apparatus in FIG. 53 or FIG. 54. The configurations of the gNB and NR-UE, however, are not limited to the configurations in FIGS. 53 and 54.

(Fourth Example)

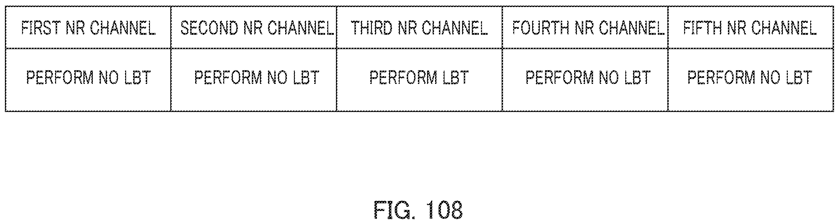

FIG. 108 illustrates whether the LBT is performed in "first NR channel 10001_1, second NR channel 10001_2, third NR channel 10001_3, fourth NR channel 10001_4, and fifth NR channel 10001_5" in FIG. 100. In the fourth example, the LBT is not performed in first NR channel 10001_1, the LBT is not performed in second NR channel 10001_2, the LBT is performed in third NR channel 10001_3, the LBT is not performed in fourth NR channel 10001_4, and the LBT is not performed in fifth NR channel 10001_5 as illustrated in FIG. 108.

In such a case, an NR apparatus such as a gNB and NR-UE knows the state of the first frequency band of the first standard by "performing the LBT in third NR channel 10001_3".

Thus, the NR apparatus such as a gNB and NR-UE knows the state of first frequency band 9001_1 of the first standard in "first NR channel 10001_1, second NR channel 10001_2, and part of third NR channel 10001_3" as a result of "performing the LBT in third NR channel 10001_3". This allows the NR apparatus such as a gNB and NR-UE to determine whether to start communication in "first NR channel 10001_1, second NR channel 10001_2, and part of third NR channel 10001_3".

Likewise, the NR apparatus such as a gNB and NR-UE knows the state of the second frequency band of the first standard by "performing the LBT in third NR channel 10001_3".

Thus, the NR apparatus such as a gNB and NR-UE knows the state of second frequency band 9001_2 of the first standard in "part of third NR channel 10001_3, fourth NR channel 10001_4, and fifth NR channel 10001_5" as a result of "performing the LBT in third NR channel 10001_3". This allows the NR apparatus such as a gNB and NR-UE to determine whether to start communication in "part of third NR channel 10001_3, fourth NR channel 10001_4, and fifth NR channel 10001_5".

Next, specific examples of the state of the gNB and NR-UE will be described.

"FIGS. 88A and 88B", "FIGS. 94A and 94B", and "FIGS. 95A and 95B" are examples when the gNB and NR-UE use third NR channel 10001_3 in FIG. 100 for the LBT. Each of the drawings will be described below.

"FIGS. 88A and 88B" illustrate exemplary states of the gNB and NR-UE, and the horizontal axes represent time while the vertical axes represent frequency. On the frequency axes, there are "frequency band ♭1", "frequency band ♭2", "frequency band ♭3", ..., "frequency band ♭K" as illustrated in "FIGS. 88A and 88B". Note that K is an integer equal to or greater than 1. K being 1 indicates a single carrier scheme.

A period for performing the LBT by the gNB and NR-UE in third NR channel 10001_3 is "reception period 8801_1 for LBT processing for frequency band ♭1" to "reception period 8801_K for LBT processing for frequency band ♭K" in "FIGS. 88A and 88B". Note that the detailed description of FIGS. 88A and 88B will be omitted since it has already been provided.

The gNB and NR-UE perform the LBT in third NR channel 10001_3. Then, the gNB and NR-UE determine whether to start communication in "first NR channel 10001_1, second NR channel 10001_2, and part of third NR channel 10001_3" based on the result related to first frequency band 9001_1 of the first standard in FIG. 100 from the LBT result.

"FIGS. 94A and 94B" illustrate exemplary states of the gNB and NR-UE different from those in "FIGS. 88A and 88B", and the horizontal axes represent time while the vertical axes represent frequency. On the frequency axes, there are "frequency band ♭1", "frequency band ♭2", "frequency band ♭3", ..., "frequency band ♭K" as illustrated in "FIGS. 94A and 94B". Note that K is an integer equal to or greater than 1. K being 1 indicates a single carrier scheme.

A period for performing the LBT by the gNB and NR-UE in third NR channel 10001_3 is "reception period 9401_1 for LBT processing for the first frequency band" and "reception period 9401_2 for LBT processing for the second frequency band" in "FIGS. 94A and 94B". Note that the detailed description of FIGS. 94A and 94B will be omitted since it has already been provided.

The gNB and NR-UE perform the LBT in third NR channel 10001_3 and determine whether to start communication in "first NR channel 10001_1, second NR channel 10001_2, and part of third NR channel 10001_3" based on the result obtained from "reception period 9401_1 for LBT processing for the first frequency band".

"FIGS. 95A and 95B" illustrate exemplary states of the gNB and NR-UE different from those in ""FIGS. 88A and 88B" and "FIGS. 94A and 94B"", and the horizontal axes represent time while the vertical axes represent frequency. On the frequency axes, there are "frequency band ♭1", "frequency band ♭2", "frequency band ♭3", ..., "frequency band ♭K" as illustrated in "FIGS. 95A and 95B". Note that K is an integer equal to or greater than 1. K being 1 indicates a single carrier scheme.

A period for performing the LBT by the gNB and NR-UE in third NR channel 10001_3 is "reception period 9403_1 for LBT processing for the first frequency band" and "reception period 9403_2 for LBT processing for the second frequency band" in "FIGS. 95A and 95B". Note that the detailed description of FIGS. 95A and 95B will be omitted since it has already been provided.

The gNB and NR-UE perform the LBT in third NR channel 10001_3 and determine whether to start communication in "first NR channel 10001_1, second NR channel 10001_2, and part of third NR channel 10001_3" based on the result obtained from "reception period 9403_1 for LBT processing for the first frequency band".

FIG. 102A is an exemplary state of the gNB and NR-UE in a case where the gNB and NR-UE perform the LBT in second NR channel 10001_2, determine whether to start communication in "first NR channel 10001_1, second NR channel 10001_2, and part of third NR channel 10001_3" based on the result, and determine to start communication.

In FIG. 102A, components that operate in the same manner as in FIG. 91 are denoted by the same reference signs. A characteristic of FIG. 102A is that no reception period for the LBT processing is provided, so that the gNB and NR-UE perform the LBT in third NR channel 10001_3, determine whether to start communication in "first NR channel 10001_1, second NR channel 10001_2, and part of third NR channel 10001_3" based on the result obtained from "reception period 9403_1 for LBT processing for the first frequency band", and select a frequency band for communication from modulation signal 9102_1 for frequency band ♭1 to modulation signal 9102_K for frequency band ♭K.

"FIGS. 88A and 88B", "FIGS. 94A and 94B", and "FIGS. 95A and 95B" are other examples when the gNB and NR-UE use third NR channel 10001_3 in FIG. 100 for the LBT. Each of the drawings will be described below.

"FIGS. 88A and 88B" illustrate exemplary states of the gNB and NR-UE, and the horizontal axes represent time while the vertical axes represent frequency. On the frequency axes, there are "frequency band ♭1", "frequency band ♭2", "frequency band ♭3", ..., "frequency band ♭K" as illustrated in "FIGS. 88A and 88B". Note that K is an integer equal to or greater than 1. K being 1 indicates a single carrier scheme.

A period for performing the LBT by the gNB and NR-UE in third NR channel 10001_3 is "reception period 8801_1 for LBT processing for frequency band ♭1" to "reception period 8801_K for LBT processing for frequency band ♭K" in "FIGS. 88A and 88B". Note that the detailed description of FIGS. 88A and 88B will be omitted since it has already been provided.

The gNB and NR-UE perform the LBT in third NR channel 10001_3. Then, the gNB and NR-UE determine whether to start communication in "part of third NR channel 10001_3, fourth NR channel 10001_4, and fifth NR channel 10001_5" based on the result related to second frequency band 9001_2 of the first standard in FIG. 100 from the LBT result.

"FIGS. 94A and 94B" illustrate exemplary states of the gNB and NR-UE different from those in "FIGS. 88A and 88B", and the horizontal axes represent time while the vertical axes represent frequency. On the frequency axes, there are "frequency band ♭1", "frequency band ♭2", "frequency band ♭3", ..., "frequency band ♭K" as illustrated in "FIGS. 94A and 94B". Note that K is an integer equal to or greater than 1. K being 1 indicates a single carrier scheme.

A period for performing the LBT by the gNB and NR-UE in third NR channel 10001_3 is "reception period 9401_1 for LBT processing for the first frequency band" and "reception period 9401_2 for LBT processing for the second frequency band" in "FIGS. 94A and 94B". Note that the detailed description of FIGS. 94A and 94B will be omitted since it has already been provided.

The gNB and NR-UE perform the LBT in third NR channel 10001_3 and determine whether to start communication in "part of third NR channel 10001_3, fourth NR channel 10001_4, and fifth NR channel 10001_5" based on the result obtained from "reception period 9401_2 for LBT processing for the second frequency band".

"FIGS. 95A and 95B" illustrate exemplary states of the gNB and NR-UE different from those in ""FIGS. 88A and 88B" and "FIGS. 94A and 94B"", and the horizontal axes represent time while the vertical axes represent frequency. On the frequency axes, there are "frequency band ♭1", "frequency band ♭2", "frequency band ♭3", ..., "frequency band ♭K" as illustrated in "FIGS. 95A and 95B". Note that K is an integer equal to or greater than 1. K being 1 indicates a single carrier scheme.

A period for performing the LBT by the gNB and NR-UE in third NR channel 10001_3 is "reception period 9403_1 for LBT processing for the first frequency band" and "reception period 9403_2 for LBT processing for the second frequency band" in "FIGS. 95A and 95B". Note that the detailed description of FIGS. 95A and 95B will be omitted since it has already been provided.

The gNB and NR-UE perform the LBT in third NR channel 10001_3 and determine whether to start communication in "part of third NR channel 10001_3, fourth NR channel 10001_4, and fifth NR channel 10001_5" based on the result obtained from "reception period 9401_2 for LBT processing for the second frequency band".

FIG. 102B is an exemplary state of the gNB and NR-UE in a case where the gNB and NR-UE perform the LBT in third NR channel 10001_3, determine whether to start communication in "part of third NR channel 10001_3, fourth NR channel 10001_4, and fifth NR channel 10001_5" based on the result obtained from "reception period 9401_2 for LBT processing for the second frequency band", and determine to start communication.

In FIG. 102B, components that operate in the same manner as in FIG. 91 are denoted by the same reference signs. A characteristic of FIG. 102B is that no reception period for the LBT processing is provided, so that the gNB and NR-UE perform the LBT in third NR channel 10001_3, determine whether to start communication in "part of third NR channel 10001_3, fourth NR channel 10001_4, and fifth NR channel 10001_5" based on the result obtained from "reception period 9401_2 for LBT processing for the second frequency band", and select a frequency band for communication from modulation signal 9102_1 for frequency band $b1$ to modulation signal 9102_K for frequency band $bK$.

Note that, unlike FIGS. 94A, 94B, 95A, and 95B, the reception period for LBT processing for the first frequency band may have frequency bands broader or narrower than frequency band $b1$ to frequency band $b3$. In addition, the reception period for LBT processing for the second frequency band may have frequency bands broader or narrower than frequency band $b4$ to frequency band $bK$.

Embodiment 8 has a description of the case of "performing the LBT and not transmitting a sector sweep reference signal using an antenna that has detected a signal" with reference to FIG. 62A. The processing of "performing the LBT and not transmitting a sector sweep reference signal using an antenna that has detected a signal" may be performed in each of the frequency bands from "frequency band $b1$" to "frequency band $bK$" described above.

Embodiment 8 also has a description of the case of "performing the LBT and not transmitting a sector sweep reference signal using a beam in which a signal has detected" with reference to FIG. 62B. The processing of "performing the LBT and not transmitting a sector sweep reference signal using a beam in which a signal has detected" may be performed in each of the frequency bands from "frequency band $b1$" to "frequency band $bK$"

described above.

Embodiments 8, 9, and 10 have a description of "the gNB and NR-UE perform the second LBT processing (directional LBT) or the third LBT processing (LBT in which both omni-directional LBT processing and directional LBT processing are performed) and start communication without using more than one direction for the communication. Then, after starting the communication, the gNB and NR-UE check whether a signal is present in a direction not used for the communication, and when detecting a direction in which no signal is present, the gNB and NR-UE may start communication by a beam corresponding to the direction". The processing described in Embodiments 8, 9, and 10 may be performed in each of the frequency bands from "frequency band $b1$" to "frequency band $bK$" described above. The examples will be described below.

FIG. 100 illustrates exemplary frequency allocation in the present embodiment, and the horizontal axis represents frequency. As illustrated in FIG. 100, first frequency band 9001_1 of the first standard and second frequency band 9001_2 of the first standard are aligned. Note that first frequency band 9001_1 of the first standard and second frequency band 9001_2 of the first standard each have a bandwidth of 2.16 GHz, for example.

As in FIG. 100, for example, an NR apparatus such as a gNB and NR-UE handles a modulation signal of first NR channel 10001_1, a modulation signal of second NR channel 10001_2, a modulation signal of third NR channel 10001_3, a modulation signal of fourth NR channel 10001_4, and a modulation signal of fifth NR channel 10001_5.

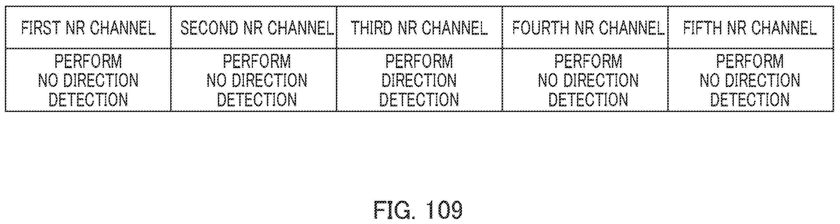

FIG. 109 illustrates whether the direction detection is performed in "first NR channel 10001_1, second NR channel 10001_2, third NR channel 10001_3, fourth NR channel 10001_4, and fifth NR channel 10001_5" in FIG. 100. In the fourth example, the direction detection is not performed in first NR channel 10001_1, the direction detection is not performed in second NR channel 10001_2, the direction detection is performed in third NR channel 10001_3, the direction detection is not performed in fourth NR channel 10001_4, and the direction detection is not performed in fifth NR channel 10001_5 as illustrated in FIG. 109.

In such a case, an NR apparatus such as a gNB and NR-UE knows the state of the first frequency band of the first standard by "performing the direction detection in third NR channel 10001_3".

Thus, the NR apparatus such as a gNB and NR-UE knows the state of first frequency band 9001_1 of the first standard in "first NR channel 10001_1, second NR channel 10001_2, and part of third NR channel 10001_3" as a result of "performing the direction detection in third NR channel 10001_3".

This allows the NR apparatus such as a gNB and NR-UE to determine whether it is possible to perform communication in each direction in "first NR channel 10001_1, second NR channel 10001_2, and part of third NR channel 10001_3".

Likewise, the NR apparatus such as a gNB and NR-UE knows the state of the second frequency band of the first standard by "performing the direction detection in third NR channel 10001_3".

Thus, the NR apparatus such as a gNB and NR-UE knows the state of second frequency band 9001_2 of the first standard in "part of third NR channel 10001_3, fourth NR channel 10001_4, and fifth NR channel 10001_5" as a result of "performing the direction detection in third NR channel 10001_3". This allows the NR apparatus such as a gNB and NR-UE to determine whether it is possible to perform communication in each direction in "part of third NR channel 10001_3, fourth NR channel 10001_4, and fifth NR channel 10001_5".

Specific examples of the state of the gNB and NR-UE will be described.

"FIG. 89", "FIG. 96A", and "FIG. 96B" are examples when the gNB and NR-UE use third NR channel 10001_3 in FIG. 100 for the direction detection. Each of the drawings will be described below.

FIG. 89 illustrates an exemplary state of the gNB and NR-UE, and the horizontal axis represents time while the vertical axis represents frequency. On the frequency axis, there are "frequency band ♭1", "frequency band ♭2", "frequency band ♭3", ..., "frequency band ♭K" as illustrated in FIG. 89. Note that K is an integer equal to or greater than 1. K being 1 indicates a single carrier scheme.

The gNB and NR-UE, for example, "perform the LBT and then transmit a modulation signal in each frequency band" in third NR channel 10001_3 as in FIG. 88A. The gNB and NR-UE also transmit a modulation signal in each frequency band in first NR channel 10001_1 and second NR channel 10001_2 as in FIG. 102A. FIG. 89 illustrates an exemplary state of the gNB and NR-UE in third NR channel 10001_3 after that.

Note that ""performing the LBT and then transmitting a modulation signal in each frequency band" in third NR channel 10001_3 as in FIG. 88A" is merely an example, and ""performing the LBT and then transmitting a modulation signal in each frequency band" in third NR channel 10001_3 as in FIGS. 88A, 94A, 95A, and the description in the present specification" is also possible.

In FIG. 88A, the gNB and NR-UE assume that there is a "direction in which a signal is present" (assume that there is a receive beam in which a signal is detected) in frequency band ♭1 in third NR channel 10001_3, and do not start communication in that direction.

Likewise, the gNB and NR-UE assume that there is a "direction in which a signal is present" (assume that there is a receive beam in which a signal is detected) in frequency band bi in third NR channel 10001_3, and do not start communication in that direction.

Note that frequency band bi in third NR channel 10001_3 belongs to first frequency band 9001_1 of the first standard in FIG. 100.

As in FIG. 89, there are reception period 8901_1 for direction (beam) detection for frequency band ♭1 to reception period 8901_K for direction (beam) detection for frequency band ♭K in frequency band ♭1 to frequency band ♭K from time t11 to time t12 in third NR channel 10001_3.

"Reception period 8901_1 for direction (beam) detection for frequency band ♭1 to reception period 8901_K for direction (beam) detection for frequency band ♭K" in third NR channel 10001_3 in FIG. 89 correspond to "reception period 6801 for direction (beam) detection" in FIG. 68, "reception period 6901 for direction (beam) detection" in FIG. 69, and "reception period 7001 for direction (beam) detection" in FIG. 70.

It is assumed that the gNB and NR-UE determine a direction not to be used for communication in frequency band ♭1 in third NR channel 10001_3 (referred to as the 3_1-th direction) by using "reception period 8801_1 for LBT processing for frequency band ♭1 in FIG. 88A".

Then, the gNB and NR-UE determine whether a signal is present in the 3_1-th direction in frequency band ♭1 in third NR channel 10001_3 by using "reception period 8901_1 for direction (beam) detection for frequency band ♭1" in FIG. 89 in third NR channel 10001_3.

When the gNB and NR-UE determine that a signal is present in the 3_1-th direction, the gNB and NR-UE determine not to use the 3_1-th direction for communication, for example, for modulation signal 8902_1 for frequency band ♭1 in third NR channel 10001_3. When the gNB and NR-UE determine that no signal is present in the 3_1-th direction, the gNB and NR-UE can use the 3_1-th direction for communication, for example, for modulation signal 8902_1 for frequency band ♭1 in third NR channel 10001_3.

Likewise, it is assumed that the gNB and NR-UE determine a direction not to be used for communication in frequency band bi in third NR channel 10001_3 (referred to as the 3_i-th direction) by using "reception period 8801_i for LBT processing for frequency band bi in FIG. 88A". Note that frequency band bi in third NR channel 10001_3 belongs to first frequency band 9001_1 of the first standard in FIG. 100.

Then, the gNB and NR-UE determine whether a signal is present in the 3_i-th direction in frequency band bi in third NR channel 10001_3 by using "reception period 8901_i for direction (beam) detection for frequency band bi" in FIG. 89 in third NR channel 10001_3.

When the gNB and NR-UE determine that a signal is present in the 3_i-th direction, the gNB and NR-UE determine not to use the 3_i-th direction for communication, for example, for modulation signal 8902_i for frequency band bi in third NR channel 10001_3. When the gNB and NR-UE determine that no signal is present in the 3_i-th direction, the gNB and NR-UE can use the 3_i-th direction for communication, for example, for modulation signal 8902_i for frequency band bi in third NR channel 10001_3.

Note that frequency band bi in third NR channel 10001_3 belongs to first frequency band 9001_1 of the first standard in FIG. 100.

Note that "reception period 8901_1 for direction (beam) detection for frequency band ♭1 to reception period 8901_K for direction (beam) detection for frequency band ♭K" in third NR channel 10001_3 in FIG. 89 correspond to "reception period 6801 for direction (beam) detection" in FIG. 68, "reception period 6901 for direction (beam) detection" in FIG. 69, and "reception period 7001 for direction (beam) detection" in FIG. 70, and thus more specific operations in "reception period 8901_1 for direction (beam) detection for frequency band ♭1 to reception period 8901_K for direction (beam) detection for frequency band ♭K" in third NR channel 10001_3 are as described in other embodiments.

Next, operations in first NR channel 10001_1 and second NR channel 10001_2 will be described. There is no direction (beam) detection period in first NR channel 10001_1 and second NR channel 10001_2, and thus the state of the gNB and NR-UE is as illustrated in FIG. 106A. Note that, in FIG. 106A, components that operate in the same manner as in FIGS. 93A and 93B are denoted by the same reference signs, and the description thereof will be omitted.

It is assumed that the gNB and NR-UE determine a direction not to be used for communication in frequency band ♭1 in first NR channel 10001_1 (referred to as the 1_1-th direction) by using ""reception period 8801_1 for LBT processing for frequency band ♭1 to reception period 8801_K for LBT processing for frequency band ♭K in FIG. 88A" in third NR channel 10001_3, for example".

Then, the gNB and NR-UE determine whether a signal is present in the 1_1-th direction in frequency band ♭1 in first NR channel 10001_1 by using ""reception period 8901_1 for direction (beam) detection for frequency band ♭1 to reception period 8901_K for direction (beam) detection for frequency band ♭K in FIG. 89" in third NR channel 10001_3, for example".

When the gNB and NR-UE determine that a signal is present in the 1_1-th direction, the gNB and NR-UE determine not to use the 1_1-th direction for communication, for example, for modulation signal 9302_1 for frequency band ♭1 in first NR channel 10001_1. When the gNB and NR-UE determine that no signal is present in the 1_1-th direction, the gNB and NR-UE can use the 1_1-th direction for communication, for example, for modulation signal 9302_1 for frequency band ♭1 in first NR channel 10001_1.

Likewise, it is assumed that the gNB and NR-UE determine a direction not to be used for communication in frequency band bi in first NR channel 10001_1 (referred to as the 1_i-th direction) by using ""reception period 8801_1 for LBT processing for frequency band ♭1 to reception period 8801_K for LBT processing for frequency band ♭K in FIG. 88A" in third NR channel 10001_3, for example".

Then, the gNB and NR-UE determine whether a signal is present in the 1_i-th direction in frequency band bi in first NR channel 10001_1 by using ""reception period 8901_1 for direction (beam) detection for frequency band ♭1 to reception period 8901_K for direction (beam) detection for frequency band ♭K in FIG. 89" in third NR channel 10001_3, for example".

When the gNB and NR-UE determine that a signal is present in the 1_i-th direction, the gNB and NR-UE determine not to use the 1_i-th direction for communication, for example, for modulation signal 9302_i for frequency band bi in first NR channel 10001_1. When the gNB and NR-UE determine that no signal is present in the 1_i-th direction, the gNB and NR-UE can use the 1_i-th direction for communication, for example, for modulation signal 9302_i for frequency band bi in first NR channel 10001_1.

Note that "reception period 8901_1 for direction (beam) detection for frequency band ♭1 to reception period 8901_K for direction (beam) detection for frequency band ♭K" in third NR channel 10001_3 in FIG. 89 correspond to "reception period 6801 for direction (beam) detection" in FIG. 68, "reception period 6901 for direction (beam) detection" in FIG. 69, and "reception period 7001 for direction (beam) detection" in FIG. 70, and thus more specific operations in "reception period 8901_1 for direction (beam) detection for frequency band ♭1 to reception period 8901_K for direction (beam) detection for frequency band ♭K" in third NR channel 10001_3 are as described in other embodiments.

It is assumed that the gNB and NR-UE determine a direction not to be used for communication in frequency band ♭1 in second NR channel 10001_2 (referred to as the 2_1-th direction) by using ""reception period 8801_1 for LBT processing for frequency band ♭1 to reception period 8801_K for LBT processing for frequency band ♭K in FIG. 88A" in third NR channel 10001_3, for example".

Then, the gNB and NR-UE determine whether a signal is present in the 2_1-th direction in frequency band ♭1 in second NR channel 10001_2 by using ""reception period 8901_1 for direction (beam) detection for frequency band ♭1 to reception period 8901_K for direction (beam) detection for frequency band ♭K" in FIG. 89

in third NR channel 10001_3, for example".

When the gNB and NR-UE determine that a signal is present in the 2_1-th direction, the gNB and NR-UE determine not to use the 2_1-th direction for communication, for example, for modulation signal 9302_1 for frequency band ♭1 in second NR channel 10001_2. When the gNB and NR-UE determine that no signal is present in the 2_1-th direction, the gNB and NR-UE can use the 2_1-th direction for communication, for example, for modulation signal 9302_1 for frequency band ♭1 in second NR channel 10001_2.

Likewise, it is assumed that the gNB and NR-UE determine a direction not to be used for communication in frequency band bi in second NR channel 10001_2 (referred to as the 2_i-th direction) by using ""reception period 8801_1 for LBT processing for frequency band ♭1 to reception period 8801_K for LBT processing for frequency band ♭K in FIG. 88A" in third NR channel 10001_3, for example".

Then, the gNB and NR-UE determine whether a signal is present in the 2_i-th direction in frequency band bi in second NR channel 10001_2 by using ""reception period 8901_1 for direction (beam) detection for frequency band ♭1 to reception period 8901_K for direction (beam) detection for frequency band ♭K" in FIG. 89 in third NR channel 10001_3, for example".

When the gNB and NR-UE determine that a signal is present in the 2_i-th direction, the gNB and NR-UE determine not to use the 2_i-th direction for communication, for example, for modulation signal 9302_i for frequency band bi in second NR channel 10001_2. When the gNB and NR-UE determine that no signal is present in the 2_i-th direction, the gNB and NR-UE can use the 2_i-th direction for communication, for example, for modulation signal 9302_i for frequency band bi in second NR channel 10001_2.

Note that "reception period 8901_1 for direction (beam) detection for frequency band ♭1 to reception period 8901_K for direction (beam) detection for frequency band ♭K" in third NR channel 10001_3 in FIG. 89 correspond to "reception period 6801 for direction (beam) detection" in FIG. 68, "reception period 6901 for direction (beam) detection" in FIG. 69, and "reception period 7001 for direction (beam) detection" in FIG. 70, and thus more specific operations in "reception period 8901_1 for direction (beam) detection for frequency band ♭1 to reception period 8901_K for direction (beam) detection for frequency band ♭K" in third NR channel 10001_3 are as described in other embodiments.

FIG. 89 illustrates an exemplary state of the gNB and NR-UE, and the horizontal axis represents time while the vertical axis represents frequency. On the frequency axis, there are "frequency band ♭1", "frequency band 2", "frequency band ♭3", ..., "frequency band ♭K" as illustrated in FIG. 89. Note that K is an integer equal to or greater than 1. K being 1 indicates a single carrier scheme. The gNB and NR-UE, for example, "perform the LBT and then transmit a modulation signal in each frequency band" in third NR channel 10001_3 as in FIG. 88A. The gNB and NR-UE also transmit a modulation signal in each frequency band in fourth NR channel 10001_4 and fifth NR channel 10001_5 as in FIG. 102B. FIG. 89 illustrates an exemplary state of the gNB and NR-UE in third NR channel 10001_3 after that.

Note that ""performing the LBT and then transmitting a modulation signal in each frequency band" in third NR channel 10001_3 as in FIG. 88A" is merely an example, and ""performing the LBT and then transmitting a modulation signal in each frequency band" in third NR channel 10001_3 as in FIGS. 88A, 94A, 95A, and the description in the present specification" is also possible.

In FIG. 88A, the gNB and NR-UE assume that there is a "direction in which a signal is present" (assume that there is a receive beam in which a signal is detected) in frequency band ♭1 in third NR channel 10001_3, and do not start communication in that direction.

Likewise, the gNB and NR-UE assume that there is a "direction in which a signal is present" (assume that there is a receive beam in which a signal is detected) in frequency band bi in third NR channel 10001_3, and do not start communication in that direction.

Note that frequency band bi in third NR channel 10001_3 belongs to second frequency band 9001_2 of the first standard in FIG. 100.

As in FIG. 89, there are reception period 8901_1 for direction (beam) detection for frequency band ♭1 to reception period 8901_K for direction (beam) detection for frequency band ♭K in frequency band ♭1 to frequency band ♭K from time t11 to time t12 in third NR channel 10001_3.

"Reception period 8901_1 for direction (beam) detection for frequency band ♭1 to reception period 8901_K for direction (beam) detection for frequency band ♭K" in third NR channel 10001_3 in FIG. 89 correspond to "reception period 6801 for direction (beam) detection" in FIG. 68, "reception period 6901 for direction (beam) detection" in FIG. 69, and "reception period 7001 for direction (beam) detection" in FIG. 70.

It is assumed that the gNB and NR-UE determine a direction not to be used for communication in frequency band bi in third NR channel 10001_3 (referred to as the 3_i-th direction) by using "reception period 8801_i for LBT processing for frequency band bi in FIG. 88A". Note that i is an integer from 1 to K (both inclusive).

Then, the gNB and NR-UE determine whether a signal is present in the 3_i-th direction in frequency band bi in third NR channel 10001_3 by using "reception period 8901_i for direction (beam) detection for frequency band bi" in FIG. 89 in third NR channel 10001_3.

When the gNB and NR-UE determine that a signal is present in the 3_i-th direction, the gNB and NR-UE determine not to use the 3_i-th direction for communication, for example, for modulation signal 8902_i for frequency band bi in third NR channel 10001_3. When the gNB and NR-UE determine that no signal is present in the i-th direction, the gNB and NR-UE can use the 3_i-th direction for communication, for example, for modulation signal 8902_i for frequency band bi in third NR channel 10001_3.

Note that frequency band bi in third NR channel 10001_3 belongs to second frequency band 9001_2 of the first standard in FIG. 100.

Note that "reception period 8901_1 for direction (beam) detection for frequency band ♭1 to reception period 8901_K for direction (beam) detection for frequency band ♭K" in third NR channel 10001_3 in FIG. 89 correspond to "reception period 6801 for direction (beam) detection" in FIG. 68, "reception period 6901 for direction (beam) detection" in FIG. 69, and "reception period 7001 for direction (beam) detection" in FIG. 70, and thus more specific operations in "reception period 8901_1 for direction (beam) detection for frequency band ♭1 to reception period 8901_K for direction (beam) detection for frequency band ♭K" in third NR channel 10001_3 are as described in other embodiments.

Next, operations in fourth NR channel 10001_4 and fifth NR channel 10001_5 will be described. There is no direction (beam) detection period in fourth NR channel 10001_4 and fifth NR channel 10001_5, and thus the state of the gNB and NR-UE is as illustrated in FIG. 106B. Note that, in FIG. 106B, components that operate in the same manner as in FIGS. 93A and 93B are denoted by the same reference signs, and the description thereof will be omitted.

It is assumed that the gNB and NR-UE determine a direction not to be used for communication in frequency band ♭1 in fourth NR channel 10001_4 (referred to as the 4_1-th direction) by using ""reception period 8801_1 for LBT processing for frequency band ♭1 to reception period 8801_K for LBT processing for frequency band ♭K in FIG. 88A" in third NR channel 10001_3, for example".

Then, the gNB and NR-UE determine whether a signal is present in the 4_1-th direction in frequency band ♭1 in fourth NR channel 10001_4 by using ""reception period 8901_1 for direction (beam) detection for frequency band ♭1 to reception period 8901_K for direction (beam) detection for frequency band ♭K" in FIG. 89 in third NR channel 10001_3, for example".

When the gNB and NR-UE determine that a signal is present in the 4_1-th direction, the gNB and NR-UE determine not to use the 4_1-th direction for communication, for example, for modulation signal 9302_1 for frequency band ♭1 in fourth NR channel 10001_4. When the gNB and NR-UE determine that no signal is present in the 4_1-th direction, the gNB and NR-UE can use the 4_1-th direction for communication, for example, for modulation signal 9302_1 for frequency band ♭1 in fourth NR channel 10001_4.

Likewise, it is assumed that the gNB and NR-UE determine a direction not to be used for communication in frequency band bi in fourth NR channel 10001_4 (referred to as the 4_i-th direction) by using ""reception period 8801_1 for LBT processing for frequency band ♭1 to reception period 8801_K for LBT processing for frequency band ♭K in FIG. 88A" in third NR channel 10001_3, for example".

Then, the gNB and NR-UE determine whether a signal is present in the 4_i-th direction in frequency band bi in fourth NR channel 10001_4 by using ""reception period 8901_1 for direction (beam) detection for frequency band ♭1 to reception period 8901_K for direction (beam) detection for frequency band ♭K" in FIG. 89 in third NR channel 10001_3, for example".

When the gNB and NR-UE determine that a signal is present in the 4_i-th direction, the gNB and NR-UE determine not to use the 4_i-th direction for communication, for example, for modulation signal 9302_i for frequency band bi in fourth NR channel 10001_4. When the gNB and NR-UE determine that no signal is present in the 4_i-th direction, the gNB and NR-UE can use the 4_i-th direction for communication, for example, for modulation signal 9302_i for frequency band bi in fourth NR channel 10001_4.

Note that "reception period 8901_1 for direction (beam) detection for frequency band ♭1 to reception period 8901_K for direction (beam) detection for frequency band ♭K" in third NR channel 10001_3 in FIG. 89 correspond to "reception period 6801 for direction (beam) detection" in FIG. 68, "reception period 6901 for direction (beam) detection" in FIG. 69, and "reception period 7001 for direction (beam) detection" in FIG. 70, and thus more specific operations in "reception period 8901_1 for direction (beam) detection for frequency band ♭1 to reception period 8901_K for direction (beam) detection for frequency band ♭K" in third NR channel 10001_3 are as described in other embodiments.

It is assumed that the gNB and NR-UE determine a direction not to be used for communication in frequency band ♭1 in fifth NR channel 10001_5 (referred to as the 5_1-th direction) by using ""reception period 8801_1 for LBT processing for frequency band ♭1 to reception period 8801_K for LBT processing for frequency band ♭K in FIG. 88A" in third NR channel 10001_3, for example".

Then, the gNB and NR-UE determine whether a signal is present in the 5_1-th direction in frequency band ♭1 in fifth NR channel 10001_5 by using ""reception period 8901_1 for direction (beam) detection for frequency band ♭1 to reception period 8901_K for direction (beam) detection for frequency band ♭K" in FIG. 89 in third NR channel 10001_3, for example".

When the gNB and NR-UE determine that a signal is present in the 5_1-th direction, the gNB and NR-UE determine not to use the 5_1-th direction for communication, for example, for modulation signal 9302_1 for frequency band ♭1 in fifth NR channel 10001_5. When the gNB and NR-UE determine that no signal is present in the 5_1-th direction, the gNB and NR-UE can use the 5_1-th direction for communication, for example, for modulation signal 9302_1 for frequency band ♭1 in fifth NR channel 10001_5.

Likewise, it is assumed that the gNB and NR-UE determine a direction not to be used for communication in frequency band bi in fifth NR channel 10001_5 (referred to as the 5_i-th direction) by using ""reception period 8801_1 for LBT processing for frequency band ♭1 to reception period 8801_K for LBT processing for frequency band ♭K in FIG. 88A" in third NR channel 10001_3, for example".

Then, the gNB and NR-UE determine whether a signal is present in the 5_i-th direction in frequency band bi in fifth NR channel 10001_5 by using ""reception period 8901_1 for direction (beam) detection for frequency band ♭1 to reception period 8901_K for direction (beam) detection for frequency band ♭K" in FIG. 89 in third NR channel 10001_3, for example".

When the gNB and NR-UE determine that a signal is present in the 5_i-th direction, the gNB and NR-UE determine not to use the 5_i-th direction for communication, for example, for modulation signal 9302_i for frequency band bi in fifth NR channel 10001_5. When the gNB and NR-UE determine that no signal is present in the 5_i-th direction, the gNB and NR-UE can use the 5_i-th direction for communication, for example, for modulation signal 9302_i for frequency band bi in fifth NR channel 10001_5.

Note that "reception period 8901_1 for direction (beam) detection for frequency band ♭1 to reception period 8901_K for direction (beam) detection for frequency band ♭K" in third NR channel 10001_3 in FIG. 89 correspond to "reception period 6801 for direction (beam) detection" in FIG. 68, "reception period 6901 for direction (beam) detection" in FIG. 69, and "reception period 7001 for direction (beam) detection" in FIG. 70, and thus more specific operations in "reception period 8901_1 for direction (beam) detection for frequency band ♭1 to reception period 8901_K for direction (beam) detection for frequency band ♭K" in third NR channel 10001_3 are as described in other embodiments.

Although FIGS. 89, 106A, and 106B have been described as an exemplary state of the gNB and NR-UE, the state is not limited to these. For example, there may be a time period in which a communication counterpart transmits a modulation signal. Further, the transmission timings of modulation signals by the gNB and NR-UE are not limited to the timings in FIGS. 89, 106A, and 106B. The names of signals, frames, etc. in FIGS. 89, 106A, and 106B are not limited to those in the drawings, and other names may be used.

Operations related to FIG. 96A will be described below.

FIG. 96A illustrates an exemplary state of the gNB and NR-UE, and the horizontal axis represents time while the vertical axis represents frequency. On the frequency axis, there are "frequency band ♭1", "frequency band ♭2", "frequency band ♭3", ..., "frequency band ♭K" as illustrated in FIG. 96A. Note that K is an integer equal to or greater than 1. K being 1 indicates a single carrier scheme.

The gNB and NR-UE, for example, "perform the LBT and then transmit a modulation signal in each frequency band" in third NR channel 10001_3 as in FIG. 94A. The gNB and NR-UE also transmit a modulation signal in each frequency band in first NR channel 10001_1 and second NR channel 10001_2 as in FIG. 102A. FIG. 96A illustrates an exemplary state of the gNB and NR-UE in third NR channel 10001_3 after that. Note that ""performing the LBT and then transmitting a modulation signal in each frequency band" in third NR channel 10001_3 as in FIG. 94A" is merely an example, and ""performing the LBT and then transmitting a modulation signal in each frequency band" in third NR channel 10001_3 as in FIGS. 88A, 94A, 95A, and the description in the present specification" is also possible.

In FIG. 94A, the gNB and NR-UE assume that there is a "direction in which a signal is present" (assume that there is a receive beam in which a signal is detected) in frequency band ♭1 in third NR channel 10001_3, and do not start communication in that direction. Likewise, the gNB and NR-UE assume that there is a "direction in which a signal is present" (assume that there is a receive beam in which a signal is detected) in frequency band bi in third NR channel 10001_3, and do not start communication in that direction.

Note that frequency band bi in third NR channel 10001_3 belongs to first frequency band 9001_1 of the first standard in FIG. 100.

As in FIG. 96A, there is "reception period 9601_1 for direction (beam) detection for the first frequency band" in frequency band ♭1 to frequency band ♭3 from time t11 to time t12 in third NR channel 10001_3.

"Reception period 9601_1 for direction (beam) detection for the first frequency band" in third NR channel 10001_3 in FIG. 96A corresponds to "reception period 6801 for direction (beam) detection" in FIG. 68, "reception period 6901 for direction (beam) detection" in FIG. 69, and "reception period 7001 for direction (beam) detection" in FIG. 70.

It is assumed that the gNB and NR-UE determine a direction not to be used for communication in frequency band ♭1 (referred to as the 3_1-th direction) by using "reception period 9401_1 for LBT processing for the first frequency band in FIG. 94A" in third NR channel 10001_3.

Then, the gNB and NR-UE determine whether a signal is present in the 3_1-th direction in frequency band ♭1 in third NR channel 10001_3 by using "reception period 9601_1 for direction (beam) detection for the first frequency band" in FIG. 96A in third NR channel 10001_3.

When the gNB and NR-UE determine that a signal is present in the 3_1-th direction, the gNB and NR-UE determine not to use the 3_1-th direction for communication, for example, for modulation signal 9602_1 for frequency band ♭1 in third NR channel 10001_3. When the gNB and NR-UE determine that no signal is present in the 3_1-th direction, the gNB and NR-UE can use the 3_1-th direction for communication, for example, for modulation signal 9602_1 for frequency band ♭1 in third NR channel 10001_3.

Likewise, it is assumed that the gNB and NR-UE determine a direction not to be used for communication in frequency band bi (referred to as the 3_i-th direction) by using "reception period 9401_1 for LBT processing for the first frequency band in FIG. 94A" in third NR channel 10001_3. Note that frequency band ♭i in third NR channel 10001_3 belongs to first frequency band 9001_1 of the first standard in FIG. 100.

Then, the gNB and NR-UE determine whether a signal is present in the 3_i-th direction in frequency band bi in third NR channel 10001_3 by using "reception period 9601_1 for direction (beam) detection for the first frequency band" in FIG. 96A in third NR channel 10001_3.

When the gNB and NR-UE determine that a signal is present in the 3_i-th direction, the gNB and NR-UE determine not to use the 3_i-th direction for communication, for example, for modulation signal 9602_i for frequency band bi in third NR channel 10001_3. When the gNB and NR-UE determine that no signal is present in the 3_i-th direction, the gNB and NR-UE can use the 3_i-th direction for communication, for example, for modulation signal 9602_i for frequency band bi in third NR channel 10001_3.

Note that frequency band bi in third NR channel 10001_3 belongs to first frequency band 9001_1 of the first standard in FIG. 100.

Note that "reception period 9601_1 for direction (beam) detection for the first frequency band" in third NR channel 10001_3 in FIG. 96A corresponds to "reception period 6801 for direction (beam) detection" in FIG. 68, "reception period 6901 for direction (beam) detection" in FIG. 69, and "reception period 7001 for direction (beam) detection" in FIG. 70, and thus more specific operations in "reception period 9601_1 for direction (beam) detection for the first frequency band" in third NR channel 10001_3 are as described in other embodiments.

Next, operations in first NR channel 10001_1 and second NR channel 10001_2 will be described. There is no direction (beam) detection period in first NR channel 10001_1 and second NR channel 10001_2, and thus the state of the gNB and NR-UE is as illustrated in FIG. 106A. Note that, in FIG. 106A, components that operate in the same manner as in FIGS. 93A and 93B are denoted by the same reference signs, and the description thereof will be omitted.

It is assumed that the gNB and NR-UE determine a direction not to be used for communication in frequency band ♭1 in first NR channel 10001_1 (referred to as the 1_1-th direction) by using ""reception period 9401_1 for LBT processing for the first frequency band in FIG. 94A" in third NR channel 10001_3, for example".

Then, the gNB and NR-UE determine whether a signal is present in the 1_1-th direction in frequency band ♭1 in first NR channel 10001_1 by using ""reception period 9601_1 for direction (beam) detection for the first frequency band in FIG. 96A" in third NR channel 10001_3, for example".

When the gNB and NR-UE determine that a signal is present in the 1_1-th direction, the gNB and NR-UE determine not to use the 1_1-th direction for communication, for example, for modulation signal 9602_1 for frequency band ♭1 in first NR channel 10001_1. When the gNB and NR-UE determine that no signal is present in the 1_1-th direction, the gNB and NR-UE can use the 1_1-th direction for communication, for example, for modulation signal 9602_1 for frequency band ♭1 in first NR channel 10001_1.

Likewise, it is assumed that the gNB and NR-UE determine a direction not to be used for communication in frequency band bi in first NR channel 10001_1 (referred to as the 1_i-th direction) by using ""reception period 9401_1 for LBT processing for the first frequency band in FIG. 94A" in third NR channel 10001_3, for example".

Then, the gNB and NR-UE determine whether a signal is present in the 1_i-th direction in frequency band bi in first NR channel 10001_1 by using ""reception period 9601_1 for direction (beam) detection for the first frequency band in FIG. 96A" in third NR channel 10001_3, for example".

When the gNB and NR-UE determine that a signal is present in the 1_i-th direction, the gNB and NR-UE determine not to use the 1_i-th direction for communication, for example, for modulation signal 9602_i for frequency band bi in first NR channel 10001_1. When the gNB and NR-UE determine that no signal is present in the 1_i-th direction, the gNB and NR-UE can use the 1_i-th direction for communication, for example, for modulation signal 9602_i for frequency band bi in first NR channel 10001_1.

Note that "reception period 9601_1 for direction (beam) detection for the first frequency band" in third NR channel 10001_3 in FIG. 96A corresponds to "reception period 6801 for direction (beam) detection" in FIG. 68, "reception period 6901 for direction (beam) detection" in FIG. 69, and "reception period 7001 for direction (beam) detection" in FIG. 70, and thus more specific operations in "reception period 9601_1 for direction (beam) detection for the first frequency band" in third NR channel 10001_3 are as described in other embodiments.

It is assumed that the gNB and NR-UE determine a direction not to be used for communication in frequency band ♭1 in second NR channel 10001_2 (referred to as the 2_1-th direction) by using ""reception period 9401_1 for LBT processing for the first frequency band in FIG. 94A" in third NR channel 10001_3, for example".

Then, the gNB and NR-UE determine whether a signal is present in the 2_1-th direction in frequency band ♭1 in second NR channel 10001_2 by using ""reception period 9601_1 for direction (beam) detection for the first frequency band in FIG. 96A" in third NR channel 10001_3, for example".

When the gNB and NR-UE determine that a signal is present in the 2_1-th direction, the gNB and NR-UE determine not to use the 2_1-th direction for communication, for example, for modulation signal 9602_1 for frequency band ♭1 in second NR channel 10001_2. When the gNB and NR-UE determine that no signal is present in the 2_1-th direction, the gNB and NR-UE can use the 2_1-th direction for communication, for example, for modulation signal 9602_1 for frequency band ♭1 in second NR channel 10001_2.

Likewise, it is assumed that the gNB and NR-UE determine a direction not to be used for communication in frequency band bi in second NR channel 10001_2 (referred to as the 2_i-th direction) by using ""reception period 9601_1 for direction (beam) detection for the first frequency band" in FIG. 96A in third NR channel 10001_3, for example".

Then, the gNB and NR-UE determine whether a signal is present in the 2_i-th direction in frequency band bi in second NR channel 10001_2 by using ""reception period 9601_1 for direction (beam) detection for the first frequency band in FIG. 96A" in third NR channel 10001_3, for example".

When the gNB and NR-UE determine that a signal is present in the 2_i-th direction, the gNB and NR-UE determine not to use the 2_i-th direction for communication, for example, for modulation signal 9602_i for frequency band bi in second NR channel 10001_2. When the gNB and NR-UE determine that no signal is present in the 2_i-th direction, the gNB and NR-UE can use the 2_i-th direction for communication, for example, for modulation signal 9602_i for frequency band bi in second NR channel 10001_2.

Note that "reception period 9601_1 for direction (beam) detection for the first frequency band" in third NR channel 10001_3 in FIG. 96A corresponds to "reception period 6801 for direction (beam) detection" in FIG. 68, "reception period 6901 for direction (beam) detection" in FIG. 69, and "reception period 7001 for direction (beam) detection" in FIG. 70, and thus more specific operations in "reception period 9601_1 for direction (beam) detection for the first frequency band" in third NR channel 10001_3 are as described in other embodiments.

FIG. 96A illustrates an exemplary state of the gNB and NR-UE, and the horizontal axis represents time while the vertical axis represents frequency. On the frequency axis, there are "frequency band ♭1", "frequency band ♭2", "frequency band ♭3", ..., "frequency band ♭K" as illustrated in FIG. 96A. Note that K is an integer equal to or greater than 1. K being 1 indicates a single carrier scheme.

The gNB and NR-UE, for example, "perform the LBT and then transmit a modulation signal in each frequency band" in third NR channel 10001_3 as in FIG. 94A. The gNB and NR-UE also transmit a modulation signal in each frequency band in fourth NR channel 10001_4 and fifth NR channel 10001_5 as in FIG. 102B. FIG. 96A illustrates an exemplary state of the gNB and NR-UE in third NR channel 10001_3 after that.

Note that ""performing the LBT and then transmitting a modulation signal in each frequency band" in third NR channel 10001_3 as in FIG. 94A" is merely an example, and ""performing the LBT and then transmitting a modulation signal in each frequency band" in third NR channel 10001_3 as in FIGS. 88A, 94A, 95A, and the description in the present specification" is also possible.

In FIG. 94A, the gNB and NR-UE assume that there is a "direction in which a signal is present" (assume that there is a receive beam in which a signal is detected) in frequency band ♭1 in third NR channel 10001_3, and do not start communication in that direction.

Likewise, the gNB and NR-UE assume that there is a "direction in which a signal is present" (assume that there is a receive beam in which a signal is detected) in frequency band bi in third NR channel 10001_3, and do not start communication in that direction.

Note that frequency band bi in third NR channel 10001_3 belongs to second frequency band 9001_2 of the first standard in FIG. 100.

As in FIG. 96A, there is "reception period 9601_2 for direction (beam) detection for the second frequency band" in frequency band ♭4 to frequency band ♭K from time t11 to time t12 in third NR channel 10001_3.

"Reception period 9601_2 for direction (beam) detection for the second frequency band" in third NR channel 10001_3 in FIG. 96A corresponds to "reception period 6801 for direction (beam) detection" in FIG. 68, "reception period 6901 for direction (beam) detection" in FIG. 69, and "reception period 7001 for direction (beam) detection" in FIG. 70.

It is assumed that the gNB and NR-UE determine a direction not to be used for communication in frequency band bi (referred to as the 3_i-th direction) by using "reception period 9401_2 for LBT processing for the second frequency band in FIG. 94A" in third NR channel 10001_3. Note that frequency band bi in third NR channel 10001_3 belongs to second frequency band 9001_2 of the first standard in FIG. 100.

Then, the gNB and NR-UE determine whether a signal is present in the 3_i-th direction in frequency band bi in third NR channel 10001_3 by using "reception period 9601_2 for direction (beam) detection for the second frequency band" in FIG. 96A in third NR channel 10001_3.

When the gNB and NR-UE determine that a signal is present in the 3_i-th direction, the gNB and NR-UE determine not to use the 3_i-th direction for communication, for example, for modulation signal 9602_i for frequency band bi in third NR channel 10001_3. When the gNB and NR-UE determine that no signal is present in the i-th direction, the gNB and NR-UE can use the 3_i-th direction for communication, for example, for modulation signal 9602_i for frequency band bi in third NR channel 10001_3.

Note that frequency band bi in third NR channel 10001_3 belongs to second frequency band 9001_2 of the first standard in FIG. 100.

Note that "reception period 9601_2 for direction (beam) detection for the second frequency band" in third NR channel 10001_3 in FIG. 96A corresponds to "reception period 6801 for direction (beam) detection" in FIG. 68, "reception period 6901 for direction (beam) detection" in FIG. 69, and "reception period 7001 for direction (beam) detection" in FIG. 70, and thus more specific operations in "reception period 9601_2 for direction (beam) detection for the second frequency band" in third NR channel 10001_3 are as described in other embodiments.

Next, operations in fourth NR channel 10001_4 and fifth NR channel 10001_5 will be described. There is no direction (beam) detection period in fourth NR channel 10001_4 and fifth NR channel 10001_5, and thus the state of the gNB and NR-UE is as illustrated in FIG. 106B. Note that, in FIG. 106B, components that operate in the same manner as in FIGS. 93A and 93B are denoted by the same reference signs, and the description thereof will be omitted.

It is assumed that the gNB and NR-UE determine a direction not to be used for communication in frequency band ♭1 in fourth NR channel 10001_4 (referred to as the 4_1-th direction) by using ""reception period 9401_2 for LBT processing for the second frequency band in FIG. 94A" in third NR channel 10001_3, for example".

Then, the gNB and NR-UE determine whether a signal is present in the 4_1-th direction in frequency band ♭1 in fourth NR channel 10001_4 by using ""reception period 9601_2 for direction (beam) detection for the second frequency band" in FIG. 96A in third NR channel 10001_3, for example".

When the gNB and NR-UE determine that a signal is present in the 4_1-th direction, the gNB and NR-UE determine not to use the 4_1-th direction for communication, for example, for modulation signal 9602_1 for frequency band ♭1 in fourth NR channel 10001_4. When the gNB and NR-UE determine that no signal is present in the 4_1-th direction, the gNB and NR-UE can use the 4_1-th direction for communication, for example, for modulation signal 9602_1 for frequency band ♭1 in fourth NR channel 10001_4.

Likewise, it is assumed that the gNB and NR-UE determine a direction not to be used for communication in frequency band bi in fourth NR channel 10001_4 (referred to as the 4_i-th direction) by using ""reception period 9401_2 for LBT processing for the second frequency band in FIG. 94A" in third NR channel 10001_3, for example".

Then, the gNB and NR-UE determine whether a signal is present in the 4_i-th direction in frequency band bi in fourth NR channel 10001_4 by using ""reception period 9601_2 for direction (beam) detection for the second frequency band" in FIG. 96A in third NR channel 10001_3, for example".

When the gNB and NR-UE determine that a signal is present in the 4_i-th direction, the gNB and NR-UE determine not to use the 4_i-th direction for communication, for example, for modulation signal 9602_i for frequency band bi in fourth NR channel 10001_4. When the gNB and NR-UE determine that no signal is present in the 4_i-th direction, the gNB and NR-UE can use the 4_i-th direction for communication, for example, for modulation signal 9602_i for frequency band bi in fourth NR channel 10001_4.

Note that "reception period 9601_2 for direction (beam) detection for the second frequency band" in third NR channel 10001_3 in FIG. 96A corresponds to "reception period 6801 for direction (beam) detection" in FIG. 68, "reception period 6901 for direction (beam) detection" in FIG. 69, and "reception period 7001 for direction (beam) detection" in FIG. 70, and thus more specific operations in "reception period 9601_2 for direction (beam) detection for the second frequency band" in third NR channel 10001_3 are as described in other embodiments.

It is assumed that the gNB and NR-UE determine a direction not to be used for communication in frequency band ♭1 in fifth NR channel 10001_5 (referred to as the 5_1-th direction) by using ""reception period 9401_2 for LBT processing for the second frequency band in FIG. 94A" in third NR channel 10001_3, for example".

Then, the gNB and NR-UE determine whether a signal is present in the 5_1-th direction in frequency band ♭1 in fifth NR channel 10001_5 by using ""reception period 9601_2 for direction (beam) detection for the second frequency band" in FIG. 96A in third NR channel 10001_3, for example".

When the gNB and NR-UE determine that a signal is present in the 5_1-th direction, the gNB and NR-UE determine not to use the 5_1-th direction for communication, for example, for modulation signal 9602_1 for frequency band ♭1 in fifth NR channel 10001_5. When the gNB and NR-UE determine that no signal is present in the 5_1-th direction, the gNB and NR-UE can use the 5_1-th direction for communication, for example, for modulation signal 9602_1 for frequency band ♭1 in fifth NR channel 10001_5.

Likewise, it is assumed that the gNB and NR-UE determine a direction not to be used for communication in frequency band bi in fifth NR channel 10001_5 (referred to as the 5_i-th direction) by using ""reception period 9601_2 for direction (beam) detection for the second frequency band" in FIG. 96A in third NR channel 10001_3, for example".

Then, the gNB and NR-UE determine whether a signal is present in the 5_i-th direction in frequency band bi in fifth NR channel 10001_5 by using ""reception period 9601_2 for direction (beam) detection for the second frequency band" in FIG. 96A in third NR channel 10001_3, for example".

When the gNB and NR-UE determine that a signal is present in the 5_i-th direction, the gNB and NR-UE determine not to use the 5_i-th direction for communication, for example, for modulation signal 9602_i for frequency band bi in fifth NR channel 10001_5. When the gNB and NR-UE determine that no signal is present in the 5_i-th direction, the gNB and NR-UE can use the 5_i-th direction for communication, for example, for modulation signal 9602_i for frequency band bi in fifth NR channel 10001_5.

Note that "reception period 9601_2 for direction (beam) detection for the second frequency band" in third NR channel 10001_3 in FIG. 96A corresponds to "reception period 6801 for direction (beam) detection" in FIG. 68, "reception period 6901 for direction (beam) detection" in FIG. 69, and "reception period 7001 for direction (beam) detection" in FIG. 70, and thus more specific operations in "reception period 9601_2 for direction (beam) detection for the second frequency band" in third NR channel 10001_3 are as described in other embodiments.

Although FIGS. 96A, 106A, and 106B have been described as an exemplary state of the gNB and NR-UE, the state is not limited to these. For example, there may be a time period in which a communication counterpart transmits a modulation signal. Further, the transmission timings of modulation signals by the gNB and NR-UE are not limited to the timings in FIGS. 96A, 106A, and 106B.

The names of signals, frames, etc. in FIGS. 96A, 106A, and 106B are not limited to those in the drawings, and other names may be used.

Operations related to FIG. 96BA will be described below.

FIG. 96B illustrates an exemplary state of the gNB and NR-UE, and the horizontal axis represents time while the vertical axis represents frequency. On the frequency axis, there are "frequency band ♭1", "frequency band ♭2", "frequency band ♭3", ..., "frequency band ♭K" as illustrated in FIG. 96B. Note that K is an integer equal to or greater than 1. K being 1 indicates a single carrier scheme.

The gNB and NR-UE, for example, "perform the LBT and then transmit a modulation signal in each frequency band" in third NR channel 10001_3 as in FIG. 95A. The gNB and NR-UE also transmit a modulation signal in each frequency band in first NR channel 10001_1 and second NR channel 10001_2 as in FIG. 102A. FIG. 96B illustrates an exemplary state of the gNB and NR-UE in third NR channel 10001_3 after that.

Note that ""performing the LBT and then transmitting a modulation signal in each frequency band" in third NR channel 10001_3 as in FIG. 95A" is merely an example, and ""performing the LBT and then transmitting a modulation signal in each frequency band" in third NR channel 10001_3 as in FIGS. 88A, 94A, 95A, and the description in the present specification" is also possible.

In FIG. 95A, the gNB and NR-UE assume that there is a "direction in which a signal is present" (assume that there is a receive beam in which a signal is detected) in frequency band ♭1 in third NR channel 10001_3, and do not start communication in that direction.

Likewise, the gNB and NR-UE assume that there is a "direction in which a signal is present" (assume that there is a receive beam in which a signal is detected) in frequency band bi in third NR channel 10001_3, and do not start communication in that direction.

Note that frequency band bi in third NR channel 10001_3 belongs to first frequency band 9001_1 of the first standard in FIG. 100.

As in FIG. 96B, there is "reception period 9603_1 for direction (beam) detection for the first frequency band" within a range "from frequency band ♭1 to frequency band ♭3" from time t11 to time t12 in third NR channel 10001_3.

"Reception period 9603_1 for direction (beam) detection for the first frequency band" in third NR channel 10001_3 in FIG. 96B corresponds to "reception period 6801 for direction (beam) detection" in FIG. 68, "reception period 6901 for direction (beam) detection" in FIG. 69, and "reception period 7001 for direction (beam) detection" in FIG. 70.

It is assumed that the gNB and NR-UE determine a direction not to be used for communication in frequency band ♭1 (referred to as the 3_1-th direction) by using "reception period 9403_1 for LBT processing for the first frequency band in FIG. 95A" in third NR channel 10001_3.

Then, the gNB and NR-UE determine whether a signal is present in the 3_1-th direction in frequency band ♭1 in third NR channel 10001_3 by using "reception period 9603_1 for direction (beam) detection for the first frequency band" in FIG. 96B in third NR channel 10001_3.

When the gNB and NR-UE determine that a signal is present in the 3_1-th direction, the gNB and NR-UE determine not to use the 3_1-th direction for communication, for example, for modulation signal 9602_1 for frequency band ♭1 in third NR channel 10001_3. When the gNB and NR-UE determine that no signal is present in the 3_1-th direction, the gNB and NR-UE can use the 3_1-th direction for communication, for example, for modulation signal 9602_1 for frequency band ♭1 in third NR channel 10001_3.

Likewise, it is assumed that the gNB and NR-UE determine a direction not to be used for communication in frequency band bi (referred to as the 3_i-th direction) by using "reception period 9403_1 for LBT processing for the first frequency band in FIG. 95A" in third NR channel 10001_3. Note that frequency band ♭i in third NR channel 10001_3 belongs to first frequency band 9001_1 of the first standard in FIG. 100.

Then, the gNB and NR-UE determine whether a signal is present in the 3_i-th direction in frequency band bi in third NR channel 10001_3 by using "reception period 9603_1 for direction (beam) detection for the first frequency band" in FIG. 96B in third NR channel 10001_3.

When the gNB and NR-UE determine that a signal is present in the 3_i-th direction, the gNB and NR-UE determine not to use the 3_i-th direction for communication, for example, for modulation signal 9602_i for frequency band bi in third NR channel 10001_3. When the gNB and NR-UE determine that no signal is present in the i-th direction, the gNB and NR-UE can use the 3_i-th direction for communication, for example, for modulation signal 9602_i for frequency band bi in third NR channel 10001_3.

Note that frequency band bi in third NR channel 10001_3 belongs to first frequency band 9001_1 of the first standard in FIG. 100.

Note that "reception period 9603_1 for direction (beam) detection for the first frequency band" in third NR channel 10001_3 in FIG. 96B corresponds to "reception period 6801 for direction (beam) detection" in FIG. 68, "reception period 6901 for direction (beam) detection" in FIG. 69, and "reception period 7001 for direction (beam) detection" in FIG. 70, and thus more specific operations in "reception period 9603_1 for direction (beam) detection for the first frequency band" in third NR channel 10001_3 are as described in other embodiments.

Next, operations in first NR channel 10001_1 and second NR channel 10001_2 will be described. There is no direction (beam) detection period in first NR channel 10001_1 and second NR channel 10001_2, and thus the state of the gNB and NR-UE is as illustrated in FIG. 106A. Note that, in FIG. 106A, components that operate in the same manner as in FIGS. 93A and 93B are denoted by the same reference signs, and the description thereof will be omitted.

It is assumed that the gNB and NR-UE determine a direction not to be used for communication in frequency band ♭1 in first NR channel 10001_1 (referred to as the 1_1-th direction) by using ""reception period 9403_1 for LBT processing for the first frequency band in FIG. 95A" in third NR channel 10001_3, for example".

Then, the gNB and NR-UE determine whether a signal is present in the 1_1-th direction in frequency band ♭1 in first NR channel 10001_1 by using ""reception period 9603_1 for direction (beam) detection for the first frequency band in FIG. 96B" in third NR channel 10001_3, for example".

When the gNB and NR-UE determine that a signal is present in the 1_1-th direction, the gNB and NR-UE determine not to use the 1_1-th direction for communication, for example, for modulation signal 9602_1 for frequency band ♭1 in first NR channel 10001_1. When the gNB and NR-UE determine that no signal is present in the 1_1-th direction, the gNB and NR-UE can use the 1_1-th direction for communication, for example, for modulation signal 9602_1 for frequency band ♭1 in first NR channel 10001_1.

Likewise, it is assumed that the gNB and NR-UE determine a direction not to be used for communication in frequency band bi in first NR channel 10001_1 (referred to as the 1_i-th direction) by using ""reception period 9403_1 for LBT processing for the first frequency band in FIG. 95A" in third NR channel 10001_3, for example".

Then, the gNB and NR-UE determine whether a signal is present in the 1_i-th direction in frequency band bi in first NR channel 10001_1 by using ""reception period 9603_1 for direction (beam) detection for the first frequency band in FIG. 96B" in third NR channel 10001_3, for example".

When the gNB and NR-UE determine that a signal is present in the 1_i-th direction, the gNB and NR-UE determine not to use the 1_i-th direction for communication, for example, for modulation signal 9602_i for frequency band bi in first NR channel 10001_1. When the gNB and NR-UE determine that no signal is present in the 1_i-th direction, the gNB and NR-UE can use the 1_i-th direction for communication, for example, for modulation signal 9602_i for frequency band bi in first NR channel 10001_1.

Note that "reception period 9603_1 for direction (beam) detection for the first frequency band" in third NR channel 10001_3 in FIG. 96B corresponds to "reception period 6801 for direction (beam) detection" in FIG. 68, "reception period 6901 for direction (beam) detection" in FIG. 69, and "reception period 7001 for direction (beam) detection" in FIG. 70, and thus more specific operations in "reception period 9603_1 for direction (beam) detection for the first frequency band" in third NR channel 10001_3 are as described in other embodiments.

It is assumed that the gNB and NR-UE determine a direction not to be used for communication in frequency band ♭1 in second NR channel 10001_2 (referred to as the 2_1-th direction) by using ""reception period 9403_1 for LBT processing for the first frequency band in FIG. 95A" in third NR channel 10001_3, for example".

Then, the gNB and NR-UE determine whether a signal is present in the 2_1-th direction in frequency band ♭1 in second NR channel 10001_2 by using ""reception period 9603_1 for direction (beam) detection for the first frequency band in FIG. 96B" in third NR channel 10001_3, for example".

When the gNB and NR-UE determine that a signal is present in the 2_1-th direction, the gNB and NR-UE determine not to use the 2_1-th direction for communication, for example, for modulation signal 9602_1 for frequency band ♭1 in second NR channel 10001_2. When the gNB and NR-UE determine that no signal is present in the 2_1-th direction, the gNB and NR-UE can use the 2_1-th direction for communication, for example, for modulation signal 9602_1 for frequency band ♭1 in second NR channel 10001_2.

Likewise, it is assumed that the gNB and NR-UE determine a direction not to be used for communication in frequency band bi in second NR channel 10001_2 (referred to as the 2_i-th direction) by using ""reception period 9603_1 for direction (beam) detection for the first frequency band" in FIG. 96B in third NR channel 10001_3, for example".

Then, the gNB and NR-UE determine whether a signal is present in the 2_i-th direction in frequency band bi in second NR channel 10001_2 by using ""reception period 9603_1 for direction (beam) detection for the first frequency band in FIG. 96B" in third NR channel 10001_3, for example".

When the gNB and NR-UE determine that a signal is present in the 2_i-th direction, the gNB and NR-UE determine not to use the 2_i-th direction for communication, for example, for modulation signal 9602_i for frequency band bi in second NR channel 10001_2. When the gNB and NR-UE determine that no signal is present in the 2_i-th direction, the gNB and NR-UE can use the 2_i-th direction for communication, for example, for modulation signal 9602_i for frequency band bi in second NR channel 10001_2.

Note that "reception period 9603_1 for direction (beam) detection for the first frequency band" in third NR channel 10001_3 in FIG. 96B corresponds to "reception period 6801 for direction (beam) detection" in FIG. 68, "reception period 6901 for direction (beam) detection" in FIG. 69, and "reception period 7001 for direction (beam) detection" in FIG. 70, and thus more specific operations in "reception period 9603_1 for direction (beam) detection for the first frequency band" in third NR channel 10001_3 are as described in other embodiments.

FIG. 96B illustrates an exemplary state of the gNB and NR-UE, and the horizontal axis represents time while the vertical axis represents frequency. On the frequency axis, there are "frequency band ♭1", "frequency band ♭2", "frequency band ♭3", ..., "frequency band ♭K" as illustrated in FIG. 96B. Note that K is an integer equal to or greater than 1. K being 1 indicates a single carrier scheme.

The gNB and NR-UE, for example, "perform the LBT and then transmit a modulation signal in each frequency band" in third NR channel 10001_3 as in FIG. 95A. The gNB and NR-UE also transmit a modulation signal in each frequency band in fourth NR channel 10001_4 and fifth NR channel 10001_5 as in FIG. 102B. FIG. 96B illustrates an exemplary state of the gNB and NR-UE in third NR channel 10001_3 after that.

Note that ""performing the LBT and then transmitting a modulation signal in each frequency band" in third NR channel 10001_3 as in FIG. 95A" is merely an example, and ""performing the LBT and then transmitting a modulation signal in each frequency band" in third NR channel 10001_3 as in FIGS. 88A, 94A, 95A, and the description in the present specification" is also possible.

In FIG. 95A, the gNB and NR-UE assume that there is a "direction in which a signal is present" (assume that there is a receive beam in which a signal is detected) in frequency band ♭1 in third NR channel 10001_3, and do not start communication in that direction.

Likewise, the gNB and NR-UE assume that there is a "direction in which a signal is present" (assume that there is a receive beam in which a signal is detected) in frequency band bi in third NR channel 10001_3, and do not start communication in that direction.

Note that frequency band bi in third NR channel 10001_3 belongs to second frequency band 9001_2 of the first standard in FIG. 100.

As in FIG. 96B, there is "reception period 9603_2 for direction (beam) detection for the second frequency band" within a range from frequency band ♭4 to frequency band ♭K from time t11 to time t12 in third NR channel 10001_3.

"Reception period 9603_2 for direction (beam) detection for the second frequency band" in third NR channel 10001_3 in FIG. 96B corresponds to "reception period 6801 for direction (beam) detection" in FIG. 68, "reception period 6901 for direction (beam) detection" in FIG. 69, and "reception period 7001 for direction (beam) detection" in FIG. 70.

It is assumed that the gNB and NR-UE determine a direction not to be used for communication in frequency band bi (referred to as the 3_i-th direction) by using "reception period 9403_2 for LBT processing for the second frequency band in FIG. 95A" in third NR channel 10001_3. Note that frequency band bi in third NR channel 10001_3 belongs to second frequency band 9001_2 of the first standard in FIG. 100.

Then, the gNB and NR-UE determine whether a signal is present in the 3_i-th direction in frequency band bi in third NR channel 10001_3 by using "reception period 9603_2 for direction (beam) detection for the second frequency band" in FIG. 96B in third NR channel 10001_3.

When the gNB and NR-UE determine that a signal is present in the 3_i-th direction, the gNB and NR-UE determine not to use the 3_i-th direction for communication, for example, for modulation signal 9602_i for frequency band ♭i in third NR channel 10001_3. When the gNB and NR-UE determine that no signal is present in the i-th direction, the gNB and NR-UE can use the 3_i-th direction for communication, for example, for modulation signal 9602_i for frequency band ♭i in third NR channel 10001_3.

Note that frequency band ♭i in third NR channel 10001_3 belongs to second frequency band 9001_2 of the first standard in FIG. 100.

Note that "reception period 9603_2 for direction (beam) detection for the second frequency band" in third NR channel 10001_3 in FIG. 96B corresponds to "reception period 6801 for direction (beam) detection" in FIG. 68, "reception period 6901 for direction (beam) detection" in FIG. 69, and "reception period 7001 for direction (beam) detection" in FIG. 70, and thus more specific operations in "reception period 9603_2 for direction (beam) detection for the second frequency band" in third NR channel 10001_3 are as described in other embodiments.

Next, operations in fourth NR channel 10001_4 and fifth NR channel 10001_5 will be described. There is no direction (beam) detection period in fourth NR channel 10001_4 and fifth NR channel 10001_5, and thus the state of the gNB and NR-UE is as illustrated in FIG. 106B. Note that, in FIG. 106B, components that operate in the same manner as in FIGS. 93A and 93B are denoted by the same reference signs, and the description thereof will be omitted.

It is assumed that the gNB and NR-UE determine a direction not to be used for communication in frequency band ♭1 in fourth NR channel 10001_4 (referred to as the 4_1-th direction) by using ""reception period 9403_2 for LBT processing for the second frequency band in FIG. 95A" in third NR channel 10001_3, for example".

Then, the gNB and NR-UE determine whether a signal is present in the 4_1-th direction in frequency band ♭1 in fourth NR channel 10001 4 by using ""reception period 9603_2 for direction (beam) detection for the second frequency band" in FIG. 96B in third NR channel 10001_3, for example".

When the gNB and NR-UE determine that a signal is present in the 4_1-th direction, the gNB and NR-UE determine not to use the 4_1-th direction for communication, for example, for modulation signal 9602_1 for frequency band ♭1 in fourth NR channel 10001_4. When the gNB and NR-UE determine that no signal is present in the 4_1-th direction, the gNB and NR-UE can use the 4_1-th direction for communication, for example, for modulation signal 9602_1 for frequency band ♭1 in fourth NR channel 10001_4.

Likewise, it is assumed that the gNB and NR-UE determine a direction not to be used for communication in frequency band ♭i in fourth NR channel 10001 4 (referred to as the 4_i-th direction) by using ""reception period 9403_2 for LBT processing for the second frequency band in FIG. 95A" in third NR channel 10001_3, for example".

Then, the gNB and NR-UE determine whether a signal is present in the 4_i-th direction in frequency band ♭i in fourth NR channel 10001 4 by using ""reception period 9603_2 for direction (beam) detection for the second frequency band" in FIG. 96B in third NR channel 10001_3, for example".

When the gNB and NR-UE determine that a signal is present in the 4_i-th direction, the gNB and NR-UE determine not to use the 4_i-th direction for communication, for example, for modulation signal 9602_i for frequency band ♭i in fourth NR channel 10001_4. When the gNB and NR-UE determine that no signal is present in the 4_i-th direction, the gNB and NR-UE can use the 4_i-th direction for communication, for example, for modulation signal 9602_i for frequency band ♭i in fourth NR channel 10001_4.

Note that "reception period 9603_2 for direction (beam) detection for the second frequency band" in third NR channel 10001_3 in FIG. 96B corresponds to "reception period 6801 for direction (beam) detection" in FIG. 68, "reception period 6901 for direction (beam) detection" in FIG. 69, and "reception period 7001 for direction (beam) detection" in FIG. 70, and thus more specific operations in "reception period 9603_2 for direction (beam) detection for the second frequency band" in third NR channel 10001_3 are as described in other embodiments.

It is assumed that the gNB and NR-UE determine a direction not to be used for communication in frequency band ♭1 in fifth NR channel 10001_5 (referred to as the 5_1-th direction) by using ""reception period 9403_2 for LBT processing for the second frequency band in FIG. 95A" in third NR channel 10001_3, for example".

Then, the gNB and NR-UE determine whether a signal is present in the 5_1-th direction in frequency band ♭1 in fifth NR channel 10001_5 by using ""reception period 9603_2 for direction (beam) detection for the second frequency band" in FIG. 96B in third NR channel 10001_3, for example".

When the gNB and NR-UE determine that a signal is present in the 5_1-th direction, the gNB and NR-UE determine not to use the 5_1-th direction for communication, for example, for modulation signal 9602_1 for frequency band ♭1 in fifth NR channel 10001_5. When the gNB and NR-UE determine that no signal is present in the 5_1-th direction, the gNB and NR-UE can use the 5_1-th direction for communication, for example, for modulation signal 9602_1 for frequency band ♭1 in fifth NR channel 10001_5.

Likewise, it is assumed that the gNB and NR-UE determine a direction not to be used for communication in frequency band ♭i in fifth NR channel 10001_5 (referred to as the 5_i-th direction) by using ""reception period 9603_2 for direction (beam) detection for the second frequency band" in FIG. 96B in third NR channel 10001_3, for example".

Then, the gNB and NR-UE determine whether a signal is present in the 5_i-th direction in frequency band ♭i in fifth NR channel 10001_5 by using ""reception period 9603_2 for direction (beam) detection for the second frequency band" in FIG. 96B in third NR channel 10001_3, for example".

When the gNB and NR-UE determine that a signal is present in the 5_i-th direction, the gNB and NR-UE determine not to use the 5_i-th direction for communication, for example, for modulation signal 9602_i for frequency band ♭i in fifth NR channel 10001_5. When the gNB and NR-UE determine that no signal is present in the 5_i-th direction, the gNB and NR-UE can use the 5_i-th direction for communication, for example, for modulation signal 9602_i for frequency band ♭i in fifth NR channel 10001_5.

Note that "reception period 9603_2 for direction (beam) detection for the second frequency band" in third NR channel 10001_3 in FIG. 96B corresponds to "reception period 6801 for direction (beam) detection" in FIG. 68, "reception period 6901 for direction (beam) detection" in FIG. 69, and "reception period 7001 for direction (beam) detection" in FIG. 70, and thus more specific operations in "reception period 9603_2 for direction (beam) detection for the second frequency band" in third NR channel 10001_3 are as described in other embodiments.

Although FIGS. 96B, 106A, and 106B have been described as an exemplary state of the gNB and NR-UE, the state is not limited to these. For example, there may be a time period in which a communication counterpart transmits a modulation signal. Further, the transmission timings of modulation signals by the gNB and NR-UE are not limited to the timings in FIGS. 96B, 106A, and 106B.

The names of signals, frames, etc. in FIGS. 96B, 106A, and 106B are not limited to those in the drawings, and other names may be used.

Note that, unlike FIGS. 96A, and 96B, the reception period for direction (beam) detection for the first frequency band may have frequency bands broader or narrower than frequency band ♭1 to frequency band ♭3. In addition, the reception period for direction (beam) detection for the second frequency band may have frequency bands broader or narrower than frequency band ♭4 to frequency band ♭K.

The above procedure allows the gNB and NR-UE to perform the LBT, detect a signal of the first standard, and accordingly control communication performed by themselves, thereby producing the effect of improving the system data throughput of a system including the gNB, NR-UE, etc.

In addition, the determination of a direction, a beam, and an antenna to be used for communication by the gNB and NR-UE according to the presence of a signal of the first standard produces the effect of improving the system data throughput of a system including the gNB, NR-UE, etc.

Further, fine control of the frequency granularity allows the gNB and NR-UE to perform the LBT and select a frequency and a direction in which communication can be started with little interference, thereby producing the effect of improving the system data throughput of a system including the gNB, NR-UE, etc.

In addition, the determination of a direction, a beam, and an antenna to be used for communication by the gNB and NR-UE produces the effect of improving the system data throughput of a system including the gNB, NR-UE, etc.

Note that the processing described in the present embodiment or a part of the processing is performed by the transmission/reception apparatus in FIG. 53 or FIG. 54. The configurations of the gNB and NR-UE, however, are not limited to the configurations in FIGS. 53 and 54.

Next, a variation related to the above will be described.

FIG. 97 illustrates an exemplary system. It is assumed that gNB #1 labeled 9701_1 and NR-UE #1 labeled 9702_1 perform the LBT to start communication. At this time, for example, first standard AP 9711 and first standard terminal 9712 possibly interfere with gNB #1 labeled 9701_1 and NR-UE #1 labeled 9702_1. In addition, gNB #2 labeled 9701_2 and NR-UE #2 labeled 9702_2 possibly interfere with gNB #1 labeled 9701_1 and NR-UE #1 labeled 9702_1.

The "LBT and direction detection after starting communication" of the present embodiment enable accurate detection of a modulation signal of the first standard in particular. Meanwhile, consideration is necessary in terms of the point where "gNB #1 labeled 9701_1 and NR-UE #1 labeled 9702_1 accurately detect a modulation signal transmitted by gNB #2 labeled 9701_2 and NR-UE #2 labeled 9702_2". This will be described below.

FIG. 98 illustrates exemplary LBT performed by gNB #1 labeled 9701_1 and NR-UE #1 labeled 9702_1, for example. Note that the horizontal axis represents time in FIG. 98.

As illustrated in FIG. 98, gNB #1 labeled 9701_1 and NR-UE #1 labeled 9702_1 perform the I-th LBT in I-th LBT implementation period 9801, and when determining that communication can be started, perform the II-th LBT in II-th LBT implementation period 9802. Then, when determining that communication can be started, gNB #1 labeled 9701_1 and NR-UE #1 labeled 9702_1 start communication.

Note that gNB #1 labeled 9701_1 and NR-UE #1 labeled 9702_1 may determine not to start communication after performing the I-th LBT in I-th LBT implementation period 9801. Likewise, gNB #1 labeled 9701_1 and NR-UE #1 labeled 9702_1 may determine not to start communication after performing the II-th LBT in II-th LBT implementation period 9802.

At this time, the I-th LBT performed in I-th LBT implementation period 9801 is LBT for detecting a modulation signal transmitted by a first standard apparatus (AP, terminal, repeater, etc.). Thus, the LBT described in the present embodiment is performed in the I-th LBT. Note that the detailed operations have already been described, and thus the description thereof will be omitted.

In contrast, the II-th LBT performed in II-th LBT implementation period 9802 is LBT for detecting a modulation signal transmitted by an NR apparatus (gNB, NR-UE, repeater, etc.) (and/or a modulation signal transmitted by an apparatus of another standard). Thus, LBT that is other than the I-th LBT and described in other embodiments is performed in the II-th LBT, for example. Note that, in FIG. 100, whether to start communication is determined in the II-th LBT by performing the LBT for each NR channel.

For example, an NR apparatus performs the LBT for first NR channel 10001_1 by performing the II-th LBT, and determines whether to start communication.

Likewise, the NR apparatus performs the LBT for second NR channel 10001_2 by performing the II-th LBT, and determines whether to start communication.

Then, the NR apparatus performs the LBT for third NR channel 10001_3 by performing the II-th LBT, and determines whether to start communication. The NR apparatus performs the LBT for fourth NR channel 10001_4 by performing the II-th LBT, and determines whether to start communication. The NR apparatus performs the LBT for fifth NR channel 10001_5 by performing the II-th LBT, and determines whether to start communication.

This allows the gNB and NR-UE to detect modulation signals of a plurality of standards and control the start of communication, thereby reducing interference during communication, improving the data transmission rate, and enhancing the data reception quality.

Note that, in FIG. 98, the order of I-th LBT implementation period 9801 and II-th LBT implementation period 9802 may be reversed on the time axis. Further, in FIG. 98, there may be a modulation signal transmission period of the gNB and NR-UE and a modulation signal period of the gNB and NR-UE after II-th LBT implementation period 9802 and I-th LBT implementation period 9801.

FIG. 99 illustrates exemplary direction detection performed by gNB #1 labeled 9701_1 and NR-UE #1 labeled 9702_1, for example. Note that the horizontal axis represents time in FIG. 99.

As illustrated in FIG. 99, gNB #1 labeled 9701_1 and NR-UE #1 labeled 9702_1 perform the I-th direction (beam) detection in I-th "direction (beam) detection" period 9901, and then perform the II-th direction (beam) detection in the II-th "direction (beam) detection" period 9902.

At this time, the I-th direction (beam) detection performed in I-th "direction (beam) detection" period 9901 is "direction (beam) detection" for detecting a direction (beam) of a modulation signal transmitted by a first standard apparatus (AP, terminal, repeater, etc.). Thus, the "direction (beam) detection" described in the present embodiment is performed in the I-th direction (beam) detection. Note that the control to be performed at the time of direction (beam) detection has already been described, and thus the description thereof will be omitted.

In contrast, the II-th direction (beam) detection performed in the II-th "direction (beam) detection" period 9902 is "direction (beam) detection" for detecting a direction (beam) of a modulation signal transmitted by an NR apparatus (gNB, NR-UE, repeater, etc.) (and/or a modulation signal transmitted by an apparatus of another standard). Thus, the direction (beam) detection that is other than the I-th direction (beam) detection and described in other embodiments is performed in the II-th direction (beam) detection, for example.

Note that the control to be performed at the time of direction (beam) detection has already been described, and thus the description thereof will be omitted. Note that, in FIG. 100, the II-th direction (beam) detection is performed for each NR channel and the control to be performed at the time of direction (beam) detection is performed.

For example, in the II-th direction (beam) detection, an NR apparatus performs the II-th direction (beam) detection for first NR channel 10001_1 and performs the control to be performed at the time of direction (beam) detection.

Likewise, in the II-th direction (beam) detection, the NR apparatus performs the II-th direction (beam) detection for second NR channel 10001_2 and performs the control to be performed at the time of direction (beam) detection.

Then, in the II-th direction (beam) detection, the NR apparatus performs the II-th direction (beam) detection for third NR channel 10001_3 and performs the control to be performed at the time of direction (beam) detection. In the II-th direction (beam) detection, the NR apparatus performs the II-th direction (beam) detection for fourth NR channel 10001_4 and performs the control to be performed at the time of direction (beam) detection. In the II-th direction (beam) detection, the NR apparatus performs the II-th direction (beam) detection for fifth NR channel 10001_5 and performs the control to be performed at the time of direction (beam) detection.

This allows the gNB and NR-UE to detect modulation signals of a plurality of standards and control the communication state, thereby reducing interference during communication, improving the data transmission rate, and enhancing the data reception quality. This enables efficient use of directions and beams and produces the effect of improving the data transmission efficiency of a system.

Note that, in FIG. 99, the order of I-th "direction (beam) detection" period 9901 and II-th "direction (beam) detection" period 9902 may be reversed on the time axis. Further, in FIG. 99, there may be a modulation signal transmission period of the gNB and NR-UE and a modulation signal period of the gNB and NR-UE after I-th "direction (beam) detection" period 9901 and II-th "direction (beam) detection" period 9902.

The processing described in the present embodiment or a part of the processing is performed by the transmission/reception apparatus in FIG. 53 or FIG. 54. The configurations of the gNB and NR-UE, however, are not limited to the configurations in FIGS. 53 and 54.

(Embodiment 21)

In Embodiments 1 to 6, descriptions have been given of the case where "the gNB and NR-UE transmit an OFDMA modulation signal and a multi-carrier modulation signal" and the case where "the gNB and NR-UE transmit a sector sweep signal and a sector sweep reference signal at the time of OFDMA and multi-carrier". In Embodiment 21, variations of an LBT method etc. in these cases will be described.

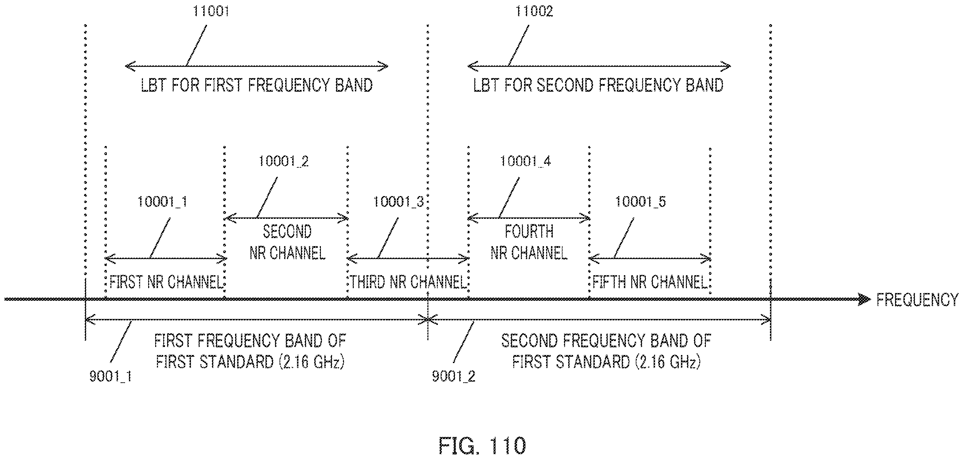

FIG. 110 illustrates exemplary frequency allocation in the present embodiment, and the horizontal axis represents frequency. Note that, in FIG. 110, components that operate in the same manner as in FIGS. 90 and 100 are denoted by the same reference signs, and part of the description will be omitted. The frequency location of the first standard and the NR channel location are the same as in FIG. 100.

As in FIG. 110, for example, an NR apparatus such as a gNB and NR-UE handles a modulation signal of first NR channel 10001_1, a modulation signal of second NR channel 10001_2, a modulation signal of third NR channel 10001_3, a modulation signal of fourth NR channel 10001_4, and a modulation signal of fifth NR channel 10001_5. In the case of FIG. 110, provided are LBT 11001 for the first frequency band for first frequency band 9001_1 of the first standard and LBT 11002 for the second frequency band for second frequency band 9001_2 of the first standard. In the following, exemplary operations will be described.

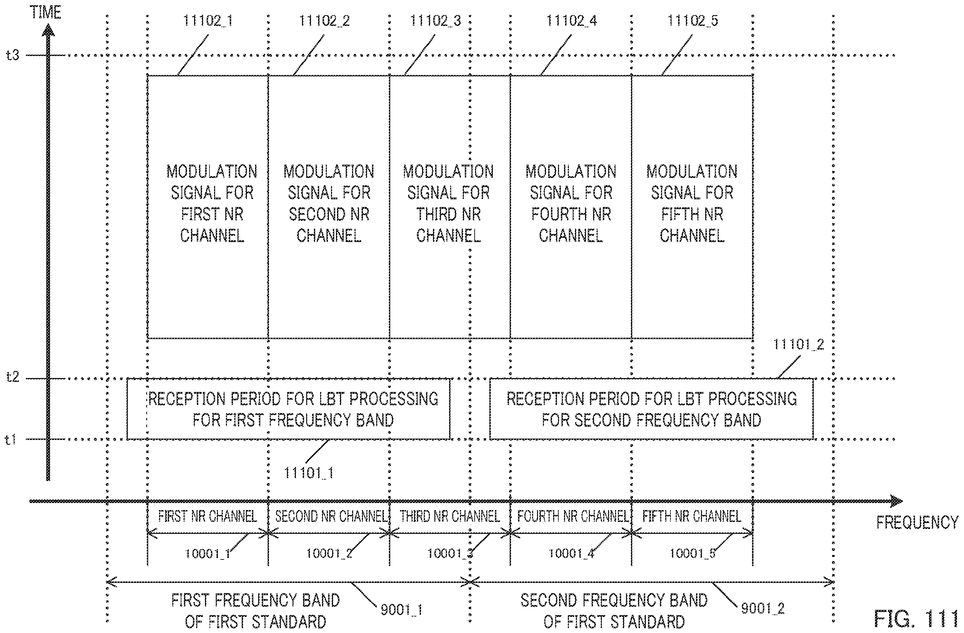

FIG. 111 illustrates exemplary state of the gNB and NR-UE, and the horizontal axis represents frequency while the vertical axis represents time. Note that FIG. 111 illustrates first frequency band 9001_1 of the first standard, second frequency band 9001_2 of the first standard, first NR channel 10001_1, second NR channel 10001_2, third NR channel 10001_3, fourth NR channel 10001_4, and fifth NR channel 10001_5 illustrated in FIG. 110. When transmitting a modulation signal, the gNB and NR-UE may use multi-carrier transmission such as OFDM or a single-carrier scheme.

A period for performing the LBT by the gNB and NR-UE in first frequency band 9001_1 of the first standard is "reception period 11101_1 for LBT processing for the first frequency band" in FIG. 111. A period for performing the LBT by the gNB and NR-UE in second frequency band 9001_2 of the first standard is "reception period 11101_2 for LBT processing for the second frequency band" in FIG. 111.

The gNB and NR-UE perform the LBT in "reception period 11101_1 for LBT processing for the first frequency band" and determine whether to start communication in "first NR channel 10001_1, second NR channel 10001_2, and part of third NR channel 10001_3" based on the result.

When the gNB and NR-UE determine not to perform communication in first frequency band 9001_1 of the first standard, the gNB and NR-UE do not transmit modulation signal 11102_1 for the first NR channel, modulation signal 11102_2 for the second NR channel, and part of modulation signal 11102_3 for the third NR channel in FIG. 111.

When the gNB and NR-UE determine to perform communication in first frequency band 9001_1 of the first standard, the gNB and NR-UE determine an NR channel to be used, a frequency (carrier) to be used, and a beam (directivity) to be used, select an appropriate resource from "modulation signal 11102_1 for the first NR channel, modulation signal 11102_2 for the second NR channel, and part of modulation signal 11102_3 for the third NR channel", and transmit a modulation signal.

Then, the gNB and NR-UE perform the LBT in "reception period 11101_2 for LBT processing for the second frequency band" and determine whether to start communication in "part of third NR channel 10001_3, fourth NR channel 10001_4, and fifth NR channel 10001_5" based on the result.

When the gNB and NR-UE determine not to perform communication in second frequency band 9001_2 of the first standard, the gNB and NR-UE do not transmit modulation signal 11102_4 for the fourth NR channel, modulation signal 11102_5 for the fifth NR channel, and part of modulation signal 11102_3 for the third NR channel in FIG. 111.

When the gNB and NR-UE determine to perform communication in second frequency band 9001_2 of the first standard, the gNB and NR-UE determine an NR channel to be used, a frequency (carrier) to be used, and a beam (directivity) to be used, select an appropriate resource from "modulation signal 11102_4 for the fourth NR channel, modulation signal 11102_5 for the fifth NR channel, and part of modulation signal 11102_3 for the third NR channel", and transmit a modulation signal.

Embodiment 8 has a description of the case of "performing the LBT and not transmitting a sector sweep reference signal using an antenna that has detected a signal" with reference to FIG. 62A. The processing of "performing the LBT and not transmitting a sector sweep reference signal using an antenna that has detected a signal" may be performed in first NR channel 10001_1, second NR channel 10001_2, third NR channel 10001_3, fourth NR channel 10001_4, and fifth NR channel 10001_5 in FIGS. 110 and 111.

Embodiment 8 also has a description of the case of "performing the LBT and not transmitting a sector sweep reference signal using a beam in which a signal has detected" with reference to FIG. 62B. The processing of "performing the LBT and not transmitting a sector sweep reference signal using a beam in which a signal has detected" may be performed in first NR channel 10001_1, second NR channel 10001_2, third NR channel 10001_3, fourth NR channel 10001_4, and fifth NR channel 10001_5 in FIGS. 110 and 111.

Embodiments 8, 9, and 10 have a description of "the gNB and NR-UE perform the second LBT processing (directional LBT) or the third LBT processing (LBT in which both omni-directional LBT processing and directional LBT processing are performed) and start communication without using more than one direction for the communication. Then, after starting the communication, the gNB and NR-UE check whether a signal is present in a direction not used for the communication, and when detecting a direction in which no signal is present, the gNB and NR-UE may start communication by a beam corresponding to the direction". The processing described in Embodiments 8, 9, and 10 may be performed in first NR channel 10001_1, second NR channel 10001_2, third NR channel 10001_3, fourth NR channel 10001_4, and fifth NR channel 10001_5 in FIGS. 110 and 111. The examples will be described below.

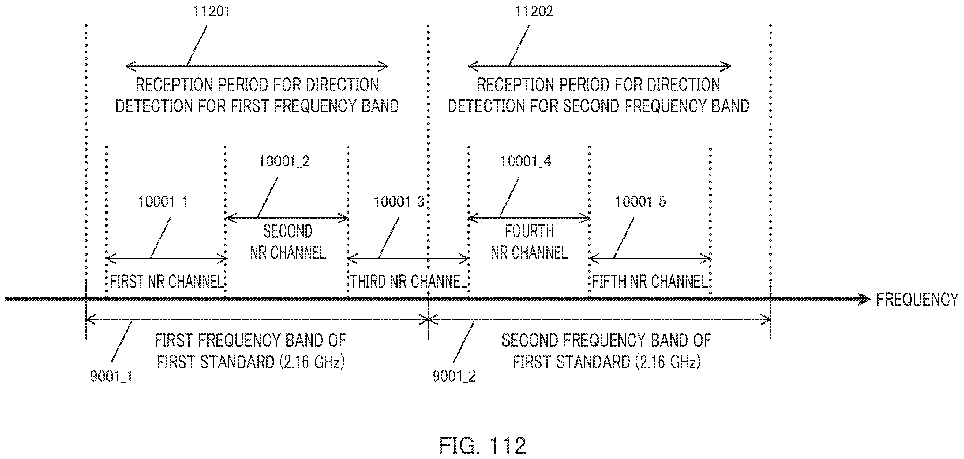

FIG. 112 illustrates exemplary frequency allocation in the present embodiment, and the horizontal axis represents frequency. Note that, in FIG. 112, components that operate in the same manner as in FIGS. 90 and 100 are denoted by the same reference signs, and part of the description will be omitted. The frequency location of the first standard and the NR channel location are the same as in FIG. 100.

As in FIG. 112, for example, an NR apparatus such as a gNB and NR-UE handles a modulation signal of first NR channel 10001_1, a modulation signal of second NR channel 10001_2, a modulation signal of third NR channel 10001_3, a modulation signal of fourth NR channel 10001_4, and a modulation signal of fifth NR channel 10001_5. In the case of FIG. 112, provided are reception period 11201 for direction (beam) detection for the first frequency band for first frequency band 9001_1 of the first standard and reception period 11202 for direction (beam) detection for the second frequency band for second frequency band 9001_2 of the first standard. In the following, exemplary operations will be described.

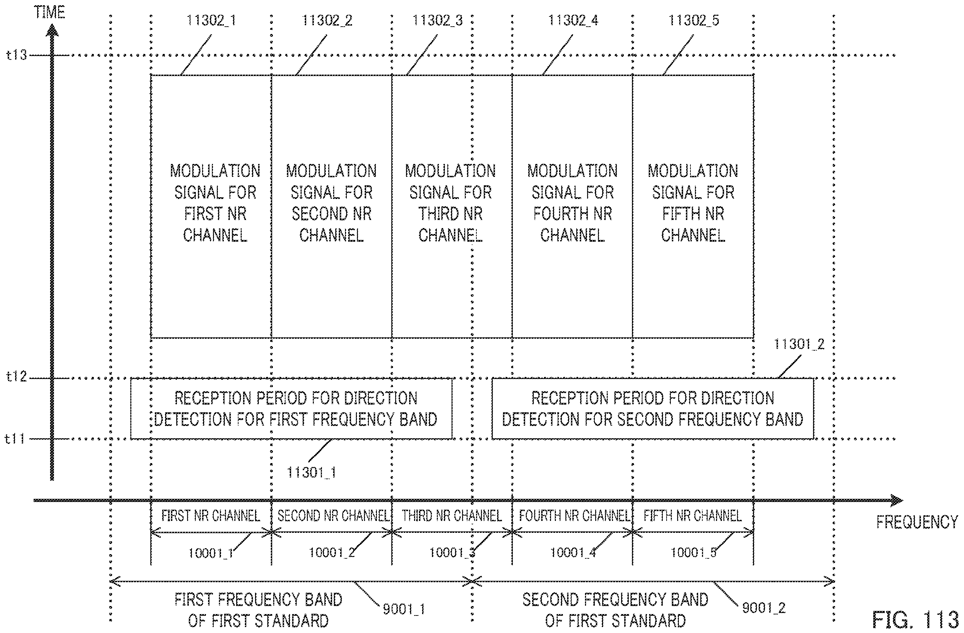

FIG. 113 illustrates exemplary state of the gNB and NR-UE, and the horizontal axis represents frequency while the vertical axis represents time. Note that FIG. 113 illustrates first frequency band 9001_1 of the first standard, second frequency band 9001_2 of the first standard, first NR channel 10001_1, second NR channel 10001_2, third NR channel 10001_3, fourth NR channel 10001_4, and fifth NR channel 10001_5 illustrated in FIG. 112. When transmitting a modulation signal, the gNB and NR-UE may use multi-carrier transmission such as OFDM or a single-carrier scheme.

As in FIG. 111, for example, the gNB and NR-UE perform the LBT in reception period 11101_1 for LBT processing for the first frequency band, and then transmit a modulation signal in "first NR channel 10001_1, second NR channel 10001_2, and part of third NR channel 10001_3".

In addition, as in FIG. 111, for example, the gNB and NR-UE perform the LBT in reception period 11101_2 for LBT for the second frequency band, and then transmit a modulation signal in "part of third NR channel 10001_3, fourth NR channel 10001_4, and fifth NR channel 10001_5". FIG. 113 illustrates an exemplary state of the gNB and NR-UE after performing the LBT. Note that ""performing the LBT and then transmitting a modulation signal in each frequency band" as in FIG. 111" is merely an example

It is assumed that the gNB and NR-UE determine a direction not to be used for communication in first NR channel 10001_1 (referred to as the 1_i-th direction) by using "reception period 111101_1 for LBT processing for the first frequency band in FIG. 111". Note that i is an integer from 1 to G1 (both inclusive), where G is an integer of 1 or more.

Then, the gNB and NR-UE determine whether a signal is present in the 1_i-th direction in first NR channel 10001_1 by using "reception period 11301_1 for direction (beam) detection for the first frequency band" in FIG. 113.

When the gNB and NR-UE determine that a signal is present in the 1_i-th direction, the gNB and NR-UE determine not to use the 1_i-th direction for communication, for example, for modulation signal 11302_1 for the first NR channel. When the gNB and NR-UE determine that no signal is present in the 1_i-th direction, the gNB and NR-UE can use the 2_i-th direction for communication, for example, for modulation signal 11302_1 for the first NR channel.

Note that "reception period 11301_1 for direction (beam) detection for the first frequency band" in FIG. 113 corresponds to "reception period 6801 for direction (beam) detection" in FIG. 68, "reception period 6901 for direction (beam) detection" in FIG. 69, and "reception period 7001 for direction (beam) detection" in FIG. 70, and thus more specific operations in "reception period 11301_1 for direction (beam) detection for the first frequency band" are as described in other embodiments.

It is assumed that the gNB and NR-UE determine a direction not to be used for communication in second NR channel 10001_2 (referred to as the 2_i-th direction) by using "reception period 1110 1_1 for LBT processing for the first frequency band in FIG. 111". Note that i is an integer from 1 to G2 (both inclusive), where G2 is an integer of 1 or more.

Then, the gNB and NR-UE determine whether a signal is present in the 2_i-th direction in second NR channel 10001_2 by using "reception period 11301_1 for direction (beam) detection for the first frequency band" in FIG. 113.

When the gNB and NR-UE determine that a signal is present in the 2_i-th direction, the gNB and NR-UE determine not to use the 2_i-th direction for communication, for example, for modulation signal 11302_2 for the second NR channel. When the gNB and NR-UE determine that no signal is present in the 2_i-th direction, the gNB and NR-UE can use the 2_i-th direction for communication, for example, for modulation signal 11302_2 for the second NR channel.

Note that "reception period 11301_1 for direction (beam) detection for the first frequency band" in FIG. 113 corresponds to "reception period 6801 for direction (beam) detection" in FIG. 68, "reception period 6901 for direction (beam) detection" in FIG. 69, and "reception period 7001 for direction (beam) detection" in FIG. 70, and thus more specific operations in "reception period 11301_1 for direction (beam) detection for the first frequency band" are as described in other embodiments.

It is assumed that the gNB and NR-UE determine a direction not to be used for communication in part of third NR channel 10001_3 present in the first frequency band of the first standard (referred to as the 3_i-th direction) by using "reception period 11101_1 for LBT processing for the first frequency band in FIG. 111". Note that i is an integer from 1 to G3_1 (both inclusive), where G3_1 is an integer of 1 or more.

Then, the gNB and NR-UE determine whether a signal is present in the 3_i-th direction in part of third NR channel 10001_3 present in the first frequency band of the first standard by using "reception period 11301_1 for direction (beam) detection for the first frequency band" in FIG. 113.

When the gNB and NR-UE determine that a signal is present in the 3_i-th direction, the gNB and NR-UE determine not to use the 3_i-th direction for communication, for example, in part of third NR channel 10001_3 present in the first frequency band of the first standard. When the gNB and NR-UE determine that no signal is present in the 3_i-th direction, the gNB and NR-UE can use the 3_i-th direction for communication, for example, in part of third NR channel 10001_3 present in the first frequency band of the first standard.

Note that "reception period 11301_1 for direction (beam) detection for the first frequency band" in FIG. 113 corresponds to "reception period 6801 for direction (beam) detection" in FIG. 68, "reception period 6901 for direction (beam) detection" in FIG. 69, and "reception period 7001 for direction (beam) detection" in FIG. 70, and thus more specific operations in "reception period 11301_1 for direction (beam) detection for the first frequency band" are as described in other embodiments.

It is assumed that the gNB and NR-UE determine a direction not to be used for communication in part of third NR channel 10001_3 present in the second frequency band of the first standard (referred to as the 3_k-th direction) by using "reception period 11101_2 for LBT processing for the second frequency band in FIG. 111". Note that k is an integer from 1 to G3_2 (both inclusive), where G3_2 is an integer of 1 or more.

Then, the gNB and NR-UE determine whether a signal is present in the 3_k-th direction in part of third NR channel 10001_3 present in the second frequency band of the first standard by using "reception period 11301_2 for direction (beam) detection for the second frequency band" in FIG. 113.

When the gNB and NR-UE determine that a signal is present in the 3_k-th direction, the gNB and NR-UE determine not to use the 3_k-th direction for communication, for example, in part of third NR channel 10001_3 present in the second frequency band of the first standard. When the gNB and NR-UE determine that no signal is present in the 3_k-th direction, the gNB and NR-UE can use the 3_k-th direction for communication, for example, in part of third NR channel 10001_3 present in the second frequency band of the first standard.

Note that "reception period 11301_2 for direction (beam) detection for the second frequency band" in FIG. 113 corresponds to "reception period 6801 for direction (beam) detection" in FIG. 68, "reception period 6901 for direction (beam) detection" in FIG. 69, and "reception period 7001 for direction (beam) detection" in FIG. 70, and thus more specific operations in "reception period 11301_2 for direction (beam) detection for the second frequency band" are as described in other embodiments.

It is assumed that the gNB and NR-UE determine a direction not to be used for communication in fourth NR channel 10001_4 (referred to as the 4_i-th direction) by using "reception period 11101_2 for LBT processing for the second frequency band in FIG. 111". Note that i is an integer from 1 to G4 (both inclusive), where G4 is an integer of 1 or more.

Then, the gNB and NR-UE determine whether a signal is present in the 4_i-th direction in fourth NR channel 10001_4 by using "reception period 11301_2 for direction (beam) detection for the second frequency band" in FIG. 113.

When the gNB and NR-UE determine that a signal is present in the 4_i-th direction, the gNB and NR-UE determine not to use the 4_i-th direction for communication, for example, for modulation signal 11302_4 for the fourth NR channel. When the gNB and NR-UE determine that no signal is present in the 4_i-th direction, the gNB and NR-UE can use the 4_i-th direction for communication, for example, for modulation signal 11302_4 for the fourth NR channel.

Note that "reception period 11301_2 for direction (beam) detection for the second frequency band" in FIG. 113 corresponds to "reception period 6801 for direction (beam) detection" in FIG. 68, "reception period 6901 for direction (beam) detection" in FIG. 69, and "reception period 7001 for direction (beam) detection" in FIG. 70, and thus more specific operations in "reception period 11301_2 for direction (beam) detection for the second frequency band" are as described in other embodiments.

It is assumed that the gNB and NR-UE determine a direction not to be used for communication in fifth NR channel 10001_5 (referred to as the 5_i-th direction) by using "reception period 11101_2 for LBT processing for the second frequency band in FIG. 111". Note that i is an integer from 1 to G5 (both inclusive), where G5 is an integer of 1 or more.

Then, the gNB and NR-UE determine whether a signal is present in the 5_i-th direction in fifth NR channel 10001_5 by using "reception period 11301_2 for direction (beam) detection for the second frequency band" in FIG. 113.

When the gNB and NR-UE determine that a signal is present in the 5_i-th direction, the gNB and NR-UE determine not to use the 5_i-th direction for communication, for example, for modulation signal 11302_5 for the fifth NR channel. When the gNB and NR-UE determine that no signal is present in the 5_i-th direction, the gNB and NR-UE can use the 5_i-th direction for communication, for example, for modulation signal 11302_5 for the fifth NR channel.

Note that "reception period 11301_2 for direction (beam) detection for the second frequency band" in FIG. 113 corresponds to "reception period 6801 for direction (beam) detection" in FIG. 68, "reception period 6901 for direction (beam) detection" in FIG. 69, and "reception period 7001 for direction (beam) detection" in FIG. 70, and thus more specific operations in "reception period 11301_2 for direction (beam) detection for the second frequency band" are as described in other embodiments.

Although FIG. 113 has been described as an exemplary state of the gNB and NR-UE, the state is not limited to these. For example, there may be a time period in which a communication counterpart transmits a modulation signal. Further, the transmission timings of modulation signals by the gNB and NR-UE are not limited to the timings in FIG. 113.

The names of signals, frames, etc. in FIG. 113 are not limited to those in the drawing, and other names may be used.

The above procedure allows the gNB and NR-UE to perform the LBT, detect a signal of the first standard, and accordingly control communication performed by themselves, thereby producing the effect of improving the system data throughput of a system including the gNB, NR-UE, etc. In addition, the determination of a direction, a beam, and an antenna to be used for communication by the gNB and NR-UE according to the presence of a signal of the first standard produces the effect of improving the system data throughput of a system including the gNB, NR-UE, etc.

Further, fine control of the frequency granularity allows the gNB and NR-UE to perform the LBT and select a frequency and a direction in which communication can be started with little interference, thereby producing the effect of improving the system data throughput of a system including the gNB, NR-UE, etc. In addition, the determination of a direction, a beam, and an antenna to be used for communication by the gNB and NR-UE produces the effect of improving the system data throughput of a system including the gNB, NR-UE, etc.

Note that the processing described in the present embodiment or a part of the processing is performed by the transmission/reception apparatus in FIG. 53 or FIG. 54. The configurations of the gNB and NR-UE, however, are not limited to the configurations in FIGS. 53 and 54.

Next, a variation related to the above will be described.

FIG. 97 illustrates an exemplary system. It is assumed that gNB #1 labeled 9701_1 and NR-UE #1 labeled 9702_1 perform the LBT to start communication. At this time, for example, first standard AP 9711 and first standard terminal 9712 possibly interfere with gNB #1 labeled 9701_1 and NR-UE #1 labeled 9702_1. In addition, gNB #2 labeled 9701_2 and NR-UE #2 labeled 9702_2 possibly interfere with gNB #1 labeled 9701_1 and NR-UE #1 labeled 9702_1.

The "LBT and direction detection after starting communication" of the present embodiment enable accurate detection of a modulation signal of the first standard in particular. Meanwhile, consideration is necessary in terms of the point where "gNB #1 labeled 9701_1 and NR-UE #1 labeled 9702_1 accurately detect a modulation signal transmitted by gNB #2 labeled 9701_2 and NR-UE #2 labeled 9702_2". This will be described below.

FIG. 98 illustrates exemplary LBT performed by gNB #1 labeled 9701_1 and NR-UE #1 labeled 9702_1, for example. Note that the horizontal axis represents time in FIG. 98.

As illustrated in FIG. 98, gNB #1 labeled 9701_1 and NR-UE #1 labeled 9702_1 perform the I-th LBT in I-th LBT implementation period 9801, and when determining that communication can be started, perform the II-th LBT in II-th LBT implementation period 9802. Then, when determining that communication can be started, gNB #1 labeled 9701_1 and NR-UE #1 labeled 9702_1 start communication.

Note that gNB #1 labeled 9701_1 and NR-UE #1 labeled 9702_1 may determine not to start communication after performing the I-th LBT in I-th LBT implementation period 9801. Likewise, gNB #1 labeled 9701_1 and NR-UE #1 labeled 9702_1 may determine not to start communication after performing the II-th LBT in II-th LBT implementation period 9802.

At this time, the I-th LBT performed in I-th LBT implementation period 9801 is LBT for detecting a modulation signal transmitted by a first standard apparatus (AP, terminal, repeater, etc.). Thus, the LBT described in the present embodiment is performed in the I-th LBT. Note that the detailed operations have already been described, and thus the description thereof will be omitted.

In contrast, the II-th LBT performed in II-th LBT implementation period 9802 is LBT for detecting a modulation signal transmitted by an NR apparatus (gNB, NR-UE, repeater, etc.) (and/or a modulation signal transmitted by an apparatus of another standard). Thus, LBT that is other than the I-th LBT and described in other embodiments is performed in the II-th LBT, for example. Note that, in FIGS. 100 and 112, whether to start communication is determined in the II-th LBT by performing the LBT for each NR channel.

For example, an NR apparatus performs the LBT for first NR channel 10001_1 by performing the II-th LBT, and determines whether to start communication.

Likewise, the NR apparatus performs the LBT for second NR channel 10001_2 by performing the II-th LBT, and determines whether to start communication.

Then, the NR apparatus performs the LBT for third NR channel 10001_3 by performing the II-th LBT, and determines whether to start communication. The NR apparatus performs the LBT for fourth NR channel 10001_4 by performing the II-th LBT, and determines whether to start communication. The NR apparatus performs the LBT for fifth NR channel 10001_5 by performing the II-th LBT, and determines whether to start communication.

This allows the gNB and NR-UE to detect modulation signals of a plurality of standards and control the start of communication, thereby reducing interference during communication, improving the data transmission rate, and enhancing the data reception quality.

Note that, in FIG. 98, the order of I-th LBT implementation period 9801 and II-th LBT implementation period 9802 may be reversed on the time axis. Further, in FIG. 98, there may be a modulation signal transmission period of the gNB and NR-UE and a modulation signal period of the gNB and NR-UE after II-th LBT implementation period 9802 and I-th LBT implementation period 9801.

FIG. 99 illustrates exemplary direction detection performed by gNB #1 labeled 9701_1 and NR-UE #1 labeled 9702_1, for example. Note that the horizontal axis represents time in FIG. 99.

As illustrated in FIG. 99, gNB #1 labeled 9701_1 and NR-UE #1 labeled 9702_1 perform the I-th direction (beam) detection in I-th "direction (beam) detection" period 9901, and then perform the II-th direction (beam) detection in the II-th "direction (beam) detection" period 9902.

At this time, the I-th direction (beam) detection performed in I-th "direction (beam) detection" period 9901 is "direction (beam) detection" for detecting a direction (beam) of a modulation signal transmitted by a first standard apparatus (AP, terminal, repeater, etc.). Thus, the "direction (beam) detection" described in the present embodiment is performed in the I-th direction (beam) detection. Note that the control to be performed at the time of direction (beam) detection has already been described, and thus the description thereof will be omitted.

In contrast, the II-th direction (beam) detection performed in the II-th "direction (beam) detection" period 9902 is "direction (beam) detection" for detecting a direction (beam) of a modulation signal transmitted by an NR apparatus (gNB, NR-UE, repeater, etc.) (and/or a modulation signal transmitted by an apparatus of another standard). Thus, the direction (beam) detection that is other than the I-th direction (beam) detection and described in other embodiments is performed in the II-th direction (beam) detection, for example.

Note that the control to be performed at the time of direction (beam) detection has already been described, and thus the description thereof will be omitted. Note that, in FIGS. 100 and 113, the II-th direction (beam) detection is performed for each NR channel and the control to be performed at the time of direction (beam) detection is performed.

For example, in the II-th direction (beam) detection, an NR apparatus performs the II-th direction (beam) detection for first NR channel 10001_1 and performs the control to be performed at the time of direction (beam) detection.

Likewise, in the II-th direction (beam) detection, the NR apparatus performs the II-th direction (beam) detection for second NR channel 10001_2 and performs the control to be performed at the time of direction (beam) detection.

Then, in the II-th direction (beam) detection, the NR apparatus performs the II-th direction (beam) detection for third NR channel 10001_3 and performs the control to be performed at the time of direction (beam) detection. In the II-th direction (beam) detection, the NR apparatus performs the II-th direction (beam) detection for fourth NR channel 10001_4 and performs the control to be performed at the time of direction (beam) detection. In the II-th direction (beam) detection, the NR apparatus performs the II-th direction (beam) detection for fifth NR channel 10001_5 and performs the control to be performed at the time of direction (beam) detection.

This allows the gNB and NR-UE to detect modulation signals of a plurality of standards and control the communication state, thereby reducing interference during communication, improving the data transmission rate, and enhancing the data reception quality. This enables efficient use of directions and beams and produces the effect of improving the data transmission efficiency of a system.

Note that, in FIG. 99, the order of I-th "direction (beam) detection" period 9901 and II-th "direction (beam) detection" period 9902 may be reversed on the time axis. Further, in FIG. 99, there may be a modulation signal transmission period of the gNB and NR-UE and a modulation signal period of the gNB and NR-UE after I-th "direction (beam) detection" period 9901 and II-th "direction (beam) detection" period 9902.

The processing described in the present embodiment or a part of the processing is performed by the transmission/reception apparatus in FIG. 53 or FIG. 54. The configurations of the gNB and NR-UE, however, are not limited to the configurations in FIGS. 53 and 54.

(Embodiment 22)

In Embodiments 8, 9, and 10, descriptions have been given of the relationship between "transmit beamforming and receive beamforming" in a case where the gNB (or NR-UE) performs transmit beamforming and receive beamforming.

Embodiment 8 in particular has the following description. "The gNB (or NR-UE) performs the second LBT processing, i.e., directional reception, for example. The gNB (or NR-UE) also performs receive beamforming (reception directivity control). Alternatively, it is assumed that the gNB (or NR-UE) performs directional reception in the third LBT processing (omni-directional LBT and directional LBT). Thus, the gNB (or NR-UE) performs receive beamforming (reception directivity control)."

The directivity of receive beam #i and the directivity of transmit beam #i are the same. Although the receive beam number and the transmit beam number are the same here, they may be different. For example, a transmit beam having the same directivity as that of receive beam #1 may be transmit beam #4.

As a result of LBT, the gNB (or NR-UE) has detected a signal when using receive beam #2 and detected no signal when using the other receive beams. With this regard, the gNB transmits sector sweep reference in order to start communication, as described in Embodiment 1 to Embodiment 6.

At this time, the gNB transmits a sector sweep reference signal in transmit beam #1, for example. The gNB does not transmit a sector sweep reference signal in transmit beam #2. The gNB transmits sector sweep reference signals in transmit beams #3, #4, and so forth. That is, in the example of FIG. 63, the gNB does not transmit a sector sweep reference signal in transmit beam #2 and transmits sector sweep reference signals in the other transmit beams #1, #3, #4, and so forth.

Note that the gNB (or NR-UE) normally transmits a sector sweep reference signal in transmit beamforming #2".

That is, a receive beam generated by the gNB (or NR-UE) for the LBT and a transmit beam in which the gNB (or NR-UE) transmits the modulation signal during communication are related to each other. For example, when the gNB (or NR-UE) detects a signal in receive beam #1, the gNB (or NR-UE) does not transmit a modulation signal (does not start communication) in transmit beam #1. Meanwhile, when the gNB (or NR-UE) detects no signal in receive beam #1, the gNB (or NR-UE) transmits a modulation signal (starts communication).

Note that the "bandwidth of a signal transmitted/received by the gNB and NR-UE" may be the same as or different from the "bandwidth of a signal transmitted/received by a first standard apparatus".

In the following, a description will be given of variations of "a receive beam generated by the gNB (or NR-UE) for the LBT and a transmit beam in which the gNB (or NR-UE) transmits the modulation signal during communication are related to each other".

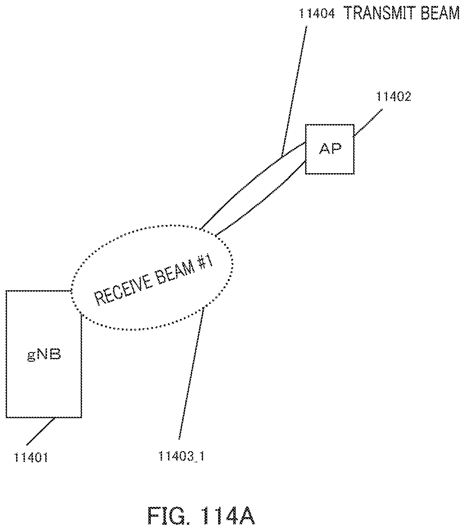

FIG. 114A illustrates an exemplary state of the gNB and AP. AP 11402 performs communication with another apparatus using the first standard, for example. At this time, AP 11402 forms transmit beam 11404 in transmitting a modulation signal.

gNB 11401 performs receive beam forming (reception directivity control) for LBT and forms receive beam #1 labeled 11403_1. Then, gNB 11401 performs LBT by receive beam #1 labeled 11403_1. Note that the LBT method may be the LBT described in the present specification or may be another LBT.

gNB 11401 performs LBT using receive beam #1 labeled 11403_1 and detects a modulation signal transmitted by AP 11402 using transmit beam 11404.

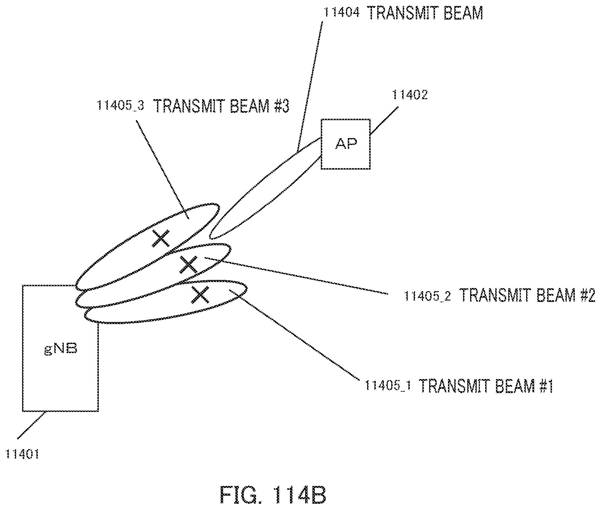

FIG. 114B illustrates an exemplary state of the gNB and AP after "gNB 11401 performs LBT using receive beam #1 labeled 11403_1 and detects a modulation signal transmitted by AP 11402 using transmit beam 11404".

"Receive beam #1 labeled 11403_1 in FIG. 114A" is associated with "transmit beam #1 labeled 11405_1, transmit beam #2 labeled 11405_2, and transmit beam #3 labeled 11405_3 in FIG. 114B". FIG. 114B is a diagram for describing an exemplary operation at that time.

It is assumed that gNB 11401 performs LBT using receive beam #1 labeled 11403_1 and detects a modulation signal transmitted by AP 11402 using transmit beam 11404. At this time, gNB 11401 determines not to use transmit beams associated with "receive beam #1 labeled 11403_1", that is, "transmit beam #1 labeled 11405_1, transmit beam #2 labeled 11405_2, and transmit beam #3 labeled 11405_3".

Thus, gNB 11401 does not transmit a modulation signal addressed to NR-UE, for example, using transmit beam #1 labeled 11405_1. Likewise, gNB 11401 does not transmit a modulation signal addressed to NR-UE, for example, using transmit beam #2 labeled 11405_2. Also, gNB 11401 does not transmit a modulation signal addressed to NR-UE, for example, using transmit beam #3 labeled 11405_3.

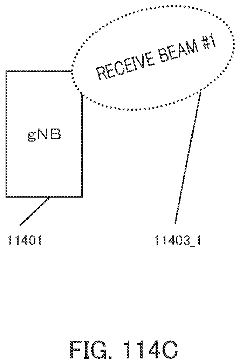

FIG. 114C illustrates an exemplary state of the gNB different from that in FIG. 114A.

gNB 11401 performs receive beam forming (reception directivity control) for LBT and forms receive beam #1 labeled 11403_1. Then, gNB 11401 performs LBT by receive beam #1 labeled 11403_1. Note that the LBT method may be the LBT described in the present specification or may be another LBT.

It is assumed that gNB 11401 performs LBT using receive beam #1 labeled 11403_1 and detects no signal.

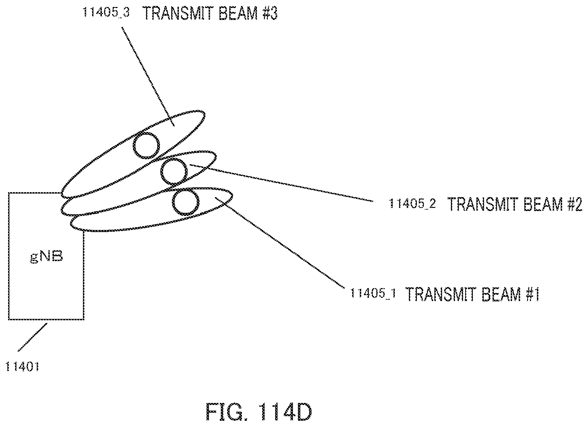

FIG. 114D illustrates an exemplary state of the gNB and AP after "gNB 11401 performs LBT using receive beam #1 labeled 11403_1 and detects no signal".

"Receive beam #1 labeled 11403_1 in FIG. 114C" is associated with "transmit beam #1 labeled 11405_1, transmit beam #2 labeled 11405_2, and transmit beam #3 labeled 11405_3 in FIG. 114D". FIG. 114D is a diagram for describing an exemplary operation at that time.

It is assumed that gNB 11401 performs LBT using receive beam #1 labeled 11403_1 and detects no signal. At this time, gNB 11401 determines that transmit beams associated with "receive beam #1 labeled 11403_1", that is, "transmit beam #1 labeled 11405_1, transmit beam #2 labeled 11405_2, and transmit beam #3 labeled 11405_3" can be used for communication with NU-UE, for example.

Thus, gNB 11401 may transmit a modulation signal addressed to NR-UE, for example, using transmit beam #1 labeled 11405_1. Likewise, gNB 11401 may transmit a modulation signal addressed to NR-UE, for example, using transmit beam #2 labeled 11405_2. Also, gNB 11401 may transmit a modulation signal addressed to NR-UE, for example, using transmit beam #3 labeled 11405_3.

Other receive beams and transmit beams may be associated with each other in the same manner.

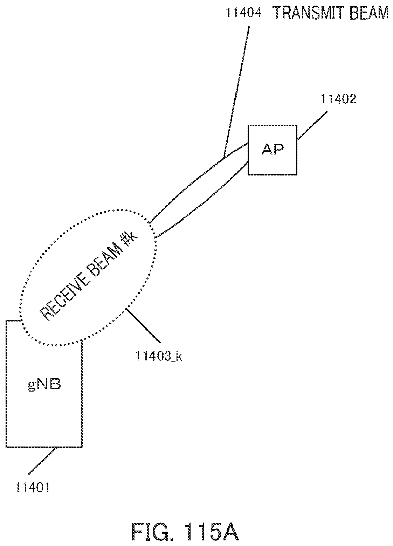

FIG. 115A illustrates an exemplary state of the gNB and AP. AP 11402 performs communication with another apparatus using the first standard, for example. At this time, AP 11402 forms transmit beam 11404 in transmitting a modulation signal.

gNB 11401 performs receive beam forming (reception directivity control) for LBT and forms receive beam #k labeled 11403_k. Then, gNB 11401 performs LBT by receive beam #k labeled 11403_k. Note that the LBT method may be the LBT described in the present specification or may be another LBT.

gNB 11401 performs LBT using receive beam #k labeled 11403_k and detects a modulation signal transmitted by AP 11402 using transmit beam 11404.

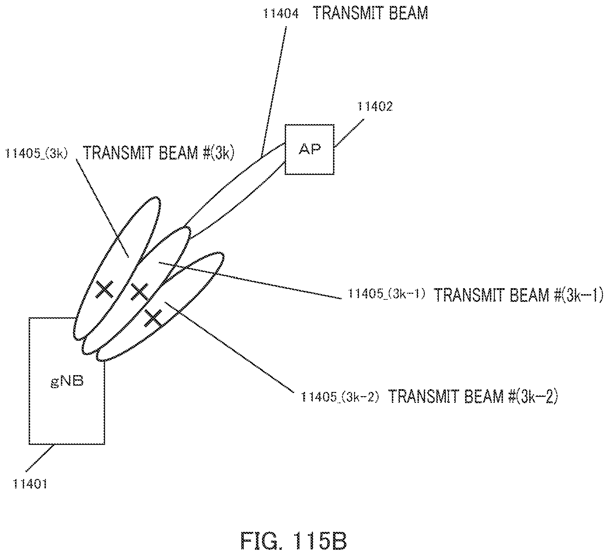

FIG. 115B illustrates an exemplary state of the gNB and AP after "gNB 11401 performs LBT using receive beam #k labeled 11403_k and detects a modulation signal transmitted by AP 11402 using transmit beam 11404".

"Receive beam #k labeled 11403_k in FIG. 115A" is associated with "transmit beam #(3k-2) labeled 11405_(3k-2), transmit beam #(3k-1) labeled 11405_(3k-1), and transmit beam #(3k) labeled 11405_(3k) in FIG. 115B". FIG. 115B is a diagram for describing an exemplary operation at that time.

It is assumed that gNB 11401 performs LBT using receive beam #k labeled 11403_k and detects a modulation signal transmitted by AP 11402 using transmit beam 11404. At this time, gNB 11401 determines not to use transmit beams associated with "receive beam #k labeled 11403_k", that is, "transmit beam #(3k-2) labeled 11405_(3k-2), transmit beam #(3k-1) labeled 11405_(3k-1), and transmit beam #(3k) labeled 11405_(3k) in FIG. 115B".

Thus, gNB 11401 does not transmit a modulation signal addressed to NR-UE, for example, using transmit beam #(3k-2) labeled 11405_(3k-2). Likewise, gNB 11401 does not transmit a modulation signal addressed to NR-UE, for example, using transmit beam #(3k-1) labeled 11405_(3k-1). Also, gNB 11401 does not transmit a modulation signal addressed to NR-UE, for example, using transmit beam #(3k) labeled 11405_(3k).

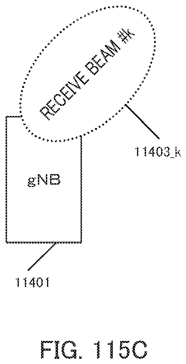

FIG. 115C illustrates an exemplary state of the gNB different from that in FIG. 115A.

gNB 11401 performs receive beam forming (reception directivity control) for LBT and forms receive beam #k labeled 11403_k. Then, gNB 11401 performs LBT by receive beam #k labeled 11403_k. Note that the LBT method may be the LBT described in the present specification or may be another LBT.

It is assumed that gNB 11401 performs LBT using receive beam #k labeled 11403_k and detects no signal.

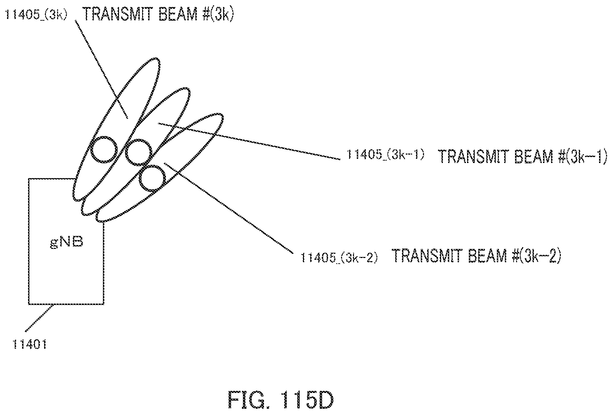

FIG. 115D illustrates an exemplary state of the gNB and AP after "gNB 11401 performs LBT using receive beam #k labeled 11403_k and detects no signal".

"Receive beam #k labeled 11403_k in FIG. 115C" is associated with "transmit beam #(3k-2) labeled 11405_(3k-2), transmit beam #(3k-1) labeled 11405_(3k-1), and transmit beam #(3k) labeled 11405_(3k) in FIG. 115D". FIG. 115D is a diagram for describing an exemplary operation at that time.

It is assumed that gNB 11401 performs LBT using receive beam #k labeled 11403_k and detects no signal. At this time, gNB 11401 determines that transmit beams associated with "receive beam #k labeled 11403_k", that is, "transmit beam #(3k-2) labeled 11405_(3k-2), transmit beam #(3k-1) labeled 11405_(3k-1), and transmit beam #(3k) labeled 11405_(3k)" can be used for communication with NU-UE, for example.

Thus, gNB 11401 may transmit a modulation signal addressed to NR-UE, for example, using transmit beam #(3k-2) labeled 11405_(3k-2). Likewise, gNB 11401 may transmit a modulation signal addressed to NR-UE, for example, using transmit beam #(3k-1) labeled 11405_(3k-1). Also, gNB 11401 may transmit a modulation signal addressed to NR-UE, for example, using transmit beam #(3k) labeled 11405_(3k).

In the case where "a receive beam generated by the gNB" and "a plurality of transmit beams generated by the gNB" are associated with each other as described above and the gNB performs LBT by forming a receive beam, for example, the gNB does not transmit a modulation signal using associated transmit beams when a signal is detected, and can transmit a modulation signal using associated transmit beams when no signal is detected. This allows the gNB to easily determine a beam for transmitting a modulation signal. Note that association between "a receive beam generated by the gNB" and "a transmit beam generated by the gNB" other than the above example is described in the present specification.

Although FIGS. 114A, 114B, 114C, 114D, 115A, 115B, 115C, and 115D illustrate gNB 11401, the same can be implemented replacing gNB 11401 with NR-UE. In addition, the same can be implemented replacing AP 11402 with a communication apparatus (terminal). AP 11402 may be an apparatus conforming to a standard other than the first standard, and the first standard may be a standard other than "IEEE 802.11ad and IEEE 802.11ay".

In terms of the association between "a receive beam generated by the gNB" and "a plurality of transmit beams generated by the gNB", a single "receive beam" is associated with three "transmit beams" in the above example, but the present disclosure is not limited to this. For example, a single "receive beam" may be associated with one or more "transmit beams". Further, a single "receive beam" may be associated with two or more "transmit beams".

In addition, the number of associated "transmit beams" may be set for each "receive beam". For example, "receive beam #1" may be associated with two "transmit beams", "receive beam #2" may be associated with three "transmit beams", and "receive beam #3" may be associated with a single "transmit beam".

In generating "receive beam #1", "receive beam #k", etc., the gNB configured as in FIG. 1A, 1B, 1C, 53, 54, or the like may generate the receive beam by selecting a (panel) antenna. For example, generating "receive beam #1" may correspond to "selecting reception panel antenna 1 in FIG. 1A, 1B, or 1C by the gNB".

In FIGS. 114A, 114B, 114C, 114D, 115A, 115B, 115C, and 115D, a modulation signal transmitted by gNB 11401 using a transmit beam may include any one or more of:

 a "sector sweep reference signal";
 a PDCCH;
 a PUCCH;
 a synchronization signals block (SSB);
 a physical broadcast channel block (PBCH); and
 an SS/PBCH block.

Thus, it may be interpreted as follows although "a receive beam" and "a transmit beam" are associated with each other in the above description.

 · "A receive beam" and "a sector sweep reference signal" are associated with each other.

 · "A receive beam" and a PDCCH are associated with each other.

 · "A receive beam" and a PUCCH are associated with each other.

 · "A receive beam" and "a synchronization signals block (SSB)" are associated with each other.

 · "A receive beam" and "a physical broadcast channel block (PBCH)" are associated with each other.

 · "A receive beam" and "an SS/PBCH block" are associated with each other.

This is applicable to the entire specification of the present patent. Part of this has already been described in other sections.

Further, generating a receive beam may correspond to selecting a reception antenna, and thus it may be interpreted as follows.

 · "A reception antenna" and "a sector sweep reference signal" are associated with each other.

 · "A reception antenna" and a PDCCH are associated with each other.

 · "A reception antenna" and a PUCCH are associated with each other.

 · "A reception antenna" and "a synchronization signals block (SSB)" are associated with each other.

 · "A reception antenna" and "a physical broadcast channel block (PBCH)" are associated with each other.

 · "A reception antenna" and "an SS/PBCH block" are associated with each other.

Although "a receive beam" and "a transmit beam" are associated with each other in the above description, "a receive beam" may be replaced with "an antenna port used for reception", and "a transmit beam" may be replaced with "an antenna port used for transmission". Accordingly, "an antenna port used for reception" and "an antenna port used for transmission" may be associated with each other, for example.

Further, "a receive beam" may be a receive beam for performing direction detection. Thus, "a receive beam for performing direction detection" is associated with "a transmit beam", etc. described above. Note that the direction detection has already been described in other embodiments, and the description thereof will be omitted.

Descriptions in other embodiments are applicable in terms of the frame configuration to realize FIGS. 114A, 114B, 114C, 114D, 115A, 115B, 115C, and 115D. In the following, a description will be given of another exemplary frame configuration to realize FIGS. 114A, 114B, 114C, 114D, 115A, 115B, 115C, and 115D.

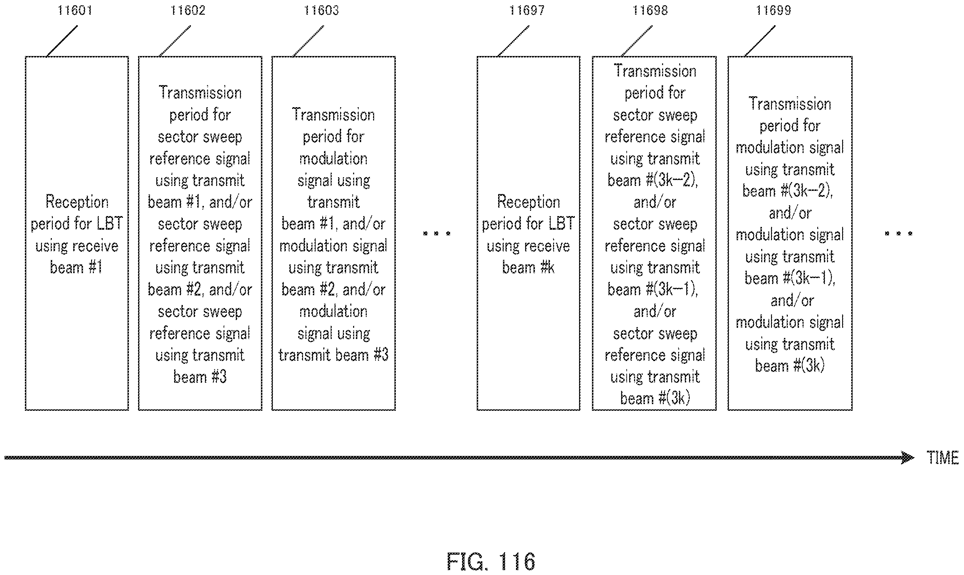

FIG. 116 illustrates an exemplary frame configuration to realize FIGS. 114A, 114B, 114C, 114D, 115A, 115B, 115C, and 115D, and the horizontal axis represents time.

"Reception period 11601 for LBT using receive beam #1" in FIG. 116 is a reception period for gNB 11401 to perform the LBT using receive beam #1 labeled 11403_1 in FIGS. 114A and 114C.

"Transmission period 11602 for sector sweep reference signal using transmit beam #1, and/or sector sweep reference signal using transmit beam #2, and/or sector sweep reference signal using transmit beam #3" is a transmission period for gNB 11401 when it is necessary to transmit a modulation signal using "transmit beam #1 labeled 11405_1, and/or transmit beam #2 labeled 11405_2, and/or transmit beam #3 labeled 11405_3" in FIGS. 114B and 114D.

"Transmission period 11603 for modulation signal using transmit beam #1, and/or modulation signal using transmit beam #2, and/or modulation signal using transmit beam #3" is a transmission period for gNB 11401 when it is necessary to transmit a modulation signal using "transmit beam #1 labeled 11405_1, and/or transmit beam #2 labeled 11405_2, and/or transmit beam #3 labeled 11405_3" in FIGS. 114B and 114D.

"Reception period 11697 for LBT using receive beam #k" in FIG. 116 is a reception period for gNB 11401 to perform the LBT using receive beam #k labeled 11403_k in FIGS. 115A and 115C.

"Transmission period 11698 for sector sweep reference signal using transmit beam #(3k-2), and/or sector sweep reference signal using transmit beam #(3k-1), and/or sector sweep reference signal using transmit beam #(3k)" is a transmission period for gNB 11401 when it is necessary to transmit a modulation signal using "transmit beam #(3k-2) labeled 11405_(3k-2), and/or transmit beam #(3k-1) labeled 11405_(3k-1), and/or transmit beam #(3k) labeled 11405_(3k)" in FIGS. 115B and 115D.

"Transmission period 11699 for modulation signal using transmit beam #(3k-2), and/or modulation signal using transmit beam #(3k-1), and/or modulation signal using transmit beam #(3k)" is a transmission period for gNB 11401 when it is necessary to transmit a modulation signal using "transmit beam #(3k-2) labeled 11405_(3k-2), and/or transmit beam #(3k-1) labeled 11405_(3k-1), and/or transmit beam #(3k) labeled 11405_(3k)" in FIGS. 115B and 115D.

For example, a period in which gNB 11401 performs the LBT using receive beam #1 labeled 11403_1 as in FIG. 114A is "reception period 11601 for LBT using receive beam #1". When gNB 11401 performs the LBT using receive beam #1 labeled 11403_1 and detects another signal (e.g., transmit beam 11404), gNB 11401 does not transmit a modulation signal using "transmission period 11602 for sector sweep reference signal using transmit beam #1, and/or sector sweep reference signal using transmit beam #2, and/or sector sweep reference signal using transmit beam #3", and does not transmit a modulation signal using "transmission period 11603 for modulation signal using transmit beam #1, and/or modulation signal using transmit beam #2, and/or modulation signal using transmit beam #3" either.

A period in which gNB 11401 performs the LBT using receive beam #1 labeled 11403_1 as in FIG. 114C is "reception period 11601 for LBT using receive beam #1". When gNB 11401 performs the LBT using receive beam #1 labeled 11403_1 and detects no other signal, gNB 11401 transmits a modulation signal (sector sweep reference signal) using "transmission period 11602 for sector sweep reference signal using transmit beam #1, and/or sector sweep reference signal using transmit beam #2, and/or sector sweep reference signal using transmit beam #3". Also, gNB 11401 may transmit a modulation signal using "transmission period 11603 for modulation signal using transmit beam #1, and/or modulation signal using transmit beam #2, and/or modulation signal using transmit beam #3".

A "reception period for restoring a direction using receive beam #1" may be placed instead of "reception period 11601 for LBT using receive beam #1" in the frame in FIG. 116 for a case where gNB 11401 performs the LBT using receive beam #1 labeled 11403_1, detects another signal (e.g., transmit beam 11404), does not transmit a modulation signal using a transmit beam, and later restores the use of "transmit beam #1 labeled 11405_1, transmit beam #2 labeled 11405_2, and transmit beam #3 labeled 11405_3".

Then, gNB 11401 performs signal detection for restoring a direction using receive beam #1 in the "reception period for restoring a direction using receive beam #1", and when no signal is detected, gNB 11401 transmits a modulation signal using "transmission period 11602 for sector sweep reference signal using transmit beam #1, and/or sector sweep reference signal using transmit beam #2, and/or sector sweep reference signal using transmit beam #3". In addition, gNB 11401 may transmit a modulation signal using "transmission period 11603 for modulation signal using transmit beam #1, and/or modulation signal using transmit beam #2, and/or modulation signal using transmit beam #3".

A period in which gNB 11401 performs the LBT using receive beam #k labeled 11403_k as in FIG. 115A is "reception period 11697 for LBT using receive beam #k". When gNB 11401 performs the LBT using receive beam #k labeled 11403_k and detects another signal (e.g., transmit beam 11404), gNB 11401 does not transmit a modulation signal using "transmission period 11698 for sector sweep reference signal using transmit beam #(3k-2), and/or sector sweep reference signal using transmit beam #(3k-1), and/or sector sweep reference signal using transmit beam #(3k)", and does not transmit a modulation signal using "transmission period 11699 for modulation signal using transmit beam #(3k-2), and/or modulation signal using transmit beam #(3k-1), and/or modulation signal using transmit beam #(3k)" either.

A period in which gNB 11401 performs the LBT using receive beam #k labeled 11403_k as in FIG. 115C is "reception period 11697 for LBT using receive beam #k". When gNB 11401 performs the LBT using receive beam #k labeled 11403_k and detects no other signal, gNB 11401 transmits a modulation signal (sector sweep reference signal) using "transmission period 11698 for sector sweep reference signal using transmit beam #(3k-2), and/or sector sweep reference signal using transmit beam #(3k-1), and/or sector sweep reference signal using transmit beam #(3k)". Also, gNB 11401 may transmit a modulation signal using "transmission period 11699 for modulation signal using transmit beam #(3k-2), and/or modulation signal using transmit beam #(3k-1), and/or modulation signal using transmit beam #(3k)".

A "reception period for restoring a direction using receive beam #k" may be placed instead of "reception period 11697 for LBT using receive beam #k" in the frame in FIG. 116 for the case where gNB 11401 performs the LBT using receive beam #k labeled 11403_k, detects another signal (e.g., transmit beam 11404), does not transmit a modulation signal using a transmit beam, and later restores the use of "transmit beam #(3k-2) labeled 11405_(3k-2), transmit beam #(3k-1) labeled 11405_(3k-1), and transmit beam #(3k) labeled 11405_(3k)".

Then, gNB 11401 performs signal detection for restoring a direction using receive beam #k in the "reception period for restoring a direction using receive beam #k", and when no signal is detected, gNB 11401 transmits a modulation signal using "transmission period 11698 for sector sweep reference signal using transmit beam #(3k-2), and/or sector sweep reference signal using transmit beam #(3k-1), and/or sector sweep reference signal using transmit beam #(3k)". In addition, gNB 11401 may transmit a modulation signal using "transmission period 11699 for modulation signal using transmit beam #(3k-2), and/or modulation signal using transmit beam #(3k-1), and/or modulation signal using transmit beam #(3k)".

Note that the frame configuration is not limited to that in FIG. 116, and the frame need not include, for example, "transmission period 11602 for sector sweep reference signal using transmit beam #1, and/or sector sweep reference signal using transmit beam #2, and/or sector sweep reference signal using transmit beam #3" or "transmission period 11698 for sector sweep reference signal using transmit beam #(3k-2), and/or sector sweep reference signal using transmit beam #(3k-1), and/or sector sweep reference signal using transmit beam #(3k)". At this time, "transmission period 11603 for modulation signal using transmit beam #1, and/or modulation signal using transmit beam #2, and/or modulation signal using transmit beam #3" may include a sector sweep reference signal, PDCCH, PUCCH, synchronization signals block (SSB), physical broadcast channel block (PBCH), SS/PBCH block, etc. Likewise, "transmission period 11699 for modulation signal using transmit beam #(3k-2), and/or modulation signal using transmit beam #(3k-1), and/or modulation signal using transmit beam #(3k)" may include a sector sweep reference signal, PDCCH, PUCCH, synchronization signals block (SSB), physical broadcast channel block (PBCH), SS/PBCH block, etc. Note that signals included in "transmission period 11603 for modulation signal using transmit beam #1, and/or modulation signal using transmit beam #2, and/or modulation signal using transmit beam #3" and "transmission period 11699 for modulation signal using transmit beam #(3k-2), and/or modulation signal using transmit beam #(3k-1), and/or modulation signal using transmit beam #(3k)" are not limited to these examples.

(Embodiment 23)

In Embodiment 23, a variation of Embodiment 22 will be described. Note that some of the description in Embodiment 23 has been described in Embodiment 8, etc. In the following, a description will be given of variations of "a receive beam generated by the gNB (or NR-UE) for the LBT and a transmit beam in which the gNB (or NR-UE) transmits the modulation signal during communication are related to each other".

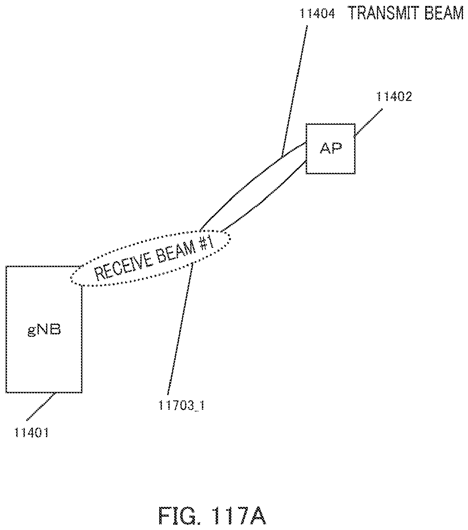

FIG. 117A illustrates an exemplary state of the gNB and AP. AP 11402 performs communication with another apparatus using the first standard, for example. At this time, AP 11402 forms transmit beam 11404 in transmitting a modulation signal.

gNB 11401 performs receive beam forming (reception directivity control) for LBT and forms receive beam #1 labeled 11703_1. Then, gNB 11401 performs LBT by receive beam #1 labeled 11703_1. Note that the LBT method may be the LBT described in the present specification or may be another LBT.

gNB 11401 performs LBT using receive beam #1 labeled 11703_1 and detects a modulation signal transmitted by AP 11402 using transmit beam 11404.

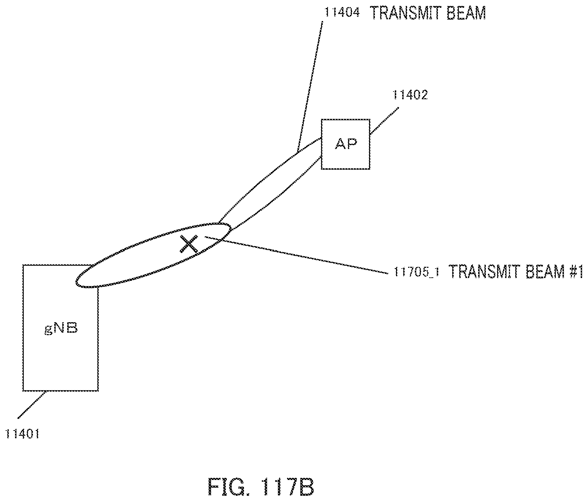

FIG. 117B illustrates an exemplary state of the gNB and AP after "gNB 11401 performs LBT using receive beam #1 labeled 11703_1 and detects a modulation signal transmitted by AP 11402 using transmit beam 11404".

"Receive beam #1 labeled 11703_1 in FIG. 117A" is associated with "transmit beam #1 labeled 11705_1 in FIG. 117B". FIG. 117B is a diagram for describing an exemplary operation at that time.

It is assumed that gNB 11401 performs LBT using receive beam #1 labeled 11703_1 and detects a modulation signal transmitted by AP 11402 using transmit beam 11404. At this time, gNB 11401 determines not to use a transmit beam associated with "receive beam #1 labeled 11703_1", that is, "transmit beam #1 labeled 11705_1". Thus, gNB 11401 does not transmit a modulation signal addressed to NR-UE, for example, using transmit beam #1 labeled 11705_1.

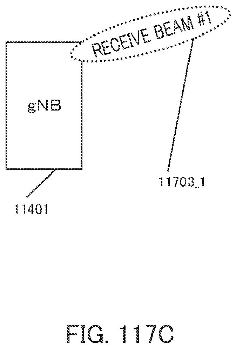

FIG. 117C illustrates an exemplary state of the gNB different from that in FIG. 117A.

gNB 11401 performs receive beam forming (reception directivity control) for LBT and forms receive beam #1 labeled 11703_1. Then, gNB 11401 performs LBT by receive beam #1 labeled 11703_1. Note that the LBT method may be the LBT described in the present specification or may be another LBT.

It is assumed that gNB 11401 performs LBT using receive beam #1 labeled 11703_1 and detects no signal.

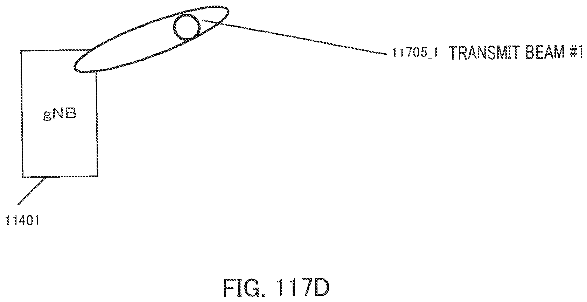

FIG. 117D illustrates an exemplary state of the gNB and AP after "gNB 11401 performs LBT using receive beam #1 labeled 11703_1 and detects no signal".

"Receive beam #1 labeled 11703_1 in FIG. 117C" is associated with "transmit beam #1 labeled 11705_1 in FIG. 117D". FIG. 117D is a diagram for describing an exemplary operation at that time.

It is assumed that gNB 11401 performs LBT using receive beam #1 labeled 11703_1 and detects no signal. At this time, gNB 11401 determines that a transmit beam associated with "receive beam #1 labeled 11703_1", that is, "transmit beam #1 labeled 11705 _1" can be used for communication with NU-UE, for example.

Thus, gNB 11401 may transmit a modulation signal addressed to NR-UE, for example, using transmit beam #1 labeled 11705_1.

Other receive beams and transmit beams may be associated with each other in the same manner.

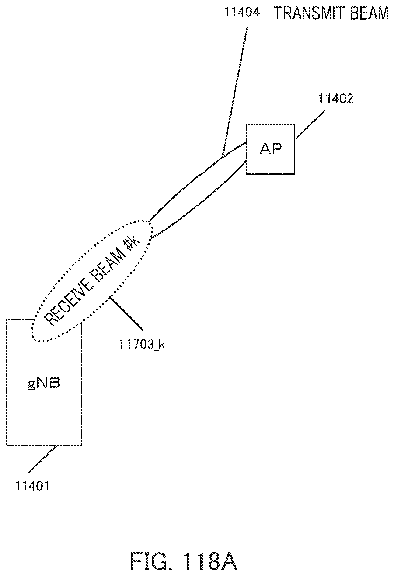

FIG. 118A illustrates an exemplary state of the gNB and AP. AP 11402 performs communication with another apparatus using the first standard, for example. At this time, AP 11402 forms transmit beam 11404 in transmitting a modulation signal.

gNB 11401 performs receive beam forming (reception directivity control) for LBT and forms receive beam #k labeled 11703_k. Then, gNB 11401 performs LBT by receive beam #k labeled 11703_k. Note that the LBT method may be the LBT described in the present specification or may be another LBT.

gNB 11401 performs LBT using receive beam #k labeled 11703_k and detects a modulation signal transmitted by AP 11402 using transmit beam 11404.

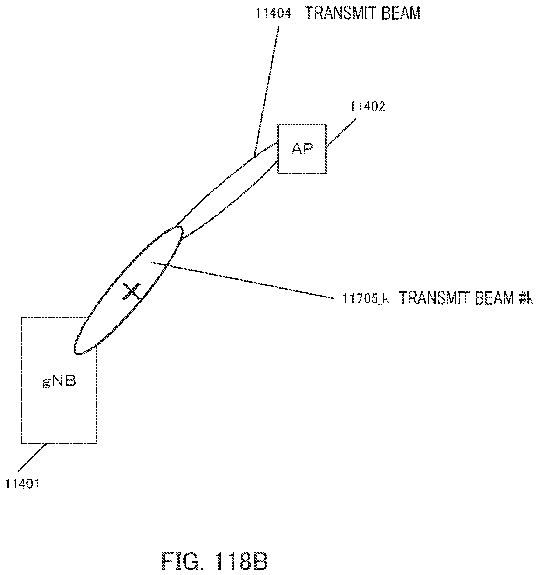

FIG. 118B illustrates an exemplary state of the gNB and AP after "gNB 11401 performs LBT using receive beam #k labeled 11703_k and detects a modulation signal transmitted by AP 11402 using transmit beam 11404".

"Receive beam #k labeled 11703_k in FIG. 118A" is associated with "transmit beam #k labeled 11705_k in FIG. 118B". FIG. 118B is a diagram for describing an exemplary operation at that time.

It is assumed that gNB 11401 performs LBT using receive beam #k labeled 11703_k and detects a modulation signal transmitted by AP 11402 using transmit beam 11404. At this time, gNB 11401 determines not to use a transmit beam associated with "receive beam #k labeled 11703_k", that is, "transmit beam #k labeled 11705_k in FIG. 118B".

Thus, gNB 11401 does not transmit a modulation signal addressed to NR-UE, for example, using transmit beam #k labeled 11705_k.

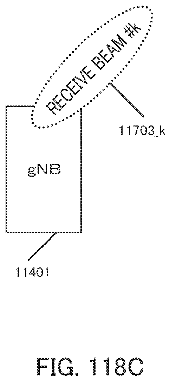

FIG. 118C illustrates an exemplary state of the gNB different from that in FIG. 118A.

gNB 11401 performs receive beam forming (reception directivity control) for LBT and forms receive beam #k labeled 11703_k. Then, gNB 11401 performs LBT by receive beam #k labeled 11703_k. Note that the LBT method may be the LBT described in the present specification or may be another LBT.

It is assumed that gNB 11401 performs LBT using receive beam #k labeled 11703_k and detects no signal.

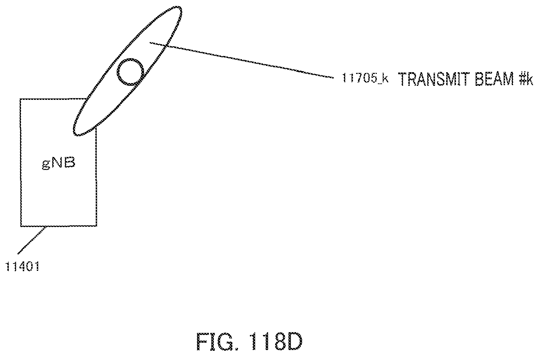

FIG. 118D illustrates an exemplary state of the gNB and AP after "gNB 11401 performs LBT using receive beam #k labeled 11703_k and detects no signal".

"Receive beam #k labeled 11703_k in FIG. 118C" is associated with "transmit beam #k labeled 11705_k in FIG. 118D". FIG. 118D is a diagram for describing an exemplary operation at that time.

It is assumed that gNB 11401 performs LBT using receive beam #k labeled 11703_k and detects no signal. At this time, gNB 11401 determines that a transmit beam associated with "receive beam #k labeled 11703_k", that is, "transmit beam #k labeled 11705_k" can be used for communication with NU-UE, for example.

Thus, gNB 11401 may transmit a modulation signal addressed to NR-UE, for example, using transmit beam #k labeled 11705_k.

In the case where "a receive beam generated by the gNB" and "a transmit beam generated by the gNB" are associated with each other as described above and the gNB performs LBT by forming a receive beam, for example, the gNB does not transmit a modulation signal using an associated transmit beam when a signal is detected, and can transmit a modulation signal using an associated transmit beam when no signal is detected. This allows the gNB to easily determine a beam for transmitting a modulation signal.

Note that association between "a receive beam generated by the gNB" and "a transmit beam generated by the gNB" other than the above example is described in the present specification, and "a receive beam generated by the gNB" and "a transmit beam generated by the gNB" may be associated based on that. Thus, a method of associating "a receive beam generated by the gNB" and "a transmit beam generated by the gNB" is not limited to these examples.

Although FIGS. 117A, 117B, 117C, 117D, 118A, 118B, 118C, and 118D illustrate gNB 11401, the same can be implemented replacing gNB 11401 with NR-UE. In addition, the same can be implemented replacing AP 11402 with a communication apparatus (terminal). AP 11402 may be an apparatus conforming to a standard other than the first standard, and the first standard may be a standard other than "IEEE 802.11ad and IEEE 802.11ay".

In terms of the association between "a receive beam generated by the gNB" and "a transmit beam generated by the gNB", for example, a single "receive beam" may be associated with one or more "transmit beams". Further, a single "receive beam" may be associated with two or more "transmit beams".

In addition, the number of associated "transmit beams" may be set for each "receive beam". For example, "receive beam #1" may be associated with two "transmit beams", "receive beam #2" may be associated with three "transmit beams", and "receive beam #3" may be associated with a single "transmit beam".

In generating "receive beam #1", "receive beam #k", etc., the gNB configured as in FIG. 1A, 1B, 1C, 53, 54, or the like may generate the receive beam by selecting a (panel) antenna. For example, generating "receive beam #1" may correspond to "selecting reception panel antenna 1 in FIG. 1A, 1B, or 1C by the gNB".

In FIGS. 117A, 117B, 117C, 117D, 118A, 118B, 118C, and 118D, a modulation signal transmitted by gNB 11401 using a transmit beam may include any one or more of:

a "sector sweep reference signal";
a PDCCH;
a PUCCH;
a synchronization signals block (SSB);
a physical broadcast channel block (PBCH); and
an SS/PBCH block.

Thus, it may be interpreted as follows although "a receive beam" and "a transmit beam" are associated with each other in the above description.

· "A receive beam" and "a sector sweep reference signal" are associated with each other.

· "A receive beam" and a PDCCH are associated with each other.

· "A receive beam" and a PUCCH are associated with each other.

· "A receive beam" and "a synchronization signals block (SSB)" are associated with each other.

· "A receive beam" and "a physical broadcast channel block (PBCH)" are associated with each other.

· "A receive beam" and "an SS/PBCH block" are associated with each other.

This is applicable to the entire specification of the present patent. Part of this has already been described in other sections.

Further, generating a receive beam may correspond to selecting a reception antenna, and thus it may be interpreted as follows.

· "A reception antenna" and "a sector sweep reference signal" are associated with each other.

· "A reception antenna" and a PDCCH are associated with each other.

· "A reception antenna" and a PUCCH are associated with each other.

· "A reception antenna" and "a synchronization signals block (SSB)" are associated with each other.

· "A reception antenna" and "a physical broadcast channel block (PBCH)" are associated with each other.

· "A reception antenna" and "an SS/PBCH block" are associated with each other.

Although "a receive beam" and "a transmit beam" are associated with each other in the above description, "a receive beam" may be replaced with "an antenna port used for reception", and "a transmit beam" may be replaced with "an antenna port used for transmission". Accordingly, "an antenna port used for reception" and "an antenna port used for transmission" may be associated with each other, for example.

Further, "a receive beam" may be a receive beam for performing direction detection. Thus, "a receive beam for performing direction detection" is associated with "a transmit beam", etc. described above. Note that the direction detection has already been described in other embodiments, and the description thereof will be omitted.

Descriptions in other embodiments are applicable in terms of the frame configuration to realize FIGS. 117A, 117B, 117C, 117D, 118A, 118B, 118C, and 118D. In the following, a description will be given of another exemplary frame configuration to realize FIGS. 117A, 117B, 117C, 117D, 118A, 118B, 118C, and 118D.

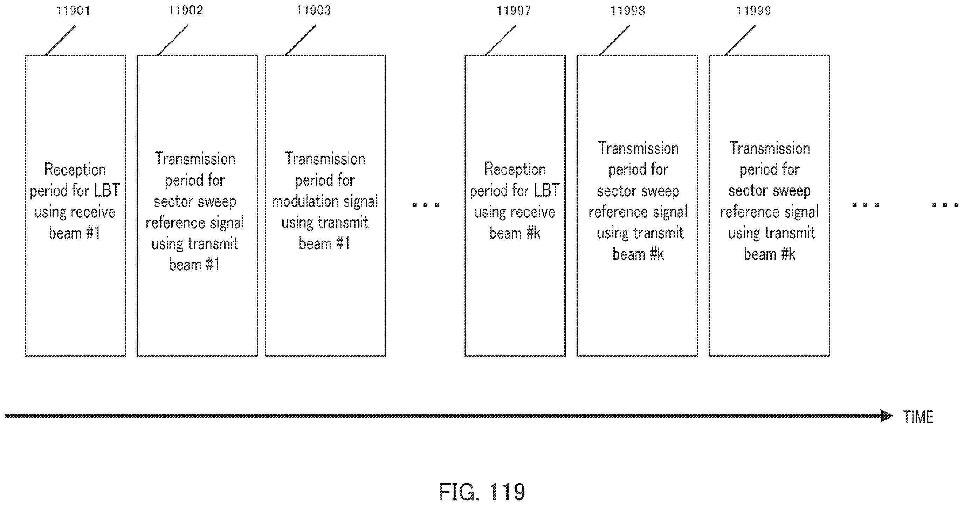

FIG. 119 illustrates an exemplary frame configuration to realize FIGS. 117A, 117B, 117C, 117D, 118A, 118B, 118C, and 118D, and the horizontal axis represents time.

"Reception period 11901 for LBT using receive beam #1" in FIG. 119 is a reception period for gNB 11401 to perform the LBT using receive beam #1 labeled 11703_1 in FIGS. 117A and 117C.

"Transmission period 11902 for sector sweep reference signal using transmit beam #1" is a transmission period for gNB 11401 when it is necessary to transmit a modulation signal using "transmit beam #1 labeled 11705_1" in FIGS. 117B and 117D.

"Transmission period 11903 for modulation signal using transmit beam #1" is a transmission period for gNB 11401 when it is necessary to transmit a modulation signal using "transmit beam #1 labeled 11705_1" in FIGS. 117B and 117D.

"Reception period 11997 for LBT using receive beam #k" in FIG. 119 is a reception period for gNB 11401 to perform the LBT using receive beam #k labeled 11703_k in FIGS. 118A and 118C.

"Transmission period 11998 for sector sweep reference signal using transmit beam #k" is a transmission period for gNB 11401 when it is necessary to transmit a modulation signal using "transmit beam #k labeled 11705_k" in FIGS. 118B and 118D.

"Transmission period 11999 for modulation signal using transmit beam #k" is a transmission period for gNB 11401 when it is necessary to transmit a modulation signal using "transmit beam #k labeled 11705_k" in FIGS. 118B and 118D.

For example, a period in which gNB 11401 performs the LBT using receive beam #1 labeled 11703_1 as in FIG. 117A is "reception period 11901 for LBT using receive beam #1". When gNB 11401 performs the LBT using receive beam #1 labeled 11703_1 and detects another signal (e.g., transmit beam 11404), gNB 11401 does not transmit a modulation signal using "transmission period 11902 for sector sweep reference signal using transmit beam #1", and does not transmit a modulation signal using "transmission period 11903 for modulation signal using transmit beam #1" either.

A period in which gNB 11401 performs the LBT using receive beam #1 labeled 11703_1 as in FIG. 117C is "reception period 11901 for LBT using receive beam #1". When gNB 11401 performs the LBT using receive beam #1 labeled 11703_1 and detects no other signal, gNB 11401 transmits a modulation signal (sector sweep reference signal) using "transmission period 11902 for sector sweep reference signal using transmit beam #1". Also, gNB 11401 may transmit a modulation signal using "transmission period 11903 for modulation signal using transmit beam #1".

A "reception period for restoring a direction using receive beam #1" may be placed instead of "reception period 11901 for LBT using receive beam #1" in the frame in FIG. 119 for a case where gNB 11401 performs the LBT using receive beam #1 labeled 11703_1, detects another signal (e.g., transmit beam 11404), does not transmit a modulation signal using a transmit beam, and later restores the use of "transmit beam #1 labeled 11705_1".

Then, gNB 11401 performs signal detection for restoring a direction using receive beam #1 in the "reception period for restoring a direction using receive beam #1", and when no signal is detected, gNB 11401 transmits a modulation signal using "transmission period 11902 for sector sweep reference signal using transmit beam #1". In addition, gNB 11401 may transmit a modulation signal using "transmission period 11903 for modulation signal using transmit beam #1".

A period in which gNB 11401 performs the LBT using receive beam #k labeled 11703_k as in FIG. 118A is "reception period 11997 for LBT using receive beam #k". When gNB 11401 performs the LBT using receive beam #k labeled 11703_k and detects another signal (e.g., transmit beam 11404), gNB 11401 does not transmit a modulation signal using "transmission period 11998 for sector sweep reference signal using transmit beam #k", and does not transmit a modulation signal using "transmission period 11999 for modulation signal using transmit beam #k" either.

A period in which gNB 11401 performs the LBT using receive beam #k labeled 11703_k as in FIG. 118C is "reception period 11997 for LBT using receive beam #k". When gNB 11401 performs the LBT using receive beam #k labeled 11703_k and detects no other signal, gNB 11401 transmits a modulation signal (sector sweep reference signal) using "transmission period 11998 for sector sweep reference signal using transmit beam #k". Also, gNB 11401 may transmit a modulation signal using "transmission period 11999 for modulation signal using transmit beam #b".

A "reception period for restoring a direction using receive beam #k" may be placed instead of "reception period 11997 for LBT using receive beam #k" in the frame in FIG. 119 for the case where gNB 11401 performs the LBT using receive beam #k labeled 11703_k, detects another signal (e.g., transmit beam 11404), does not transmit a modulation signal using a transmit beam, and later restores the use of "transmit beam #k labeled 11705_k".

Then, gNB 11401 performs signal detection for restoring a direction using receive beam #k in the "reception period for restoring a direction using receive beam #k", and when no signal is detected, gNB 11401 transmits a modulation signal using "transmission period 11998 for sector sweep reference signal using transmit beam #k". In addition, gNB 11401 may transmit a modulation signal using "transmission period 11999 for modulation signal using transmit beam #b".

Note that the frame configuration is not limited to that in FIG. 119, and the frame need not include, for example, "transmission period 11902 for sector sweep reference signal using transmit beam #1" or "transmission period 11998 for sector sweep reference signal using transmit beam #k". At this time, "transmission period 11903 for modulation signal using transmit beam #1" may include a sector sweep reference signal, PDCCH, PUCCH, synchronization signals block (SSB), physical broadcast channel block (PBCH), SS/PBCH block, etc. Likewise, "transmission period 11999 for modulation signal using transmit beam #k" may include a sector sweep reference signal, PDCCH, PUCCH, synchronization signals block (SSB), physical broadcast channel block (PBCH), SS/PBCH block, etc. Note that signals included in "transmission period 11903 for modulation signal using transmit beam #1" and "transmission period 11999 for modulation signal using transmit beam #k" are not limited to these examples.

(Embodiment 24)

In Embodiment 24, a description will be given of specific channel assignment in an unlicensed band of 60 GHz.

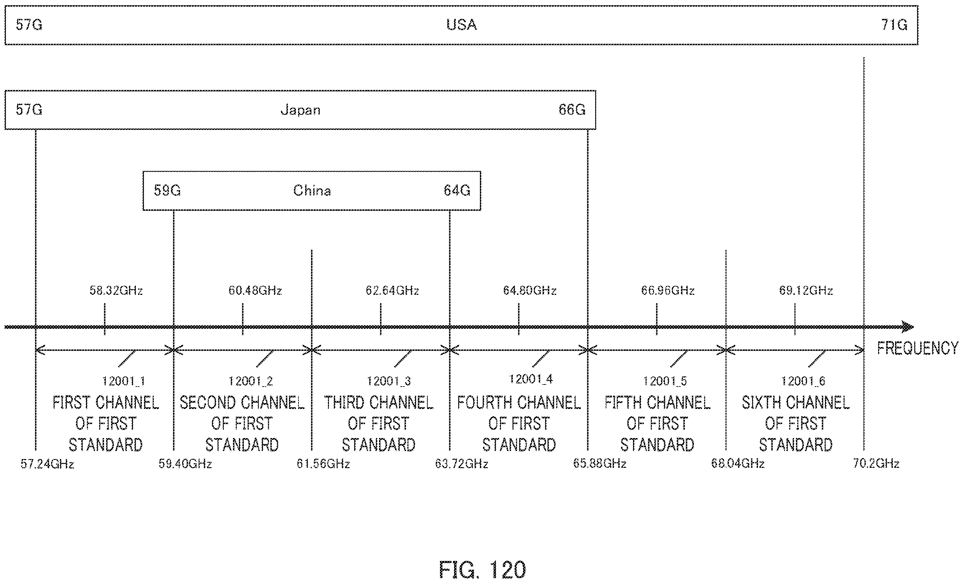

FIG. 120 illustrates a state of an unlicensed band of 60 GHz. Note that the horizontal axis represents frequency.

As illustrated in FIG. 120, 57 GHz to 71 GHz is available in the USA, 57 GHz to 66 GHz is available in Japan, and 59 GHz to 64 GHz is available in China.

As illustrated in FIG. 120, six channels can be configured in the first standard (IEEE 802.11ad/IEEE 802.11ay).

First channel 12001_1 of the first standard is configured from 57.24 GHz to 59.40 GHz, with the center frequency of 58.32 GHz.

Second channel 12001_2 of the first standard is configured from 59.40 GHz to 61.56 GHz, with the center frequency of 60.48GHz.

Third channel 12001_3 of the first standard is configured from 61.56 GHz to 63.72 GHz, with the center frequency of 62.64 GHz.

Fourth channel 12001_4 of the first standard is configured from 63.72 GHz to 65.88 GHz, with the center frequency of 64.80 GHz.

Fifth channel 12001_5 of the first standard is configured from 65.88 GHz to 68.04 GHz, with the center frequency of 66.96 GHz.

Sixth channel 12001_6 of the first standard is configured from 68.04 GHz to 70.20 GHz, with the center frequency of 69.12 GHz.

In terms of the configuration of channels in an NR system using a frequency band from 52.6 GHz to 71 GHz (both inclusive), especially a frequency band from 57 GHz to 71 GHz (both inclusive), for example, frequency utilization efficiency is more likely to improve with the consideration on the following points.

Point 1: Less vacant frequencies

In the case of the first standard, 240 MHz from 57 GHz to 57.24 GHz is not used in the USA and Japan. Making this 240 MHz available in the NR system possibly produces the effect of eliminating the need for performing LBT in the 240 MHz.

Likewise, in the case of the first standard, 800 MHz from 70.2 GHz to 71 GHz is not used in the USA. Making this 800 MHz available in the NR system possibly produces the effect of eliminating the need for performing LBT in the 800 MHz.

In the case of the first standard, 400 MHz from 59 GHz to 59.4 GHz is not used in China. Making this 400 MHz available in the NR system possibly produces the effect of eliminating the need for performing LBT in the 400 MHz.

In the case of the first standard, 280 GHz from 63.72 GHz to 64 GHz is not used in China. Making this 280 GHz available in the NR system possibly produces the effect of eliminating the need for performing LBT in the 280 MHz.

Point 2: Not performing LBT for a plurality of channels of the first standard

Considering 59 GHz to 59.80 Hz as a single channel, for example, an apparatus needs to detect a signal in first channel 12001_1 of the first standard and a signal in second channel 12001_2 of the first standard for LBT. In terms of simplification of the system, it is desired to have a channel configuration not to perform LBT for a plurality of channels of the first standard.

Point 3: Consideration on available frequency areas different for each country

It is desired to have a channel assignment that minimizes wasted frequencies as much as possible. Especially, available frequencies in China need to be considered.

Descriptions will be given below of methods on channel assignment in an NR system considering the above points.

FIG. 97 illustrates an exemplary communication state. As illustrated in FIG. 97, there are gNB #1 labeled 9701_1, gNB #2 labeled 9701_2, NR-UE #1 labeled 9702_1, NR-UE #2 labeled 9702_2, first standard AP 9711, and first standard terminal 9712 in the space. At this time, "gNB #1 labeled 9701_1, gNB #2 labeled 9701_2, NR-UE #1 labeled 9702_1, and NR-UE #2 labeled 9702_2" are included in the NR system and have any configuration in, for example, FIG. 1A, 1B, 1C, 53, 54, or the like. In the following, a description will be given of Example 1 of channel assignment in the NR system of "gNB #1 labeled 9701_1, gNB #2 labeled 9701_2, NR-UE #1 labeled 9702_1, and NR-UE #2 labeled 9702_2".

Example 1:

The NR system of "gNB #1 labeled 9701_1, gNB #2 labeled 9701_2, NR-UE #1 labeled 9702_1, and NR-UE #2 labeled 9702_2" supports "channel frequency bandwidth of 270 MHz, and/or 540 MHz, and/or 1080 MHz (1.08 GHz), and/or 2160 MHz (2.16 GHz)".

For example, "the NR system of "gNB #1 labeled 9701_1, gNB #2 labeled 9701_2, NR-UE #1 labeled 9702_1, and NR-UE #2 labeled 9702_2" supports two or more values as the channel frequency bandwidth from "channel frequency bandwidths: 270 MHz, 540 MHz, 1080 MHz (1.08 GHz), and 2160 MHz (2.16 GHz)"" as a considerable method. Note that the present embodiment is not limited to this method.

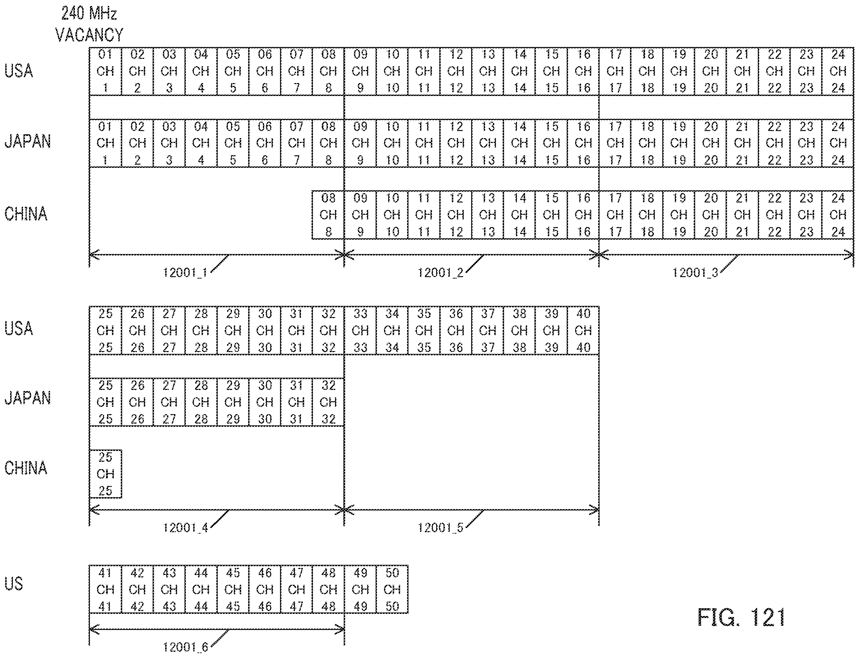

FIG. 121 illustrates exemplary channel configurations in the USA, Japan, and China in a case where the channel frequency bandwidth of the NR system of "gNB #1 labeled 9701_1, gNB #2 labeled 9701_2, NR-UE #1 labeled 9702_1, and NR-UE #2 labeled 9702_2" is 270 MHz. Note that the components that operate in the same manner as in FIG. 120 are denoted by the same reference signs.

USA:

In the USA, channels in the NR system are composed of "01CH1 to 50CH50". Note that the channel frequency bandwidth of each of"01CH1 to 50CH50" is 270 MHz.

The frequency bandwidth of first channel 12001_1 of the first standard is 2.16 GHz, and "the frequency bandwidth configured by 01CH1, 02CH2, 03CH3, 04CH4, 05CH5, 06CH6, 07CH7, and 08CH8 in the NR system" is the same as that of first channel 12001_1 of the first standard (frequency bandwidth of 2.16 GHz).

The frequency bandwidth of second channel 12001_2 of the first standard is 2.16 GHz, and "the frequency bandwidth configured by 09CH9, 10CH10, 11CH11, 12CH12, 13CH13, 14CH14, 15CH15, and 16CH16 in the NR system" is the same as that of second channel 12001_2 of the first standard (frequency bandwidth of 2.16 GHz).

The frequency bandwidth of third channel 12001_3 of the first standard is 2.16 GHz, and "the frequency bandwidth configured by 17CH17, 18CH18, 19CH19, 20CH20, 21CH21, 22CH22, 23CH23, and 24CH24 in the NR system" is the same as that of third channel 12001_3 of the first standard (frequency bandwidth of 2.16 GHz).

The frequency bandwidth of fourth channel 12001_4 of the first standard is 2.16 GHz, and "the frequency bandwidth configured by 25CH25, 26CH26, 27CH27, 28CH28, 29CH29, 30CH30, 31CH31, and 32CH32 in the NR system" is the same as that of fourth channel 12001_4 of the first standard (frequency bandwidth of 2.16 GHz).

The frequency bandwidth of fifth channel 12001_5 of the first standard is 2.16 GHz, and "the frequency bandwidth configured by 33CH33, 34CH34, 35CH35, 36CH36, 37CH37, 38CH38, 39CH39, and 40CH40 in the NR system" is the same as that of fifth channel 12001_5 of the first standard (frequency bandwidth of 2.16 GHz).

The frequency bandwidth of sixth channel 12001_6 of the first standard is 2.16 GHz, and "the frequency bandwidth configured by 41CH41, 42CH42, 43CH43, 44CH44, 45CH45, 46CH46, 47CH47, and 48CH48 in the NR system" is the same as that of sixth channel 12001_6 of the first standard (frequency bandwidth of 2.16 GHz).

"49CH49 and 50CH50 in the NR system" do not overlap with a channel of the first standard.

Japan:

In Japan, channels in the NR system are composed of "01CH1 to 32CH32". Note that the channel frequency bandwidth of each of "01CH1 to 32CH32" is 270 MHz.

The frequency bandwidth of first channel 12001_1 of the first standard is 2.16 GHz, and "the frequency bandwidth configured by 01CH1, 02CH2, 03CH3, 04CH4, 05CH5, 06CH6, 07CH7, and 08CH8 in the NR system" is the same as that of first channel 12001_1 of the first standard (frequency bandwidth of 2.16 GHz).

The frequency bandwidth of second channel 12001_2 of the first standard is 2.16 GHz, and "the frequency bandwidth configured by 09CH9, 10CH10, 11CH11, 12CH12, 13CH13, 14CH14, 15CH15, and 16CH16 in the NR system" is the same as that of second channel 12001_2 of the first standard (frequency bandwidth of 2.16 GHz).

The frequency bandwidth of third channel 12001_3 of the first standard is 2.16 GHz, and "the frequency bandwidth configured by 17CH17, 18CH18, 19CH19, 20CH20, 21CH21, 22CH22, 23CH23, and 24CH24 in the NR system" is the same as that of third channel 12001_3 of the first standard (frequency bandwidth of 2.16 GHz).

The frequency bandwidth of fourth channel 12001_4 of the first standard is 2.16 GHz, and "the frequency bandwidth configured by 25CH25, 26CH26, 27CH27, 28CH28, 29CH29, 30CH30, 31CH31, and 32CH32 in the NR system" is the same as that of fourth channel 12001_4 of the first standard (frequency bandwidth of 2.16 GHz).

China:

In China, channels in the NR system are composed of "08CH8 to 25CH25". Note that the channel frequency bandwidth of each of "08CH8 to 25CH25" is 270 MHz.

There is no "channel of the first standard available in China" in "08CH8 in the NR system".

The frequency bandwidth of second channel 12001_2 of the first standard is 2.16 GHz, and "the frequency bandwidth configured by 09CH9, 10CH10, 11CH11, 12CH12, 13CH13, 14CH14, 15CH15, and 16CH16 in the NR system" is the same as that of second channel 12001_2 of the first standard (frequency bandwidth of 2.16 GHz).

The frequency bandwidth of third channel 12001_3 of the first standard is 2.16 GHz, and "the frequency bandwidth configured by 17CH17, 18CH18, 19CH19, 20CH20, 21CH21, 22CH22, 23CH23, and 24CH24 in the NR system" is the same as that of third channel 12001_3 of the first standard (frequency bandwidth of 2.16 GHz).

There is no "channel of the first standard available in China" in "25CH25 in the NR system".

Advantages in this case will be described.

Communication can be performed by a simple configuration of preparing "01CH1 to 50CH50" as the NR system, where the frequency bandwidth of each channel is 270 MHz, and an NR apparatus selecting channels available in each country from "01CH1 to 50CH50".

Further, in the USA, an NR apparatus (e.g., gNB, NR-UE, repeater, etc.) can use "49CH49" and "50CH50" without detecting a signal of the first standard by LBT. This allows the NR apparatus more likely to perform communication using "49CH49" and "50CH50".

In China, an NR apparatus (e.g., gNB, NR-UE, repeater, etc.) can use "08CH8" and "25CH25" without detecting a signal of the first standard by LBT. This allows the NR apparatus more likely to perform communication using "08CH8" and "25CH25".

In addition, "less vacant frequencies" described as Point 1 can be achieved.

Considering the above Point 2, for example, an NR apparatus can perform carrier aggregation (channel aggregation) and/or channel bonding using a plurality of channels from "01CH1 to 08CH8" in the USA. (Accordingly, the number of channels to be used for the carrier aggregation (channel aggregation) and/or channel bonding is 8 at the most.)

Likewise, an NR apparatus can perform carrier aggregation (channel aggregation) and/or channel bonding using a plurality of channels from "09CH9 to 16CH16", for example, in the USA. (Accordingly, the number of channels to be used for the carrier aggregation (channel aggregation) and/or channel bonding is 8 at the most.)

In the USA, for example, an NR apparatus can perform carrier aggregation (channel aggregation) and/or channel bonding using a plurality of channels from "17CH17 to 24CH24". (Accordingly, the number of channels to be used for the carrier aggregation (channel aggregation) and/or channel bonding is 8 at the most.)

In the USA, for example, an NR apparatus can perform carrier aggregation (channel aggregation) and/or channel bonding using a plurality of channels from "25CH25 to 32CH32". (Accordingly, the number of channels to be used for the carrier aggregation (channel aggregation) and/or channel bonding is 8 at the most.)

In the USA, for example, an NR apparatus can perform carrier aggregation (channel aggregation) and/or channel bonding using a plurality of channels from "33CH33 to 40CH40". (Accordingly, the number of channels to be used for the carrier aggregation (channel aggregation) and/or channel bonding is 8 at the most.)

In the USA, for example, an NR apparatus can perform carrier aggregation (channel aggregation) and/or channel bonding using a plurality of channels from "41CH41 to 50CH50". (Accordingly, the number of channels to be used for the carrier aggregation (channel aggregation) and/or channel bonding is 10 at the most.)

In the USA, for example, an NR apparatus can perform carrier aggregation (channel aggregation) and/or channel bonding using two channels of "49CH49 and 50CH50" without detecting a signal of the first standard by LBT.

Performing such carrier aggregation (channel aggregation) and/or channel bonding produces the effect of achieving faster data communication without performing complicated LBT.

Note that, although the above description is about "carrier aggregation (channel aggregation) and/or channel bonding" taking Point 2 into consideration, the present embodiment is not limited to this method; thus, the number of channels to be used for the carrier aggregation (channel aggregation) and/or channel bonding only needs to be one or more.

Considering the above Point 2, for example, an NR apparatus can perform carrier aggregation (channel aggregation) and/or channel bonding using a plurality of channels from "01CH1 to 08CH8" in Japan. (Accordingly, the number of channels to be used for the carrier aggregation (channel aggregation) and/or channel bonding is 8 at the most.)

Likewise, an NR apparatus can perform carrier aggregation (channel aggregation) and/or channel bonding using a plurality of channels from "09CH9 to 16CH16", for example, in Japan. (Accordingly, the number of channels to be used for the carrier aggregation (channel aggregation) and/or channel bonding is 8 at the most.)

In Japan, for example, an NR apparatus can perform carrier aggregation (channel aggregation) and/or channel bonding using a plurality of channels from "17CH17 to 24CH24". (Accordingly, the number of channels to be used for the carrier aggregation (channel aggregation) and/or channel bonding is 8 at the most.)

In Japan, for example, an NR apparatus can perform carrier aggregation (channel aggregation) and/or channel bonding using a plurality of channels from "25CH25 to 32CH32". (Accordingly, the number of channels to be used for the carrier aggregation (channel aggregation) and/or channel bonding is 8 at the most.)

Performing such carrier aggregation (channel aggregation) and/or channel bonding produces the effect of achieving faster data communication without performing complicated LBT.

Note that, although the above description is about "carrier aggregation (channel aggregation) and/or channel bonding" taking Point 2 into consideration, the present embodiment is not limited to this method; thus, the number of channels to be used for the carrier aggregation (channel aggregation) and/or channel bonding only needs to be one or more.

Considering the above Point 2, for example, an NR apparatus can perform carrier aggregation (channel aggregation) and/or channel bonding using a plurality of channels from "08CH8 to 16CH16" in China. (Accordingly, the number of channels to be used for the carrier aggregation (channel aggregation) and/or channel bonding is 9 at the most.)

In China, for example, an NR apparatus can perform carrier aggregation (channel aggregation) and/or channel bonding using a plurality of channels from "17CH17 to 25CH25". (Accordingly, the number of channels to be used for the carrier aggregation (channel aggregation) and/or channel bonding is 9 at the most.)

Performing such carrier aggregation (channel aggregation) and/or channel bonding produces the effect of achieving faster data communication without performing complicated LBT.

Note that, although the above description is about "carrier aggregation (channel aggregation) and/or channel bonding" taking Point 2 into consideration, the present embodiment is not limited to this method; thus, the number of channels to be used for the carrier aggregation (channel aggregation) and/or channel bonding only needs to be one or more.

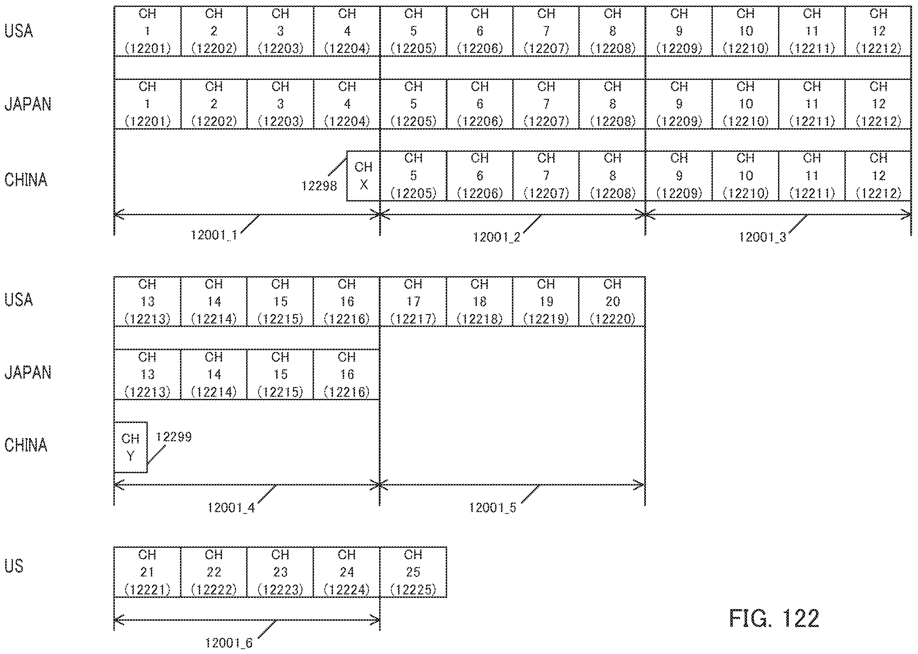

FIG. 122 illustrates exemplary channel configurations in the USA, Japan, and China in a case where the channel frequency bandwidth of the NR system of "gNB #1 labeled 9701_1, gNB #2 labeled 9701_2, NR-UE #1 labeled 9702_1, and NR-UE #2 labeled 9702_2" is 540 MHz. Note that the components that operate in the same manner as in FIG. 120 are denoted by the same reference signs.

USA:

In the USA, channels in the NR system are composed of "CH1 labeled 12201 to CH25 labeled 12225". Note that the channel frequency bandwidth of each of "CH1 labeled 12201 to CH25 labeled 12225" is 540 MHz.

The frequency bandwidth of first channel 12001_1 of the first standard is 2.16 GHz, and "the frequency bandwidth configured by CH1 labeled 12201, CH2 labeled 12202, CH3 labeled 12203, and CH4 labeled 12204 in the NR system" is the same as that of first channel 12001_1 of the first standard (frequency bandwidth of 2.16 GHz).

The frequency bandwidth of second channel 12001_2 of the first standard is 2.16 GHz, and "the frequency bandwidth configured by CH5 labeled 12205, CH6 labeled 12206, CH7 labeled 12207, and CH8 labeled 12208 in the NR system" is the same as that of second channel 12001_2 of the first standard (frequency bandwidth of 2.16 GHz).

The frequency bandwidth of third channel 12001_3 of the first standard is 2.16 GHz, and "the frequency bandwidth configured by CH9 labeled 12209, CH10 labeled 12210, CH11 labeled 12211, and CH12 labeled 12212 in the NR system" is the same as that of third channel 12001_3 of the first standard (frequency bandwidth of 2.16 GHz).

The frequency bandwidth of fourth channel 12001_4 of the first standard is 2.16 GHz, and "the frequency bandwidth configured by CH13 labeled 12213, CH14 labeled 12214, CH15 labeled 12215, and CH16 labeled 12216 in the NR system" is the same as that of fourth channel 12001_4 of the first standard (frequency bandwidth of 2.16 GHz).

The frequency bandwidth of fifth channel 12001_5 of the first standard is 2.16 GHz, and "the frequency bandwidth configured by CH17 labeled 12217, CH18 labeled 12218, CH19 labeled 12219, and CH20 labeled 12220 in the NR system" is the same as that of fifth channel 12001_5 of the first standard (frequency bandwidth of 2.16 GHz).

The frequency bandwidth of sixth channel 12001_6 of the first standard is 2.16 GHz, and "the frequency bandwidth configured by CH21 labeled 12221, CH22 labeled 12222, CH23 labeled 12223, and CH24 labeled 12224 in the NR system" is the same as that of sixth channel 12001_6 of the first standard (frequency bandwidth of 2.16 GHz).

"CH25 labeled 12225 in the NR system" does not overlap with a channel of the first standard. Note that the NR apparatus may use "49CH49 and/or 50CH50" in FIG. 121 instead of CH25 labeled 12225. At this time, "49CH49 and 50CH50 in the NR system" do not overlap with a channel of the first standard.

Japan:

In Japan, channels in the NR system are composed of "CH1 labeled 12201 to CH16 labeled 12216". Note that the channel frequency bandwidth of each of "CH1 labeled 12201 to CH16 labeled 12216" is 540 MHz.

The frequency bandwidth of first channel 12001_1 of the first standard is 2.16 GHz, and "the frequency bandwidth configured by CH1 labeled 12201, CH2 labeled 12202, CH3 labeled 12203, and CH4 labeled 12204 in the NR system" is the same as that of first channel 12001_1 of the first standard (frequency bandwidth of 2.16 GHz).

The frequency bandwidth of second channel 12001_2 of the first standard is 2.16 GHz, and "the frequency bandwidth configured by CH5 labeled 12205, CH6 labeled 12206, CH7 labeled 12207, and CH8 labeled 12208 in the NR system" is the same as that of second channel 12001_2 of the first standard (frequency bandwidth of 2.16 GHz).

The frequency bandwidth of third channel 12001_3 of the first standard is 2.16 GHz, and "the frequency bandwidth configured by CH9 labeled 12209, CH10 labeled 12210, CH11 labeled 12211, and CH12 labeled 12212 in the NR system" is the same as that of third channel 12001_3 of the first standard (frequency bandwidth of 2.16 GHz).

The frequency bandwidth of fourth channel 12001_4 of the first standard is 2.16 GHz, and "the frequency bandwidth configured by CH13 labeled 12213, CH14 labeled 12214, CH15 labeled 12215, and CH16 labeled 12216 in the NR system" is the same as that of fourth channel 12001_4 of the first standard (frequency bandwidth of 2.16 GHz).

China:

In China, channels in the NR system are composed of "CH5 labeled 12205 to CH12 labeled 12212" and "CHX labeled 12298 and CHY labeled 12299". Note that the channel frequency bandwidth of each of "CH5 labeled 12205 to CH12 labeled 12212" is 540 MHz. In addition, the channel frequency bandwidth of each of "CHX labeled 12298 and CHY labeled 12299" is 270 MHz. Note that, in China, when the NR system does not support 270 MHz, "CHX labeled 12298 and CHY labeled 12299" are not supported.

There is no "channel of the first standard available in China" in "CHX labeled 12298 in the NR system".

The frequency bandwidth of second channel 12001_2 of the first standard is 2.16 GHz, and "the frequency bandwidth configured by CH5 labeled 12205, CH6 labeled 12206, CH7 labeled 12207, and CH8 labeled 12208 in the NR system" is the same as that of second channel 12001_2 of the first standard (frequency bandwidth of 2.16 GHz).

The frequency bandwidth of third channel 12001_3 of the first standard is 2.16 GHz, and "the frequency bandwidth configured by CH9 labeled 12209, CH10 labeled 12210, CH11 labeled 12211, and CH12 labeled 12212 in the NR system" is the same as that of third channel 12001_3 of the first standard (frequency bandwidth of 2.16 GHz).

There is no "channel of the first standard available in China" in "CHY labeled 12299 in the NR system".

Advantages in this case will be described.

Communication can be performed by a simple configuration of preparing "CH1 labeled 12201 to CH25 labeled 12225" as the NR system, where the frequency bandwidth of each channel is 540 MHz, and an NR apparatus selecting channels available in each country from "CH1 labeled 12201 to CH25 labeled 12225". Especially in China, an NR apparatus may select "CHX labeled 12298 and CHY labeled 12299".

Further, in the USA, an NR apparatus (e.g., gNB, NR-UE, repeater, etc.) can use "CH25 labeled 12225" without detecting a signal of the first standard by LBT. This allows the NR apparatus more likely to perform communication using "CH25 labeled 12225".

In the USA, an NR apparatus may use "49CH49 and/or 50CH50" in FIG. 121 instead of "CH25 labeled 12225". In this case, the NR apparatus can use "49CH49 and/or 50CH50" without detecting a signal of the first standard by LBT. This allows the NR apparatus more likely to perform communication using "49CH49 and/or 50CH50".

In China, an NR apparatus (e.g., gNB, NR-UE, repeater, etc.) can use "CHX labeled 12298" and "CHY labeled 12299" without detecting a signal of the first standard by LBT. This allows the NR apparatus more likely to perform communication using "CHX labeled 12298" and "CHY labeled 12299".

In addition, "less vacant frequencies" described as Point 1 can be achieved.

Considering the above Point 2, for example, an NR apparatus can perform carrier aggregation (channel aggregation) and/or channel bonding using a plurality of channels from "CH1 labeled 12201 to CH4 labeled 12204" in the USA. (Accordingly, the number of channels to be used for the carrier aggregation (channel aggregation) and/or channel bonding is 4 at the most.)

Likewise, an NR apparatus can perform carrier aggregation (channel aggregation) and/or channel bonding using a plurality of channels from "CH5 labeled 12205 to CH8 labeled 12208", for example, in the USA. (Accordingly, the number of channels to be used for the carrier aggregation (channel aggregation) and/or channel bonding is 4 at the most.)

In the USA, for example, an NR apparatus can perform carrier aggregation (channel aggregation) and/or channel bonding using a plurality of channels from "CH9 labeled 12209 to CH12 labeled 12212". (Accordingly, the number of channels to be used for the carrier aggregation (channel aggregation) and/or channel bonding is 4 at the most.)

In the USA, for example, an NR apparatus can perform carrier aggregation (channel aggregation) and/or channel bonding using a plurality of channels from "CH13 labeled 12213 to CH16 labeled 12216". (Accordingly, the number of channels to be used for the carrier aggregation (channel aggregation) and/or channel bonding is 4 at the most.)

In the USA, for example, an NR apparatus can perform carrier aggregation (channel aggregation) and/or channel bonding using a plurality of channels from "CH17 labeled 12217 to CH20 labeled 12220". (Accordingly, the number of channels to be used for the carrier aggregation (channel aggregation) and/or channel bonding is 4 at the most.)

In the USA, for example, an NR apparatus can perform carrier aggregation (channel aggregation) and/or channel bonding using a plurality of channels from "CH21 labeled 12221 to CH25 labeled 12225". (Accordingly, the number of channels to be used for the carrier aggregation (channel aggregation) and/or channel bonding is 5 at the most.)

As another example, in the USA, an NR apparatus can perform carrier aggregation (channel aggregation) and/or channel bonding using a plurality of channels from ""CH21 labeled 12221 to CH24 labeled 12224" and "49CH49 and 50CH50 in FIG. 121"", for example.

Performing such carrier aggregation (channel aggregation) and/or channel bonding produces the effect of achieving faster data communication without performing complicated LBT.

Note that, although the above description is about "carrier aggregation (channel aggregation) and/or channel bonding" taking Point 2 into consideration, the present embodiment is not limited to this method; thus, the number of channels to be used for the carrier aggregation (channel aggregation) and/or channel bonding only needs to be one or more.

Considering the above Point 2, for example, an NR apparatus can perform carrier aggregation (channel aggregation) and/or channel bonding using a plurality of channels from "CH1 labeled 12201 to CH4 labeled 12204" in Japan. (Accordingly, the number of channels to be used for the carrier aggregation (channel aggregation) and/or channel bonding is 4 at the most.)

Likewise, an NR apparatus can perform carrier aggregation (channel aggregation) and/or channel bonding using a plurality of channels from "CH5 labeled 12205 to CH8 labeled 12208", for example, in Japan. (Accordingly, the number of channels to be used for the carrier aggregation (channel aggregation) and/or channel bonding is 4 at the most.)

In Japan, for example, an NR apparatus can perform carrier aggregation (channel aggregation) and/or channel bonding using a plurality of channels from "CH9 labeled 12209 to CH12 labeled 12212". (Accordingly, the number of channels to be used for the carrier aggregation (channel aggregation) and/or channel bonding is 4 at the most.)

In Japan, for example, an NR apparatus can perform carrier aggregation (channel aggregation) and/or channel bonding using a plurality of channels from "CH13 labeled 12213 to CH16 labeled 12216". (Accordingly, the number of channels to be used for the carrier aggregation (channel aggregation) and/or channel bonding is 4 at the most.)

Performing such carrier aggregation (channel aggregation) and/or channel bonding produces the effect of achieving faster data communication without performing complicated LBT.

Note that, although the above description is about "carrier aggregation (channel aggregation) and/or channel bonding" taking Point 2 into consideration, the present embodiment is not limited to this method; thus, the number of channels to be used for the carrier aggregation (channel aggregation) and/or channel bonding only needs to be one or more.

Considering the above Point 2, for example, an NR apparatus can perform carrier aggregation (channel aggregation) and/or channel bonding using a plurality of channels from "CH5 labeled 12205 to CH8 labeled 12208" in China. (Accordingly, the number of channels to be used for the carrier aggregation (channel aggregation) and/or channel bonding is 4 at the most.)

As another method, in China, an NR apparatus can perform carrier aggregation (channel aggregation) and/or channel bonding using a plurality of channels from ""CH5 labeled 12205 to CH8 labeled 12208" and "CHX labeled 12298"", for example.

In China, for example, an NR apparatus can perform carrier aggregation (channel aggregation) and/or channel bonding using a plurality of channels from "CH9 labeled 12209 to CH12 labeled 12212". (Accordingly, the number of channels to be used for the carrier aggregation (channel aggregation) and/or channel bonding is 4 at the most.)

As another method, in China, an NR apparatus can perform carrier aggregation (channel aggregation) and/or channel bonding using a plurality of channels from ""CH9 labeled 12209 to CH12 labeled 12212" and "CHY labeled 12299"", for example.

Performing such carrier aggregation (channel aggregation) and/or channel bonding produces the effect of achieving faster data communication without performing complicated LBT.

Note that, although the above description is about "carrier aggregation (channel aggregation) and/or channel bonding" taking Point 2 into consideration, the present embodiment is not limited to this method; thus, the number of channels to be used for the carrier aggregation (channel aggregation) and/or channel bonding only needs to be one or more.

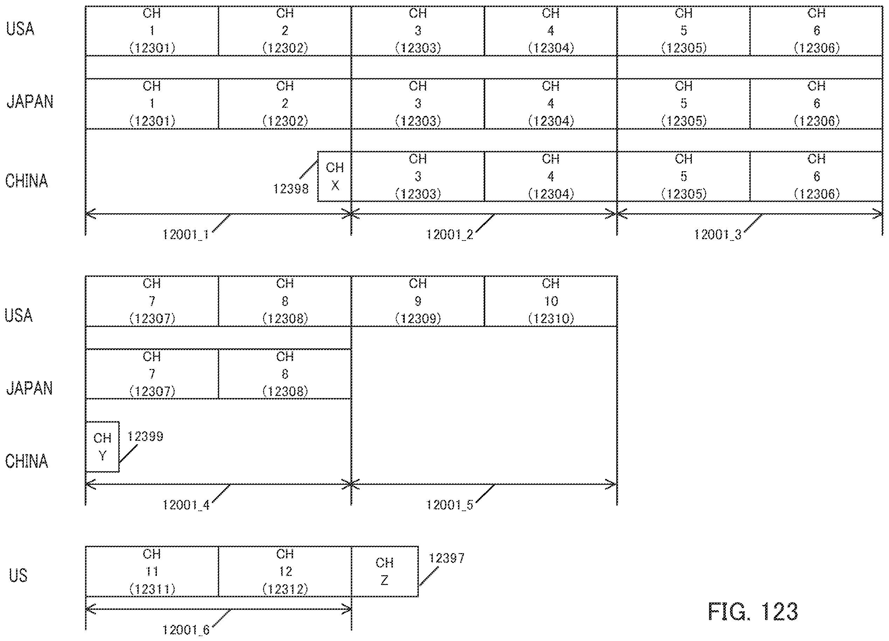

FIG. 123 illustrates exemplary channel configurations in the USA, Japan, and China in a case where the channel frequency bandwidth of the NR system of "gNB #1 labeled 9701_1, gNB #2 labeled 9701_2, NR-UE #1 labeled 9702_1, and NR-UE #2 labeled 9702_2" is 1080 MHz (1.08 GHz). Note that the components that operate in the same manner as in FIG. 120 are denoted by the same reference signs.

USA:

In the USA, channels in the NR system are composed of "CH1 labeled 12301 to CH12 labeled 12312" and "CHZ labeled 12397". Note that the channel frequency bandwidth of each of "CH1 labeled 12301 to CH12 labeled 12312" is 1080 MHz. In addition, the channel frequency bandwidth of "CHZ labeled 12397" is 540 MHz. Note that, in the USA, when the NR system does not support 540 MHz, "CHZ labeled 12397" is not supported.

The frequency bandwidth of first channel 12001_1 of the first standard is 2.16 GHz, and "the frequency bandwidth configured by CH1 labeled 12301 and CH2 labeled 12302 in the NR system" is the same as that of first channel 12001_1 of the first standard (frequency bandwidth of 2.16 GHz).

The frequency bandwidth of second channel 12001_2 of the first standard is 2.16 GHz, and "the frequency bandwidth configured by CH3 labeled 12303 and CH4 labeled 12304 in the NR system" is the same as that of second channel 12001_2 of the first standard (frequency bandwidth of 2.16 GHz).

The frequency bandwidth of third channel 12001_3 of the first standard is 2.16 GHz, and "the frequency bandwidth configured by CH5 labeled 12305 and CH6 labeled 12306 in the NR system" is the same as that of third channel 12001_3 of the first standard (frequency bandwidth of 2.16 GHz).

The frequency bandwidth of fourth channel 12001_4 of the first standard is 2.16 GHz, and "the frequency bandwidth configured by CH7 labeled 12307 and CH8 labeled 12308 in the NR system" is the same as that of fourth channel 12001_4 of the first standard (frequency bandwidth of 2.16 GHz).

The frequency bandwidth of fifth channel 12001_5 of the first standard is 2.16 GHz, and "the frequency bandwidth configured by CH9 labeled 12309 and CH10 labeled 12310 in the NR system" is the same as that of fifth channel 12001_5 of the first standard (frequency bandwidth of 2.16 GHz).

The frequency bandwidth of sixth channel 12001_6 of the first standard is 2.16 GHz, and "the frequency bandwidth configured by CH11 labeled 12311 and CH12 labeled 12312 in the NR system" is the same as that of sixth channel 12001_6 of the first standard (frequency bandwidth of 2.16 GHz).

"CHZ labeled 12397 in the NR system" does not overlap with a channel of the first standard. Note that the NR apparatus may use "49CH49 and/or 50CH50" in FIG. 121 instead of CHZ labeled 12397. At this time, "49CH49 and 50CH50 in the NR system" do not overlap with a channel of the first standard.

Japan:

In Japan, channels in the NR system are composed of "CH1 labeled 12301 to CH8 labeled 12308". Note that the channel frequency bandwidth of each of "CH1 labeled 12301 to CH8 labeled 12308" is 1080 MHz.

The frequency bandwidth of first channel 12001_1 of the first standard is 2.16 GHz, and "the frequency bandwidth configured by CH1 labeled 12301 and CH2 labeled 12302 in the NR system" is the same as that of first channel 12001_1 of the first standard (frequency bandwidth of 2.16 GHz).

The frequency bandwidth of second channel 12001_2 of the first standard is 2.16 GHz, and "the frequency bandwidth configured by CH3 labeled 12303 and CH4 labeled 12304 in the NR system" is the same as that of second channel 12001_2 of the first standard (frequency bandwidth of 2.16 GHz).

The frequency bandwidth of third channel 12001_3 of the first standard is 2.16 GHz, and "the frequency bandwidth configured by CH5 labeled 12305 and CH6 labeled 12306 in the NR system" is the same as that of third channel 12001_3 of the first standard (frequency bandwidth of 2.16 GHz).

The frequency bandwidth of fourth channel 12001_4 of the first standard is 2.16 GHz, and "the frequency bandwidth configured by CH7 labeled 12307 and CH8 labeled 12308 in the NR system" is the same as that of fourth channel 12001_4 of the first standard (frequency bandwidth of 2.16 GHz).

China:

In China, channels in the NR system are composed of "CH3 labeled 12303 to CH6 labeled 12306" and "CHX labeled 12398 and CHY labeled 12399". Note that the channel frequency bandwidth of each of "CH3 labeled 12303 to CH6 labeled 12306" is 1080 MHz. In addition, the channel frequency bandwidth of each of "CHX labeled 12398 and CHY labeled 12399" is 270 MHz. Note that, in China, when the NR system does not support 270 MHz, "CHX labeled 12398 and CHY labeled 12399" are not supported.

There is no "channel of the first standard available in China" in "CHX labeled 12398 in the NR system".

The frequency bandwidth of second channel 12001_2 of the first standard is 2.16 GHz, and "the frequency bandwidth configured by CH3 labeled 12303 and CH4 labeled 12304 in the NR system" is the same as that of second channel 12001_2 of the first standard (frequency bandwidth of 2.16 GHz).

The frequency bandwidth of third channel 12001_3 of the first standard is 2.16 GHz, and "the frequency bandwidth configured by CH5 labeled 12305 and CH6 labeled 12306 in the NR system" is the same as that of third channel 12001_3 of the first standard (frequency bandwidth of 2.16 GHz).

There is no "channel of the first standard available in China" in "CHY labeled 12399 in the NR system".

Advantages in this case will be described.

"CH1 labeled 12301 to CH12 labeled 12312" are prepared as the NR system, where the frequency bandwidth of each channel is 1080 MHz, and an NR apparatus selects channels available in each country from "CH1 labeled 12301 to CH12 labeled 12312". In the USA, an NR apparatus may select "CHZ labeled 12397", and in China, an NR apparatus may select "CHX labeled 12398 and CHY labeled 12399". It is possible to perform communication by such a simple setting.

Further, in the USA, an NR apparatus (e.g., gNB, NR-UE, repeater, etc.) can use "CHZ labeled 12397" without detecting a signal of the first standard by LBT. This allows the NR apparatus more likely to perform communication using "CHZ labeled 12397".

In the USA, an NR apparatus may use "49CH49 and/or 50CH50" in FIG. 121 instead of "CHZ labeled 12397". In this case, the NR apparatus can use "49CH49 and/or 50CH50" without detecting a signal of the first standard by LBT. This allows the NR apparatus more likely to perform communication using "49CH49 and/or 50CH50".

In China, an NR apparatus (e.g., gNB, NR-UE, repeater, etc.) can use "CHX labeled 12398" and "CHY labeled 12399" without detecting a signal of the first standard by LBT. This allows the NR apparatus more likely to perform communication using "CHX labeled 12398" and "CHY labeled 12399".

In addition, "less vacant frequencies" described as Point 1 can be achieved.

Considering the above Point 2, for example, an NR apparatus can perform carrier aggregation (channel aggregation) and/or channel bonding using a plurality of channels from "CH1 labeled 12301 to CH2 labeled 12302" in the USA. (Accordingly, the number of channels to be used for the carrier aggregation (channel aggregation) and/or channel bonding is 2 at the most.)

Likewise, an NR apparatus can perform carrier aggregation (channel aggregation) and/or channel bonding using a plurality of channels from "CH3 labeled 12303 to CH4 labeled 12304", for example, in the USA. (Accordingly, the number of channels to be used for the carrier aggregation (channel aggregation) and/or channel bonding is 2 at the most.)

In the USA, for example, an NR apparatus can perform carrier aggregation (channel aggregation) and/or channel bonding using a plurality of channels from "CH5 labeled 12305 to CH6 labeled 12306". (Accordingly, the number of channels to be used for the carrier aggregation (channel aggregation) and/or channel bonding is 2 at the most.)

In the USA, for example, an NR apparatus can perform carrier aggregation (channel aggregation) and/or channel bonding using a plurality of channels from "CH7 labeled 12307 to CH8 labeled 12308". (Accordingly, the number of channels to be used for the carrier aggregation (channel aggregation) and/or channel bonding is 2 at the most.)

In the USA, for example, an NR apparatus can perform carrier aggregation (channel aggregation) and/or channel bonding using a plurality of channels from "CH9 labeled 12309 to CH10 labeled 12310". (Accordingly, the number of channels to be used for the carrier aggregation (channel aggregation) and/or channel bonding is 2 at the most.)

In the USA, for example, an NR apparatus can perform carrier aggregation (channel aggregation) and/or channel bonding using a plurality of channels from "CH11 labeled 12311 to CH12 labeled 12312". (Accordingly, the number of channels to be used for the carrier aggregation (channel aggregation) and/or channel bonding is 2 at the most.)

As another method, in the USA, an NR apparatus can perform carrier aggregation (channel aggregation) and/or channel bonding using a plurality of channels from ""CH11 labeled 12311 to CH12 labeled 12312" and "CHZ labeled 12397"", for example.

As still another example, in the USA, an NR apparatus can perform carrier aggregation (channel aggregation) and/or channel bonding using a plurality of channels from ""CH11 labeled 12311 to CH12 labeled 12312" and "49CH49 and 50CH50 in FIG. 121"", for example.

Performing such carrier aggregation (channel aggregation) and/or channel bonding produces the effect of achieving faster data communication without performing complicated LBT.

Note that, although the above description is about "carrier aggregation (channel aggregation) and/or channel bonding" taking Point 2 into consideration, the present embodiment is not limited to this method; thus, the number of channels to be used for the carrier aggregation (channel aggregation) and/or channel bonding only needs to be one or more.

Considering the above Point 2, for example, an NR apparatus can perform carrier aggregation (channel aggregation) and/or channel bonding using a plurality of channels from "CH1 labeled 12301 to CH2 labeled 12302" in Japan. (Accordingly, the number of channels to be used for the carrier aggregation (channel aggregation) and/or channel bonding is 2 at the most.)

Likewise, an NR apparatus can perform carrier aggregation (channel aggregation) and/or channel bonding using a plurality of channels from "CH3 labeled 12303 to CH4 labeled 12304", for example, in Japan. (Accordingly, the number of channels to be used for the carrier aggregation (channel aggregation) and/or channel bonding is 2 at the most.)

In Japan, for example, an NR apparatus can perform carrier aggregation (channel aggregation) and/or channel bonding using a plurality of channels from "CH5 labeled 12305 to CH6 labeled 12306". (Accordingly, the number of channels to be used for the carrier aggregation (channel aggregation) and/or channel bonding is 2 at the most.)

In Japan, for example, an NR apparatus can perform carrier aggregation (channel aggregation) and/or channel bonding using a plurality of channels from "CH7 labeled 12307 to CH8 labeled 12308". (Accordingly, the number of channels to be used for the carrier aggregation (channel aggregation) and/or channel bonding is 2 at the most.)

Performing such carrier aggregation (channel aggregation) and/or channel bonding produces the effect of achieving faster data communication without performing complicated LBT.

Note that, although the above description is about "carrier aggregation (channel aggregation) and/or channel bonding" taking Point 2 into consideration, the present embodiment is not limited to this method; thus, the number of channels to be used for the carrier aggregation (channel aggregation) and/or channel bonding only needs to be one or more.

Considering the above Point 2, for example, an NR apparatus can perform carrier aggregation (channel aggregation) and/or channel bonding using a plurality of channels from "CH3 labeled 12303 to CH4 labeled 12304" in China. (Accordingly, the number of channels to be used for the carrier aggregation (channel aggregation) and/or channel bonding is 2 at the most.)

As another method, in China, an NR apparatus can perform carrier aggregation (channel aggregation) and/or channel bonding using a plurality of channels from "CH3 labeled 12303, CH4 labeled 12304, and CHX labeled 12398", for example.

In China, for example, an NR apparatus can perform carrier aggregation (channel aggregation) and/or channel bonding using a plurality of channels from "CH5 labeled 12305 to CH6 labeled 12306". (Accordingly, the number of channels to be used for the carrier aggregation (channel aggregation) and/or channel bonding is 2 at the most.)

As another method, in China, an NR apparatus can perform carrier aggregation (channel aggregation) and/or channel bonding using a plurality of channels from "CH5 labeled 12305, CH6 labeled 12306, and CHY labeled 12399", for example.

Performing such carrier aggregation (channel aggregation) and/or channel bonding produces the effect of achieving faster data communication without performing complicated LBT.

Note that, although the above description is about "carrier aggregation (channel aggregation) and/or channel bonding" taking Point 2 into consideration, the present embodiment is not limited to this method; thus, the number of channels to be used for the carrier aggregation (channel aggregation) and/or channel bonding only needs to be one or more.

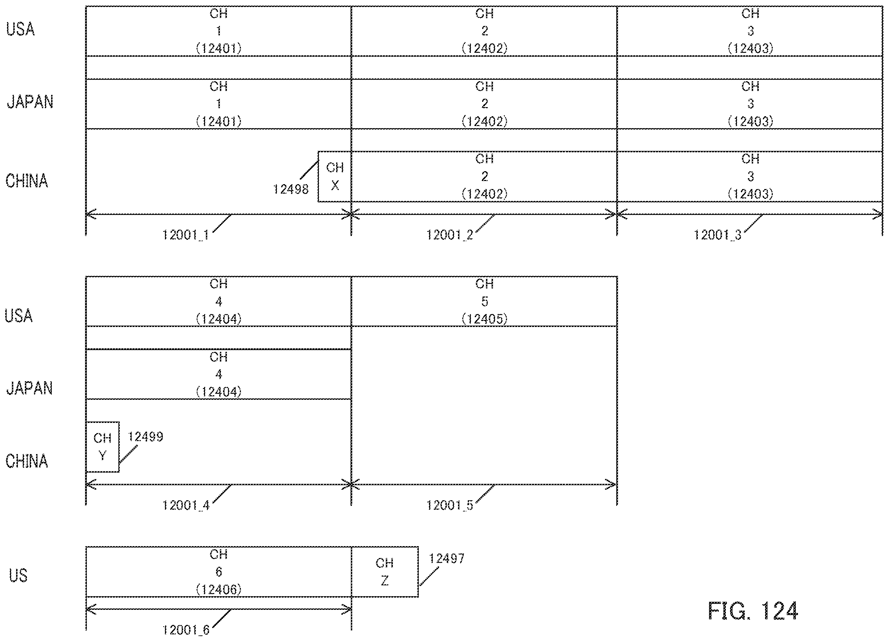

FIG. 124 illustrates exemplary channel configurations in the USA, Japan, and China in a case where the channel frequency bandwidth of the NR system of "gNB #1 labeled 9701_1, gNB #2 labeled 9701_2, NR-UE #1 labeled 9702_1, and NR-UE #2 labeled 9702_2" is 2160 MHz (2.16 GHz). Note that the components that operate in the same manner as in FIG. 120 are denoted by the same reference signs.

USA:

In the USA, channels in the NR system are composed of "CH1 labeled 12401 to CH6 labeled 12406" and "CHZ labeled 12497". Note that the channel frequency bandwidth of each of "CH1 labeled 12401 to CH6 labeled 12406" is 2160 MHz. In addition, the channel frequency bandwidth of "CHZ labeled 12497" is 540 MHz. Note that, in the USA, when the NR system does not support 540 MHz, "CHZ labeled 12497" is not supported.

The frequency bandwidth of first channel 12001_1 of the first standard is 2.16 GHz, and "CH1 labeled 12401 in the NR system" has the same frequency bandwidth as first channel 12001_1 of the first standard (frequency bandwidth of 2.16 GHz).

The frequency bandwidth of second channel 12001_2 of the first standard is 2.16 GHz, and "CH2 labeled 12402 in the NR system" has the same frequency bandwidth as second channel 12001_2 of the first standard (frequency bandwidth of 2.16 GHz).

The frequency bandwidth of third channel 12001_3 of the first standard is 2.16 GHz, and "CH3 labeled 12403 in the NR system" has the same frequency bandwidth as third channel 12001_3 of the first standard (frequency bandwidth of 2.16 GHz).

The frequency bandwidth of fourth channel 12001_4 of the first standard is 2.16 GHz, and "CH4 labeled 12404 in the NR system" has the same frequency bandwidth as fourth channel 12001_4 of the first standard (frequency bandwidth of 2.16 GHz).

The frequency bandwidth of fifth channel 12001_5 of the first standard is 2.16 GHz, and "CH5 labeled 12405 in the NR system" has the same frequency bandwidth as fifth channel 12001_5 of the first standard (frequency bandwidth of 2.16 GHz).

The frequency bandwidth of sixth channel 12001_6 of the first standard is 2.16 GHz, and "CH6 labeled 12406 in the NR system" has the same frequency bandwidth as sixth channel 12001_6 of the first standard (frequency bandwidth of 2.16 GHz).

"CHZ labeled 12497 in the NR system" does not overlap with a channel of the first standard. Note that the NR apparatus may use "49CH49 and/or 50CH50" in FIG. 121 instead of CHZ labeled 12497. At this time, "49CH49 and 50CH50 in the NR system" do not overlap with a channel of the first standard.

Japan:

In Japan, channels in the NR system are composed of "CH1 labeled 12401 to CH4 labeled 12404". Note that the channel frequency bandwidth of each of "CH1 labeled 12401 to CH4 labeled 12404" is 2160 MHz.

The frequency bandwidth of first channel 12001_1 of the first standard is 2.16 GHz, and "CH1 labeled 12401 in the NR system" has the same frequency bandwidth as first channel 12001_1 of the first standard (frequency bandwidth of 2.16 GHz).

The frequency bandwidth of second channel 12001_2 of the first standard is 2.16 GHz, and "CH2 labeled 12402 in the NR system" has the same frequency bandwidth as second channel 12001_2 of the first standard (frequency bandwidth of 2.16 GHz).

The frequency bandwidth of third channel 12001_3 of the first standard is 2.16 GHz, and "CH3 labeled 12403 in the NR system" has the same frequency bandwidth as third channel 12001_3 of the first standard (frequency bandwidth of 2.16 GHz).

The frequency bandwidth of fourth channel 12001_4 of the first standard is 2.16 GHz, and "CH4 labeled 12404 in the NR system" has the same frequency bandwidth as fourth channel 12001_4 of the first standard (frequency bandwidth of 2.16 GHz).

China:

In China, channels in the NR system are composed of "CH2 labeled 12402 and CH3 labeled 12403" and "CHX labeled 12498 and CHY labeled 12499".

Note that the channel frequency bandwidth of each of "CH2 labeled 12402 and CH3 labeled 12403" is 2160 MHz. In addition, the channel frequency bandwidth of each of "CHX labeled 12498 and CHY labeled 12499" is 270 MHz. Note that, in China, when the NR system does not support 270 MHz, "CHX labeled 12498 and CHY labeled 12499" are not supported.

There is no "channel of the first standard available in China" in "CHX labeled 12498 in the NR system".

The frequency bandwidth of second channel 12001_2 of the first standard is 2.16 GHz, and "CH2 labeled 12402 in the NR system" has the same frequency bandwidth as second channel 12001_2 of the first standard (frequency bandwidth of 2.16 GHz).

The frequency bandwidth of third channel 12001_3 of the first standard is 2.16 GHz, and "CH3 labeled 12403 in the NR system" has the same frequency bandwidth as third channel 12001_3 of the first standard (frequency bandwidth of 2.16 GHz).

There is no "channel of the first standard available in China" in "CHY labeled 12499 in the NR system".

Advantages in this case will be described.

"CH1 labeled 12401 to CH6 labeled 12406" are prepared as the NR system, where the frequency bandwidth of each channel is 2160 MHz, and an NR apparatus selects channels available in each country from "CH1 labeled 12401 to CH6 labeled 12406". In the USA, an NR apparatus may select "CHZ labeled 12497", and in China, an NR apparatus may select "CHX labeled 12498 and CHY labeled 12499". It is possible to perform communication by such a simple setting.

Further, in the USA, an NR apparatus (e.g., gNB, NR-UE, repeater, etc.) can use "CHZ labeled 12497" without detecting a signal of the first standard by LBT. This allows the NR apparatus more likely to perform communication using "CHZ labeled 12497".

In the USA, an NR apparatus may use "49CH49 and/or 50CH50" in FIG. 121 instead of "CHZ labeled 12497". In this case, the NR apparatus can use "49CH49 and/or 50CH50" without detecting a signal of the first standard by LBT. This allows the NR apparatus more likely to perform communication using "49CH49 and/or 50CH50".

In China, an NR apparatus (e.g., gNB, NR-UE, repeater, etc.) can use "CHX labeled 12498" and "CHY labeled 12499" without detecting a signal of the first standard by LBT. This allows the NR apparatus more likely to perform communication using "CHX labeled 12498" and "CHY labeled 12499".

In addition, "less vacant frequencies" described as Point 1 can be achieved.

Considering the above Point 2, for example, an NR apparatus uses a single channel alone from "CH1 labeled 12401 to CH6 labeled 12406" in the USA. (Accordingly, the number of channels to be used for the carrier aggregation (channel aggregation) and/or channel bonding is 1 at the most.)

As another method, in the USA, an NR apparatus can perform carrier aggregation (channel aggregation) and/or channel bonding using a plurality of channels of "CH6 labeled 12406 and CHZ labeled 12497", for example.

As still another example, in the USA, an NR apparatus can perform carrier aggregation (channel aggregation) and/or channel bonding using a plurality of channels from ""CH6 labeled 12406" and "49CH49 and 50CH50 in FIG. 121"", for example.

Performing such carrier aggregation (channel aggregation) and/or channel bonding produces the effect of achieving faster data communication without performing complicated LBT.

Note that, although the above description is about "carrier aggregation (channel aggregation) and/or channel bonding" taking Point 2 into consideration, the present embodiment is not limited to this method; thus, the number of channels to be used for the carrier aggregation (channel aggregation) and/or channel bonding only needs to be one or more.

Considering the above Point 2, for example, an NR apparatus uses a single channel alone from "CH1 labeled 12401 to CH4 labeled 12404" in Japan. (Accordingly, the number of channels to be used for the carrier aggregation (channel aggregation) and/or channel bonding is 1 at the most.)

Performing such carrier aggregation (channel aggregation) and/or channel bonding produces the effect of achieving faster data communication without performing complicated LBT.

Note that, although the above description is about "carrier aggregation (channel aggregation) and/or channel bonding" taking Point 2 into consideration, the present embodiment is not limited to this method; thus, the number of channels to be used for the carrier aggregation (channel aggregation) and/or channel bonding only needs to be one or more.

Considering the above Point 2, for example, an NR apparatus uses a single channel alone from "CH2 labeled 12402 to CH3 labeled 12403" in China. (Accordingly, the number of channels to be used for the carrier aggregation (channel aggregation) and/or channel bonding is 1 at the most.)

As another method, in China, an NR apparatus can perform carrier aggregation (channel aggregation) and/or channel bonding using a plurality of channels of "CH2 labeled 12402 and CHX labeled 12498", for example. Further, in China, an NR apparatus can perform carrier aggregation (channel aggregation) and/or channel bonding using a plurality of channels of "CH3 labeled 12403 and CHY labeled 12499", for example.

Performing such carrier aggregation (channel aggregation) and/or channel bonding produces the effect of achieving faster data communication without performing complicated LBT.

Note that, although the above description is about "carrier aggregation (channel aggregation) and/or channel bonding" taking Point 2 into consideration, the present embodiment is not limited to this method; thus, the number of channels to be used for the carrier aggregation (channel aggregation) and/or channel bonding only needs to be one or more.

In the present embodiment, descriptions have been given with an example of "the USA, Japan, and China", but the same can be implemented and the same effects can be obtained for other countries by the same method or by modifying the example of "the USA, Japan, and China".

In FIG. 121, the center frequencies of respective channels are as follows.

The center frequency of 01CH1 is 57.375 GHz. The center frequency of 02CH2 is 57.645 GHz. The center frequency of 03CH3 is 57.915 GHz. The center frequency of 04CH4 is 58.185 GHz. The center frequency of 05CH5 is 58.455 GHz. The center frequency of 06CH6 is 58.725 GHz. The center frequency of 07CH7 is 58.995 GHz. The center frequency of 08CH8 is 59.265GHz.

The center frequency of 09CH9 is 59.535 GHz. The center frequency of 10CH10 is 59.805 GHz. The center frequency of 11CH11 is 60.075 GHz. The center frequency of 12CH12 is 60.345 GHz. The center frequency of 13CH13 is 60.615 GHz. The center frequency of 14CH14 is 60.885 GHz. The center frequency of 15CH15 is 61.155 GHz. The center frequency of 16CH16 is 61.425 GHz.

The center frequency of 17CH17 is 61.695 GHz. The center frequency of 18CH18 is 61.965 GHz. The center frequency of 19CH19 is 62.235 GHz. The center frequency of 20CH20 is 62.505 GHz. The center frequency of 21CH21 is 62.775 GHz. The center frequency of 22CH22 is 63.045 GHz. The center frequency of 23CH23 is 63.315 GHz. The center frequency of 24CH24 is 63.585 GHz.

The center frequency of 25CH25 is 63.855 GHz. The center frequency of 26CH26 is 64.125 GHz. The center frequency of 27CH27 is 64.395 GHz. The center frequency of 28CH28 is 64.665 GHz. The center frequency of 29CH29 is 64.935 GHz. The center frequency of 30CH30 is 65.205 GHz. The center frequency of 31CH31 is 65.475 GHz. The center frequency of 32CH32 is 65.745 GHz.

The center frequency of 33CH33 is 66.015 GHz. The center frequency of 34CH34 is 66.285 GHz. The center frequency of 35CH35 is 66.555 GHz. The center frequency of 36CH36 is 66.825 GHz. The center frequency of 37CH37 is 67.095 GHz. The center frequency of 38CH38 is 67.365 GHz. The center frequency of 39CH39 is 67.635 GHz. The center frequency of 40CH40 is 67.905 GHz.

The center frequency of 41CH41 is 68.175 GHz. The center frequency of 42CH42 is 68.445 GHz. The center frequency of 43CH43 is 68.715 GHz. The center frequency of 44CH44 is 68.985 GHz. The center frequency of 45CH45 is 69.255 GHz. The center frequency of 46CH46 is 69.525 GHz. The center frequency of 47CH47 is 69.795 GHz. The center frequency of 48CH48 is 70.065 GHz.

The center frequency of 49CH49 is 70.335 GHz. The center frequency of 50CH50 is 70.605 GHz.

In FIG. 122, the center frequencies of respective channels are as follows.

The center frequency of CH1 labeled 12201 is 57.51 GHz. The center frequency of CH2 labeled 12202 is 58.05 GHz. The center frequency of CH3 labeled 12203 is 58.59 GHz. The center frequency of CH4 labeled 12204 is 59.13 GHz.

The center frequency of CH5 labeled 12205 is 59.67 GHz. The center frequency of CH6 labeled 12206 is 60.21 GHz. The center frequency of CH7 labeled 12207 is 60.75 GHz. The center frequency of CH8 labeled 12208 is 61.29 GHz.

The center frequency of CH9 labeled 12209 is 61.83 GHz. The center frequency of CH10 labeled 12210 is 62.37 GHz. The center frequency of CH11 labeled 12211 is 62.91 GHz. The center frequency of CH12 labeled 12212 is 63.45 GHz.

The center frequency of CH13 labeled 12213 is 63.99 GHz. The center frequency of CH14 labeled 12214 is 64.53 GHz. The center frequency of CH15 labeled 12215 is 65.07 GHz. The center frequency of CH16 labeled 12216 is 65.61 GHz.

The center frequency of CH17 labeled 12217 is 66.15 GHz. The center frequency of CH18 labeled 12218 is 66.69 GHz. The center frequency of CH19 labeled 12219 is 67.23 GHz. The center frequency of CH20 labeled 12220 is 67.77 GHz.

The center frequency of CH21 labeled 12221 is 68.31 GHz. The center frequency of CH22 labeled 12222 is 68.85 GHz. The center frequency of CH23 in 12223 labeled 69.39 GHz. The center frequency of CH24 labeled 12224 is 69.93 GHz.

The center frequency of CH25 labeled 12225 is 70.47 GHz. The center frequency of CHX labeled 12298 is 59.265 GHz. The center frequency of CHY labeled 12299 is 63.855 GHz.

In FIG. 123, the center frequencies of respective channels are as follows.

The center frequency of CH1 labeled 12301 is 57.78 GHz. The center frequency of CH2 labeled 12302 is 58.86 GHz.

The center frequency of CH3 labeled 12303 is 59.94 GHz. The center frequency of CH4 labeled 12304 is 61.02 GHz.

The center frequency of CH5 labeled 12305 is 62.10 GHz. The center frequency of CH6 labeled 12306 is 63.18 GHz.

The center frequency of CH7 labeled 12307 is 64.26 GHz. The center frequency of CH8 labeled 12308 is 65.34 GHz.

The center frequency of CH9 labeled 12309 is 66.42 GHz. The center frequency of CH10 labeled 12310 is 67.50 GHz.

The center frequency of CH11 labeled 12311 is 68.58 GHz. The center frequency of CH12 labeled 12312 is 69.66 GHz.

The center frequency of CHX labeled 12398 is 59.265 GHz. The center frequency of CHY labeled 12399 is 63.855 GHz. The center frequency of CHZ labeled 12397 is 70.47 GHz.

In FIG. 124, the center frequencies of respective channels are as follows.

The center frequency of CH1 labeled 12401 is 58.32 GHz. The center frequency of CH2 labeled 12402 is 60.48 GHz. The center frequency of CH3 labeled 12403 is 62.64 GHz. The center frequency of CH4 labeled 12404 is 64.80 GHz. The center frequency of CH5 labeled 12405 is 66.96 GHz. The center frequency of CH6 labeled 12406 is 69.12 GHz.

The center frequency of CHX labeled 12498 is 59.265 GHz. The center frequency of CHY labeled 12499 is 63.855 GHz. The center frequency of CHZ labeled 12497 is 70.47 GHz.

The channel(s) illustrated in FIGS. 121 to 124 may be referred to as NR operating band(s) or NR band(s). In addition, NR operating band(s) may be formed using a plurality of channel(s) illustrated in FIGS. 121 to 124 (e.g., carrier aggregation).

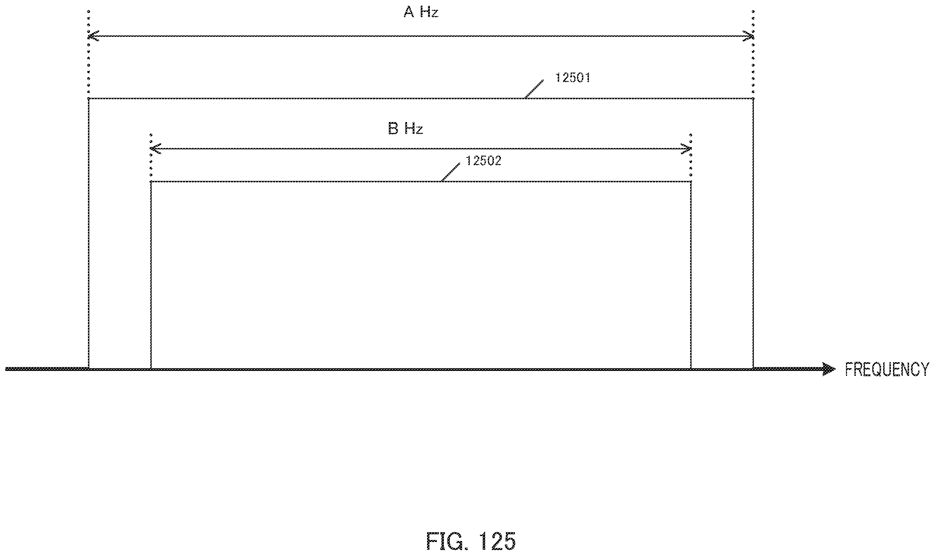

FIG. 125 illustrates an exemplary relationship between the bandwidth of a channel illustrated in FIGS. 121 to 124 and the transmission bandwidth. Note that the horizontal axis represents frequency in FIG. 125.

In FIG. 125, 12501 represents a channel and corresponds to a channel illustrated in FIGS. 121 to 124, for example. Channel 12501 has a channel bandwidth of A [Hz] (A is a real number).

12502 in FIG. 125 represents a signal to be transmitted and has a frequency bandwidth of B [Hz] (B is a real number), where A > B.

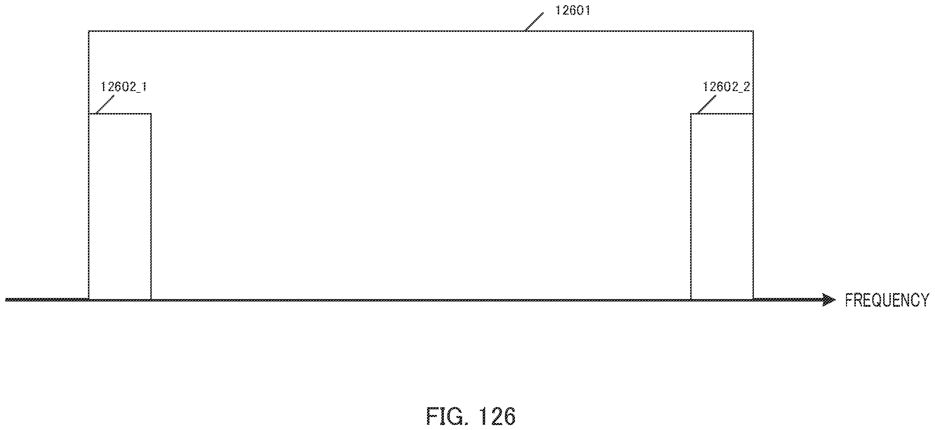

FIG. 126 illustrates an exemplary relationship between the bandwidth of a channel illustrated in FIGS. 121 to 124 and the transmission bandwidth, which is different from the example in FIG. 125. Note that the horizontal axis represents frequency in FIG. 126.

In FIG. 126, 12601 represents a channel and corresponds to a channel illustrated in FIGS. 121 to 124, for example.

12602_1 and 12602_2 in FIG. 126 are guard bands, which are periods with no signal, in channel 12601, and a signal to be transmitted is present in a section other than the guard bands.

Note that two or more of "FIG. 125, FIG. 126, and carrier aggregation" may be combined.

Further, channel raster may be introduced for the channels illustrated in FIGS. 121 to 124 and transmission signals present in the channels.

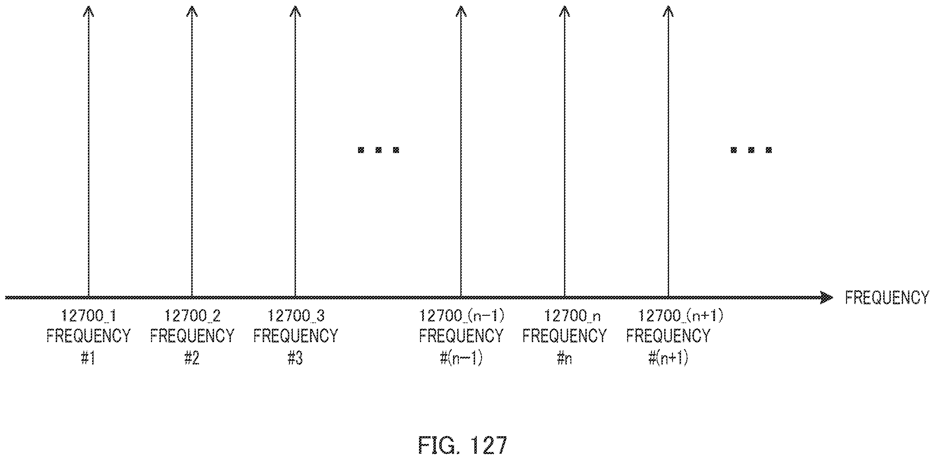

FIG. 127 illustrates an exemplary state of channel raster. Note that the horizontal axis represents frequency in FIG. 127. As illustrated in FIG. 127, there are frequency #1 labeled 12700_1, frequency #2 labeled 12700_2, frequency #3 labeled 12700_3, ..., frequency #(n-1) labeled 12700_(n-1), frequency #n labeled 12700_n, frequency #(n+1) labeled 12700_(n+1), and so forth, as channel raster. Note that the interval between "frequency #(i+1) labeled 12700_(i+1)" and "frequency #i labeled 12700_i" (referred to as the frequency interval for channel raster here) is X [Hz]. Note that i is an integer equal to or greater than 1.

Additionally, the maximum frequency interval among frequencies present for channel raster in FIG. 127 (referred to as the maximum frequency interval for channel raster here) is Y [Hz]. When there are frequency #1 labeled 12700_1 to frequency #100 labeled 12700_100 as channel raster, for example, maximum frequency interval Y for channel raster is $99 \times X$. As another example, when there are frequency #1 labeled 12700_1 to frequency #G labeled 12700_G as channel raster, for example, maximum frequency interval Y for channel raster is $(G-1) \times X$. Note that G is an integer equal to or greater than 1.

The center frequency of a signal present in a channel (e.g., component carrier (CC)) may be configured to be any of frequencies present as channel raster.

For example, the center frequency of a signal present in a channel (e.g., component carrier (CC)) is configured to be any frequency among "frequency #1 labeled 12700_1, frequency #2 labeled 12700_2, frequency #3 labeled 12700_3, ..., frequency #(n-1) labeled 12700_(n-1), frequency #n labeled 12700_n, frequency #(n+1) labeled 12700_(n+1), and so forth".

It is assumed that the frequency interval for channel raster in the NR channel assignment in FIG. 121 is X121, the frequency interval for channel raster in the NR channel assignment in FIG. 122 is X122, the frequency interval for channel raster in the NR channel assignment in FIG. 123 is X123, and the frequency interval for channel raster in the NR channel assignment in FIG. 124 is X124.

In this case, "X121 ≠ X122" and/or "X121 ≠ X123" and/or "X121 ≠ X124" and/or "X122 ≠ X123" and/or "X122 ≠ X124" and/or "X123 ≠ X124" may be satisfied. Such a flexible configuration of the channel raster interval possibly realizes flexible LBT.

It is assumed that the maximum frequency interval for channel raster in the NR channel assignment in FIG. 121 is Y121, the maximum frequency interval for channel raster in the NR channel assignment in FIG. 122 is Y122, the maximum frequency interval for channel raster in the NR channel assignment in FIG. 123 is Y123, and the maximum frequency interval for channel raster in the NR channel assignment in FIG. 124 is Y124.

In this case, "Y121 ≠ Y122" and/or "Y121 ≠ Y123" and/or "Y121 ≠ Y124" and/or "Y122 ≠ Y123" and/or "Y122 ≠ Y124" and/or "Y123 ≠ Y124" may be satisfied. Such a flexible configuration of the maximum frequency interval for channel raster possibly realizes flexible LBT.

In the NR channel assignment in FIG. 121, it is assumed that the frequency interval for channel raster in the USA is X121A, the frequency interval for channel raster in Japan is X121B, and the frequency interval for channel raster in China is X121C.

In this case, "X121A≠ X121B" and/or "X121A≠ X121C" and/or "X121B ≠ X121C" may be satisfied. Such a flexible configuration of the channel raster interval possibly realizes flexible LBT.

In the NR channel assignment in FIG. 122, it is assumed that the frequency interval for channel raster in the USA is X122A, the frequency interval for channel raster in Japan is X122B, and the frequency interval for channel raster in China is X122C.

In this case, "X122A≠ X122B" and/or "X122A≠ X122C" and/or "X122B ≠ X122C" may be satisfied. Such a flexible configuration of the channel raster interval possibly realizes flexible LBT.

In the NR channel assignment in FIG. 123, it is assumed that the frequency interval for channel raster in the USA is X123A, the frequency interval for channel raster in Japan is X123B, and the frequency interval for channel raster in China is X123C.

In this case, "X123A≠ X123B" and/or "X123A≠ X123C" and/or "X123B ≠ X123C" may be satisfied. Such a flexible configuration of the channel raster interval possibly realizes flexible LBT.

In the NR channel assignment in FIG. 124, it is assumed that the frequency interval for channel raster in the USA is X124A, the frequency interval for channel raster in Japan is X124B, and the frequency interval for channel raster in China is X124C.

In this case, "X124A≠ X124B" and/or "X124A≠ X124C" and/or "X124B ≠ X124C" may be satisfied. Such a flexible configuration of the channel raster interval possibly realizes flexible LBT.

In the NR channel assignment in FIG. 121, it is assumed that the maximum frequency interval for channel raster in the USA is Y121A, the maximum frequency interval for channel raster in Japan is Y121B, and the maximum frequency interval for channel raster in China is Y121C.

In this case, "Y121A≠ Y121B" and/or "Y121A≠ Y121C" and/or "Y121B ≠ Y121C" may be satisfied. Such a flexible configuration of the maximum frequency interval for channel raster possibly realizes flexible LBT.

In the NR channel assignment in FIG. 122, it is assumed that the maximum frequency interval for channel raster in the USA is Y122A, the maximum frequency interval for channel raster in Japan is Y122B, and the maximum frequency interval for channel raster in China is Y122C.

In this case, "Y122A≠ Y122B" and/or "Y122A≠ Y122C" and/or "Y122B ≠ Y122C" may be satisfied. Such a flexible configuration of the maximum frequency interval for channel raster possibly realizes flexible LBT.

In the NR channel assignment in FIG. 123, it is assumed that the maximum frequency interval for channel raster in the USA is Y123A, the maximum frequency interval for channel raster in Japan is Y123B, and the maximum frequency interval for channel raster in China is Y123C.

In this case, "Y123A≠ Y123B" and/or "Y123A≠ Y123C" and/or "Y123B ≠ Y123C" may be satisfied. Such a flexible configuration of the maximum frequency interval for channel raster possibly realizes flexible LBT.

In the NR channel assignment in FIG. 124, it is assumed that the maximum frequency interval for channel raster in the USA is Y124A, the maximum frequency interval for channel raster in Japan is Y124B, and the maximum frequency interval for channel raster in China is Y124C.

In this case, "Y124A≠ Y124B" and/or "Y124A≠ Y124C" and/or "Y124B ≠ Y124C" may be satisfied. Such a flexible configuration of the maximum frequency interval for channel raster possibly realizes flexible LBT.

The above example is about the examples of FIGS. 121 to 124, but the present embodiment is not limited to this. For example, it is assumed that there are two different channel assignment methods, which are channel assignment M and channel assignment N, in an NR system using the frequency from 57 GHz to 71 GHz (both inclusive) although not limited to this frequency.

The frequency interval for channel raster in channel assignment M in the NR system is XM, and the frequency interval for channel raster in channel assignment N in the NR system is XN.

In this case, "XM ≠ XN" may be satisfied. Such a flexible configuration of the channel raster interval possibly realizes flexible LBT.

In addition, the maximum frequency interval for channel raster in channel assignment M in the NR system is YM, and the maximum frequency interval for channel raster in channel assignment N in the NR system is YN.

In this case, "YM ≠ YN" may be satisfied. Such a flexible configuration of the maximum frequency interval for channel raster possibly realizes flexible LBT.

In channel assignment M in the NR system, it is assumed that the frequency interval for channel raster in the USA is XMA, the frequency interval for channel raster in Japan is XMB, and the frequency interval for channel raster in China is XMC.

In this case, "XMA ≠ XMB" and/or "XMA ≠ XMC" and/or "XNM ≠ XMC" may be satisfied. Such a flexible configuration of the channel raster interval possibly realizes flexible LBT.

In channel assignment M in the NR system, it is assumed that the maximum frequency interval for channel raster in the USA is YMA, the maximum frequency interval for channel raster in Japan is YMB, and the maximum frequency interval for channel raster in China is YMC.

In this case, "YMA ≠ YMB" and/or "YMA ≠ YMC" and/or "YMB ≠ YMC" may be satisfied. Such a flexible configuration of the maximum frequency interval for channel raster possibly realizes flexible LBT.

(Embodiment 25)

In Embodiment 25, a description will be given of specific channel assignment in an unlicensed band of 60 GHz, which is different from Embodiment 24.

FIG. 120 illustrates a state of an unlicensed band of 60 GHz. Note that the horizontal axis represents frequency.

As illustrated in FIG. 120, 57 GHz to 71 GHz is available in the USA, 57 GHz to 66 GHz is available in Japan, and 59 GHz to 64 GHz is available in China.

As illustrated in FIG. 120, six channels can be configured in the first standard (IEEE 802.11ad/IEEE 802.11ay).

First channel 12001_1 of the first standard is configured from 57.24 GHz to 59.40 GHz, with the center frequency of 58.32 GHz.

Second channel 12001_2 of the first standard is configured from 59.40 GHz to 61.56 GHz, with the center frequency of 60.48GHz.

Third channel 12001_3 of the first standard is configured from 61.56 GHz to 63.72 GHz, with the center frequency of 62.64 GHz.

Fourth channel 12001_4 of the first standard is configured from 63.72 GHz to 65.88 GHz, with the center frequency of 64.80 GHz.

Fifth channel 12001_5 of the first standard is configured from 65.88 GHz to 68.04 GHz, with the center frequency of 66.96 GHz.

Sixth channel 12001_6 of the first standard is configured from 68.04 GHz to 70.20 GHz, with the center frequency of 69.12 GHz.

In terms of the configuration of channels in an NR system using a frequency band from 52.6 GHz to 71 GHz (both inclusive), especially a frequency band from 57 GHz to 71 GHz (both inclusive), for example, frequency utilization efficiency is more likely to improve with the consideration on the following points.

Point 1: Less vacant frequencies

In the case of the first standard, 240 MHz from 57 GHz to 57.24 GHz is not used in the USA and Japan. Making this 240 MHz available in the NR system possibly produces the effect of eliminating the need for performing LBT in the 240 MHz.

Likewise, in the case of the first standard, 800 MHz from 70.2 GHz to 71 GHz is not used in the USA. Making this 800 MHz available in the NR system possibly produces the effect of eliminating the need for performing LBT in the 800 MHz.

In the case of the first standard, 400 MHz from 59 GHz to 59.4 GHz is not used in China. Making this 400 MHz available in the NR system possibly produces the effect of eliminating the need for performing LBT in the 400 MHz.

In the case of the first standard, 280 GHz from 63.72 GHz to 64 GHz is not used in China. Making this 280 GHz available in the NR system possibly produces the effect of eliminating the need for performing LBT in the 280 MHz.

Point 2: Not performing LBT for a plurality of channels of the first standard

Considering 59 GHz to 59.80 Hz as a single channel, for example, an apparatus needs to detect a signal in first channel 12001_1 of the first standard and a signal in second channel 12001_2 of the first standard for LBT. In terms of simplification of the system, it is desired to have a channel configuration not to perform LBT for a plurality of channels of the first standard.

Point 3: Consideration on available frequency areas different for each country

It is desired to have a channel assignment that minimizes wasted frequencies as much as possible. Especially, available frequencies in China need to be considered.

Descriptions will be given below of methods on channel assignment in an NR system considering the above points.

FIG. 97 illustrates an exemplary communication state. As illustrated in FIG. 97, there are gNB #1 labeled 9701_1, gNB #2 labeled 9701_2, NR-UE #1 labeled 9702_1, NR-UE #2 labeled 9702_2, first standard AP 9711, and first standard terminal 9712 in the space. At this time, "gNB #1 labeled 9701_1, gNB #2 labeled 9701_2, NR-UE #1 labeled 9702_1, and NR-UE #2 labeled 9702_2" are included in the NR system and have any configuration in, for example, FIG. 1A, 1B, 1C, 53, 54, or the like. In the following, a description will be given of Example 2 of channel assignment in the NR system of "gNB #1 labeled 9701_1, gNB #2 labeled 9701_2, NR-UE #1 labeled 9702_1, and NR-UE #2 labeled 9702_2".

Example 2:

The NR system of "gNB #1 labeled 9701_1, gNB #2 labeled 9701_2, NR-UE #1 labeled 9702_1, and NR-UE #2 labeled 9702_2" supports "channel frequency bandwidth of 240 MHz, and/or 480 MHz, and/or 960 MHz, and/or 2160 MHz (2.16 GHz)".

For example, "the NR system of "gNB #1 labeled 9701_1, gNB #2 labeled 9701_2, NR-UE #1 labeled 9702_1, and NR-UE #2 labeled 9702_2" supports two or more values as the channel frequency bandwidth from "channel frequency bandwidths: 240 MHz, 480 MHz, 960 MHz, and 2160 MHz (2.16 GHz)"" as a considerable method. Note that the present embodiment is not limited to this method.

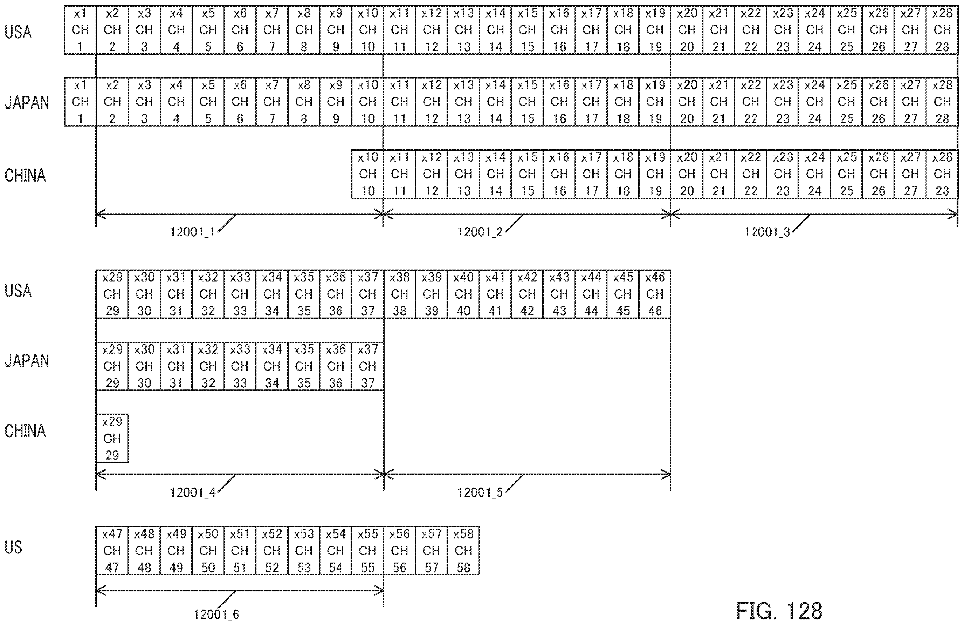

FIG. 128 illustrates exemplary channel configurations in the USA, Japan, and China in a case where the channel frequency bandwidth of the NR system of "gNB #1 labeled 9701_1, gNB #2 labeled 9701_2, NR-UE #1 labeled 9702_1, and NR-UE #2 labeled 9702_2" is 240 MHz. Note that the components that operate in the same manner as in FIG. 120 are denoted by the same reference signs.

USA:

In the USA, channels in the NR system are composed of "x1CH1 to x58CH58". Note that the channel frequency bandwidth of each of "x1CH1 to x58CH58" is 240 MHz.

"x1CH1 in the NR system" does not overlap with a channel of the first standard.

The frequency bandwidth of first channel 12001_1 of the first standard is 2.16 GHz, and "the frequency bandwidth configured by x2CH2, x3CH3, x4CH4, x5CH5, x6CH6, x7CH7, x8CH8, x9CH9, and x10CH10 in the NR system" is the same as that of first channel 12001_1 of the first standard (frequency bandwidth of 2.16 GHz).

The frequency bandwidth of second channel 12001_2 of the first standard is 2.16 GHz, and "the frequency bandwidth configured by x11CH11, x12CH12, x13CH13, x14CH14, x15CH15, x16CH16, x17CH17, x18CH18, and x19CH19 in the NR system" is the same as that of second channel 12001_2 of the first standard (frequency bandwidth of 2.16 GHz).

The frequency bandwidth of third channel 12001_3 of the first standard is 2.16 GHz, and "the frequency bandwidth configured by x20CH20, x21CH21, x22CH22, x23CH23, x24CH24, x25CH25, x26CH26, x27CH27, and x28CH28 in the NR system" is the same as that of third channel 12001_3 of the first standard (frequency bandwidth of 2.16 GHz).

The frequency bandwidth of fourth channel 12001_4 of the first standard is 2.16 GHz, and "the frequency bandwidth configured by x29CH29, x30CH30, x31CH31, x32CH32, x33CH33, x34CH34, x35CH35, x36CH36, and x37CH37 in the NR system" is the same as that of fourth channel 12001_4 of the first standard (frequency bandwidth of 2.16 GHz).

The frequency bandwidth of fifth channel 12001_5 of the first standard is 2.16 GHz, and "the frequency bandwidth configured by x38CH38, x39CH39, x40CH40, x41CH41, x42CH42, x43CH43, x44CH44, x45CH45, and x46CH46 in the NR system" is the same as that of fifth channel 12001_5 of the first standard (frequency bandwidth of 2.16 GHz).

The frequency bandwidth of sixth channel 12001_6 of the first standard is 2.16 GHz, and "the frequency bandwidth configured by x47CH47, x48CH48, x49CH49, x50CH50, x51CH51, x52CH52, x53CH53, x54CH54, and x55CH55 in the NR system" is the same as that of sixth channel 12001_6 of the first standard (frequency bandwidth of 2.16 GHz).

"x56CH56, x57CH57, and x58CH58 in the NR system" do not overlap with a channel of the first standard.

Japan:

In Japan, channels in the NR system are composed of "x1CH1 to x37CH37". Note that the channel frequency bandwidth of each of "x1CH1 to x37CH37" is 240 MHz.

"x1CH1 in the NR system" does not overlap with a channel of the first standard.

The frequency bandwidth of first channel 12001_1 of the first standard is 2.16 GHz, and "the frequency bandwidth configured by x2CH2, x3CH3, x4CH4, x5CH5, x6CH6, x7CH7, x8CH8, x9CH9, and x10CH10 in the NR system" is the same as that of first channel 12001_1 of the first standard (frequency bandwidth of 2.16 GHz).

The frequency bandwidth of second channel 12001_2 of the first standard is 2.16 GHz, and "the frequency bandwidth configured by x11CH11, x12CH12, x13CH13, x14CH14, x15CH15, x16CH16, x17CH17, x18CH18, and x19CH19 in the NR system" is the same as that of second channel 12001_2 of the first standard (frequency bandwidth of 2.16 GHz).

The frequency bandwidth of third channel 12001_3 of the first standard is 2.16 GHz, and "the frequency bandwidth configured by x20CH20, x21CH21, x22CH22, x23CH23, x24CH24, x25CH25, x26CH26, x27CH27, and x28CH28 in the NR system" is the same as that of third channel 12001_3 of the first standard (frequency bandwidth of 2.16 GHz).

The frequency bandwidth of fourth channel 12001_4 of the first standard is 2.16 GHz, and "the frequency bandwidth configured by x29CH29, x30CH30, x31CH31, x32CH32, x33CH33, x34CH34, x35CH35, x36CH36, and x37CH37 in the NR system" is the same as that of fourth channel 12001_4 of the first standard (frequency bandwidth of 2.16 GHz).

China:

In China, channels in the NR system are composed of "x10CH10 to x29CH29". Note that the channel frequency bandwidth of each of "x10CH10 to x29CH29" is 240 MHz.

There is no "channel of the first standard available in China" in "x10CH10 in the NR system".

The frequency bandwidth of second channel 12001_2 of the first standard is 2.16 GHz, and "the frequency bandwidth configured by x11CH11, x12CH12, x13CH13, x14CH14, x15CH15, x16CH16, x17CH17, x18CH18, and x19CH19 in the NR system" is the same as that of second channel 12001_2 of the first standard (frequency bandwidth of 2.16 GHz).

The frequency bandwidth of third channel 12001_3 of the first standard is 2.16 GHz, and "the frequency bandwidth configured by x20CH20, x21CH21, x22CH22, x23CH23, x24CH24, x25CH25, x26CH26, x27CH27, and x28CH28 in the NR system" is the same as that of third channel 12001_3 of the first standard (frequency bandwidth of 2.16 GHz).

There is no "channel of the first standard available in China" in "x29CH29 in the NR system".

Advantages in this case will be described.

Communication can be performed by a simple configuration of preparing "x1CH1 to x58CH58" as the NR system, where the frequency bandwidth of each channel is 240 MHz, and an NR apparatus selecting channels available in each country from "x1CH1 to x58CH58".

Further, in the USA, an NR apparatus (e.g., gNB, NR-UE, repeater, etc.) can use "x1CH1", "x56CH56", "x57CH57", and "x58CH58" without detecting a signal of the first standard by LBT. This allows the NR apparatus more likely to perform communication using "x1CH1", "x56CH56", "x57CH57", and "x58CH58".

In Japan, an NR apparatus (e.g., gNB, NR-UE, repeater, etc.) can use "x1CH1" without detecting a signal of the first standard by LBT. This allows the NR apparatus more likely to perform communication using "x1CH1".

In China, an NR apparatus (e.g., gNB, NR-UE, repeater, etc.) can use "x10CH10" and "x29CH29" without detecting a signal of the first standard by LBT. This allows the NR apparatus more likely to perform communication using "x10CH10" and "x29CH29".

In addition, "less vacant frequencies" described as Point 1 can be achieved.

Considering the above Point 2, for example, an NR apparatus can perform carrier aggregation (channel aggregation) and/or channel bonding using a plurality of channels from "x1CH1 to x10CH10" in the USA. (Accordingly, the number of channels to be used for the carrier aggregation (channel aggregation) and/or channel bonding is 10 at the most.)

Likewise, an NR apparatus can perform carrier aggregation (channel aggregation) and/or channel bonding using a plurality of channels from "x11CH11 to x19CH19", for example, in the USA. (Accordingly, the number of channels to be used for the carrier aggregation (channel aggregation) and/or channel bonding is 9 at the most.)

In the USA, for example, an NR apparatus can perform carrier aggregation (channel aggregation) and/or channel bonding using a plurality of channels from "x20CH20 to x28CH28". (Accordingly, the number of channels to be used for the carrier aggregation (channel aggregation) and/or channel bonding is 9 at the most.)

In the USA, for example, an NR apparatus can perform carrier aggregation (channel aggregation) and/or channel bonding using a plurality of channels from "x29CH29 to x37CH37". (Accordingly, the number of channels to be used for the carrier aggregation (channel aggregation) and/or channel bonding is 9 at the most.)

In the USA, for example, an NR apparatus can perform carrier aggregation (channel aggregation) and/or channel bonding using a plurality of channels from "x38CH38 to x46CH46". (Accordingly, the number of channels to be used for the carrier aggregation (channel aggregation) and/or channel bonding is 9 at the most.)

In the USA, for example, an NR apparatus can perform carrier aggregation (channel aggregation) and/or channel bonding using a plurality of channels from "x47CH47 to x58CH58". (Accordingly, the number of channels to be used for the carrier aggregation (channel aggregation) and/or channel bonding is 12 at the most.)

In the USA, for example, an NR apparatus can perform carrier aggregation (channel aggregation) and/or channel bonding using three channels of "x56CH56 to x58CH58" without detecting a signal of the first standard by LBT.

Performing such carrier aggregation (channel aggregation) and/or channel bonding produces the effect of achieving faster data communication without performing complicated LBT.

Note that, although the above description is about "carrier aggregation (channel aggregation) and/or channel bonding" taking Point 2 into consideration, the present embodiment is not limited to this method; thus, the number of channels to be used for the carrier aggregation (channel aggregation) and/or channel bonding only needs to be one or more.

Considering the above Point 2, for example, an NR apparatus can perform carrier aggregation (channel aggregation) and/or channel bonding using a plurality of channels from "x1CH1 to x10CH10" in Japan. (Accordingly, the number of channels to be used for the carrier aggregation (channel aggregation) and/or channel bonding is 10 at the most.)

Likewise, an NR apparatus can perform carrier aggregation (channel aggregation) and/or channel bonding using a plurality of channels from "x11CH11 to x19CH19", for example, in Japan. (Accordingly, the number of channels to be used for the carrier aggregation (channel aggregation) and/or channel bonding is 9 at the most.)

In Japan, for example, an NR apparatus can perform carrier aggregation (channel aggregation) and/or channel bonding using a plurality of channels from "x20CH20 to x28CH28". (Accordingly, the number of channels to be used for the carrier aggregation (channel aggregation) and/or channel bonding is 9 at the most.)

In Japan, for example, an NR apparatus can perform carrier aggregation (channel aggregation) and/or channel bonding using a plurality of channels from "x29CH29 to x37CH37". (Accordingly, the number of channels to be used for the carrier aggregation (channel aggregation) and/or channel bonding is 9 at the most.)

Performing such carrier aggregation (channel aggregation) and/or channel bonding produces the effect of achieving faster data communication without performing complicated LBT.

Note that, although the above description is about "carrier aggregation (channel aggregation) and/or channel bonding" taking Point 2 into consideration, the present embodiment is not limited to this method; thus, the number of channels to be used for the carrier aggregation (channel aggregation) and/or channel bonding only needs to be one or more.

Considering the above Point 2, for example, an NR apparatus can perform carrier aggregation (channel aggregation) and/or channel bonding using a plurality of channels from "x10CH10 to x19CH19" in China. (Accordingly, the number of channels to be used for the carrier aggregation (channel aggregation) and/or channel bonding is 10 at the most.)

In China, for example, an NR apparatus can perform carrier aggregation (channel aggregation) and/or channel bonding using a plurality of channels from "x20CH20 to x29CH29". (Accordingly, the number of channels to be used for the carrier aggregation (channel aggregation) and/or channel bonding is 10 at the most.)

Performing such carrier aggregation (channel aggregation) and/or channel bonding produces the effect of achieving faster data communication without performing complicated LBT.

Note that, although the above description is about "carrier aggregation (channel aggregation) and/or channel bonding" taking Point 2 into consideration, the present embodiment is not limited to this method; thus, the number of channels to be used for the carrier aggregation (channel aggregation) and/or channel bonding only needs to be one or more.

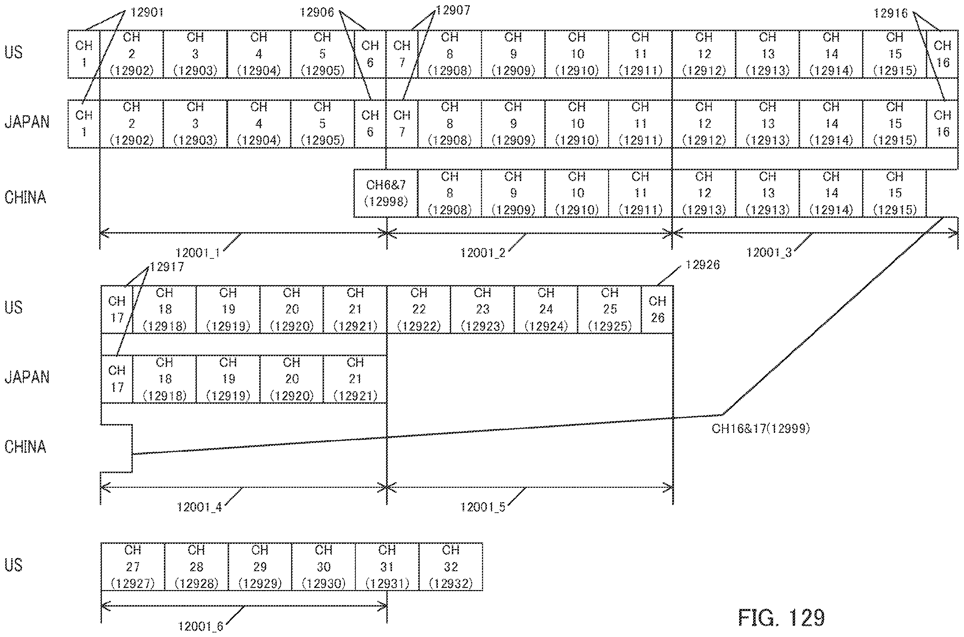

FIG. 129 illustrates exemplary channel configurations in the USA, Japan, and China in a case where the channel frequency bandwidth of the NR system of "gNB #1 labeled 9701_1, gNB #2 labeled 9701_2, NR-UE #1 labeled 9702_1, and NR-UE #2 labeled 9702_2" is mainly 480 MHz. Note that the components that operate in the same manner as in FIG. 120 are denoted by the same reference signs.

USA:

In the USA, channels in the NR system are composed of "CH1 labeled 12901 to CH32 labeled 12932". Note that the frequency bandwidth of each of "CH1 labeled 12901", "CH6 labeled 12906", "CH7 labeled 12907", "CH16 labeled 12916", "CH17 labeled 12917", and "CH26 labeled 12926" is 240 MHz, and the channel frequency bandwidth of each of "CH2 labeled 12902 to CH5 labeled 12905", "CH8 labeled 12908 to CH15 labeled 12915", "CH18 labeled 12918 to CH25 labeled 12925", and "CH27 labeled 12927 to CH32 labeled 12932" is 480 MHz.

"CH1 labeled 12901 in the NR system" does not overlap with a channel of the first standard.

The frequency bandwidth of first channel 12001_1 of the first standard is 2.16 GHz, and "the frequency bandwidth configured by CH2 labeled 12902, CH3 labeled 12903, CH4 labeled 12904, CH5 labeled 12905, and CH6 labeled 12906 in the NR system" is the same as that of first channel 12001_1 of the first standard (frequency bandwidth of 2.16 GHz).

The frequency bandwidth of second channel 12001_2 of the first standard is 2.16 GHz, and "the frequency bandwidth configured by CH7 labeled 12907, CH8 labeled 12908, CH9 labeled 12909, CH10 labeled 12910, and CH11 labeled 12911 in the NR system" is the same as that of second channel 12001_2 of the first standard (frequency bandwidth of 2.16 GHz).

The frequency bandwidth of third channel 12001_3 of the first standard is 2.16 GHz, and "the frequency bandwidth configured by CH12 labeled 12912, CH13 labeled 12913, CH14 labeled 12914, CH15 labeled 12915, and CH16 labeled 12916 in the NR system" is the same as that of third channel 12001_3 of the first standard (frequency bandwidth of 2.16 GHz).

The frequency bandwidth of fourth channel 12001_4 of the first standard is 2.16 GHz, and "the frequency bandwidth configured by CH17 labeled 12917, CH18 labeled 12918, CH19 labeled 12919, CH20 labeled 12920, and CH21 labeled 12921 in the NR system" is the same as that of fourth channel 12001_4 of the first standard (frequency bandwidth of 2.16 GHz).

The frequency bandwidth of fifth channel 12001_5 of the first standard is 2.16 GHz, and "the frequency bandwidth configured by CH22 labeled 12922, CH23 labeled 12923, CH24 labeled 12924, CH25 labeled 12925, and CH26 labeled 12926 in the NR system" is the same as that of fifth channel 12001_5 of the first standard (frequency bandwidth of 2.16 GHz).

The frequency bandwidth of sixth channel 12001_6 of the first standard is 2.16 GHz, and "the frequency bandwidth configured by CH27 labeled 12927, CH28 labeled 12928, CH29 labeled 12929, and CH30 labeled 12930 in the NR system" overlaps with part of sixth channel 12001_6 of the first standard. In addition, part of "CH31 labeled 12931 in the NR system" overlaps with sixth channel 12001_6 of the first standard. Note that the NR apparatus may use "x55CH55 and/or x56CH56" in FIG. 128 instead of CH31 labeled 12931. At this time, "x56CH56 in the NR system" does not overlap with a channel of the first standard.

"CH32 labeled 12932 in the NR system" does not overlap with a channel of the first standard. Note that the NR apparatus may use "x57CH57 and/or x58CH58" in FIG. 128 instead of CH32 labeled 12932. At this time, "x57CH57 and x58CH58 in the NR system" do not overlap with a channel of the first standard.

Japan:

In Japan, channels in the NR system are composed of "CH1 labeled 12901 to CH21 labeled 12921". Note that the frequency bandwidth of each of "CH1 labeled 12901", "CH6 labeled 12906", "CH7 labeled 12907", "CH16 labeled 12916", and "CH17 labeled 12917" is 240 MHz, and the channel frequency bandwidth of each of "CH2 labeled 12902 to CH5 labeled 12905", "CH8 labeled 12908 to CH15 labeled 12915", and "CH18 labeled 12918 to CH21 labeled 12921" is 480 MHz.

"CH1 labeled 12901 in the NR system" does not overlap with a channel of the first standard.

The frequency bandwidth of first channel 12001_1 of the first standard is 2.16 GHz, and "the frequency bandwidth configured by CH2 labeled 12902, CH3 labeled 12903, CH4 labeled 12904, CH5 labeled 12905, and CH6 labeled 12906 in the NR system" is the same as that of first channel 12001_1 of the first standard (frequency bandwidth of 2.16 GHz).

The frequency bandwidth of second channel 12001_2 of the first standard is 2.16 GHz, and "the frequency bandwidth configured by CH7 labeled 12907, CH8 labeled 12908, CH9 labeled 12909, CH10 labeled 12910, and CH11 labeled 12911 in the NR system" is the same as that of second channel 12001_2 of the first standard (frequency bandwidth of 2.16 GHz).

The frequency bandwidth of third channel 12001_3 of the first standard is 2.16 GHz, and "the frequency bandwidth configured by CH12 labeled 12912, CH13 labeled 12913, CH14 labeled 12914, CH15 labeled 12915, and CH16 labeled 12916 in the NR system" is the same as that of third channel 12001_3 of the first standard (frequency bandwidth of 2.16 GHz).

The frequency bandwidth of fourth channel 12001_4 of the first standard is 2.16 GHz, and "the frequency bandwidth configured by CH17 labeled 12917, CH18 labeled 12918, CH19 labeled 12919, CH20 labeled 12920, and CH21 labeled 12921 in the NR system" is the same as that of fourth channel 12001_4 of the first standard (frequency bandwidth of 2.16 GHz).

China:

In China, channels in the NR system are composed of "CH6&7 labeled 12998", "CH8 labeled 12908 to CH15 labeled 12915", and "CH16&17 labeled 12999". Note that the channel frequency bandwidth of each of "CH6&7 labeled 12998", "CH8 labeled 12908 to CH15 labeled 12915", and "CH16&17 labeled 12999" is 480 MHz.

The frequency bandwidth of second channel 12001_2 of the first standard is 2.16 GHz, and "the frequency bandwidth configured by CH8 labeled 12908, CH9 labeled 12909, CH10 labeled 12910, and CH11 labeled 12911 in the NR system" overlaps with part of second channel 12001_2 of the first standard.

The frequency bandwidth of third channel 12001_3 of the first standard is 2.16 GHz, and "the frequency bandwidth configured by CH12 labeled 12912, CH13 labeled 12913, CH14 labeled 12914, and CH15 labeled 12915 in the NR system" overlaps with part of third channel 12001_3 of the first standard.

Part of "CH6&7 labeled 12998 in the NR system" overlaps with second channel 12001_2 of the first standard.

Note that the NR apparatus may use "x10CH10 and/or x11CH11" in FIG. 128 instead of CH6&7 labeled 12998. At this time, there is no "channel of the first standard available in China" in "x10CH10 in the NR system".

Part of "CH16&17 labeled 12999 in the NR system" overlaps with third channel 12001_3 of the first standard.

Note that the NR apparatus may use "x28CH28 and/or x29CH29" in FIG. 128 instead of CH16& 17 labeled 12999. At this time, there is no "channel of the first standard available in China" in "x29CH29 in the NR system".

Advantages in this case will be described.

Communication can be performed by a simple configuration of preparing "CH1 labeled 12901 to CH32 labeled 12932" with the frequency bandwidth of either 240 MHz or 480 MHz as the NR system, and an NR apparatus selecting channels available in each country from "CH1 labeled 12901 to CH32 labeled 12932".

Further, in the USA, an NR apparatus (e.g., gNB, NR-UE, repeater, etc.) can use "CH1 labeled 12901" and "CH32 labeled 12932" without detecting a signal of the first standard by LBT. This allows the NR apparatus more likely to perform communication using "CH1 labeled 12901" and "CH32 labeled 12932".

In the USA, an NR apparatus may use "x55CH55 and/or x56CH56" in FIG. 128 instead of "CH31 labeled 12931". In this case, the NR apparatus can use "x56CH56" without detecting a signal of the first standard by LBT. This allows the NR apparatus more likely to perform communication using "x56CH56".

In the USA, an NR apparatus may use "x57CH57 and/or x58CH58" in FIG. 128 instead of "CH32 labeled 12932". In this case, the NR apparatus can use "x57CH57 and/or x58CH58" without detecting a signal of the first standard by LBT. This allows the NR apparatus more likely to perform communication using "x57CH57 and/or x58CH58".

In China, an NR apparatus may use "x10CH10 and/or x11CH11" in FIG. 128 instead of "CH6&7 labeled 12998". In this case, the NR apparatus can use "x10CH10" without detecting a signal of the first standard by LBT. This allows the NR apparatus more likely to perform communication using "x10CH10".

In China, an NR apparatus may use "x28CH28 and/or x29CH29" in FIG. 128 instead of "CH16&17 labeled 12999". In this case, the NR apparatus can use "x29CH29" without detecting a signal of the first standard by LBT. This allows the NR apparatus more likely to perform communication using "x29CH29".

In addition, "less vacant frequencies" described as Point 1 can be achieved.

Considering the above Point 2, for example, an NR apparatus can perform carrier aggregation (channel aggregation) and/or channel bonding using a plurality of channels from "CH1 labeled 12901 to CH6 labeled 12906" in the USA. (Accordingly, the number of channels to be used for the carrier aggregation (channel aggregation) and/or channel bonding is 6 at the most.)

Likewise, an NR apparatus can perform carrier aggregation (channel aggregation) and/or channel bonding using a plurality of channels from "CH7 labeled 12907 to CH11 labeled 12911", for example, in the USA. (Accordingly, the number of channels to be used for the carrier aggregation (channel aggregation) and/or channel bonding is 5 at the most.)

In the USA, for example, an NR apparatus can perform carrier aggregation (channel aggregation) and/or channel bonding using a plurality of channels from "CH12 labeled 12912 to CH16 labeled 12916". (Accordingly, the number of channels to be used for the carrier aggregation (channel aggregation) and/or channel bonding is 5 at the most.)

In the USA, for example, an NR apparatus can perform carrier aggregation (channel aggregation) and/or channel bonding using a plurality of channels from "CH17 labeled 12917 to CH21 labeled 12921". (Accordingly, the number of channels to be used for the carrier aggregation (channel aggregation) and/or channel bonding is 5 at the most.)

In the USA, for example, an NR apparatus can perform carrier aggregation (channel aggregation) and/or channel bonding using a plurality of channels from "CH22 labeled 12922 to CH26 labeled 12926". (Accordingly, the number of channels to be used for the carrier aggregation (channel aggregation) and/or channel bonding is 5 at the most.)

In the USA, for example, an NR apparatus can perform carrier aggregation (channel aggregation) and/or channel bonding using a plurality of channels from "CH27 labeled 12927 to CH32 labeled 12932". (Accordingly, the number of channels to be used for the carrier aggregation (channel aggregation) and/or channel bonding is 6 at the most.)

Performing such carrier aggregation (channel aggregation) and/or channel bonding produces the effect of achieving faster data communication without performing complicated LBT.

Note that, although the above description is about "carrier aggregation (channel aggregation) and/or channel bonding" taking Point 2 into consideration, the present embodiment is not limited to this method; thus, the number of channels to be used for the carrier aggregation (channel aggregation) and/or channel bonding only needs to be one or more.

Considering the above Point 2, for example, an NR apparatus can perform carrier aggregation (channel aggregation) and/or channel bonding using a plurality of channels from "CH1 labeled 12901 to CH6 labeled 12906" in Japan. (Accordingly, the number of channels to be used for the carrier aggregation (channel aggregation) and/or channel bonding is 6 at the most.)

Likewise, an NR apparatus can perform carrier aggregation (channel aggregation) and/or channel bonding using a plurality of channels from "CH7 labeled 12907 to CH11 labeled 12911", for example, in Japan. (Accordingly, the number of channels to be used for the carrier aggregation (channel aggregation) and/or channel bonding is 5 at the most.)

In Japan, for example, an NR apparatus can perform carrier aggregation (channel aggregation) and/or channel bonding using a plurality of channels from "CH12 labeled 12912 to CH16 labeled 12916". (Accordingly, the number of channels to be used for the carrier aggregation (channel aggregation) and/or channel bonding is 5 at the most.)

In Japan, for example, an NR apparatus can perform carrier aggregation (channel aggregation) and/or channel bonding using a plurality of channels from "CH17 labeled 12917 to CH21 labeled 12921". (Accordingly, the number of channels to be used for the carrier aggregation (channel aggregation) and/or channel bonding is 5 at the most.)

Performing such carrier aggregation (channel aggregation) and/or channel bonding produces the effect of achieving faster data communication without performing complicated LBT.

Note that, although the above description is about "carrier aggregation (channel aggregation) and/or channel bonding" taking Point 2 into consideration, the present embodiment is not limited to this method; thus, the number of channels to be used for the carrier aggregation (channel aggregation) and/or channel bonding only needs to be one or more.

Considering the above Point 2, for example, an NR apparatus can perform carrier aggregation (channel aggregation) and/or channel bonding using a plurality of channels from "CH6&7 labeled 12998" and "CH8 labeled 12908 to CH11 labeled 12911" in China. (Accordingly, the number of channels to be used for the carrier aggregation (channel aggregation) and/or channel bonding is 5 at the most.)

In China, for example, an NR apparatus can perform carrier aggregation (channel aggregation) and/or channel bonding using a plurality of channels from "CH12 labeled 12912 to CH15 labeled 12915" and "CH16&17 labeled 12999". (Accordingly, the number of channels to be used for the carrier aggregation (channel aggregation) and/or channel bonding is 5 at the most.)

Performing such carrier aggregation (channel aggregation) and/or channel bonding produces the effect of achieving faster data communication without performing complicated LBT.

Note that, although the above description is about "carrier aggregation (channel aggregation) and/or channel bonding" taking Point 2 into consideration, the present embodiment is not limited to this method; thus, the number of channels to be used for the carrier aggregation (channel aggregation) and/or channel bonding only needs to be one or more.

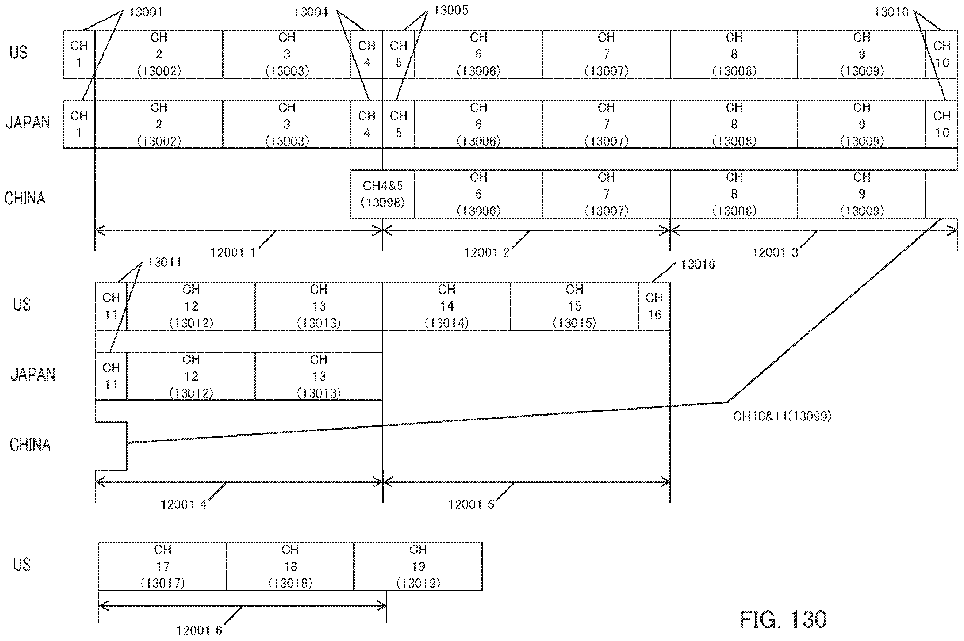

FIG. 130 illustrates exemplary channel configurations in the USA, Japan, and China in a case where the channel frequency bandwidth of the NR system of "gNB #1 labeled 9701_1, gNB #2 labeled 9701_2, NR-UE #1 labeled 9702_1, and NR-UE #2 labeled 9702_2" is mainly 960 MHz. Note that the components that operate in the same manner as in FIG. 120 are denoted by the same reference signs.

USA:

In the USA, channels in the NR system are composed of "CH1 labeled 13001 to CH19 labeled 13019". Note that the frequency bandwidth of each of "CH1 labeled 13001", "CH4 labeled 13004", "CH5 labeled 13005", "CH10 labeled 13010", "CH11 labeled 13011", and "CH16 labeled 13016" is 240 MHz, and the channel frequency bandwidth of each of "CH2 labeled 13002 to CH3 labeled 13003", "CH6 labeled 13006 to CH09 labeled 13009", "CH12 labeled 13012 to CH15 labeled 13015", and "CH17 labeled 13017 to CH19 labeled 13019" is 960 MHz.

"CH1 labeled 13001 in the NR system" does not overlap with a channel of the first standard.

The frequency bandwidth of first channel 12001_1 of the first standard is 2.16 GHz, and "the frequency bandwidth configured by CH2 labeled 13002, CH3 labeled 13003, and CH4 labeled 13004 in the NR system" is the same as that of first channel 12001_1 of the first standard (frequency bandwidth of 2.16 GHz).

The frequency bandwidth of second channel 12001_2 of the first standard is 2.16 GHz, and "the frequency bandwidth configured by CH5 labeled 13005, CH6 labeled 13006, and CH7 labeled 13007 in the NR system" is the same as that of second channel 12001_2 of the first standard (frequency bandwidth of 2.16 GHz).

The frequency bandwidth of third channel 12001_3 of the first standard is 2.16 GHz, and "the frequency bandwidth configured by CH8 labeled 13008, CH9 labeled 13009, and CH10 labeled 13010 in the NR system" is the same as that of third channel 12001_3 of the first standard (frequency bandwidth of 2.16 GHz).

The frequency bandwidth of fourth channel 12001_4 of the first standard is 2.16 GHz, and "the frequency bandwidth configured by CH11 labeled 13011, CH12 labeled 13012, and CH13 labeled 13013 in the NR system" is the same as that of fourth channel 12001_4 of the first standard (frequency bandwidth of 2.16 GHz).

The frequency bandwidth of fifth channel 12001_5 of the first standard is 2.16 GHz, and "the frequency bandwidth configured by CH14 labeled 13014, CH15 labeled 13015, and CH16 labeled 13016 in the NR system" is the same as that of fifth channel 12001_5 of the first standard (frequency bandwidth of 2.16 GHz).

The frequency bandwidth of sixth channel 12001_6 of the first standard is 2.16 GHz, and "the frequency bandwidth configured by CH17 labeled 13017 and CH18 labeled 13018 in the NR system" overlaps with part of sixth channel 12001_6 of the first standard.

In addition, part of "CH19 labeled 13019 in the NR system" overlaps with sixth channel 12001_6 of the first standard. Note that the NR apparatus may use "x55CH55 and/or x56CH56 and/or x57CH57 and/or x58CH58" in FIG. 128 instead of CH19 labeled 13019. At this time, "x56CH56, x57CH57, and x58CH58 in the NR system" do not overlap with a channel of the first standard.

Japan:

In Japan, channels in the NR system are composed of "CH1 labeled 13001 to CH13 labeled 13013". Note that the frequency bandwidth of each of "CH1 labeled 13001", "CH4 labeled 13004", "CH5 labeled 13005", "CH10 labeled 13010", and "CH11 labeled 13011" is 240 MHz, and the channel frequency bandwidth of each of "CH2 labeled 13002 to CH3 labeled 13003", "CH6 labeled 13006 to CH09 labeled 13009", and "CH12 labeled 13012 to CH13 labeled 13013" is 960 MHz.

"CH1 labeled 13001 in the NR system" does not overlap with a channel of the first standard.

The frequency bandwidth of first channel 12001_1 of the first standard is 2.16 GHz, and "the frequency bandwidth configured by CH2 labeled 13002, CH3 labeled 13003, and CH4 labeled 13004 in the NR system" is the same as that of first channel 12001_1 of the first standard (frequency bandwidth of 2.16 GHz).

The frequency bandwidth of second channel 12001_2 of the first standard is 2.16 GHz, and "the frequency bandwidth configured by CH5 labeled 13005, CH6 labeled 13006, and CH7 labeled 13007 in the NR system" is the same as that of second channel 12001_2 of the first standard (frequency bandwidth of 2.16 GHz).

The frequency bandwidth of third channel 12001_3 of the first standard is 2.16 GHz, and "the frequency bandwidth configured by CH8 labeled 13008, CH9 labeled 13009, and CH10 labeled 13010 in the NR system" is the same as that of third channel 12001_3 of the first standard (frequency bandwidth of 2.16 GHz).

The frequency bandwidth of fourth channel 12001_4 of the first standard is 2.16 GHz, and "the frequency bandwidth configured by CH11 labeled 13011, CH12 labeled 13012, and CH13 labeled 13013 in the NR system" is the same as that of fourth channel 12001_4 of the first standard (frequency bandwidth of 2.16 GHz).

China:

In China, channels in the NR system are composed of "CH4&5 labeled 13098", "CH6 labeled 13006 to CH9 labeled 13009", and "CH10&11 labeled 13099". Note that the channel frequency bandwidth of each of "CH4&5 labeled 13098" and "CH10&11 labeled 13099" is 480 MHz, and the channel frequency bandwidth of each of "CH6 labeled 13006 to CH9 labeled 13009" is 960 MHz.

The frequency bandwidth of second channel 12001_2 of the first standard is 2.16 GHz, and "the frequency bandwidth configured by CH6 labeled 13006 and CH7 labeled 13007 in the NR system" overlaps with part of second channel 12001_2 of the first standard.

The frequency bandwidth of third channel 12001_3 of the first standard is 2.16 GHz, and "the frequency bandwidth configured by CH8 labeled 13008 and CH9 labeled 13009 in the NR system" overlaps with part of third channel 12001_3 of the first standard.

Part of "CH4&5 labeled 13098 in the NR system" overlaps with second channel 12001_2 of the first standard.

Note that the NR apparatus may use "x10CH10 and/or x11CH11" in FIG. 128 instead of CH4&5 labeled 13098. At this time, there is no "channel of the first standard available in China" in "x10CH10 in the NR system".

Part of "CH10&11 labeled 13099 in the NR system" overlaps with third channel 12001_3 of the first standard.

Note that the NR apparatus may use "x28CH28 and/or x29CH29" in FIG. 128 instead of CH10& 11 labeled 13099. At this time, there is no "channel of the first standard available in China" in "x29CH29 in the NR system".

Advantages in this case will be described.

Communication can be performed by a simple configuration of preparing "CH1 labeled 13001 to CH19 labeled 13019" with the frequency bandwidth of either 240 MHz or 960 MHz as the NR system, and an NR apparatus selecting channels available in each country from "CH1 labeled 13001 to CH19 labeled 13019".

Further, in the USA, an NR apparatus (e.g., gNB, NR-UE, repeater, etc.) can use "CH1 labeled 13001" without detecting a signal of the first standard by LBT. This allows the NR apparatus more likely to perform communication using "CH1 labeled 13001".

In the USA, an NR apparatus may use "x55CH55 and/or x56CH56 and/or x57CH57 and/or x58CH58" in FIG. 128 instead of "CH19 labeled 13019". In this case, the NR apparatus can use "x56CH56 and/or x57CH57 and/or x58CH58" without detecting a signal of the first standard by LBT. This allows the NR apparatus more likely to perform communication using "x56CH56 and/or x57CH57 and/or x58CH58".

In China, an NR apparatus may use "x10CH10 and/or x11CH11" in FIG. 128 instead of "CH4&5 labeled 13098". In this case, the NR apparatus can use "x10CH10" without detecting a signal of the first standard by LBT. This allows the NR apparatus more likely to perform communication using "x10CH10".

In China, an NR apparatus may use "x28CH28 and/or x29CH29" in FIG. 128 instead of "CH10&11 labeled 13099". In this case, the NR apparatus can use "x29CH29" without detecting a signal of the first standard by LBT. This allows the NR apparatus more likely to perform communication using "x29CH29".

In addition, "less vacant frequencies" described as Point 1 can be achieved.

Considering the above Point 2, for example, an NR apparatus can perform carrier aggregation (channel aggregation) and/or channel bonding using a plurality of channels from "CH1 labeled 13001 to CH4 labeled 13004" in the USA. (Accordingly, the number of channels to be used for the carrier aggregation (channel aggregation) and/or channel bonding is 4 at the most.)

Likewise, an NR apparatus can perform carrier aggregation (channel aggregation) and/or channel bonding using a plurality of channels from "CH5 labeled 13005 to CH7 labeled 13007", for example, in the USA. (Accordingly, the number of channels to be used for the carrier aggregation (channel aggregation) and/or channel bonding is 3 at the most.)

In the USA, for example, an NR apparatus can perform carrier aggregation (channel aggregation) and/or channel bonding using a plurality of channels from "CH8 labeled 13008 to CH10 labeled 13010". (Accordingly, the number of channels to be used for the carrier aggregation (channel aggregation) and/or channel bonding is 3 at the most.)

In the USA, for example, an NR apparatus can perform carrier aggregation (channel aggregation) and/or channel bonding using a plurality of channels from "CH11 labeled 13011 to CH13 labeled 13013". (Accordingly, the number of channels to be used for the carrier aggregation (channel aggregation) and/or channel bonding is 3 at the most.)

In the USA, for example, an NR apparatus can perform carrier aggregation (channel aggregation) and/or channel bonding using a plurality of channels from "CH14 labeled 13014 to CH16 labeled 13016". (Accordingly, the number of channels to be used for the carrier aggregation (channel aggregation) and/or channel bonding is 3 at the most.)

In the USA, for example, an NR apparatus can perform carrier aggregation (channel aggregation) and/or channel bonding using a plurality of channels from "CH17 labeled 13017 to CH19 labeled 13019". (Accordingly, the number of channels to be used for the carrier aggregation (channel aggregation) and/or channel bonding is 3 at the most.)

Performing such carrier aggregation (channel aggregation) and/or channel bonding produces the effect of achieving faster data communication without performing complicated LBT.

Note that, although the above description is about "carrier aggregation (channel aggregation) and/or channel bonding" taking Point 2 into consideration, the present embodiment is not limited to this method; thus, the number of channels to be used for the carrier aggregation (channel aggregation) and/or channel bonding only needs to be one or more.

Considering the above Point 2, for example, an NR apparatus can perform carrier aggregation (channel aggregation) and/or channel bonding using a plurality of channels from "CH1 labeled 13001 to CH4 labeled 13004" in Japan. (Accordingly, the number of channels to be used for the carrier aggregation (channel aggregation) and/or channel bonding is 4 at the most.)

Likewise, an NR apparatus can perform carrier aggregation (channel aggregation) and/or channel bonding using a plurality of channels from "CH5 labeled 13005 to CH7 labeled 13007", for example, in Japan. (Accordingly, the number of channels to be used for the carrier aggregation (channel aggregation) and/or channel bonding is 3 at the most.)

In Japan, for example, an NR apparatus can perform carrier aggregation (channel aggregation) and/or channel bonding using a plurality of channels from "CH8 labeled 13008 to CH10 labeled 13010". (Accordingly, the number of channels to be used for the carrier aggregation (channel aggregation) and/or channel bonding is 3 at the most.)

In Japan, for example, an NR apparatus can perform carrier aggregation (channel aggregation) and/or channel bonding using a plurality of channels from "CH11 labeled 13011 to CH13 labeled 13013". (Accordingly, the number of channels to be used for the carrier aggregation (channel aggregation) and/or channel bonding is 3 at the most.)

Performing such carrier aggregation (channel aggregation) and/or channel bonding produces the effect of achieving faster data communication without performing complicated LBT.

Note that, although the above description is about "carrier aggregation (channel aggregation) and/or channel bonding" taking Point 2 into consideration, the present embodiment is not limited to this method; thus, the number of channels to be used for the carrier aggregation (channel aggregation) and/or channel bonding only needs to be one or more.

Considering the above Point 2, for example, an NR apparatus can perform carrier aggregation (channel aggregation) and/or channel bonding using a plurality of channels from "CH4&5 labeled 13098" and "CH6 labeled 13006 to CH7 labeled 13007" in China. (Accordingly, the number of channels to be used for the carrier aggregation (channel aggregation) and/or channel bonding is 3 at the most.)

In China, for example, an NR apparatus can perform carrier aggregation (channel aggregation) and/or channel bonding using a plurality of channels from "CH8 labeled 13008 to CH9 labeled 13009" and "CH10&11 labeled 13099". (Accordingly, the number of channels to be used for the carrier aggregation (channel aggregation) and/or channel bonding is 3 at the most.)

Performing such carrier aggregation (channel aggregation) and/or channel bonding produces the effect of achieving faster data communication without performing complicated LBT.

Note that, although the above description is about "carrier aggregation (channel aggregation) and/or channel bonding" taking Point 2 into consideration, the present embodiment is not limited to this method; thus, the number of channels to be used for the carrier aggregation (channel aggregation) and/or channel bonding only needs to be one or more.

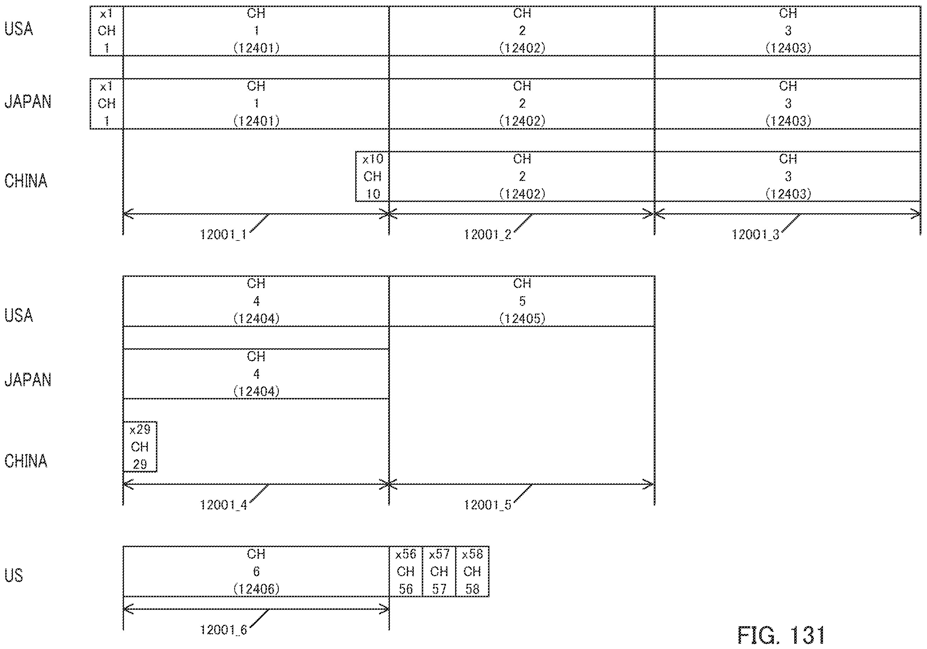

FIG. 131 illustrates exemplary channel configurations in the USA, Japan, and China in a case where the channel frequency bandwidth of the NR system of "gNB #1 labeled 9701_1, gNB #2 labeled 9701_2, NR-UE #1 labeled 9702_1, and NR-UE #2 labeled 9702_2" is mainly 2160 MHz (2.16 GHz). Note that the components that operate in the same manner as in FIGS. 120, 124, and 128 are denoted by the same reference signs.

USA:

In the USA, channels in the NR system are composed of "xCH1", "CH1 labeled 12401 to CH6 labeled 12406", "x56CH56", "x57CH57", and "x58CH58". Note that the frequency bandwidth of each of "xCH1", "x56CH56", "x57CH57", and "x58CH58" is 240 MHz, and the channel frequency bandwidth of each of "CH1 labeled 12401 to CH6 labeled 12406" is 2160 MHz.

The frequency bandwidth of first channel 12001_1 of the first standard is 2.16 GHz, and "CH1 labeled 12401 in the NR system" has the same frequency bandwidth as first channel 12001_1 of the first standard (frequency bandwidth of 2.16 GHz).

The frequency bandwidth of second channel 12001_2 of the first standard is 2.16 GHz, and "CH2 labeled 12402 in the NR system" has the same frequency bandwidth as second channel 12001_2 of the first standard (frequency bandwidth of 2.16 GHz).

The frequency bandwidth of third channel 12001_3 of the first standard is 2.16 GHz, and "CH3 labeled 12403 in the NR system" has the same frequency bandwidth as third channel 12001_3 of the first standard (frequency bandwidth of 2.16 GHz).

The frequency bandwidth of fourth channel 12001_4 of the first standard is 2.16 GHz, and "CH4 labeled 12404 in the NR system" has the same frequency bandwidth as fourth channel 12001_4 of the first standard (frequency bandwidth of 2.16 GHz).

The frequency bandwidth of fifth channel 12001_5 of the first standard is 2.16 GHz, and "CH5 labeled 12405 in the NR system" has the same frequency bandwidth as fifth channel 12001_5 of the first standard (frequency bandwidth of 2.16 GHz).

The frequency bandwidth of sixth channel 12001_6 of the first standard is 2.16 GHz, and "CH6 labeled 12406 in the NR system" has the same frequency bandwidth as sixth channel 12001_6 of the first standard (frequency bandwidth of 2.16 GHz).

"x1CH1, x56CH56, x57CH57, and x58CH58 in the NR system" do not overlap with a channel of the first standard.

Japan:

In Japan, channels in the NR system are composed of "xCH1" and "CH1 labeled 12401 to CH4 labeled 12404". Note that the frequency bandwidth of "xCH1" is 240 MHz, and the channel frequency bandwidth of each of "CH1 labeled 12401 to CH4 labeled 12404" is 2160 MHz.

The frequency bandwidth of first channel 12001_1 of the first standard is 2.16 GHz, and "CH1 labeled 12401 in the NR system" has the same frequency bandwidth as first channel 12001_1 of the first standard (frequency bandwidth of 2.16 GHz).

The frequency bandwidth of second channel 12001_2 of the first standard is 2.16 GHz, and "CH2 labeled 12402 in the NR system" has the same frequency bandwidth as second channel 12001_2 of the first standard (frequency bandwidth of 2.16 GHz).

The frequency bandwidth of third channel 12001_3 of the first standard is 2.16 GHz, and "CH3 labeled 12403 in the NR system" has the same frequency bandwidth as third channel 12001_3 of the first standard (frequency bandwidth of 2.16 GHz).

The frequency bandwidth of fourth channel 12001_4 of the first standard is 2.16 GHz, and "CH4 labeled 12404 in the NR system" has the same frequency bandwidth as fourth channel 12001_4 of the first standard (frequency bandwidth of 2.16 GHz).

"x1CH1 in the NR system" does not overlap with a channel of the first standard.

China:

In China, channels in the NR system are composed of "CH2 labeled 12402 and CH3 labeled 12403" and "x10CH10 and x29CH29".

Note that the channel frequency bandwidth of each of "CH2 labeled 12402 and CH3 labeled 12403" is 2160 MHz. The channel frequency bandwidth of each of "x10CH10 and x29CH29" is 240 MHz.

There is no "channel of the first standard available in China" in "x10CH10 in the NR system".

The frequency bandwidth of second channel 12001_2 of the first standard is 2.16 GHz, and "CH2 labeled 12402 in the NR system" has the same frequency bandwidth as second channel 12001_2 of the first standard (frequency bandwidth of 2.16 GHz).

The frequency bandwidth of third channel 12001_3 of the first standard is 2.16 GHz, and "CH3 labeled 12403 in the NR system" has the same frequency bandwidth as third channel 12001_3 of the first standard (frequency bandwidth of 2.16 GHz).

There is no "channel of the first standard available in China" in "x29CH29 in the NR system".

Advantages in this case will be described.

Communication can be performed by a simple configuration of preparing "xCH1", "CH1 labeled 12401 to CH6 labeled 12406", "x56CH56", "x57CH57", and "x58CH58" with the frequency bandwidth of either 240 MHz or 2160 MHz as the NR system, and an NR apparatus selecting channels available in each country from "xCH1", "CH1 labeled 12401 to CH6 labeled 12406", "x56CH56", "x57CH57", and "x58CH58".

Further, in the USA, an NR apparatus (e.g., gNB, NR-UE, repeater, etc.) can use "xCH1", "x56CH56", "x57CH57", and "x58CH58" without detecting a signal of the first standard by LBT. This allows the NR apparatus more likely to perform communication using "xCH1", "x56CH56", "x57CH57", and "x58CH58".

In China, an NR apparatus (e.g., gNB, NR-UE, repeater, etc.) can use "x10CH10 and x29CH29" without detecting a signal of the first standard by LBT. This allows the NR apparatus more likely to perform communication using "x10CH10 and x29CH29".

In addition, "less vacant frequencies" described as Point 1 can be achieved.

Considering the above Point 2, for example, an NR apparatus uses a single channel alone from "CH1 labeled 12401 to CH6 labeled 12406" in the USA. (Accordingly, the number of channels to be used for the carrier aggregation (channel aggregation) and/or channel bonding is 1 at the most.)

As another method, in the USA, an NR apparatus can perform carrier aggregation (channel aggregation) and/or channel bonding using a plurality of channels of "x1CH1 and CH1 labeled 12401", for example.

As still another example, in the USA, an NR apparatus can perform carrier aggregation (channel aggregation) and/or channel bonding using a plurality of channels from "x56CH56 and/or x57CH57 and/or x58CH58" and "CH6 labeled 12406", for example.

Performing such carrier aggregation (channel aggregation) and/or channel bonding produces the effect of achieving faster data communication without performing complicated LBT.

Note that, although the above description is about "carrier aggregation (channel aggregation) and/or channel bonding" taking Point 2 into consideration, the present embodiment is not limited to this method; thus, the number of channels to be used for the carrier aggregation (channel aggregation) and/or channel bonding only needs to be one or more.

Considering the above Point 2, for example, an NR apparatus uses a single channel alone from "CH1 labeled 12401 to CH4 labeled 12404" in Japan. (Accordingly, the number of channels to be used for the carrier aggregation (channel aggregation) and/or channel bonding is 1 at the most.)

As another method, in Japan, an NR apparatus can perform carrier aggregation (channel aggregation) and/or channel bonding using a plurality of channels of "x1CH1 and CH1 labeled 12401", for example.

Performing such carrier aggregation (channel aggregation) and/or channel bonding produces the effect of achieving faster data communication without performing complicated LBT.

Note that, although the above description is about "carrier aggregation (channel aggregation) and/or channel bonding" taking Point 2 into consideration, the present embodiment is not limited to this method; thus, the number of channels to be used for the carrier aggregation (channel aggregation) and/or channel bonding only needs to be one or more.

Considering the above Point 2, for example, an NR apparatus uses a single channel alone from "CH2 labeled 12402 to CH3 labeled 12403" in China. (Accordingly, the number of channels to be used for the carrier aggregation (channel aggregation) and/or channel bonding is 1 at the most.)

As another method, in China, an NR apparatus can perform carrier aggregation (channel aggregation) and/or channel bonding using a plurality of channels of "CH2 labeled 12402 and x10CH10", for example. Further, in China, an NR apparatus can perform carrier aggregation (channel aggregation) and/or channel bonding using a plurality of channels of "CH3 labeled 12403 and x29CH29", for example.

Performing such carrier aggregation (channel aggregation) and/or channel bonding produces the effect of achieving faster data communication without performing complicated LBT.

Note that, although the above description is about "carrier aggregation (channel aggregation) and/or channel bonding" taking Point 2 into consideration, the present embodiment is not limited to this method; thus, the number of channels to be used for the carrier aggregation (channel aggregation) and/or channel bonding only needs to be one or more.

In the present embodiment, descriptions have been given with an example of "the USA, Japan, and China", but the same can be implemented and the same effects can be obtained for other countries by the same method or by modifying the example of "the USA, Japan, and China".

In FIG. 128, the center frequencies of respective channels are as follows.

The center frequency of x1CH1 is 57.12 GHz.

The center frequency of x2CH2 is 57.36 GHz. The center frequency of x3CH3 is 57.60 GHz. The center frequency of x4CH4 is 57.84 GHz. The center frequency of x5CH5 is 58.08 GHz. The center frequency of x6CH6 is 58.32 GHz. The center frequency of x7CH7 is 58.56 GHz. The center frequency of x8CH8 is 58.80 GHz. The center frequency of x9CH9 is 59.04 GHz. The center frequency of x10CH10 is 59.28 GHz.

The center frequency of x11CH11 is 59.52 GHz. The center frequency of x12CH12 is 59.76 GHz. The center frequency of x13CH13 is 60.00 GHz. The center frequency of x14CH14 is 60.24 GHz. The center frequency of x15CH15 is 60.48 GHz. The center frequency of x16CH16 is 60.72 GHz. The center frequency of x17CH17 is 60.96 GHz. The center frequency of x18CH18 is 61.20 GHz. The center frequency of x19CH19 is 61.44 GHz.

The center frequency of x20CH20 is 61.68 GHz. The center frequency of x21CH21 is 61.92 GHz. The center frequency of x22CH22 is 62.16 GHz. The center frequency of x23CH23 is 62.40 GHz. The center frequency of x24CH24 is 62.64 GHz. The center frequency of x25CH25 is 62.88 GHz. The center frequency of x26CH26 is 63.12 GHz. The center frequency of x27CH27 is 63.36 GHz. The center frequency of x28CH28 is 63.60 GHz.

The center frequency of x29CH29 is 63.84 GHz. The center frequency of x30CH30 is 64.08 GHz. The center frequency of x31CH31 is 64.32 GHz. The center frequency of x32CH32 is 64.56 GHz. The center frequency of x33CH33 is 64.80 GHz. The center frequency of x34CH34 is 65.04 GHz. The center frequency of x35CH35 is 65.28 GHz. The center frequency of x36CH36 is 65.52 GHz. The center frequency of x37CH37 is 65.76 GHz.

The center frequency of x38CH38 is 66.00 GHz. The center frequency of x39CH39 is 66.24 GHz. The center frequency of x40CH40 is 66.48 GHz. The center frequency of x41CH41 is 66.72 GHz. The center frequency of x42CH42 is 66.96 GHz. The center frequency of x43CH43 is 67.20 GHz. The center frequency of x44CH44 is 67.44 GHz. The center frequency of x45CH45 is 67.68 GHz. The center frequency of x46CH46 is 67.92 GHz.

The center frequency of x47CH47 is 68.16 GHz. The center frequency of x48CH48 is 68.40 GHz. The center frequency of x49CH49 is 68.64 GHz. The center frequency of x50CH50 is 68.88 GHz. The center frequency of x51CH51 is 69.12 GHz. The center frequency of x52CH52 is 69.36 GHz. The center frequency of x53CH53 is 69.60 GHz. The center frequency of x54CH54 is 69.84 GHz. The center frequency of x55CH55 is 70.08 GHz.

The center frequency of x56CH56 is 70.32 GHz. The center frequency of x57CH57 is 70.56 GHz. The center frequency of x58CH58 is 70.80 GHz.

In FIG. 129, the center frequencies of respective channels are as follows.

The center frequency of CH1 labeled 12901 is 57.12 GHz.

The center frequency of CH2 labeled 12902 is 57.48 GHz. The center frequency of CH3 labeled 12903 is 57.96 GHz. The center frequency of CH4 labeled 12904 is 58.44 GHz. The center frequency of CH5 labeled 12905 is 58.92 GHz. The center frequency of CH6 labeled 12906 is 59.28 GHz.

The center frequency of CH7 labeled 12907 is 59.52 GHz. The center frequency of CH8 labeled 12908 is 59.88 GHz. The center frequency of CH9 labeled 12909 is 60.36 GHz. The center frequency of CH10 labeled 12910 is 60.84 GHz. The center frequency of CH11 labeled 12911 is 61.32 GHz.

The center frequency of CH12 labeled 12912 is 61.80 GHz. The center frequency of CH13 labeled 12913 is 62.28 GHz. The center frequency of CH14 labeled 12914 is 62.76 GHz. The center frequency of CH15 labeled 12915 is 63.24 GHz. The center frequency of CH16 labeled 12916 is 63.60 GHz.

The center frequency of CH17 labeled 12917 is 63.84 GHz. The center frequency of CH18 labeled 12918 is 64.20 GHz. The center frequency of CH19 labeled 12919 is 64.68 GHz. The center frequency of CH20 labeled 12920 is 65.16 GHz. The center frequency of CH21 labeled 12921 is 65.64 GHz.

The center frequency of CH22 labeled 12922 is 66.12 GHz. The center frequency of CH23 labeled 12923 is 66.60 GHz. The center frequency of CH24 labeled 12924 is 67.08 GHz. The center frequency of CH25 labeled 12925 is 67.56 GHz. The center frequency of CH26 labeled 12926 is 67.92 GHz.

The center frequency of CH27 labeled 12927 is 68.28 GHz. The center frequency of CH28 labeled 12928 is 68.76 GHz. The center frequency of CH29 labeled 12929 is 69.24 GHz. The center frequency of CH30 labeled 12930 is 69.72 GHz. The center frequency of CH31 labeled 12931 is 70.20 GHz.

The center frequency of CH32 labeled 12932 is 70.68 GHz.

The center frequency of CH6&7 labeled 12998 is 59.40 GHz. The center frequency of CH16&17 labeled 12999 is 63.72 GHz.

In FIG. 130, the center frequencies of respective channels are as follows.

The center frequency of CH1 labeled 13001 is 57.12 GHz.

The center frequency of CH2 labeled 13002 is 57.72 GHz. The center frequency of CH3 labeled 13003 is 58.68 GHz. The center frequency of CH4 labeled 13004 is 59.28 GHz.

The center frequency of CH5 labeled 13005 is 59.52 GHz. The center frequency of CH6 labeled 13006 is 60.12 GHz. The center frequency of CH7 labeled 13007 is 61.08 GHz.

The center frequency of CH8 labeled 13008 is 62.04 GHz. The center frequency of CH9 labeled 13009 is 63.00 GHz. The center frequency of CH10 labeled 13010 is 63.60 GHz.

The center frequency of CH11 labeled 13011 is 63.84 GHz. The center frequency of CH12 labeled 13012 is 64.44 GHz. The center frequency of CH13 labeled 13013 is 65.40 GHz.

The center frequency of CH14 labeled 13014 is 66.36 GHz. The center frequency of CH15 labeled 13015 is 67.32 GHz. The center frequency of CH16 labeled 13016 is 67.92 GHz.

The center frequency of CH17 labeled 13017 is 68.52 GHz. The center frequency of CH18 labeled 13018 is 69.48 GHz. The center frequency of CH19 labeled 13019 is 70.44 GHz.

The center frequency of CH4&5 labeled 13098 is 59.40 GHz, The center frequency of CH10&11 labeled 13099 is 63.72 GHz.

In FIG. 124, the center frequencies of respective channels are as follows.

The center frequency of x1CH1 is 57.12 GHz.

The center frequency of x10CH10 is 59.28 GHz.

The center frequency of x29CH29 is 63.84 GHz.

The center frequency of x56CH56 is 70.32 GHz. The center frequency of x57CH57 is 70.56 GHz. The center frequency of x58CH58 is 70.80 GHz.

The center frequency of CH1 labeled 12401 is 58.32 GHz. The center frequency of CH2 labeled 12402 is 60.48 GHz. The center frequency of CH3 labeled 12403 is 62.64 GHz. The center frequency of CH4 labeled 12404 is 64.80 GHz. The center frequency of CH5 labeled 12405 is 66.96 GHz. The center frequency of CH6 labeled 12406 is 69.12 GHz.

The channel(s) illustrated in FIGS. 128 to 131 may be referred to as NR operating band(s) or NR band(s). In addition, NR operating band(s) may be formed using a plurality of channel(s) illustrated in FIGS. 128 to 131 (e.g., carrier aggregation).

FIG. 125 illustrates an exemplary relationship between the bandwidth of a channel illustrated in FIGS. 128 to 131 and the transmission bandwidth. Note that the horizontal axis represents frequency in FIG. 125.

In FIG. 125, 12501 represents a channel and corresponds to a channel illustrated in FIGS. 128 to 131, for example. Channel 12501 has a channel bandwidth of A [Hz] (A is a real number).

12502 in FIG. 125 represents a signal to be transmitted and has a frequency bandwidth of B [Hz] (B is a real number), where A > B.

FIG. 126 illustrates an exemplary relationship between the bandwidth of a channel illustrated in FIGS. 128 to 131 and the transmission bandwidth, which is different from FIG. 125. Note that the horizontal axis represents frequency in FIG. 126.

In FIG. 126, 12601 represents a channel and corresponds to a channel illustrated in FIGS. 128 to 131, for example.

12602_1 and 12602_2 in FIG. 126 are guard bands, which are periods with no signal, in channel 12601, and a signal to be transmitted is present in a section other than the guard bands.

Note that two or more of "FIG. 125, FIG. 126, and carrier aggregation" may be combined.

Further, channel raster may be introduced for the channels illustrated in FIGS. 128 to 131 and transmission signals present in the channels.

FIG. 127 illustrates an exemplary state of channel raster. Note that the horizontal axis represents frequency in FIG. 127. As illustrated in FIG. 127, there are frequency #1 labeled 12700_1, frequency #2 labeled 12700_2, frequency #3 labeled 12700_3, ..., frequency #(n-1) labeled 12700_(n-1), frequency #n labeled 12700_n, frequency #(n+1) labeled 12700_(n+1), and so forth, as channel raster. Note that the interval between "frequency #(i+1) labeled 12700_(i+1)" and "frequency #i labeled 12700_i" (referred to as the frequency interval for channel raster here) is X [Hz]. Note that i is an integer equal to or greater than 1.

Additionally, the maximum frequency interval among frequencies present for channel raster in FIG. 127 (referred to as the maximum frequency interval for channel raster here) is Y [Hz]. When there are frequency #1 labeled 12700_1 to frequency #100 labeled 12700_100 as channel raster, for example, maximum frequency interval Y for channel raster is $99 \times X$. As another example, when there are frequency #1 labeled 12700_1 to frequency #G labeled 12700_G as channel raster, for example, maximum frequency interval Y for channel raster is (G-1) × X. Note that G is an integer equal to or greater than 1.

The center frequency of a signal present in a channel (e.g., component carrier (CC)) may be configured to be any of frequencies present as channel raster.

For example, the center frequency of a signal present in a channel (e.g., component carrier (CC)) is configured to be any frequency among "frequency #1 labeled 12700_1, frequency #2 labeled 12700_2, frequency #3 labeled 12700_3, ..., frequency #(n-1) labeled 12700_(n-1), frequency #n labeled 12700_n, frequency #(n+1) labeled 12700_(n+1), and so forth".

It is assumed that the frequency interval for channel raster in the NR channel assignment in FIG. 128 is X128, the frequency interval for channel raster in the NR channel assignment in FIG. 129 is X129, the frequency interval for channel raster in the NR channel assignment in FIG. 130 is X130, and the frequency interval for channel raster in the NR channel assignment in FIG. 131 is X131.

In this case, "X128 ≠ X129" and/or "X128 ≠ X130" and/or "X128 ≠ X131" and/or "X129 ≠ X130" and/or "X129 ≠ X131" and/or "X130 ≠ X131" may be satisfied. Such a flexible configuration of the channel raster interval possibly realizes flexible LBT.

It is assumed that the maximum frequency interval for channel raster in the NR channel assignment in FIG. 128 is Y128, the maximum frequency interval for channel raster in the NR channel assignment in FIG. 129 is Y129, the maximum frequency interval for channel raster in the NR channel assignment in FIG. 130 is Y130, and the maximum frequency interval for channel raster in the NR channel assignment in FIG. 131 is Y131.

In this case, "Y128 ≠ Y129" and/or "Y128 ≠ Y130" and/or "Y128 ≠ Y131" and/or "Y129 ≠ Y130" and/or "Y129 ≠ Y131" and/or "Y130 ≠ Y131" may be satisfied. Such a flexible configuration of the maximum frequency interval for channel raster possibly realizes flexible LBT.

In the NR channel assignment in FIG. 128, it is assumed that the frequency interval for channel raster in the USA is X128A, the frequency interval for channel raster in Japan is X128B, and the frequency interval for channel raster in China is X128C.

In this case, "X128A≠X128B" and/or "X128A≠X128C" and/or "X128B≠X128C" may be satisfied. Such a flexible configuration of the channel raster interval possibly realizes flexible LBT.

In the NR channel assignment in FIG. 129, it is assumed that the frequency interval for channel raster in the USA is X129A, the frequency interval for channel raster in Japan is X129B, and the frequency interval for channel raster in China is X129C.

In this case, "X129A≠X129B" and/or "X129A≠X129C" and/or "X129B≠X129C" may be satisfied. Such a flexible configuration of the channel raster interval possibly realizes flexible LBT.

In the NR channel assignment in FIG. 130, it is assumed that the frequency interval for channel raster in the USA is X130A, the frequency interval for channel raster in Japan is X130B, and the frequency interval for channel raster in China is X130C.

In this case, "X130At≠X130B" and/or "X130A≠X130C" and/or "X130B≠X130C" may be satisfied. Such a flexible configuration of the channel raster interval possibly realizes flexible LBT.

In the NR channel assignment in FIG. 131, it is assumed that the frequency interval for channel raster in the USA is X131A, the frequency interval for channel raster in Japan is X131B, and the frequency interval for channel raster in China is X131C.

In this case, "X131A≠X131B" and/or "X131A≠X131C" and/or "X131B≠X131C" may be satisfied. Such a flexible configuration of the channel raster interval possibly realizes flexible LBT.

In the NR channel assignment in FIG. 128, it is assumed that the maximum frequency interval for channel raster in the USA is Y128A, the maximum frequency interval for channel raster in Japan is Y128B, and the maximum frequency interval for channel raster in China is Y128C.

In this case, "Y128A≠Y128B" and/or "Y128A≠Y128C" and/or "Y128B≠Y128C" may be satisfied. Such a flexible configuration of the maximum frequency interval for channel raster possibly realizes flexible LBT.

In the NR channel assignment in FIG. 129, it is assumed that the maximum frequency interval for channel raster in the USA is Y129A, the maximum frequency interval for channel raster in Japan is Y129B, and the maximum frequency interval for channel raster in China is Y129C.

In this case, "Y129A≠Y129B" and/or "Y129A≠Y129C" and/or "Y129B≠Y129C" may be satisfied. Such a flexible configuration of the maximum frequency interval for channel raster possibly realizes flexible LBT.

In the NR channel assignment in FIG. 130, it is assumed that the maximum frequency interval for channel raster in the USA is Y130A, the maximum frequency interval for channel raster in Japan is Y130B, and the maximum frequency interval for channel raster in China is Y130C.

In this case, "Y130A≠Y130B" and/or "Y130A≠Y130C" and/or "Y130B≠Y130C" may be satisfied. Such a flexible configuration of the maximum frequency interval for channel raster possibly realizes flexible LBT.

In the NR channel assignment in FIG. 131, it is assumed that the maximum frequency interval for channel raster in the USA is Y131A, the maximum frequency interval for channel raster in Japan is Y131B, and the maximum frequency interval for channel raster in China is Y131C.

In this case, "Y131A≠Y131B" and/or "Y131A≠Y131C" and/or "Y131B≠Y131C" may be satisfied. Such a flexible configuration of the maximum frequency interval for channel raster possibly realizes flexible LBT.

The above example is about the examples of FIGS. 128 to 131, but the present embodiment is not limited to this. For example, it is assumed that there are two different channel assignment methods, which are channel assignment M and channel assignment N, in an NR system using the frequency from 57 GHz to 71 GHz (both inclusive) although not limited to this frequency.

The frequency interval for channel raster in channel assignment M in the NR system is XM, and the frequency interval for channel raster in channel assignment N in the NR system is XN.

In this case, "XM ≠ XN" may be satisfied. Such a flexible configuration of the channel raster interval possibly realizes flexible LBT.

In addition, the maximum frequency interval for channel raster in channel assignment M in the NR system is YM, and the maximum frequency interval for channel raster in channel assignment N in the NR system is YN.

In this case, "YM ≠ YN" may be satisfied. Such a flexible configuration of the maximum frequency interval for channel raster possibly realizes flexible LBT.

In channel assignment M in the NR system, it is assumed that the frequency interval for channel raster in the USA is XMA, the frequency interval for channel raster in Japan is XMB, and the frequency interval for channel raster in China is XMC.

In this case, "XMA ≠ XMB" and/or "XMA ≠ XMC" and/or "XMB ≠ XMC" may be satisfied. Such a flexible configuration of the channel raster interval possibly realizes flexible LBT.

In channel assignment M in the NR system, it is assumed that the maximum frequency interval for channel raster in the USA is YMA, the maximum frequency interval for channel raster in Japan is YMB, and the maximum frequency interval for channel raster in China is YMC.

In this case, "YMA ≠ YMB" and/or "YMA ≠ YMC" and/or "YMB ≠ YMC" may be satisfied. Such a flexible configuration of the maximum frequency interval for channel raster possibly realizes flexible LBT.

Note that, although there are channels with a frequency bandwidth of 240 MHz in FIGS. 128, 129, 130, and 131 in the present embodiment, the NR system need not support channels with a frequency bandwidth of 240 MHz.

(Embodiment 26)

In other embodiments, exemplary specific methods of LBT performed by a gNB and NR-UE have been described. Meanwhile, a gNB and NR-UE may support a mode of "not performing LBT" (No-LBT mode). In the present embodiment, a description will be given of a case where a gNB and NR-UE support a mode of "performing LBT described in other embodiments or LBT" (LBT mode) and a mode of "not performing LBT" (No-LBT mode).

The description will be given with an example where a gNB performs communication with NR-UE as in FIG. 9, 33, 47, or 97, for example.

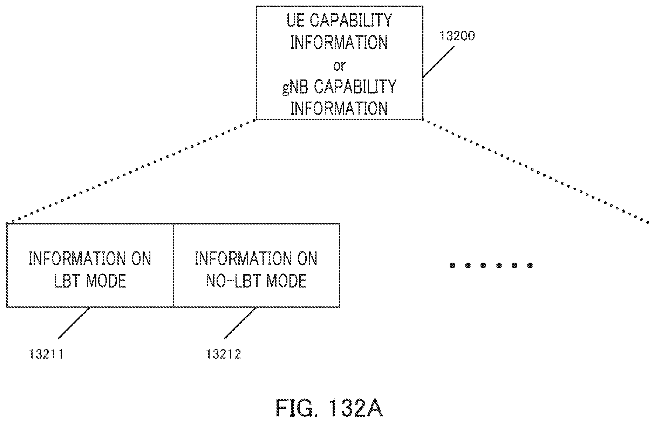

The gNB and NR-UE have a configuration in FIG. 53 or 54, for example. The NR-UE transmits a modulation signal including "UE capability information" 13200 illustrated in FIG. 132A to the gNB.

At this time, "UE capability information" 13200 may include "information 13211 on LBT mode" and "information 13212 on No-LBT mode" as illustrated in FIG. 132A.

For example, the NR-UE that is present in an area where LBT is not required may transmit, to the gNB, "information 13211 on LBT mode" including information "whether it is possible to perform LBT". The gNB can know "whether the NR-UE can perform LBT" by obtaining "information 13211 on LBT mode". Note that, when there are a plurality of terminals, each of the terminals may transmit UE capability information 13200 including "information 13211 on LBT mode", and the gNB can know the state of "whether it is possible to perform LBT" of each terminal.

For example, the NR-UE that is present in an area where LBT is not required may transmit, to the gNB, "information 13212 on No-LBT mode" including information "whether it supports a mode of not performing LBT". The gNB can know "whether the NR-UE supports a mode of not performing LBT" by obtaining "information 13212 on No-LBT mode". Note that, when there are a plurality of terminals, each of the terminals may transmit UE capability information 13200 including "information 13212 on No-LBT mode", and the gNB can know the state of "whether it supports a mode of not performing LBT" of each terminal.

For example, the NR-UE that is present in an area where LBT is required need not transmit "information 13211 on LBT mode" to the gNB. Likewise, the NR-UE that is present in an area where LBT is required need not transmit "information 13212 on No-LBT mode" to the gNB.

As another method, the NR-UE that is present in an area where LBT is required may transmit "information 13211 on LBT mode" to the gNB. At this time, the NR-UE and gNB may determine that "information 13211 on LBT mode" is not valid. Likewise, the NR-UE that is present in an area where LBT is required may transmit "information 13212 on No-LBT mode" to the gNB. At this time, the NR-UE and gNB may determine that "information 13212 on No-LBT mode" is not valid.

For example, the NR-UE that is present in an area where No-LBT is required need not transmit "information 13211 on LBT mode" to the gNB. Likewise, the NR-UE that is present in an area where No-LBT is required need not transmit "information 13212 on No-LBT mode" to the gNB.

As still another method, the NR-UE that is present in an area where No-LBT is required may transmit "information 13211 on LBT mode" to the gNB. At this time, the NR-UE and gNB may determine that "information 13211 on LBT mode" is not valid. Likewise, the NR-UE that is present in an area where No-LBT is required may transmit "information 13212 on No-LBT mode" to the gNB. At this time, the NR-UE and gNB may determine that "information 13212 on No-LBT mode" is not valid.

The gNB transmits a modulation signal including "gNB capability information" 13200 illustrated in FIG. 132A to NR-UE.

At this time, "gNB capability information" 13200 may include "information 13211 on LBT mode" and "information 13212 on No-LBT mode" as illustrated in FIG. 132A.

For example, the gNB that is present in an area where LBT is not required may transmit, to the NR-UE (and another gNB), "information 13211 on LBT mode" including information "whether it is possible to perform LBT". The NR-UE (and another gNB) can know "whether the gNB can perform LBT" by obtaining "information 13211 on LBT mode". Note that, when there are a plurality of terminals, the gNB may transmit, to each of the terminals, gNB capability information 13200 including "information 13211 on LBT mode", and the NR-UE (and another gNB) can know the state of "whether it is possible to perform LBT" for each terminal.

For example, the gNB that is present in an area where LBT is not required may transmit, to the NR-UE (and another gNB), "information 13212 on No-LBT mode" including information "whether it supports a mode of not performing LBT". The NR-UE (and another gNB) can know "whether the gNB supports a mode of not performing LBT" by obtaining "information 13212 on No-LBT mode". Note that, when there are a plurality of terminals, the gNB may transmit, to each of the terminals, gNB capability information 13200 including "information 13212 on No-LBT mode", and the NR-UE (and another gNB) can know the state of "whether it supports a mode of not performing LBT" for each terminal.

For example, the gNB that is present in an area where LBT is required need not transmit "information 13211 on LBT mode" to the NR-UE (and another gNB). Likewise, the gNB that is present in an area where LBT is required need not transmit "information 13212 on No-LBT mode" to the NR-UE (and another gNB).

As another method, the gNB that is present in an area where LBT is required may transmit "information 13211 on LBT mode" to the NR-UE (and another gNB). At this time, the NR-UE and gNB may determine that "information 13211 on LBT mode" is not valid. Likewise, the gNB that is present in an area where LBT is required may transmit "information 13212 on No-LBT mode" to the NR-UE (and another gNB). At this time, the NR-UE and gNB may determine that "information 13212 on No-LBT mode" is not valid.

For example, the gNB that is present in an area where No-LBT is required need not transmit "information 13211 on LBT mode" to the NR-UE (and another gNB). Likewise, the gNB that is present in an area where No-LBT is required need not transmit "information 13212 on No-LBT mode" to the NR-UE (and another gNB).

As another method, the gNB that is present in an area where No-LBT is required may transmit "information 13211 on LBT mode" to the NR-UE (and another gNB). At this time, the NR-UE and gNB may determine that "information 13211 on LBT mode" is not valid. Likewise, the gNB that is present in an area where No-LBT is required may transmit "information 13212 on No-LBT mode" to the NR-UE (and another gNB). At this time, the NR-UE and gNB may determine that "information 13212 on No-LBT mode" is not valid.

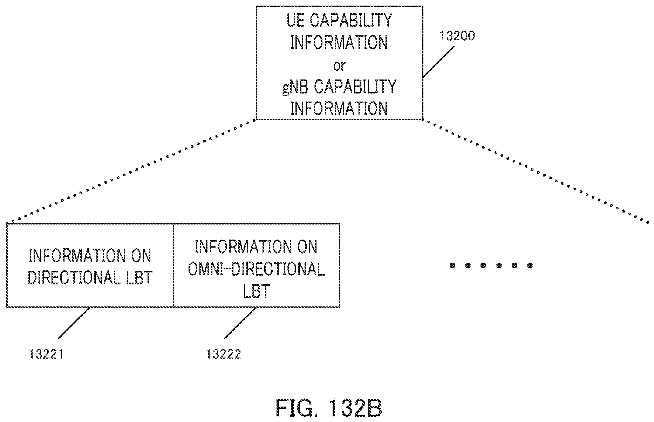

In addition, "UE capability information" 13200 transmitted by the NR-UE may include "information 13221 on directional LBT" and "information 13222 on omni-directional LBT" illustrated in FIG. 132B.

For example, the NR-UE that is present in an area where LBT is not required may transmit, to the gNB, "information 13221 on directional LBT" including information "whether it is possible to perform directional LBT". The gNB can know "whether the NR-UE can perform directional LBT" by obtaining "information 13221 on directional LBT". Note that, when there are a plurality of terminals, each of the terminals may transmit UE capability information 13200 including "information 13221 on directional LBT", and the gNB can know the state of "whether it is possible to perform directional LBT" of each terminal.

For example, the NR-UE that is present in an area where LBT is not required may transmit, to the gNB, "information 13222 on omni-directional LBT" including information "whether it is possible to perform omni-directional LBT". The gNB can know "whether the NR-UE can perform omni-directional LBT" by obtaining "information 13222 on omni-directional LBT". Note that, when there are a plurality of terminals, each of the terminals may transmit UE capability information 13200 including "information 13222 on omni-directional LBT", and the gNB can know the state of "whether it is possible to perform omni-directional LBT" of each terminal.

For example, the NR-UE that is present in an area where LBT is required may transmit, to the gNB, "information 13221 on directional LBT" including information "whether it is possible to perform directional LBT". The gNB can know "whether the NR-UE can perform directional LBT" by obtaining "information 13221 on directional LBT". Note that, when there are a plurality of terminals, each of the terminals may transmit UE capability information 13200 including "information 13221 on directional LBT", and the gNB can know the state of "whether it is possible to perform directional LBT" of each terminal.

For example, the NR-UE that is present in an area where LBT is required may transmit, to the gNB, "information 13222 on omni-directional LBT" including information "whether it is possible to perform omni-directional LBT". The gNB can know "whether the NR-UE can perform omni-directional LBT" by obtaining "information 13222 on omni-directional LBT". Note that, when there are a plurality of terminals, each of the terminals may transmit UE capability information 13200 including "information 13222 on omni-directional LBT", and the gNB can know the state of "whether it is possible to perform omni-directional LBT" of each terminal.

For example, the NR-UE that is present in an area where No-LBT is required need not transmit "information 13221 on directional LBT" to the gNB. Likewise, the NR-UE that is present in an area where No-LBT is required need not transmit "information 13222 on omni-directional LBT" to the gNB.

As another method, the NR-UE that is present in an area where No-LBT is required may transmit "information 13221 on directional LBT" to the gNB. At this time, the NR-UE and gNB may determine that "information 13221 on directional LBT" is not valid. Likewise, the NR-UE that is present in an area where No-LBT is required may transmit "information 13222 on omni-directional LBT" to the gNB. At this time, the NR-UE and gNB may determine that "information 13222 on omni-directional LBT" is not valid.

"gNB capability information" 13200 transmitted by the gNB may include "information 13221 on directional LBT" and "information 13222 on omni-directional LBT" illustrated in FIG. 132B.

For example, the gNB that is present in an area where LBT is not required may transmit, to the NR-UE (and another gNB), "information 13221 on directional LBT" including information "whether it is possible to perform directional LBT". The NR-UE (and another gNB) can know "whether the gNB can perform directional LBT" by obtaining "information 13221 on directional LBT". Note that, when there are a plurality of terminals, the gNB may transmit, to each of the terminals, gNB capability information 13200 including "information 13221 on directional LBT", and each terminal can know the state of "whether it is possible to perform directional LBT" of the gNB.

For example, the gNB that is present in an area where LBT is not required may transmit, to the NR-UE (and another gNB), "information 13222 on omni-directional LBT" including information "whether it is possible to perform omni-directional LBT". The NR-UE (and another gNB) can know "whether the gNB can perform omni-directional LBT" by obtaining "information 13222 on omni-directional LBT". Note that, when there are a plurality of terminals, the gNB may transmit, to each of the terminals, gNB capability information 13200 including "information 13222 on omni-directional LBT", and each terminal can know the state of "whether it is possible to perform omni-directional LBT" of the gNB.

For example, the gNB that is present in an area where LBT is required may transmit, to the NR-UE (and another gNB), "information 13221 on directional LBT" including information "whether it is possible to perform directional LBT". The NR-UE (and another gNB) can know "whether the gNB can perform directional LBT" by obtaining "information 13221 on directional LBT". Note that, when there are a plurality of terminals, the gNB may transmit, to each of the terminals, gNB capability information 13200 including "information 13221 on directional LBT", and each terminal can know the state of "whether it is possible to perform directional LBT" of the gNB.

For example, the gNB that is present in an area where LBT is required may transmit, to the NR-UE (and another gNB), "information 13222 on omni-directional LBT" including information "whether it is possible to perform omni-directional LBT". The NR-UE (and another gNB) can know "whether the gNB can perform omni-directional LBT" by obtaining "information 13222 on omni-directional LBT". Note that, when there are a plurality of terminals, the gNB may transmit, to each of the terminals, gNB capability information 13200 including "information 13222 on omni-directional LBT", and each terminal can know the state of "whether it is possible to perform omni-directional LBT" of the gNB.

For example, the gNB that is present in an area where No-LBT is required need not transmit "information 13221 on directional LBT" to the NR-UE (and another gNB). Likewise, the gNB that is present in an area where No-LBT is required need not transmit "information 13222 on omni-directional LBT" to the NR-UE (and another gNB).

As another method, the gNB that is present in an area where No-LBT is required may transmit "information 13221 on directional LBT" to the NR-UE (and another gNB). At this time, the NR-UE and gNB may determine that "information 13221 on directional LBT" is not valid. Likewise, the gNB that is present in an area where No-LBT is required may transmit "information 13222 on omni-directional LBT" to the NR-UE (and another gNB). At this time, the NR-UE and gNB may determine that "information 13222 on omni-directional LBT" is not valid.

The above operation allows the gNB and NR-UE to know the LBT supporting state of a communication counterpart, and this enables the gNB and NR-UE to easily perform control for reducing interference.

Next, a description will be given of an exemplary configuration of control information included in a modulation signal when the gNB and NR-UE transmits the modulation signal to a communication counterpart.

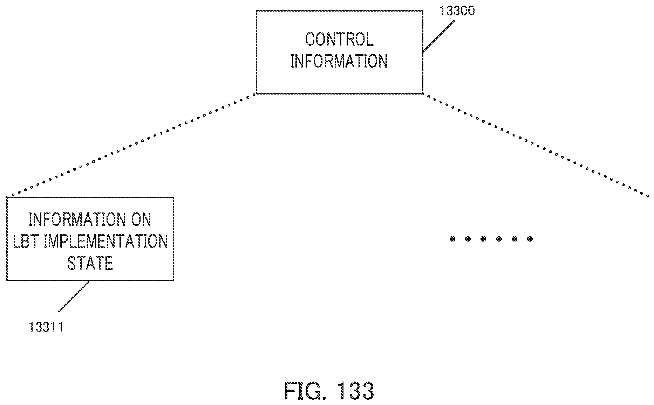

FIG. 133 illustrates an exemplary configuration of control information 1330 included in a modulation signal transmitted by the gNB, for example.

As illustrated in FIG. 133, control information 1330 includes "information 13311 on LBT implementation state". "Information 13311 on LBT implementation state" includes the following information, for example.

"Information whether the gNB (own apparatus) performs LBT":

This information is "information for indicating to a communication counterpart, e.g., NR-UE, whether the gNB performs LBT".

For example, the "information whether the gNB (own apparatus) performs LBT" includes "information indicating either the gNB itself "(always) performs LBT" or "(always) does not perform LBT"". At this time, the "information whether the gNB (own apparatus) performs LBT" may be cell-specific information or apparatus (gNB)-specific information.

As another method, the gNB may transmit the "information whether the gNB (own apparatus) performs LBT" to each terminal. The "information whether the gNB (own apparatus) performs LBT" transmitted to each terminal may be the same information or different information. At this time, the "information whether the gNB (own apparatus) performs LBT" may be cell-specific information, apparatus (gNB)-specific information, or addressed-terminal-specific information.

"Information on an LBT method used by the gNB (own apparatus)":

This information is "information on a scheme of LBT performed by the gNB" and is information of LBT actually performed among directional LBT, omni-directional LBT, and other LBT, for example. A communication counterpart knows a method of LBT performed by the gNB by obtaining this information. At this time, the "information on an LBT method used by the gNB (own apparatus)" may be cell-specific information or apparatus (gNB)-specific information.

As another method, the gNB may transmit the "information on an LBT method used by the gNB (own apparatus)" to each terminal. The "information on an LBT method used by the gNB (own apparatus)" transmitted to each terminal may be the same information or different information. At this time, the "information on an LBT method used by the gNB (own apparatus)" may be cell-specific information, apparatus (gNB)-specific information, or addressed-terminal-specific information.

FIG. 133 illustrates an exemplary configuration of control information 1330 included in a modulation signal transmitted by the NR-UE, for example.

As illustrated in FIG. 133, control information 1330 includes "information 13311 on LBT implementation state". "Information 13311 on LBT implementation state" includes the following information, for example.

"Information whether the NR-UE (own apparatus) performs LBT":

This information is "information for indicating to a communication counterpart, e.g., gNB, whether the NR-UE performs LBT".

For example, the "information whether the NR-UE (own apparatus) performs LBT" includes "information indicating either the NR-UE itself "(always) performs LBT" or "(always) does not perform LBT"". At this time, the "information whether the NR-UE (own apparatus) performs LBT" may be cell-specific information or apparatus (NR-UE (terminal))-specific information.

"Information on an LBT method used by the NR-UE (own apparatus)":

This information is "information on a scheme of LBT performed by the NR-UE" and is information of LBT actually performed among directional LBT, omni-directional LBT, and other LBT, for example. A communication counterpart knows a method of LBT performed by the NR-UE by obtaining this information. At this time, the "information on an LBT method used by the NR-UE (own apparatus)" may be cell-specific information or apparatus (NR-UE (terminal))-specific information.

The above operation allows the gNB and NR-UE to indicate the LBT implementation state to a communication counterpart, and this enables the gNB and NR-UE to easily perform control for reducing interference, thereby producing the effect of improving data reception quality, for example.

In the following, a description will be given of another example related to ""UE capability information or gNB capability information" 13200 and "control information 13300"".

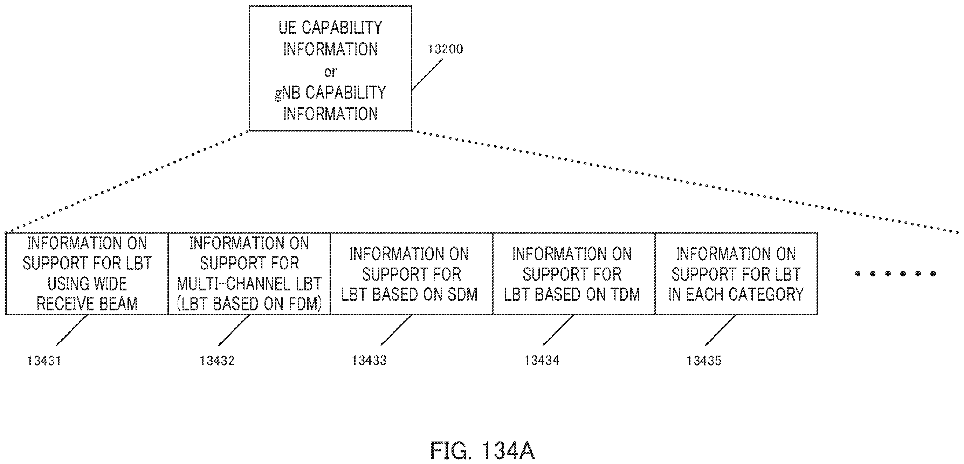

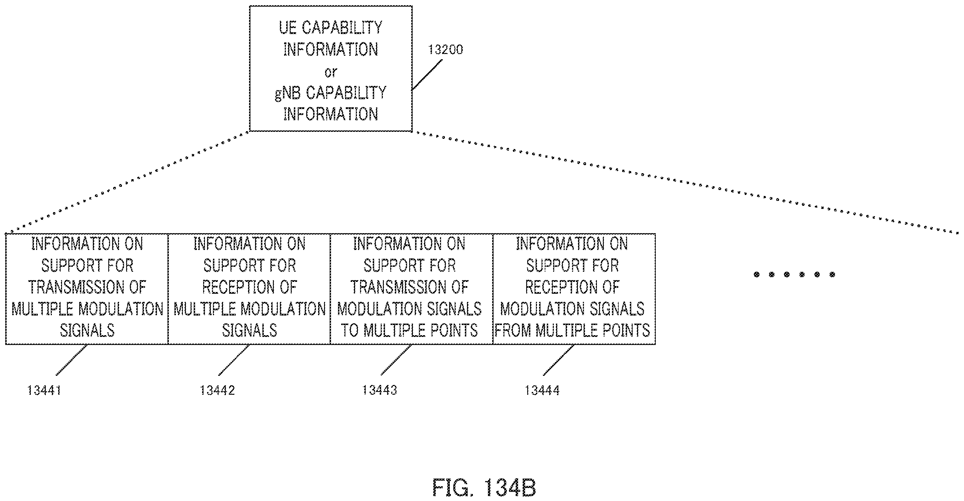

FIGS. 134A and 134B illustrate exemplary configurations of "UE capability information 13200" and "gNB capability information 13200".

First, UE capability information 13200 will be described as an example. Examples of information included in UE capability information 13200 are "information 13431 on support for LBT using wide receive beam", "information 13432 on support for multi-channel LBT (LBT based on FDM)", "information 13433 on support for LBT based on SDM", "information 13434 on support for LBT based on TDM", and "information 13435 on support for LBT in each category" in FIG. 134A, and "information 13441 on support for transmission of multiple modulation signals", "information 13442 on support for reception of multiple modulation signals", "information 13443 on support for transmission of modulation signals to multiple points", and "information 13444 on support for reception of modulation signals from multiple points" in FIG. 134B. Note that the "category of LBT", "LBT based on FDM, LBT based on SDM, and LBT based on TDM" are as described in the present specification.

Each information will be described below.

"Information 13431 on support for LBT using wide receive beam":

In a case where the NR-UE is capable of performing LBT using a receive beam wider than a transmit beam, "information 13431 on support for LBT using wide receive beam" includes information indicating that "the NR-UE is capable of performing LBT using a receive beam wider than a transmit beam".

Meanwhile, in a case where the NR-UE is not capable of performing LBT using a receive beam wider than a transmit beam, "information 13431 on support for LBT using wide receive beam" includes information indicating that "the NR-UE is not capable of performing LBT using a receive beam wider than a transmit beam".

Note that examples of a transmit beam generation method and a receive beam generation method have already been described.

"Information 13432 on support for multi-channel LBT (LBT based on FDM)":

Two examples of the first method and the second method will be described.

First method:

In a case where the NR-UE is capable of performing LBT for a plurality of channels of the NR standard, "information 13432 on support for multi-channel LBT (LBT based on FDM)" includes information indicating that "the NR-UE is capable of performing LBT for a plurality of channels of the NR standard".

Meanwhile, in a case where the NR-UE is not capable of performing LBT for a plurality of channels of the NR standard, "information 13432 on support for multi-channel LBT (LBT based on FDM)" includes information indicating that "the NR-UE is not capable of performing LBT for a plurality of channels of the NR standard".

Second method:

In a case where the NR-UE is capable of performing LBT for a plurality of channels of a standard other than NR, "information 13432 on support for multi-channel LBT (LBT based on FDM)" includes information indicating that "the NR-UE is capable of performing LBT for a plurality of channels of a standard other than NR".

Meanwhile, in a case where the NR-UE is not capable of performing LBT for a plurality of channels of a standard other than NR, "information 13432 on support for multi-channel LBT (LBT based on FDM)" includes information indicating that "the NR-UE is not capable of performing LBT for a plurality of channels of a standard other than NR".

Note that performing "multi-channel LBT", i.e., performing "LBT for a plurality of channels of some standard" may be referred to as the LBT based on FDM. In addition, "information 13432 on support for multi-channel LBT (LBT based on FDM)" may include information of the number of channels where LBT can be performed and information of a frequency bandwidth where LBT can be performed.

"Information 13433 on support for LBT based on SDM":

In a case where the NR-UE is capable of performing LBT based on SDM, "information 13433 on support for LBT based on SDM" includes information indicating that "the NR-UE is capable of performing LBT based on SDM".

Meanwhile, in a case where the NR-UE is not capable of performing LBT based on SDM, "information 13433 on support for LBT based on SDM" includes information indicating that "the NR-UE is not capable of performing LBT based on SDM".

Note that the "LBT based on SDM" is as described in the present specification.

"Information 13434 on support for LBT based on TDM":

In a case where the NR-UE is capable of performing LBT based on TDM, "information 13434 on support for LBT based on TDM" includes information indicating that "the NR-UE is capable of performing LBT based on TDM".

Meanwhile, in a case where the NR-UE is not capable of performing LBT based on TDM, "information 13434 on support for LBT based on TDM" includes information indicating that "the NR-UE is not capable of performing LBT based on TDM".

Note that the "LBT based on TDM" is as described in the present specification.

"Information 13435 on support for LBT in each category":

"Information 13435 on support for LBT in each category" includes "information of a category of LBT that can be performed by the NR-UE".

Note that, when the NR-UE is not capable of performing LBT, "information 13435 on support for LBT in each category" may include information of "not capable of performing LBT".

As another method, "information 13435 on support for LBT in each category" need not be transmitted when the NR-UE is not capable of performing LBT.

The category of LBT will be described later.

"Information 13441 on support for transmission of multiple modulation signals":

In a case where the NR-UE is capable of transmitting multiple modulation signals, "information 13441 on support for transmission of multiple modulation signals" includes information indicating that "the NR-UE is capable of transmitting multiple modulation signals" .

Meanwhile, in a case where the NR-UE is not capable of transmitting multiple modulation signals, "information 13441 on support for transmission of multiple modulation signals" includes information indicating that "the NR-UE is not capable of transmitting multiple modulation signals".

Note that the NR-UE may use multiple transmit beams in transmitting multiple modulation signals.

"Information 13442 on support for reception of multiple modulation signals":

In a case where the NR-UE is capable of receiving multiple modulation signals, "information 13442 on support for reception of multiple modulation signals" includes information indicating that "the NR-UE is capable of receiving multiple modulation signals".

Meanwhile, in a case where the NR-UE is not capable of receiving multiple modulation signals, "information 13442 on support for reception of multiple modulation signals" includes information indicating that "the NR-UE is not capable of receiving multiple modulation signals".

Note that the NR-UE may use multiple receive beams in receiving multiple modulation signals.

"Information 13443 on support for transmission of modulation signals to multiple points":

In a case where the NR-UE is capable of transmitting multiple modulation signals to, for example, multiple transmission/reception points (TRPs), "information 13443 on support for transmission of modulation signals to multiple points" includes information indicating that "the NR-UE is capable of transmitting multiple modulation signals to, for example, multiple TRPs".

Meanwhile, in a case where the NR-UE is not capable of transmitting multiple modulation signals to, for example, multiple TRPs, "information 13443 on support for transmission of modulation signals to multiple points" includes information indicating that "the NR-UE is not capable of transmitting multiple modulation signals to, for example, multiple TRPs".

Note that the NR-UE may use multiple transmit beams in transmitting multiple modulation signals.

"Information 13444 on support for reception of modulation signals from multiple points":

In a case where the NR-UE is capable of receiving multiple modulation signals transmitted by, for example, multiple TRPs, "information 13444 on support for reception of modulation signals from multiple points" includes information indicating that "the NR-UE is capable of receiving multiple modulation signals transmitted by, for example, multiple TRPs".

Meanwhile, in a case where the NR-UE is not capable of receiving multiple modulation signals transmitted by, for example, multiple TRPs, "information 13444 on support for reception of modulation signals from multiple points" includes information indicating that "the NR-UE is not capable of receiving multiple modulation signals transmitted by, for example, multiple TRPs".

Note that the NR-UE may use multiple receive beams in receiving multiple modulation signals.

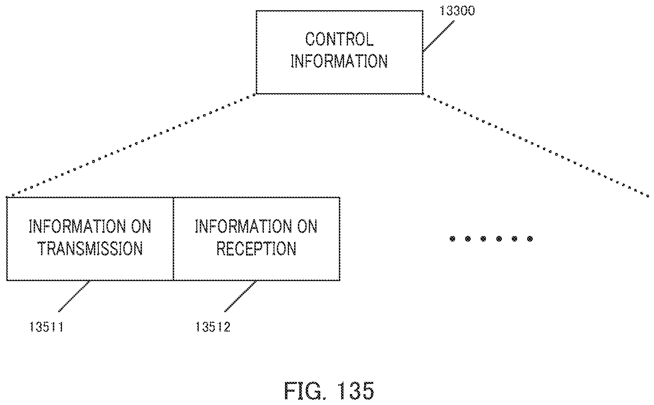

The gNB obtains "UE capability information 13200 including, for example, such information transmitted by the NR-UE" and determines, based on UE capability information 13200, the "LBT implementation method", "modulation signal transmission method", "modulation signal reception method", "frequency bandwidth for transmission", "frequency bandwidth for reception", "application of multiple TRPs in transmission", "application of multiple TRPs in reception", etc. Then, the gNB transmits a modulation signal including, for example, "information 13311 on LBT implementation state", "information 13511 on transmission", "information 13512 on reception", etc. using control information 13300 in FIGS. 133 and 135.

The NR-UE receives control information 13300 and determines the LBT method, transmission method, and reception method.

gNB capability information 13200 will be described as an example. Examples of information included in gNB capability information 13200 are "information 13431 on support for LBT using wide receive beam", "information 13432 on support for multi-channel LBT (LBT based on FDM)", "information 13433 on support for LBT based on SDM", "information 13434 on support for LBT based on TDM", and "information 13435 on support for LBT in each category" in FIG. 134A, and "information 13441 on support for transmission of multiple modulation signals", "information 13442 on support for reception of multiple modulation signals", "information 13443 on support for transmission of modulation signals to multiple points", and "information 13444 on support for reception of modulation signals from multiple points" in FIG. 134B. Note that the "category of LBT", "LBT based on FDM, LBT based on SDM, and LBT based on TDM" are as described in the present specification.

Each information will be described below.

"Information 13431 on support for LBT using wide receive beam":

In a case where the gNB is capable of performing LBT using a receive beam wider than a transmit beam, "information 13431 on support for LBT using wide receive beam" includes information indicating that "the gNB is capable of performing LBT using a receive beam wider than a transmit beam".

Meanwhile, in a case where the gNB is not capable of performing LBT using a receive beam wider than a transmit beam, "information 13431 on support for LBT using wide receive beam" includes information indicating that "the gNB is not capable of performing LBT using a receive beam wider than a transmit beam".

Note that examples of a transmit beam generation method and a receive beam generation method have already been described.

"Information 13432 on support for multi-channel LBT (LBT based on FDM)":

Two examples of the first method and the second method will be described.

First method:

In a case where the gNB is capable of performing LBT for a plurality of channels of the NR standard, "information 13432 on support for multi-channel LBT (LBT based on FDM)" includes information indicating that "the gNB is capable of performing LBT for a plurality of channels of the NR standard".

Meanwhile, in a case where the gNB is not capable of performing LBT for a plurality of channels of the NR standard, "information 13432 on support for multi-channel LBT (LBT based on FDM)" includes information indicating that "the gNB is not capable of performing LBT for a plurality of channels of the NR standard".

Second method:

In a case where the gNB is capable of performing LBT for a plurality of channels of a standard other than NR, "information 13432 on support for multi-channel LBT (LBT based on FDM)" includes information indicating that "the gNB is capable of performing LBT for a plurality of channels of a standard other than NR".

Meanwhile, in a case where the gNB is not capable of performing LBT for a plurality of channels of a standard other than NR, "information 13432 on support for multi-channel LBT (LBT based on FDM)" includes information indicating that "the gNB is not capable of performing LBT for a plurality of channels of a standard other than NR".

Note that performing "multi-channel LBT", i.e., performing "LBT for a plurality of channels of some standard" may be referred to as the LBT based on FDM.

In addition, "information 13432 on support for multi-channel LBT (LBT based on FDM)" may include information of the number of channels where LBT can be performed and information of a frequency bandwidth where LBT can be performed.

"Information 13433 on support for LBT based on SDM":

In a case where the gNB is capable of performing LBT based on SDM, "information 13433 on support for LBT based on SDM" includes information indicating that "the gNB is capable of performing LBT based on SDM".

Meanwhile, in a case where the gNB is not capable of performing LBT based on SDM, "information 13433 on support for LBT based on SDM" includes information indicating that "the gNB is not capable of performing LBT based on SDM".

Note that the "LBT based on SDM" is as described in the present specification.

"Information 13434 on support for LBT based on TDM":

In a case where the gNB is capable of performing LBT based on TDM, "information 13434 on support for LBT based on TDM" includes information indicating that "the gNB is capable of performing LBT based on TDM".

Meanwhile, in a case where the gNB is not capable of performing LBT based on TDM, "information 13434 on support for LBT based on TDM" includes information indicating that "the gNB is not capable of performing LBT based on TDM".

Note that the "LBT based on TDM" is as described in the present specification.

"Information 13435 on support for LBT in each category":

"Information 13435 on support for LBT in each category" includes "information of a category of LBT that can be performed by the gNB".

Note that, when the gNB is not capable of performing LBT, "information 13435 on support for LBT in each category" may include information of "not capable of performing LBT".

As another method, "information 13435 on support for LBT in each category" need not be transmitted when the gNB is not capable of performing LBT.

The category of LBT will be described later.

"Information 13441 on support for transmission of multiple modulation signals":

In a case where the gNB is capable of transmitting multiple modulation signals, "information 13441 on support for transmission of multiple modulation signals" includes information indicating that "the gNB is capable of transmitting multiple modulation signals".

Meanwhile, in a case where the gNB is not capable of transmitting multiple modulation signals, "information 13441 on support for transmission of multiple modulation signals" includes information indicating that "the gNB is not capable of transmitting multiple modulation signals".

Note that the gNB may use multiple transmit beams in transmitting multiple modulation signals.

"Information 13442 on support for reception of multiple modulation signals":

In a case where the gNB is capable of receiving multiple modulation signals, "information 13442 on support for reception of multiple modulation signals" includes information indicating that "the gNB is capable of receiving multiple modulation signals".

Meanwhile, in a case where the gNB is not capable of receiving multiple modulation signals, "information 13442 on support for reception of multiple modulation signals" includes information indicating that "the gNB is not capable of receiving multiple modulation signals".

Note that the gNB may use multiple receive beams in receiving multiple modulation signals.

"Information 13443 on support for transmission of modulation signals to multiple points":

In a case where the gNB is capable of transmitting multiple modulation signals to, for example, multiple TRPs, "information 13443 on support for transmission of modulation signals to multiple points" includes information indicating that "the gNB is capable of transmitting multiple modulation signals to, for example, multiple TRPs".

Meanwhile, in a case where the gNB is not capable of transmitting multiple modulation signals to, for example, multiple TRPs, "information 13443 on support for transmission of modulation signals to multiple points" includes information indicating that "the gNB is not capable of transmitting multiple modulation signals to, for example, multiple TRPs".

Note that the gNB may use multiple transmit beams in transmitting multiple modulation signals.

"Information 13444 on support for reception of modulation signals from multiple points":

In a case where the gNB is capable of receiving multiple modulation signals transmitted by, for example, multiple TRPs, "information 13444 on support for reception of modulation signals from multiple points" includes information indicating that "the gNB is capable of receiving multiple modulation signals transmitted by, for example, multiple TRPs".

Meanwhile, in a case where the gNB is not capable of receiving multiple modulation signals transmitted by, for example, multiple TRPs, "information 13444 on support for reception of modulation signals from multiple points" includes information indicating that "the gNB is not capable of receiving multiple modulation signals transmitted by, for example, multiple TRPs".

Note that the gNB may use multiple receive beams in receiving multiple modulation signals.

The NR-UE obtains "gNB capability information 13200 including, for example, such information transmitted by the gNB" and determines, based on gNB capability information 13200, the "LBT implementation method", "modulation signal transmission method", "modulation signal reception method", "frequency bandwidth for transmission", "frequency bandwidth for reception", "application of multiple TRPs in transmission", "application of multiple TRPs in reception", etc. Then, the NR-UE transmits a modulation signal including, for example, "information 13311 on LBT implementation state", "information 13511 on transmission", "information 13512 on reception", etc. using control information 13300 in FIGS. 133 and 135.

The gNB receives control information 13300 and determines the LBT method, transmission method, and reception method.

The above operation allows the gNB and NR-UE to know the state of a communication counterpart, and the gNB and NR-UE indicate, to the communication counterpart, the LBT state, information on the transmission method, and information on the reception method. This enables the gNB and NR-UE to easily perform control for reducing interference, thereby producing the effect of improving data reception quality, for example.

Note that "UE capability information 13200" and "gNB capability information 13200" preferably include at least one of the information portions illustrated in FIGS. 132A, 132B, 134A, and 134B, and "UE capability information 13200" and "gNB capability information 13200" may include information other than the information portions illustrated in FIGS. 132A, 132B, 134A, and 134B

(Supplement 1)

It is needless to say that the embodiments described in the present specification may be implemented while combined with each other or combined with other contents.

Further, the embodiments and other contents are merely examples. For example, even though the "modulation scheme, error correction coding scheme (error correction code, code length, coding rate, and the like for use), control information, and the like" are illustrated as the examples, it is possible to implement the embodiments with a similar configuration even when a "modulation scheme, error correction coding scheme (error correction code, code length, coding rate, and the like for use), control information, and the like" different from those in the examples are applied.

Regarding the modulation scheme, the embodiments and other contents described in the present specification can be implemented also by using modulation schemes other than the modulation schemes described in the present specification. For example, amplitude phase shift keying (APSK) (e.g., 16APSK, 64APSK, 128APSK, 256APSK, 1024APSK, 4096APSK), pulse amplitude modulation (PAM) (e.g., 4PAM, 8PAM, 16PAM, 64PAM, 128PAM, 256PAM, 1024PAM, 4096PAM), phase shift keying (PSK) (e.g., BPSK, QPSK, 8PSK, 16PSK, 64PSK, 128PSK, 256PSK, 1024PSK, 4096PSK), quadrature amplitude modulation (QAM) (e.g., 4QAM, 8QAM, 16QAM, 64QAM, 128QAM, 256QAM, 1024QAM, 4096QAM), or the like may be applied, or uniform mapping and non-uniform mapping may be applied for each of the modulation schemes. The number of signal points in in-phase (I)-quadrature (phase) (Q) is not limited to those in the examples above, and may be an integer equal to or greater than 3.

In addition, the method of arranging signal points (e.g., 2, 4, 8, 16, 64, 128, 256, or 1024 signal points) on the I-Q plane (modulation scheme with 2, 4, 8, 16, 64, 128, 256, 1024, or other numbers of signal points) is not particularly limited to the signal point arrangement methods of the modulation schemes described in the present specification. Thus, the function of outputting an in-phase component and a quadrature component based on a plurality of bits is a function in a mapper, and performing a matrix operation (e.g., precoding) to perform MIMO transmission and phase changing for a baseband signal after the outputting function is one of the effective functions of the present disclosure.

In addition, when "∀" and "∃" are present in the present specification, "∀" represents a universal quantifier, and "∃" represents an existential quantifier.

Further, when the present specification describes a complex plane, the unit of phase, such as, e.g., an argument, is "radian".

The use of the complex plane allows representation of complex numbers in polar form as a representation of the complex numbers using polar coordinates. Letting a point (a, b) on the complex plane correspond to a complex number z = a + jb (where both of "a" and "b" are real numbers and "j" is an imaginary unit), a = r × cosθ and b = r × sinθ and

[1]

$$r = \sqrt{a^2 + b^2} \quad \ldots \text{(Equation 1)}$$

hold true when this point is expressed as [r, θ] with the polar coordinates. The character "r" is the absolute value of z (r = |z|) and θ is the argument. Then, z = a + jb is expressed as $r \times e^{j\theta}$

.

In the present specification, the "terminal, base station, access point, gateway, etc." may each have a configuration in which a reception apparatus and an antenna of which are separate from each other. For example, the reception apparatus includes an interface for inputting, through a cable, a signal received by the antenna or a signal received by the antenna and subjected to frequency conversion, and the reception apparatus performs subsequent processing. Further, the data and information obtained by the reception apparatus are then converted into a video and sound, and displayed on a display (monitor), or outputted from a speaker in the case of sound. Further, the data and information obtained by the reception apparatus may be subjected to signal processing relevant to the video and sound (such signal processing does not have to be performed), and outputted from an RCA terminal (a video terminal and a sound terminal), universal serial bus (USB), high-definition multimedia interface (HDMI) (registered trademark), digital terminal, or the like provided in the reception apparatus.

It is contemplated herein that the transmission apparatus and/or transmitter is included in, for example, a broadcasting station, base station, access point, terminal, mobile phone, smartphone, tablet, laptop PC, server, PC, personal computer, television, home appliance (household electrical machinery equipment), factory apparatus, communication equipment/broadcasting equipment such as Internet of Things (IoT) equipment or the like, g Node B (gNB), repeater, node, car, bicycle, motorcycle, ship, satellite, airplane, drone, mobile equipment, or robot. Meanwhile, it is contemplated that the reception apparatus and/or receiver is included in a radio, terminal, personal computer, mobile phone, access point, communication equipment such as a base station, smartphone, tablet, laptop PC, server, PC, personal computer, television, home appliance (household electrical machinery equipment), factory apparatus, communication equipment/broadcasting equipment such as Internet of Things (IoT) equipment and the like, and g Node B (gNB), repeater, node, car, bicycle, motorcycle, ship, satellite, airplane, drone, mobile equipment, robot, or the like. Further, it is considered that the transmission apparatus and the reception apparatus in the present disclosure are devices having a communication function, and the devices are configured to be capable of connecting via a certain interface to an apparatus for executing an application of a television, a radio, a personal computer, a mobile phone, or the like. Further, it is considered that the communication apparatus in the present specification is included in, for example, a broadcasting station, base station, access point, terminal, mobile phone, smartphone, tablet, laptop PC, server, PC, personal computer, television, home appliance (household electrical machinery equipment), factory apparatus, communication equipment/broadcasting equipment such as an Internet of Things (IoT) equipment and the like, g Node B (gNB), repeater, node, car, bicycle, motorcycle, ship, satellite, airplane, drone, mobile equipment, or robot.

In addition, symbols other than a data symbol (for example, a reference signal (preamble, unique word, postamble, reference symbol, pilot symbol, pilot signal, and the like), a control information symbol, a sector sweep, etc.) may be mapped in any manner in a frame in the present embodiments. Although the present specification uses the terms "reference signal", "control information symbol", and "sector sweep", the important part is the function itself. The sector sweep may be replaced by a sector-level sweep, for example.

It is contemplated that the reference signal and/or a signal relevant to sector sweep are, for example, known symbols modulated using PSK modulation by the transmitter and receiver (alternatively, the receiver may be capable of knowing a symbol transmitted by the transmitter by synchronization by the receiver), non-zero power signals, zero power signals, signals known to the transmitter and receiver, or the like. The receiver performs, using these signals, frequency synchronization, time synchronization, channel estimation (estimation of channel state information (CSI)) (for each modulation signal), signal detection, estimation of a reception state, estimation of a transmission state, or the like.

Further, the control information symbol is a symbol for transmitting information (e.g., a modulation scheme, an error correction coding scheme, and a coding rate of the error correction coding scheme; configuration information in a higher layer; a modulation and coding scheme (MCS); a frame configuration; channel information; information on a using frequency band; information on the number of using channels; and the like used for communication) that needs to be transmitted to a communication counterpart to achieve communication (of an application or the like) other than data communication.

The transmission apparatus and/or reception apparatus sometimes need to be notified of a transmission method (MIMO, single-input single-output (SISO), multiple-input single-output (MISO), single-input multiple-output (SIMO), space-time block code, interleaving scheme, MCS, etc.), modulation scheme, and error correction coding scheme. This description may be omitted in some of the embodiments.

The terms such as "precoding", "precoding weight", etc. are sometimes used in the present specification, but they may be called in any manner and the important part is the signal processing itself in the present disclosure.

Regarding both the transmission panel antenna of the transmission apparatus and the reception panel antenna of the reception apparatus, a single antenna illustrated in the drawings may be composed of one antenna or a plurality of antennas.

Further, in the explanation of the embodiments and the like, the transmission panel antenna and the reception panel antenna may be described separately; however, a configuration of "transmission/reception panel antenna" serving as both of the transmission panel antenna and the reception panel antenna may be used.

In addition, the transmission panel antenna, reception panel antenna, and transmission/reception panel antenna may be referred to, for example, as an "antenna port." The transmission panel antenna, reception panel antenna, and transmission/reception panel antenna may be referred to as another name, and a method of configuring the transmission panel antenna with one or more antennas or a plurality of antennas is conceivable. Additionally, a method of configuring the reception panel antenna with one or more antennas or a plurality of antennas is conceivable. Also, a method of configuring the transmission/reception panel antenna with one or more antennas or a plurality of antennas is conceivable. Further, an apparatus may be configured for each transmission panel antenna, an apparatus may be configured for each reception panel antenna, and an apparatus may be configured for each transmission/reception panel antenna. That is, it may be regarded as a multiple transmitter (TX)/receiver (RX) point (TRP).

The antenna port may be a logical antenna (antenna group) composed of one or more physical antennas. That is, the antenna port does not necessarily refer to one physical antenna, but may refer to an array antenna or the like composed of a plurality of antennas. For example, the number of physical antennas composing the antenna port is not specified, but the number of physical antennas may be specified as the minimum unit in which a terminal station is capable of transmitting a reference signal. Further, the antenna port may also be specified as a unit or a minimum unit for multiplication by a precoding vector or a weight of a precoding matrix.

There are a plurality of methods of generating a modulation signal by a single-carrier scheme in the present specification, and the present embodiments can be implemented by using any of the schemes. For example, examples of the single-carrier scheme include "discrete Fourier transform (DFT)-spread orthogonal frequency division multiplexing (OFDM)" (DFT-S OFDM), "trajectory constrained DFT-spread OFDM", "constrained DFT-spread OFDM" (constrained DFT-S OFDM), "OFDM based single carrier (SC)", "single carrier (SC)-frequency division multiple access (FDMA)", "guard interval DFT-spread OFDM", a time-domain implementation single carrier scheme (e.g., single carrier (SC)-QAM), and the like.

In the present specification, the ID of the transmission panel antenna and the ID of beamforming are described separately from each other; however, an ID may be assigned without distinguishing between the two.

For example, "ID 0 of beamforming by using transmission panel antenna #1" may be referred to as ID $\flat$0, "ID 1 of beamforming by using transmission panel antenna #1" may be referred to as ID $\flat$1, "ID 0 of beamforming by using transmission panel antenna #2" may be referred to as ID $\flat$2, "ID 1 of beamforming by using transmission panel antenna #2" may be referred to as ID $\flat$3, and so forth.

Thus, a signal for sector sweep may be generated based on the IDs, and the base station and the terminal may transmit information including the IDs.

It has been indicated above that the waveforms of the modulation signal transmitted by the communication apparatus herein may be either the single-carrier scheme or the multi-carrier scheme such as OFDM. In a case of using the multi-carrier scheme such as OFDM, a frame also includes a symbol on the frequency axis.

A "sector sweep reference signal transmitted by a base station" described in the embodiments and drawings such as FIGS. 10, 11, 12, 18, 19, and 27, for example, may be included in a "synchronization signal (SS) block", "physical broadcast channel (PBCH) block", or SS/PBCH block. In this case, it need not be called the "sector sweep reference signal". In addition, a "feedback signal transmitted by a base station and feedback signal group transmitted by a base station" described in the embodiments and drawings such as FIGS. 10, 16A, 16B, 18, 19, and 27, for example, may be included in a "synchronization signal (SS) block", "physical broadcast channel (PBCH) block", or SS/PBCH block. In this case, it need not be called the "feedback signal and feedback signal group".

Although it has been explained that a sector sweep reference signal includes the ID of a transmission panel antenna when a base station transmits the sector sweep reference signal, the sector sweep reference signal may include the ID of a sector antenna and/or information of an antenna port number as "the ID of a transmission panel antenna". Likewise, although it has been explained that a sector sweep reference signal includes the ID of a transmission panel antenna when a terminal transmits the sector sweep reference signal, the sector sweep reference signal may include the ID of a sector antenna and/or information of an antenna port number as "the ID of a transmission panel antenna".

The configurations of the transmission panel antenna and the reception panel antenna of the communication apparatus in the present disclosure are not limited to the configurations in FIGS. 3 and 4. The transmission panel antenna and the reception panel antenna may be composed of one or more antennas and/or antenna elements and may be composed of two or more antennas and/or antenna elements.

Additionally, the antennas illustrated in FIGS. 3 and 4 may be composed of one or more antennas and/or antenna elements or may be composed of two or more antennas and/or antenna elements.

In the present specification, the embodiments have been described using OFDM as an example of multi-carrier schemes, but the embodiments in the present specification can be similarly implemented using another multi-carrier scheme.

By way of example, multi-carrier transmission may be implemented by assigning a "single-carrier scheme using a single frequency band" and assigning a "single-carrier scheme using one or more frequency bands" to the frequency band described in the present specification.

As another example, multi-carrier transmission may be implemented by assigning one or more carriers or two or more carriers to the frequency band described in the present specification. Note that the multi-carrier transmission scheme is not limited to the above examples.

A "sector sweep reference signal transmitted by a base station" described in the embodiments and drawings such as FIGS. 10, 11, 12, 18, 19, and 27, for example, may be included in a "synchronization signal (SS) block", "physical broadcast channel (PBCH) block", or SS/PBCH block. In this case, it need not be called the "sector sweep reference signal".

In addition, a "feedback signal transmitted by a base station and feedback signal group transmitted by a base station" described in the embodiments and drawings such as FIGS. 10, 16A, 16B, 18, 19, and 27, for example, may be included in a "synchronization signal (SS) block", "physical broadcast channel (PBCH) block", or SS/PBCH block. In this case, it need not be called the "feedback signal and feedback signal group".

Although it has been explained that a sector sweep reference signal includes the ID of a transmission panel antenna when a base station transmits the sector sweep reference signal, the sector sweep reference signal may include the ID of a sector antenna and/or information of an antenna port number as "the ID of a transmission panel antenna".

Likewise, although it has been explained that a sector sweep reference signal includes the ID of a transmission panel antenna when a terminal transmits the sector sweep reference signal, the sector sweep reference signal may include the ID of a sector antenna and/or information of an antenna port number as "the ID of a transmission panel antenna".

The configurations of the transmission panel antenna and the reception panel antenna of the communication apparatus in the present disclosure are not limited to the configurations in FIGS. 3 and 4. The transmission panel antenna and the reception panel antenna may be composed of one or more antennas and/or antenna elements and may be composed of two or more antennas and/or antenna elements.

Additionally, the antennas illustrated in FIGS. 3 and 4 may be composed of one or more antennas and/or antenna elements or may be composed of two or more antennas and/or antenna elements.

In the present specification, the embodiments have been described using OFDM as an example of multi-carrier schemes, but the embodiments in the present specification can be similarly implemented using another multi-carrier scheme.

By way of example, multi-carrier transmission may be implemented by assigning a "single-carrier scheme using a single frequency band" and assigning a "single-carrier scheme using one or more frequency bands" to the frequency band described in the present specification.

As another example, multi-carrier transmission may be implemented by assigning one or more carriers or two or more carriers to the frequency band described in the present specification.

Note that the multi-carrier transmission scheme is not limited to the above examples.

In the present specification, a "sector sweep reference signal transmitted by a base station" described in the embodiments and drawings such as FIGS. 10, 11, 12, 18, 19, 27, 36, 41, 42, and 43, for example, may be included in a "physical downlink control channel (PDCCH)". In this case, it need not be called the "sector sweep reference signal".

For example, information A is present as one of information portions in a PDCCH, and a "sector sweep reference signal subjected to beamforming #1", "sector sweep reference signal subjected to beamforming #2", ..., "sector sweep reference signal subjected to beamforming #N" are present as the "sector sweep reference signals transmitted by a base station". Note that N is an integer equal to or greater than 1 or an integer equal to or greater than 2.

At this time, information A is included in the "sector sweep reference signal subjected to beamforming #1", "sector sweep reference signal subjected to beamforming #2", ..., "sector sweep reference signal subjected to beamforming #N". This produces the effect that a terminal is more likely to obtain information A.

A "sector sweep reference signal transmitted by a terminal" described in the embodiments of the present specification may be included in a "physical uplink control channel (PUCCH)". In this case, it need not be called the "sector sweep reference signal".

For example, information B is present as one of information portions in a PUCCH, and a "sector sweep reference signal subjected to beamforming $1", "sector sweep reference signal subjected to beamforming $2", ..., "sector sweep reference signal subjected to beamforming $M" are present as the "sector sweep reference signals transmitted by a terminal". Note that M is an integer equal to or greater than 1 or an integer equal to or greater than 2.

At this time, information B is included in the "sector sweep reference signal subjected to beamforming $1", "sector sweep reference signal subjected to beamforming $2", ..., "sector sweep reference signal subjected to beamforming $M". This produces the effect that a base station is more likely to obtain information B.

Note that, in the present specification, "sections of describing configurations and operations of a base station" may be considered as "configurations and operations of a terminal, AP, or repeater". Likewise, "sections of describing configurations and operations of a terminal" may be considered as "configurations and operations of a base station, AP, or repeater".

In the present specification, a server may provide an application related to processing relevant to the reception apparatus and the receiver, and the terminal may implement the functions of the reception apparatus described in the present specification by installing this application. Note that the application may be provided to the terminal by connection of a communication apparatus including the transmission apparatus described in the present specification to the server via a network, or the application may be provided to the terminal by connection of a communication apparatus having another transmission function to the server via the network.

Likewise, in the present specification, a server may provide an application related to processing relevant to the transmission apparatus and the transmitter, and the communication apparatus may implement the functions of the transmission apparatus described in the present specification by installing this application. Note that a method can be envisaged in which this communication apparatus is provided with the application by connection of another communication apparatus to the server via the network.

Note that the present disclosure is not limited to the embodiments and can be implemented with various modifications. For example, the embodiments are performed by a communication apparatus in the description, but the present invention is not limited to this and the communication methods can be realized by software.

In addition, a program for performing the above communication methods may be stored in read only memory (ROM) in advance, for example, and the program may be executed by a central processor unit (CPU).

Further, a program for performing the communication method may be stored in a computer-readable storage medium, and the program stored in the storage medium may be recorded in a random access memory (RAM) of the computer so that the computer operates according to the program.

Each configuration in the each of the embodiments described above can be typically realized by a large scale integration (LSI), which is an integrated circuit. The LSI may be individually formed as chips, or one chip may be formed so as to include a part or all of the configurations in each embodiment. The LSI here may be referred to as an integrated circuit (IC), a system LSI, a super LSI, or an ultra LSI depending on a difference in the degree of integration. In addition, the technique of implementing an integrated circuit is not limited to the LSI and may be realized by using a dedicated circuit or a general-purpose processor. A field programmable gate array (FPGA) that can be programmed after the manufacture of the LSI or a reconfigurable processor in which the connections and the settings of circuit cells disposed inside the LSI can be reconfigured may be used.

Note that at least one of the FPGA and the CPU may be configured to download all or some of software required for implementing the communication methods described in the present disclosure by radio communication or wired communication. Further, at least one of the FPGA and the CPU may be configured to download all or some of software for updating by radio communication or wired communication. Then, the downloaded software may be stored in storage, and at least one of the FPGA and the CPU may be operated based on the stored software to execute the digital signal processing described in the present disclosure.

The device including at least one of the FPGA and the CPU may be connected to a communication modem by radio or wire, and the communication methods described in the present disclosure may be implemented by the device and the communication modem.

For example, a communication apparatus such as the base station, the AP, and the terminal described in the present specification may include at least one of the FPGA and the CPU, and the communication apparatus may include an interface for externally obtaining software for operating at least one of the FPGA and the CPU. Further, the communication apparatus may include storage for storing the externally-obtained software, and the FPGA and/or the CPU may be operated based on the stored software to implement the signal processing described in the present disclosure.

If future integrated circuit technology replaces LSIs as a result of the advancement of semiconductor technology or other derivative technology, the functional blocks could be integrated using the future integrated circuit technology. Biotechnology can also be applied.

The present disclosure is widely applicable to radio systems for transmitting different modulation signals from a plurality of antennas, respectively. It is also applicable to the case of using MIMO transmission in wired communication systems with a plurality of transmission points (e.g., power line communication (PLC) system, optical communication system, and digital subscriber line (DSL) system). The communication apparatus may be referred to as a radio apparatus.

(Supplement 2)

The "data", "data symbol", and "data frame" may be, for example, a physical downlink shared channel (PDSCH) or a physical uplink shared channel (PUSCH).

In the present disclosure, a description has been given of an example where an NR apparatus detects "a signal of "TXSS, SSW ISS, a data frame, or the like" transmitted by a first standard apparatus" by performing LBT, the NR apparatus may detect a signal transmitted by an apparatus of another standard by performing LBT.

In the present disclosure, a description has been given of an example where an NR apparatus detects "a signal of "TXSS, SSW ISS, a data frame, or the like" transmitted by a first standard apparatus", the NR apparatus may detect a signal transmitted by an apparatus of another standard.

In the present disclosure, an NR apparatus may detect "a sector sweep signal and/or a signal related to sector sweep implementation" transmitted by another NR apparatus by performing LBT.

In the present disclosure, it has been explained that the gNB and NR-UE form transmit beams, but not all the transmit beams need to be the same polarization. In a case where the gNB and NR-UE can generate transmit beam #1, transmit beam #2, transmit beam #3, and so forth, it may be configured so that transmit beam #1 is the first polarization, transmit beam #2 is the second polarization other than the first polarization, and so forth.

In addition, it has been explained that the gNB and NR-UE form receive beams, but not all the receive beams need to be the same polarization. In a case where the gNB and NR-UE can generate receive beam #1, receive beam #2, receive beam #3, and so forth, it may be configured so that receive beam #1 is the first polarization, receive beam #2 is the second polarization other than the first polarization, and so forth.

It has been explained that the gNB and NR-UE form transmit beams in the present disclosure, and the polarization of a transmit beam may be changed as time passes. For example, the first polarization is used for transmit beam #1 at the beginning and may be later changed to the second polarization other than the first polarization.

In addition, it has been explained that the gNB and NR-UE form receive beams, and the polarization of a receive beam may be changed as time passes. For example, the first polarization is used for receive beam #1 at the beginning and may be later changed to the second polarization other than the first polarization.

Although it has been explained that "an NR apparatus (gNB or NR-UE) does not transmit or stands by to transmit a modulation signal when detecting a signal in LBT" in the present disclosure, the NR apparatus (gNB or NR-UE) may transmit a modulation signal when detecting a signal in LBT as long as the modulation signal is a short-period modulation signal that is less likely to interfere "an apparatus of another system such as the first standard or another NR apparatus" (e.g., a signal including control information and a reference signal such as DMRS, PTRS, and another RS signal).

Although it has been explained that "an NR apparatus (gNB or NR-UE) does not transmit or stands by to transmit a modulation signal in a direction with a signal detected in LBT" in the present disclosure, the NR apparatus (gNB or NR-UE) may transmit a modulation signal in a direction with a signal detected in LBT as long as the modulation signal is a short-period modulation signal that is less likely to interfere "an apparatus of another system such as the first standard or another NR apparatus" (e.g., a signal including control information and a reference signal such as DMRS, PTRS, and another RS signal).

There is the following description in Embodiment 7. "In the above description, the gNB and NR-UE detect (listen for) a signal in a single direction in a single reception period, but the present disclosure is not limited to this. The gNB and NR-UE may detect signals in a plurality of directions in a single reception period. For example, the gNB and NR-UE are assumed to detect signals in 16 directions. The gNB and NR-UE may detect signals in two directions in a single reception period. In this case, the gNB and NR-UE complete the signal detection in all directions (16 directions) in eight reception periods. This allows the gNB and NR-UE to reduce the number of reception periods. At this time, the gNB and NR-UE need a receiver for detecting signals in a plurality of directions in order to detect signals in the plurality of directions".

As described above, the gNB and NR-UE may detect signals in a plurality of directions in a single reception period in the LBT processing (note that they may detect signals in a plurality of directions in a plurality of reception periods, and the example has been described in an embodiment of the present disclosure. At this time, time division multiplexing (TDM) is performed on the signals in a plurality of methods in some cases.). Note that, when the signals in a plurality of directions are detected, the frequency (bands) of the plurality of signals may be the same or different from each other.

When the gNB and NR-UE detect a signal in the first direction and a signal in the second direction in a single reception period, for example, the frequency (band) of the signal in the first direction may be the same as or different from the frequency (band) of the signal in the second direction. Note that the gNB and NR-UE generate receive beam #1 for detecting the signal in the first direction and generate receive beam #2 for detecting the signal in the second direction, for example.

At this time, the case where the frequency (band) of the signal in the first direction is the same as the frequency (band) of the signal in the second direction produces an effect of spatial multiplexing (spatial division multiplexing (SDM)), and the case where the frequency (band) of the signal in the first direction is different from the frequency (band) of the signal in the second direction produces an effect of frequency division multiplexing (FDM).

Note that the gNB and/or NR-UE may control so that the relationship between the signal in the first direction and the signal in the second direction is any one of "spatial multiplexing (spatial division multiplexing (SDM))", "frequency division multiplexing (FDM)", and "time division multiplexing (TDM)". Further, the gNB and/or NR-UE may switch the relationship between the signal in the first direction and the signal in the second direction so that it is any one of "spatial multiplexing (spatial division multiplexing (SDM))", "frequency division multiplexing (FDM)", and "time division multiplexing (TDM)" as time passes.

In addition, the above can be applied to the operation of "the gNB and NR-UE perform the second LBT processing or the third LBT processing and start communication without using more than one direction for the communication. Then, after starting the communication, the gNB and NR-UE check whether a signal is present in a direction not used for the communication, and when detecting a direction in which no signal is present, the gNB and NR-UE may start communication by a beam corresponding to the direction" described in Embodiments 8, 9, 10, etc.

It is assumed that the gNB and NR-UE perform LBT and do not use two or more directions for communication. At this time, the gNB and NR-UE may detect signals in a plurality of directions from "the two or more directions" in a single reception period (note that they may detect signals in a plurality of directions from "the two or more directions" in a plurality of reception periods, and the example has been described in an embodiment of the present disclosure. At this time, time division multiplexing (TDM) is sometimes performed since there are signals in a plurality of directions from "the two or more directions" in a plurality of reception periods.).

For example, the gNB and NR-UE perform the LBT processing and determine not to use the first direction and the second direction for communication. Then, the gNB and NR-UE may detect a signal in the first direction and a signal in the second direction in a single reception period. At this time, the frequency (band) of the signal in the first direction may be the same as or different from the frequency (band) of the signal in the second direction. Note that the gNB and NR-UE generate receive beam #1 for detecting the signal in the first direction and generate receive beam #2 for detecting the signal in the second direction, for example.

At this time, the case where the frequency (band) of the signal in the first direction is the same as the frequency (band) of the signal in the second direction produces an effect of spatial multiplexing (spatial division multiplexing (SDM)), and the case where the frequency (band) of the signal in the first direction is different from the frequency (band) of the signal in the second direction produces an effect of frequency division multiplexing (FDM).

Note that the gNB and/or NR-UE may control so that the relationship between the signal in the first direction and the signal in the second direction is any one of "spatial multiplexing (spatial division multiplexing (SDM))", "frequency division multiplexing (FDM)", and "time division multiplexing (TDM)". Further, the gNB and/or NR-UE may switch the relationship between the signal in the first direction and the signal in the second direction so that it is any one of "spatial multiplexing (spatial division multiplexing (SDM))", "frequency division multiplexing (FDM)", and "time division multiplexing (TDM)" as time passes.

In addition, after the LBT processing, the gNB and NR-UE may simultaneously transmit modulation signals in a plurality of directions in which communication can be performed (note that they may transmit modulation signals in a plurality of directions in a plurality of reception periods, and the example has been described in an embodiment of the present disclosure. At this time, time division multiplexing (TDM) is performed on the modulation signals in a plurality of methods in some cases.).

For example, it is assumed that the gNB and NR-UE determines that communication can be performed in the first direction and the second direction by the LBT processing. In this case, when the gNB and NR-UE transmit the first modulation signal from the first direction and the second modulation signal from the second direction, the first modulation signal and the second modulation signal may be present in the same time period. Note that the first modulation signal and the second modulation signal may be signals addressed to the same terminal or may be signals addressed to different terminals. Note that the gNB and NR-UE generate transmit beam #1 for transmitting a signal in the first direction and generate transmit beam #2 for transmitting a signal in the second direction, for example.

At this time, the case where the frequency (band) of the first modulation signal is the same as the frequency (band) of the second modulation signal produces an effect of spatial multiplexing (spatial division multiplexing (SDM)), and the case where the frequency (band) of the first modulation signal is different from the frequency (band) of the second modulation signal produces an effect of frequency division multiplexing (FDM).

Note that the gNB and/or NR-UE may control so that the relationship between the first modulation signal and the second modulation signal is any one of "spatial multiplexing (spatial division multiplexing (SDM))", "frequency division multiplexing (FDM)", and "time division multiplexing (TDM)". Further, the gNB and/or NR-UE may switch the relationship between the first modulation signal and the second modulation signal so that it is any one of "spatial multiplexing (spatial division multiplexing (SDM))", "frequency division multiplexing (FDM)", and "time division multiplexing (TDM)" as time passes.

As another example, it is assumed that the gNB and NR-UE perform the LBT processing and do not use two or more directions for communication. At this time, the gNB and NR-UE may perform signal detection in "the two or more directions" and simultaneously transmit modulation signals in two or more directions in transmitting modulation signals in two or more directions (note that it need not be simultaneous, and the example has been described in an embodiment of the present disclosure. In this case, time division multiplexing (TDM) is performed in some cases.).

For example, it is assumed that the gNB and NR-UE perform the LBT processing and do not perform communication in the first direction and the second direction. Then, the gNB and NR-UE may perform signal detection in the first direction and the second direction and simultaneously transmit modulation signals in the first direction and the second direction. Note that the signal in the first direction and the signal in the second direction may be signals addressed to the same terminal or may be signals addressed to different terminals. Note that the gNB and NR-UE generate transmit beam #1 for transmitting a signal in the first direction and generate transmit beam #2 for transmitting a signal in the second direction, for example.

The frequency (band) of the signal in the first direction may be the same as or different from the frequency (band) of the signal in the second direction. The case where the frequency (band) of the signal in the first direction is the same as the frequency (band) of the signal in the second direction produces an effect of spatial multiplexing (spatial division multiplexing (SDM)), and the case where the frequency (band) of the signal in the first direction is different from the frequency (band) of the signal in the second direction produces an effect of frequency division multiplexing (FDM).

Note that the gNB and/or NR-UE may control so that the relationship between the signal in the first direction and the signal in the second direction is any one of "spatial multiplexing (spatial division multiplexing (SDM))", "frequency division multiplexing (FDM)", and "time division multiplexing (TDM)". Further, the gNB and/or NR-UE may switch the relationship between the signal in the first direction and the signal in the second direction so that it is any one of "spatial multiplexing (spatial division multiplexing (SDM))", "frequency division multiplexing (FDM)", and "time division multiplexing (TDM)" as time passes.

Embodiment 8 has the following description. "The gNB (or NR-UE) performs the second LBT processing, i.e., directional reception, for example. The gNB (or NR-UE) also performs receive beamforming (reception directivity control). Alternatively, it is assumed that the gNB (or NR-UE) performs directional reception in the third LBT processing (omni-directional LBT and directional LBT). Thus, the gNB (or NR-UE) performs receive beamforming (reception directivity control).

The directivity of receive beam #i and the directivity of transmit beam #i are the same. Although the receive beam number and the transmit beam number are the same here, they may be different. For example, a transmit beam having the same directivity as that of receive beam #1 may be transmit beam #4.

As a result of LBT, the gNB (or NR-UE) has detected a signal when using receive beam #2 and detected no signal when using the other receive beams. With this regard, the gNB transmits sector sweep reference in order to start communication, as described in Embodiment 1 to Embodiment 6.

At this time, the gNB transmits a sector sweep reference signal in transmit beam #1, for example. The gNB does not transmit a sector sweep reference signal in transmit beam #2. The gNB transmits sector sweep reference signals in transmit beams #3, #4, and so forth. That is, in the example of FIG. 63, the gNB does not transmit a sector sweep reference signal in transmit beam #2 and transmits sector sweep reference signals in the other transmit beams #1, #3, #4, and so forth.

Note that the gNB (or NR-UE) normally transmits a sector sweep reference signal in transmit beamforming #2".

That is, a receive beam generated by the gNB (or NR-UE) for the LBT and a transmit beam in which the gNB (or NR-UE) transmits the modulation signal during communication are related to each other. For example, when the gNB (or NR-UE) detects a signal in receive beam #1, the gNB (or NR-UE) does not transmit a modulation signal (does not start communication) in transmit beam #1. Meanwhile, when the gNB (or NR-UE) detects no signal in receive beam #1, the gNB (or NR-UE) transmits a modulation signal (starts communication).

The "bandwidth of a signal transmitted/received by gNB or NR-UE" may be the same as or different from the "bandwidth of a signal transmitted/received by a first standard apparatus".

In the present disclosure, LBT may be referred to as a "channel access procedure" or "part of channel access procedure".

The unlicensed band may be referred to as a shared spectrum.

In a case where an apparatus of NR such as gNB and NR-UE transmits a synchronization signal block (SSB), the SSB may include the sector sweep reference signal described in the present specification.

Communication in which a plurality of channels are aggregated may be referred to as channel aggregation. Communication in which a plurality of carriers are aggregated may be referred to as carrier aggregation. All or some of the above-described first channel of NR to fifth channel of NR may be aggregated (channel aggregation) and used for communication. The first standard is not limited to IEEE 802.11ad or IEEE 802.11 ay. The first standard may be, for example, IEEE 802.11aj. Omni-directional LBT may also be referred to as quasi-omni-directional LBT.

Note that "A and/or B" in the present specification may be interpreted as "A and B" or may also be interpreted as "A or B".

In Embodiment 24, when OFDM is applied, for example, subcarrier spacing (SCS) may be configured according to the frequency bandwidth of each channel in "channel assignment in FIG. 121, channel assignment in FIG. 122, channel assignment in FIG. 123, and channel assignment in FIG. 124".

For example, a channel with a frequency bandwidth of 270 MHz or greater may support SCS of at least 120 kHz in "channel assignment in FIG. 121, channel assignment in FIG. 122, channel assignment in FIG. 123, and channel assignment in FIG. 124".

A channel with a frequency bandwidth of 540 MHz or greater may support SCS of at least 120 kHz in "channel assignment in FIG. 121, channel assignment in FIG. 122, channel assignment in FIG. 123, and channel assignment in FIG. 124".

A channel with a frequency bandwidth of 270 MHz or greater may support SCS of at least 480 kHz in "channel assignment in FIG. 121, channel assignment in FIG. 122, channel assignment in FIG. 123, and channel assignment in FIG. 124".

A channel with a frequency bandwidth of 540 MHz or greater may support SCS of at least 480 kHz in "channel assignment in FIG. 121, channel assignment in FIG. 122, channel assignment in FIG. 123, and channel assignment in FIG. 124".

A channel with a frequency bandwidth of 270 MHz or greater may support SCS of at least 960 kHz in "channel assignment in FIG. 121, channel assignment in FIG. 122, channel assignment in FIG. 123, and channel assignment in FIG. 124".

A channel with a frequency bandwidth of 540 MHz or greater may support SCS of at least 960 kHz in "channel assignment in FIG. 121, channel assignment in FIG. 122, channel assignment in FIG. 123, and channel assignment in FIG. 124".

A channel with a frequency bandwidth of 1080 MHz or greater may support SCS of at least 960 kHz in "channel assignment in FIG. 121, channel assignment in FIG. 122, channel assignment in FIG. 123, and channel assignment in FIG. 124".

In Embodiment 25, when OFDM is applied, for example, subcarrier spacing (SCS) may be configured according to the frequency bandwidth of each channel in "channel assignment in FIG. 128, channel assignment in FIG. 129, channel assignment in FIG. 130, and channel assignment in FIG. 131".

For example, a channel with a frequency bandwidth of 240 MHz or greater may support SCS of at least 120 kHz in "channel assignment in FIG. 128, channel assignment in FIG. 129, channel assignment in FIG. 130, and channel assignment in FIG. 131".

A channel with a frequency bandwidth of 480 MHz or greater may support SCS of at least 120 kHz in "channel assignment in FIG. 128, channel assignment in FIG. 129, channel assignment in FIG. 130, and channel assignment in FIG. 131".

A channel with a frequency bandwidth of 240 MHz or greater may support SCS of at least 480 kHz in "channel assignment in FIG. 128, channel assignment in FIG. 129, channel assignment in FIG. 130, and channel assignment in FIG. 131".

A channel with a frequency bandwidth of 480 MHz or greater may support SCS of at least 480 kHz in "channel assignment in FIG. 128, channel assignment in FIG. 129, channel assignment in FIG. 130, and channel assignment in FIG. 131".

A channel with a frequency bandwidth of 240 MHz or greater may support SCS of at least 960 kHz in "channel assignment in FIG. 128, channel assignment in FIG. 129, channel assignment in FIG. 130, and channel assignment in FIG. 131".

A channel with a frequency bandwidth of 480 MHz or greater may support SCS of at least 960 kHz in "channel assignment in FIG. 128, channel assignment in FIG. 129, channel assignment in FIG. 130, and channel assignment in FIG. 131".

A channel with a frequency bandwidth of 960 MHz or greater may support SCS of at least 960 kHz in "channel assignment in FIG. 128, channel assignment in FIG. 129, channel assignment in FIG. 130, and channel assignment in FIG. 131".

In the present specification, a gNB uses transmit beams in transmitting modulation signals, and NR-UE selects a suitable beam from the transmit beams used by the gNB in receiving the modulation signals transmitted by the gNB. At this time, the selection of a receive beam used by the NR-UE, which is selection of the transmit beam to be used by the gNB, may be referred to as beam switching.

Although the present specification provides specific values of frequency in the above, the contents described in the present specification can be similarly implemented by using a frequency other than the above specific frequencies. In addition, the contents described in the present specification can be applicable to not only an unlicensed band but also a licensed band.

For example, a gNB transmits a plurality of data frames to the first NR-UE as described in the present specification. At this time, the gNB may apply (downlink) spatial division multiplexing (SDM), which uses the same timing and the same frequency to transmit the plurality of data frames, for the first NR-UE.

In addition, the gNB may apply (downlink) frequency division multiplexing (FDM), which uses "a plurality of frequencies or a plurality of carriers" to transmit the plurality of data frames, for the first NR-UE.

Further, the gNB may apply (downlink) time division multiplexing (TDM), which uses a first frequency and divides the time into pluralities to transmit the plurality of data frames, for the first NR-UE.

Further, for example, the second NR-UE transmits a plurality of data frames to the gNB as described in the present specification. At this time, the second NR-UE may apply (uplink) SDM, which uses the same timing and the same frequency to transmit the plurality of data frames, for the gNB.

In addition, the second NR-UE may apply (uplink) FDM, which uses "a plurality of frequencies or a plurality of carriers" to transmit the plurality of data frames, for the gNB.

Further, the second NR-UE may apply (uplink) TDM, which uses a second frequency and divides the time into pluralities to transmit the plurality of data frames, for the gNB.

Note that "A and/or B" in the present specification may be interpreted as "A and B" or may also be interpreted as "A or B".

As described in Embodiments 9, 10, etc., the gNB and NR-UE may be able to change or configure the frequency bandwidth of LBT, that is, the frequency bandwidth may be configured in any manner. In a case of applying FIGS. 110, 111, 112, and 113 described in Embodiment 21 to FIGS. 91A and 93A described in Embodiment 19, etc., for example, the frequency bandwidth for performing LBT by the gNB and NR-UE may be broader than the frequency bandwidth (e.g., channel bandwidth) of a modulation signal transmitted by the gNB and UR-UE. At this time, the modulation signal transmitted by the gNB and NR-UE may be a signal of a multi-carrier scheme such as OFDM or a signal of a single-carrier scheme.

In a case where the scheme of a modulation signal is a single-carrier scheme, for example, it is considered to transmit a modulation signal in units of channel bandwidth by FDD, TDD, etc. Thus, when the gNB and NR-UE perform LBT for a plurality of channels in performing LBT, it is possible to collectively detect a channel with a signal detected and a channel with no signal detected. This allows the gNB and NR-UE to transmit a modulation signal by selecting the channel with no signal detected. Note that exemplary switching of frequency bands has been described in Embodiments 15, 17, etc.

For example, it is assumed that the gNB is configured to be able to switch between transmission of a modulation signal of a single-carrier scheme and transmission of a modulation signal of a multi-carrier scheme such as OFDM. In this case, the gNB configures "the frequency bandwidth of LBT performed before transmitting a modulation signal of a single-carrier scheme" and configures "the frequency bandwidth of LBT performed before transmitting a modulation signal of a multi-carrier scheme such as OFDM". For example, "the frequency bandwidth of LBT performed before transmitting a modulation signal of a single-carrier scheme" and "the frequency bandwidth of LBT performed before transmitting a modulation signal of a multi-carrier scheme such as OFDM" may be different from each other.

In performing communication using a plurality of channels, the gNB and NU-UE may perform LBT described in the present specification, for example, for each channel by applying carrier aggregation (CA) by a plurality of NR channels such as "first NR channel 1001_1, second NR channel 1001_2, third NR channel 1001_3, fourth NR channel 1001_4, and fifth NR channel 1001_5" described in FIGS. 110 and 112, for example.

As in the description with reference to FIGS. 62A and 62B in Embodiment 8 and the description with reference to FIG. 99 in Embodiment 19, for example, the method of performing LBT with time division multiplexing (TDM) may be referred to as "LBT based on TDM".

It has been explained that "the gNB and NR-UE may detect a signal in a plurality of directions in a single reception period". Such a method of performing LBT with space division multiplexing (SDM) may be referred to as "LBT based on SDM". (Note that the gNB and NR-UE perform signal detection in a plurality of directions simultaneously in this case.)

A variation of Embodiment 22 will be described. In FIG. 115C, gNB 11401 performs receive beam forming (reception directivity control) for LBT and forms receive beam #k labeled 11403_k. Then, gNB 11401 performs LBT by receive beam #k labeled 11403_k. Note that the LBT method may be the LBT described in the present specification or may be another LBT.

It is assumed that gNB 11401 performs LBT using receive beam #k labeled 11403_k and detects no signal.

FIG. 115D illustrates an exemplary state of the gNB and AP after "gNB 11401 performs LBT using receive beam #k labeled 11403_k and detects no signal".

"Receive beam #k labeled 11403_k in FIG. 115C" is associated with "transmit beam #(3k-2) labeled 11405_(3k-2), transmit beam #(3k-1) labeled 11405_(3k-1), and transmit beam #(3k) labeled 11405_(3k) in FIG. 115D". FIG. 115D is a diagram for describing an exemplary operation at that time.

It is assumed that gNB 11401 performs LBT using receive beam #k labeled 11403_k and detects no signal. At this time, gNB 11401 determines that transmit beams associated with "receive beam #k labeled 11403_k", that is, "transmit beam #(3k-2) labeled 11405_(3k-2), transmit beam #(3k-1) labeled 11405_(3k-1), and transmit beam #(3k) labeled 11405_(3k)" can be used for communication with NU-UE, for example.

Thus, gNB 11401 may transmit a modulation signal addressed to NR-UE, for example, using transmit beam #(3k-2) labeled 11405_(3k-2). Likewise, gNB 11401 may transmit a modulation signal addressed to NR-UE, for example, using transmit beam #(3k-1) labeled 11405_(3k-1). Also, gNB 11401 may transmit a modulation signal addressed to NR-UE, for example, using transmit beam #(3k) labeled 11405_(3k).

gNB 11401 may assign a plurality of modulation signals to the first terminal. For example, gNB 11401 may transmit the first terminal-addressed first modulation signal using transmit beam #(3k-2) labeled 11405_(3k-2) and transmit the first terminal-addressed second modulation signal using transmit beam #(3k-1) labeled 11405_(3k-1).

At this time, "the first terminal-addressed first modulation signal" and "the first terminal-addressed second modulation signal" may be signals in the same (common) frequency and the same time period. It is SDM in this case.

"The first terminal-addressed first modulation signal" and "the first terminal-addressed second modulation signal" may be signals in different frequencies. It is FDM in this case.

"The first terminal-addressed first modulation signal" and "the first terminal-addressed second modulation signal" may be signals in the same (common) frequency but in different time periods. It is TDM in this case.

gNB 11401 may generate and transmit a first terminal-addressed modulation signal using a transmit beam other than "transmit beam #(3k-2) labeled 11405_(3k-2) and transmit beam #(3k-1) labeled 11405_(3k-1)". Such a first terminal-addressed modulation signal is referred to as the first terminal-addressed third modulation signal.

Then, gNB 11401 may transmit "the first terminal-addressed first modulation signal and/or the first terminal-addressed second modulation signal" and "the first terminal-addressed third modulation signal" to the first terminal.

At this time, "the first terminal-addressed first modulation signal" and "the first terminal-addressed third modulation signal" may be signals in the same (common) frequency and the same time period. In addition, "the first terminal-addressed second modulation signal" and "the first terminal-addressed third modulation signal" may be signals in the same (common) frequency and the same time period.

"The first terminal-addressed first modulation signal" and "the first terminal-addressed third modulation signal" may be signals in different frequencies. In addition, "the first terminal-addressed second modulation signal" and "the first terminal-addressed third modulation signal" may be signals in different frequencies.

"The first terminal-addressed first modulation signal" and "the first terminal-addressed third modulation signal" may be signals in the same (common) frequency but in different time periods. In addition, "the first terminal-addressed second modulation signal" and "the first terminal-addressed third modulation signal" may be signals in the same (common) frequency but in different time periods.

It is needless to say that gNB 11401 may transmit two or more modulation signals to the first terminal.

Although FIGS. 115C and 115D illustrate gNB 11401, the same can be implemented replacing gNB 11401 with NR-UE. In addition, the same can be implemented replacing AP 11402 with a communication apparatus (terminal). AP 11402 may be an apparatus conforming to a standard other than the first standard, and the first standard may be a standard other than "IEEE 802.11ad and IEEE 802.11ay".

In terms of the association between "a receive beam generated by the gNB" and "a plurality of transmit beams generated by the gNB", a single "receive beam" is associated with three "transmit beams" in the above example, but the present disclosure is not limited to this. For example, a single "receive beam" may be associated with one or more "transmit beams". Further, a single "receive beam" may be associated with two or more "transmit beams".

In addition, the number of associated "transmit beams" may be set for each "receive beam". For example, "receive beam #1" may be associated with two "transmit beams", "receive beam #2" may be associated with three "transmit beams", and "receive beam #3" may be associated with a single "transmit beam".

In terms of the above description, the gNB will be replaced with NR-UE.

In FIG. 115C, NR-UE 11401 performs receive beam forming (reception directivity control) for LBT and forms receive beam #k labeled 11403_k. Then, NR-UE 11401 performs LBT by receive beam #k labeled 11403_k. Note that the LBT method may be the LBT described in the present specification or may be another LBT.

It is assumed that NR-UE 11401 performs LBT using receive beam #k labeled 11403_k and detects no signal.

FIG. 115D illustrates an exemplary state of the NR-UE and AP after "NR-UE 11401 performs LBT using receive beam #k labeled 11403_k and detects no signal".

"Receive beam #k labeled 11403_k in FIG. 115C" is associated with "transmit beam #(3k-2) labeled 11405_(3k-2), transmit beam #(3k-1) labeled 11405_(3k-1), and transmit beam #(3k) labeled 11405_(3k) in FIG. 115D". FIG. 115D is a diagram for describing an exemplary operation at that time.

It is assumed that NR-UE 11401 performs LBT using receive beam #k labeled 11403_k and detects no signal. At this time, NR-UE 11401 determines that transmit beams associated with "receive beam #k labeled 11403_k", that is, "transmit beam #(3k-2) labeled 11405_(3k-2), transmit beam #(3k-1) labeled 11405_(3k-1), and transmit beam #(3k) labeled 11405_(3k)" can be used for communication with a gNB, for example.

Thus, NR-UE 11401 may transmit a modulation signal addressed to the gNB, for example, using transmit beam #(3k-2) labeled 11405_(3k-2). Likewise, NR-UE 11401 may transmit a modulation signal addressed to the gNB, for example, using transmit beam #(3k-1) labeled 11405_(3k-1). Also, NR-UE 11401 may transmit a modulation signal addressed to the gNB, for example, using transmit beam #(3k) labeled 11405_(3k).

NR-UE 11401 may assign a plurality of modulation signals to the first gNB. For example, NR-UE 11401 may transmit the first gNB-addressed first modulation signal using transmit beam #(3k-2) labeled 11405_(3k-2) and transmit the first gNB-addressed second modulation signal using transmit beam #(3k-1) labeled 11405_(3k-1).

At this time, "the first gNB-addressed first modulation signal" and "the first gNB-addressed second modulation signal" may be signals in the same (common) frequency and the same time period. It is SDM in this case.

"The first gNB-addressed first modulation signal" and "the first gNB-addressed second modulation signal" may be signals in different frequencies. It is FDM in this case.

"The first gNB-addressed first modulation signal" and "the first gNB-addressed second modulation signal" may be signals in the same (common) frequency but in different time periods. It is TDM in this case.

NR-UE 11401 may generate and transmit a first gNB-addressed modulation signal using a transmit beam other than "transmit beam #(3k-2) labeled 11405_(3k-2) and transmit beam #(3k-1) labeled 11405_(3k-1)". Such a first gNB-addressed modulation signal is referred to as the first gNB-addressed third modulation signal.

Then, NR-UE 11401 may transmit "the first gNB-addressed first modulation signal and/or the first gNB-addressed second modulation signal" and "the first gNB-addressed third modulation signal" to the first gNB.

At this time, "the first gNB-addressed first modulation signal" and "the first gNB-addressed third modulation signal" may be signals in the same (common) frequency and the same time period. In addition, "the first gNB-addressed second modulation signal" and "the first gNB-addressed third modulation signal" may be signals in the same (common) frequency and the same time period.

"The first gNB-addressed first modulation signal" and "the first gNB-addressed third modulation signal" may be signals in different frequencies. In addition, "the first gNB-addressed second modulation signal" and "the first gNB-addressed third modulation signal" may be signals in different frequencies.

"The first gNB-addressed first modulation signal" and "the first gNB-addressed third modulation signal" may be signals in the same (common) frequency but in different time periods. In addition, "the first gNB-addressed second modulation signal" and "the first gNB-addressed third modulation signal" may be signals in the same (common) frequency but in different time periods.

It is needless to say that NR-UE 11401 may transmit two or more modulation signals to the first gNB. In addition, the same can be implemented replacing AP 11402 with a communication apparatus (terminal). AP 11402 may be an apparatus conforming to a standard other than the first standard, and the first standard may be a standard other than "IEEE 802.11ad and IEEE 802.11ay".

In terms of the association between "a receive beam generated by the NR-UE" and "a plurality of transmit beams generated by the NR-UE", a single "receive beam" is associated with three "transmit beams" in the above example, but the present disclosure is not limited to this. For example, a single "receive beam" may be associated with one or more "transmit beams". Further, a single "receive beam" may be associated with two or more "transmit beams".

In addition, the number of associated "transmit beams" may be set for each "receive beam". For example, "receive beam #1" may be associated with two "transmit beams", "receive beam #2" may be associated with three "transmit beams", and "receive beam #3" may be associated with a single "transmit beam".

The above operation allows the gNB and NR-UE to transmit data efficiently using frequency, space, and time, thereby producing the effect of improving data throughput.

Note that a channel access method such as LBT may be categorized as follows, and any of Category 1 to Category 4 may be applied to the LBT described in the present specification.

Category 1:

Transmit immediately after a short switching period. (Transmit without performing LBT.)

Category 2:

Perform LBT without random backoff. For example, perform carrier sensing in a fixed sensing time before transmission, and transmit when a channel is available.

Category 3:

Perform LBT with random backoff having a fixed-size contention window.

For example, randomly generate a value within a predetermined range before transmission, repeat carrier sensing in a fixed sensing slot time, then transmit when confirming that a channel is available for the generated value.

Category 4:

Perform LBT with random backoff having a variable-size contention window.

For example, randomly generate a value within a predetermined range before transmission, repeat carrier sensing in a fixed sensing slot time, then transmit when confirming that a channel is available for the generated value. In this case, the generation range of the random backoff value (contention window) is variable according to a communication failure state due to collision with communication of another system.

The disclosures of Japanese Patent Application No. 2020-174026, filed on October 15, 2020, Japanese Patent Application No. 2020-208433, filed on December 16, 2020, Japanese Patent Application No. 2021-018384, filed on February 8, 2021, and Japanese Patent Application No. 2021-043825, filed on March 17, 2021, including the specifications, drawings and abstracts, are incorporated herein by reference in their entirety.

Industrial Applicability

The present disclosure is widely applicable to radio systems for transmitting modulation signals from one or more antennas, and is suitable for the application to, for example, a communication system using a single carrier and a communication system using a multi-carrier transmission scheme such as OFDM. The present disclosure is also applicable to wired communication systems such as a power line communication (PLC) system, an optical communication system, and a digital subscriber line (DSL) system.

Reference Signs List

100 Control signal
101_i i-th data
102_i i-th transmitter
103_i i-th modulation signal
104 First processor
105_jj-th transmission signal
106_j Transmission panel antenna j
151_i Reception panel antenna i
152_i i-th received signal
153 Second processor
154 j-th signal-processing-subjected signal
155_jj-th receiver
156_jj-th control data
157_jj-th data
158 Third processor
200 Control signal
201 Data
202 Data symbol generator
203 Data symbol modulation signal
204 Sector sweep reference signal generator
205 Sector sweep reference signal
206 Other-signal generator
207 Other signals
251 Processor

252 Frame configuration-based modulation signal
300 Control signal
301 Transmission signal
302 Distributor
303_1 First transmission signal
303_2 Second transmission signal
303_3 Third transmission signal
303_4 Fourth transmission signal
304_1, 304_2, 304_3, 304_4 Multiplier
305_1 Coefficient-multiplication-subjected first transmission signal
305_2 Coefficient-multiplication-subjected second transmission signal
305_3 Coefficient-multiplication-subjected third transmission signal
305_4 Coefficient-multiplication-subjected fourth transmission signal
306_1, 306_2, 306_3, 306_4 Antenna
400 Control signal
401_1, 401_2, 401_3, 401_4 Antenna
402_1 First received signal
402_2 Second received signal
402_3 Third received signal
402_4 Fourth received signal
403_1, 403_2, 403_3, 403_4 Multiplier
404_1 Coefficient-multiplication-subjected first received signal
404_2 Coefficient-multiplication-subjected second received signal
404_3 Coefficient-multiplication-subjected third received signal
404_4 Coefficient-multiplication-subjected fourth received signal
405 Coupler/combiner
406 Modulation signal
501 Constellation mapper
502 Serial/parallel converter
503 IFFT
601 Rx FE processing
602 FFT
603 Parallel/serial converter
604 Demapper
701 Rx FE processing
702 CP removal
703 FFT
704 Tone demapping
705 FDE
706 DFT
707 Demapper
801 Rx FE processing
802 Down-sampling and match filtering
803 TDE
804 CP removal
805 Demapper
901_1 Base station #1
902_1 Terminal #1
902_2 Terminal #2
902_3 Terminal #3

1000 Modulation signal

1001, 1801_1, 1801_2, 1851_1, 1851_2, 2401_1 to 2401_3, 3601_1, 3601_2, 4101_3, 4201_3 Sector sweep reference signal

1002, 1802_1 Feedback signal

1003, 1803_1, 1803_2, 1803_3, 1852_1, 1852_2, 1852_3 Data-symbol-included frame

1101_pi Sector sweep reference signal in transmission panel antenna i for frequency ♭p

1201_j Reference signal according to j-th parameter in transmission panel antenna i for frequency ♭p

1301_1 to 1301_8 Terminal "sector sweep reference signal" first transmission period to terminal "sector sweep reference signal" eighth transmission period

1401_i Terminal #i "sector sweep reference signal"

1501_xi Sector sweep reference signal in terminal #i transmission panel antenna xi

1511_j Reference signal according to j-th parameter in transmission panel antenna xi

1601_11 to 1601_K4 Feedback signal first transmission period for frequency ♭1 to feedback signal fourth transmission period for frequency ♭K

1611_i Terminal #i-addressed feedback signal

1701_11 to 1701_K4 Modulation signal (slot) first transmission period for frequency ♭1 to modulation signal (slot) fourth transmission period for frequency ♭K

1711 to 1716, 3011_1 to 3011_6 Terminal #1-addressed modulation signal (slot) to terminal #6-addressed modulation signal (slot)

1802_1, 1802_2 Feedback signal

1803_1, 1803_2, 1803_3, 1803_4 Data-symbol-included frame

1852_1, 1852_2, 1852_3, 1852_4 Data-symbol-included frame

2001_1 to 2001_6, 2501_1 to 2501_6, 3111_1 to 3111_6 Terminal #1 transmission frame to terminal #6 transmission frame

2701_1 Terminal "sector sweep reference signal"

2801_1 to 2801_K "Sector sweep reference signal" for frequency ♭1 to "sector sweep reference signal" for frequency ♭K

2811_1 to 2801_6 Terminal #1 "sector sweep reference signal" to terminal #6 "sector sweep reference signal"

2901_1 to 2901_K Feedback signal for frequency ♭1 to feedback signal for frequency ♭K

3001_1 to 3001_K Modulation signal (slot) for frequency ♭1 to modulation signal (slot) for frequency ♭K

2811_2, 2811_3 Terminal #2 "sector sweep reference signal", terminal #3 "sector sweep reference signal"

3401_1 to 3401_M Sector sweep reference signal in transmission panel antenna 1 to sector sweep reference signal in transmission panel antenna M

3501_1 to 3501_4 Reference signal according to first parameter in transmission panel antenna i to reference signal according to fourth parameter in transmission panel antenna i

3401_xi Sector sweep reference signal in transmission panel antenna xi

3701_1 to 3701_4 Reference signal according to first parameter in transmission panel antenna xi to reference signal according to fourth parameter in transmission panel antenna xi

3801_1 to 3801_4 First terminal-addressed feedback signal to fourth terminal-addressed feedback signal

3901_1 to 3901_4 First terminal-addressed modulation signal (slot) to fourth terminal-addressed modulation signal (slot)

4301_1 to 4301_K Sector sweep reference signal in frequency ♭1 to sector sweep reference signal in frequency ♭K

4401_1 to 4401_H Reference signal according to first parameter for frequency ♭p to reference signal according to H-th parameter for frequency ♭p

4511_1 to 4511_G Reference signal according to first parameter to reference signal according to G-th parameter

4611_1 to 4611_F Reference signal according to first parameter to reference signal according to F-th parameter

## Claims

1. A radio apparatus, comprising:

   reception circuitry, which, in operation, performs reception of a signal using a first directivity; and control circuitry, which, in operation, controls transmission and standby of a transmission signal based on the reception of the signal, wherein,

   a reception period for the signal is configured to be shorter than a reception period for a signal received using a second directivity.

2. The radio apparatus according to claim 1, wherein the first directivity is wider than the second directivity.

3. The radio apparatus according to claim 1, wherein the first directivity is omni-directional and the second directivity is directional.

4. A radio apparatus, comprising:

reception circuitry, which, in operation, performs reception of a signal using a first directivity; and control circuitry, which, in operation, controls transmission and standby of a transmission signal based on the reception of the signal, wherein,

a reception period for the signal is configured to be longer than a reception period for a signal received using a second directivity.

5. The radio apparatus according to claim 4, wherein the first directivity is narrower than the second directivity.

6. The radio apparatus according to claim 4, wherein the first directivity is directional and the second directivity is omni-directional.

7. The radio apparatus according to claim 4, wherein,

a reception period for the signal received using the first directivity is divided into a plurality of reception periods, and
a reception direction of the signal received using the first directivity is different in each of the plurality of reception periods.

8. The radio apparatus according to claim 4, wherein the control circuitry stands by to transmit the transmission signal in a reception direction of the signal received using the first directivity.

9. The radio apparatus according to claim 4, further comprising:
transmission circuitry, which, in operation, does not transmit a signal related to sector sweep in a reception direction of the signal received using the first directivity.

10. A radio apparatus, comprising:

reception circuitry, which, in operation, performs reception of a signal using a first directivity and a second directivity; and
control circuitry, which, in operation, controls transmission and standby of a transmission signal based on the reception of the signal, wherein,

a reception period for the signal received using the first directivity is configured to be shorter than a reception period for the signal received using the second directivity.

11. The radio apparatus according to claim 10, wherein the first directivity is wider than the second directivity.

12. The radio apparatus according to claim 10, wherein the first directivity is omni-directional and the second directivity is directional.

13. The radio apparatus according to claim 11, wherein, when the signal is not received using the first directivity, the control circuitry determines whether a signal related to sector sweep is received using the second directivity.

14. The radio apparatus according to claim 11, wherein, when the signal is received using the first directivity, the control circuitry specifies a reception direction of the signal.

15. The radio apparatus according to claim 1, wherein, when a signal is not transmitted in a direction of the standby of the transmission signal, the control circuitry starts communication in the direction, the signal being a signal based on a regulation of a standard different from a standard to which the radio apparatus conforms.

16. The radio apparatus according to claim 1, wherein the control circuitry monitors presence or absence of a signal in all or some directions in which the transmission of the transmission signal is determined to be possible, the signal being a signal based on a regulation of a standard different from a standard to which the radio apparatus conforms.

17. The radio apparatus according to claim 1, wherein the control circuitry transmits a dummy signal in all or some directions in which the transmission of the transmission signal is determined to be possible.

18. The radio apparatus according to claim 1, wherein the control circuitry controls the transmission and the standby of the transmission signal in a plurality of channels based on the reception of the signal that falls within a frequency band of a standard different from a standard to which the radio apparatus conforms, the plurality of channels including at least a frequency in the frequency band.

19. The radio apparatus according to claim 18, wherein the control circuitry controls the transmission and the standby of the transmission signal in a plurality of channels based on the reception of the signal with a frequency component of part of the frequency band, the plurality of channels overlapping with the frequency band.

20. The radio apparatus according to claim 18, wherein the frequency band overlaps with a frequency band of the plurality of channels that are consecutive.

21. The radio apparatus according to claim 20, wherein the radio apparatus is capable of performing at least one of carrier aggregation and/or channel bonding using a plurality of channels among the plurality of channels that are consecutive.

22. A radio method, comprising:

performing reception of a signal using a first directivity; and
controlling transmission and standby of a transmission signal based on the reception of the signal, wherein,

a reception period for the signal is configured to be shorter than a reception period for a signal received using a second directivity.

23. A radio method, comprising:

performing reception of a signal using a first directivity; and
controlling transmission and standby of a transmission signal based on the reception of the signal, wherein,

a reception period for the signal is configured to be longer than a reception period for a signal received using a second directivity.

24. A radio method, comprising:

performing reception of a signal using a first directivity and a second directivity; and
controlling transmission and standby of a transmission signal based on the reception of the signal, wherein,

a reception period for the signal received using the first directivity is configured to be shorter than a reception period for the signal received using the second directivity.

FIG. 1A

FIG. 1B

**FIG. 1C**

FIG. 2

FIG. 3

FIG. 4

FIG. 5

FIG. 6

**FIG. 7**

701 Rx FE processing

702 CP Removal

703 FFT

704 Tone demapping

705 FDE

706 DFT

707 Demapper

```
   804              803                802                      801
┌──────────┐   ┌─────────┐   ┌──────────────────────┐   ┌─────────────┐
│          │   │         │   │ Down-sampling and match │   │    Rx FE    │
│CP removal│ ◄─│   TDE   │ ◄─│       filtering        │ ◄─│  processing │ ◄─
│          │   │         │   │                        │   │             │
└──────────┘   └─────────┘   └──────────────────────┘   └─────────────┘
     │
     ▼
┌──────────┐
│          │
│ Demapper │  ──────►
│          │
└──────────┘
   805
```

FIG. 8

FIG. 9

EXEMPLARY MODULATION SIGNAL 1000 TRANSMITTED BY BASE STATION:

FIG. 10

EP 4 231 544 A1

EP 4 231 544 A1

FREQUENCY

| | | | |
|---|---|---|---|
| | 1101_K1 | 1101_K2 | 1101_KM |
| FREQUENCY BAND ♭K | SECTOR SWEEP REFERENCE SIGNAL IN TRANSMISSION PANEL ANTENNA 1 FOR FREQUENCY ♭K | SECTOR SWEEP REFERENCE SIGNAL IN TRANSMISSION PANEL ANTENNA 2 FOR FREQUENCY ♭K | • • • | SECTOR SWEEP REFERENCE SIGNAL IN TRANSMISSION PANEL ANTENNA M FOR FREQUENCY ♭K |

⋮       ⋮       ⋮       ⋮

1101_21      1101_22      1101_2M

FREQUENCY BAND ♭2

SECTOR SWEEP REFERENCE SIGNAL IN TRANSMISSION PANEL ANTENNA 1 FOR FREQUENCY ♭2

SECTOR SWEEP REFERENCE SIGNAL IN TRANSMISSION PANEL ANTENNA 2 FOR FREQUENCY ♭2

• • •

SECTOR SWEEP REFERENCE SIGNAL IN TRANSMISSION PANEL ANTENNA M FOR FREQUENCY ♭2

FREQUENCY BAND ♭1

SECTOR SWEEP REFERENCE SIGNAL IN TRANSMISSION PANEL ANTENNA 1 FOR FREQUENCY ♭1

SECTOR SWEEP REFERENCE SIGNAL IN TRANSMISSION PANEL ANTENNA 2 FOR FREQUENCY ♭1

• • •

SECTOR SWEEP REFERENCE SIGNAL IN TRANSMISSION PANEL ANTENNA M FOR FREQUENCY ♭1

1101_11      1101_12      1101_1M

TIME

FIRST TIME PERIOD     SECOND TIME PERIOD     M-TH TIME PERIOD

FIG. 11

FIG. 12

1001

```
SECTOR
SWEEP
REFERENCE
SIGNAL
```

TIME

t0          t1                                                                          t2

| 1301_1 | 1301_2 | 1301_3 | 1301_4 |
|---|---|---|---|
| TERMINAL "SECTOR SWEEP REFERENCE SIGNAL" FIRST TRANSMISSION PERIOD | TERMINAL "SECTOR SWEEP REFERENCE SIGNAL" SECOND TRANSMISSION PERIOD | TERMINAL "SECTOR SWEEP REFERENCE SIGNAL" THIRD TRANSMISSION PERIOD | TERMINAL "SECTOR SWEEP REFERENCE SIGNAL" FOURTH TRANSMISSION PERIOD |

FIG. 13

FIG. 14

FIG. 15A

1501_xi

| SECTOR SWEEP REFERENCE SIGNAL IN TERMINAL #i TRANSMISSION PANEL ANTENNA xi |
|---|

| 1511_1 | 1511_2 | 1511_3 | 1511_4 |
|---|---|---|---|
| REFERENCE SIGNAL ACCORDING TO FIRST PARAMETER IN TRANSMISSION PANEL ANTENNA xi | REFERENCE SIGNAL ACCORDING TO SECOND PARAMETER IN TRANSMISSION PANEL ANTENNA xi | REFERENCE SIGNAL ACCORDING TO THIRD PARAMETER IN TRANSMISSION PANEL ANTENNA xi | REFERENCE SIGNAL ACCORDING TO FOURTH PARAMETER IN TRANSMISSION PANEL ANTENNA xi |

TIME

FIG. 15B

FIG. 16A

FIG. 16B

FEEDBACK SIGNAL — 1002

1611_1 TERMINAL #1-ADDRESSED FEEDBACK SIGNAL

1611_6 TERMINAL #6-ADDRESSED FEEDBACK SIGNAL

1611_4 TERMINAL #4-ADDRESSED FEEDBACK SIGNAL

1611_2 TERMINAL #2-ADDRESSED FEEDBACK SIGNAL

1611_3 TERMINAL #3-ADDRESSED FEEDBACK SIGNAL

1611_5 TERMINAL #5-ADDRESSED FEEDBACK SIGNAL

FREQUENCY

FREQUENCY BAND b K

FREQUENCY BAND b 2

FREQUENCY BAND b 1

FIRST TRANSMISSION PERIOD

SECOND TRANSMISSION PERIOD

THIRD TRANSMISSION PERIOD

FOURTH TRANSMISSION PERIOD

TIME

t2

t3

FIG. 17A

DATA-SYMBOL-INCLUDED FRAME — 1003

FREQUENCY

1711

TERMINAL #1-ADDRESSED
MODULATION SIGNAL
(SLOT)

1716

TERMINAL #6-ADDRESSED
MODULATION SIGNAL
(SLOT)

FREQUENCY
BAND ♭ K

1714

TERMINAL #4-ADDRESSED
MODULATION SIGNAL
(SLOT)

1713

TERMINAL #3-ADDRESSED
MODULATION SIGNAL
(SLOT)

1715

TERMINAL #5-ADDRESSED
MODULATION SIGNAL
(SLOT)

FREQUENCY
BAND ♭ 2

1712

TERMINAL #2-ADDRESSED
MODULATION SIGNAL
(SLOT)

FREQUENCY
BAND ♭ 1

TIME

t4

FIRST
TRANSMISSION
PERIOD

SECOND
TRANSMISSION
PERIOD

THIRD
TRANSMISSION
PERIOD

FOURTH
TRANSMISSION
PERIOD

t5

FIG. 17B

FIG. 18

EP 4 231 544 A1

EP 4 231 544 A1

(A) MODULATION SIGNAL TRANSMISSION STATE OF BASE STATION:

· · ·

1803_3
DATA-SYMBOL-INCLUDED FRAME

1801_2
SECTOR SWEEP REFERENCE SIGNAL

1802_2
FEEDBACK SIGNAL

1803_4
DATA-SYMBOL-INCLUDED FRAME

· · ·

TIME

(B) MODULATION SIGNAL TRANSMISSION STATE OF TERMINAL:

· · ·

1852_3
DATA-SYMBOL-INCLUDED FRAME

1851_2
SECTOR SWEEP REFERENCE SIGNAL

1852_4
DATA-SYMBOL-INCLUDED FRAME

· · ·

TIME

FIG. 19

DATA-SYMBOL-INCLUDED FRAME — 1852_i

FREQUENCY

2001_1

FREQUENCY
BAND ♭ K

TERMINAL #1
TRANSMISSION
FRAME

FREQUENCY
BAND ♭ 2

FREQUENCY
BAND ♭ 1

TIME

FIRST
TRANSMISSION
PERIOD

SECOND
TRANSMISSION
PERIOD

THIRD
TRANSMISSION
PERIOD

FOURTH
TRANSMISSION
PERIOD

FIG. 20A

FIG. 20B

EP 4 231 544 A1

EP 4 231 544 A1

FIG. 20C

DATA-SYMBOL-INCLUDED FRAME — 1852_i

FREQUENCY

FREQUENCY BAND ♭K

2001_4

FREQUENCY BAND ♭2

TERMINAL #4 TRANSMISSION FRAME

FREQUENCY BAND ♭1

TIME

FIRST TRANSMISSION PERIOD

SECOND TRANSMISSION PERIOD

THIRD TRANSMISSION PERIOD

FOURTH TRANSMISSION PERIOD

FIG. 20D

DATA-SYMBOL-INCLUDED FRAME — 1852_i

FREQUENCY

FREQUENCY BAND ♭K

⋮

2001_5

FREQUENCY BAND ♭2

TERMINAL #5 TRANSMISSION FRAME

FREQUENCY BAND ♭1

TIME

| FIRST TRANSMISSION PERIOD | SECOND TRANSMISSION PERIOD | THIRD TRANSMISSION PERIOD | FOURTH TRANSMISSION PERIOD |

FIG. 20E

FIG. 20F

EP 4 231 544 A1

EP 4 231 544 A1

FREQUENCY

/ 1301_1 | / 1301_2 | / 1301_3 | / 1301_4

| TERMINAL "SECTOR SWEEP REFERENCE SIGNAL" FIRST TRANSMISSION PERIOD | TERMINAL "SECTOR SWEEP REFERENCE SIGNAL" SECOND TRANSMISSION PERIOD | TERMINAL "SECTOR SWEEP REFERENCE SIGNAL" THIRD TRANSMISSION PERIOD | TERMINAL "SECTOR SWEEP REFERENCE SIGNAL" FOURTH TRANSMISSION PERIOD |

FREQUENCY BAND ♭ K

FREQUENCY BAND ♭ 2

FREQUENCY BAND ♭ 1

TERMINAL #2 "SECTOR SWEEP REFERENCE SIGNAL"

1401_2

t1    t2    TIME

FIG. 21A

FIG. 21B

FIG. 22A

EP 4 231 544 A1

FIG. 22B

1001

| SECTOR SWEEP REFERENCE SIGNAL |

t0    t1    TIME    t2

| 1301_1 | 1301_2 | 1301_3 | 1301_4 | 1301_5 | 1301_6 | 1301_7 | 1301_8 |
|---|---|---|---|---|---|---|---|
| TERMINAL "SECTOR SWEEP REFERENCE SIGNAL" FIRST TRANSMISSION PERIOD | TERMINAL "SECTOR SWEEP REFERENCE SIGNAL" SECOND TRANSMISSION PERIOD | TERMINAL "SECTOR SWEEP REFERENCE SIGNAL" THIRD TRANSMISSION PERIOD | TERMINAL "SECTOR SWEEP REFERENCE SIGNAL" FOURTH TRANSMISSION PERIOD | TERMINAL "SECTOR SWEEP REFERENCE SIGNAL" FIFTH TRANSMISSION PERIOD | TERMINAL "SECTOR SWEEP REFERENCE SIGNAL" SIXTH TRANSMISSION PERIOD | TERMINAL "SECTOR SWEEP REFERENCE SIGNAL" SEVENTH TRANSMISSION PERIOD | TERMINAL "SECTOR SWEEP REFERENCE SIGNAL" EIGHTH TRANSMISSION PERIOD |

FIG. 23

FIG. 24

FIG. 25

EP 4 231 544 A1

FIG. 26

EP 4 231 544 A1

1001

```
┌─────────────┐
│   SECTOR    │
│   SWEEP     │
│  REFERENCE  │
│   SIGNAL    │
└─────────────┘
```

TIME

t0          t1                                              t2

2701_1

TERMINAL "SECTOR SWEEP REFERENCE SIGNAL"

FIG. 27

FREQUENCY

| | |
|---|---|
| | TERMINAL "SECTOR SWEEP REFERENCE SIGNAL" — 2701_1 |

FREQUENCY
BAND ♭K

"SECTOR SWEEP REFERENCE SIGNAL" FOR FREQUENCY ♭K — 2801_K

⋮

FREQUENCY
BAND ♭7

"SECTOR SWEEP REFERENCE SIGNAL" FOR FREQUENCY ♭7 — 2801_7

FREQUENCY
BAND ♭6

"SECTOR SWEEP REFERENCE SIGNAL" FOR FREQUENCY ♭6 — 2801_6

FREQUENCY
BAND ♭5

"SECTOR SWEEP REFERENCE SIGNAL" FOR FREQUENCY ♭5 — 2801_5

FREQUENCY
BAND ♭4

"SECTOR SWEEP REFERENCE SIGNAL" FOR FREQUENCY ♭4 — 2801_4

FREQUENCY
BAND ♭3

"SECTOR SWEEP REFERENCE SIGNAL" FOR FREQUENCY ♭3 — 2801_3

FREQUENCY
BAND ♭2

"SECTOR SWEEP REFERENCE SIGNAL" FOR FREQUENCY ♭2 — 2801_2

FREQUENCY
BAND ♭1

"SECTOR SWEEP REFERENCE SIGNAL" FOR FREQUENCY ♭1 — 2801_1

TIME

t1    t2

FIG. 28A

FREQUENCY ⋮

| | TERMINAL "SECTOR SWEEP REFERENCE SIGNAL" | 2701_1 |

FREQUENCY
BAND ♭K

| TERMINAL #1 "SECTOR SWEEP REFERENCE SIGNAL" | 2811_1 |

⋮    ⋮    ⋮    ⋮

FREQUENCY
BAND ♭7

| TERMINAL #6 "SECTOR SWEEP REFERENCE SIGNAL" | 2811_6 |

FREQUENCY
BAND ♭6

| TERMINAL #4 "SECTOR SWEEP REFERENCE SIGNAL" | 2811_4 |

FREQUENCY
BAND ♭5

FREQUENCY
BAND ♭4

| TERMINAL #5 "SECTOR SWEEP REFERENCE SIGNAL" | 2811_5 |

FREQUENCY
BAND ♭3

FREQUENCY
BAND ♭2

| TERMINAL #3 "SECTOR SWEEP REFERENCE SIGNAL" | 2811_3 |

FREQUENCY
BAND ♭1

| TERMINAL #2 "SECTOR SWEEP REFERENCE SIGNAL" | 2811_2 |

TIME

t1                              t2

FIG. 28B

EP 4 231 544 A1

285

FIG. 29A

EP 4 231 544 A1

EP 4 231 544 A1

FIG. 29B

FREQUENCY

| DATA-SYMBOL-INCLUDED FRAME | 1003 |

FREQUENCY BAND ♭K
| MODULATION SIGNAL (SLOT) FOR FREQUENCY ♭K | 3001_K |

FREQUENCY BAND ♭7
| MODULATION SIGNAL (SLOT) FOR FREQUENCY ♭7 | 3001_7 |

FREQUENCY BAND ♭6
| MODULATION SIGNAL (SLOT) FOR FREQUENCY ♭6 | 3001_6 |

FREQUENCY BAND ♭5
| MODULATION SIGNAL (SLOT) FOR FREQUENCY ♭5 | 3001_5 |

FREQUENCY BAND ♭4
| MODULATION SIGNAL (SLOT) FOR FREQUENCY ♭4 | 3001_4 |

FREQUENCY BAND ♭3
| MODULATION SIGNAL (SLOT) FOR FREQUENCY ♭3 | 3001_3 |

FREQUENCY BAND ♭2
| MODULATION SIGNAL (SLOT) FOR FREQUENCY ♭2 | 3001_2 |

FREQUENCY BAND ♭1
| MODULATION SIGNAL (SLOT) FOR FREQUENCY ♭1 | 3001_1 |

TIME

t4    t5

FIG. 30A

EP 4 231 544 A1

FREQUENCY

| | DATA-SYMBOL-INCLUDED FRAME | 1003 |

FREQUENCY BAND ♭K

TERMINAL #1-ADDRESSED MODULATION SIGNAL (SLOT) — 3011_1

⋮

FREQUENCY BAND ♭7

TERMINAL #6-ADDRESSED MODULATION SIGNAL (SLOT) — 3011_6

FREQUENCY BAND ♭6

TERMINAL #4-ADDRESSED MODULATION SIGNAL (SLOT) — 3011_4

FREQUENCY BAND ♭5

FREQUENCY BAND ♭4

TERMINAL #5-ADDRESSED MODULATION SIGNAL (SLOT) — 3011_5

FREQUENCY BAND ♭3

TERMINAL #3-ADDRESSED MODULATION SIGNAL (SLOT)

FREQUENCY BAND ♭2

— 3011_3

FREQUENCY BAND ♭1

TERMINAL #2-ADDRESSED MODULATION SIGNAL (SLOT) — 3011_2

t4          t5          TIME

FIG. 30B

FIG. 31A

EP 4 231 544 A1

FIG. 31B

FIG. 31C

EP 4 231 544 A1

FREQUENCY

DATA-SYMBOL-INCLUDED FRAME    1852_i

FREQUENCY
BAND ♭ K

FREQUENCY
BAND ♭ 7

FREQUENCY
BAND ♭ 6    TERMINAL #4 TRANSMISSION FRAME    3111_4

FREQUENCY
BAND ♭ 5

FREQUENCY
BAND ♭ 4

FREQUENCY
BAND ♭ 3

FREQUENCY
BAND ♭ 2

FREQUENCY
BAND ♭ 1

TIME

FIG. 31D

FIG. 31E

EP 4 231 544 A1

FREQUENCY

| | DATA-SYMBOL-INCLUDED FRAME | 1852_i |

FREQUENCY
BAND ♭K

FREQUENCY
BAND ♭7

| | TERMINAL #6 TRANSMISSION FRAME | 3111_6 |

FREQUENCY
BAND ♭6

FREQUENCY
BAND ♭5

FREQUENCY
BAND ♭4

FREQUENCY
BAND ♭3

FREQUENCY
BAND ♭2

FREQUENCY
BAND ♭1

TIME

FIG. 31F

EP 4 231 544 A1

FREQUENCY

| | TERMINAL "SECTOR SWEEP REFERENCE SIGNAL" | 2701_1 |

FREQUENCY
BAND ♭K

⋮

FREQUENCY
BAND ♭7

FREQUENCY
BAND ♭6

FREQUENCY
BAND ♭5

FREQUENCY
BAND ♭4

FREQUENCY
BAND ♭3

FREQUENCY
BAND ♭2

FREQUENCY
BAND ♭1

| TERMINAL #2 "SECTOR SWEEP REFERENCE SIGNAL" | 2811_2 |

TIME

t1                                    t2

FIG. 32A

FIG. 32B

BASE
STATION
#1

901_1

TERMINAL
#1

902_1

TERMINAL
#2

902_2

TERMINAL
#3

902_3

FIG. 33

EP 4 231 544 A1

3401_1

3401_2

3401_M

| SECTOR SWEEP REFERENCE SIGNAL IN TRANSMISSION PANEL ANTENNA 1 | SECTOR SWEEP REFERENCE SIGNAL IN TRANSMISSION PANEL ANTENNA 2 | • • • | SECTOR SWEEP REFERENCE SIGNAL IN TRANSMISSION PANEL ANTENNA M |

TIME

FIG. 34

300

3401_i

SECTOR SWEEP REFERENCE
SIGNAL IN TRANSMISSION PANEL
ANTENNA i

3501_1

REFERENCE SIGNAL
ACCORDING TO FIRST
PARAMETER IN TRANSMISSION
PANEL ANTENNA i

3501_2

REFERENCE SIGNAL
ACCORDING TO SECOND
PARAMETER IN TRANSMISSION
PANEL ANTENNA i

3501_3

REFERENCE SIGNAL
ACCORDING TO THIRD
PARAMETER IN TRANSMISSION
PANEL ANTENNA i

3501_4

REFERENCE SIGNAL
ACCORDING TO FOURTH
PARAMETER IN TRANSMISSION
PANEL ANTENNA i

TIME

FIG. 35

FIG. 36

3401_xi

| SECTOR SWEEP REFERENCE SIGNAL IN TRANSMISSION PANEL ANTENNA xi |

| 3701_1 | 3701_2 | 3701_3 | 3701_4 |
|---|---|---|---|
| REFERENCE SIGNAL ACCORDING TO FIRST PARAMETER IN TRANSMISSION PANEL ANTENNA xi | REFERENCE SIGNAL ACCORDING TO SECOND PARAMETER IN TRANSMISSION PANEL ANTENNA xi | REFERENCE SIGNAL ACCORDING TO THIRD PARAMETER IN TRANSMISSION PANEL ANTENNA xi | REFERENCE SIGNAL ACCORDING TO FOURTH PARAMETER IN TRANSMISSION PANEL ANTENNA xi |

TIME

FIG. 37

1002

| FEEDBACK SIGNAL |
|---|

3801_1

| FIRST TERMINAL-ADDRESSED FEEDBACK SIGNAL |
|---|

3801_2

| SECOND TERMINAL-ADDRESSED FEEDBACK SIGNAL |
|---|

3801_3

| THIRD TERMINAL-ADDRESSED FEEDBACK SIGNAL |
|---|

3801_4

| FOURTH TERMINAL-ADDRESSED FEEDBACK SIGNAL |
|---|

TIME

t2

t3

FIG. 38

1003

| DATA-SYMBOL-INCLUDED FRAME |
|---|

3901_1 — FIRST TERMINAL-ADDRESSED MODULATION SIGNAL (SLOT)

3901_2 — SECOND TERMINAL-ADDRESSED MODULATION SIGNAL (SLOT)

3901_3 — THIRD TERMINAL-ADDRESSED MODULATION SIGNAL (SLOT)

3901_4 — FOURTH TERMINAL-ADDRESSED MODULATION SIGNAL (SLOT)

TIME

t4                    t5

FIG. 39

FIG. 40

TERMINAL #1

TERMINAL #2

TERMINAL #3

1301_1 — TERMINAL "SECTOR SWEEP REFERENCE SIGNAL" FIRST TRANSMISSION PERIOD

1301_2 — TERMINAL "SECTOR SWEEP REFERENCE SIGNAL" SECOND TRANSMISSION PERIOD

1301_3 — TERMINAL "SECTOR SWEEP REFERENCE SIGNAL" THIRD TRANSMISSION PERIOD

1301_4 — TERMINAL "SECTOR SWEEP REFERENCE SIGNAL" FOURTH TRANSMISSION PERIOD

SECTOR SWEEP REFERENCE SIGNAL — 3601_1

SECTOR SWEEP REFERENCE SIGNAL — 3601_2

SECTOR SWEEP REFERENCE SIGNAL — 4101_3

t1

t2

TIME

FIG. 41

FIG. 42

FIG. 43

EP 4 231 544 A1

EP 4 231 544 A1

4301_p

SECTOR SWEEP REFERENCE
SIGNAL IN FREQUENCY ♭p

4401_1

REFERENCE SIGNAL
ACCORDING TO
FIRST PARAMETER
FOR FREQUENCY ♭p

4401_2

REFERENCE SIGNAL
ACCORDING TO
SECOND PARAMETER
FOR FREQUENCY ♭p

4401_H

REFERENCE SIGNAL
ACCORDING TO
H-th PARAMETER
FOR FREQUENCY ♭p

TIME

FIG. 44

FIG. 45

FIG. 46

gNB

for NR

AP

for IEEE
802.11ad/ay

UE

for NR

UE

for IEEE
802.11ad/ay

FIG. 47

DMG (Directional Multi Gigabit) antenna

Initiator Sector Sweep (ISS)

Sector Sweep Feedback

Initiator

| Sector #1 | Sector #2 | | Sector #m |

Responder

| Sector #1 | Sector #2 | | Sector #n |

Responder Sector Sweep (RSS)

Sector Sweep Ack

FIG. 48

FIG. 49

FIG. 50

FIG. 51

FIG. 52

FIG. 53

FIG. 54

START

↓

S5501

Signal detected in omni-directional detection?

YES → S5502

Stand by

NO ↓

S5503

Start communication

FIG. 55

FIG. 56

START

S5701

Signal
detected in directional
detection?

NO

YES

S5702

Stand by

S5703

Start
communication

FIG. 57

FIG. 58

FIG. 59A

FIG. 59B

BEACON INTERVAL

Beacon

Beacon

Beacon

Beacon

Beacon

TIME

FIRST RECEPTION
PERIOD

SECOND RECEPTION
PERIOD

THIRD RECEPTION
PERIOD

FOURTH RECEPTION
PERIOD

FIG. 59C

FIG. 59D

TIME

BEACON INTERVAL

Beacon

FIFTH RECEPTION PERIOD

SIXTH RECEPTION PERIOD

SEVENTH RECEPTION PERIOD

EIGHTH RECEPTION PERIOD

START

↓

S6001

Signal detected in omni-directional detection?

— YES → S6002 — Stand by

— NO ↓

S6003

Signal detected in directional detection?

— NO → S6004 — Start communication

— YES

S6005 — Determine beamforming parameter to be used

↓

S6006 — Start communication or stand by

FIG. 60

EP 4 231 544 A1

START

S6101

Signal detected in omni-directional detection?

YES → S6106

Perform directional signal detection?

NO → S6107

Stand by

NO

S6102

Signal detected in directional detection?

NO

S6103

Start communication

YES

S6104

Determine beamforming parameter to be used

S6105

Start communication or stand by

YES

S6108

Search for beam with no signal detected in directional detection

S6109

Determine beamforming parameter to be used

S6110

Start communication or stand by

FIG. 61

EP 4 231 544 A1

**6201**

SECTOR SWEEP REFERENCE SIGNAL IN TRANSMISSION /RECEPTION PANEL ANTENNA 1

SECTOR SWEEP REFERENCE SIGNAL IN TRANSMISSION /RECEPTION PANEL ANTENNA 2

...

SECTOR SWEEP REFERENCE SIGNAL IN TRANSMISSION /RECEPTION PANEL ANTENNA M

→ TIME

**6202**

**6299** SIGNAL-DETECTED PANEL ANTENNA

SSW after directional detection: Not transmitting a sector sweep reference signal from transmission/reception panel antenna 2

**6203**

SECTOR SWEEP REFERENCE SIGNAL IN TRANSMISSION /RECEPTION PANEL ANTENNA 1

SECTOR SWEEP REFERENCE SIGNAL IN TRANSMISSION /RECEPTION PANEL ANTENNA 2

...

SECTOR SWEEP REFERENCE SIGNAL IN TRANSMISSION /RECEPTION PANEL ANTENNA M

→ TIME

FIG. 62A

**6211**

| SECTOR SWEEP REFERENCE SIGNAL IN BEAM 1 | SECTOR SWEEP REFERENCE SIGNAL IN BEAM 2 | ... | SECTOR SWEEP REFERENCE SIGNAL IN BEAM m |

→ TIME

**6212**

**6298** SIGNAL-DETECTED BEAM

**6213**

SSW after directional detection:  Not transmitting a sector sweep reference signal using beam 2

| SECTOR SWEEP REFERENCE SIGNAL IN BEAM 1 | ~~SECTOR SWEEP REFERENCE SIGNAL IN BEAM 2~~ | ... | SECTOR SWEEP REFERENCE SIGNAL IN BEAM m |

→ TIME

FIG. 62B

FIG. 63

TRANSMIT BEAM

RECEIVE BEAM #10

RECEIVE BEAM #9

RECEIVE BEAM #8

AP

gNB

FIG. 64

START

S6501

Implement LBT

S6502

Signal
detected by LBT?

YES

S6504

Perform communication
while performing
directional detection

NO

S6503

Perform communication
without directional detection

FIG. 65

FIG. 66

(A) MODULATION SIGNAL TRANSMISSION STATE OF BASE STATION:

... | DATA-SYMBOL-INCLUDED FRAME (1803_3) | SECTOR SWEEP REFERENCE SIGNAL (1801_2) | ← 6601_2 → | FEEDBACK SIGNAL (1802_2) | DATA-SYMBOL-INCLUDED FRAME (1803_4) | ...

TIME →

(B) MODULATION SIGNAL TRANSMISSION STATE OF TERMINAL:

... | DATA-SYMBOL-INCLUDED FRAME (1852_3) | ← 6651_2 → | SECTOR SWEEP REFERENCE SIGNAL (1851_2) | DATA-SYMBOL-INCLUDED FRAME (1852_4) | ...

TIME →

EP 4 231 544 A1

FIG. 67

FIG. 68

EP 4 231 544 A1

FIG. 69

**(A) MODULATION SIGNAL TRANSMISSION STATE OF BASE STATION:**

1801_1
SECTOR SWEEP REFERENCE SIGNAL

1802_1
FEEDBACK SIGNAL

1803_1
DATA-SYMBOL-INCLUDED FRAME

1803_2
DATA-SYMBOL-INCLUDED FRAME

TIME

**(C) RECEPTION STATE OF BASE STATION**

RECEPTION PERIOD FOR DIRECTION (BEAM) DETECTION

7001

TIME

**(B) MODULATION SIGNAL TRANSMISSION STATE OF TERMINAL:**

1851_1
SECTOR SWEEP REFERENCE SIGNAL

1852_1
DATA-SYMBOL-INCLUDED FRAME

1852_2
DATA-SYMBOL-INCLUDED FRAME

TIME

FIG. 70

START

↓

Implement
LBT
⌇ S6501

↓

Signal
detected by
LBT?
⌇ S6502

— YES → Perform communication
in a direction with
no signal detected
⌇ S7101

↓ NO

Perform communication
without directional detection
⌇ S6503

Perform predetermined
processing for a direction
with a signal detected
⌇ S7102

FIG. 71

# EXEMPLARY MODULATION SIGNAL 1000 TRANSMITTED BY BASE STATION:

FIG. 72

EP 4 231 544 A1

FIG. 73

FIG. 74

**(A) MODULATION SIGNAL TRANSMISSION STATE OF BASE STATION:**

1801_1 — SECTOR SWEEP REFERENCE SIGNAL

1802_1 — FEEDBACK SIGNAL

1803_1 — DATA-SYMBOL-INCLUDED FRAME

1803_2 — DATA-SYMBOL-INCLUDED FRAME

TIME

**(C) RECEPTION STATE OF TERMINAL**

7401 RECEPTION PERIOD FOR DIRECTION (BEAM) DETECTION

TIME

**(B) MODULATION SIGNAL TRANSMISSION STATE OF TERMINAL:**

1851_1 — SECTOR SWEEP REFERENCE SIGNAL

1852_1 — DATA-SYMBOL-INCLUDED FRAME

1852_2 — DATA-SYMBOL-INCLUDED FRAME

TIME

EP 4 231 544 A1

FIG. 75

START

S6001 — Signal detected in omni-directional detection?

YES → S6002 — Stand by

NO → S6003 — Signal detected in directional detection?

YES → S7501 — When detecting short-time period signal in directional detection, store beamforming parameter at that time

NO → S6004 — Start communication

S7502 — Long-time period signal detected in directional detection?

NO → S7503 — Start communication

YES → S6005 — Determine beamforming parameter to be used → S6006 — Start communication or stand by

FIG. 76

START

S6101
Signal detected in omni-directional detection?

YES — L7701

NO

S6102
Signal detected in directional detection?

NO

S6103
Start communication

YES

S7501
When detecting short-time period signal in directional detection, store beamforming parameter at that time

S7502
Long-time period signal detected in directional detection?

NO

S7503
Start communication

YES

S6104
Determine beamforming parameter to be used

S6105
Start communication or stand by

FIG. 77A

FIG. 77B

```
                    ┌─────────┐
                    │  START  │
                    └────┬────┘
                         │ S7801
                    ┌────▼─────┐
                    │Implement │
                    │   LBT    │
                    └────┬─────┘
                         │ S7802
                    ◇────▼─────◇
                   ╱ Long-time  ╲  YES
                  ◇ period signal ◇────►
                   ╲ detected in ╱
                    ╲directional╱
                     ╲detection ╱
                      ╲by LBT? ╱
                       ◇──┬──◇
                          │ NO
                          │ S7803
                    ◇─────▼────◇
                   ╱  Stored    ╲  YES
                  ◇ beamforming  ◇────►
                   ╲ parameter  ╱
                    ◇at the time◇
                     ◇detecting ◇
                      ◇ signal  ◇
                       ◇─┬──◇
                         │ NO
                         │ S7804
                   ┌─────▼──────┐
                   │  Perform   │
                   │communication│
                   └────────────┘
```

START

S7801 — Implement LBT

S7802 — Long-time period signal detected in directional detection by LBT?

— YES

— NO

S7803 — Stored beamforming parameter at the time of detecting short-time period signal in directional detection?

— YES

— NO

S7804 — Perform communication without directional signal detection

S7805 — Perform communication while performing directional signal detection according to stored beamforming parameter

S7806 — Stored beamforming parameter at the time of detecting short-time period signal in directional detection?

— YES

— NO

S7807 — Perform communication while performing directional signal detection based on long-time period signal

S7808 — Perform communication while performing directional signal detection based on long-time period signal and short-time period signal

FIG. 78

FIG. 79

START

↓ S6501

Implement
LBT

↓ S6502

Signal
detected by
LBT?

YES →

Perform directional
detection in direction
detected by LBT — S8001

↓

Perform communication
while performing
directional detection — S8002

NO ↓

Perform communication
while performing
directional detection — S8003

FIG. 80

FIG. 81

FIG. 82

FIG. 83A

gNB

7901

8304_1

AP

NR-UE #1

7903_1

TERMINAL b1

7902

FIG. 83B

FIG. 83C

FIG. 84

FIG. 85

FIG. 86

FIG. 87A

FIG. 87B

FREQUENCY

| FREQUENCY BAND ♭K | 8801_K | RECEPTION PERIOD FOR LBT PROCESSING FOR FREQUENCY BAND ♭K | MODULATION SIGNAL FOR FREQUENCY BAND ♭K | 8802_K |

⋮

| FREQUENCY BAND ♭7 | 8801_7 | RECEPTION PERIOD FOR LBT PROCESSING FOR FREQUENCY BAND ♭7 | MODULATION SIGNAL FOR FREQUENCY BAND ♭7 | 8802_7 |
| FREQUENCY BAND ♭6 | 8801_6 | RECEPTION PERIOD FOR LBT PROCESSING FOR FREQUENCY BAND ♭6 | MODULATION SIGNAL FOR FREQUENCY BAND ♭6 | 8802_6 |
| FREQUENCY BAND ♭5 | 8801_5 | RECEPTION PERIOD FOR LBT PROCESSING FOR FREQUENCY BAND ♭5 | MODULATION SIGNAL FOR FREQUENCY BAND ♭5 | 8802_5 |
| FREQUENCY BAND ♭4 | 8801_4 | RECEPTION PERIOD FOR LBT PROCESSING FOR FREQUENCY BAND ♭4 | MODULATION SIGNAL FOR FREQUENCY BAND ♭4 | 8802_4 |
| FREQUENCY BAND ♭3 | 8801_3 | RECEPTION PERIOD FOR LBT PROCESSING FOR FREQUENCY BAND ♭3 | MODULATION SIGNAL FOR FREQUENCY BAND ♭3 | 8802_3 |
| FREQUENCY BAND ♭2 | 8801_2 | RECEPTION PERIOD FOR LBT PROCESSING FOR FREQUENCY BAND ♭2 | MODULATION SIGNAL FOR FREQUENCY BAND ♭2 | 8802_2 |
| FREQUENCY BAND ♭1 | 8801_1 | RECEPTION PERIOD FOR LBT PROCESSING FOR FREQUENCY BAND ♭1 | MODULATION SIGNAL FOR FREQUENCY BAND ♭1 | 8802_1 |

TIME

t1          t2          t3

FIG. 88A

EP 4 231 544 A1

FREQUENCY

| FREQUENCY BAND ♭K | 8801_K | RECEPTION PERIOD FOR LBT PROCESSING FOR FREQUENCY BAND ♭K | MODULATION SIGNAL FOR FREQUENCY BAND ♭K | 8802_K |

⋮

| FREQUENCY BAND ♭7 | 8801_7 | RECEPTION PERIOD FOR LBT PROCESSING FOR FREQUENCY BAND ♭7 | MODULATION SIGNAL FOR FREQUENCY BAND ♭7 | 8802_7 |
| FREQUENCY BAND ♭6 | 8801_6 | RECEPTION PERIOD FOR LBT PROCESSING FOR FREQUENCY BAND ♭6 | | |
| FREQUENCY BAND ♭5 | 8801_5 | RECEPTION PERIOD FOR LBT PROCESSING FOR FREQUENCY BAND ♭5 | MODULATION SIGNAL FOR FREQUENCY BAND ♭5 | 8802_5 |
| FREQUENCY BAND ♭4 | 8801_4 | RECEPTION PERIOD FOR LBT PROCESSING FOR FREQUENCY BAND ♭4 | MODULATION SIGNAL FOR FREQUENCY BAND ♭4 | 8802_4 |
| FREQUENCY BAND ♭3 | 8801_3 | RECEPTION PERIOD FOR LBT PROCESSING FOR FREQUENCY BAND ♭3 | | |
| FREQUENCY BAND ♭2 | 8801_2 | RECEPTION PERIOD FOR LBT PROCESSING FOR FREQUENCY BAND ♭2 | | |
| FREQUENCY BAND ♭1 | 8801_1 | RECEPTION PERIOD FOR LBT PROCESSING FOR FREQUENCY BAND ♭1 | MODULATION SIGNAL FOR FREQUENCY BAND ♭1 | 8802_1 |

TIME

t1          t2          t3

FIG. 88B

FREQUENCY

FREQUENCY
BAND ♭K · · · · · · · · 8901_K
| RECEPTION PERIOD FOR DIRECTION DETECTION FOR FREQUENCY BAND ♭K | MODULATION SIGNAL FOR FREQUENCY BAND ♭K | 8902_K

FREQUENCY
BAND ♭7 · · · · · · · · 8901_7
| RECEPTION PERIOD FOR DIRECTION DETECTION FOR FREQUENCY BAND ♭7 | MODULATION SIGNAL FOR FREQUENCY BAND ♭7 | 8902_7

FREQUENCY
BAND ♭6 · · · · · · · · 8901_6
| RECEPTION PERIOD FOR DIRECTION DETECTION FOR FREQUENCY BAND ♭6 | MODULATION SIGNAL FOR FREQUENCY BAND ♭6 | 8902_6

FREQUENCY
BAND ♭5 · · · · · · · · 8901_5
| RECEPTION PERIOD FOR DIRECTION DETECTION FOR FREQUENCY BAND ♭5 | MODULATION SIGNAL FOR FREQUENCY BAND ♭5 | 8902_5

FREQUENCY
BAND ♭4 · · · · · · · · 8901_4
| RECEPTION PERIOD FOR DIRECTION DETECTION FOR FREQUENCY BAND ♭4 | MODULATION SIGNAL FOR FREQUENCY BAND ♭4 | 8902_4

FREQUENCY
BAND ♭3 · · · · · · · · 8901_3
| RECEPTION PERIOD FOR DIRECTION DETECTION FOR FREQUENCY BAND ♭3 | MODULATION SIGNAL FOR FREQUENCY BAND ♭3 | 8902_3

FREQUENCY
BAND ♭2 · · · · · · · · 8901_2
| RECEPTION PERIOD FOR DIRECTION DETECTION FOR FREQUENCY BAND ♭2 | MODULATION SIGNAL FOR FREQUENCY BAND ♭2 | 8902_2

FREQUENCY
BAND ♭1 · · · · · · · · 8901_1
| RECEPTION PERIOD FOR DIRECTION DETECTION FOR FREQUENCY BAND ♭1 | MODULATION SIGNAL FOR FREQUENCY BAND ♭1 | 8902_1

TIME

t11          t12          t13

FIG. 89

FIG. 90

EP 4 231 544 A1

FIG. 91A

FIG. 91B

EP 4 231 544 A1

FIG. 92A

FREQUENCY

FIRST FREQUENCY BAND OF FIRST STANDARD
9001_1

FREQUENCY BAND bK

FREQUENCY BAND b7
FREQUENCY BAND b6
FREQUENCY BAND b5
FREQUENCY BAND b4
FREQUENCY BAND b3
FREQUENCY BAND b2
FREQUENCY BAND b1

9103

RECEPTION PERIOD FOR LBT PROCESSING FOR FIRST FREQUENCY BAND

MODULATION SIGNAL FOR FREQUENCY BAND bK — 9102_K

MODULATION SIGNAL FOR FREQUENCY BAND b7 — 9102_7

MODULATION SIGNAL FOR FREQUENCY BAND b5 — 9102_5
MODULATION SIGNAL FOR FREQUENCY BAND b4 — 9102_4

MODULATION SIGNAL FOR FREQUENCY BAND b1 — 9102_1

t1  t2  t3  TIME

FIG. 92B

FIG. 93A

EP 4 231 544 A1

FIG. 93B

FIG. 94A

FIG. 94B

EP 4 231 544 A1

FIG. 95A

FIG. 95B

EP 4 231 544 A1

FIG. 96A

FIG. 96B

EP 4 231 544 A1

gNB#2

9701_2

gNB#1

9701_1

9702_2

NR-UE
#2

AP

9711

9702_1

NR-UE
#1

FIRST STANDARD
TERMINAL

9712

FIG. 97

EP 4 231 544 A1

9801

9802

| I-th LBT IMPLEMENTATION PERIOD | II-th LBT IMPLEMENTATION PERIOD |

→ TIME

FIG. 98

9901

I-th
"DIRECTION DETECTION"
PERIOD

9902

II-th
"DIRECTION DETECTION"
PERIOD

TIME

FIG. 99

FIG. 100

| FIRST NR CHANNEL | SECOND NR CHANNEL | THIRD NR CHANNEL | FOURTH NR CHANNEL | FIFTH NR CHANNEL |
|---|---|---|---|---|
| PERFORM NO LBT | PERFORM LBT | PERFORM NO LBT | PERFORM LBT | PERFORM NO LBT |

FIG. 101

FIG. 102A

FREQUENCY

FIRST FREQUENCY BAND OF FIRST STANDARD — 9001_1

TIME

| Frequency Band | Modulation Signal | Label |
|---|---|---|
| FREQUENCY BAND $b$K | MODULATION SIGNAL FOR FREQUENCY BAND $b$K | 9102_K |
| FREQUENCY BAND $b$7 | MODULATION SIGNAL FOR FREQUENCY BAND $b$7 | 9102_7 |
| FREQUENCY BAND $b$6 | MODULATION SIGNAL FOR FREQUENCY BAND $b$6 | 9102_6 |
| FREQUENCY BAND $b$5 | MODULATION SIGNAL FOR FREQUENCY BAND $b$5 | 9102_5 |
| FREQUENCY BAND $b$4 | MODULATION SIGNAL FOR FREQUENCY BAND $b$4 | 9102_4 |
| FREQUENCY BAND $b$3 | MODULATION SIGNAL FOR FREQUENCY BAND $b$3 | 9102_3 |
| FREQUENCY BAND $b$2 | MODULATION SIGNAL FOR FREQUENCY BAND $b$2 | 9102_2 |
| FREQUENCY BAND $b$1 | MODULATION SIGNAL FOR FREQUENCY BAND $b$1 | 9102_1 |

t1    t2    t3

FIG. 102B

EP 4 231 544 A1

FIG. 103A

EP 4 231 544 A1

FIG. 103B

FIG. 104A

FREQUENCY

SECOND FREQUENCY BAND OF FIRST STANDARD

9001_2

FREQUENCY BAND _bK

FREQUENCY BAND _b7
FREQUENCY BAND _b6
FREQUENCY BAND _b5
FREQUENCY BAND _b4
FREQUENCY BAND _b3
FREQUENCY BAND _b2
FREQUENCY BAND _b1

10403

RECEPTION PERIOD FOR LBT PROCESSING FOR SECOND FREQUENCY BAND

MODULATION SIGNAL FOR FREQUENCY BAND _bK — 9102_K

MODULATION SIGNAL FOR FREQUENCY BAND _b7 — 9102_7
MODULATION SIGNAL FOR FREQUENCY BAND _b6 — 9102_6
MODULATION SIGNAL FOR FREQUENCY BAND _b5 — 9102_5
MODULATION SIGNAL FOR FREQUENCY BAND _b4 — 9102_4
MODULATION SIGNAL FOR FREQUENCY BAND _b3 — 9102_3
MODULATION SIGNAL FOR FREQUENCY BAND _b2 — 9102_2
MODULATION SIGNAL FOR FREQUENCY BAND _b1 — 9102_1

t1    t2    t3    TIME

FIG. 104B

| FIRST NR CHANNEL | SECOND NR CHANNEL | THIRD NR CHANNEL | FOURTH NR CHANNEL | FIFTH NR CHANNEL |
|---|---|---|---|---|
| PERFORM NO DIRECTION DETECTION | PERFORM DIRECTION DETECTION | PERFORM NO DIRECTION DETECTION | PERFORM DIRECTION DETECTION | PERFORM NO DIRECTION DETECTION |

FIG. 105

FIG. 106A

FIG. 106B

FREQUENCY

SECOND FREQUENCY BAND OF FIRST STANDARD

10701

FREQUENCY BAND ♭K · · · · · · · · ·

FREQUENCY BAND ♭7 · · · · · · · · ·

FREQUENCY BAND ♭6 · · · · · · · · ·

FREQUENCY BAND ♭5 · · · · · · · · ·

FREQUENCY BAND ♭4 · · · · · · · · ·

FREQUENCY BAND ♭3 · · · · · · · · ·

9001_2

FREQUENCY BAND ♭2 · · · · · · · · ·

FREQUENCY BAND ♭1 · · · · · · · · ·

RECEPTION PERIOD FOR DIRECTION DETECTION FOR SECOND FREQUENCY BAND

MODULATION SIGNAL FOR FREQUENCY BAND ♭K 9302_K

MODULATION SIGNAL FOR FREQUENCY BAND ♭7 9302_7

MODULATION SIGNAL FOR FREQUENCY BAND ♭6 9302_6

MODULATION SIGNAL FOR FREQUENCY BAND ♭5 9302_5

MODULATION SIGNAL FOR FREQUENCY BAND ♭4 9302_4

MODULATION SIGNAL FOR FREQUENCY BAND ♭3 9302_3

MODULATION SIGNAL FOR FREQUENCY BAND ♭2 9302_2

MODULATION SIGNAL FOR FREQUENCY BAND ♭1 9302_1

TIME

t11     t12     t13

FIG. 107A

EP 4 231 544 A1

FREQUENCY

SECOND FREQUENCY BAND
OF FIRST STANDARD

| FREQUENCY BAND ♭K | · · · · · · · · · · | | MODULATION SIGNAL FOR FREQUENCY BAND ♭K | 9302_K |

10703

RECEPTION PERIOD FOR DIRECTION DETECTION FOR SECOND FREQUENCY BAND

| FREQUENCY BAND ♭7 | · · · · · · · · · · | MODULATION SIGNAL FOR FREQUENCY BAND ♭7 | 9302_7 |
| FREQUENCY BAND ♭6 | · · · · · · · · · · | MODULATION SIGNAL FOR FREQUENCY BAND ♭6 | 9302_6 |
| FREQUENCY BAND ♭5 | · · · · · · · · · · | MODULATION SIGNAL FOR FREQUENCY BAND ♭5 | 9302_5 |
| FREQUENCY BAND ♭4 | · · · · · · · · · · | MODULATION SIGNAL FOR FREQUENCY BAND ♭4 | 9302_4 |
| FREQUENCY BAND ♭3 | · · · · · · · · · · | MODULATION SIGNAL FOR FREQUENCY BAND ♭3 | 9302_3 |
| FREQUENCY BAND ♭2 | · · · · · · · · · · | MODULATION SIGNAL FOR FREQUENCY BAND ♭2 | 9302_2 |
| FREQUENCY BAND ♭1 | · · · · · · · · · · | MODULATION SIGNAL FOR FREQUENCY BAND ♭1 | 9302_1 |

9001_2

TIME

t11     t12     t13

FIG. 107B

| FIRST NR CHANNEL | SECOND NR CHANNEL | THIRD NR CHANNEL | FOURTH NR CHANNEL | FIFTH NR CHANNEL |
|---|---|---|---|---|
| PERFORM NO LBT | PERFORM NO LBT | PERFORM LBT | PERFORM NO LBT | PERFORM NO LBT |

FIG. 108

| FIRST NR CHANNEL | SECOND NR CHANNEL | THIRD NR CHANNEL | FOURTH NR CHANNEL | FIFTH NR CHANNEL |
|---|---|---|---|---|
| PERFORM NO DIRECTION DETECTION | PERFORM NO DIRECTION DETECTION | PERFORM DIRECTION DETECTION | PERFORM NO DIRECTION DETECTION | PERFORM NO DIRECTION DETECTION |

FIG. 109

FIG. 110

TIME

11102_1    11102_2    11102_3    11102_4    11102_5

t3

| MODULATION SIGNAL FOR FIRST NR CHANNEL | MODULATION SIGNAL FOR SECOND NR CHANNEL | MODULATION SIGNAL FOR THIRD NR CHANNEL | MODULATION SIGNAL FOR FOURTH NR CHANNEL | MODULATION SIGNAL FOR FIFTH NR CHANNEL |

11101_2

t2

| RECEPTION PERIOD FOR LBT PROCESSING FOR FIRST FREQUENCY BAND | RECEPTION PERIOD FOR LBT PROCESSING FOR SECOND FREQUENCY BAND |

t1

11101_1

FIRST NR CHANNEL   SECOND NR CHANNEL   THIRD NR CHANNEL   FOURTH NR CHANNEL   FIFTH NR CHANNEL

FREQUENCY

10001_1        10001_2        10001_3        10001_4        10001_5

FIRST FREQUENCY BAND OF FIRST STANDARD        9001_1        SECOND FREQUENCY BAND OF FIRST STANDARD        9001_2

FIG. 111

FIG. 112

EP 4 231 544 A1

FIG. 113

11404 TRANSMIT BEAM

11402

AP

RECEIVE BEAM #1

gNB

11401

11403_1

FIG. 114A

11404 TRANSMIT BEAM

11405_3 TRANSMIT BEAM #3

11402

AP

11405_2 TRANSMIT BEAM #2

gNB

11405_1 TRANSMIT BEAM #1

11401

FIG. 114B

gNB

RECEIVE BEAM #1

11401

11403_1

FIG. 114C

11405_3  TRANSMIT BEAM #3

11405_2  TRANSMIT BEAM #2

11405_1  TRANSMIT BEAM #1

gNB

11401

FIG. 114D

11404 TRANSMIT BEAM

11402

AP

RECEIVE BEAM #k

11403_k

gNB

11401

FIG. 115A

11404  TRANSMIT BEAM

11402

AP

11405_(3k)  TRANSMIT BEAM #(3k)

11405_(3k-1)  TRANSMIT BEAM #(3k-1)

gNB

11405_(3k-2)  TRANSMIT BEAM #(3k-2)

11401

FIG. 115B

FIG. 115C

11405_(3k)   TRANSMIT BEAM #(3k)

11405_(3k-1)   TRANSMIT BEAM #(3k-1)

11405_(3k-2)   TRANSMIT BEAM #(3k-2)

gNB

11401

FIG. 115D

| 11601 | 11602 | 11603 | | 11697 | 11698 | 11699 |
|---|---|---|---|---|---|---|
| Reception period for LBT using receive beam #1 | Transmission period for sector sweep reference signal using transmit beam #1, and/or sector sweep reference signal using transmit beam #2, and/or sector sweep reference signal using transmit beam #3 | Transmission period for modulation signal using transmit beam #1, and/or modulation signal using transmit beam #2, and/or modulation signal using transmit beam #3 | ... | Reception period for LBT using receive beam #k | Transmission period for sector sweep reference signal using transmit beam #(3k−2), and/or sector sweep reference signal using transmit beam #(3k−1), and/or sector sweep reference signal using transmit beam #(3k) | Transmission period for modulation signal using transmit beam #(3k−2), and/or modulation signal using transmit beam #(3k−1), and/or modulation signal using transmit beam #(3k) | ...

TIME

FIG. 116

FIG. 117A

11404 TRANSMIT BEAM

11402

AP

11705_1 TRANSMIT BEAM #1

gNB

11401

FIG. 117B

gNB

RECEIVE BEAM #1

11703_1

11401

FIG. 117C

11705_1 TRANSMIT BEAM #1

gNB

11401

FIG. 117D

11404  TRANSMIT BEAM

11402

AP

RECEIVE BEAM #k

11703_k

gNB

11401

FIG. 118A

FIG. 118B

FIG. 118C

11705_k TRANSMIT BEAM #k

gNB

11401

FIG. 118D

11901

11902

11903

11997

11998

11999

| Reception period for LBT using receive beam #1 | Transmission period for sector sweep reference signal using transmit beam #1 | Transmission period for modulation signal using transmit beam #1 | · · · | Reception period for LBT using receive beam #k | Transmission period for sector sweep reference signal using transmit beam #k | Transmission period for sector sweep reference signal using transmit beam #k | · · · | · · · |

TIME

FIG. 119

FIG. 120

FREQUENCY

| 57G | USA | 71G |

| 57G | Japan | 66G |

| China | 64G |

| 59G |

| 57.24GHz | 58.32GHz | 59.40GHz | 60.48GHz | 61.56GHz | 62.64GHz | 63.72GHz | 64.80GHz | 65.88GHz | 66.96GHz | 68.04GHz | 69.12GHz | 70.2GHz |

| 12001_1 FIRST CHANNEL OF FIRST STANDARD | 12001_2 SECOND CHANNEL OF FIRST STANDARD | 12001_3 THIRD CHANNEL OF FIRST STANDARD | 12001_4 FOURTH CHANNEL OF FIRST STANDARD | 12001_5 FIFTH CHANNEL OF FIRST STANDARD | 12001_6 SIXTH CHANNEL OF FIRST STANDARD |

EP 4 231 544 A1

240 MHz
VACANCY

USA

| 01 CH 1 | 02 CH 2 | 03 CH 3 | 04 CH 4 | 05 CH 5 | 06 CH 6 | 07 CH 7 | 08 CH 8 | 09 CH 9 | 10 CH 10 | 11 CH 11 | 12 CH 12 | 13 CH 13 | 14 CH 14 | 15 CH 15 | 16 CH 16 | 17 CH 17 | 18 CH 18 | 19 CH 19 | 20 CH 20 | 21 CH 21 | 22 CH 22 | 23 CH 23 | 24 CH 24 |
|---|---|---|---|---|---|---|---|---|---|---|---|---|---|---|---|---|---|---|---|---|---|---|---|

JAPAN

| 01 CH 1 | 02 CH 2 | 03 CH 3 | 04 CH 4 | 05 CH 5 | 06 CH 6 | 07 CH 7 | 08 CH 8 | 09 CH 9 | 10 CH 10 | 11 CH 11 | 12 CH 12 | 13 CH 13 | 14 CH 14 | 15 CH 15 | 16 CH 16 | 17 CH 17 | 18 CH 18 | 19 CH 19 | 20 CH 20 | 21 CH 21 | 22 CH 22 | 23 CH 23 | 24 CH 24 |
|---|---|---|---|---|---|---|---|---|---|---|---|---|---|---|---|---|---|---|---|---|---|---|---|

CHINA

| 08 CH 8 | 09 CH 9 | 10 CH 10 | 11 CH 11 | 12 CH 12 | 13 CH 13 | 14 CH 14 | 15 CH 15 | 16 CH 16 | 17 CH 17 | 18 CH 18 | 19 CH 19 | 20 CH 20 | 21 CH 21 | 22 CH 22 | 23 CH 23 | 24 CH 24 |
|---|---|---|---|---|---|---|---|---|---|---|---|---|---|---|---|---|---|

12001_1       12001_2       12001_3

USA

| 25 CH 25 | 26 CH 26 | 27 CH 27 | 28 CH 28 | 29 CH 29 | 30 CH 30 | 31 CH 31 | 32 CH 32 | 33 CH 33 | 34 CH 34 | 35 CH 35 | 36 CH 36 | 37 CH 37 | 38 CH 38 | 39 CH 39 | 40 CH 40 |
|---|---|---|---|---|---|---|---|---|---|---|---|---|---|---|---|

JAPAN

| 25 CH 25 | 26 CH 26 | 27 CH 27 | 28 CH 28 | 29 CH 29 | 30 CH 30 | 31 CH 31 | 32 CH 32 |
|---|---|---|---|---|---|---|---|

CHINA

| 25 CH 25 |
|---|

12001_4       12001_5

US

| 41 CH 41 | 42 CH 42 | 43 CH 43 | 44 CH 44 | 45 CH 45 | 46 CH 46 | 47 CH 47 | 48 CH 48 | 49 CH 49 | 50 CH 50 |
|---|---|---|---|---|---|---|---|---|---|

12001_6

FIG. 121

USA: CH 1 (12201), CH 2 (12202), CH 3 (12203), CH 4 (12204), CH 5 (12205), CH 6 (12206), CH 7 (12207), CH 8 (12208), CH 9 (12209), CH 10 (12210), CH 11 (12211), CH 12 (12212)

JAPAN: CH 1 (12201), CH 2 (12202), CH 3 (12203), CH 4 (12204), CH 5 (12205), CH 6 (12206), CH 7 (12207), CH 8 (12208), CH 9 (12209), CH 10 (12210), CH 11 (12211), CH 12 (12212)

CHINA: 12298 CH X, CH 5 (12205), CH 6 (12206), CH 7 (12207), CH 8 (12208), CH 9 (12209), CH 10 (12210), CH 11 (12211), CH 12 (12212)

12001_1   12001_2   12001_3

USA: CH 13 (12213), CH 14 (12214), CH 15 (12215), CH 16 (12216), CH 17 (12217), CH 18 (12218), CH 19 (12219), CH 20 (12220)

JAPAN: CH 13 (12213), CH 14 (12214), CH 15 (12215), CH 16 (12216)

CHINA: CH Y 12299

12001_4   12001_5

US: CH 21 (12221), CH 22 (12222), CH 23 (12223), CH 24 (12224), CH 25 (12225)

12001_6

FIG. 122

FIG. 123

| | | | | | | |
|---|---|---|---|---|---|---|
| USA | CH 1 (12301) | CH 2 (12302) | CH 3 (12303) | CH 4 (12304) | CH 5 (12305) | CH 6 (12306) |
| JAPAN | CH 1 (12301) | CH 2 (12302) | CH 3 (12303) | CH 4 (12304) | CH 5 (12305) | CH 6 (12306) |
| CHINA | | 12398 CH X | CH 3 (12303) | CH 4 (12304) | CH 5 (12305) | CH 6 (12306) |

12001_1  12001_2  12001_3

| | | | | |
|---|---|---|---|---|
| USA | CH 7 (12307) | CH 8 (12308) | CH 9 (12309) | CH 10 (12310) |
| JAPAN | CH 7 (12307) | CH 8 (12308) | | |
| CHINA | CH Y 12399 | | | |

12001_4  12001_5

| | | | |
|---|---|---|---|
| US | CH 11 (12311) | CH 12 (12312) | CH Z 12397 |

12001_6

EP 4 231 544 A1

420

| | CH 1 (12401) | CH 2 (12402) | CH 3 (12403) |
|---|---|---|---|
| USA | | | |
| JAPAN | CH 1 (12401) | CH 2 (12402) | CH 3 (12403) |
| CHINA | 12498 → CH X | CH 2 (12402) | CH 3 (12403) |

12001_1    12001_2    12001_3

| | CH 4 (12404) | CH 5 (12405) |
|---|---|---|
| USA | | |
| JAPAN | CH 4 (12404) | |
| CHINA | CH Y  12499 | |

12001_4    12001_5

| | CH 6 (12406) | CH Z  12497 |
|---|---|---|
| US | | |

12001_6

FIG. 124

EP 4 231 544 A1

FIG. 125

EP 4 231 544 A1

FIG. 126

EP 4 231 544 A1

12700_1
FREQUENCY
#1

12700_2
FREQUENCY
#2

12700_3
FREQUENCY
#3

12700_(n−1)
FREQUENCY
#(n−1)

12700_n
FREQUENCY
#n

12700_(n+1)
FREQUENCY
#(n+1)

FREQUENCY

FIG. 127

**12001_1 / 12001_2 / 12001_3**

| | x1 | x2 | x3 | x4 | x5 | x6 | x7 | x8 | x9 | x10 | x11 | x12 | x13 | x14 | x15 | x16 | x17 | x18 | x19 | x20 | x21 | x22 | x23 | x24 | x25 | x26 | x27 | x28 |
|---|---|---|---|---|---|---|---|---|---|---|---|---|---|---|---|---|---|---|---|---|---|---|---|---|---|---|---|---|
| USA | CH 1 | CH 2 | CH 3 | CH 4 | CH 5 | CH 6 | CH 7 | CH 8 | CH 9 | CH 10 | CH 11 | CH 12 | CH 13 | CH 14 | CH 15 | CH 16 | CH 17 | CH 18 | CH 19 | CH 20 | CH 21 | CH 22 | CH 23 | CH 24 | CH 25 | CH 26 | CH 27 | CH 28 |
| JAPAN | CH 1 | CH 2 | CH 3 | CH 4 | CH 5 | CH 6 | CH 7 | CH 8 | CH 9 | CH 10 | CH 11 | CH 12 | CH 13 | CH 14 | CH 15 | CH 16 | CH 17 | CH 18 | CH 19 | CH 20 | CH 21 | CH 22 | CH 23 | CH 24 | CH 25 | CH 26 | CH 27 | CH 28 |
| CHINA | | | | | | | | | | CH 10 | CH 11 | CH 12 | CH 13 | CH 14 | CH 15 | CH 16 | CH 17 | CH 18 | CH 19 | CH 20 | CH 21 | CH 22 | CH 23 | CH 24 | CH 25 | CH 26 | CH 27 | CH 28 |

**12001_4 / 12001_5**

| | x29 | x30 | x31 | x32 | x33 | x34 | x35 | x36 | x37 | x38 | x39 | x40 | x41 | x42 | x43 | x44 | x45 | x46 |
|---|---|---|---|---|---|---|---|---|---|---|---|---|---|---|---|---|---|---|
| USA | CH 29 | CH 30 | CH 31 | CH 32 | CH 33 | CH 34 | CH 35 | CH 36 | CH 37 | CH 38 | CH 39 | CH 40 | CH 41 | CH 42 | CH 43 | CH 44 | CH 45 | CH 46 |
| JAPAN | CH 29 | CH 30 | CH 31 | CH 32 | CH 33 | CH 34 | CH 35 | CH 36 | CH 37 | | | | | | | | | |
| CHINA | CH 29 | | | | | | | | | | | | | | | | | |

**12001_6**

| | x47 | x48 | x49 | x50 | x51 | x52 | x53 | x54 | x55 | x56 | x57 | x58 |
|---|---|---|---|---|---|---|---|---|---|---|---|---|
| US | CH 47 | CH 48 | CH 49 | CH 50 | CH 51 | CH 52 | CH 53 | CH 54 | CH 55 | CH 56 | CH 57 | CH 58 |

FIG. 128

425

FIG. 129

EP 4 231 544 A1

FIG. 130

EP 4 231 544 A1

| USA | x1<br>CH<br>1 | CH<br>1<br>(12401) | CH<br>2<br>(12402) | CH<br>3<br>(12403) |
|---|---|---|---|---|
| JAPAN | x1<br>CH<br>1 | CH<br>1<br>(12401) | CH<br>2<br>(12402) | CH<br>3<br>(12403) |
| CHINA | | | x10<br>CH<br>10   CH<br>2<br>(12402) | CH<br>3<br>(12403) |

12001_1     12001_2     12001_3

| USA | CH<br>4<br>(12404) | CH<br>5<br>(12405) |
|---|---|---|
| JAPAN | CH<br>4<br>(12404) | |
| CHINA | x29<br>CH<br>29 | |

12001_4     12001_5

| US | CH<br>6<br>(12406) | x56<br>CH<br>56 | x57<br>CH<br>57 | x58<br>CH<br>58 |
|---|---|---|---|---|

12001_6

FIG. 131

UE CAPABILITY
INFORMATION
or
gNB CAPABILITY
INFORMATION

13200

| INFORMATION ON LBT MODE | INFORMATION ON NO-LBT MODE |
|---|---|

. . . . . . .

13211

13212

FIG. 132A

UE CAPABILITY
INFORMATION
or
gNB CAPABILITY
INFORMATION

13200

INFORMATION ON
DIRECTIONAL LBT

INFORMATION ON
OMNI-DIRECTIONAL
LBT

● ● ● ● ● ●

13221

13222

FIG. 132B

CONTROL
INFORMATION

13300

INFORMATION ON
LBT IMPLEMENTATION
STATE

• • • • • •

13311

FIG. 133

EP 4 231 544 A1

```
            ┌─────────────────────┐
            │   UE CAPABILITY     │
            │   INFORMATION       │      13200
            │        or           │
            │   gNB CAPABILITY    │
            │   INFORMATION       │
            └─────────────────────┘
```

| INFORMATION ON SUPPORT FOR LBT USING WIDE RECEIVE BEAM | INFORMATION ON SUPPORT FOR MULTI-CHANNEL LBT (LBT BASED ON FDM) | INFORMATION ON SUPPORT FOR LBT BASED ON SDM | INFORMATION ON SUPPORT FOR LBT BASED ON TDM | INFORMATION ON SUPPORT FOR LBT IN EACH CATEGORY |
|---|---|---|---|---|
| 13431 | 13432 | 13433 | 13434 | 13435 |

• • • • • •

FIG. 134A

```
                          ┌─────────────────┐
                          │  UE CAPABILITY  │
                          │   INFORMATION   │    13200
                          │       or        │
                          │  gNB CAPABILITY │
                          │   INFORMATION   │
                          └─────────────────┘
```

| INFORMATION ON SUPPORT FOR TRANSMISSION OF MULTIPLE MODULATION SIGNALS | INFORMATION ON SUPPORT FOR RECEPTION OF MULTIPLE MODULATION SIGNALS | INFORMATION ON SUPPORT FOR TRANSMISSION OF MODULATION SIGNALS TO MULTIPLE POINTS | INFORMATION ON SUPPORT FOR RECEPTION OF MODULATION SIGNALS FROM MULTIPLE POINTS |
|---|---|---|---|
| 13441 | 13442 | 13443 | 13444 |

FIG. 134B

FIG. 135

001

RADIO
COMMUNICATION
DEVICE

051

RADIO
COMMUNICATION
DEVICE

FIG. 136

## INTERNATIONAL SEARCH REPORT

| International application No. |
|---|
| **PCT/JP2021/032933** |

**A.  CLASSIFICATION OF SUBJECT MATTER**

*H04B 7/08*(2006.01)i; *H04B 7/06*(2006.01)i; *H04W 16/14*(2009.01)i; *H04W 16/28*(2009.01)i; *H04W 72/04*(2009.01)i
FI:  H04B7/08 802; H04B7/06 954; H04W16/14; H04W16/28; H04W72/04 131

According to International Patent Classification (IPC) or to both national classification and IPC

**B.  FIELDS SEARCHED**

Minimum documentation searched (classification system followed by classification symbols)
    H04B7/08; H04B7/06; H04W16/14; H04W16/28; H04W72/04

Documentation searched other than minimum documentation to the extent that such documents are included in the fields searched

Published examined utility model applications of Japan 1922-1996
Published unexamined utility model applications of Japan 1971-2021
Registered utility model specifications of Japan 1996-2021
Published registered utility model applications of Japan 1994-2021

Electronic data base consulted during the international search (name of data base and, where practicable, search terms used)

**C.  DOCUMENTS CONSIDERED TO BE RELEVANT**

| Category* | Citation of document, with indication, where appropriate, of the relevant passages | Relevant to claim No. |
|---|---|---|
| X | WO 2019/079500 A1 (IDAC HOLDINGS, INC.) 25 April 2019 (2019-04-25) paragraphs [0156], [0402]-[0416], fig. 2A | 1-12, 22-24 |
| Y | | 13 |
| A | | 14-21 |
| Y | WO 2019/160741 A1 (IDAC HOLDINGS, INC.) 22 August 2019 (2019-08-22) paragraph [0102] | 13 |
| A | | 1-12, 14-24 |
| A | NTT DOCOMO, INC. Channel Access Mechanism for NR in 60 GHz unlicensed spectrum [online], 3GPP TSG RAN WG1 #102-e R1-2006726, 07 August 2020 entire text | 1-24 |
| A | APPLE INC. On Channel Access Mechanisms for Unlicensed Access above 52.6 GHz [online], 3GPP TSG RAN WG1 #102-e R1-2006513, 08 August 2020 entire text, all drawings | 1-24 |

☑ Further documents are listed in the continuation of Box C.    ☑ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | "&" | document member of the same patent family |
| "P" | document published prior to the international filing date but later than the priority date claimed | | |

| Date of the actual completion of the international search | Date of mailing of the international search report |
|---|---|
| **10 November 2021** | **30 November 2021** |

| Name and mailing address of the ISA/JP | Authorized officer |
|---|---|
| **Japan Patent Office (ISA/JP)** **3-4-3 Kasumigaseki, Chiyoda-ku, Tokyo 100-8915** **Japan** | |
| | Telephone No. |

Form PCT/ISA/210 (second sheet) (January 2015)

## INTERNATIONAL SEARCH REPORT

| International application No. |
| --- |
| **PCT/JP2021/032933** |

**C.    DOCUMENTS CONSIDERED TO BE RELEVANT**

| Category* | Citation of document, with indication, where appropriate, of the relevant passages | Relevant to claim No. |
| --- | --- | --- |
| A | CATT. Channel Access Mechanism in support [online], 3GPP TSG RAN WG1 #102-e R1-2005700, 08 August 2020 entire text, all drawings | 1-24 |

Form PCT/ISA/210 (second sheet) (January 2015)

**INTERNATIONAL SEARCH REPORT**
Information on patent family members

International application No.

**PCT/JP2021/032933**

| Patent document cited in search report | Publication date (day/month/year) | Patent family member(s) | Publication date (day/month/year) |
|---|---|---|---|
| WO 2019/079500 A1 | 25 April 2019 | JP 2021-500791 A paragraphs [0109], [0373]-[0386], fig. 2A US 2020/0314906 A1 CN 111480388 A | |
| WO 2019/160741 A1 | 22 August 2019 | JP 2021-514574 A paragraph [0072] US 2021/0058967 A1 | |

Form PCT/ISA/210 (patent family annex) (January 2015)

**REFERENCES CITED IN THE DESCRIPTION**

**Patent documents cited in the description**

- JP 2018518855 W
- JP 2020174026 A
- JP 2020208433 A
- JP 2021018384 A
- JP 2021043825 A